(19) **Europäisches Patentamt**
**European Patent Office**
**Office européen des brevets**

(11) **EP 4 459 749 A1**

(12) **EUROPEAN PATENT APPLICATION**
published in accordance with Art. 153(4) EPC

(43) Date of publication:
**06.11.2024 Bulletin 2024/45**

(21) Application number: **23755624.6**

(22) Date of filing: **03.01.2023**

(51) International Patent Classification (IPC):
*H01M 10/6557* (2014.01)  *H01M 10/6555* (2014.01)

(52) Cooperative Patent Classification (CPC):
**H01M 10/613; H01M 10/625; H01M 10/653;**
**H01M 10/655; H01M 10/6551; H01M 10/6554;**
**H01M 10/6557; H01M 50/103; H01M 50/105;**
**H01M 50/209; H01M 50/244; H01M 50/249;**
H01M 10/6555; Y02E 60/10

(86) International application number:
**PCT/CN2023/070125**

(87) International publication number:
**WO 2023/155620 (24.08.2023 Gazette 2023/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 21.02.2022  PCT/CN2022/077152
21.02.2022  PCT/CN2022/077153
21.02.2022  PCT/CN2022/077151
21.02.2022  PCT/CN2022/077147
21.02.2022  PCT/CN2022/077149
21.02.2022  PCT/CN2022/077150
25.02.2022  PCT/CN2022/077998
25.02.2022  PCT/CN2022/077993
13.06.2022  PCT/CN2022/098447
13.06.2022  PCT/CN2022/098355
13.06.2022  PCT/CN2022/098380
13.06.2022  PCT/CN2022/098343
13.06.2022  PCT/CN2022/098348
13.06.2022  PCT/CN2022/098373
13.06.2022  PCT/CN2022/098370
14.06.2022  PCT/CN2022/098727
16.06.2022  PCT/CN2022/099229
20.06.2022  PCT/CN2022/099786
22.06.2022  PCT/CN2022/100488
22.06.2022  PCT/CN2022/100486
27.06.2022  PCT/CN2022/101392
27.06.2022  PCT/CN2022/101395
27.06.2022  PCT/CN2022/101440
27.06.2022  PCT/CN2022/101406
27.06.2022  PCT/CN2022/101414
27.06.2022  PCT/CN2022/101517
27.06.2022  PCT/CN2022/101393

10.08.2022  PCT/CN2022/111347

(71) Applicant: **Contemporary Amperex Technology**
**Co., Limited**
**Ningde, Fujian 352100 (CN)**

(72) Inventors:
• **QIN, Feng**
**Ningde, Fujian 352100 (CN)**
• **ZHANG, Haidong**
**Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY AND ELECTRICAL DEVICE**

Processed by Luminess, 75001 PARIS (FR)

**(Cont. next page)**

(57)    A battery and an electrical device, wherein the battery comprises a box body, a battery cell, a heat-conducting member, and a fixing member. The battery cell is accommodated in an accommodating cavity of the box body. The battery cell comprises a first wall and a second wall, an included angle is formed between the first wall and the second wall, and the area of the first wall is greater than that of the second wall. The heat-conducting member is arranged in the accommodating cavity. The heat-conducting member and the first wall are arranged opposite to each other and are connected in a heat-conducting manner to exchange heat with the battery cell. The fixing member connects the second wall and the box body to fix the battery cell in the accommodating cavity.

FIG. 147

**Description**

**Cross-Reference to Related Applications**

The present application is filed based on and claims priority to International Patent Application No. PCT/CN2022/077152 filed on February 21, 2022, International Patent Application No. PCT/CN2022/077153 filed on February 21, 2022, International Patent Application No. PCT/CN2022/077151 filed on February 21, 2022, International Patent Application No. PCT/CN2022/077147 filed on February 21, 2022, International Patent Application No. PCT/CN2022/077149 filed on February 21, 2022, International Patent Application No. PCT/CN2022/077150 filed on February 21, 2022, International Patent Application No. PCT/CN2022/098447 filed on June 13, 2022, International Patent Application No. PCT/CN2022/098727 filed on June 14, 2022, International Patent Application No. PCT/CN2022/099229 filed on June 16, 2022, International Patent Application No. PCT/CN2022/100488 filed on June 22, 2022, International Patent Application No. PCT/CN2022/100486 filed on June 22, 2022, International Patent Application No. PCT/CN2022/111347 filed on August 10, 2022, International Patent Application No. PCT/CN2022/099786 filed on June 20, 2022, International Patent Application No. PCT/CN2022/101392 filed on June 27, 2022, International Patent Application No. PCT/CN2022/101395 filed on June 27, 2022, International Patent Application No. PCT/CN2022/098355 filed on June 13, 2022, International Patent Application No. PCT/CN2022/077998 filed on February 25, 2022, International Patent Application No. PCT/CN2022/098380 filed on June 13, 2022, International Patent Application No. PCT/CN2022/098343 filed on June 13, 2022, International Patent Application No. PCT/CN2022/098348 filed on June 13, 2022, International Patent Application No. PCT/CN2022/098373 filed on June 13, 2022, International Patent Application No. PCT/CN2022/098370 filed on June 13, 2022, International Patent Application No. PCT/CN2022/077993 filed on February 25, 2022, International Patent Application No. PCT/CN2022/101440 filed on June 27, 2022, International Patent Application No. PCT/CN2022/101406 filed on June 27, 2022, International Patent Application No. PCT/CN2022/101414 filed on June 27, 2022, International Patent Application No. PCT/CN2022/101517 filed on June 27, 2022, and International Patent Application No. PCT/CN2022/101393 filed on June 27, 2022, the content of which is incorporated herein by reference in their entireties.

**Technical Field**

The present application relates to the technical field of batteries, and particularly to a battery and an electrical apparatus.

**Background**

In recent years, the emergence of new energy vehicles has played a huge role in promoting social development and environmental protection. Power batteries, which are rechargeable batteries, are the power source of new energy vehicles and are widely used in the field of new energy vehicles.

The energy density of a battery is an important parameter in the performance of the battery. However, when improving the energy density of the battery, it is also necessary to consider the thermal management performance of the battery. Moreover, the existing battery has poor rigidity, cannot directly bear the load brought by other parts of the electrical apparatus, and is likely to cause safety accidents and affects the safety of the electrical apparatus.

**Summary of the Invention**

The present application is intended to solve at least one of the technical problems existing in the related art. To this end, the present application proposes a battery, which can improve the energy density and the safety of the battery while effectively ensuring heat conduction in the battery, and thus can improve the thermal management performance of the battery.

The present application further proposes an electrical apparatus having the battery described above.

According to an embodiment of a first aspect of the present application, a battery includes: a box having an accommodating cavity; a battery cell accommodated in the accommodating cavity, the battery cell including a first wall and a second wall, there being an included angle between the first wall and the second wall, and the area of the first wall being greater than that of the second wall; a thermally conductive member arranged in the accommodating cavity, the thermally conductive member being arranged opposite and thermally conductively connected to the first wall to perform heat exchange with the battery cell; and a fixing member connected to the second wall and the box so as to fix the battery cell in the accommodating cavity.

In the above technical solution, the battery cell is fixed in the accommodating cavity by means of the fixing member connected to the second wall and the box, to increase the structural strength of the battery; and the thermally conductive member is arranged to be thermally conductively connected to the first wall of the battery cell, such that the thermally conductive member is used to conduct heat from the battery cell, thereby using the thermally conductive member to ensure heat conduction in the battery to effectively improve the safety of the battery, and heat conduction in the battery can be effectively ensured to improve the thermal management performance of the battery.

In some embodiments, the first wall is a wall with the largest area of the battery cell.

In some embodiments, an electrode terminal of the battery cell is provided on the second wall.

In some embodiments, the battery cell includes two first walls arranged opposite to each other and two second walls arranged opposite to each other, and at least two electrode terminals are provided; and the at least two electrode terminals are provided on the same second wall; or each second wall is provided with at least one electrode terminal.

In some embodiments, the electrode terminal is provided on the first wall.

In some embodiments, there are a plurality of battery cells, which are arranged in a first direction, each battery cell is provided with a first surface arranged opposite to the first wall in the first direction, the first surface is provided with an avoidance groove, and the avoidance groove of one of two adjacent battery cells is configured to accommodate the electrode terminal of the other battery cell, the first direction being perpendicular to the first wall.

In some embodiments, the first wall is formed in a cylindrical shape.

In some embodiments, second walls are provided at two axial ends of the first wall, and at least one of the second walls is provided with the electrode terminal.

In some embodiments, one of the second walls is provided with an electrode terminal that is exposed, the electrode assembly includes a positive electrode plate and a negative electrode plate, one of the positive electrode plate and the negative electrode plate is electrically connected to the electrode terminal, and the other of the positive electrode plate and the negative electrode plate is electrically connected to the first wall or the other second wall.

In some embodiments, the battery cell further includes a third wall connected to the first wall and/or the second wall, and the electrode terminal is provided on the third wall.

In some embodiments, the battery cell includes two third walls arranged opposite to each other, and at least two electrode terminals are provided; and the at least two electrode terminals are provided on the same third wall; or each third wall is provided with at least one electrode terminal.

In some embodiments, the area of the third wall is less than or equal to that of the first wall, and/or the area of the third wall is less than or equal to that of the second wall.

In some embodiments, at least one battery cell is a pouch battery cell.

In some embodiments, the battery cell further includes a pressure relief mechanism, and the pressure relief mechanism and the electrode terminal of the battery cell are arranged on the same wall of the battery cell.

In some embodiments, the battery cell further includes a pressure relief mechanism, and the pressure relief mechanism and the electrode terminal of the battery cell are respectively arranged on two walls of the battery cell.

In some embodiments, the thermally conductive member is bonded to the first wall via a first adhesive layer.

In some embodiments, the bottom of the thermally conductive member is bonded to a bottom wall of the accommodating cavity via a second adhesive layer; and/or the fixing member includes a third adhesive layer, and the second wall of the battery cell is bonded to the box via the third adhesive layer.

In some embodiments, the thickness of the first adhesive layer is less than or equal to that of the second adhesive layer; and/or the thickness of the first adhesive layer is less than or equal to that of the third adhesive layer.

In some embodiments, the thermal conductivity of the first adhesive layer is greater than or equal to that of the second adhesive layer; and/or the thermal conductivity of the first adhesive layer is greater than or equal to that of the third adhesive layer.

In some embodiments, the ratio of the thickness of the first adhesive layer to the thermal conductivity of the first adhesive layer is defined as a first ratio, the ratio of the thickness of the second adhesive layer to the thermal conductivity of the second adhesive layer is defined as a second ratio, and the ratio of the thickness of the third adhesive layer to the thermal conductivity of the third adhesive layer is defined as a third ratio; wherein the first ratio is less than or equal to the second ratio; and/or the first ratio is less than or equal to the third ratio.

In some embodiments, the thermally conductive member includes a metallic material and/or a non-metallic material.

In some embodiments, the thermally conductive member includes a metal plate, and an insulating layer arranged on a surface of the metal plate; or the thermally conductive member is a plate of non-metallic material.

In some embodiments, there are a plurality of battery cells, which are arranged in a second direction; and the thermally conductive member includes a partition plate extending in the second direction and connected to the first wall of each of the plurality of battery cells, the second direction being parallel to the first wall.

In some embodiments, the thermally conductive member further includes an insulating layer configured to insulate and isolate the first wall of the battery cell from the partition plate.

In some embodiments, the thermal conductivity of the insulating layer is greater than or equal to 0.1 W/(m·K).

In some embodiments, a dimension T1 of the partition plate in a first direction is less than 0.5 mm, the first direction being perpendicular to the first wall.

In some embodiments, a dimension T1 of the partition plate in a first direction is greater than 5 mm, the first direction being perpendicular to the first wall.

In some embodiments, a surface of the thermally conductive member that is connected to the first wall is an insulating surface; and a dimension of the thermally conductive member in a first direction is 0.1-100 mm, the first direction being perpendicular to the first wall.

In some embodiments, in a third direction, a dimension H1 of the partition plate and a dimension H2 of the first wall satisfy: $0.1 \leq H1/H2 \leq 2$, the third direction being perpendicular to the second direction and parallel to the first wall.

In some embodiments, the partition plate is internally provided with a hollow cavity.

In some embodiments, the hollow cavity is configured to accommodate a heat exchange medium to adjust the temperature of the battery cell.

In some embodiments, in a first direction, a dimension of the hollow cavity is W, and a capacity Q of the battery cell and the dimension W of the hollow cavity satisfy: $1.0 \, Ah/mm \leq Q/W \leq 400 \, Ah/mm$, the first direction being perpendicular to the first wall.

In some embodiments, the partition plate further includes a pair of thermally conductive plates arranged opposite to each other in a first direction, and the hollow cavity is provided between the pair of thermally conductive plates, the first direction being perpendicular to the first wall.

In some embodiments, the partition plate further includes a reinforcing rib arranged between the pair of thermally conductive plates.

In some embodiments, the reinforcing rib is connected to at least one of the pair of thermally conductive plates.

In some embodiments, the reinforcing rib includes a first reinforcing rib, two ends of the first reinforcing rib are respectively connected to the pair of thermally conductive plates, and the first reinforcing rib is arranged to be inclined relative to the first direction.

In some embodiments, an included angle between the first reinforcing rib and the first direction ranges from 30° to 60°.

In some embodiments, the reinforcing rib further includes a second reinforcing rib, one end of the second reinforcing rib is connected to one of the pair of thermally conductive plates, and the other end of the second reinforcing rib is arranged spaced apart from the other of the pair of thermally conductive plates.

In some examples, the second reinforcing rib extends in the first direction and protrudes from one of the pair of thermally conductive plates.

In some embodiments, the first reinforcing rib is arranged spaced apart from the second reinforcing rib.

In some embodiments, in the first direction, the thickness D of the thermally conductive plate and the dimension W of the hollow cavity satisfy: $0.01 \leq D/W \leq 25$.

In some embodiments, the partition plate is provided with a medium inlet and a medium outlet, the hollow cavity is in communication with the medium inlet and the medium outlet, and the partition plate is internally provided with a chamber disconnected from both the medium inlet and the medium outlet.

In some embodiments, a partition member is provided in the hollow cavity, and is configured to divide the hollow cavity into at least two flow channels.

In some embodiments, the thermally conductive member includes a first thermally conductive plate, a second thermally conductive plate and the partition member which are arranged in a stacked manner, the partition member is arranged between the first thermally conductive plate and the second thermally conductive plate, the first thermally conductive plate and the partition member jointly define a first flow channel, and the second thermally conductive plate and the partition member jointly define a second flow channel.

In some embodiments, at least a part of the thermally conductive member is configured to be deformable when compressed.

In some embodiments, the thermally conductive member includes: a heat exchange layer and a compressible layer arranged in a stacked manner; and an elastic modulus of the compressible layer is less than an elastic modulus of the heat exchange layer.

In some embodiments, the compressible layer includes a compressible cavity filled with a phase change material or an elastic material.

In some embodiments, the thermally conductive member includes a shell and a supporting component, the supporting component is accommodated in the shell and configured to define a hollow cavity and a deformable cavity spaced apart from each other in the shell, the hollow cavity is configured for the flow of a heat exchange medium, and the deformable cavity is configured to be deformable when the shell is compressed.

In some embodiments, the thermally conductive member includes a shell and an isolation assembly, the isolation assembly is accommodated in the shell and connected to the shell so as to form a hollow cavity between the shell and the isolation assembly, the hollow cavity is configured for the flow of a heat exchange medium, and the isolation assembly is configured to be deformable when the shell is compressed.

In some embodiments, the thermally conductive member is provided with an avoidance structure configured to provide a space for expansion of the battery cell.

In some embodiments, a plurality of battery cells are provided, and at least a part of the avoidance structure is located between two adjacent battery cells and is configured to provide a space for expansion of at least one of the battery cells.

In some embodiments, in a first direction, the thermally conductive member includes a first thermally conductive plate and a second thermally conductive plate arranged opposite to each other, a hollow cavity is provided between the first thermally conductive plate and the second thermally conductive plate and is configured to accommodate a heat exchange medium, and at least one of the first thermally conductive plate and the second thermally conductive plate is recessed toward the other in the first direction to form the avoidance structure, the first direction being perpendicular to the first wall.

In some embodiments, two or more battery groups are provided in the box, and are arranged in a first direction, each of the battery groups includes two or more battery cells arranged in a second direction, the second direction is perpendicular to the first direction, and the first direction is perpendicular to the first wall.

In some embodiments, the thermally conductive member is sandwiched between two adjacent battery groups.

In some embodiments, the battery further includes a connecting pipe group, wherein a hollow cavity for accommodating a heat exchange medium is provided in the thermally conductive member, and the connecting pipe group is configured to communicate the hollow cavities of two or more thermally conductive members with each other.

In some embodiments, the connecting pipe group includes a communication channel, an inlet pipe and an outlet pipe, the hollow cavities of two adjacent thermally conductive members in the first direction are in communication with each other through the communication channel, and the inlet pipe and the outlet pipe are in communication with the hollow cavity of the same thermally conductive member.

In some embodiments, the box includes a main body and a bottom cover arranged at the bottom of the main body, and the bottom cover and the main body are sealingly connected to each other and together form the closed accommodating cavity.

In some embodiments, the bottom cover is detachably connected to the bottom of the main body.

In some embodiments, the bottom cover has a feature surface facing the accommodating cavity, the feature surface being configured as a plane.

In some embodiments, the fixing member includes a carrying member, the carrying member is arranged on the top of the box, and the battery cell is arranged on a surface of the carrying member.

In some embodiments, the minimum thickness H of the carrying member and the weight M1 of the battery satisfy: $0.0002$ mm/kg $< H/M1 \leq 0.2$ mm/kg.

In some embodiments, the carrying member is configured to define the accommodating cavity, and the battery cell is suspended from the carrying member.

In some embodiments, the battery cell is bonded to the carrying member.

In some embodiments, the battery cell has a second outer surface arranged opposite to the first outer surface, and the electrode terminal is arranged on the second outer surface.

In some embodiments, there are a plurality of battery cells, which are arranged in a second direction, the second direction being perpendicular to a vertical direction; and the carrying member is connected to top walls of the plurality of battery cells, the battery cells are located below the carrying member, and the relationship between a dimension N of the carrying member in the vertical direction and the weight M2 of the battery cell satisfies: $0.04$ mm/kg $\leq N/M2 \leq 100$ mm/kg.

In some embodiments, the carrying member is internally provided with a hollow cavity.

In some embodiments, the hollow cavity is configured to accommodate a heat exchange medium to adjust the temperature of the battery cell.

In some embodiments, in a vertical direction, a surface of the carrying member away from the battery cell is provided with a reinforcing rib.

In some embodiments, the carrying member has a carrying surface facing the accommodating cavity, the carrying surface being configured as a plane.

In some embodiments, the carrying member has a carrying portion and a connecting portion, the connecting portion encloses and is connected to an edge of the carrying portion, the carrying portion is configured to define the accommodating cavity, and the connecting portion is connected to the part of the box other than the carrying member; wherein an inner surface of the carrying portion facing the accommodating cavity is configured to form the carrying surface.

In some embodiments, the carrying portion protrudes relative to the connecting portion in a direction facing away from the accommodating cavity.

In some embodiments, the box includes a bottom cover and a frame, the frame encloses an enclosed space configured to be open at two ends in the vertical direction, the bottom cover and the carrying member respectively cover the two ends of the enclosed space that are opposite to each other in the vertical direction, and the bottom cover, the frame and the carrying member together enclose the accommodating cavity.

In some embodiments, the battery cell is placed upside down in the box with an end cover facing a bottom wall of the accommodating cavity, and the end cover is provided with a pressure relief mechanism and the electrode terminal, and the pressure relief mechanism and the electrode terminal are both arranged to face the bottom wall.

In some embodiments, the battery further includes a connecting plate and a connector, wherein the connecting plate is arranged to protrude in a horizontal direction on one side of the box, the connecting plate and a bottom wall of the accommodating cavity form an accommodating portion in the vertical direction, the connector is arranged in the accommodating portion and is connected to the connecting plate, and the connector is electrically connected to the battery cell.

In some embodiments, the fixing member includes a protective assembly arranged between the battery cell and the bottom wall to support and carry the battery cell.

In some embodiments, the battery further includes a bus component configured to be electrically connected to the electrode terminals of at least two battery cells, wherein the protective assembly is arranged between the bottom wall and the bus component, and the protective assembly is configured to insulate the battery cells from the bottom wall.

In some embodiments, the protective assembly includes a protective strip abutting against the battery cells.

In some embodiments, the protective strip is fixedly connected to the battery cells and/or the box.

In some embodiments, the protective strip is bonded to the battery cells and/or the box.

In some embodiments, a plurality of protective strips are provided, which are arranged spaced apart from each other in a second direction and extend in a first direction, and the first direction, the second direction and the vertical direction are perpendicular to one another.

In some embodiments, the protective assembly further includes a main plate, the protective strip is connected to the main plate, and the main plate is located between the protective strip and the bottom wall.

In some embodiments, the main plate abuts the bottom wall.

In some embodiments, the main plate is fixedly connected to the bottom wall.

In some embodiments, the main plate is integrally formed with or detachably connected to the protective strip.

In some embodiments, an end cover of the battery cell includes a functional region and shoulders, the functional region is provided with the electrode terminal, the shoulders are located on two sides of the functional region in a second direction, and the battery cell abuts against the protective strip by means of the shoulders, the second direction being perpendicular to a vertical direction.

In some embodiments, in a vertical direction, the thickness of the protective strip is greater than an extension height of a part of the electrode terminal that is exposed to the battery cell.

In some embodiments, the protective strip abuts against the electrode terminal, or the protective strip is arranged spaced apart from the electrode terminal.

In some embodiments, an orthographic projection of the electrode terminal on the bottom wall is located between orthographic projections of adjacent protective strips on the bottom wall.

In some embodiments, the electrode terminals of two adjacent battery cells are electrically connected to each other via a bus component, and an extension length of one of two adjacent protective strips is less than that of the other in the first direction, to form an avoidance notch, the avoidance notch being configured to avoid the bus component.

In some embodiments, the battery cell further includes a pressure relief mechanism arranged on the same side as the electrode terminal, and an orthographic projection of the pressure relief mechanism on the bottom wall is located between orthographic projections of adjacent protective strips on the bottom wall.

In some embodiments, there is a first distance H3 between the end cover of the battery cell and the bottom wall in a vertical direction, and the first distance H3 satisfies 2 mm < H3 < 30 mm.

In some embodiments, a ratio H3/M2 of the first distance H3 to the weight M2 of a single battery cell satisfies 0.2 mm/Kg < H3/M2 < 50 mm/Kg.

In some embodiments, the battery cell further includes a battery casing in which an electrode assembly is provided, the battery casing is provided with a pressure relief mechanism, and the pressure relief mechanism is integrally formed with the battery casing.

In some embodiments, the battery casing includes an integrally formed non-weak region and weak region, the battery casing is provided with a grooved portion, the non-weak region is formed around the grooved portion, the weak region is formed at the bottom of the grooved portion, the weak region is configured to be damaged when an internal pressure of the battery cell is released, and the pressure relief mechanism includes the weak region.

In some embodiments, an average grain size of the weak region is defined as $S_1$ and an average grain size of the non-weak region is defined as $S_2$, satisfying: $0.05 \leq S_1/S_2 \leq 0.9$.

In some embodiments, the minimum thickness of the weak region is defined as $A_1$ and satisfies: $1 \leq Ai/Si \leq 100$.

In some embodiments, the minimum thickness of the weak region is defined as $A_1$ and the hardness of the weak region is defined as Bi, satisfying: 5 HBW/mm $\leq B_1/A_1 \leq$ 10000 HBW/mm.

In some embodiments, the hardness of the weak region is defined as Bi and the hardness of the non-weak region is defined as $B_2$, satisfying: $1 < B_1/B_2 \leq 5$.

In some embodiments, the minimum thickness of the weak region is defined as $A_1$ and the minimum thickness of the non-weak region is defined as $A_2$, satisfying: $0.05 \leq A_1/A_2 \leq 0.95$.

In some embodiments, the battery cell includes an electrode assembly including a positive electrode plate and a negative electrode plate, the positive electrode plate and/or the negative electrode plate includes a current collector and an active material layer, and the current collector includes a supporting layer and a conductive layer, the supporting layer is configured to carry the conductive layer, and the conductive layer is configured to carry the active material layer.

In some embodiments, the conductive layer is arranged on at least one side of the supporting layer in a thickness direction of the supporting layer.

In some embodiments, a room temperature film resistance Rs of the conductive layer satisfies: $0.016\ \Omega/\square \leq Rs \leq 420\ \Omega/\square$.

In some embodiments, the conductive layer is made of at least one material selected from aluminum, copper, titanium, silver, a nickel-copper alloy, and an aluminum-zirconium alloy.

In some embodiments, the material of the supporting layer includes one or more of a polymer material and a polymer-based composite material.

In some embodiments, the thickness d1 of the supporting layer and the light transmittance k of the supporting layer satisfy: when $12\ \mu m \leq d1 < 30\ \mu m$, $30\% \leq k \leq 80\%$; or when $8\ \mu m \leq d1 < 12\ \mu m$, $40\% \leq k \leq 90\%$; or when $1\ \mu m \leq d1 < 8\ \mu m$, $50\% \leq k \leq 98\%$.

In some embodiments, the battery cell includes an electrode assembly including a positive electrode plate, the positive electrode plate includes a positive electrode current collector and a positive electrode active material layer coated on a surface of the positive electrode current collector, the positive electrode active material layer includes a positive electrode active material, and the positive electrode active material has an inner core and a shell coating the inner core, wherein the inner core includes at least one of a ternary material, $dLi_2MnO_3\cdot(1-d)LiMO_2$ and $LiMPO_4$, where $0 < d < 1$, and the M includes one or more selected from Fe, Ni, Co, and Mn; and the shell contains an crystalline inorganic substance, the full width at half maximum of a main peak measured by X-ray diffraction of the crystalline inorganic substance is 0-3°, and the crystalline inorganic substance includes one or more selected from a metal oxide and an inorganic salt.

In some embodiments, the shell includes at least one of the metal oxide and the inorganic salt, and carbon.

In some embodiments, the battery cell includes an electrode assembly including a positive electrode plate, the positive electrode plate includes a positive electrode current collector and a positive electrode active material layer coated on a surface of the positive electrode current collector, the positive electrode active material layer includes a positive electrode active material, and the positive electrode active material has $LiMPO_4$, where the M includes Mn, and a non-Mn element, and the non-Mn element satisfies at least one of the following conditions: an ionic radius of the non-Mn element is defined as a, an ionic radius of the manganese element is defined as b, and $|a-b|/b$ is not greater than 10%; a valence change voltage of the non-Mn element is defined as U, where $2\ V < U < 5.5\ V$; the chemical activity of a chemical bond formed by the non-Mn element and O is not less than the chemical activity of a P-O bond; and the highest valence of the non-Mn element is not greater than 6.

In some embodiments, the non-Mn element includes one or both of a first doping element and a second doping element, the first doping element is doped at manganese site, and the second doping element is doped at a phosphorus site.

In some embodiments, the first doping element satisfies at least one of the following conditions: an ionic radius of the first doping element is defined as a, an ionic radius of the manganese element is defined as b, and $|a-b|/b$ is not greater than 10%; and a valence change voltage of the first doping element is defined as U, where $2\ V < U < 5.5\ V$.

In some embodiments, the second doping element satisfies at least one of the following conditions: the chemical activity of a chemical bond formed by the second doping element and O is not less than the chemical activity of a P-O bond; and the highest valence of the second doping element is not greater than 6.

In some embodiments, the positive electrode active material further has a coating layer.

In some embodiments, the coating layer includes carbon.

In some embodiments, the carbon in the coating layer is a mixture of SP2-form carbon and SP3-form carbon.

In some embodiments, a molar ratio of the SP2-form carbon to the SP3-form carbon is any value within a range of 0.1-10.

According to an embodiment in a second aspect of the present application, an electrical apparatus includes a battery according to the embodiments in the first aspect of the present application, the battery being configured to supply electric energy.

Additional aspects and advantages of the present application will be set forth in part in the following description, and in part will be apparent from the following description, or may be learned by practice of the present application.

**Description of Drawings**

The above and/or additional aspects and advantages of the present application will become apparent and easily comprehensible from the following description of embodiments in conjunction with the accompanying drawings, in which:

Fig. 1 is a schematic view of an electrical apparatus according to an embodiment of the present application;
Fig. 2 is an exploded view of a battery according to an embodiment of the present application;
Fig. 3 is an exploded view of a battery according to another embodiment of the present application;
Fig. 4 is an exploded view of a battery cell according to an embodiment of the present application;
Fig. 5 is a schematic view of the battery cell shown in Fig. 4;
Fig. 6 is a schematic view of the arrangement of battery cells according to another embodiment of the present application;
Fig. 7 is an exploded view of a battery according to an embodiment of the present application;
Fig. 8 is a schematic view of the arrangement of battery cells shown in Fig. 7;
Fig. 9 is a schematic view of a battery cell according to an embodiment of the present application;
Fig. 10 is a schematic view of a battery according to an embodiment of the present application;
Fig. 11 is a schematic view of a thermally conductive member shown in Fig. 10;
Fig. 12 is a schematic view of the thermally conductive member and a plurality of battery cells shown in Fig. 10;
Fig. 13 is another schematic view of the battery shown in Fig. 10;
Fig. 14 is a schematic view of a partial structure of a battery of an embodiment of the present application;
Fig. 15 is another schematic view of the battery shown in Fig. 14;

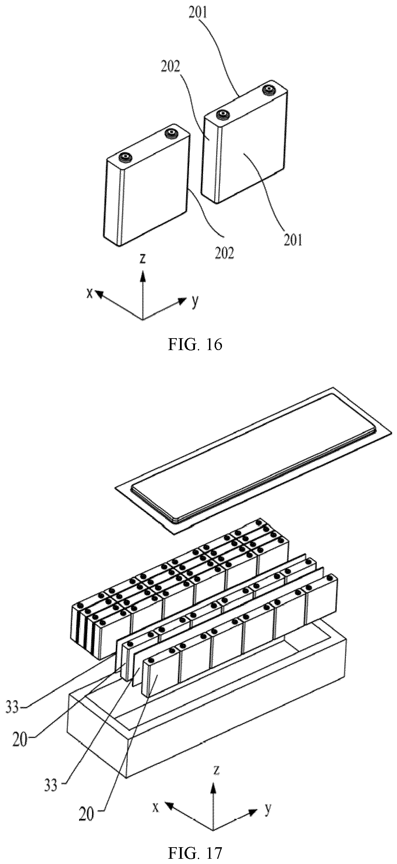

Fig. 16 is a schematic view of the arrangement of battery cells shown in Fig. 14;
Fig. 17 is a schematic view of a partial structure of a battery according to an embodiment of the present application;
Fig. 18 is another schematic view of the battery shown in Fig. 17;
Fig. 19 is still another schematic view of the battery shown in Fig. 17;
Fig. 20 is a schematic view of a partial structure of a battery according to an embodiment of the present application;
Fig. 21 is a schematic view of a thermal management component shown in Fig. 20;
Fig. 22 is a cross-sectional view of the thermal management component shown in Fig. 21;
Fig. 23 is an enlarged view of portion A marked in Fig. 22;
Fig. 24 is a cross-sectional view of a thermally conductive member internally provided with a partition member according to an embodiment of the present application;
Fig. 25 is an enlarged view of portion B marked in Fig. 22;
Fig. 26 is an enlarged view of portion C marked in Fig. 22;
Fig. 27 is a cross-sectional view of a thermally conductive member according to an embodiment of the present application;
Fig. 28 is an enlarged view of portion D marked in Fig. 27;
Fig. 29 is an enlarged view of portion E marked in Fig. 27;
Fig. 30 is a schematic view of a partial structure of a battery according to an embodiment of the present application;
Fig. 31 is a partial cross-sectional view of the battery shown in Fig. 30;
Fig. 32 is an enlarged view of portion F marked in Fig. 31;
Fig. 33 is a schematic view of multiple structures of a partition plate according to some embodiments of the present application;
Fig. 34 is an exploded view of a battery according to an embodiment of the present application;
Fig. 35 is a schematic view of a battery according to an embodiment of the present application;
Fig. 36 is a schematic view of the connection between a battery cell and a thermal management component shown in Fig. 35;
Fig. 37 is a cross-sectional view taken along line A-A in Fig. 36;
Fig. 38 is an enlarged view of portion G marked in Fig. 37;

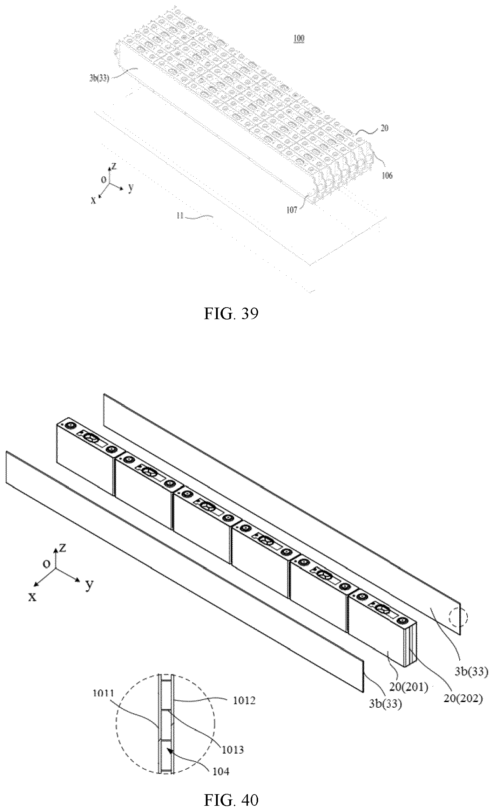

Fig. 39 is a schematic view of a battery according to an embodiment of the present application;
Fig. 40 is an exploded view of a battery according to an embodiment of the present application;
Fig. 41 is an exploded view of a battery according to an embodiment of the present application;
Fig. 42 is a schematic view of a battery according to an embodiment of the present application;
Fig. 43 is another schematic view of the battery shown in Fig. 42;
Fig. 44 is still another schematic view of the battery shown in Fig. 42;
Fig. 45 is a cross-sectional view taken along line B-B in Fig. 44;
Fig. 46 is a schematic view of a battery according to an embodiment of the present application;
Fig. 47 is a schematic view of a thermally conductive member shown in Fig. 46;

Fig. 48 is a cross-sectional view of a plate main body shown in Fig. 47;

Fig. 49 is another cross-sectional view of the plate main body shown in Fig. 47;

Fig. 50 is a cross-sectional view of a plate main body according to an embodiment of the present application;

Fig. 51 is a cross-sectional view of a plate main body according to an embodiment of the present application;

Fig. 52 is a schematic view of a thermally conductive member according to an embodiment of the present application;

Fig. 53 is a cross-sectional view of a thermally conductive member according to an embodiment of the present application;

Fig. 54 is another cross-sectional view of the thermally conductive member in Fig. 53;

Fig. 55 is a cross-sectional view of a partition member according to an embodiment of the present application;

Fig. 56 is a cross-sectional view of a thermally conductive member according to an embodiment of the present application;

Fig. 57 is a cross-sectional view of a partition member according to an embodiment of the present application;

Fig. 58 is a cross-sectional view of a thermally conductive member according to an embodiment of the present application;

Fig. 59 is a schematic view of a partition member according to an embodiment of the present application;

Fig. 60 is a cross-sectional view of a thermally conductive member according to an embodiment of the present application;

Fig. 61 is a cross-sectional view of a battery according to an embodiment of the present application;

Fig. 62 is a cross-sectional view of a battery according to an embodiment of the present application;

Fig. 63 is a cross-sectional view of a battery according to an embodiment of the present application;

Fig. 64 is a cross-sectional view of a battery according to an embodiment of the present application;

Fig. 65 is a schematic view of a thermally conductive member according to an embodiment of the present application;

Fig. 66 is a cross-sectional view of a thermally conductive member according to an embodiment of the present application;

Fig. 67 is a cross-sectional view of a thermally conductive member according to an embodiment of the present application;

Fig. 68 is a cross-sectional view of a thermally conductive member according to an embodiment of the present application;

Fig. 69 is a cross-sectional view of a thermally conductive member according to an embodiment of the present application;

Fig. 70 is a cross-sectional view of a thermally conductive member according to an embodiment of the present application;

Fig. 71 is a schematic view of a compressible cavity according to an embodiment of the present application;

Fig. 72 is a partial schematic view of a thermally conductive member according to an embodiment of the present application;

Fig. 73 is another schematic view of the thermally conductive member shown in Fig. 72;

Fig. 74 is a schematic view of a thermally conductive member according to an embodiment of the present application;

Fig. 75 is a schematic view of a thermally conductive member according to an embodiment of the present application;

Fig. 76 is a schematic view of a thermally conductive member according to an embodiment of the present application;

Fig. 77 is a schematic view of a thermally conductive member according to an embodiment of the present application;

Fig. 78 is a schematic view of a thermally conductive member according to an embodiment of the present application;

Fig. 79 is an exploded view of a thermally conductive member according to an embodiment of the present application;

Fig. 80 is a schematic view of a manifold element shown in Fig. 79;

Fig. 81 is a schematic view of a battery according to an embodiment of the present application;

Fig. 82 is a schematic view of a thermally conductive member according to an embodiment of the present application;

Fig. 83 is a schematic view of a thermally conductive member according to an embodiment of the present application;

Fig. 84 is an enlarged view of portion H marked in Fig. 83;

Fig. 85 is a schematic view of a battery according to an embodiment of the present application;

Fig. 86 is a schematic view of a thermally conductive member according to an embodiment of the present application;

Fig. 87 is another schematic view of the thermally conductive member shown in Fig. 86;

Fig. 88 is a schematic view of a thermally conductive member according to an embodiment of the present application;

Fig. 89 is an enlarged view of portion I marked in Fig. 87;

Fig. 90 is an enlarged view of portion J marked in Fig. 88;

Fig. 91 is another schematic view of the thermally conductive member in Fig. 90;

Fig. 92 is a schematic view of a thermally conductive member according to an embodiment of the present application;

Fig. 93 is a schematic view of a thermally conductive member according to an embodiment of the present application;

Fig. 94 is an enlarged view of portion K marked in Fig. 93;

Fig. 95 is a schematic view of a thermally conductive member according to an embodiment of the present application;

Fig. 96 is an enlarged view of portion L marked in Fig. 95;

Fig. 97 is a partial schematic view of a thermally conductive member according to an embodiment of the present application;

Fig. 98 is a partial schematic view of a thermally conductive member according to an embodiment of the present application;

Fig. 99 is a schematic view of a thermally conductive member according to an embodiment of the present application;

Fig. 100 is a schematic view of a battery according to an embodiment of the present application;

Fig. 101 is an exploded view of the battery shown in Fig. 100;

Fig. 102 is a schematic view of a battery according to an embodiment of the present application;

Fig. 103 is a schematic view of a thermally conductive member according to an embodiment of the present application;

Fig. 104 is a schematic view of a thermally conductive member according to an embodiment of the present application;

Fig. 105 is a schematic view of a thermally conductive member according to an embodiment of the present application;

Fig. 106 is a schematic view of a thermally conductive member according to an embodiment of the present application;

Fig. 107 is a schematic view of a battery according to an embodiment of the present application;

Fig. 108 is a schematic view of a battery according to an embodiment of the present application;

Fig. 109 is a schematic view of a battery according to an embodiment of the present application;

Fig. 110 is a schematic view of a battery cell according to an embodiment of the present application;

Fig. 111 is a schematic view of a battery according to an embodiment of the present application;

Fig. 112 is a schematic view of a battery according to an embodiment of the present application;

Fig. 113 is a schematic view of a thermally conductive member shown in Fig. 112;

Fig. 114 is a schematic view of a thermally conductive member according to an embodiment of the present application;

Fig. 115 is another schematic view of the thermally conductive member in Fig. 114;

Fig. 116 is a schematic structural view of a battery provided in some embodiments of the present application;

Fig. 117 is an exploded view of the battery shown in Fig. 116;

Fig. 118 is a schematic structural view of a bottom cover provided in some embodiments of the present application;

Fig. 119 is a top view of the bottom cover shown in Fig. 118;

Fig. 120 is a front view of the bottom cover shown in Fig. 118;

Fig. 121 is a schematic structural view of a bottom cover provided in some other embodiments of the present application;

Fig. 122 is a cross-sectional view of the battery shown in Fig. 116;

Fig. 123 is a schematic view of an orthographic projection of the bottom cover shown in Fig. 120 in a vertical direction;

Fig. 124 is a schematic view of the outline of a battery cell according to some embodiments of the present application;

Fig. 125 is a front view of the battery cell shown in Fig. 124;

Fig. 126 is a schematic structural view of a carrying member according to some embodiments of the present application;

Fig. 127 is a schematic structural view of a carrying member according to some other embodiments of the present application;

Fig. 128 is a diagram of an orthographic projection of the carrying member shown in Fig. 127 in a vertical direction;

Fig. 129 is a front view of the battery shown in Fig. 116;

Fig. 130 is a schematic view of a battery applied to a vehicle body according to some embodiments of the present application;

Fig. 131 is a schematic view of the battery shown in Fig. 130;

Fig. 132 is a first exploded view of the structure shown in Fig. 130;

Fig. 133 is a second exploded view of the structure shown in Fig. 130;

Fig. 134 is a schematic diagram of the installation relationship between a battery and a vehicle body according to some embodiments of the present application;

Fig. 135 is a schematic view of a battery provided in some embodiments of the present application;

Fig. 136 is a schematic structural view of a carrying member according to some embodiments of the present application;

Fig. 137 is a schematic structural view of a carrying member according to some embodiments of the present application;

Fig. 138 is a schematic structural view of a carrying member according to some embodiments of the present application;

Fig. 139 is a schematic structural view of a carrying member according to some embodiments of the present application;

Fig. 140 is a schematic structural view of a carrying member according to some embodiments of the present application;

Fig. 141 is a schematic structural view of a battery according to some embodiments of the present application;

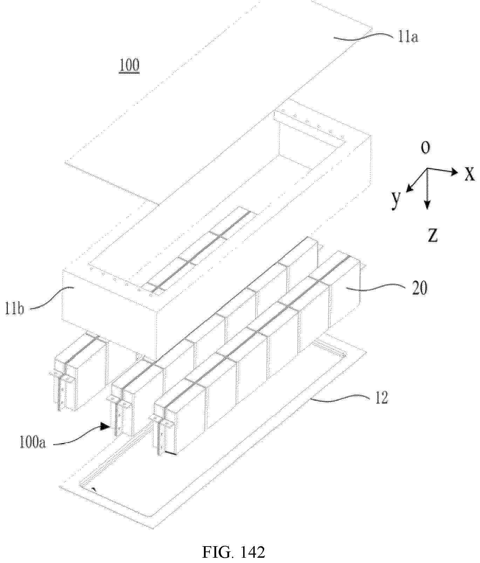

Fig. 142 is a schematic structural diagram of a battery in an embodiment of the present application;

Fig. 143 is a schematic view of a battery module shown in Fig. 142;

Fig. 144 is a schematic view of a battery cell cooperating with a thermally conductive member according to some embodiments of the present application;

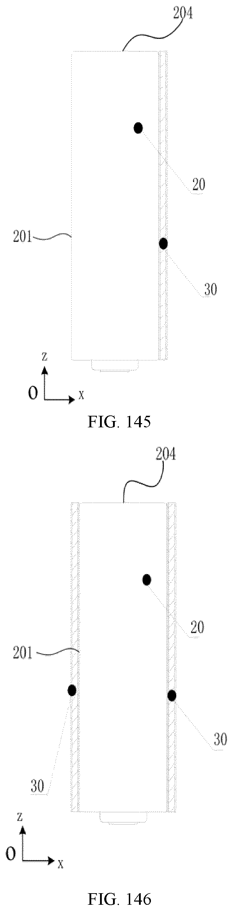

Fig. 145 is a schematic view of a battery cell cooperating with a thermally conductive member according to some embodiments of the present application;

Fig. 146 is a schematic view of a battery cell cooperating with a thermally conductive member according to some embodiments of the present application;

Fig. 147 is an exploded view of a battery according to some embodiments of the present application;

Fig. 148 is a schematic structural view of a protective assembly of the battery shown in Fig. 147;

Fig. 149 is a schematic cross-sectional view of the battery shown in Fig. 147;

Fig. 150 is a schematic enlarged view of circle B in Fig. 149;

Fig. 151 is a schematic structural view of a collision test apparatus A for performing a collision test on a battery according to some embodiments of the present application;

Fig. 152 is a schematic view of the arrangement of electrode terminals according to some embodiments of the present application;

Fig. 153 is a schematic view of a battery cell cooperating with a thermally conductive member according to some embodiments of the present application;

Fig. 154 is a schematic structural view of a shell provided in some embodiments of the present application;

Fig. 155 is a cross-sectional view taken along line C-C of the shell shown in Fig. 154;

Fig. 156 is a grain view (schematic view) of the shell shown in Fig. 155;

Fig. 157 is a partial enlarged view of portion E of the shell shown in Fig. 155;

Fig. 158 is a partial enlarged view of a shell according to some other embodiments of the present application;

Fig. 159 is a schematic structural view of a shell provided in still some other embodiments of the present application (showing one stage of scored groove);

Fig. 160 is a cross-sectional view taken along line E-E of the shell shown in Fig. 159;

Fig. 161 is a schematic structural view of a shell provided in yet some embodiments of the present application (showing one stage of scored groove);

Fig. 162 is a cross-sectional view taken along line F-F of the shell shown in Fig. 161;

Fig. 163 is a schematic structural view of a shell provided in some other embodiments of the present application (showing one stage of scored groove);

Fig. 164 is a cross-sectional view taken along line G-G of the shell shown in Fig. 163;

Fig. 165 is a schematic structural view of a shell provided in still some other embodiments of the present application (showing two stages of scored grooves);

Fig. 166 is a cross-sectional view taken along line K-K of the shell shown in Fig. 165;

Fig. 167 is a schematic structural view of a shell provided in yet some embodiments of the present application (showing two stages of scored grooves);

Fig. 168 is a cross-sectional view taken along line M-M of the shell shown in Fig. 167;

Fig. 169 is a schematic structural view of a shell provided in some other embodiments of the present application (showing two stages of scored grooves);

Fig. 170 is a cross-sectional view taken along line N-N of the shell shown in Fig. 169;

Fig. 171 is an axonometric view of a shell provided in some embodiments of the present application;

Fig. 172 is a schematic structural view of the shell shown in Fig. 171 (showing one stage of scored groove and one stage of sunk groove);

Fig. 173 is a cross-sectional view taken along line O-O of the shell shown in Fig. 172;

Fig. 174 is a schematic structural view of a shell provided in yet some embodiments of the present application (showing one stage of scored groove and one stage of sunk groove);

Fig. 175 is a cross-sectional view taken along line P-P of the shell shown in Fig. 074;

Fig. 176 is a schematic structural view of a shell provided in some other embodiments of the present application (showing one stage of scored groove and one stage of sunk groove);

Fig. 177 is a cross-sectional view taken along line Q-Q of the shell component shown in Fig. 176;

Fig. 178 is a schematic structural view of a shell provided in some embodiments of the present application (showing one stage of scored groove and two stage of sunk grooves);

Fig. 179 is a cross-sectional view taken along line R-R of the shell component shown in Fig. 178;

Fig. 180 is a schematic structural view of a shell provided in yet some embodiments of the present application (showing one stage of scored groove and two stages of sunk grooves);

Fig. 181 is a cross-sectional view taken along line S-S of the shell shown in Fig. 180;

Fig. 182 is a schematic structural view of a shell component provided in some other embodiments of the present application (showing one stage of scored groove and two stage of sunk grooves);

Fig. 183 is a cross-sectional view taken along line T-T of the shell shown in Fig. 182;

Fig. 184 is a schematic structural view of a shell provided in other embodiments of the present application;

Fig. 185 is a grain view (schematic view) of a shell provided in some other embodiments of the present application;

Fig. 186 is a schematic structural view of an end cover provided in some embodiments of the present application;

Fig. 187 is a schematic structural view of a case provided in some embodiments of the present application;

Fig. 188 is a schematic structural view of a case provided in some other embodiments of the present application;

Fig. 189 is a schematic structural view of a battery cell provided in some embodiments of the present application;

Fig. 190 is a schematic structural view of a positive electrode current collector according to a specific embodiment of the present application;

Fig. 191 is a schematic structural view of a positive electrode current collector according to a further specific embodiment of the present application;

Fig. 192 is a schematic structural view of a negative electrode current collector according to a specific embodiment of the present application;

Fig. 193 is a schematic structural view of a negative electrode current collector according to a further specific embodiment of the present application;

Fig. 194 is a schematic structural view of a positive electrode plate according to a specific embodiment of the present application;

Fig. 195 is a schematic structural view of a positive electrode plate according to a further specific embodiment of the present application;

Fig. 196 is a schematic structural view of a negative electrode plate according to a specific embodiment of the present application;

Fig. 197 is a schematic structural view of a negative electrode plate according to a further specific embodiment of the present application;

Fig. 198 is a schematic view of a nail penetration test of the present application;

Fig. 199 shows temperature change curves of a lithium-ion battery 1# and a lithium-ion battery 4# after a nail penetration test;

Fig. 200 shows voltage change curves of a lithium-ion battery 1# and a lithium-ion battery 4# after a nail penetration test;

Fig. 201 is an X-ray diffraction (XRD) pattern of undoped $LiMnPO_4$ and a positive electrode active material prepared in Embodiment 2;

Fig. 202 is an X-ray energy dispersive spectrum (EDS) of the positive electrode active material prepared in Embodiment 2;

Fig. 203 is a schematic view of a positive electrode active material having a core-shell structure described in the present application;

Fig. 204 is a schematic view of a positive electrode active material having a core-shell structure according to an embodiment of the present application;

Fig. 205 is a schematic view of a thermally conductive member and a partition member provided in some embodiments of the present application; and

Fig. 206 is a schematic view of the thermally conductive member and a plurality of battery cells shown in Fig. 205.

**Detailed Description**

Embodiments of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that unless otherwise stated, all technical and scientific terms used herein have the same meanings as commonly understood by those skilled in the art of the present application. The terms used herein are intended only for the purpose of describing specific embodiments and are not intended to limit the present application. The terms "comprise" and "have" and any variations thereof in the specification and claims of the present application as well as in the above description of drawings are intended to cover a non-exclusive inclusion; the term "a plurality of" means two or more; and the orientation or position relationships indicated by the terms "upper", "lower", "left", "right", "inner", "outer" and the like are only for facilitating the description of the present application and simplifying the description, rather than indicating or implying that the apparatus or element referred to must have a specific orientation or be constructed and operated in a specific orientation, and therefore will not be interpreted as limiting the present application. In addition, the terms "first", "second", "third", and the like are used for descriptive purposes only, and cannot be construed as indicating or implying relative importance. "Perpendicular" is not strictly perpendicular, but within the allowable range of errors. "Parallel" is not strictly parallel, but within an allowable range of an error.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

Orientation words appearing in the following description are all directions shown in the drawings, and do not limit the specific structure of the present application. In the description of the present application, it should also be noted that unless otherwise expressly specified and defined, the terms "install", "connected" and "connect" should be understood in a broad sense. For example, the connection may be fixed connection, detachable connection or integrated connection, or may be direct connection, indirect connection through an intermediate, or internal communication of two elements. Those of ordinary skill in the art can understand the specific meanings of the above terms in the present application according to specific situations.

In the present application, the term "and/or" is only an association relation describing associated objects, which means that there may be three relations, for example, A and/or B may represent three situations: A exists alone, both A and B exist, and B exists alone. Unless otherwise specifically stated, the term "or" is inclusive in the present application. For example, the phrase "A or B" means "A, B, or both A and B"; more specifically, the condition "A or B" is satisfied by any of the following: A is true (or present) and B is false (or absent); A is false (or absent) and B is true (or present); or both A and B are true (or present).

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. Any lower limit can be combined with any upper limit to form a range not explicitly recited; and any lower limit can be combined with another lower limit to form a range not explicitly recited, and likewise, any upper limit can be combined with any another upper limit to form a range not explicitly recited. Furthermore, although not expressly recited, every point or single numerical value between the endpoints of a range is included within the range. Thus, each point or single numerical value may serve as its own lower or upper limit to form an unspecified range in combination with any other point or single numerical value or with other lower or upper limits.

For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like. In the present application, "about" before a numerical value indicates a range, indicating a range of $\pm10\%$ of the numerical value.

Unless otherwise specifically stated, all the embodiments and optional embodiments of the present application can be combined with one another to form new technical solutions. Unless otherwise specified, all technical features and optional technical features of the present application may be combined with each other to form new technical solutions. Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method that may further include step (c) means that step (c) may be added to the method in any order. For example, the method may include steps (a), (b) and (c), or may further include steps (a), (c) and (b), or may further include steps (c), (a) and (b), and the like.

It should be noted that the terms "coating layer" and " coating" herein refer to a material layer that coats the inner core material such as lithium manganese phosphate. The material layer may completely or partially coat the inner core, and the "coating layer" is used merely for the convenience of description, and not intended to limit the present application. Furthermore, each coating layer may completely or partially coat the interior. Likewise, the term "thickness of the coating layer" refers to the thickness of the material layer that coats the inner core along the radial direction of the inner core.

In the present application, the battery cell may include a lithium-ion secondary battery, a lithium-ion primary battery, a lithium sulfur battery, a sodium lithium-ion battery, a sodium-ion battery, a magnesium-ion battery, and so on, which will not be limited in the embodiments of the present application. The battery cell may be in a cylindrical shape, a flat shape, a cuboid shape or another shape, which is also not limited in the embodiments of the present application. Battery cells are generally divided into three types according to encapsulating manners: cylindrical battery cells, square battery cells, and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery pack and the like. The battery generally includes a box for packaging one or more battery cells. The box can prevent liquid or other foreign matters from affecting charging or discharging of the battery cells.

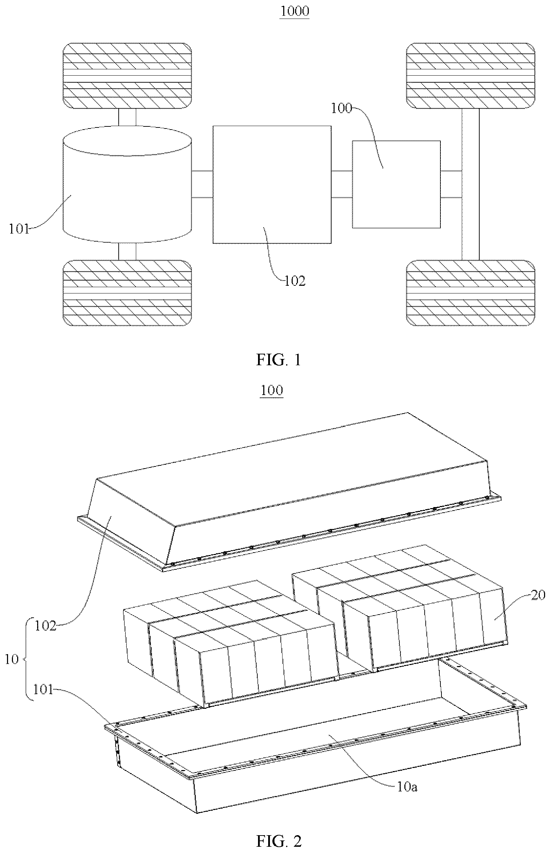

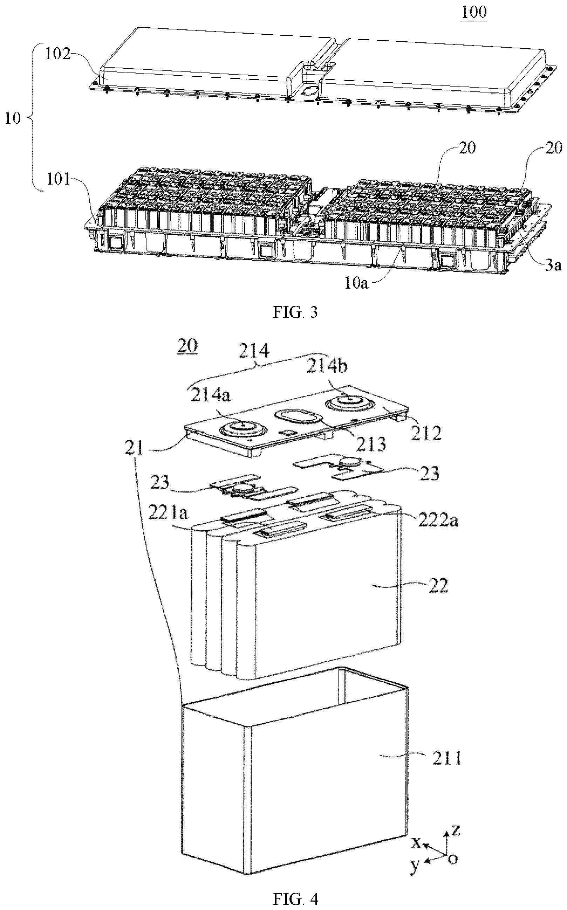

A box 10 may include a first part 101 and a second part 102 (as shown in Fig. 2 and Fig. 3). The first part 101 and the second part 102 are covered by each other, and the first part 101 and the second part 102 together define an accommodating space for accommodating a battery cell 20. The second part 102 can be of a hollow structure with one end open, the first part 101 is of a plate-like structure, and the first part 101 covers the open side of the second part 102 to form the box having the accommodating space; and both the first part 101 and the second part 102 can also be of a hollow structure with one side open, and the open side of the first part 101 covers the open side of the second part 102 to form the box having the accommodating space. Of course, the box 10 may be in a variety of shapes, such as a cylinder, a cuboid, etc.

To improve the sealing performance of the first part 101 and the second part 102 after they are connected, a sealing member, such as a sealant, a sealing ring, etc. may also be provided between the first part 101 and the second part 102.

The material of the box 10 may be alloy materials such as aluminum alloy and iron alloy, or may be polymer materials such as polycarbonate and polyisocyanurate foam, or may be composite materials such as glass fiber and epoxy resin.

The battery cell includes an electrode assembly and an electrolyte solution, the electrode assembly being composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together.

There is no particular restriction on the above-mentioned separator. Any well-known separator of a porous structure with electrochemical stability and chemical stability can be used. For example, it can be a single-layer or multilayer film of one or more of glass fiber, non-woven fabric, polyethylene, polypropylene and polyvinylidene fluoride. The material of the separator may be polypropylene (PP) or polyethylene (PE), etc. In addition, the electrode assembly may have a wound structure or a stacked structure, and the embodiments of the present application are not limited thereto.

The above-mentioned electrolyte solution includes an organic solvent and an electrolyte salt, wherein the electrolyte salt plays a role in transporting ions between the positive and negative electrodes, and the organic solvent serves as a medium for transporting ions. The electrolyte salt may be an electrolyte salt known in the art for the electrolyte of a battery cell, such as one or more of $LiPF_6$(lithium hexafluorophosphate), $LiBF_4$(lithium tetrafluoroborate), $LiClO_4$(lithium perchlorate), $LiAsF_6$(lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), $LiPO_2F_2$(lithium difluorophosphate), LiDFOP (lithium difluoro bis(oxalato)phosphate), and LiTFOP (lithium tetrafluoro(oxalato)phosphate); the organic solvent can be an organic solvent known in the art for the electrolyte of a battery cell, such as one or more, preferably two or more of ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE), and appropriate electrolyte salts and organic solvents can be selected according to actual needs.

Of course, the battery cell may not include an electrolyte solution.

In order to meet different power requirements, the battery may include a plurality of battery cells, wherein the plurality of battery cells may be in series connection, parallel connection or parallel-series connection. The parallel-series connection refers to a combination of series connection and parallel connection. Optionally, first, a plurality of battery cells may be in series connection, parallel connection, or parallel-series connection to form a battery module, and then, a plurality of battery modules may be in series connection, parallel connection, or parallel-series connection to form a battery. That is to say, a plurality of battery cells may directly constitute a battery, or may constitute battery modules or battery groups, which then constitute a battery. The battery is further installed in an electrical apparatus to provide electrical energy to the electrical apparatus.

At present, from the perspective of the development of the market situation, power batteries are increasingly widely applied. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

In the related art, the opening of the battery casing often faces upward in the vertical direction, the battery cells are fixed at the bottom of the battery, and the electrode terminals face the cover covering the opening of the box.

However, in the battery configured as above, the applicant noticed that when the battery is installed in an electrical apparatus, the bottom is bonded to the electrical apparatus, and the battery cells are fixed to the bottom of the battery, which makes the rigidity of the top of the battery which is more vulnerable to collision poor, and during the collision process of the battery, the internal battery cells are unevenly stressed, making the battery prone to damage, resulting in poor battery safety and affecting the battery performance.

Moreover, during the battery charging and discharging process, a large amount of heat will be generated. Especially during the fast charging process, the battery cells will generate a large amount of heat. The heat is continuously accumulated and superimposed, causing the battery temperature to rise sharply. When the heat of the battery cells cannot be dissipated in time, it may lead to thermal runaway of the battery, resulting in safety accidents such as smoke, fire, and explosion. At the same time, long-term severe temperature unevenness will greatly reduce the service life of the battery. In addition, when the temperature is very low, the discharge efficiency of the battery is very low, and even it is difficult to start at low temperatures, affecting the normal use of the battery. Therefore, how to ensure the demand of a battery for thermal management is very important.

In view of this, embodiments of the present invention provide a technical solution. In the embodiments of the present invention, a battery cell is provided in a battery to be accommodated in an accommodating cavity of a box, and the battery cell is fixed in the accommodating cavity through a fixing member connecting a second wall and the box to increase the structural strength of the battery; at the same time, a thermally conductive member is arranged to be thermally conductively connected with a first wall of the battery cell, so that the thermally conductive member is used to conduct the heat from the battery cell. In this way, the heat conduction in the battery can be guaranteed by the thermally conductive member, so that the safety of the battery can be effectively improved, and the heat conduction in the battery can be effectively guaranteed, thus improving the thermal management performance of the battery.

The technical solutions described in the embodiments of the present application are all applicable to various apparatuses using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the embodiments of the present application are not only applicable to the foregoing apparatuses, but also applicable to all apparatuses using batteries. However, for the sake of brevity, the following embodiments take electric vehicles as an example for description.

For example, as shown in Fig. 1, a schematic structural diagram of a vehicle 1000 according to an embodiment of the present application is shown. The vehicle 1000 may be a fuel vehicle, a gas vehicle, or a new-energy vehicle, and the new-energy vehicle may be an all-electric vehicle, a hybrid electric vehicle, an extended range electric vehicle, or the like. A motor 101, a controller 102 and a battery 100 may be provided inside the vehicle 1000, and the controller 102 is configured to control the battery 100 to supply power to the motor 101. As an example, the battery 100 may be arranged at the bottom or the head or the tail of the vehicle 1000. The battery 100 may be used for supplying power to the vehicle 1000. For example, the battery 100 may be used as an operating power source of the vehicle 1000, which is used for a circuit system of the vehicle 1000, for example, for operation power requirements of the vehicle 1000 during starting, navigation, and running. In another embodiment of the present application, the battery 100 not only can be used as the operating power source of the vehicle 1000, but also can be used as a driving power source of the vehicle 1000 to provide driving power for the vehicle 1000 by replacing or partially replacing fuel or natural gas.

In order to meet different power usage requirements, the battery 100 may include one or more battery cells 20. For example, as shown in Fig. 2 and Fig. 3, a schematic structural diagram of a battery 100 according to an embodiment of the present application is shown. The battery 100 may include a plurality of battery cells 20. The battery 100 may further include a box 10, the interior of the box 10 is a hollow structure, and a plurality of battery cells 20 are accommodated in the box 10. For example, the plurality of battery cells 20 are placed in the box 10 after connected in parallel or in series or in a parallel-series combination.

Optionally, the battery 100 may further include other structures, which will not be repeated here. For example, the battery 100 may further include a bus component, and the bus component is used for achieving electrical connection between the plurality of battery cells 20, such as parallel connection, series connection, or parallel-series connection. Specifically, the bus component may realize electrical connections between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the electrically conductive mechanism may also belong to the bus component.

Depending on different power requirements, the number of battery cells 20 may be set to any value. For example, there may be one battery cell 20. The plurality of battery cells 20 can be connected in series, in parallel or in parallel-series connection to implement large capacity or power. Each battery 100 may include a large quantity of battery cells 20, and therefore, in order to facilitate installation, the battery cells 20 may be arranged in groups, and each group of battery cells 20 forms a battery module. The quantity of battery cells 20 included in the battery module is not limited and may be set according to the requirements. The battery can include a plurality of battery modules, and these battery modules may be in series, parallel or series-parallel connection.

As shown in Fig. 4, a schematic structural diagram of a battery cell 20 according to an embodiment of the present application is shown. The battery cell 20 includes one or more electrode assemblies 22, a case 211, and a cover plate 212. The case 211 and the end cover 212 form a shell of the battery cell 20 or a battery case 21. The wall of the case 211 and the end cover 212 are both called the wall of the battery cell 20. For a cuboid-shaped battery cell 20, the wall of the case 211 includes a bottom wall and four side walls. The shape of the case 211 is determined according to the combined shape of one or more electrode assemblies 22. For example, the case 211 may be a hollow cuboid, cube, or cylinder, and one of the surfaces of the case 211 has an opening to facilitate placing the one or more electrode assemblies 22 in the case 211. For example, when the case 211 is a hollow cuboid or cube, one plane of the case 211 is an opening surface, i.e., the plane does not have a wall, so that the inside and outside of the case 211 are in communication with each other. When the case 211 is a hollow cylinder, an end face of the case 211 is an opening surface, i.e., the end face does not have a wall, so that the inside and outside of the case 211 are in communication with each other. The end cover 212 covers the opening and is connected with the case 211 to form an enclosed chamber in which the electrode assemblies 22 are placed. The case 211 is filled with electrolyte, such as an electrolyte solution; the case 211 may be made of various materials, such as copper, iron, aluminum, stainless steel, an aluminum alloy and plastic, which is not particularly limited in this embodiment of the present application.

The battery cell 20 may further include two electrode terminals 214, which may be provided on the end cover 212. The end cover 212 is generally in the shape of a flat plate, and the two electrode terminals 214 are fixed to the flat plate surface of the end cover 212. The two electrode terminals 214 are a positive electrode terminal 214a and a negative electrode terminal 214b respectively. Each of the electrode terminals 214 is provided with a corresponding connecting member 23, which may alternatively be referred to as a current collecting member, located between the end cover 212 and the electrode assembly 22 for electrically connecting the electrode assembly 22 and the electrode terminal 214.

As shown in Fig. 4, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or a plurality of electrode assemblies 22 is connected to one electrode terminal via one connecting member 23, and the second tab 222a of the one or a plurality of electrode assemblies 22 is connected to the other electrode terminal via the other connecting member 23. For example, the positive electrode terminal 214a is connected to the positive tab via one connecting member 23, and the negative electrode terminal 214b is connected to the negative tab via the other connecting member 23.

In this battery cell 20, according to actual use requirements, there may be a single or a plurality of electrode assemblies 22. As shown in Fig. 4, there are four separate electrode assemblies 22 in the battery cell 20.

A pressure relief mechanism 213 may also be provided on the battery cell 20. The pressure relief mechanism 213 is configured, when an internal pressure or temperature of the battery cell 20 reaches a threshold, to be actuated to release the internal pressure or heat. Specifically, the pressure relief mechanism 213 refers to an element or component that is actuated to release the internal pressure of the battery cell 20 when the internal pressure reaches a predetermined threshold. That is, when the internal pressure of the battery cell 2 reaches a predetermined threshold, the pressure relief mechanism 212 performs an action or is activated to a certain state, so that the internal pressure of the battery cell 20 can be released. The action produced by the pressure relief mechanism 212 may include, but is not limited to: at least part of the pressure relief mechanism 213 being broken, crushed, torn or opened, thus forming an opening or channel for releasing the internal pressure. At this point, high-temperature and high-pressure substances inside the battery cell 20 will be discharged as emissions outwards from the actuated part. In this way, the pressure of the battery cell 20 is capable of being released under controllable pressure, so as to prevent more serious potential accidents. The pressure relief mechanism 213 may take the form of an explosion-proof valve, an air valve, a pressure relief valve or a safety valve, and may specifically adopt a pressure-sensitive element or structure.

For example, the pressure relief mechanism 213 may be a temperature-sensitive pressure relief mechanism, and the temperature-sensitive pressure relief mechanism is configured to be capable of being melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being ruptured when the internal air pressure of the battery cell 20 provided with the pressure relief mechanism 213 reaches a threshold.

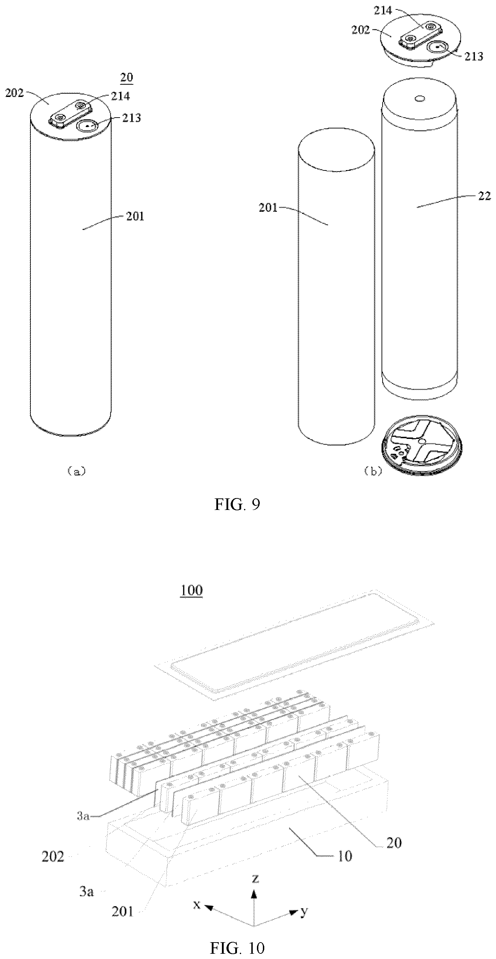

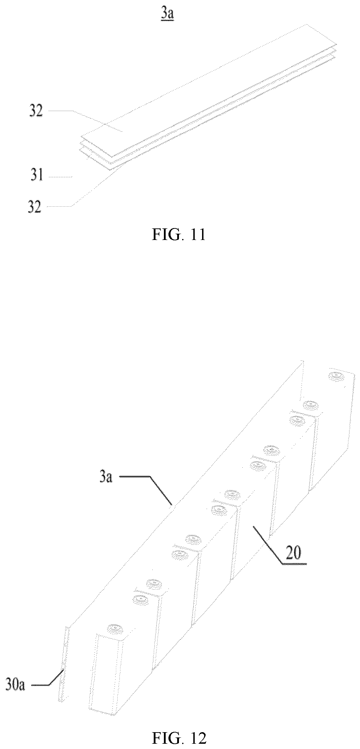

Fig. 10 and Fig. 11 show a schematic structural diagram of a battery cell 100 according to an embodiment of the present application.

The battery 100 includes a box 10, a battery cell 20 and a thermally conductive member 3a. The box 10 is provided with an accommodating cavity 10a. The battery cell 20 is located in the accommodating cavity 10a. The battery cell 20 includes a first wall 201 and a second wall 202. There is an included angle between the first wall 201 and the second wall 202. For example, the first wall 201 and the second wall 202 are not parallel, and the area of the first wall 201 is larger than the area of the second wall 202.

The battery 100 also includes a thermally conductive member 3a. The thermally conductive member 3a is disposed in the hollow cavity 10a. The thermally conductive member 3a is disposed opposite the first wall 201, and the thermally conductive member 3a is thermally conductively connected with the first wall 201, so that the thermally conductive member 3a exchanges heat with the battery cell 20, and the thermally conductive member 3a can be used to adjust the temperature of the battery cell 20.

It can be seen that the large surface of the battery cell 20, that is, the first wall 201, is thermally conductively connected with the thermally conductive member 3a, so that there is heat exchange between the thermally conductive member 3a and the battery cell 20 in the accommodating cavity 10a, and the heat exchange area between the thermally conductive member 3a and the battery cell 20 is large, so as to effectively utilize the thermally conductive member 3a to conduct the heat of the battery cell 20, thus improving the heat exchange efficiency between the thermally conductive member 3a and the battery cell 20, which can ensure that the temperature of the battery cell 20 is in a normal state, thus improving the service life and safety performance of the battery cells 20; moreover, when the battery 100 includes multiple battery cells 20, when a certain battery cell 20 undergoes thermal runaway, the heat generated by the battery cell 20 under thermal runaway will be taken away by the thermally conductive member 3a which exchanges heat with it, so as to reduce the temperature of the battery cell 20 under thermal runaway and avoid the thermal runaway problem of the adjacent battery cells 20, thus ensuring the safety performance of the battery cells 20. Of course, the battery 100 may also include one battery cell 20.

For example, when the temperature of the battery cell 20 is too high, the thermally conductive member 3a can cool the battery cell 20 to lower the temperature of the battery cell 20. When the temperature of the battery cell 20 is too low, the thermally conductive member 3a can heat the battery cell 20 to increase the temperature of the battery cell 20.

For example, the battery 100 has a plurality of battery cells 20, and the plurality of battery cells 20 are arranged along a second direction y. That is, the second direction y is the arrangement direction of a plurality of battery cells 20 in a row of battery cells 20 in the battery 100. That is, a row of battery cells 20 in the battery 100 is arranged along the second direction y, and the battery 100 has at least one row of battery cells 20. The number of battery cells 20 in a row of battery cells 20 may be 2-20, but this is not limited in the embodiment of the present application; the thermally conductive member 3a extends along the second direction y, and the thermally conductive member 3a is thermally conductively connected with the first wall 201 of each battery cell 20 of the plurality of battery cells 20, so that the first wall 201 of the battery cell 20 can face the thermally conductive member 3a, that is, the first wall 201 of the battery cell 20 can be parallel to the second direction y.

It can be understood that the first wall 201 can directly abut against the thermally conductive member 3a to achieve heat transfer between the battery cell 20 and the thermally conductive member 3a; or the first wall 201 can indirectly abut against the thermally conductive member 3a, for example, the first wall 201 abuts against the thermally conductive member 3a through a thermally conductive member such as thermally conductive adhesive, which can also realize heat transfer between the battery cell 20 and the thermally conductive member 3a. Obviously, the thermally conductive connection between the thermally conductive member 3a and the first wall 201 means that heat exchange can occur between the first wall 201 and the thermally conductive member 3a, ensuring the thermal management capability of the thermally conductive member 3a for the battery cell 20.

The battery 100 also includes a fixing member 90. The fixing member 90 connects the second wall 202 and the box 10 to fix the battery cell 20 in the accommodating cavity s. The fixing member 90 can support and fix the battery cell 20 to increase the structural strength of the battery 100, and at the same time, the connection between the fixing member 90 and the battery cell 20 will not affect the arrangement of the thermally conductive member 3a and the battery cell 20, thereby facilitating the assembly of the battery 100.

In some examples, the fixing member 90 may also be referred to as a stabilizing assembly.

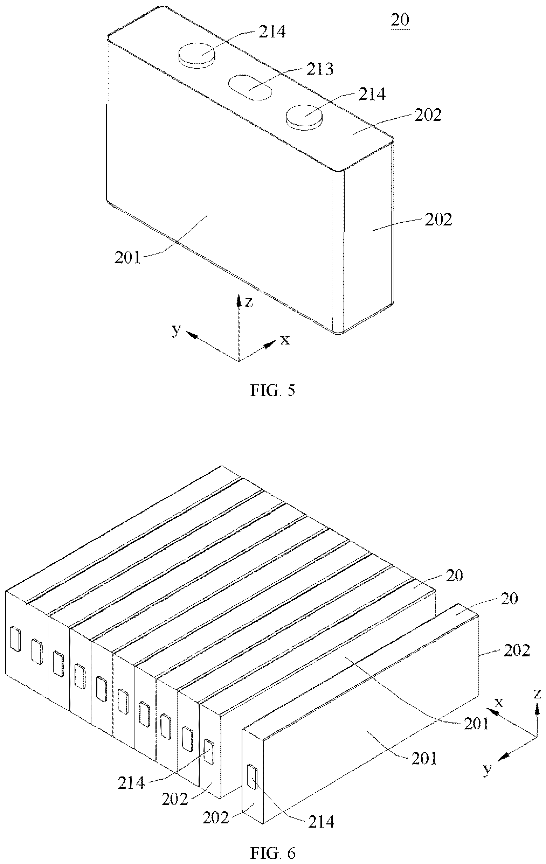

In some embodiments, as shown in Figs. 5, 6, 9, and 10, the first wall 201 is the wall with the largest area in the battery cell 20, and the first wall 201 can be understood as a "large surface" of the battery cell 20 to effectively increase the heat exchange area between the thermally conductive member 3a and the battery cell 20, thereby increasing the heat exchange efficiency between the thermally conductive member 3a and the battery cell 20.

In some embodiments, the electrode terminal 214 of the battery cell 20 is disposed on the second wall 202, and the electrode terminal 214 is disposed on the wall of the battery cell 20 other than the first wall 201 that forms an included angle with the first wall 201, to facilitate the arrangement of the electrode terminal 214 and to facilitate the avoidance of the electrode terminal 214 and the thermally conductive member 3a, so that the thermally conductive member 3a does not need to be provided with an avoidance portion for avoiding the electrode terminal 214, which is conducive to simplifying the structure of the thermally conductive member 3a.

For example, if the first wall 201 is the wall with the largest area in the battery cell 20, the second wall 202 is not the wall with the largest area in the battery cell 20. The electrode terminal 214 is provided on the second wall 202 to ensure the temperature control efficiency of the thermally conductive member 3a on the battery cell 20.

Alternatively, in the example of Fig. 6, the battery cell 20 may be a blade battery, the length of the battery cell 20 > the width of the battery cell 20 > the height of the battery cell 20, the length of the battery cell 20 in the second direction y > the width of the battery cell 20 in the vertical direction z > the height of the battery cell 20 in the first direction x, the first wall 201 is located at one end of the battery cell 20 in the height direction, the electrode terminal 214 is provided on the second wall 202, and the electrode terminal 214 may be located at one or both ends of the battery cell 20 in the length direction, and/or the electrode terminal 214 may be located at one or both ends of the battery cell 20 in the width direction.

In some embodiments, as shown in Fig. 5, the second wall 202 and the first wall 201 are arranged to intersect, the first wall 201 and the second wall 202 are not parallel, and the first wall 201 and the second wall 202 have a common line.

Optionally, the battery cell 20 is roughly formed as a cuboid structure, the length of the battery cell 20 is greater than the width of the battery cell 20 and the height of the battery cell 20, the first wall 201 is located on the side of the battery cell 20 in the first direction x, at least one of the two sides of the battery cell 20 in the second direction y has a second wall 202, and at least one of the two sides of the battery cell 20 in the vertical direction z has a second wall 202. The electrode terminal 214 can be disposed on the second wall 202 of the battery cell 20 in the vertical direction z; of course, as shown in Fig. 6, the electrode terminal 214 can also be disposed on the second wall 202 of the battery cell 20 in the second direction y. The first direction x, the second direction y and the vertical direction z are perpendicular to each other.

Alternatively, in the example of Fig. 6, the battery cell 20 may be a blade battery, the length of the battery cell 20 > the width of the battery cell 20 > the height of the battery cell 20, the length of the battery cell 20 in the second direction y > the width of the battery cell 20 in the vertical direction z > the height of the battery cell 20 in the first direction x, the first wall 201 is located at one end of the battery cell 20 in the height direction, the electrode terminal 214 is provided on the second wall 202, and the electrode terminal 214 may be located at one or both ends of the battery cell 20 in the length direction, and/or the electrode terminal 214 may be located at one or both ends of the battery cell 20 in the width direction.

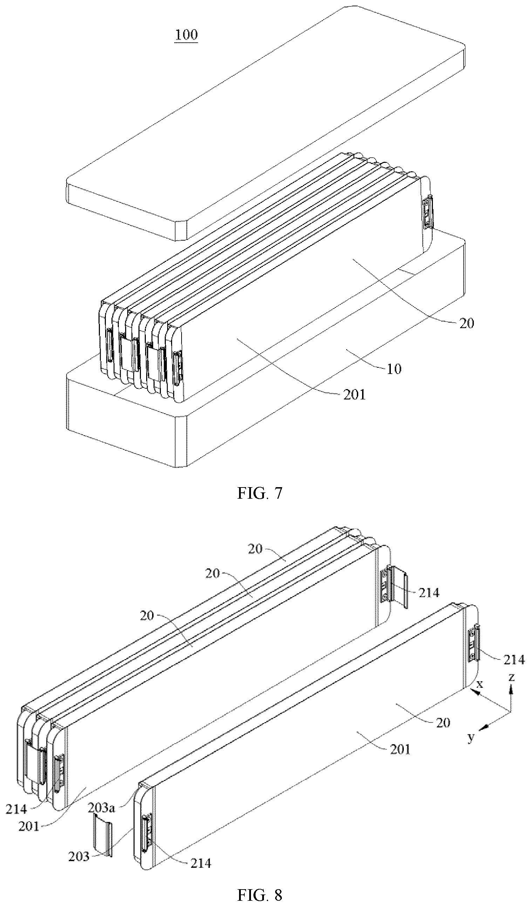

Of course, in the present application, the location of the electrode terminal 214 is not limited to this. As shown in Figs. 7 and 8, the electrode terminals 214 of the battery cell 20 can also be provided on the first wall 201, which also facilitates the arrangement of the electrode terminals 214; for example, the battery cell 20 is a One-Stop battery cell. It can be seen that the battery 100 in the embodiment of the present application has good flexibility in the location of the electrode terminal 214.

In some embodiments, as shown in Fig. 8, there are a plurality of battery cells 20, and the plurality of battery cells 20 are arranged in the first direction x. In the first direction x, each battery cell 20 is provided with a first surface 203 opposite to the first wall 201. The first surface 203 is provided with an avoidance groove 203a. The avoidance groove 203a of one of two adjacent battery cells 20 is used to accommodate the electrode terminals 214 of the other battery cell 20. The first direction x is perpendicular to the first wall 201, so as to achieve a compact arrangement of the plurality of battery cells 20 in the first direction and save space.

In some embodiments, as shown in Figs. 4-6, the electrode terminal 214 is provided on the second wall 202, and the battery cell 20 includes two first walls 201 oppositely arranged and two second walls 202 oppositely arranged, at least two electrode terminals 214 are provided, and the plurality of electrode terminals 214 include a positive electrode terminal 214a and a negative electrode terminal 214b.

Among them, at least two electrode terminals 214 are disposed on the same second wall 202 to help save the space occupied by the battery cell 20 on the premise of ensuring that adjacent electrode terminals 214 have appropriate spacing; or, each second wall 202 is provided with at least one electrode terminal 214 such that electrode terminals 214 located on different second walls 202 have sufficient spacing.

For example, in the examples of Figs. 4 and 5, the battery cell 20 includes two first walls 201 oppositely arranged along the first direction x and two second walls 202 oppositely arranged along the vertical direction z. The vertical direction z is not parallel to the first direction x, for example, the vertical direction z is perpendicular to the first direction x; and the plurality of electrode terminals 214 are all located on the same second wall 202 of the battery cell 20 in the vertical direction z.

In some embodiments, the electrode terminal 214 is disposed on the second wall 202 of the battery cell 20 in the second direction y, or the electrode terminal 214 is disposed on the second wall 202 of the battery cell 20 in the vertical direction z.

In the example of Fig. 11, the electrode terminal 214 is provided on the second wall 202 of the battery cell 20 facing the bottom wall 102 of the accommodating cavity 10a in the vertical direction.

Of course, for a cuboid-shaped battery cell 20, the battery cell 20 may also include two second walls 202 oppositely arranged along the second direction y, the second direction y is not parallel to the first direction, for example, the second direction y is perpendicular to the first direction; and the plurality of electrode terminals 214 are all located on the same second wall 202 of the battery cell 20 in the second direction y.

Regardless of whether the plurality of electrode terminals 214 are located on one side of the battery cell 20 in the second direction y or on one side of the battery cell 20 in the vertical direction z, when there are multiple battery cells 20 and the multiple battery cells 20 are arranged sequentially along the second direction y, the second walls 202 of two adjacent battery cells 20 face each other in the second direction y.

It should be noted that in the present application, the first wall 201 may be a flat surface or a curved surface, and the second wall 202 may be a flat surface or a curved surface.

In some embodiments, as shown in Fig. 9, the first wall 201 is formed in a cylindrical shape; in this case, the battery cell 20 may be substantially a cylindrical battery cell.

In some embodiments, as shown in Fig. 9, second walls 202 are provided at both axial ends of the first wall 201, and at least one second wall 202 is provided with the electrode terminal 214 of the battery cell 20, then all electrode terminals 214 of the battery cell 20 are provided on one of the second walls 202, or at least one electrode terminal 214 of the battery cell 20 is provided on one of the second walls 202, and the remaining electrode terminals 214 of the battery cell 20 are provided on the other second wall 202. Thus, the flexible arrangement of the electrode terminals 214 is facilitated.

In some embodiments, as shown in Fig. 9, one of the second walls 202 is provided with an exposed electrode terminal 214, and the electrode assembly 22 of the battery cell 20 includes a positive electrode plate 221 and a negative electrode plate 222. One of the positive electrode plate 221 and the negative electrode plate 222 is electrically connected to the electrode terminal 214, and the other of the positive electrode plate 221 and the negative electrode plate 222 is electrically connected to the first wall 201, so as to realize normal power supply of the battery cell 20.

Of course, the other one of the positive electrode plate 221 and the negative electrode plate 222 can also be electrically connected to the other second wall 202, that is, the second wall 202 provided with the exposed electrode terminal 214 is not the same wall as the second wall 202 electrically connected with the other one of the positive electrode plate 221 and the negative electrode plate 222, which is also convenient for realizing normal power supply of the battery cell 20.

In some embodiments, the battery cell 20 further includes a third wall, and the third wall is connected to the first wall 201 and/or the second wall 202. For example, the third wall is connected to the first wall 201 but not to the second wall 202, or the third wall is connected to the second wall 202 but not to the first wall 201, or the third wall is connected to both the first wall 201 and the second wall 202. Here, the electrode terminal 214 of the battery cell 20 is disposed on the third wall, then the electrode terminal 214 can be disposed on any wall of the battery cell 20 other than the first wall 201 and the second wall 202 and connected to one of the first wall 201 and the second wall 202, further achieving flexible arrangement of the electrode terminal 214.

Optionally, the third wall is connected to the first wall 201 but not to the second wall 202, and in this case, the third wall can be disposed adjacent to the first wall 201, and the third wall is disposed opposite to the second wall 202, but it is not limited to this. The third wall is connected to the second wall 202 but not to the first wall 201, and in this case, the third wall can be arranged adjacent to the second wall 202, and the third wall is arranged opposite to the first wall 201, but it is not limited to this. The third wall is connected to both the first wall 201 and the second wall 202, and in this case, the third wall is adjacent to both the first wall 201 and the second wall 202.

In some embodiments, the battery cell 20 includes third walls arranged oppositely, and at least two electrode terminals 214 are provided. The plurality of electrode terminals 214 includes a positive electrode terminal 214a and a negative electrode terminal 214b.

Among them, at least two electrode terminals 214 are disposed on the same third wall to help save the space occupied by the battery cell 20 on the premise of ensuring that adjacent electrode terminals 214 have appropriate spacing; or, each third wall is provided with at least one electrode terminal 214 such that electrode terminals 214 located on different third walls have sufficient spacing.

For example, the battery cell 20 is of a cuboid structure. The battery cell 20 includes first walls 201 oppositely arranged along a first direction, second walls 202 oppositely arranged along a second direction, and third walls arranged oppositely along the vertical direction. Among them, the first direction is perpendicular to the first wall 201, and the first direction, the second direction and the vertical direction are perpendicular to each other.

In some embodiments, the area of the third wall is less than or equal to that of the first wall 201, and/or the area of the third wall is less than or equal to that of the second wall 202. It can be seen that the requirement for the location of the third wall is low, which further facilitates flexible arrangement of the electrode terminal 214.

For example, the third wall is connected to the first wall 201 but not to the second wall 202, and in this case, the area of the third wall may be less than or equal to the area of one of the first wall 201 and the second wall 202. The third wall is connected to the second wall 202 but not to the first wall 201, and in this case, the area of the third wall may be less than or equal to the area of one of the first wall 201 and the second wall 202. The third wall is connected to both the first wall 201 and the second wall 202, and in this case, the area of the third wall may be less than or equal to the area of one of the first wall 201 and the second wall 202.

Exemplary, the battery cell 20 is of a cuboid structure, the battery cell 20 includes first walls 201 arranged oppositely in a first direction, second walls 202 arranged oppositely in a second direction, and third walls arranged oppositely in the vertical direction, and the length of the battery cell 20 in the second direction > the width of the battery cell 20 in the vertical direction > the height of the battery cell 20 in the first direction. At this time, the area of the first wall 201 > the area of the third wall > the area of the second wall 202.

In some embodiments, at least one battery cell 20 is a pouch battery cell. When the battery 100 includes one battery cell 20, the battery cell 20 is a pouch battery cell; and when the battery 100 includes a plurality of battery cells 20, at least one of the plurality of battery cells 20 is a pouch battery cell. Therefore, it is convenient to enrich the types and structures of the battery 100 and the layout of the battery cells 20, so as to help the battery 100 meet the actual differentiated requirements.

In some embodiments, as shown in Figs. 4 and 5, the battery cell 20 further includes a pressure relief mechanism 213, and the pressure relief mechanism 213 and the electrode terminal 214 of the battery cell 20 are disposed on the same wall of the battery cell 20. For example, the pressure relief mechanism 213 and the electrode terminal 214 are both disposed on the second wall 202. For example, the pressure relief mechanism 213 and the electrode terminal 214 are both disposed on the first wall 201. For another example, the pressure relief mechanism 213 and the electrode terminal 214 are both disposed on the third wall.

Of course, in other embodiments of the present application, the battery cell 20 also includes a pressure relief mechanism 213. The pressure relief mechanism 213 and the electrode terminal 214 of the battery cell 20 are respectively disposed on two walls of the battery cell 20. For example, the electrode terminal 214 is provided on the first wall 201, and the pressure relief mechanism 213 is provided on the second wall 202 or the third wall. For another example, the electrode terminal 214 is provided on the second wall 201, and the pressure relief mechanism 213 is provided on the first wall 201 or the third wall.

Therefore, the location of the pressure relief mechanism 213 relative to the electrode terminal 214 has a certain degree of flexibility.

In some embodiments, the thermally conductive member 3a is fixedly connected to the first wall 201 to realize the connection between the thermally conductive member 3a and the battery cell 20, and to ensure a reliable connection between the battery cell 20 and the thermally conductive member 3a; at the same time, when there are at least two battery cells 20 and the thermally conductive member 3a is connected to the first walls 201 of at least two battery cells 20, the at least two battery cells 20 can be connected as a whole through the thermally conductive member 3a. In this case, the battery 100 does not need to be provided with side plates or structures such as beams, so that the space utilization inside the battery 100 can be greatly improved, and the energy density of the battery 100 can be improved. At this time, the thermally conductive member 3a may also be called a reinforcing member.

Of course, the thermally conductive member 3a can also be fixedly connected to other walls of the battery cell 20, which is not limited to the first wall 201.

In some embodiments, the thermally conductive member 3a is bonded to the first wall 201 through the first adhesive layer, so that the thermally conductive member 3a is bonded to the first wall 201 to achieve a reliable and stable connection between the thermally conductive member 3a and the battery cell 20. This ensures that the battery 100 as a whole has a certain rigidity and strength, and at the same time, consumables and the overall weight are reduced, which facilitates the lightweight design of the battery 100, and the structure is simple, thus making the structure more compact and convenient for processing and assembly.

Optionally, the first adhesive layer may include a thermally conductive structural adhesive, which not only has good bonding strength and peel strength, but also has thermal conductivity, aging resistance, fatigue resistance, corrosion resistance and other properties, which can improve the connection strength between the battery cell 20 and the thermally conductive member 3a and the thermal management efficiency, making the heat transfer between the battery cell 20 and the thermally conductive member 3a more rapid. Of course, the first adhesive layer also includes double-sided tape.

It should be understood that the thermally conductive member 3a and the first wall 201 can also be connected through other methods, such as riveting, welding, etc., which is not limited in the present application.

Optionally, the thermally conductive member 3a can also be clamped between battery cells 20 in adjacent rows by abutting against the first wall 201.

In some embodiments, the bottom of the thermally conductive member 3a is bonded to the bottom wall 102 of the accommodating cavity 10a through a second adhesive layer, so that the bottom of the thermally conductive member 3a is bonded to the bottom wall 102 of the accommodating cavity 10a, so as to realize the fixed connection between the thermally conductive member 3a and the bottom wall 102 of the accommodating cavity 10a. The structure is simple and convenient for processing and assembly. At this time, the thermally conductive member 3a is bonded and fixed with the first wall 201 and the bottom 02 wall of the accommodating cavity 10a, respectively, to ensure the reliable installation of the thermally conductive member 3a.

In some embodiments, the fixing member 90 includes a third adhesive layer, and the second wall 202 of the battery cell 20 is bonded to the box 10 through the third adhesive layer to achieve a fixed connection between the battery cell 20 and the box 10. The structure is simple and convenient for processing and assembly, and at the same time, it is convenient to realize cooling at the large surface and fixing at the small surface.

For example, the second wall 202 of the battery cell 20 is the bottom wall of the battery cell 20 facing the bottom of the accommodating cavity 10a. The second wall 202 is bonded to the bottom wall 102 of the accommodating cavity 10a through a third adhesive layer, so that the bottom of the battery cell 20 is bonded to the bottom wall 102 of the accommodating cavity 10a to achieve a fixed connection between the battery cell 20 and the bottom wall 102 of the accommodating cavity 10a; at this time, the thermally conductive member 3a is bonded and fixed to the first wall 201, the battery cell 20 is bonded and fixed to the bottom wall 102 of the accommodating cavity 10a, and the thermally conductive member 3a is indirectly fixedly connected to the bottom wall 102 of the accommodating cavity 10a through the battery cell 20.

Of course, the second wall 202 can also be the wall of the battery cell 20 facing the side of the box 10; or, the second wall 202 can also be the top wall of the battery cell 20 facing the top of the box 10. In this case, the second wall 202 is bonded to the top wall 101 of the accommodating cavity s through a third adhesive layer.

Optionally, the battery 100 may also include pressure strips, which are fixedly connected to the box 10, and the pressure strips are bonded and fixed to the top wall of the battery cell 20 facing the top of the box 10, so that the top of the battery cell 20 can be fixedly connected to the top of the box through the pressure strips. Of course, if the fixing strength between the battery cell 20 and the box 10 (for example, by bonding fixation) can meet requirements, there is no need to provide pressure strips.

For example, the battery 100 includes a plurality of battery groups 20A arranged sequentially along a first direction, and each battery group 20a includes a plurality of battery cells 20 arranged along a second direction y. The pressure strips may extend along the first direction, and each pressure strip may be bonded and fixed with one battery cell 20 in each battery group 20A.

In some embodiments, the bottom of the thermally conductive member 3a is bonded to the bottom wall 102 of the accommodating cavity 10a through a second adhesive layer, the fixing member 90 includes a third adhesive layer, and the second wall 202 of the battery cell 20 is bonded to the box 10 through the third adhesive layer.

In some embodiments, at least part of the heat of the battery cell 20 can be transferred to the thermally conductive member 3a through the first adhesive layer, and the thickness of the first adhesive layer is less than or equal to the thickness of the second adhesive layer, so as to reduce the heat transfer resistance between the battery cell 20 and the thermally conductive member 3a and ensure the heat transfer efficiency between the battery cell 20 and the thermally conductive member 3a on the premise of ensuring the reliable connection between the battery cell 20 and the thermally conductive member 3a and the reliable connection between the thermally conductive member 3a and the bottom wall 102 of the accommodating cavity 10a.

In some embodiments, the thickness of the first adhesive layer is less than or equal to the thickness of the third adhesive layer, so as to reduce the heat transfer resistance between the battery cell 20 and the thermally conductive member 3a and ensure the heat transfer efficiency between the battery cell 20 and the thermally conductive member 3a on the premise of ensuring that the battery cell 20 is reliably connected with the thermally conductive member 3a and the box 10, respectively.

In some embodiments, the thickness of the first adhesive layer is less than or equal to the thickness of the second adhesive layer, and the thickness of the first adhesive layer is less than or equal to the thickness of the third adhesive layer, then the thickness of the first adhesive layer, the thickness of the second adhesive layer, and the thickness of the third adhesive layer are set reasonably to ensure reasonable distribution and utilization of the adhesive and to achieve reliable placement of the battery cell 20 and the thermally conductive member 3a in the accommodating cavity 10a.

In some embodiments, the thermal conductivity of the first adhesive layer is greater than or equal to the thermal conductivity of the second adhesive layer, and at least part of the heat of the battery cell 20 can be transferred to the thermally conductive member 3a through the first adhesive layer, so as to reduce the heat transfer resistance between the battery cell 20 and the thermally conductive member 3a and ensure the heat transfer efficiency between the battery cell 20 and the thermally conductive member 3a on the premise of ensuring the reliable connection between the battery cell 20 and the thermally conductive member 3a and the reliable connection between the thermally conductive member 3a and the box 10.

In some embodiments, the thermal conductivity of the first adhesive layer is greater than or equal to the thermal conductivity of the third adhesive layer, so as to reduce the heat transfer resistance between the battery cell 20 and the thermally conductive member 3a and ensure the heat transfer efficiency between the battery cell 20 and the thermally conductive member 3a on the premise of ensuring that the battery cell 20 is reliably connected with the thermally conductive member 3a and the box 10, respectively.

Of course, part of the heat of the battery cell 20 can also be transferred to the box 10 through the third adhesive layer for dissipation.

In some embodiments, the thermal conductivity of the first adhesive layer is greater than or equal to the thermal conductivity of the second adhesive layer, and the thermal conductivity of the first adhesive layer is greater than or equal to the thermal conductivity of the second adhesive layer, so as to achieve reasonable distribution and utilization of the adhesive, ensure the stable arrangement of the battery cell 20 and the thermally conductive member 3a, and at the same time ensure the rapid dissipation of heat from the battery cell 20.

In some embodiments, the ratio between the thickness of the first adhesive layer and the thermal conductivity of the first adhesive layer is a first ratio, the ratio between the thickness of the second adhesive layer and the thermal conductivity of the second adhesive layer is a second ratio, and the ratio between the thickness of the third adhesive layer and the thermal conductivity of the third adhesive layer is a third ratio.

Here, the first ratio is less than or equal to the second ratio; and/or, the first ratio is less than or equal to the third ratio. Therefore, on the premise of ensuring the heat exchange effect of the battery cell 20, the adhesive is effectively and rationally utilized to facilitate the reasonable distribution of the adhesive.

In some embodiments, the material of the first adhesive layer and the material of the second adhesive layer are different; or the material of the first adhesive layer and the material of the third adhesive layer are different; or the material of the first adhesive layer, the material of the second adhesive layer, and the material of the third adhesive layer are respectively different.

In some embodiments, the battery 100 includes a plurality of battery modules 100a. The battery module 100a includes at least one row of battery groups 20A and at least one thermally conductive member 3a. The battery group 20A includes a row of multiple battery cells 20 arranged along the second direction y. The first wall 201 of each battery cell 20 of the battery group 20A is fixed and thermally conductively connected to the thermally conductive member 3a. There may be a plurality of battery groups 20A and a plurality of thermally conductive members 3a respectively. The plurality of battery groups 20A and the plurality of thermally conductive members 3a are alternately arranged along the first direction x, and the first direction is perpendicular to the first wall 201.

Optionally, the battery module 100a includes N battery groups 20A and N-1 thermally conductive members 3a, wherein the thermally conductive members 3a are disposed between two adjacent battery groups 20A, and N is an integer greater than 1. Taking N as 2 as an example, the plurality of battery modules 100a are arranged along the first direction x, and there are gaps between adjacent battery modules 100a. Of course, the thermally conductive member 3a can also be provided between the battery group 20A and the inner wall of the box 10.

In some embodiments, a row of battery cells 20 arranged along the second direction y may have only one side in the first direction x connected to the thermally conductive member 3a, or both sides in the first direction x may be connected to the thermally conductive member 3a, which is not limited in the embodiment of the present application.

In some embodiments, the thermally conductive member 3a is used to exchange heat with the battery cell 20 to ensure that the battery cell 20 has a suitable temperature. In this case, the thermally conductive member 3a may also be called a thermal management component 3b, and the thermal management component 3b is also used to exchange heat with the battery cell 20 so that the battery cell 20 has a suitable temperature.

In some embodiments, the thermally conductive member 3a includes metallic materials and/or non-metallic materials, so that the thermally conductive member 3a has flexible material selection settings, enabling the thermally conductive member 3a to have other good performance in addition to good thermal conductivity, so as to better meet practical differentiated needs.

In some embodiments, as shown in Figs. 10-13, the thermally conductive member 3a includes a metal plate 31 and an insulating layer 32, and the insulating layer 32 is disposed on the surface of the metal plate 31. With this arrangement, the metal plate 31 can ensure the strength of the thermally conductive member 3a, and the insulating layer 32 can make the surface of the thermally conductive member 3a connected to the first wall 201 be an insulating surface, avoiding the electrical connection between the metal plate 31 and the battery cell 20, so as to ensure electrical insulation in the battery 100.

Optionally, the insulating layer 32 may be an insulating film bonded to the surface of the metal plate 31 or an insulating paint coated on the surface of the metal plate 31.

In some embodiments, the thermally conductive member 3a is a non-metallic material plate; that is, the thermally conductive member 3a is entirely made of non-metallic insulating material. Of course, in its embodiment, a part of the thermally conductive member 3a is made of non-metallic material.

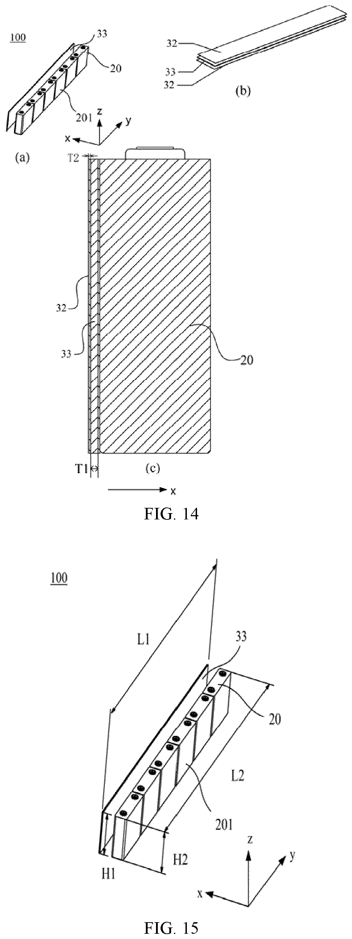

In some embodiments, as shown in Figs. 14, 15 and 30, there are a plurality of battery cells 20, and the plurality of battery cells 20 are arranged along the second direction y; the thermally conductive member 3a includes a partition plate 33, the partition plate 33 extends along the second direction y, the partition plate 33 is connected to the first wall 201 of each of the plurality of battery cells 20, and the second direction y is parallel to the first wall 201.

Therefore, the first wall 201 with the largest surface area of each battery cell 20 among the plurality of battery cells 20 is connected with the partition plate 33, and the plurality of battery cells 20 are connected into a whole through the partition plate 33, then there is no need to install side plates or structures such as beams in the battery 100, so that the space utilization in the battery 100 can be greatly improved, and the energy density of the battery 100 can be improved.

As the battery is used, the blue film on the surface of the battery cells is easily damaged. When the blue film is damaged, insulation failure occurs between adjacent battery cells and between the battery cells and the box, and the risk of short circuit of the battery increases. In order to adjust the temperature of the battery cells, a water-cooling plate or heating plate is installed between adjacent battery cells. The surface of the water-cooling plate or heating plate has no insulation protection, and the water vapor inside the battery is easily liquefied on the water-cooling plate or heating plate. When the blue film is damaged, the risk of short circuit of the battery is further increased.

Based on the above considerations, in order to alleviate the problem of short circuit of the battery due to damage of the blue film, the inventor has conducted in-depth research and set the thermally conductive member 3a to further include an insulating layer 32 for insulating and isolating the first wall 201 of the battery cell 20 and the partition plate 33.

The insulating layer 32 is arranged on the surface of the partition plate 33 and is not easily damaged by the expansion of the shape of the battery cell or self-heating. In the case that there is no insulating structure on the surface of the battery cell or the blue film on the surface of the battery cell is damaged, when the water vapor inside the battery cell is liquefied on the surface of the partition plate, the insulating layer 32 provided on the surface of the partition plate 33 can play an insulating role between the battery cell 20 and the partition plate 33, which is beneficial to alleviating the problem of short circuit of the battery 100 due to the damage of the blue film of the battery cell 20 or the liquefaction of water vapor on the surface of the partition plate 33, reducing the risk of short circuit of the battery 100, and improving the safety of electrical apparatuses.

The insulating layer 32 is connected to the surface of the partition plate 33, so that the insulating layer 32 can cover part or all of the surface of the partition plate 33.

In some embodiments, the partition plate 33 is used for heat exchange with the battery cell 20, in which case the partition plate 33 may also be called a thermal management component. The thermal management component is a structure that exchanges heat with the battery cell 20, such as a heating resistance wire, a thermally conductive part with heat exchange medium, and some materials that can undergo chemical reactions and temperature changes according to the environmental changes. Heat exchange with the battery cell 20 is achieved through the temperature change of the thermal management component itself. In this case, if the temperature of the thermal management component is lower than the temperature of the battery cell 20, the thermal management component can cool down the battery cell 20 to avoid thermal runaway due to excessive temperature of the battery cell 20; if the temperature of the thermal management component is higher than the temperature of the battery cell 20, the thermal management component can heat the battery cell 20 to ensure that the battery 100 can operate normally.

The thermal management component may also be a structure capable of accommodating a fluid medium, and heat is transferred between the battery cell 20 and the fluid medium through the thermal management component and the insulating layer 32, thereby achieving heat exchange between the battery cell 20 and the fluid medium. The fluid medium can be liquid (e.g., water) or gas (e.g., air). In this case, if the temperature of the fluid medium accommodated inside the thermal management component is lower than the temperature of the battery cell 20, the thermal management component can cool down the battery cell 20 to avoid thermal runaway due to excessive temperature of the battery cell 20; if the temperature of the fluid medium accommodated inside the thermal management component is higher than the temperature of the battery cell 20, the thermal management component can heat the battery cell 20 to ensure that the battery 100 can operate normally.

Alternatively, the partition plate 33 can be provided on one side of the battery cell 20 and between the battery cell 20 and the box 10, or between two adjacent battery cells 20.

In some embodiments, the insulating layer 32 may only insulate and isolate the battery cell 20 from the partition plate 33. In some other embodiments, the insulating layer 32 not only can insulate and isolate the battery cell 20 from the partition plate 33, but also can insulate and isolate the partition plate 33 from the inner wall of the box 10, further reducing the risk of short circuit of the battery 100, thereby further improving the safety of the battery 100.

For example, a plurality of battery cells 20 are stacked and arranged along the first direction x, and a partition plate 33 can be provided between two adjacent battery cells 20. Insulating layers 32 are respectively provided on opposite sides of the partition plate 33, so that each battery cell 20 of two adjacent battery cells 20 is insulated and isolated from the partition plate 33 by the insulating layer 32.

For another example, along the stacking direction of the plurality of battery cells 20, a partition plate 33 may also be provided between the two battery cells 20 located at the ends and the inner wall of the box 10, and the insulating layer 32 connected to the partition plate 33 can only insulate and isolate the battery cell 20 from the partition plate 33; of course, the insulating layer 32 connected to the partition plate 33 can insulate and isolate the battery cell 20 from the partition plate 33, and can also insulate and isolate the partition plate 33 from the inner wall of the box 10, which further reduces the risk of short circuit of the battery 100, thereby further improving the safety of the battery 100.

In some embodiments, the thermal conductivity λ of the insulating layer 32 is greater than or equal to 0. 1W/(m • K), the insulating layer 32 has good thermal conductivity, so that the insulating layer 32 can transfer heat, and there is good thermal conduction performance between the battery cell 20 and the partition plate 33, thereby improving the heat exchange efficiency between the battery cell 20 and the partition plate 33. For example, when the partition plate 33 is a thermal management component 3b, it is convenient to effectively ensure that the battery cell 20 has a suitable temperature.

Thermal conductivity refers to the heat transferred through an area of 1 square meter of a 1m thick material in 1 hour under stable heat transfer conditions, with a temperature difference of 1 degree (K, °C) on both sides of the material, and the unit is watt/m·degree. (W/(m·K), where K can be replaced by °C).

In some embodiments, the density G of the insulating layer 32 is $\leq$ 1.5 g/cm$^3$.

Providing the insulating layer 32 on the surface of the partition plate 33 will increase the weight of the battery 100. The smaller the density of the insulating layer 32 is, the smaller the mass of the insulating layer 32 is. The greater the density of the insulating layer 32 is, the greater the mass of the insulating layer 32 is. The density G of the insulating layer 32 is $\leq 1.5$g/cm$^3$, which makes the weight of the insulating layer 32 small, thereby making the weight of the battery 100 small, and reducing the impact of the arrangement of the insulating layer 32 on the weight of the battery 100, which is beneficial to the lightweight of the battery 100.

In some embodiments, the compressive strength P of the insulating layer 32 satisfies $0.01Mpa \leq P \leq 200Mpa$, which can make the insulating layer 32 have a certain elasticity and can enable the insulating layer 32 to deform by itself when the battery cell 20 expands and deforms, so as to reduce the influence on the whole battery 100, or the elastic insulating layer 32 can also play a cushioning role through its own deformation when the battery 100 is subjected to impact, thereby playing a certain protective role for the battery cell 20 and improving the safety of the battery 100.

Compressive strength refers to the maximum compressive stress that a sample endures until it breaks or yields during a compression test.

There are many choices for the material of the insulating layer 32. For example, in some embodiments, the material of the insulating layer 32 includes at least one of polyethylene terephthalate, polyimide, and polycarbonate.

The material of the insulating layer 32 may include only one of polyethylene terephthalate, polyimide, and polycarbonate. In some other embodiments, the material of the insulating layer 32 may include two or three of polyethylene terephthalate, polyimide, and polycarbonate. For example, the insulating layer 32 includes a first insulating part and a second insulating parts that are stacked. The first insulating part is made of polyethylene terephthalate, and the second insulating part is made of polyimide; or the first insulating part is made of polyimide, and the second insulating part is made of polycarbonate; or the first insulating part is made of polyethylene terephthalate, and the second insulating part is made of polycarbonate. In still further embodiments, the insulating layer 32 includes a first insulating part, a second insulating part and a third insulating part that are stacked. The first insulating part is made of polyethylene terephthalate, the second insulating part is made of polyimide, and the third insulating part is made of polycarbonate.

Polyethylene terephthalate, polyimide, and polycarbonate have the advantages of good impact strength and heat aging resistance. Therefore, the material of the insulating layer 32 includes at least one of polyethylene terephthalate, polyimide, and polycarbonate. The insulating layer 32 has the advantages of good impact strength and good heat aging resistance. In addition, the thermal conductivity of polyethylene terephthalate is generally 0.24W/m•K, the thermal conductivity of polyimide is generally 0.1-0.5W/m•K, and the thermal conductivity of polycarbonate is generally 0.16-0.25W/m•K. Therefore, all the three materials have good thermal conductivity. If at least one of the three materials is used to form the insulating layer 32, the insulating layer 32 will have good thermal conductivity, which can improve the heat transfer performance and heat transfer efficiency between the battery cell 20 and the partition plate 33.

There are many ways to connect the insulating layer 32 to the partition plate 33. For example, in some embodiments, the insulating layer 32 is a coating applied on the surface of the partition plate 33. That is, the insulating layer 32 is connected to the partition plate 33 in a coating manner. In this case, the insulating layer 32 may or may not be connected to the battery cell 20. The insulating layer 32 is a coating applied onto the surface of the partition plate 33, which can make the insulating layer 32 adhere to the partition plate 33 more tightly, thereby improving the connection stability between the insulating layer 32 and the partition plate 33 and reducing the risk of the insulating layer 32 falling off from the partition plate 33.

For another example, in some other embodiments, the insulating layer 32 and the partition plate 33 are connected through an adhesive layer. The adhesive layer may be a glue layer disposed on the insulating layer 32 and/or the partition plate 33. After the adhesive layer bonds the partition plate 33 and the insulating layer 32, the adhesive layer is located between the partition plate 33 and the insulating layer 32. In this case, the insulating layer 32 may or may not be connected to the battery cell 20 through another adhesive layer. The insulating layer 32 and the partition plate 33 are connected through an adhesive layer, and the connection method is simple and convenient.

For another example, in some other embodiments, the insulating layer 32 is potted between the partition plate 33 and the battery cell 20. Potting is a process in which a liquid compound is poured into a device mechanically or manually, and then solidifies into a thermosetting polymer insulation material with excellent performance under normal temperature or heating conditions. The insulating layer 32 is provided between the partition plate 33 and the battery cell 20 by potting, which can strengthen the integrity of the overall structure formed by the battery cell 20, the insulating layer 32 and the partition plate 33, and improve the resistance to external impact and vibration.

In some embodiments, as shown in Fig. 14, the size T1 of the partition plate 33 in the first direction x is less than 0.5 mm, and the first direction x is perpendicular to the first wall 201. This can prevent the partition plate 33 from being too large in the first direction x and occupying too much space inside the battery 100, further improving the space utilization inside the battery 100, thereby increasing the energy density of the battery 100.

In some embodiments, in the vertical direction, the partition plate 33 has a first part, a second part and a third part arranged in sequence, the distance between the first part and the top wall of the battery cell 20 does not exceed 1/4 of the height of the battery cell 20 in the vertical direction, the distance between the third part and the top wall of the battery cell 20 does not exceed 1/4 of the height of the battery cell 20 in the vertical direction, and the dimension of the third part in the first direction x is T1.

In some embodiments, the dimension T1 of the partition plate 33 in the first direction x is not less than 0.05 mm. This can prevent the partition plate 33 from being unable to meet the strength requirements of the battery 100 because the size of the partition plate 33 in the first direction x is too small, that is, the thickness of the partition plate 33 is small and the rigidity of the partition plate 33 is small.

In some embodiments, as shown in Fig. 14(c), the insulating layer 32 is provided on the surface of the partition plate 33 to avoid electrical connection between the partition plate 33 and the battery cell 20 and improve the safety of the battery 100. Optionally, the insulating layer 32 may be an insulating film bonded to the surface of the partition plate 33 or an insulating paint coated on the surface of the partition plate 33.

In some embodiments, the size T2 of the insulating layer 32 in the first direction x satisfies: $0.01mm \leq T2 \leq 0.3mm$.

When the size T2 of the insulating layer 32 in the first direction x is too small, the insulating layer 32 cannot effectively avoid the electrical connection between the battery cell 20 and the partition plate 33, and the battery 100 will have poor insulation, which is a potential safety hazard. When the size T2 of the insulating layer 22 in the first direction x is too large, it will occupy too much space inside the battery 100, which is not conducive to improving the energy density of the battery 100. Therefore, the value of T2 is set to 0.01 mm to 0.3 mm, which can improve the energy density of the battery 100 and ensure the safety of the battery 100.

In the embodiment of the present application, the voltage E of the battery 100 and the size T2 of the insulating layer 32 in the first direction x satisfy: $0.01 \times 10^{-3}mm/V \leq T2/E \leq 3 \times 10^{-3}mm/V$.

The insulation effect of the insulating layer 32 is not only related to the thickness of the insulating layer 32, but also related to the thickness of the insulating layer 32 corresponding to unit voltage. When T2/E is too small, that is, the size T2 of the insulating layer 32 per unit voltage in the first direction x is too small, the insulating layer 32 cannot effectively prevent the electrical connection between the battery cell 20 and the partition plate 33, and the battery 100 will have poor insulation, posing safety risks. When T2/E is too large, that is, the size T2 of the insulating layer 32 per unit voltage in the first direction x is too large, it will occupy too much space inside the battery 100, which is not conducive to improving the energy density of the battery 100. Therefore, the value of T2/E is set to $0.01 \times 10^{-3} \sim 3 \times 10^{-3}mm/V$, which can improve the energy density of the battery 100 and ensure the safety of the battery 100.

In some embodiments, the area S1 of the surface of the partition plate 33 connected to the first walls 201 of the plurality of battery cells 20 and the total area S2 of the first walls 201 of the plurality of battery cells 20 connected to the same side of the partition plate 33 satisfy: $0.25 \leq S1/S2 \leq 4$, where S1=H1*L1 and S2=H2*L2. As shown in Fig. 15, H1 is the size of the partition plate 33 in a third direction, L1 is the size of the partition plate 33 in the second direction y, H2 is the size of a single battery cell 20 in the third direction, and L2 is the sum of sizes of the plurality of battery cells 20 in the second direction y. The third direction in the present application may be the vertical direction z.

When the value of S1/S2 is too small, that is, the area S1 of the surface of the partition plate 33 connected to the first walls 201 of the plurality of battery cells 20 is much smaller than the total area S2 of the first walls 201 of the plurality of battery cells 20 connected to the same side of the partition plate 33, the contact area between the first walls 201 and the partition plate 33 is too small to meet the strength requirements of the battery 100; when the area S1 of the surface of the partition plate 33 connected to the first walls 201 is much greater than the total area S2 of the first walls 201 of the plurality of battery cells 20 connected to the same side of the partition plate 33, compared with the battery cells 20, the partition plate 33 occupies too much space inside the battery 100, which is not conducive to improving the energy density of the battery 100. Therefore, the value of S1/S2 is set to 0.25-4 not only can increase the energy density of the battery 100 but also can increase the strength of the battery 100.

In some embodiments, as shown in Fig. 15, in the third direction, the size H1 of the partition plate 33 and the size H2 of the first wall 201 of the battery cell 20 satisfy: $0.2 \leq H1/H2 \leq 2$, and the third direction is perpendicular to the first direction x and the second direction y.

When H1/H2 is too small, that is, in the third direction, the size H1 of the partition plate 33 is much smaller than the size H2 of the first wall 201 of the battery cell 20, the contact area between the first wall 201 and the partition plate 33 is too small to meet the strength requirements of the battery 100; when H1/H2 is too large, that is, in the third direction, the size H1 of the partition plate 33 is much larger than the size H2 of the first wall 201 of the battery cell 20, compared with the battery cells 20, the partition plate 33 occupies too much space inside the battery 100, which is not conducive to improving the energy density of the battery 100. Therefore, the value of H1/H2 is set to 0.2-2, which not only can increase the energy density of the battery 100 but also can improve the strength of the battery 100.

In some embodiments, as shown in Fig. 15, in the second direction y, the size L1 of the partition plate 33 and the size L2 of the plurality of battery cells 20 satisfy: $0.5 \leq L1/L2 \leq 2$.

When L1/L2 is too small, that is, in the second direction y, the size L1 of the partition plate 33 is much smaller than the size L2 of the first wall 201 of the battery cell 20, the contact area between the first wall 201 and the partition plate 33 is too small to meet the strength requirements of the battery 100; when H1/H2 is too large, that is, in the second direction y, the size H1 of the partition plate 33 is much larger than the size L2 of the first wall 201 of the battery cell 20, compared with the battery cells 20, the partition plate 33 occupies too much space inside the battery 100, which is not conducive to improving the energy density of the battery 100. Therefore, the value of L1/L2 is set to 0.5-2, which not only can increase the energy density of the battery 100 but also can improve the strength of the battery 100.

Optionally, the end of the partition plate 33 in the second direction y is provided with a fixing structure 103, which is connected to a fixing component 104 of the end of the partition plate 33 in the second direction y to fix the partition plate 33.

Using the battery cell 20 and the partition plate 33 shown in Fig. 14, the vibration and impact resistance test of the partition plate is carried out under the standard of GB38031-2020 "Safety Requirements for Power Batteries for Electric Vehicles", and the test result is shown in Table 1. In Table 1, T1 is the size of the partition plate in the first direction x, H1 is the size of the partition plate in the third direction, L1 is the size of the partition plate in the second direction y, H2 is the size of a single battery cell in the third direction, L2 is the sum of sizes of the plurality of battery cells in the second direction y, S1=H1*L1, and S2=H2*L2.

Table 1

| T1(mm) | H2(mm) | L2(mm) | L1(mm) | H1(mm) | S1/S2 | L1/L2 | H1/H2 | Vibration and impact test result |
|---|---|---|---|---|---|---|---|---|
| 0.1 | 30 | 400 | 800 | 60 | 4 | 2 | 2 | No cracking, no fire or explosion |
| 0.5 | 30 | 400 | 200 | 15 | 0.25 | 0.5 | 1 | No cracking, no fire or explosion |
| 0.4 | 80 | 1148 | 1148 | 40 | 0.5 | 1 | 0.4 | No cracking, no fire or explosion |
| 0.4 | 80 | 1148 | 574 | 80 | 0.5 | 0.5 | 0.8 | No cracking, no fire or explosion |
| 0.2 | 112 | 1164 | 1224 | 100 | 0.94 | 1.05 | 0.19 | No cracking, no fire or explosion |
| 0.4 | 127 | 348 | 278.4 | 63.5 | 0.4 | 0.8 | 0.5 | No cracking, no fire or explosion |
| 0.4 | 127 | 348 | 174 | 63.5 | 0.25 | 0.5 | 0.8 | No cracking, no fire or explosion |
| 0.3 | 205 | 522 | 582 | 193 | 1.05 | 1.11 | 0.27 | No cracking, no fire or explosion |
| 0.5 | 205 | 522 | 417.6 | 102.5 | 0.4 | 0.80 | 0.625 | No cracking, no fire or explosion |

(continued)

| T1(mm) | H2(mm) | L2(mm) | L1(mm) | H1(mm) | S1/S2 | L1/L2 | H1/H2 | Vibration and impact test result |
|---|---|---|---|---|---|---|---|---|
| 0.1 | 112 | 776 | 836 | 100 | 0.96 | 1.08 | 0.09 | No cracking, no fire or explosion |
| 0.5 | 112 | 1164 | 1224 | 100 | 0.94 | 1.05 | 0.48 | No cracking, no fire or explosion |

Using the battery cell 20 and the partition plate 33 shown in Fig. 14 and Fig. 15, referring to IEC60664-1, 1000VDC was applied in the insulation test, and the insulation resistance was $\geq 500$ MS2; 2700VDC was applied in the withstand voltage test for 60S, and the insulation withstand voltage capability of the partition plate was tested under the condition that the leakage current was $\leq$1mA. The test results are shown in Table 2. In Table 2, T2 is the size of the insulating layer in the first direction x, and E is the battery voltage.

Table 2

| T2(mm) | U(V) | T2/U($10^{-3}$mm/V) | Insulation withstand voltage test result |
|---|---|---|---|
| 0.01 | 1000 | 0.01 | Insulation withstand voltage meets requirements |
| 0.3 | 1000 | 0.3 | Insulation withstand voltage meets requirements |
| 0.3 | 100 | 3 | Insulation withstand voltage meets requirements |
| 0.15 | 400 | 0.38 | Insulation withstand voltage meets requirements |
| 0.15 | 800 | 0.19 | Insulation withstand voltage meets requirements |
| 0.3 | 300 | 1 | Insulation withstand voltage meets requirements |
| 0.3 | 200 | 1.5 | Insulation withstand voltage meets requirements |
| 0.2 | 800 | 0.25 | Insulation withstand voltage meets requirements |
| 0.2 | 350 | 0.57 | Insulation withstand voltage meets requirements |

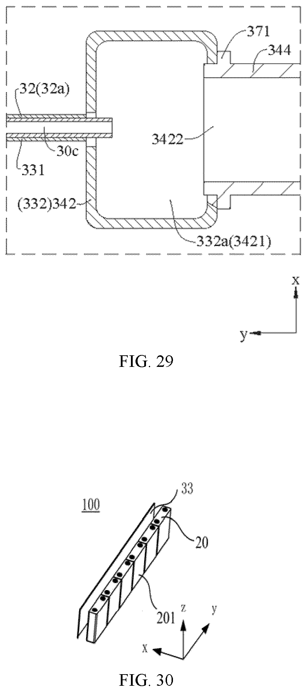

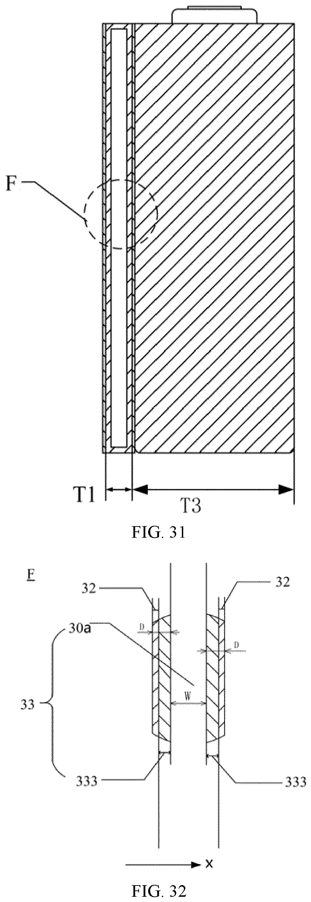

In some embodiments, as shown in Fig. 30 and Fig. 31, the size T1 of the partition plate 33 in the first direction x is greater than 5 mm, and the first direction is perpendicular to the first wall 201 to ensure that the partition plate 33 has good reliability in use.

For example, as shown in Fig. 30, the battery 10 includes a plurality of battery cells 20 arranged along the second direction Y and a partition plate 33. The partition plate 33 extends along the second direction Y and is connected to the first wall 201 of each of the plurality of battery cells 20.

In some embodiments, the size T1 of the partition plate in the first direction x is not greater than 100 mm.

When the size T1 of the partition plate in the first direction x is too large, it will occupy too much space inside the battery 100, which is not conducive to improving the energy density of the battery 100, so the value of T1 is set to not greater than 100mm, which can effectively improve the energy density of the battery 100.

In some embodiments, as shown in Fig. 31, the size T1 of the partition plate 33 in the first direction x and the size T3 of the battery cell 20 in the first direction x satisfy: $0.04 \leq T1/T3 \leq 2$.

When T1/T3 is too small, that is, the size T1 of the partition plate 33 in the first direction x is much smaller than the size T3 of the battery cell 20 in the first direction x, the deformation-absorbing capability of the partition plate 33 is weak and cannot match the expansion and deformation of the battery cell 20, which will reduce the performance of the battery cell 20 in use. When T1/T3 is too large, that is, the size T1 of the partition plate 33 in the first direction x is much larger than the size T3 of the battery cell 20 in the first direction x, the deformation-absorbing capability of the partition plate 33 is too strong, far exceeding the expansion and deformation space required by the battery cell 20. Compared with the battery cell 20, the partition plate 33 occupies too much space inside the battery 10, which is not conducive to improving the energy density of the battery 10. Therefore, the value of T1/T3 is set to 0.04-2, which not only can increase the energy density of the battery 10 but also can absorb the expansion and deformation of the battery cell 20.

In some embodiments, the outer surface of the partition plate 33 is provided with the insulating layer 32, and the size T2 of the insulating layer 32 in the first direction x is 0.01mm-0.3mm.

By disposing the insulating layer 32 on the outer surface of the partition plate 33, the electrical connection between the battery cell 20 and the partition plate 33 is avoided, and the safety of the battery 10 is improved. When the size T2 of the insulating layer 31 in the first direction x is too small, the insulating layer 32 cannot effectively prevent the electrical connection between the battery cell 20 and the partition plate 33, and the battery 100 will have poor insulation. When the size T2 of the insulating layer 32 in the first direction x is too large, it will occupy too much space inside the battery 100, which is not conducive to improving the energy density of the battery 100. Therefore, the value of T2 is set to 0.01mm-0.3mm, which not only can increase the energy density of the battery 100 but also can ensure effective insulation between the battery cell 20 and the partition plate 33.

Optionally, the end of the partition plate 33 in the second direction y is provided with a manifold element 106, the battery 100 is internally provided with a pipe 107, the pipe 107 is used to transport fluid, and the manifold element 106 is used to collect the fluid. For example, the connecting pipe group 42 described below may include the pipe 107.

Using the battery cell 20 and the partition plate 3333 shown in Figs. 30 to 34, a 1C/1C charge and discharge cycle was carried out at 60°C until the capacity decays to 80% SOC, and accelerated cycle durability test result was carried out. The test results are shown in Table 3. In Table 3, T1 is the size of the partition plate in the first direction x, and T3 is the size of the battery cell in the first direction x.

Table 3

| T3(mm) | T1(mm) | T1/T3 | Accelerated cycle durability test result |
| --- | --- | --- | --- |
| 125 | 5.1 | 0.041 | The structure is not damaged and there is no diving. |
| 26.5 | 6 | 0.226 | The structure is not damaged and there is no diving. |
| 12.5 | 25 | 2.000 | The structure is not damaged and there is no diving. |
| 47.4 | 5.1 | 0.108 | The structure is not damaged and there is no diving. |
| 44 | 20 | 0.455 | The structure is not damaged and there is no diving. |
| 44 | 60 | 1.364 | The structure is not damaged and there is no diving. |
| 70.7 | 70 | 0.990 | The structure is not damaged and there is no diving. |
| 10 | 15 | 1.500 | The structure is not damaged and there is no diving. |
| 44 | 30 | 0.682 | The structure is not damaged and there is no diving. |
| 10.72 | 6 | 0.085 | The structure is not damaged and there is no diving. |
| 10 | 6 | 0.6 | The structure is not damaged and there is no diving. |

In some embodiments, as shown in Figs. 10 to 13, since the thermally conductive member 3a is fixedly connected to the first walls 201 of one or more battery cells 20, in order to ensure the performance of the battery 100, the thermally conductive member 3a must take into account the strength requirements. The size of the thermally conductive member 3a in the first direction x is set to 0.1-100mm, and the first direction is perpendicular to the first wall 201, so as to balance strength and space requirements.

Specifically, when the size T5 of the thermally conductive member 3a in the first direction, that is, the thickness of the thermally conductive member 3a, is large, the strength of the thermally conductive member 3a is high; and when T5 is small, the occupied space is little. When T5<0.1mm, the thermally conductive member 3a is easy to be damaged under the action of external force, and when T5>100mm, too much space is occupied, which affects the energy density. Therefore, when the size T5 of the thermally conductive member 3a in the first direction x is 0.1-100 mm, the space utilization can be improved while ensuring the strength.

In some embodiments, the thermally conductive member 3a is provided in the battery 100 to be thermally conductively connected to the first wall 201 with the largest surface area of the battery cell 20 for conducting heat of the battery cell 20. The surface of the thermally conductive member 3a connected to the first wall 201 is an insulating surface to avoid electrical connection between the thermally conductive member 3a and the battery cell 20 and ensure electrical insulation in the battery 100; and the size of the thermally conductive member 3a in the first direction x perpendicular to the first wall 201 is 0.1-100mm. Here, the thermally conductive member 3a includes a partition plate 33, which is connected to the first wall 201 of each battery cell 20 of the plurality of battery cells 20 arranged along the second direction y, and the second direction is parallel to the first wall 201. In this way, the middle part of the box 10 of the battery 100 does not need to be provided with structures such as beams, which can greatly improve the space utilization inside the battery 100, thus increasing the energy density of the battery 100; at the same time, the use of the above-mentioned thermally conductive member 3a can also ensure electrical insulation and thermal conduction in the battery 100. Therefore, the technical solution of the embodiment of the present application can improve the energy density of the battery 100 while ensuring the electrical insulation and heat conduction in the battery 100, thereby improving the performance of the battery 100.

In some embodiments, the size T3 of the battery cell 20 in the first direction x and the size T5 of the thermally conductive member 3a in the first direction x satisfy:0<T5/T3≤7.

When T5/T3 is too large, the thermally conductive member 3a occupies much space and affects the energy density. In addition, if the thermally conductive member conducts heat for the battery cells 20 too quickly, safety issues may also arise. For example, thermal runaway of one battery cell 20 may cause thermal runaway of other battery cells 20 connected to the same thermally conductive member. When 0<T5/T3≤7, the energy density of the battery 100 can be guaranteed, and the safety performance of the battery 100 can be ensured.

In some embodiments, the size T3 of the battery cell 20 in the first direction x and the size T5 of the thermally conductive member 3a in the first direction x can further satisfy 0 <T5/T3≤1 to further increase the energy density of the battery 100 and ensure the safety performance of the battery 100.

In some optional embodiments, the weight M1 of the battery cell 20 and the weight M2 of the thermally conductive member 3a satisfy: 0<M2/M1≤20.

When M2/M1 is too large, gravimetric energy density will be lost. In the case of 0<M3/M2≤20, the gravimetric energy density of the battery 100 can be guaranteed, and the safety performance of the battery 100 can be ensured.

Optionally, in one embodiment of the present application, the weight M1 of the battery cell 20 and the weight M2 of the thermally conductive member 3a can further satisfy 0.1≤M2/M1≤1, so as to further improve the energy density of the battery 100 and ensure the safety performance of the battery 100.

In some embodiments, the area S3 of the first wall 201 and the area S4 of the surface of the thermally conductive member 3a connected to the first walls 201 of the plurality of battery cells 20 in one row satisfy 0.2≤S4/S3≤30.

S4 is the total area of one side surface of the thermally conductive member 3a connected to the battery cells 20. When S4/S3 is too large, the energy density is affected. When S4/S3 is too small, the thermal conduction effect is too poor, affecting the safety performance. When 0.2≤S4/S3≤30, the energy density of the battery 10 can be guaranteed, and the safety performance of the battery 10 can be ensured.

Optionally, S4 and S3 can further satisfy 2≤S4/S3≤10 to further enhance the energy density of the battery 100 and ensure the safety performance of the battery 100.

In some embodiments, the specific heat capacity C of the thermally conductive member 3a and the weight M3 of the thermally conductive member 3a satisfy: $0.02KJ/(kg^{2}*°C) \leq C/M3 \leq 100KJ/(kg^{2}*°C)$.

When $C/M3<0.02KJ/(kg^{2}*°C)$, the thermally conductive member 3a will absorb much energy, which will cause the temperature of battery cell 20 to be too low, and may cause lithium plating; when $C/M3>100KJ/(kg^{2}*°C)$, the heat conduction capability of the thermally conductive member 3a is poor, and the heat will not be taken away in time. When $0.02KJ/(kg^{2}*°C)≤C/M3≤100KJ/(kg^{2}*°C)$, the safety performance of the battery 100 can be guaranteed.

Optionally, C and M3 can further satisfy the following relationship:

$0.3KJ/(kg^{2}*°C)≤C/M3≤20KJ/(kg^{2}*°C)$, to further improve the safety performance of the battery 100.

In some embodiments, the battery 100 may include multiple battery modules 100a. The battery module 100a may include at least one row of multiple battery cells 20 arranged along the second direction y and at least one thermally conductive member 3a, and the at least one row of battery cells 20 and the at least one thermally conductive member 3a are alternately arranged in the first direction x. That is, for each battery module 100a, the battery cell rows and the thermally conductive members 3a therein are alternately arranged in the first direction x, and the multiple battery modules 100 are accommodated in the box 10 to form the battery 100.

Optionally, the battery module 100a includes two rows of battery cells 20, and one thermally conductive member 3a is disposed in the two rows of battery cells 20. There is no thermally conductive member 3a provided between adjacent battery modules 100a. In this way, it is feasible to dispose few thermally conductive members 3a in the battery 100 in this embodiment, but at the same time, it can be ensured that each battery cell 20 can be connected to the thermally conductive member 3a.

Optionally, multiple battery modules 100 are arranged along the first direction x, there is a gap between adjacent battery modules 100, and there is no thermally conductive member 3a between adjacent battery modules 100, then the gap between adjacent battery modules 100a can provide expansion space for the battery cells 20.

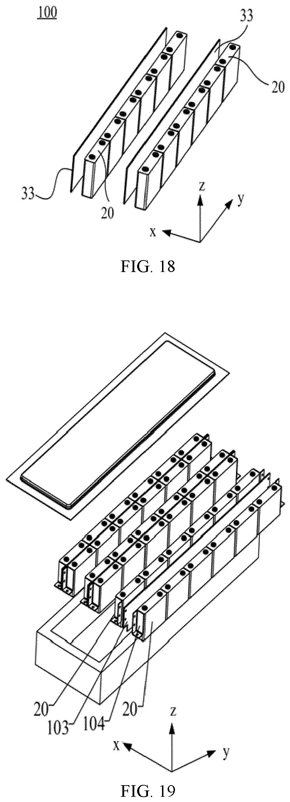

Optionally, the end of the thermally conductive member 3a in the first direction x is provided with a fixing structure 103, and the thermally conductive member 3a is fixed to the box 10 through the fixing structure 103. As shown in Fig. 19, the fixing structure 103 may include a fixing component 104, which is fixedly connected to the end of the thermally conductive member 3a and connected to the battery cell 20 located at the end of the thermally conductive member 3a, thereby enhancing the fixing effect of the battery cell 20.

Optionally, the battery cells 20 may be bonded and fixed to the box 11. Optionally, adjacent battery cells 20 in each row of battery cells 20 can also be bonded. For example, the second walls 2112 of two adjacent battery cells 20 are bonded through structural adhesive. However, this is not limited by the embodiment of the present application. The fixing effect of the battery cells 20 can be further enhanced by bonding and fixing the adjacent battery cells 20 in each row of battery cells 20.

Using the battery cells 20 and the thermally conductive members 3a shown in Figs. 10-13, the number of battery cells 20 in a row of battery cells 20 was set to 2-20, and the battery 10 was tested for safety according to GB38031-2020. The test results are shown in Tables 4-7. It can be seen that the battery 100 in the embodiment of the present application can meet the safety performance requirements.

Table 4

| No. | T5/mm | T3/mm | T5/T3 | Test result |
|---|---|---|---|---|
| 1 | 0.2 | 40 | 0.005 | No fire, no explosion |
| 2 | 0.4 | 50 | 0.008 | No fire, no explosion |
| 3 | 0.7 | 45 | 0.016 | No fire, no explosion |
| 4 | 4 | 10 | 0.4 | No fire, no explosion |
| 5 | 4 | 40 | 0.1 | No fire, no explosion |
| 6 | 45 | 15 | 3 | No fire, no explosion |
| 7 | 150 | 10 | 15 | Fire, explosion |

Table 5

| No. | M2/Kg | M1/Kg | M2/M1 | Test result |
|---|---|---|---|---|
| 1 | 0.2 | 3 | 0.068 | No fire, no explosion |
| 2 | 0.4 | 2.5 | 0.16 | No fire, no explosion |
| 3 | 0.7 | 1.5 | 0.467 | No fire, no explosion |
| 4 | 10 | 1.5 | 6.7 | No fire, no explosion |
| 5 | 15 | 1 | 15 | No fire, no explosion |

Table 6

| No. | S4/mm$^2$ | S3/mm$^2$ | S4/S3 | Test result |
|---|---|---|---|---|
| 1 | 3120 | 21728 | 0.14 | Fire, explosion |
| 2 | 19500 | 38800 | 0.5 | No fire, no explosion |
| 3 | 65000 | 16800 | 3.87 | No fire, no explosion |
| 4 | 130000 | 16576 | 7.84 | No fire, no explosion |
| 5 | 216000 | 9600 | 22.5 | No fire, no explosion |
| 6 | 250000 | 7200 | 34.72 | Fire, explosion |

Table 7

| No. | C/KJ/(Kg*°C) | M2/kg | C/M2 (KJ/(kg$^2$*°C)) | Test result |
|---|---|---|---|---|
| 1 | 0.39 | 25 | 0.016 | Fire, explosion |
| 2 | 0.46 | 5 | 0.092 | No fire, no explosion |
| 3 | 0.88 | 0.5 | 1.76 | No fire, no explosion |
| 4 | 4 | 0.4 | 10 | No fire, no explosion |
| 5 | 4 | 0.1 | 40 | No fire, no explosion |
| 6 | 4 | 0.025 | 160 | Fire, explosion |

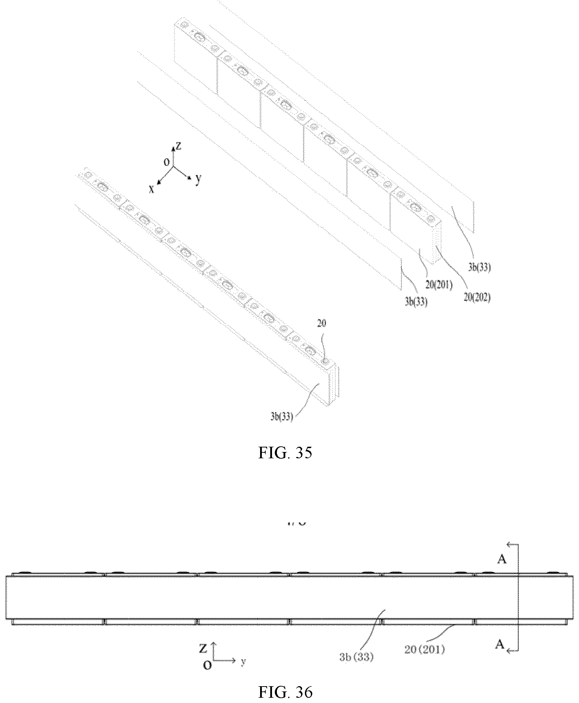

In some embodiments, as shown in Fig. 15 and Fig. 35, in the third direction, the size H1 of the partition plate 33 and the size H2 of the first wall 201 satisfy: $0.1 \leq H1/H2 \leq 2$, the third direction is perpendicular to the second direction, and the third direction is parallel to the first wall. In this way, the space utilization inside the battery 100 can be further greatly improved, thereby increasing the energy density of the battery 100.

In the third direction, the size H1 of the partition plate 33 may be the height of the partition plate 33, and the size H2 of the first wall 201 may be the height of the first wall 201. The relationship between H1 and H2 satisfies: $0.1 \leq H1/H2 \leq 2$.

When H1/H2<0.1, the heat exchange area between the battery cell 20 and the partition plate is small, and the battery cell 20 cannot be cooled or heated in time, making it difficult to meet the thermal management requirements of the battery.

When H1/H2>2, the heat management requirements of the battery 100 can be met, but the partition plate 33 occupies much space at this time, wasting the space utilization in the third direction, and thus it is difficult to guarantee the energy density requirements of the battery 100.

Optionally, H1/H2 can be 0.1, or 0.4, or 0.6, or 0.9, or 1.2, or 1.5, or 1.8, or 2, etc.

In some examples, the partition plate 33 is a thermal management component 3b, the thermal management component 3b is used to adjust the temperature of the battery cell 20, and the height of the thermal management component 3b in the third direction is H1.

Optionally, the thermal management component 3b may be a water-cooling plate, used to cool the battery cells 20 during fast charging or heat the battery cells 20 when the temperature is too low.

Optionally, the thermal management component 3b can be made of a material with good thermal conductivity, such as aluminum and other metal materials.

In some embodiments, the size H1 of the partition plate 33 and the size H2 of the first wall 201 also satisfy: $0.3 \leq H1/H2 \leq 1.3$. In this way, it can be ensured that during the fast charging process, the temperature of the battery cell 20 does not exceed 55°C.

Optionally, H1/H2 can be 0.3, or 0.5, or 0.8, or 1.0, or 1.1, or 1.3, etc.

Optionally, in an embodiment of the present application, the heat exchange area between the first wall 201 and the partition plate is S, and the relationship between the capacity Q of the battery cell 20 and the heat exchange area S satisfies: $0.03 Ah/cm^2 \leq Q/S \leq 6.66 Ah/cm^2$.

The heat exchange area S may be the contact area between the first wall 201 and the partition plate 33, and the heat exchange area S5 satisfies: S=H1*L, where L is the size of each battery cell 20 along the second direction y.

When Q/S<0.03Ah/cm2, the heat exchange area S is large enough to meet the thermal management requirements of the battery. However, at this time, the space occupied by the partition plate 33 is too large to meet the energy density requirements of the battery 100.

When Q/S>6.66Ah/cm2, the heat exchange area S is small, and the heat of the battery cell 20 cannot be timely transmitted out through the partition plate 33, and the battery cell 20 cannot be quickly cooled in a timely manner, which is difficult to meet the thermal management requirements.

By adjusting the relationship between the heat exchange area S and the capacity Q of the battery cell 20, the temperature of the battery cell 20 can be maintained in an appropriate range during the battery charging process, especially the fast charging process; in addition, when the capacity Q of the battery cell is constant, the heat exchange area S can be adjusted to flexibly meet the thermal management requirements of the battery.

In a possible implementation, the size H1 of the partition plate 33 is 1.5cm-30cm. In this way, it can be ensured that during the fast charging process of the battery, the temperature of the battery cell 20 does not exceed 55°C.

A charging test was carried out on the battery, and the test results are shown in Table 8-1.

Table 8-1 Temperature test during charging of battery cells and thermal management components of different specifications

| Q(Ah) | T3(mm) | L(cm) | H2(cm) | H1 (cm) | H1/H2 | Q/(H1*L) (Ah/cm2) | Maximum temperature T during charging |
|---|---|---|---|---|---|---|---|
| 240 | 71.25 | 17.4 | 20 | 26 | 1.3 | 0.5305 | T≤50°C |
| 280 | 88 | 20.3 | 11.2 | 20 | 1.7857 | 0.6897 | T≤50°C |
| 280 | 88 | 20.3 | 11.2 | 10.2 | 0.9107 | 1.3523 | T≤50°C |
| 280 | 88 | 20.3 | 11.2 | 5 | 0.4464 | 2.7586 | 50°C<T≤55°C |
| 280 | 88 | 20.3 | 11.2 | 1.1 | 0.0893 | 13.7931 | T>55°C |
| 203 | 85.8 | 14.8 | 10.3 | 20 | 1.9417 | 0.6858 | T≤50°C |

(continued)

| Q(Ah) | T3(mm) | L(cm) | H2(cm) | H1 (cm) | H1/H2 | Q/(H1*L) (Ah/cm2) | Maximum temperature T during charging |
|---|---|---|---|---|---|---|---|
| 203 | 85.8 | 14.8 | 10.3 | 10.2 | 0.9903 | 1.3447 | T≤50°C |
| 203 | 85.8 | 14.8 | 10.3 | 7 | 0.6796 | 1.9595 | T≤50°C |
| 203 | 85.8 | 14.8 | 10.3 | 2.2 | 0.1942 | 6.2346 | 50°C<T<55°C |
| 156 | 44.3 | 22 | 10.2 | 15 | 1.4706 | 0.4727 | T≤50°C |
| 156 | 44.3 | 22 | 10.2 | 10.2 | 1.0000 | 0.6952 | T≤50°C |
| 156 | 44.3 | 22 | 10.2 | 5 | 0.4902 | 1.4182 | T≤50°C |
| 102 | 52 | 14.8 | 9.5 | 20 | 0.2105 | 0.0345 | T≤50°C |
| 102 | 52 | 14.8 | 9.5 | 10.2 | 0.1074 | 0.0676 | T≤50°C |
| 5 | 12.5 | 12 | 6.5 | 12 | 1.8462 | 0.0347 | T≤50°C |
| 5 | 12.5 | 12 | 6.5 | 5 | 0.7692 | 0.0833 | T≤50°C |

In some embodiments, the thermally conductive member 3a is used to accommodate the heat exchange medium. The thermally conductive member 3a is disposed opposite to the first wall 201 of the battery cell 20, and the thermally conductive member 3a is thermally conductively connected to the first wall 201 of the battery cell 20. The heat medium exchanges heat with the battery cells 20 through the thermally conductive member 3a to adjust the temperature of the battery cells 20.

It can be understood that the thermally conductive member 3a is provided with a hollow cavity 30a, and the hollow cavity 30a is used to accommodate the heat exchange medium to adjust the temperature of the battery cell 20, and the hollow cavity 30a can reduce the weight of the thermally conductive member 3a while ensuring the strength of the thermally conductive member 3a. It can be applied, for example, to the case where the thickness of the thermally conductive member 3a is relatively large. In addition, the hollow cavity 30a allows the thermally conductive member 3a to have large compression space in the direction perpendicular to the first wall 201 (for example, the first direction x), thereby providing large expansion space for the battery cell 20.

The heat exchange medium may be liquid or gas, and the temperature regulation refers to heating or cooling one or a plurality of battery cells 20. In the case of cooling the battery cells 20, the hollow cavity 30a can accommodate the cooling medium to adjust the temperature of one or a plurality of battery cells 20. In this case, the heat exchange medium can also be called a cooling medium or a cooling fluid, more specifically, a cooling liquid or a cooling gas. In addition, the heat exchange medium may also be used for heating, which is not limited in the embodiments of the present application. Optionally, the heat exchange medium may flow in a circulating manner to achieve a better temperature regulation effect. Optionally, the fluid may be water, a mixture of water and ethylene glycol, a thermal conductive oil, a refrigerant or air, etc. Optionally, the cooling medium has a high specific heat capacity to take away more heat. At the same time, the cooling medium has a low boiling point. When the battery cell 20 is under thermal runaway, it can quickly boil and vaporize to absorb heat.

In some embodiments, as shown in Figs. 12 and 32, a hollow cavity 30a is provided inside the partition plate 33.

In this way, the partition plate 33 provided with the hollow cavity structure has the capability to absorb deformation, which can absorb the expansion and deformation of the battery cell 20 and improve the performance of the battery 100; in other words, the hollow cavity 30a can make the partition plate 33 have large compression space in the first direction x, which can provide large expansion space for the battery cell 20.

In addition, the hollow cavity 30a can reduce the weight of the partition plate 33 while ensuring the strength of the partition plate. For example, it can be applied to the case where the thickness of the partition plate 33 is relatively large.

Optionally, the hollow cavity 30a can be used to accommodate a heat exchange medium to adjust the temperature of the battery cell 20, so that the temperature of the battery cell 20 can be easily adjusted to a suitable range at any time, thereby improving the stability and safety of the battery cell 20. It can be seen that at this time, the hollow cavity 30a can also be called a heat exchange cavity, and the hollow cavity 30a corresponds to one or more flow channels 30c for accommodating the heat exchange medium.

It should be understood that the fluid mentioned here can be a liquid that can adjust the temperature and does not chemically react with the material of the hollow cavity 30a, such as water, which is not limited in the present application.

In some embodiments, as shown in Fig. 12 and Fig. 32, in the first direction x, the size of the hollow cavity 30a is W, and the capacity Q of the battery cell 20 and the size W of the hollow cavity 30a satisfy: 1.0 Ah/mm ≤Q/W≤400Ah/mm, and the first direction x is perpendicular to the first wall 201, so as to effectively utilize the partition plate 33 to prevent heat diffusion between the battery cells 20. By rapidly cooling the battery cell 20 with excessively high temperature, it is possible to prevent the heat of the battery cell 20 from diffusing and transferring to the adjacent battery cells 20, which would cause the temperature of the adjacent battery cells 20 to be excessively high.

When Q/W>400Ah/mm, the size W of the hollow cavity 30a is small, the volume of the fluid that can be accommodated in or flow through the hollow cavity 30a is small, and the battery cell 20 cannot be cooled in time. At this case, when the temperature of a certain battery cell 20 is too high, if the battery cell 20 is not cooled in time, the heat of the battery cell 20 would diffuse to the adjacent battery cells 20, causing the temperature of the adjacent battery cells to 20 to be too high, then abnormality occurs, which affects the performance of the entire battery 10.

When Q/W<1.0Ah/mm, the size W of the hollow cavity 30a is large, the volume of the fluid that can be accommodated in or flow through the hollow cavity 30a is large, and the battery cell 20 can be fully cooled. However, the large size of the hollow cavity 30a results in large space occupied by the partition plate 33, which cannot ensure the energy density of the battery 100. At the same time, the partition plate 33 with excessively large volume also leads to an increase in cost.

The hollow cavity 30a may be formed by a pair of thermally conductive plates 333 in the partition plate 33, and the size W of the hollow cavity 30a along the first direction x may be the distance between the inner walls of the two thermally conductive plates 333 along the first direction x. The larger the size W of the hollow cavity 30a, the larger the volume of the hollow cavity 30a, and the larger the volume of fluid that can be accommodated in or flow through the hollow cavity 30a, so the heat transfer between the battery cell 20 and the partition plate 33 is faster. For example, when the partition plate 33 is a water-cooling plate, the larger the size W of the hollow cavity 30a, the faster the heat of the battery cell 20 will dissipate, so the battery cell 20 will be cooled faster, which can prevent the heat of battery cell 20 from diffusing to adjacent battery cells 20. Optionally, the fluid may flow in a circulating manner to achieve a better temperature regulation effect. Optionally, the fluid may be water, a mixture of water and ethanol, a refrigerant or air, etc.

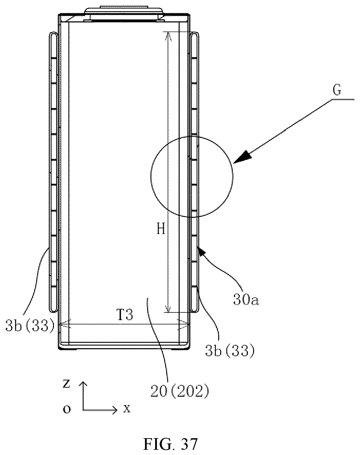

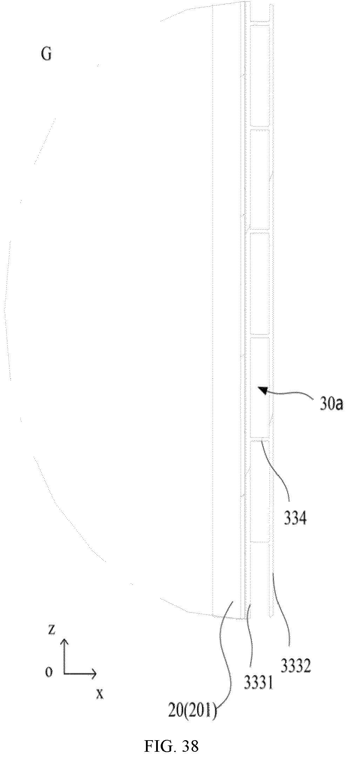

Fig. 36 is a schematic structural diagram of connection between a battery cell and a thermal management component according to an embodiment of the present application. Fig. 37 is a cross-sectional view taken along the A-A direction in Fig. 36, and Fig. 38 is an enlarged schematic view of the G area in Fig. 37. In one embodiment of the present application, with reference to Figs. 36 to 38, the size T3 of the battery cell 20 along the first direction x and the size H of the thermal management component 3b along the third direction satisfy: $0.03 \leq T3/H \leq 5.5$, and the three direction is perpendicular to the first direction and the second direction.

The size T3 of the battery cell 20 along the first direction x may be the thickness T3 of the battery cell 20. The thickness T3 of the battery cell 20 is related to the capacity Q of the battery cell 20, and the greater the thickness T3, the greater the capacity Q.

The size H1 of the partition plate 33 along the third direction may be the height H of the thermal management component 3b along the third direction. The larger H is, the larger the volume of the thermal management component 3b will be, the larger the occupied space will be, and the stronger the thermal management capability will be. For example, when the thermal management component 3 b is a water-cooling plate, the larger H is, the stronger the cooling capacity for the battery cells 20 is, and the more effectively it can prevent the heat of the battery cells 20 from diffusing to adjacent battery cells 20.

When T3/H<0.03, the size H of the thermal management component 3b along the third direction is large, which can fully meet the requirement of preventing the diffusion of heat of the battery cell 20, but it is difficult to meet the energy density requirements of the battery 10. At the same time, the thermal management component 3b with a large volume will also lead to a decrease in production cost.

When T3/H>5.5, the thermal management component 3b is unable to meet the thermal management requirements of the battery cell 20, that is, the heat of the battery cell 20 cannot be transmitted out in time, thereby causing the heat to diffuse to the adjacent battery cells 20, causing abnormality in the temperature of other battery cells 20, and further affecting the performance of the battery 10.

In some embodiments, the size H1 of the partition plate 33 along the third direction is 15mm-300mm. In this way, the partition plate 33 can balance the requirements of strength and thermal management performance.

In some embodiments, the size W of the hollow cavity 30a is 0.8mm-50mm. In this way, the requirements of strength and thermal management performance can be balanced.

The following uses a combination of two rows of battery cells 20 and two partition plates 33, and a heat diffusion test was carried out on the battery 100 according to GB38031-2020. The test results are shown in Table 8-1.

Table 8-1 Heat diffusion test of battery cells and partition plates of different specifications

| (Q/Ah) | (T3/mm) | (H/mm) | (W/mm) | Q/W | T3/H | Is there heat diffusion? |
|--------|---------|--------|--------|-----|------|--------------------------|
| 280 | 88 | 260 | 50 | 5.6 | 0.3385 | No |

(continued)

| (Q/Ah) | (T3/mm) | (H/mm) | (W/mm) | Q/W | T3/H | Is there heat diffusion? |
|---|---|---|---|---|---|---|
| 280 | 88 | 260 | 6 | 46.6667 | 0.3385 | No |
| 280 | 88 | 102 | 6 | 46.6667 | 0.8627 | No |
| 280 | 88 | 102 | 3 | 93.3333 | 0.8627 | No |
| 280 | 88 | 102 | 0.8 | 350 | 0.8627 | No |
| 280 | 88 | 30 | 6 | 46.6667 | 2.9333 | No |
| 280 | 88 | 13 | 0.6 | 466.6667 | 6.7692 | Yes |
| 248 | 66.5 | 80 | 2 | 124 | 0.8313 | No |
| 248 | 66.5 | 102 | 0.8 | 310 | 0.652 | No |
| 169 | 70 | 102 | 3 | 56.6666 | 0.6863 | No |
| 70 | 28.5 | 102 | 2 | 35 | 0.2794 | No |
| 180 | 79 | 80 | 2 | 90 | 0.9875 | No |
| 117 | 33.2 | 102 | 0.8 | 146.25 | 0.3255 | No |
| 5 | 12.5 | 50 | 3 | 1.6667 | 0.25 | No |
| 5 | 12.5 | 150 | 3 | 1.6667 | 0.0833 | No |
| 5 | 12.5 | 102 | 0.8 | 6.25 | 0.1225 | No |

In some embodiments, as shown in Figs. 32, 33, and 38, the partition plate 33 further includes a pair of thermally conductive plates 333 disposed oppositely along the first direction, the hollow cavity 30a is disposed between the pair of thermally conductive plates 333, and the first direction is perpendicular to the first wall 201.

For example, each thermally conductive plate 333 extends along the second direction, and the two thermally conductive plates 333 face each other along the first direction to form the hollow cavity 30a between the two thermally conductive plates 333. The hollow cavity 30a can serve as a flow channel of a heat exchange medium, so that the partition plate 33 is formed as a thermally conductive member 3a or a thermal management member 3b.

In some embodiments, as shown in Fig. 32, the size D of the thermally conductive plate 333 in the first direction x is 0.1 mm-5 mm.

When the size D of the thermally conductive plate 333 in the first direction is too small, the hollow cavity 30a occupies most of the space of the partition plate 33 under the condition that the space inside the partition plate 33 is fixed. In this case, the rigidity of the partition plate 33 is poor and cannot effectively improve the structural strength of the battery 10. When the size D of the thermally conductive plate 333 in the first direction is too large, the hollow cavity 30a inside the partition plate 33 is very small and can accommodate very little fluid, and the temperature of the battery cell 20 cannot be effectively adjusted. Therefore, the value of D is set to 0.1mm-5mm.

Optionally, the sizes D of the pair of thermally conductive plates 333 of the partition plate 333 in the first direction may be the same or different.

Optionally, the two thermally conductive plates 333 can be made of a material with good thermal conductivity, such as aluminum and other metal materials.

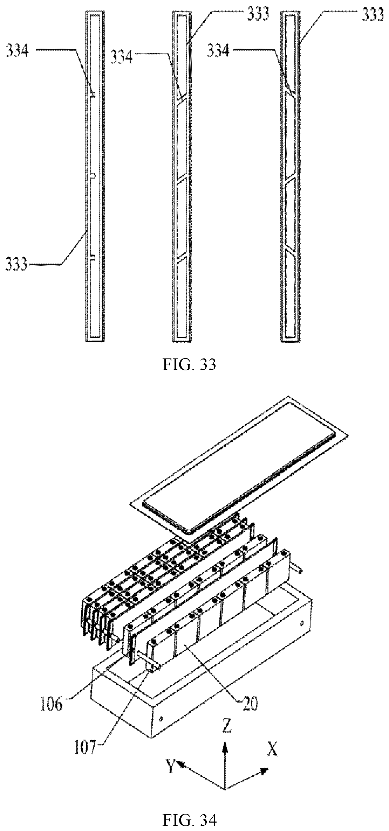

In some embodiments, as shown in Figs. 33 and 38, the partition plate 33 further includes reinforcing ribs 334, which are disposed between the pair of thermally conductive plates 33 to enhance the structural strength of the partition plate 33.

Optionally, there is one reinforcing rib 334, so that one or more hollow cavities 30a can be formed between the pair of thermally conductive plates 333.

Optionally, when there are multiple hollow cavities 30a, different hollow cavities 30a may be independent of each other or may be communicated through adapters.

When the reinforcing ribs 334 are connected to only one of the pair of thermally conductive plates 333, the reinforcing ribs 334 are cantilevers with one end connected to the thermally conductive plate 333, and at this time, the hollow cavity 30a can correspond to a flow channel 30c. When the reinforcing ribs 334 are respectively connected the pair of thermally conductive plates 333, the hollow cavity 30a can correspond to a plurality of flow channels 30c. The number of the reinforcing ribs 334 can be specifically set according to requirements, which is not limited in the embodiments of the present application.

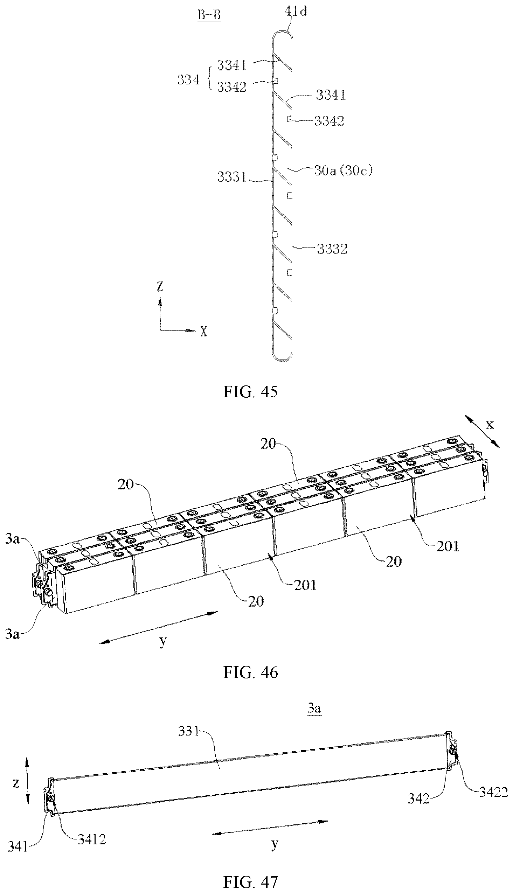

In some embodiments, as shown in Figs. 33 and 45, the reinforcing ribs 334 are connected to at least one of the pair of thermally conductive plates 333 to further ensure the structural strength of the partition plate 333.

Optionally, as shown in Fig. 33, the reinforcing ribs 334 may be provided on only one thermally conductive plate 333, or the reinforcing ribs 334 may be located between the pair of thermally conductive plates 333 and connected to the pair of thermally conductive plates 333.

Optionally, as shown in Fig. 33, when the reinforcing ribs 334 are connected to the pair of thermally conductive plates 333, the included angle between the reinforcing ribs 334 and the thermally conductive plates 333 may be an acute angle to provide more expansion space for the battery cell 20. As shown in Fig. 33, when the reinforcing ribs 334 are connected to a thermally conductive plate 333, the included angle between the reinforcing ribs 334 and the thermally conductive plate 333 may also be a right angle, so that the partition plate can withstand a relatively great pressure.

Optionally, the reinforcing ribs 334 can be of a special shape, such as C-shaped, wavy-shaped, or cross-shaped, which can effectively absorb expansion, increase turbulence, and enhance the heat transfer effect.

In some embodiments, as shown in Fig. 45, the reinforcing rib 334 includes a first reinforcing rib 3341. Both ends of the first reinforcing rib 3341 are respectively connected to the pair of thermally conductive plates 333. The first reinforcing rib 3341 is used to support the pair of thermally conductive plates 333. When the partition plate 333 deforms to absorb the expansion force of the battery cell 20, the first reinforcing rib 3341 can deform to adapt to the pair of thermally conductive plates 33 that can at least partially move in the direction close to each other along the first direction x.

Here, the first reinforcing rib 3341 is arranged inclinedly with respect to the first direction x, then the included angle between the first reinforcing rib 3341 and one of the pair of thermally conductive plates 333 is less than 90°, which can improve the bending property of the first reinforcing rib 3341, so the first reinforcing rib can be better deformed to meet the requirements of the partition plate 33 to absorb expansion force, and avoid the risk of small deformation space and easy fracture and failure caused by a straight shape.

Optionally, there may be one or more first reinforcing ribs 3341, and the plurality of first reinforcing ribs 3341 may be spaced apart along the third direction, wherein the spacing size between two adjacent first reinforcing ribs 3341 may be the same or different.

Optionally, the material of the first reinforcing rib 3341 can be made of a reinforcing rib structure, which ensures the support function while achieving a lightweight design of the partition plate 333, thereby achieving an overall lightweight design of the battery 100.

Optionally, the first reinforcing rib 3341 is connected to the pair of thermally conductive plates 333, and the first reinforcing rib 3341 extends along the second direction y to increase the connection area between the first reinforcing rib 3341 and each thermally conductive plate 333 and improve the support strength.

Optionally, the first reinforcing rib 3341 is in the form of a plate-like structure, so that it can be better deformed to meet the requirements of the partition plate for absorbing the expansion force of the battery cell 20; in addition, it is beneficial to production and processing and improvement of manufacturing efficiency.

In some embodiments, as shown in Fig. 45, the range of the included angle between the first reinforcing rib 3341 and the first direction is 30°-60°, then the range of the included angle between the first reinforcing rib 3341 and one of the pair of thermally conductive plates 333 is 30°-60°, which is conducive to better deformation while meeting support needs, and fracture is not easy to occur.

Optionally, when there are multiple first reinforcing ribs 3341, the inclination directions of two adjacent first reinforcing ribs 3341 may be the same or different.

In some embodiments, as shown in Fig. 45, the reinforcing rib 334 also includes a second reinforcing rib 3342. One end of the second reinforcing rib 3341 is connected to one of the pair of thermally conductive plates 333, and the other end of the second reinforcing rib 3342 is spaced apart from the other one of the pair of thermally conductive plates 333. For example, the extension size of the second reinforcing rib 3342 in the first direction x is smaller than the distance between the pair of thermally conductive plates 333.

Therefore, by providing the above-mentioned second reinforcing rib 3342, a better support effect can be achieved by cooperating with the first reinforcing rib 3341, and the deformation range of the partition plate 33 can be controlled. When the second reinforcing rib 3342 of one of the pair of thermally conductive plates 333 contacts the other, the deformation of the partition plate 33 can be further limited, thus avoid blockage of the flow channel 30c corresponding to the hollow cavity 30a, and ensuring the effectiveness of the flow channel 30c, thereby ensuring the effectiveness of the partition plate 33.

Optionally, the pair of thermally conductive plates 333 are respectively a first thermally conductive plate 3331 and a second thermally conductive plate 3332. The second reinforcing rib 3342 can be provided on the first thermally conductive plate 3331 or be provided on the second thermally conductive plate 3332. For example, both the first thermally conductive plate 3331 and the second thermally conductive plate 3332 are provided with second reinforcing ribs 3342.

In some embodiments, as shown in Fig. 45, in the third direction, a second reinforcing rib 3342 is provided between two adjacent first reinforcing ribs 3341. Optionally, one of two adjacent second reinforcing ribs 3342 is provided on the first thermally conductive plate 3331 and the other is provided on the second thermally conductive plate 3332 to ensure that the first thermally conductive plate 3331 and the second thermally conductive plate 3332 are evenly stressed and do not bear too much weight.

In some embodiments, as shown in Fig. 45, the second reinforcing rib 3342 extends along the first direction x and protrudes from one of the pair of thermally conductive plates 333, which simplifies the structure of the second reinforcing rib 3342 and facilitates processing.

Optionally, the second reinforcing rib 3342 is in the form of a polygonal column, so that the second reinforcing rib 3342 has a sufficient cross-sectional area. When the partition plate 33 absorbs the expansion force of the battery cell 20 and deforms such that the second reinforcing rib 3342 provided on one of the pair of thermally conductive plates 333 contacts with the other, the second reinforcing rib 3342 can have a sufficient contact area to better improve the supporting capacity and avoid damage or even failure of the second reinforcing rib 3342 which may cause contact between the two thermally conductive plates 333, thereby ensuring the effectiveness of the partition plate 33.

In some embodiments, as shown in Fig. 45, the first reinforcing rib 3341 and the second reinforcing rib 3342 are spaced apart to ensure that the two thermally conductive plates 333 are relatively evenly stressed.

In some embodiments, along the third direction (for example, the height direction of the box 10), the first reinforcing rib 3341 and the second reinforcing rib 3342 are alternately distributed. For example, two adjacent first reinforcing rib 3341 and second reinforcing rib 3342 can be arranged alternately on the first thermally conductive plate 3331 and the second thermally conductive plate 3332. Of course, the position of the second reinforcing ribs 3342 can also be set according to a certain arrangement rule.

For example, in the third direction, one of two adjacent second reinforcing ribs 3342 is provided on the first thermally conductive plate 3331 and the other is provided on the second thermally conductive plate 3332 to ensure that the first thermally conductive plate 3331 and the second thermally conductive plate 3332 are evenly stressed and do not bear too much weight.

By this arrangement, not only can the uniformity of the support for the two thermally conductive plates 333 be ensured, but also each part of the flow channel 30c corresponding to the hollow cavity 30a along the second direction y will not be blocked, and the effectiveness of the flow channel 30c can be well ensured.

In some embodiments, as shown in Figs. 32 and 45, in the first direction x, the thickness D of the thermally conductive plate 333 and the size W of the hollow cavity 30a of the partition plate 33 satisfy: $0.01 \leq D/W \leq 25$, so as to balance strength and thermal management performance requirements.

Specifically, when the size W of the hollow cavity 30a is large, the flow resistance of the fluid in the hollow cavity 30a is low, which can increase the heat exchange amount of the partition plate 33 per unit time; when the thickness D of the thermally conductive plate 333 is large, the strength of the partition plate 33 is high. When D/W is less than 0.01, the size W of the hollow cavity 30a is large enough, but the space occupied is too large; or under the given space of the partition plate 33, the thickness D of the thermally conductive plate 333 may be too small, resulting in insufficient strength. For example, the vibration and impact requirements of the battery 20 cannot be met, and even the partition plate 33 may be collapsed when it is initially assembled. When $D/W \geq 25$, the thickness D of the thermally conductive plate 333 is large enough, but under the given space of the partition plate 33, the size W of the hollow cavity 30a may be too small, the flow resistance of the fluid in the hollow cavity 30a increases, and the heat transfer performance becomes worse or the hollow cavity 30a is blocked during use; at the same time, because the wall thickness of the thermally conductive plate 333 is too large, the force generated by the expansion of the battery cell 20 cannot meet the collapse force on the partition plate 33 corresponding to the expansion space required by the battery cell 20, that is, the partition plate 33 will not be able to provide the expansion space required by the battery cell 20 in time, which will accelerate the decrease of the capacity of the battery cell 20. Therefore, when the thickness D of the thermally conductive plate 333 and the size W of the hollow cavity 30a satisfy $0.01 \leq D/W \leq 25$, the strength and thermal management performance requirements can be balanced to ensure the performance of the battery 100.

Optionally, when $0.01 \leq D/W \leq 0.1$, the fluid can be solid-liquid phase change material or liquid working medium. The outer layer of the partition plate 33 can be made of a film-like material as a covering, and the inside can be filled with a skeleton structure for reinforcement. This solution can be used in situations where the strength requirements are low or the compressibility requirements for the partition plate 33 is high.

Optionally, when the range is $0.1 \leq D/W \leq 1$, fluid working medium convection and heat exchange or vapor-liquid phase change cooling scheme can be adopted inside the partition plate 33, and the liquid working medium is used as the heat exchange medium to ensure the heat exchange performance of the partition plate 33.

Optionally, when $1 \leq D/W \leq 25$, the partition plate 33 can adopt a vapor-liquid phase change cooling scheme, in which the overall pressure is increased by adjusting the internal gap to ensure that the working medium exists in liquid form inside the partition plate 33, so as to prevent the coexistence of vapor and liquid phases caused by pressure loss, thereby providing heat exchange performance; at the same time, the thickness D of the thermally conductive plate 333 is large enough to prevent the partition plate 33 from rupturing due to an increase in pressure caused by the vaporization of internal working medium during heating.

Optionally, the thickness D of the thermally conductive plate 333 and the size W of the hollow cavity 30a further satisfy 0.05≤D/W≤15, and further satisfy 0.1≤D/W≤1, so as to better balance space, strength and thermal management, thereby further improving the performance of battery 100.

Optionally, the size T1 of the partition plate 33 in the first direction x is 0.3 mm-100 mm.

T1 is the total thickness of the thermal management component partition plate 33, that is, T1=2*D+W. If T1 is too large, too much space will be occupied. If T1 is too small, the strength will be too low or the hollow cavity 30a will be too narrow, which will affect the thermal management performance. Therefore, when the total thickness T1 of the partition plate 33 is 0.3mm-100mm, the space, strength and thermal management can be balanced to ensure the performance of the battery 100.

Optionally, the thickness D of the thermally conductive plate 333 is 0.1mm-25mm.

If the thickness D of the thermally conductive plate 333 is too large, too much space will be occupied, and the partition plate 33 will not be able to provide the expansion space required by the battery cells 20 in time. If D is too small, the strength will be too low. Therefore, when the thickness D of the thermally conductive plate 333 is 0.1 mm-25 mm, the space, strength, and expansion requirements of the battery cell 20 can be balanced to ensure the performance of the battery 100.

Optionally, the size W of the hollow cavity 30a in the first direction is 0.1mm-50mm.

Specifically, the size W of the hollow cavity 30a needs to be at least larger than the particle size of possible impurities inside to avoid blockage during application. Moreover, if the size W of the hollow cavity 30a is too small, the flow resistance of the fluid in the hollow cavity 30a will increase, and the heat exchange performance will become worse, so the size W of the hollow cavity 30a is not less than 0.1 mm. If the size W of the hollow cavity 30a is too large, too much space will be occupied, or the strength will be insufficient. Therefore, when the size W of the hollow cavity 30a is 0.1mm-50mm, the space, strength and thermal management performance can be balanced to ensure the performance of the battery 100.

Optionally, the size T1 of the partition plate 33 in the first direction x and the area S3 of the first wall 201 satisfy: $0.03mm^{-1} \leq T1/S3*1000 \leq 2mm^{-1}$.

When T1 and S3 meet the above conditions, the heat exchange performance requirements and size and space requirements of the battery cell 20 can be meet. Specifically, when the area S3 of the first wall 201 of the battery cell 20 is large, the cooling area is large, which can reduce the resistance of heat transfer from the partition plate 33 to the surface of the battery cell 20; when the total thickness T1 of the partition plate 33 is large, the strength can be increased. If $T1/S3*1000$ is less than $0.03mm^{-1}$, the area S3 of the first wall 201 of the battery cell 20 is large enough, but the partition plate 33 is too thin, resulting in insufficient strength, and the partition plate 33 may be damaged or cracked during use. If $T1/S3*1000$ is greater than $2mm^{-1}$, the partition plate 33 is thick enough, but the area S3 of the first wall 201 of the battery cell 20 is too small, and the cooling surface that the partition plate 33 can provide to the battery cell 20 is insufficient, so there is a risk that the heat dissipation requirements of the battery cell 20 cannot be met. Therefore, when the total thickness T1 of the partition plate 33 and the area S3 of the first wall 201 satisfy $0.03mm^{-1} \leq T1/S*1000 \leq 2mm^{-1}$, the strength and thermal management performance requirements can be balanced to ensure the performance of the battery 100.

Optionally, the partition plate 33 also includes a reinforcing rib 334. The reinforcing rib 334 is provided between the pair of thermally conductive plates 333. The thickness X of the reinforcing rib 334 is not less than (-0.0005*F+0.4738) mm, where F is the tensile strength of the material of the reinforcing rib 334 in Mpa. That is, the minimum thickness X of the reinforcing rib 334 can be (-0.0005*F+0.4738) mm.

The thickness X of the reinforcing rib 334 is related to the tensile strength of its material. According to the above relational expression, in order to meet the stress requirements of the partition plate 33, the higher the strength of the material is, the smaller the thickness X of the internal reinforcing rib 334 can be, thus saving space and improving energy density. Optionally, the thickness X of the reinforcing rib 334 may be 0.2 mm-1 mm.

The battery cell 20 and the partition plate 33 shown in Fig. 45 were used to carry out simulation tests on the heating rate and the deformation force of the partition plate 33. The test results are shown in Table 9. In Table 9, L is the size of the battery cell 20 in the second direction y, T3 is the size of the battery cell 20 in the first direction x, H2 is the size of the first wall 201 of the battery cell 20 in the third direction, and the third direction is perpendicular to the first direction x and the second direction y.

Table 9

| T3/mm | L/mm | H2/mm | T1/mm | D/mm | W/mm | D/W | T1/S3*1000mm$^{-1}$ | Heating rate °C/ min | Deformation force N |
|---|---|---|---|---|---|---|---|---|---|
| 71 | 1000 | 26.5 | 4 | 1.95 | 0.1 | 19.5 | 0.056338028 | <0.5 | >100000 |
| 100 | 960 | 26.5 | 4 | 1.8 | 0.4 | 4.5 | 0.041666667 | <0.5 | >100000 |
| 71 | 120 | 26.5 | 5 | 2.45 | 0.1 | 24.5 | 0.58685446 | <0.5 | >100000 |

(continued)

| T3/mm | L/mm | H2/mm | T1/mm | D/mm | W/mm | D/W | T1/S3*1000mm⁻¹ | Heating rate °C/min | Deformation force N |
|---|---|---|---|---|---|---|---|---|---|
| 71 | 120 | 26.5 | 8 | 3 | 2 | 1.5 | 0.938967136 | <0.5 | >100000 |
| 85.9 | 120 | 12.5 | 3 | 1.45 | 0.1 | 14.5 | 0.291036088 | <0.5 | >100000 |
| 91 | 148 | 26.5 | 3 | 1.45 | 0.1 | 14.5 | 0.222750223 | <0.5 | >100000 |
| 112.5 | 148 | 85.8 | 5 | 2.25 | 0.5 | 4.5 | 0.3003003 | <0.5 | >100000 |
| 95 | 148 | 52 | 5 | 2.25 | 0.5 | 45. | 0.355618777 | <0.5 | >100000 |
| 85 | 173 | 42 | 4 | 1.75 | 0.5 | 3.5 | 0.272016321 | <0.5 | [10000,100000] |
| 199.7 | 173.6 | 53.5 | 4 | 1.75 | 0.5 | 3.5 | 0.115380444 | <0.5 | [10000,100000] |
| 201.7 | 173.6 | 28.6 | 12 | 2 | 8 | 0.25 | 0.342709093 | [0.5,1.6] | [10000,100000] |
| 199.7 | 173.6 | 53.5 | 10 | 1.5 | 7 | 0.214285714 | 0.28845111 | [0.5,1.6] | [10000,100000] |
| 97.5 | 148 | 28.5 | 3 | 0.5 | 2 | 0.25 | 0.207900208 | [0.5,1.6] | [10000,100000] |
| 102.85 | 148 | 79 | 3 | 0.4 | 2.2 | 0.181818182 | 0.207900208 | [0.5,1.6] | [10000,100000] |
| 97 | 148 | 79 | 3 | 0.4 | 2.2 | 0.181818182 | 0.208971858 | [0.5,1.6] | [10000,100000] |
| 199.7 | 173.6 | 71.25 | 4 | 1 | 2 | 0.5 | 0.115380444 | [0.5,1.6] | [10000,100000] |
| 30 | 200 | 10 | 2 | 0.625 | 0.75 | 0.833333333 | 0.333333333 | [0.5,1.6] | [10000,100000] |
| 55 | 55 | 13.5 | 5 | 0.5 | 4 | 0.12 5 | 1.652892562 | [0.5,1.6] | [10000,100000] |
| 63.4 | 70 | 35 | 6 | 1 | 4 | 0.25 | 1.351960342 | [0.5,1.6] | [10000,100000] |
| 112.5 | 203 | 44 | 6 | 0.25 | 5.5 | 0.045454545 | 0.26272578 | [0.5,1.6] | <10000 |
| 112.5 | 203 | 88 | 6 | 0.25 | 5.5 | 0.045454545 | 0.26272578 | [0.5,1.6] | <10000 |
| 91 | 148 | 56.5 | 0.3 | 0.1 | 0.1 | 1 | 0.022275022 | <0.5 | <10000 |
| 112.5 | 194 | 45 | 4 | 0.2 | 3.6 | 0.055555556 | 0.18327606 | <0.5 | <10000 |
| 1125. | 194 | 70.7 | 4 | 0.2 | 3.6 | 0.055555556 | 0.18327606 | <0.5 | <10000 |

(continued)

| T3/mm | L/mm | H2/mm | T1/mm | D/mm | W/mm | D/W | T1/S3*1000mm⁻¹ | Heating rate °C/min | Deformation force N |
|---|---|---|---|---|---|---|---|---|---|
| 200 | 200 | 85.8 | 60 | 5 | 50 | 0.1 | 1.5 | [0.5,1.6] | >10000 |

In some embodiments, as shown in Figs. 47, 48, 50 and 51, the partition plate 33 is provided with a medium inlet 3412 and a medium outlet 3422, and the hollow cavity 30a is communicated with the medium inlet 3412 and the medium outlet 3422, so that the hollow cavity 30a can accommodate the heat exchange medium to adjust the temperature of the battery cell 20; the interior of the partition plate 33 is provided with a chamber 30b that is disconnected from both the medium inlet 3412 and the medium outlet 3422, so that the chamber 30b can prevent the heat exchange medium from entering, so as to adjust the temperature of the battery cell 20 while reducing the weight of the partition plate 33, thereby realizing the lightweight of the partition plate 33, and the phenomenon that the weight of the partition plate 33 is increased due to the heat exchange medium entering the chamber 30b can be alleviated during use, thereby effectively reducing the weight of the battery 100 having such partition plate 33, which is beneficial to increasing the energy density of the battery 100 and improving the performance of the battery 100 during use.

For example, the medium inlet 3412 and the medium outlet 3422 are respectively provided at both ends of the partition plate 33, and the hollow cavity 30a and the chamber 30b are both provided inside the partition plate 33. The hollow cavity 30a is communicated with the medium inlet 3412 and the medium outlet 3422, that is, both ends of the hollow cavity 30a are connected to the medium inlet 3412 and the medium outlet 3422 respectively, so that the fluid medium can flow into or out of the hollow cavity 30a. The chamber 30b is disconnected from both the medium inlet 3412 and the medium outlet 3422, that is, the chamber 30b is not in communication with both the medium inlet 3412 and the medium outlet 3422, so that the fluid medium cannot enter the chamber 30b.

It should be noted that the number of chambers 30b disposed inside the partition plate 33 may be one or multiple, and similarly, the number of hollow cavities 30a disposed inside the partition plate 33 may be one or multiple; when there are multiple hollow cavities 30a, each hollow cavity 30a is communicated with the medium inlet 3412 and the medium outlet 3422, that is, both ends of the plurality of hollow cavities 30a are connected to the medium inlet 3412 and the medium outlet 3422 respectively. For example, in the embodiment of the present application, there are multiple hollow cavities 30a and multiple chambers 30b provided inside the partition plate 33.

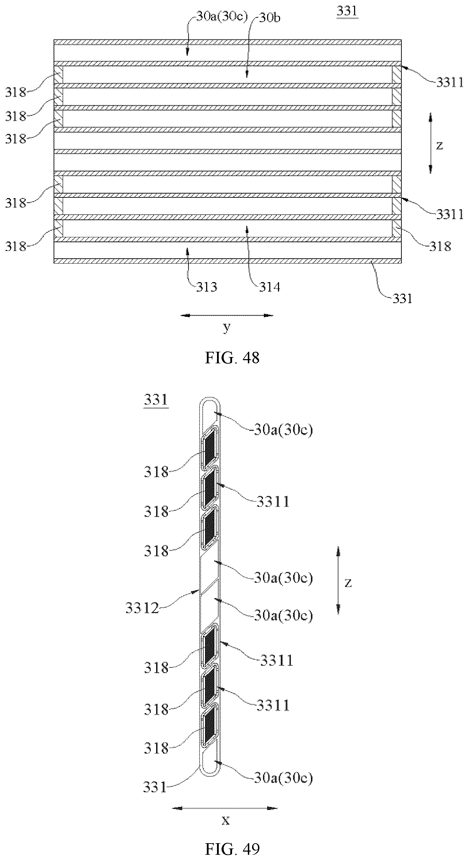

In some embodiments, referring to Figs. 47 and 48, the partition plate 33 includes a plate main body 331 (or referred to as body part), a first confluence member 341 and a second confluence member 342. The plate main body 331 is provided with the hollow cavity 30a and the chamber 30b. Along the length direction of the plate main body 331 (that is, the second direction y), the first confluence member 341 and the second confluence member 342 are respectively provided at both ends of the plate main body 331, and the medium inlet 3412 and the medium outlet 3422 are respectively provided at the first confluence member 341 and the second confluence member 342.

The hollow cavity 30a and the chamber 30b are both disposed inside the plate main body 331. For example, in Fig. 48, the hollow cavity 30a and the chamber 30b both extend along the length direction of the plate main body 331, and the two ends of the hollow cavity 30a run through the two ends of the plate main body 331 respectively, so that the hollow cavity 30a can be communicated with the medium inlet 3412 of the first confluence member 341 and the medium outlet 3422 of the second confluence member 342.

It should be noted that the plate main body 331, the first confluence member 341 and the second confluence member 342 can be of an integrated structure or be separate structures. When the plate main body 331, the first confluence member 341 and the second confluence member 342 are of an integrated structure, the plate main body 331, the first confluence member 341 and the second confluence member 342 can be made by casting or injection molding. When the plate main body 3315, the first confluence member 341 and the second confluence member 342 are separate structures, the first confluence member 341 and the second confluence member 342 can be connected to both ends of the plate main body 331 by bolting, snap-fit or bonding.

In some embodiments, as shown in Figs. 48-51, a channel 3151 is provided inside the plate main body 331, and the channel 3151 runs through both ends of the plate main body 331 in the length direction of the plate main body 331. The partition plate 33 also includes a blocking member 318, which is connected to the plate main body 331. The blocking member 318 blocks both ends of the channel 3151 to form the chamber 30b.

Among them, along the length direction of the plate main body 331, both ends of the channel 3151 running through the plate main body 331 are provided with blocking members 318. After the two ends of the channel 3151 are blocked by the blocking members 318, the sealed chamber 30b can be formed. Thus, the chamber 30b is disconnected from both the medium inlet 3412 and the medium outlet 3422.

For example, the blocking member 318 can be a metal sheet, a rubber plug, a silicone plug, etc. In the actual production process, different blocking members 318 can be used according to the size of the channel 3151. For example, when the channel 3151 is large, the blocking member can be connected to one end of the plate main body 331 by metal sheet welding to block the channel 3151, and a rubber plug or silicone plug can also be used to block the channel 3151. When the channel 3151 is small, it is difficult to weld a metal sheet. At this point, a rubber plug or silicone plug can be used to stick in the channel 3151 to block the channel 3151.

In some embodiments, as shown in Figs. 48-51, the blocking member 318 is detachably connected to the plate main body 331. The blocking member 318 is detachably connected to the plate main body 331, so that the blocking member 318 can be quickly disassembled and replaced. On the one hand, it is convenient to block different channels 3151 according to actual needs during use to meet different needs. On the other hand, the blocking member 318 can be repaired and replaced, which is beneficial to extending the service life of the partition plate 33.

For example, the blocking member 318 is snap-fitted to one end of the channel 3151 to block the channel 3151. Of course, in other embodiments, the blocking member 318 can also be detachably connected to the plate main body 331 by bolting or lock-joint.

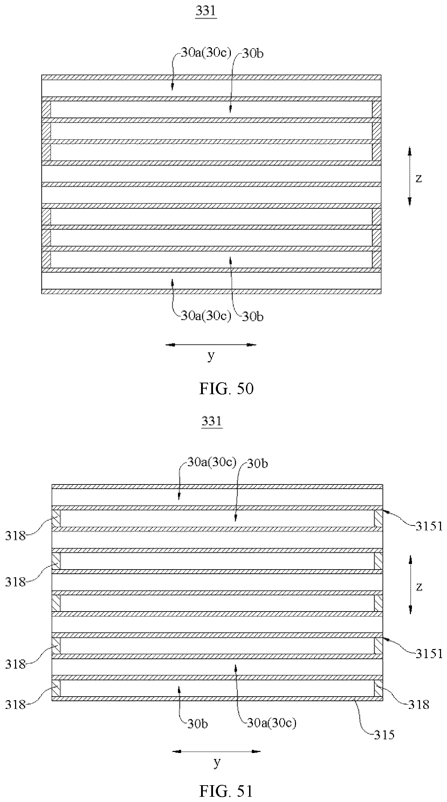

It should be noted that in Figs. 48 to 51, the chamber 30b is a closed structure formed by blocking the channel 3151 inside the plate main body 331 with the blocking member 318. In other embodiments, as shown in Fig. 50, the chamber 30b can also be a structure formed integrally with the plate main body 331. That is, the chamber 30b is a structure with a hollow cavity inside the plate main body 331 formed by casting or stamping processes, that is, the blocking member 318 and the plate main body 331 are of an integrated structure.

The channel 3151 is formed inside the plate main body 331 and runs through both ends of the plate main body 331 in the length direction of the plate main body 331. By setting the blocking member 318 on the plate main body 331, the blocking member 318 can block both ends of the channel 3151, thereby forming the chamber 30b that is disconnected from both the medium inlet 3412 and the medium outlet 3422. The structure is simple and easy to manufacture and process, and different channels 3151 can be blocked according to actual needs to expand the applicable scope of the partition plate 33.

In some embodiments, a first chamber communicated with the medium inlet 3412 is formed inside the first confluence member 341, a second chamber communicated with the medium outlet 3422 is formed inside the second confluence member 342, and the flow channel 30c runs through the two ends of the plate main body 331 in the length direction of the plate main body 331 to be in communication with the first chamber and the second chamber.

Here, the first chamber communicated with the medium inlet 3412 is formed inside the first confluence member 341, that is, the first chamber is formed inside the first confluence member 341, and the medium inlet 3412 runs through the wall of the first chamber, such that when the first confluence member 341 is installed at one end of the plate main body 331, the flow channel 30c running through one end of the plate main body 331 can be communicated with the first chamber inside the first confluence member 341, so that the plurality of flow channels 30c are communicated with the first chamber of the first confluence member 341 to realize the communication between the plurality of flow channels 30c and the medium inlet 3412.

Similarly, the second chamber communicated with the medium outlet 3422 is formed inside the second confluence member 342, that is, the second chamber is formed inside the second confluence member 342, and the medium outlet 3422 runs through the wall of the second chamber, such that when the second confluence member 342 is installed at one end of the plate main body 331, the flow channel 30c running through one end of the plate main body 331 can be communicated with the second chamber inside the second confluence member 342, so that the plurality of flow channels 30c are communicated with the second chamber of the second confluence member 342 to realize the communication between the plurality of flow channels 30c and the medium outlet 3422.

It should be noted that the chamber 30b is not communicated with the first cavity of the first confluence member 341 and the second cavity of the second confluence member 342, so that the chamber 30b is disconnected from both the medium inlet 3412 and the medium outlet 3422.

The first confluence member 341 is provided with the first chamber communicated with the flow channel 30c, and the second confluence member 342 is provided with the second chamber communicated with the medium outlet 3422, so the flow channel 30c can run through both ends of the plate main body 331 and be communicated with both the first chamber and the second chamber, such that the flow channel 30c is communicated with both the medium inlet 3412 and the medium outlet 3422. In this way, the fluid medium can be simultaneously introduced into the plurality of flow channels 30c through the medium inlet 3412 and the medium outlet 3422 during use, so as to improve the use efficiency.

In some embodiments, as shown in Figs. 47 and 48, both the chamber 30b and the hollow cavity 30a extend along the length direction of the plate main body 331 and are arranged along the width direction of the plate main body 331 (i.e., the third direction z).

The partition plate 33 is provided with a hollow cavity 30a and a plurality of chambers 30b. The hollow cavity 30a corresponds to a plurality of flow channels 30c. The chamber 30b and the flow channels 30c all extend along the length direction of the plate main body 331, and the plurality of chambers 30b and the plurality of flow channels 30c are all arranged along the width direction of the plate main body 331. The plurality of chambers 30b and the plurality of flow channels 30c can be arranged in various ways. For example, the chambers 30b and the flow channels 30c can be arranged alternately, or multiple chambers 30b can be located on one side of the plurality of flow channels 30c along the width direction of the plate main body 331, or along the width direction of the plate main body 331, a plurality of chambers 30b are provided at the middle position of the plate main body 331, and flow channels 30c are provided on both sides of the plurality of chambers 30b. For example, in Fig. 48, along the width direction of the plate main body 331, two flow channels 30c are provided at the middle position of the plate main body 331, two sides of the two flow channels 30c are respectively provided with three chambers 30b, and both ends of the plate main body 331 are respectively provided with one flow channel 30c.

The chambers 30b and the flow channels 30c all extend along the length direction of the plate main body 331 and are arranged along the width direction of the plate main body 331, making it easier to process and manufacture the chambers 30b and the flow channels 30c, and facilitating the optimization of arrangement of the flow channels 30c, which is beneficial to improving the temperature adjusting capability of the partition plate 33 to the battery 100.

In some embodiments, as shown in Figs. 48 and 49, a flow channel 30c is provided at the middle position of the plate main body 331 along the width direction of the plate main body 331.

Here, the flow channel 30c is provided at the middle position of the plate main body 331. If there is one flow channel 30c, the flow channel 30c is disposed at the middle position of the plate main body 331. If there are multiple flow channels 30c, then at least part of the multiple flow channels 30c are located at the middle position of the plate main body 331 in the width direction of the plate main body 331. For example, in Figs. 48 and 49, two flow channels 30c are provided at the middle position of the plate main body 331 along the width direction of the plate main body 1. Of course, in other embodiments, along the width direction of the plate main body 331, one, three, four or other number of flow channels 30c may also be provided at the middle position of the plate main body 331.

The plate main body 331 is provided with the flow channel 30c at the middle position in its width direction, so that it is feasible to conduct heat exchange for the places with relatively concentrated heat inside the battery 100, which is beneficial to improving the thermal management performance of the partition plate 33 for the battery 100.

In some embodiments, refer to Fig. 51, which is a cross-sectional view of the plate main body 331 of the partition plate 33 provided in some further embodiments of the present application. The partition plate 33 is provided with a plurality of flow channels 30c and a plurality of chambers 30b. The chambers 30b and the flow channels 30c are alternately arranged along the width direction of the plate main body 331.

Here, the chambers 30b and the flow channels 30c are alternately arranged, that is, the chambers 30b and the flow channels 30c are arranged alternately in turn along the width direction of the plate main body 331. That is to say, along the width direction of the plate main body 331, a chamber 30b is provided between two adjacent flow channels 30c, and a flow channel 30c is provided between two adjacent chambers 30b.

The chambers 30b and the flow channels 30c are alternately arranged along the width direction of the plate main body 331, that is, there are multiple chambers 30b and multiple flow channels 30c, and the chambers 30b and the flow channels 30c are alternately arranged to achieve the dispersed arrangement of the flow channels 30c along the width direction of the plate main body 331, thereby effectively reducing the uneven heat exchange capacity of the partition plate 33 caused by the concentration of the flow channels 30c, which is beneficial to improving the performance of the partition plate 33 during use.

In some embodiments, as shown in Fig. 49, along the thickness direction of the plate main body 331 (i.e., the first direction x), the plate main body 331 has two opposite side surfaces 3312. The area of one side surface 3312 is S5, and the total area of the projection of the flow channels 30c on the side surface 3312 is S6, where the two satisfy $S6/S5 \geq 0.2$.

Here, the area of one side surface 3312 is S5, and the total area of the projection of the flow channels 30c on the side surface 3312 is S6, where $S6/S5 \geq 0.2$, that is, the total area occupied by the multiple flow channels 30c on the side surface 3312 of the plate main body 331 is greater than or equal to 20%.

By arranging that the area occupied by the multiple flow channels 30c on the side surface 3312 of the plate main body 331 is greater than or equal to 20%, it is feasible to reduce the phenomenon of poor heat exchange capability caused by the insufficient area occupied by the flow channels 30c, thereby ensuring the heat exchange performance of the partition plate 33.

In some embodiments, as shown in Figs. 46 and 47, hollow cavities 30a of multiple partition plates 33 are connected in series, that is, the medium inlet 3412 of one partition plate 33 is connected to the medium outlet 3422 of another partition plate 33. Of course, flow channels 30c of multiple partition plates 33 may also be connected in parallel, that is, the medium inlets 3412 of the multiple partition plates 33 are connected to each other, and the medium outlets 3422 of the multiple partition plates 33 are connected to each other. The battery 100 is provided with a plurality of partition plates 33, which is conducive to improving the thermal management capability of the partition plates 33 for the battery cells 20 in this type of battery 100, so as to reduce the safety hazards caused by internal temperature rise of the battery 100.

In some embodiments, as shown in Figs. 46 and 47, the medium outlet 3422 of one partition plate 33 is connected to the medium inlet 3412 of another partition plate 33.

Here, there may be multiple structures in which the medium outlet 3422 of one partition plate 33 is connected to the medium inlet 3412 of another partition plate 33. It can be that the medium outlet 3422 of one partition plate 33 is connected to the medium inlet 3412 of another partition plate 33, or they can be connected through other components, such as connecting pipes, etc., to achieve a series structure of a plurality of partition plates 33.

By connecting the medium outlet 3422 of one partition plate 33 with the medium inlet 3412 of another partition plate 33 among the plurality of partition plates 33, a series structure of the plurality of partition plates 33 is achieved, thereby facilitating assembly and processing, and the fluid medium can be easily introduced into the flow channels 30c of the plurality of partition plates 33 during use.

In some embodiments, the partition plate 33 is provided with a plurality of flow channels 30c. Along the flow direction of the fluid medium in flow channels 30c of multiple partition plates 33, in two adjacent partition plates 33, the number of flow channels 30c of the partition plate 33 located downstream is greater than the number of flow channels 30c of the partition plate 33 located upstream.

Here, along the flow direction of the fluid medium in the flow channels 30 c of the plurality of partition plates 33, that is, the direction when the fluid medium flows through the flow channels 30 c of the plurality of partition plates 33, in two adjacent partition plates 33, the number of flow channels 30c of the partition plate 33 located downstream is greater than the number of flow channels 30c of the partition plate 33 located upstream. That is, in the flow direction of the fluid medium, in two adjacent partition plates 33, the partition plate 33 through which the fluid medium flows first is the partition plate 33 located upstream, and the partition plate 33 through which the fluid medium flows later is the partition plate 33 located downstream. That is to say, the fluid medium flows from the flow channels 30c of the partition plate 33 located upstream to the flow channels 30c of the partition plate 33 located downstream.

By making the number of flow channels 30c of the partition plate 33 located downstream larger than the number of flow channels 30c of the partition plate 33 located upstream, it is beneficial to improving the heat exchange capacity of the partition plate 33 located downstream, thus ensuring that the heat exchange capacity of the plurality of partition plates 33 is balanced, to improve the overall thermal management capability, which can effectively alleviate the phenomenon of local temperature rise inside the battery 100.

In some embodiments, medium inlets 3412 of the plurality of partition plates 33 are connected to each other, and medium outlets 3422 of the plurality of partition plates 33 are connected to each other.

Among them, the medium inlets 3412 of the plurality of partition plates 33 may be directly connected or connected through other components, such as connecting pipes, and so can the medium outlets 3422 of the plurality of partition plates 33, so as to realize a parallel structure of the multiple partition plates 33.

By connecting the medium inlets 3412 of the plurality of partition plates 33 to each other and connecting the medium outlets 3422 of the plurality of partition plates 33 to each other, the parallel structure of the plurality of partition plates 33 is realized. On the one hand, it is feasible to realize the function of introducing fluid medium into flow channels 30c of the plurality of partition plates 33 at the same time, on the other hand, it is feasible to effectively ensure that the heat exchange capacity of all partition plates 33 is balanced, thus effectively alleviating the phenomenon of local temperature rise inside the battery 100.

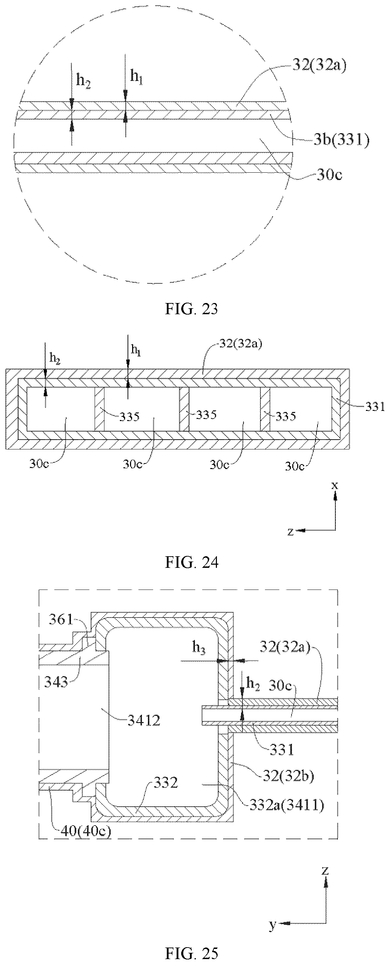

In some embodiments, as shown in Fig. 24, a partition member 335 is provided in the hollow cavity 30a. The partition member 335 is used to divide the hollow cavity 30a into at least two flow channels 30c, which is convenient for controlling the distribution of the fluid medium in the hollow cavity according to actual needs, so as to reasonably adjust the temperature of the battery cell 20.

For example, a plurality of flow channels 30c may be arranged sequentially along the third direction, each flow channel 30c extends along the second direction y, and the third direction is perpendicular to the second direction and parallel to the first wall 201.

All flow channels 30c can be independent of each other or connected with each other. Only some of the plurality of flow channels 30c may accommodate the fluid medium, or each of the flow channels 30c may accommodate the fluid medium. Therefore, the partition member 335 divides the interior of the partition plate 33 into a plurality of flow channels 30c, which is convenient for controlling the distribution of the fluid medium in the partition plate 33 according to actual needs, so as to reasonably adjust the temperature of the battery cell 20.

Optionally, the partition member 335 and the partition plate 33 are integrally formed. For example, the partition member 335 and the partition plate 33 are formed through an integral forming process such as casting and extrusion. The partition member 335 and the partition plate 33 can also be provided separately and then connected to the inner wall of the partition plate through welding, bonding, snap-fit, etc.

Of course, only one flow channel 30c can be formed in the hollow cavity 30a.

In some embodiments, the partition plate 33 includes a plate main body 331, a hollow cavity 30a is provided inside the plate main body 331, and the hollow cavity 30a may have one or more flow channels 30c. An insulating layer 32 includes a first insulating layer 32a and at least part of the insulating layer 32a is provided between the plate main body 331 and the battery cell 20.

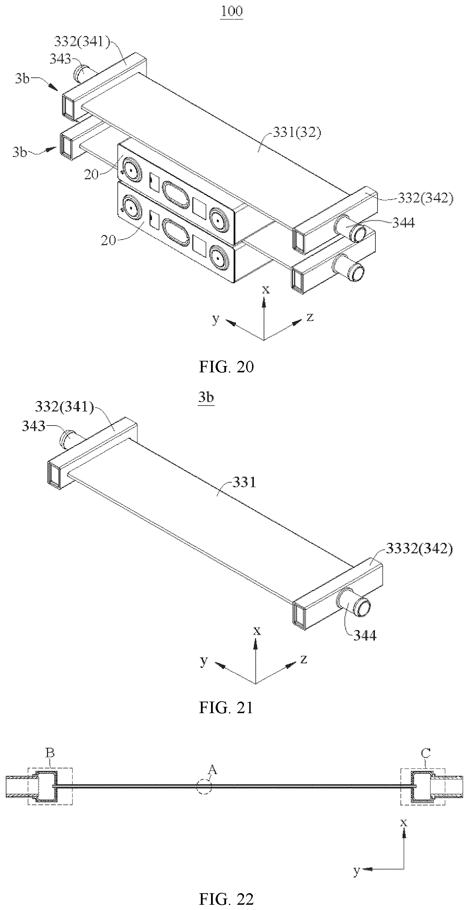

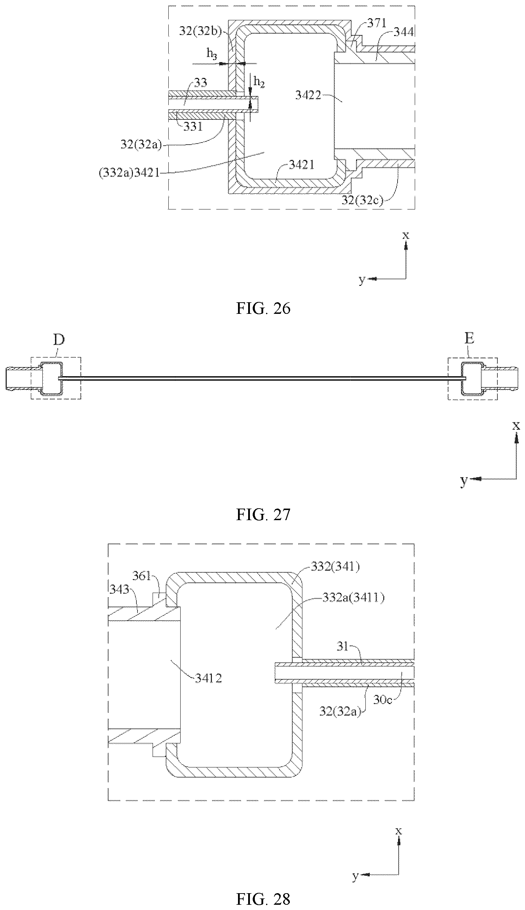

Further, referring to Figs. 20 and 21, the partition plate 33 also includes a confluence pipe 332. The confluence pipe 332 includes a confluence chamber 332a (shown in Figs. 26 and 28). The confluence chamber 332a is communicated with a plurality of flow channels 30c. The insulating layer 32 includes a second insulating layer 32b, and at least part of the second insulating layer 32b is disposed between the confluence pipe 332 and the battery cell 20 to insulate and isolate the battery cell 20 from the confluence pipe 332.

"The second insulating layer 32b covers at least part of the outer surface of the confluence pipe 332", which may be understood that part of the second insulating layer 32b covers at least part of the outer surface of the confluence pipe 332 to insulate and isolate the battery cell 20 from the confluence pipe 332.

The two confluence pipes 332 at both ends of the partition plate 33 may be the first confluence member 341 and the second confluence member 342 respectively.

It is feasible that only part of the second insulating layer 32b covers at least part of the outer surface of the first confluence member 341 or only part of the second insulating layer 32b covers at least part of the outer surface of the second confluence member 342, or it is feasible that part of the second insulating layer 32b covers at least part of the outer surface of the first confluence member 341 and part of the second insulating layer 32b covers at least part of the outer surface of the second confluence member 342.

In the case where part of the second insulating layer 32b covers at least part of the surface of the first confluence member 341, the part of the second insulating layer 32b may only cover part of the outer surface of the first confluence member 341. For example, part of the second insulating layer 32b only covers the outer peripheral surface of the first confluence member 341, but the two end surfaces of the first confluence member 341 along the third direction are not covered by the insulating layer 32. Compared with the case where the insulating layer 32 only covers the plate main body 331, the creepage distance between the battery cell 20 and the part of the first confluence member 341 not covered with the insulating layer 32 can be increased, thereby reducing the risk of short circuit of the battery 100; or part of the insulating layer 32 covers the entire outer surface of the first confluence member 341.

In some other embodiments, the insulating layer 32 may not cover the outer surface of the first confluence member 341. The first confluence member 341 extends along the third direction, and the second confluence member 342 extends along the third direction.

In the case where part of the second insulating layer 32b covers at least part of the surface of the second confluence member 342, the part of the insulating layer 32 may only cover part of the outer surface of the second confluence member 342. For example, part of the insulating layer 32 only covers the outer peripheral surface of the second confluence member 342, but the two end surfaces of the second confluence member 342 along the third direction are not covered by the second insulating layer 32b. Compared with the case where the insulating layer 32 only covers the plate main body 331, the creepage distance between the battery cell 20 and the part of the second confluence member 342 not covered with the insulating layer 32 can be increased, thereby reducing the risk of short circuit of the battery 100; or part of the second insulating layer 32b covers the entire outer surface of the second confluence member 342.

In some other embodiments, as shown in Fig. 27 and Fig. 29, the insulating layer 32 may not cover the outer surface of the second confluence member 342.

Therefore, the second insulating layer 32b covers at least part of the outer surface of the confluence pipe 332. The second insulating layer 32b can completely cover the outer surface of the confluence pipe 332, or can only cover the side surface of the confluence pipe 332 facing the battery cell 20. The second insulating layer 32b can be used to insulate and isolate the confluence pipe 332 from the battery cell 20, thereby reducing the risk of short circuit of the battery and improving the safety performance of the battery.

In this embodiment, the confluence pipe 332 can be located on one side of the battery cell 20. Since the confluence pipe 332 also accommodates fluid medium, the confluence pipe 332 can also be used to exchange heat with the battery cell 20. The second insulating layer 32b covers at least part of the outer surface of the confluence pipe 332. The second insulating layer 32b can completely cover the outer surface of the confluence pipe 332, or can only cover the side surface of the confluence pipe 332 facing the battery cell 20. The second insulating layer 32b can be used to insulate and isolate the confluence pipe 332 from the battery cell 20, thereby reducing the risk of short circuit of the battery and improving the safety performance of the battery.

Please refer to Fig. 20, Fig. 21, Fig. 25 and Fig. 26 together, in this embodiment, the two confluence members 332 are the first confluence member 341 and the second confluence member 342 respectively; the first confluence member 341 is provided with a medium inlet 3412, the first confluence member 341 is internally provided with a first confluence chamber 3411 communicated with the medium inlet 3412, the second confluence member 342 is provided with a medium outlet 3422, the second confluence member 342 is internally provided with a second confluence chamber 3421 communicated with the medium outlet 3422, and the first confluence chamber 3411 and the second confluence chamber 3421 are both communicated with each flow channel 30c.

The medium inlet 3412 is provided at the first confluence member 341, and the medium outlet 3422 is provided at the second confluence member 342. The first confluence chamber 3411 of the first confluence member 341 and the second confluence chamber 3421 of the second confluence member 342 are both communicated with each flow channel 30c, so the fluid medium can enter the first confluence chamber 3411 from the medium inlet 3412, and then be distributed to each flow channel 30c through the first confluence chamber 3411. The fluid medium in each flow channel 30c can flow along the second direction Y to the second confluence member 342, is collected in the second confluence chamber 3421, and is discharged from the medium outlet 3422.

In some other embodiments, the partition plate 33 may not be provided with a confluence pipe 332, and each flow channel 30c is correspondingly provided with a medium inlet 3412 and a medium outlet 3422. The fluid medium enters each flow channel 30c from the respective medium inlet 3412 of the flow channel 30c, and is discharged from the respective flow channel 30c. This arrangement facilitates independent control of the total amount and flow rate of the fluid medium in each flow channel 30c.

In this embodiment, the arrangement of the first confluence member 341 is conducive to the distribution of fluid medium to each flow channel 30c, which is conducive to the uniformity of temperature adjustment of the battery cell 20, and the arrangement of the second confluence member 342 is conducive to the rapid discharge of the fluid medium, thereby improving the heat exchange efficiency.

In some embodiments, as shown in Fig. 25 and Fig. 26, the thickness of the second insulating layer 32b is $h_3$, the wall thickness of the plate main body 331 is $h_2$, and $h_3/h_2 \geq 0.00625$. In this way, the larger the creepage distance between the confluence pipe 332 and the battery cell 20 is, the higher the safety is, thereby reducing the risk of electrical contact between the two in various usage scenarios.

$h_3/h_2$ can be 0.01, 0.015, 0.1, 0.15, 0.2, 0.25, 0.3, 0.35, 0.4, etc.

In some embodiments, the insulating layer 32 is of an equal thickness structure, that is, the thickness hi of the first insulating layer 30a is equal to the thickness $h_3$ of the second insulating layer 30b, i.e., $h_1=h_3$. In some other embodiments, the thickness of the first insulating layer is not equal to the thickness of the second insulating layer.

In some embodiments, please refer to Fig. 20, Fig. 21, and Figs. 25-29 together, the medium inlet 3412 is provided with a first guide pipe 343, and the medium outlet 3422 is provided with a second guide pipe 344; the insulating layer 32 also includes a third insulating layer 32c; part of the third insulating layer 32c covers the outer surface of the first guide pipe 343, so as to insulate and isolate the battery cell 20 from the first guide pipe 343; and/or part of the third insulating layer 32c covers the outer surface of the second guide pipe 344 to insulate and isolate the battery cell 20 from the second guide pipe 344.

It is feasible that only the medium inlet 3412 is provided with the first guide pipe 343, or it is feasible that only the medium outlet 3422 is provided with the second guide pipe 344, or it is feasible that the medium inlet 3412 is provided with the first guide pipe 343 and the medium outlet 3422 is provided with the third guide pipe 344. Fig. 20 and Fig. 21 show the case where the medium inlet 3412 is provided with the first guide pipe 343 and the medium outlet 3422 is provided with the second guide pipe 344.

As shown in Fig. 20, Fig. 21 and Figs. 25-29, in the case where part of the insulating layer 32 covers the outer surface of the first guide pipe 343, the part of the insulating layer 32 may only cover part of the outer surface of the first guide pipe 343. For example, part of the insulating layer 32 only covers the outer peripheral surface of the first guide pipe 343, but the two end surfaces of the first guide pipe 343 along the axial direction are not covered by the insulating layer 32. Compared with the case where the insulating layer 32 only covers the plate main body 331, the first confluence member 341 and the second confluence member 342, the creepage distance between the battery cell 20 and the part of the first guide pipe 343 not covered with the insulating layer 32 can be increased, thereby reducing the risk of short circuit of the battery 100; or part of the insulating layer 32 covers the entire outer surface of the first guide pipe 343. In some other embodiments, as shown in Fig. 25, the insulating layer 32 may not cover the outer surface of the first guide pipe 343.

As shown in Fig. 20, Fig. 21 and Figs. 25-29, in the case where part of the insulating layer 32 covers the outer surface of the second guide pipe 344, the part of the insulating layer 32 may only cover part of the outer surface of the second guide pipe 344. For example, part of the insulating layer 32 only covers the outer peripheral surface of the second guide pipe 344, but the two end surfaces of the second guide pipe 344 along the axial direction are not covered by the insulating layer 32. Compared with the case where the insulating layer 32 only covers the plate main body 331, the first confluence member 341 and the second confluence member 342, the creepage distance between the battery cell 20 and the part of the second guide pipe 344 not covered with the insulating layer 32 can be increased, thereby reducing the risk of short circuit of the battery 100; or part of the insulating layer 32 covers the entire outer surface of the second guide pipe 344.

In some other embodiments, the insulating layer 32 may not cover the outer surface of the second guide pipe 344.

As shown in Fig. 20, Fig. 21 and Figs. 25-29, the first guide pipe 343 and the second guide pipe 344 are coaxially arranged, and the axial direction of the first guide pipe 343 and the axial direction of the second guide pipe 344 are both parallel to the second direction y.

As shown in Fig. 20, Fig. 21 and Figs. 25-29, one end of the first guide pipe 343 is inserted into the medium inlet 3412 on the first confluence member 341 and is welded to the first confluence member 341. One end of the second guide pipe 344 is inserted into the medium outlet 3422 on the second confluence member 342 and is welded to the second confluence member 342.

The outer peripheral surface of the first guide pipe 343 is provided with a first position-limiting portion 361. The first position-limiting portion 361 protrudes from the outer peripheral surface of the first guide pipe 343 along the radial direction of the first guide pipe 343. The first position-limiting portion 361 is used to limit the distance of insertion of the first guide pipe 343 into the first confluence member 341. When the first guide pipe 343 is inserted into the medium inlet 3412 of the first confluence member 341, the first position-limiting portion 361 abuts against the outer wall of the first confluence member 341. The first guide pipe 343 can be welded to the first confluence member 341 through the first position-limiting portion 361.

The outer peripheral surface of the second guide pipe 344 is provided with a second position-limiting portion 371. The second position-limiting portion 371 protrudes from the outer peripheral surface of the second guide pipe 344 along the radial direction of the second guide pipe 344. The second position-limiting portion 371 is used to limit the distance of insertion of the second guide pipe 344 into the second confluence member 342. When the second guide pipe 344 is inserted into the medium outlet of the second confluence member 342, the second position-limiting portion 371 abuts against the outer wall of the second confluence member 342. The second guide pipe 344 can be welded to the second confluence member 342 through the second position-limiting portion 371.

In some other embodiments, the medium inlet 3412 may not be provided with the first guide pipe 343, and the medium outlet 3422 may not be provided with the second guide pipe 344.

The first guide pipe 343 is arranged to facilitate the entry of the fluid medium into the first confluence chamber 3411 of the first confluence member 341, and the second guide pipe 344 is arranged to facilitate the discharge of the fluid medium from the second confluence chamber 3421 of the second converging member 342. Part of the insulating layer 32 covers the outer surface of the first guide pipe 343, which can insulate and isolate the first guide pipe 343 from the battery cell 20, and/or part of the insulating layer 32 covers the outer surface of the second guide pipe 344, which can insulate and isolate the second guide pipe 344 from the battery cell 20, thereby reducing the risk of short circuit of the battery 100 and improving the safety performance of the battery 100.

In some embodiments, along the second direction y, the first confluence member 341 and the second confluence member 342 are respectively located on both sides of the battery cell 20, and the third direction is perpendicular to the second direction y.

The first confluence member 341 and the second confluence member 342 are respectively located on both sides of the battery cell 20, so that the arrangement direction of the first confluence member 341 and the second confluence member 342 is staggered with the extension direction of tabs of the battery cell 20, so that both the first confluence member 341 and the second confluence member 342 are staggered with the electric energy output terminal of the battery cell 20, to prevent the first confluence member 341 and the second confluence member 342 from affecting the charging and discharging of the battery cell 20, or to prevent the first confluence member 341 and the second confluence member 342 from affecting the series connection, parallel connection or series-parallel connection between the battery cells 20.

As shown in Fig. 20, the plate main body 331 extends beyond both ends of the battery cell 20 along the second direction y. The first confluence member 341 and the second confluence member 342 are respectively connected to both ends of the plate main body 331 along the second direction y. The plurality of battery cells 20 can be stacked along the second direction y without interfering with the first confluence member 341 and the second confluence member 342, so that the arrangement of the plurality of battery cells 20 can be more compact, which is beneficial to reducing the volume of the battery 100.

In some embodiments, the battery cell 20 includes a battery casing 21 and an insulating layer (not shown in the figure) connected to the outer surface of the battery casing 21. The insulating layer is used to insulate and isolate the thermally conductive member 3a and the battery casing 21.

The insulating layer may be a blue film covering the outer surface of the battery casing 21 or an insulating coating applied onto the outer surface of the battery casing 21. The insulating layer is connected to the surface of the battery casing 21 of the battery cell 20, and the insulating layer on the battery cell 20 and the insulating layer 32 on the thermally conductive member 3a jointly insulate and isolate the battery cell 20 from the thermally conductive member 3a, thereby further reducing the risk of short circuit of the battery 100.

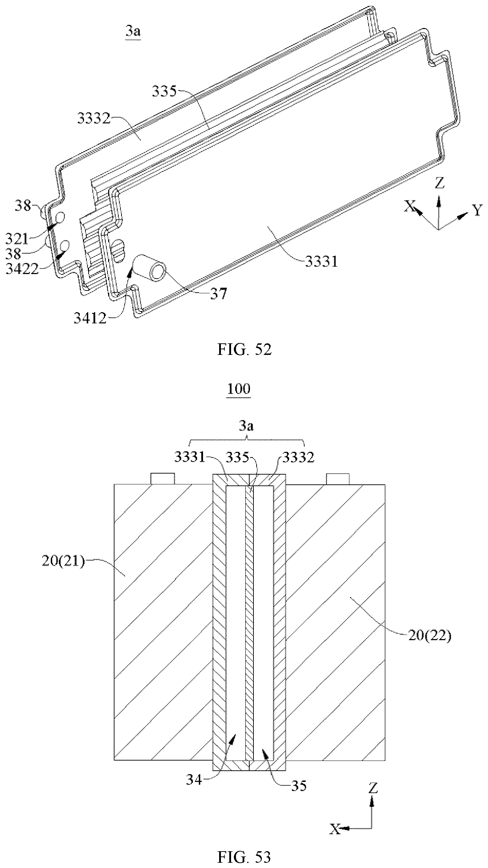

In some embodiments, as shown in Figs. 52-64, the thermally conductive member 3a includes a first thermally conductive plate 3331, a second thermally conductive plate 3332 and a partition member 335 that are stacked. The partition member 335 is disposed between the first thermally conductive plate 3331 and the second thermally conductive plate 3332. The first thermally conductive plate 3331 and the partition member 335 jointly define a first flow channel 34, and the second thermally conductive plate 3332 and the partition member 335 jointly define a second flow channel 35.

When the thermally conductive member 3a is disposed between two adjacent battery cells 20, the first flow channel 34 and the second flow channel 35 respectively correspond to the two adjacent battery cells 20, and the fluid medium in the first flow channel 34 and the fluid medium in the second flow channel 35 can respectively exchange heat with the two battery cells 20, thereby reducing the temperature difference between the two adjacent battery cells 20.

The expansion of one battery cell 20 will not squeeze or reduce the size of the flow channel corresponding to the other battery cell 20 or has little impact on the size of the flow channel corresponding to the other battery cell 20, thereby ensuring the heat exchange effect of the flow channel corresponding to the other battery cell 20, so that the safety performance of the battery 100 using the thermally conductive member 3a can be ensured.

In addition, the first flow channel 34 and the second flow channel 35 respectively correspond to two adjacent battery cells 20 and can independently withstand the deformation caused by the expansion of the corresponding battery cell 20. Therefore, the expansion of one battery cell 20 has little interference with the expansion of the other battery cell 20 or will not affect the expansion of the other battery cell 20, which is beneficial to the expansion release of two adjacent battery cells 20 and reducing the mutual interference of the expansion of two adjacent battery cells 20 which would lead to premature pressure release or serious thermal runaway accidents of the battery cells 20, thereby improving the safety performance of the battery 100.

Both the first flow channel 34 and the second flow channel 35 are used to accommodate fluid medium, and the fluid medium can flow within the first flow channel 34 and the second flow channel 35. Here, the first flow channel 34 and the second flow channel 35 can be independent of each other, the fluid medium in the first flow channel 34 will not enter the second flow channel 35, and the fluid medium in the second flow channel 35 will not enter the first flow channel 34.

For example, along the extension direction of the first flow channel 34, the first flow channel 34 has a first inlet and a first outlet located at both ends of the first flow channel 34. The fluid medium enters the first flow channel 34 from the first inlet and is discharged from the first flow channel 34 through the first outlet; along the extension direction of the second flow channel 35, the second flow channel 35 has a second inlet and a second outlet located at both ends of the second flow channel 35, and the fluid medium enters the second flow channel 35 from the second inlet and is discharged from the second flow channel 35 through the second outlet.

The first flow channel 34 and the second flow channel 35 can be communicated with each other, the fluid medium in the first flow channel 34 can enter the second flow channel 35, or the fluid medium in the second flow channel 35 can enter the first flow channel 34.

In an embodiment where there is one battery cell 20, the thermally conductive member 3a is disposed on one side of the battery cell 20 and between the battery cell 20 and the inner wall of the box 10. The first flow channel 34 is arranged closer to the battery cell 20 than the second flow channel 35, and the second flow channel 35 is arranged closer to the inner wall of the box 10 than the first flow channel 34.

In an embodiment where there are a plurality of battery cells 20, the plurality of battery cells 20 are stacked along a certain direction (the stacking direction of the first thermally conductive plate 3331, the second thermally conductive plate 3332 and the partition member 335, the first direction x).

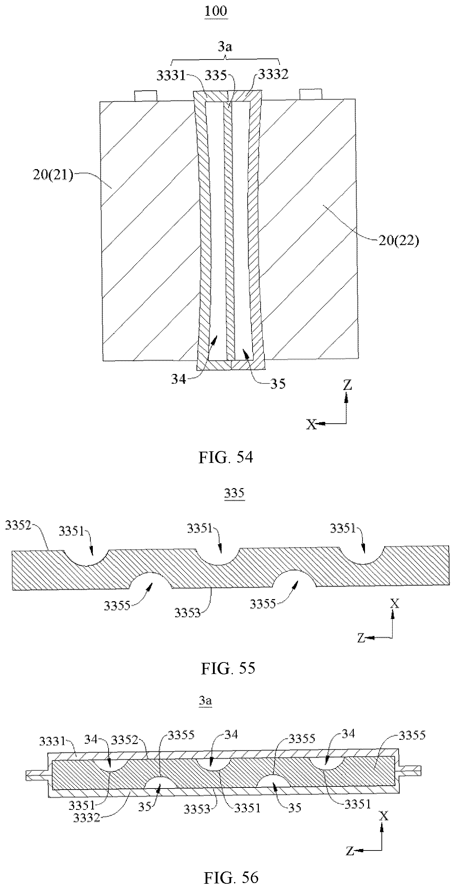

As shown in Fig. 53 and Fig. 54, a thermally conductive member 3a may be provided between two adjacent battery cells 20. For convenience of description, two adjacent battery cells 20 are defined as a first battery cell 21 and a second battery cell 22 respectively. The arrangement direction of the first flow channel 34 and the second flow channel 35 is the same as the stacking direction of the first battery cell 21 and the second battery cell 22, and the arrangement direction of the first flow channel 34 and the second flow channel 35 is the same as the stacking direction of the first thermally conductive plate 3331, the second thermally conductive plate 3332 and the partition member 335. The first flow channel 34 is provided corresponding to the first battery cell 21, the first thermally conductive plate 3331 is used to be thermally conductively connected with the first battery cell 21, and the fluid medium in the first flow channel 34 is used for heat exchange with the first battery cell 21 to adjust the temperature of the first battery cell 21. The second flow channel 35 is provided corresponding to the second battery cell 22, the second thermally conductive plate 3332 is used to be thermally conductively connected with the second battery cell 22, and the fluid medium in the second flow channel 35 is used for heat exchange with the second battery cell 22 to adjust the temperature of the second battery cell 22.

Thermally conductive connection means that heat can be transferred between the connected bodies. For example, the first thermally conductive plate 3331 and the first battery cell 21 are thermally conductively connected, so heat transfer can be carried out between the first battery cell 21 and the first thermally conductive plate 3331, and heat can be transferred between the fluid medium in the first flow channel 34 and the first battery cell 21 through the first thermally conductive plate 3331, thereby achieving heat exchange between the fluid medium in the first flow channel 34 and the first battery cell 21. The second thermally conductive plate 3332 and the second battery cell 22 are thermally conductively connected, so heat transfer can be carried out between the second battery cell 22 and the second thermally conductive plate 3332, and heat can be transferred between the fluid medium in the second flow channel 35 and the second battery cell 22 through the second thermally conductive plate 3332, thereby realizing heat exchange between the fluid medium in the second flow channel 35 and the second battery cell 22.

As shown in Fig. 53 and Fig. 54, the fluid medium in the first flow channel 34 and the fluid medium in the second flow channel 35 can respectively exchange heat with the two battery cells 20, thereby reducing the temperature difference between the two adjacent battery cells 20. The expansion of one battery cell 20 will not squeeze or reduce the size of the flow channel corresponding to the other battery cell 20 or has little impact on the size of the flow channel corresponding to the other battery cell 20, thereby ensuring the heat exchange effect of the flow channel corresponding to the other battery cell 20, so that the safety performance of the battery 100 using the thermally conductive member 3a can be ensured. For example, the expansion of the battery cell 20 (first battery cell 21) corresponding to the first flow channel 34 will cause the size of the first flow channel 34 in the stacking direction (i.e., the first direction x) of the first thermally conductive member, the second thermally conductive member and the partition member to be reduced, but the first battery cell 21 will not affect the size of the second flow channel 35 in the stacking direction of the first thermally conductive plate 3331, the second thermally conductive plate 3332 and the partition member 335 or has little impact on the size of the second flow channel 35 in the stacking direction of the first thermally conductive plate 3331, the second thermally conductive plate 3332 and the partition member 335, thus ensuring the heat exchange capability of the second flow channel 35 to the corresponding battery cell 20 (second battery cell 22). Similarly, the expansion of the battery cell 20 (second battery cell 22) corresponding to the second flow channel 35 will cause the size of the second flow channel 35 in the stacking direction of the first thermally conductive member 3331, the second thermally conductive member 3332 and the partition member 335 to be reduced, but the second battery cell 22 will not affect the size of the first flow channel 34 in the stacking direction of the first thermally conductive plate 3331, the second thermally conductive plate 3332 and the partition member 335 or has little impact on the size of the first flow channel 34 in the stacking direction of the first thermally conductive plate 3331, the second thermally conductive plate 3332 and the partition member 335, thus ensuring the heat exchange capability of the first flow channel 34 to the corresponding battery cell 20 (second battery cell 22).

The first flow channel 34 and the second flow channel 35 respectively correspond to two adjacent battery cells 20 and thus can independently withstand the deformation caused by the expansion of the corresponding battery cell 20. Therefore, the expansion of one battery cell 20 has little interference with the expansion of the other battery cell 20 or will not affect the expansion of the other battery cell 20, which is beneficial to the expansion release of two adjacent battery cells 20 and reducing the mutual interference of the expansion of two adjacent battery cells 20 which would lead to premature pressure release or serious thermal runaway accidents of the battery cells 20, thereby further improving the safety performance of the battery 100. In addition, the fluid medium in the first flow channel 34 and the fluid medium in the second flow channel 35 can exchange heat with the two battery cells 20 respectively, thereby reducing the temperature difference between the two adjacent battery cells 20, so that the safety performance of the battery 100 using the thermally conductive member 3a can be ensured.

There may be one or multiple first flow channels 34, and there may be one or multiple second flow channels 35. In some embodiments, there are multiple first flow channels 34, and/or there are multiple second flow channels 35.

It is feasible that there are multiple first flow channels 34 and one second flow channel 35; or that there is one first flow channel 34 and multiple second flow channels; or that there are multiple first flow channels 34 and multiple second flow channels 35. In an embodiment where there are multiple first flow channels 34, that is, the first thermally conductive plate 3331 and the partition plate 33 jointly define multiple first flow channels 34, the multiple first flow channels 34 are arranged sequentially along the third direction, and each first flow channel 34 extends along the second direction y. The third direction is perpendicular to the second direction y. In an embodiment where there are multiple second flow channels 35, that is, the second thermally conductive plate 3332 and the partition plate 33 jointly define multiple second flow channels 35, the multiple second flow channels 35 are arranged sequentially along the third direction, and each second flow channel 35 extends along the second direction y.

In some other embodiments, the arrangement directions of the multiple first flow channels 34 and the arrangement directions of the multiple second flow channels 35 may be different. The extending direction of the first flow channel 34 and the extending direction of the second flow channel 35 may be different. Of course, the extending directions of the multiple first flow channels 34 may be different, and the extending directions of the multiple second flow channels 35 may also be different.

There are multiple first flow channels 34 and/or there are multiple second flow channels 35, making the thermally conductive member 3a accommodate more fluid medium and making the distribution of the fluid medium more uniform, which is beneficial to improving heat exchange efficiency and heat exchange uniformity and reducing the temperature difference of the battery cell 20 in different areas.

The first flow channel 34 can be formed in various ways. In some embodiments, as shown in Figs. 55-59, the partition member 335 is provided with a first concave groove 3351, and the first concave groove 3351 forms part of the first flow channel 34.

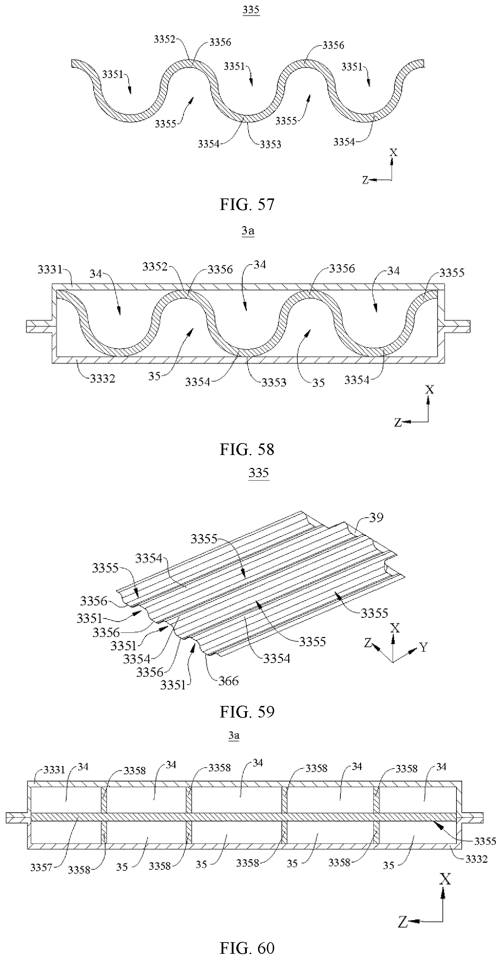

"The first concave groove 3351 forming part of the first flow channel 34" means that the wall of the first concave groove 3351 serves as part of the wall of the first flow channel 34. The first concave groove 3351 has various forms. For example, as shown in Fig. 56, along the stacking direction of the first thermally conductive plate 3331, the second thermally conductive plate 3332 and the partition member 335, the partition member 335 has a first surface 3352 facing the first thermally conductive plate 3331 and a second surface 3353 facing the second thermally conductive plate 3332. The first surface 3352 and the second surface 3353 are arranged oppositely, and the first concave groove 3351 is provided on the first surface 3352 and is recessed toward the second surface 3353. For another example, as shown in Fig. 58, the first concave groove 3351 is provided on the first surface 3352. The first concave groove 3351 is recessed from the first surface 3352 in the direction close to the second surface 3353, and a first convex part 3354 is formed at the position of the second surface 3353 corresponding to the first groove 3351.

The first concave groove 3351 runs through at least one end of the partition member 335 along the second direction y. In this embodiment, the first concave groove 3351 runs through both ends of the partition member 335 along the second direction y, so that the fluid medium can flow in from one end of the first flow channel 34 along the second direction y and flow out from the other end of the first flow channel 34 along the second direction y.

The first concave groove 3351 provided on the partition member 335 forms part of the first flow channel 34, which reduces the size of the thermal management component 30 along the stacking direction of the first thermally conductive plate 3331, the second thermally conductive plate 3332 and the partition member 335 while ensuring that the cross-sectional area of the first flow channel 34 is sufficient.

As shown in Figs. 55-58, in some embodiments, the first thermally conductive plate 3331 blocks the opening of the first concave groove 3351 facing the first thermally conductive plate 3331 to form the first flow channel 34.

In some embodiments, the side of the first thermally conductive plate 3331 facing the partition member 335 abuts against the first surface 3352, so that the first thermally conductive plate 3331 blocks the opening of the first concave groove 3351 facing the first thermally conductive plate 3331, thus forming the first flow channel 34. In other words, the first thermally conductive plate 3331 forms the other part of the first flow channel 34. Therefore, in an embodiment where the side of the first thermally conductive plate 3331 facing the partition member 335 abuts against the first surface 3352, the wall of the first concave groove 3351 serves as part of the wall of the first flow channel 34, and the surface of the first thermally conductive plate 3331 facing the partition member 335 serves as the other part of the wall of the first flow channel 34. The case where the side of the first thermally conductive plate 3331 facing the partition member 335 abuts against the first surface 3352 may be that the surface of the first thermally conductive plate 3331 facing the partition member 335 is in contact with the first surface 3352, but there is no connection relationship. It may also be that the surface of the first thermally conductive plate 3331 facing the partition member 335 and the first surface 3352 contact and are connected, such as by welding.

In some other embodiments, the first surface 3352 is not provided with the first concave groove 3351, and there is a gap between the side of the first thermally conductive plate 3331 facing the partition member 33 and the first surface 3352, then the first concave groove 3351, the first surface 3352 and the first thermally conductive plate 3331 jointly define the first flow channel 34.

The first thermally conductive plate 3331 blocks the opening of the first concave groove 3351 facing the first thermally conductive plate 3331 to form the first flow channel 34, so that the arrangement of the first thermally conductive plate 3331 and the partition member 335 are more compact in the stacking direction of the first thermally conductive plate 3331, the second thermally conductive plate 3332 and the partition member 445, thereby reducing the size of the thermal management component 30 along the stacking direction of the first thermally conductive plate 3331, the second thermally conductive plate 3332 and the partition member 445.

In some other embodiments, the first surface 3352 of the partition member 335 is not provided with the first concave groove 3351, and there is a gap between the side of the first thermally conductive plate 3331 facing the partition member 335 and the first surface 3352, then the first surface 3352 forms part of the wall of the first flow channel 34, and the surface of the first thermally conductive plate 3331 facing the partition member 335 forms the other part of the wall of the first flow channel 34.

The second flow channel 35 can be formed in various ways. As shown in Figs. 55-58, in some embodiments, the partition member 33 is provided with a second concave groove 3355, and the second concave groove 3355 forms part of the second flow channel 35.

"The second concave groove 3355 forming part of the second flow channel 35" means that the wall of the second concave groove 3355 serves as part of the wall of the second flow channel 35. The second concave groove 3355 has various forms. For example, as shown in Fig. 55, along the stacking direction of the first thermally conductive plate 3331, the second thermally conductive plate 3332 and the partition member, the second concave groove 3355 is provided on the second surface 3353 and is recessed in the direction close to the first surface 3352. For another example, as shown in Fig. 57, the second concave groove 3355 is provided on the second surface 3353. The second concave groove 3355 is recessed from the second surface 3353 in the direction close to the first surface 3352, and a second protrusion 3356 is formed at the position of the first surface 3352 corresponding to the second concave groove 3355.

The second concave groove 3355 runs through at least one end of the partition member 335 along the second direction y. In this embodiment, the second concave groove 3355 runs through both ends of the partition member 335 along the second direction y, so that the fluid medium can flow in from one end of the second flow channel 35 along the second direction Z and flow out from the other end of the second flow channel 35 along the second direction Z.

The second concave groove 3355 provided on the partition member 335 forms part of the second flow channel 35, which reduces the size of the thermal management component 30 along the stacking direction of the first thermally conductive plate 3331, the second thermally conductive plate 3332 and the partition member 335 while ensuring that the cross-sectional area of the second flow channel 35 is sufficient.

As shown in Figs. 55-58, in some embodiments, the second thermally conductive plate 3332 blocks the opening of the second concave groove 3355 facing the second thermally conductive plate 3332 to form the second flow channel 35.

In some embodiments, the side of the second thermally conductive plate 3332 facing the partition member 335 abuts against the second surface 3353, so that the second thermally conductive plate 3332 blocks the opening of the second concave groove 3355 facing the second thermally conductive plate 3332, thus forming the second flow channel 35. In other words, the second thermally conductive plate 3332 forms the other part of the first flow channel 34. Therefore, in an embodiment where the side of the second thermally conductive plate 3332 facing the partition member 335 abuts against the second surface 3353, the wall of the second concave groove 3355 serves as part of the wall of the second flow channel 35, and the surface of the second thermally conductive plate 3332 facing the partition member 335 serves as the other part of the wall of the second flow channel 35. The case where the side of the second thermally conductive plate 3332 facing the partition member 335 abuts against the second surface 3353 may be that the surface of the second thermally conductive plate 3332 facing the partition member 335 is in contact with the second surface 3353, but there is no connection relationship. It may also be that the surface of the second thermally conductive plate 3332 facing the partition member 335 and the second surface 3353 contact and are connected, such as by welding.

In some other embodiments, the second surface 3353 is not provided with the second concave groove 3355, and there is a gap between the side of the second thermally conductive plate 3332 facing the partition member 335 and the second surface 3353, then the second concave groove 3355, the second surface 3353 and the second thermally conductive plate 3332 jointly define the second flow channel 35.

The second thermally conductive plate 3332 blocks the opening of the second concave groove 3355 facing the second thermally conductive plate 3332 to form the second flow channel 35, so that the arrangement of the second thermally conductive plate 3332 and the partition member 335 are more compact in the stacking direction of the first thermally conductive plate 3331, the second thermally conductive plate 3332 and the partition member, thereby reducing the size of the thermally conductive member 3a along the stacking direction of the first thermally conductive plate 3331, the second thermally conductive plate 3332 and the partition member 335.

Please continue to refer to Figs. 55-58, in an embodiment where there are multiple first flow channels 34, there are a plurality of first concave grooves 3351, and the plurality of first concave grooves 3351 are arranged along the third direction, the third direction being perpendicular to the stacking direction of the first thermally conductive plate 3331, the second thermally conductive plate 3332 and the partition member 335. The first thermally conductive plate 3331 blocks the openings of the plurality of first concave grooves 3351 facing the first thermally conductive plate 3331, thereby forming a plurality of first flow channels 34.

In an embodiment where there are multiple second flow channels 35, there are a plurality of second concave grooves 3355, and the plurality of second concave grooves 3355 are arranged along the third direction, the third direction being perpendicular to the stacking direction of the first thermally conductive plate 3331, the second thermally conductive plate 3332 and the partition member 335. The second thermally conductive plate 3332 blocks the openings of the plurality of second concave grooves 3355 facing the second thermally conductive plate 3332, thereby forming a plurality of second flow channels 35.

Here, the partition member 335 may be provided with a plurality of first concave grooves 3351 only on the first surface 3352, and a second concave groove 3355 or no second concave groove 3355 may be provided on the second surface 3353; or the partition member 335 may be provided a plurality of second concave grooves 3355 only on the second surface 3353, and a first concave groove 3351 or no first concave groove 3351 may be provided on the first surface 3352; or the partition member 335 may be provided with a plurality of first concave grooves 3351 on the first surface 3352 and provided with a plurality of second concave grooves 3355 on the second surface 3353.

There are multiple first concave grooves 3351, which can form multiple first flow channels 34, and/or there are multiple second concave grooves 3355, which can form multiple second flow channels 35, thus making the thermally conductive member 3a accommodate more fluid medium and making the distribution of the fluid medium more uniform, which is beneficial to improving heat exchange efficiency and heat exchange uniformity and reducing the temperature difference of the battery cell 20 in different areas.

Referring to Figs. 55-58, the first concave grooves 3351 and the second concave grooves 3355 are alternately arranged along the third direction.

"The first concave grooves 3351 and the second concave grooves 3355 being alternately arranged in the third direction" means that along the stacking direction of the first thermally conductive plate 3331, the second thermally conductive plate 3331 and the partition member 335, at least part of the projection of each second concave groove 3355 on the first surface 3352 along the third direction is located between two adjacent first concave grooves 3351; and/or along the stacking direction of the first thermally conductive plate 3331, the second thermally conductive plate 3331 and the partition member 335, at least part of the projection of each first concave groove 3351 on the second surface 3353 along the third direction is located between two adjacent second concave grooves 3355, so that the first flow channel 34 and the second flow passage 35 are alternately arranged in the third direction.

Figs. 55-56 show the case where along the stacking direction of the first thermally conductive plate 3331, the second thermally conductive plate 3332 and the partition member, the projection of each second concave groove 3355 on the first surface 3352 is all located between two adjacent first concave grooves 3351. Figs. 57-58 show the case where along the stacking direction of the first thermally conductive plate 3331, the second thermally conductive plate 3332 and the partition member, a part of the projection of each second concave groove 3355 on the first surface 3352 along the third direction is located between two adjacent first concave grooves 3351, and the other part of the projection of each second concave groove 3355 on the first surface 3352 along the third direction overlaps with the first concave groove 3355.

The first concave grooves 3351 and the second concave grooves 3355 are alternately arranged along the third direction, so that the first flow channels 34 and the second flow channels 35 are alternately arranged along the third direction, and when the thermal management component 30 is located between two adjacent battery cells 20, the temperature distribution of the battery cell 20 corresponding to the first flow channel 34 is relatively uniform along the third direction, and the temperature distribution of the battery cell 20 corresponding to the second flow channel 35 is relatively uniform along the third direction.

Please refer to Figs. 57-59, in some embodiments, the partition member 335 is a corrugated plate, which has a simple structure and is easy to manufacture.

In this embodiment, the first concave groove 3351 is provided on the first surface 3352, the first concave groove 3351 is recessed from the first surface 3352 in the direction close to the second surface 3353, and the first convex part 3354 is formed at the position of the second surface 3353 corresponding to the first concave groove 3351; the second concave groove 3355 is provided on the second surface 3353, the second concave groove 3355 is recessed from the second surface 3353 in the direction close to the first surface 3352, and the second protrusion 3356 is formed at a position of the first surface 3352 corresponding to the second concave groove 3355. The first concave groove 3351 and the second concave groove 3355 are alternately arranged along the third direction, and the first convex part 3354 and the second protrusion 3356 are alternately arranged along the third direction, so as to form a corrugated plate.

In some other embodiments, the partition member 335 may also be a component in other structural forms, as shown in Figs. 55 and 56.

As shown in Fig. 60, the first flow channel 34 can also be formed in other forms. For example, in some other embodiments, the partition member 335 includes a body part 3357 and a first partition part 3358, the two ends of the first partition part 3358 along the first direction x are respectively connected to the body part 3357 and the first thermally conductive plate 3331, and the body part 3357, the first partition part 3358 and the first thermally conductive plate 3331 jointly define the first flow channel 34.

The body part 3357 and the first partition part 3358 are both flat-plate structures, and a first space is defined between the body part 3357 and the first thermally conductive plate 3331. There may be one or multiple first partition parts 3358. In an embodiment where there are multiple first partition parts 3358, the multiple first partition parts 3358 are spaced apart along the first direction Y, and the multiple first partition parts 3358 divide the first space into a plurality of first sub-spaces, so that the body part 3357, the first thermally conductive plate 3331 and the multiple first partition parts 3358 jointly define a plurality of first flow channels 34. The body part 3357 and the first partition part 3358 may be integrally formed. For example, the body part 3357 and the first partition part 3358 are formed through an integral forming process such as casting and extrusion. The body part 3357 and the first partition part 3358 are provided separately, and then connected as a whole through welding, welding, screw connection, etc.

The body part 3357, the first partition part 3358 and the first thermally conductive plate 3331 jointly define a plurality of first flow channels 34, so that the thermally conductive member 3a can accommodate more fluid medium and the distribution of the fluid medium can be more uniform, which is beneficial to improving heat exchange efficiency and heat exchange uniformity and reducing the temperature difference of the battery cell 20 in different areas, and the first partition part 3358 can support the first thermally conductive plate 3331 and enhance the capacity of the first thermally conductive plate 3331 to resist deformation.

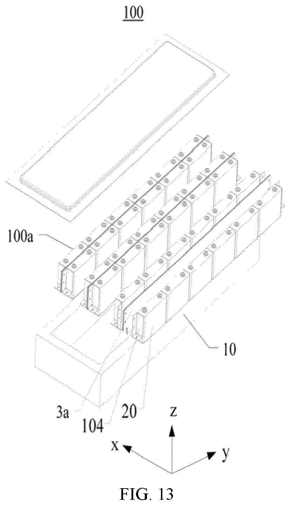

The second flow channel 35 may also be formed in other forms. For example, please continue to refer to Fig. 13, the partition member 33 further includes a second partition part 3359, the two ends of the second partition part 3359 along the second direction Z are respectively connected to the body part 3357 and the second thermally conductive plate 3332, and the body part 3357, the second partition part 3359 and the second thermally conductive plate 3332 jointly define the second flow channel 35.

The body part 3357 and the second partition part 3359 are both flat-plate structures, and a second space is defined between the body part 3357 and the second thermally conductive plate 3332. There may be one or multiple second partition parts 3359. In an embodiment where there are multiple second partition parts 3359, the multiple second partition parts 3359 are spaced apart along the first direction Y, and the multiple second partition parts 3359 divide the second space into a plurality of first sub-spaces, so that the body part 3357, the second thermally conductive plate 3332 and the multiple second partition parts 3359 jointly define a plurality of second flow channels 35. The body part 3357 and the second partition part 3359 may be integrally formed. For example, the body part 3357 and the second partition part 3359 are formed through an integral forming process such as casting and extrusion. The body part 3357 and the second partition part 3359 are provided separately, and then connected as a whole through welding, welding, screw connection, etc. In addition, the body part 3357, the first partition part 3358 and the second partition part 3359 may be integrally formed.

The body part 3357, the second partition part 3359 and the second thermally conductive plate 3332 jointly define a plurality of second flow channels 35, so that the thermally conductive member 3a can accommodate more fluid medium and the distribution of the fluid medium can be more uniform, which is beneficial to improving heat exchange efficiency and heat exchange uniformity and reducing the temperature difference of the battery cell 20 in different areas, and the second partition part 3359 can support the first thermally conductive plate 3331 and enhance the capacity of the second thermally conductive plate 3332 to resist deformation.

The first flow channel 34 and the second flow channel 35 may extend in the same direction, or may extend in different directions. In this embodiment, the extending direction of the first flow channel 34 is consistent with the extending direction of the second flow channel 35. Both the first flow channel 34 and the second flow channel 35 extend along the second direction y, which facilitates manufacturing.

For the fluid medium flowing in the first flow channel 34 and the second flow channel 35, the heat exchange capability of the fluid medium in the first flow channel 34 to the corresponding battery cell 20 gradually weakens along the flow direction of the fluid medium. For example, the thermally conductive member 3a is used to cool down the battery cell 20, the temperature of the fluid medium in the first flow channel 34 and the second flow channel 35 will gradually increase along the flow direction of the fluid medium, and the cooling capability of the fluid medium with high temperature to the battery cell 20 is weakened.

Based on the above considerations, in some embodiments, along the extending direction of the first flow channel 34 and the second flow channel 35, the first flow channel 34 has a first inlet (not shown in the figure) and a first outlet (not shown in the figure), the second flow channel 35 has a second inlet (not shown in the figure) and a second outlet (not shown in the figure), and the direction from the first inlet to the first outlet is opposite to the direction from the second inlet to the second outlet.

The first inlet allows the fluid medium to enter the first flow channel 34, the first outlet allows the fluid medium to be discharged from the first flow channel 34; the second inlet allows the fluid medium to enter the second flow channel 35, and the second outlet allows the fluid medium to be discharged from the second flow channel 35.

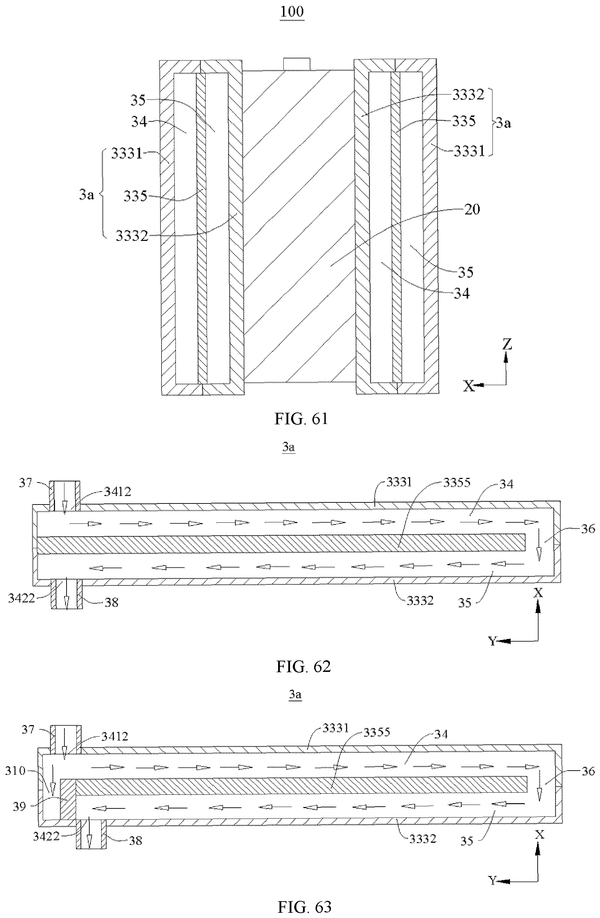

For example, as shown in Fig. 61, in an embodiment where thermally conductive members 3a are provided on both sides of the battery cell 20, one side of the battery cell 20 corresponds to the first flow channel 34 of a thermally conductive member 3a, the other side of battery cell 20 corresponds to the second flow channel 35 of another thermally conductive member 3a, then the fluid medium on both sides of the battery cell 20 flows in the opposite direction, and along the extension direction of the first flow channel 34 and the second flow channel 35 (second direction y), the heat exchange capabilities of the fluid medium in the first flow channel 34 and the fluid medium in the second flow channel 35 can complement each other, thereby reducing the difference in local temperature of the battery cell 20.

Therefore, the direction from the first inlet to the first outlet is opposite to the direction from the second inlet to the second outlet, that is, the flow direction of the fluid medium in the first flow channel 34 is opposite to the flow direction of the fluid medium in the second flow channel 35. The closer the battery cell 20 is to the inlet of the corresponding flow channel, the better the heat exchange effect is, and the closer the battery cell 20 is to the outlet of the corresponding flow channel, the worse the heat exchange effect is. This arrangement of the flow channel 34 and the flow channel 35 can reduce the local difference in thermal management of the battery cells 20 in the battery 100, making heat exchange more uniform.

As shown in Fig. 62, in some embodiments, the thermally conductive member 3a includes a communicating cavity 36 located at one end of the partition member 335, the first flow channel 34 is communicated with the communicating cavity 36, and the second flow channel 35 is communicated with the communicating cavity 36.

The communicating cavity 36 is located at one end of the partition member 33, and the partition member 335, the first thermally conductive plate 3331 and the second thermally conductive plate 3332 jointly define the communicating cavity 36. In this embodiment, the communicating cavity 36 is a gap located between one end of the partition member 335 and the first thermally conductive plate 3331 and the second thermally conductive plate 3332 in the second direction y.

In some other embodiments, the communicating cavity 36 can also be formed by other structures. For example, the thermally conductive member 3a further includes a communicating pipe, the first flow channel 34 and the second flow channel 35 are communicated through the communicating pipe, and the internal channel of the communicating pipe is the communicating cavity 36.

Both the number of the first flow channel 34 and the number of the second flow channel 35 may be multiple. In an embodiment where there are multiple first flow channels 34, all first flow channels 34 may be communicated with the communicating cavity 36, and then the fluid medium in each first flow channel 34 is discharged from the first flow channel 34 from the first outlet, flows through the communicating cavity 36, and enters the second flow channel 35 from the second inlet. In some other embodiments, part of the multiple first flow channels 34 may be communicated with the communicating cavity 36, and the fluid medium in these first flow channels 34 flows through the communicating cavity 36 from the first outlet and then enters the second flow channel 35 from the second inlet; the other part of the multiple first flow channels 34 is not connected with the communicating cavity 36, and the fluid medium in these first flow channels 34 cannot enter the second flow channel 35. The direction indicated by the hollow arrow in Fig. 62 is the flow direction of the fluid medium in the first flow channel 34 and the second flow channel 35.

In an embodiment where there are multiple second flow channels 35, all second flow channels 35 may be communicated with the communicating cavity 36, and then the fluid medium in each first flow channel 34 can be discharged from the first flow channel 34 from the first outlet, flow through the communicating cavity 36, and enter each second flow channel 35 from the second inlet. In some other embodiments, part of the multiple second flow channels 35 may be communicated with the communicating cavity 36, and the fluid medium in the first flow channels 34 communicated with the communicating cavity 36 flows through the communicating cavity 36 and then enters the second flow channels 35 communicated with the communicating cavity 36 from the second inlet; the other part of the multiple second flow channels 35 is not connected with the communicating cavity 36, and the fluid medium in the first flow channels 34 cannot enter these second flow channels 35.

In this embodiment, there are multiple first flow channels 34 and multiple second flow channels 35, and each first flow channel 34 and each second flow channel 35 are communicated with the communicating cavity 36.

The number of the first flow channels 34 and the number of the second flow channels 35 may be the same or different.

The first flow channel 34 is communicated with the communicating cavity 36 and the second flow channel 35 is communicated with the communicating cavity 36, then the fluid medium in the first flow channel 34 can flow into the second flow channel 35, and the fluid medium flowing out from the outlet of the first flow channel 34 (first outlet) flows into the second flow channel 35 from the inlet of the second flow channel 35 (second inlet). This arrangement can reduce the local difference in thermal management of the battery cells 20 in the battery 100, making the heat exchange more uniform.

Please refer to Figs. 25, 26, 62, and 63. In some embodiments, the thermally conductive member 3a includes a medium inlet 3412 and a medium outlet 3422. The medium inlet 3412 is communicated with the communicating cavity 36 through the first flow channel 34, and the medium outlet 3422 is communicated with the communicating cavity 36 through the second flow channel 35.

The medium inlet 3412 is provided on the first thermally conductive plate 3331 and is communicating with the first flow channel 34. The medium outlet 3422 is provided on the second thermally conductive plate 3332 and is communicating with the second flow channel 35.

The fluid medium enters the first flow channel 34 from the medium inlet 3412, flows through the communicating cavity 36 and into the second flow channel 35, and is discharged from the medium outlet 3422. The fluid medium exchanges heat with the battery cells 20 during the flow process. The directions indicated by the hollow arrows in Fig. 62 and Fig. 63 are both the flow direction of the fluid medium in the first flow channel 34 and the second flow channel 35.

The medium inlet 3412 and the medium outlet 3422 are arranged to facilitate the entry of the fluid medium into the first flow channel 34 and the second flow channel 35, and facilitate the discharge of the fluid medium from the first flow channel 34 and the second flow channel 35 after exchanging heat with the battery cell 20, so that the fluid medium that has not undergone heat exchange can enter the first flow channel 34 and the second flow channel 35, thereby ensuring the heat exchange capability of the fluid medium in the first flow channel 34 and the second flow channel 35.

Please refer to Figs. 62 and 63. In some embodiments, along the extension direction of the first flow channel 34, the medium inlet 3412 is provided at an end of the first thermally conductive plate 3331 away from the communicating cavity 36; along the extension direction of the second flow channel 35, the medium outlet 3422 is provided at an end of the second thermally conductive plate 3332 away from the communicating cavity 36.

The extending direction of the first flow channel 34 and the extending direction of the second flow channel 35 are both parallel to the second direction y. In some other embodiments, the extension direction of the first flow channel 34 and the extension direction of the second flow channel 35 may be different. For example, the extension direction of the first flow channel 34 is parallel to the second direction y, and the extension direction of the second flow channel 35 is parallel to a preset direction. The included angle between the preset direction and the second direction Z is an acute angle, or the preset direction is perpendicular to the second direction y, and the preset direction is perpendicular to the first direction x.

A medium inflow pipe 37 is inserted into the medium inlet 3412 to facilitate communication between the medium inlet 3412 and equipment that provides fluid medium. A medium outflow pipe 38 is inserted into the medium outlet 3422 to facilitate communication between the medium outlet 3422 and equipment for recovering fluid medium.

The medium inlet 3412 is provided at an end of the first thermally conductive plate 3331 away from the communicating cavity 36, and the medium outlet 3422 is provided at an end of the second thermally conductive plate 3332 away from the communicating cavity 36. Then, the fluid medium enters the first flow channel 34 from the medium inlet 3412 and flows through the entire first flow channel 34 along the extension direction of the first flow channel 34 and enters the second flow channel 35, and then flows through the entire second flow channel 35 along the extension direction of the second flow channel 35 before being discharged from the medium outlet 3422, so that the path through which the fluid medium flows within the thermal management component 30 is the longest to fully exchange heat with the battery cells 20, thereby improving heat exchange efficiency and heat exchange uniformity.

As shown in Fig. 62 and Fig. 63, in some embodiments, the end of the first flow channel 34 away from the communicating cavity 36 along its extension direction and the end of the second flow channel 35 away from the communicating cavity 36 along its extension direction are not connected to each other.

In this embodiment, the extending direction of the first flow channel 34 and the extending direction of the second flow channel 35 are both parallel to the second direction y. The communicating cavity 36 is located at one end of the partition member 33 along the second direction y. As shown in Fig. 63, the thermally conductive member 3a further includes a blocking member 39 (or called a blocking member). The blocking member 39 is provided at an end of the partition member 335 away from the communicating cavity 36 along the second direction y to block the end of the second flow channel 35 away from the communicating cavity 36 along the second direction y, so as to prevent the fluid medium entering the first flow channel 34 from the medium inlet 3412 from flowing into the second flow channel 35 in the direction away from the communicating cavity 36 in the first flow channel 34. Of course, in some other embodiments, the blocking member 39 is disposed at an end of the partition member 335 away from the communicating cavity 36 along the second direction y, and may also be used to block the 40 end of the first flow channel 34 away from the communicating cavity 36 along the second direction y, so as to prevent the fluid medium entering the first flow channel 34 from the medium inlet 3412 from flowing into the second flow channel 35 in the direction away from the communicating cavity 36 in the first flow channel 34.

The blocking member 39 and the partition member 335 may be provided separately, and then the blocking member 39 and the partition member 335 that are provided separately may be connected into an integral structure. For example, the blocking member 39 and the partition member 335 are connected as a whole by welding, bonding, etc. The blocking member 39 and the partition member 335 may also be integrally formed, for example, formed by an integral forming process such as casting or stamping.

Along the stacking direction of the first thermally conductive plate 3331, the second thermally conductive plate 3332 and the partition member 335, the projection of the medium outlet 3422 on the partition member 353 is located on the side of the blocking component 39 facing the communicating cavity 36, so that the fluid medium inside the second flow channel 35 can be discharged from the medium inlet 3412.

The end of the first flow channel 34 away from the communicating cavity 36 along its extension direction and the end of the second flow channel 35 away from the communicating cavity 36 along its extension direction are not connected with each other. Then, the fluid medium can only flow through the entire first flow channel 34 after entering the first flow channel 34, then enters the second flow channel 35 from the communicating cavity 36, and flows through the entire second flow channel 35 before being discharged from the medium outlet 3422, so that the path through which the fluid medium flows within the thermal management component 30 is the longest to fully exchange heat with the battery cells 20, thereby improving heat exchange efficiency and heat exchange uniformity.

In some embodiments, there are multiple first flow channels 34 and multiple second flow channels 35, and each first flow channel 34 and each second flow channel 35 are communicated with the communicating cavity 36.

In some other embodiments, the number of the first flow channels 34 may be one, the number of the second flow channels 35 may be multiple, and each second flow channel 35 is communicated with the communicating cavity 36; or the number of the first flow channels 34 and the number of the second flow channels 35 are both one; or the number of the second flow channels 35 may be one, the number of the first flow channels 34 may be multiple, and each first flow channel 34 is communicated with the communicating cavity 36.

There are multiple first flow channels 34 and multiple second flow channels 35 that are all communicated with the communicating cavity 36, the fluid medium in each first flow channel 34 can flow into each second flow channel 35, and the fluid medium flowing out from the outlet of the first flow channel 34 flows into the second flow channel 35 from the inlet of the second flow channel 35. This arrangement can reduce the local difference in thermal management of the battery cells 20 in the battery 100, making the heat exchange more uniform.

In an embodiment where there are multiple first flow channels 34, the number of the medium inlets 3412 can be set differently. For example, please refer to Fig. 53 and Fig. 63, in some embodiments, there is one medium inlet 3412, and each first channel 34 is communicated with the communicating cavity 36 and the medium inlet 3412.

In an embodiment where the blocking member 39 blocks the end of the second flow channel 35 away from the communicating cavity 36, as shown in Fig. 63, a branching gap 310 is formed between the side of the blocking member 39 away from the communicating cavity 36 and the first thermally conductive plate 3331 and the second thermally conductive plate 3332, and the medium inlet 3412 is communicated with each first flow channel 34 through the branching gap 310. The fluid medium flowing in from the medium inlet 3412 enters the branching gap 310 and is then distributed from the branching gap 310 to each first flow channel 34.

Therefore, there is only one medium inlet 3412, which facilitates the synchronous flow of fluid medium into each first flow channel 34, and the number of medium inlets 3412 provided on the first thermally conductive plate 3331 is small, which reduces the impact of the arrangement of the medium inlets 3412 on the structural strength of the first thermally conductive plate 3331. It also makes the structure of the thermally conductive member 3a simpler and easier to manufacture.

In some other embodiments, there are multiple medium inlets 3412, and each first flow channel 34 is communicated with the communicating cavity 36 and one medium inlet 3412.

The number of the medium inlets 3412 is the same as the number of the first flow channels 34 and corresponds one to one. Each medium inlet 3412 allows the fluid medium to flow into the corresponding first flow channel 34, which facilitates independent control of the entry of fluid medium into each first flow channel 34 and facilitates control of the fluid medium entering the required first flow channel 34 according to actual needs, thereby controlling the distribution of the fluid medium inside the heat regulating tube to reasonably adjust the temperature of the battery cell 20.

In an embodiment where there are multiple second flow channels 35, as shown in Fig. 52, there are multiple medium outlets 3422, and each second flow channel 35 is communicated with the communicating cavity 36 and one medium outlet 3422.

There are multiple second flow channels 35 and multiple medium outlets 3422. The medium outlets 3422 and the second flow channels 35 are arranged in one-to-one correspondence. The fluid medium in each second flow channel 35 is discharged from the corresponding medium outlet 3422.

In some other embodiments, there may also be one medium outlet 3422, the medium outlet 3422 is communicated with each second flow channel 35, and the fluid medium in all the second flow channels 35 are discharged from the medium outlet 3422.

Each second flow channel 35 is communicated with the communicating cavity 36 and one medium outlet 3422, so that the fluid medium can be discharged from the second flow channel 35 faster, and the heat exchange efficiency is improved.

In some embodiments, the partition member 335 is an integrally formed structure.

The partition member 335 may be a structure formed by an integrated forming process such as stamping and casting. In the embodiment where the partition member 335 is a corrugated plate, the corrugated plate is formed by stamping. The partition member 335 is an integrally formed structure, which is easy to manufacture and has good structural strength.

In some embodiments, the first thermally conductive plate 3331 can be an integrally formed structure, and the second thermally conductive plate 3332 can be an integrally formed structure. For example, the first thermally conductive plate 3331 and the second thermally conductive plate 3332 are both formed by casting or stamping.

In some embodiments, the first thermally conductive plate 3331 is welded to the partition member 335, and/or the second thermally conductive plate 3332 is welded to the partition member 335.

The first thermally conductive plate 3331 and the partition member 335 may be welded, the second thermally conductive plate 3332 and the partition member 335 may be connected in other ways (such as bonding), or the second thermally conductive plate 3332 may be in contact with the partition member 335 without a connection relationship. It is also possible that the second thermally conductive plate 3332 and the partition member 335 are welded, and the first thermally conductive plate 3331 and the partition member 335 are connected in other ways (such as bonding), or the first thermally conductive plate 3331 is in contact with the partition member 335 without a connection relationship. In this embodiment, In the embodiment, both the first thermally conductive plate 3331 and the second thermally conductive plate 3332 are welded to the partition member 335.

In an embodiment where the partition plate 335 is a corrugated plate, the first thermally conductive plate 3331 is welded to a second convex part 3356, and the second thermally conductive plate 3332 is welded to a first convex part 3354 (please refer to Fig. 58). Such a connection method enables the partition member 335 to support the first thermally conductive plate 3331 and the second thermally conductive plate 3332, improving the capabilities of the first thermally conductive plate 3331 and the second thermally conductive plate 3332 to resist expansion and deformation of the battery cell 20.

The first thermally conductive plate 3331 and the partition member 335 are realized by welding, so that the connection stability between the first thermally conductive plate 3331 and the partition member 335 is better; and the second thermally conductive plate 3332 and the partition member 335 are realized by welding, so that the connection stability between the second thermally conductive plate 3332 and the partition member 335 is better.

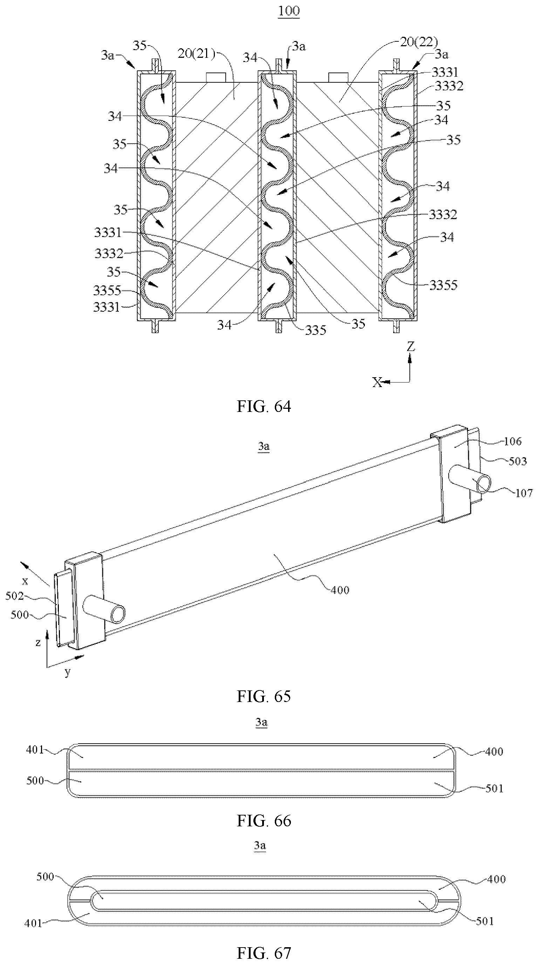

As shown in Fig. 64, the battery 100 includes a first battery cell 21, a second battery cell 22 and a thermally conductive member 3a that are adjacent. The thermally conductive member 3a is disposed between the first battery cell 21 and the second battery cell 22, the first thermally conductive plate 3331 is thermally conductively connected to the first battery cell 21, and the second thermally conductive plate 3332 is thermally conductively connected to the second battery cell 22.

The fluid medium in the first flow channel 34 and the fluid medium in the second flow channel 35 can respectively exchange heat with the first battery cell 21 and the second battery cell 22, thereby reducing the temperature difference between the first battery cell 21 and the second battery cell 22.

The expansion of the first battery cell 21 will not squeeze or reduce the size of the second flow channel 35 corresponding to the second battery cell 22 or has little impact on the size of the second flow channel 35 corresponding to the second battery cell, so that the heat exchange capability of the second flow channel 35 corresponding to the second battery cell 22 is ensured; the expansion of the second battery cell 22 will not squeeze or reduce the size of the first flow channel 34 corresponding to the first battery cell 21 or has little impact on the size of the first flow channel 34 corresponding to the first battery cell, so that the heat exchange capability of the first flow channel 34 corresponding to the first battery cell 21 is ensured, thus ensuring the safety performance of the battery 100 using the thermally conductive member 3a.

In addition, the first flow channel 34 and the second flow channel 35 respectively correspond to the first battery cell 21 and the second battery cell 22. Therefore, the first flow channel 34 can withstand the deformation caused by the expansion of the first battery cell 21, and the second flow channel 35 can withstand the deformation caused by the expansion of the second battery cell 22. Therefore, the expansion of the first battery cell 21 has little interference with the expansion of the second battery cell 22 or will not affect the expansion of the second battery cell 22, and the expansion of the second battery cell 22 has little interference with the expansion of the first battery cell 21 or will not affect the expansion of the first battery cell 21, which is beneficial to the expansion release of the first battery cell 21 and the second battery cell 22 and reducing the mutual interference of the expansion of the first battery cell 21 and the second battery cell 22 which would lead to premature pressure release or serious thermal runaway accidents of the first battery cell 21 and the second battery cell 22, thereby further improving the safety performance of the battery 100.

Continuing to refer to Fig. 64, in some embodiments, the thermally conductive member 3a may also be provided on the side of the first battery cell 21 away from the second battery cell 22, and the reinforcement component 30 may also be provided on the side of the second battery cell 22 away from the first battery cell 21.

For convenience of description, the thermally conductive member 3a located between the first battery cell 21 and the second battery cell 22 is defined as the first thermally conductive member, and the thermally conductive member 3a located on the side of the first battery cell 21 away from the second battery cell 22 is defined as the second thermally conductive member, and the thermally conductive member 3a located on the side of the second battery cell 22 away from the first battery cell 21 is the third thermally conductive member.

The flow directions of the fluid medium in the first flow channel 34 and the fluid medium in the second flow channel 35 of the first thermally conductive member are opposite. The flow directions of the fluid medium in the first flow channel 34 and the fluid medium in the second flow channel 35 of the second thermally conductive member are opposite. The flow directions of the fluid medium in the first flow channel 34 and the fluid medium in the second flow channel 35 of the third thermally conductive member are opposite.

The second thermally conductive plate 3332 of the second thermally conductive member is thermally conductively connected to the side of the first battery cell 21 away from the second battery cell 22. The flow direction of the fluid medium in the first flow channel 34 of the first thermally conductive member is opposite to the direction of the thermally conductive member 3a of the second flow channel 35 of the second thermally conductive member. In this way, the heat exchange capabilities of the fluid media located on both sides of the first battery cell 21 along the second direction y can complement each other, thereby reducing the difference in local temperature of the first battery cell 21.

The first thermally conductive plate 3331 of the third thermally conductive member is thermally conductively connected to the side of the second battery cell 22 away from the first battery cell. The flow direction of the fluid medium in the second flow channel 35 of the first thermally conductive member is opposite to the direction of the thermally conductive member 3a of the first flow channel 34 of the third thermally conductive member. In this way, the heat exchange capabilities of the fluid media located on both sides of the second battery cell 22 along the second direction y can complement each other, thereby reducing the difference in local temperature of the second battery cell 22.

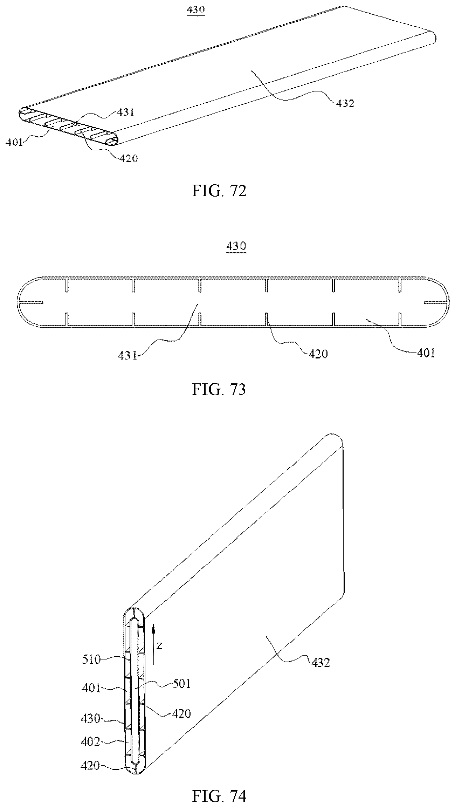

In some embodiments, as shown in Figs. 65 to 82, at least a portion of the thermally conductive member 3a is configured to be deformable when under pressure, so that the thermally conductive member 3a provides a certain expansion space for the battery cell 20, which is beneficial to reducing the extrusion force between the thermally conductive member 3a and the battery cell 20.

In some embodiments, as shown in Fig. 65, the thermally conductive member 3a includes a heat exchange layer 400 and a compressible layer 500 arranged in a stacked manner. The heat exchange layer 400 can improve the heat exchange efficiency of the battery cell 20, and improve the heat dissipation capability of the battery cell 20. The elastic modulus of the compressible layer 500 is smaller than the elastic modulus of the heat exchange layer 400. After receiving the expansion force released by the battery cell 20, the compressible layer 500 can deform along the direction of the expansion force of the battery cell 20, thereby absorbing the expansion part of the battery cell 20, ensuring the expansion space of the battery cell 20, and avoiding large deformation of the entire battery 100. Also, the compressible layer 500 is conducive to absorbing tolerances when assembling the battery, facilitating mounting and keeping the compact structure of the battery.

The heat exchange layer 400 is a layered structure for exchanging heat with the battery cell 20. When the temperature of the battery cell 20 is higher than the temperature of the heat exchange layer 400, the heat of the battery cell 20 is conducted to the heat exchange layer 400, causing the temperature of the battery cell 20 to reduce; when the temperature of the battery cell 20 is lower than the temperature of heat exchange, the heat of the heat exchange layer 400 is conducted to the battery cells 20, causing the temperature of the battery cells 20 to increase.

The compressible layer 500 is a layered structure that is greatly compressed to deform after being subjected to a force.

Optionally, when the compressible layer 500 is subjected to a force along the stacking direction, the compressible layer 500 may be compressed along the stacking direction and deformed greatly.

The elastic modulus is the proportional relationship between stress and strain of a material or structure during the elastic deformation stage. In the elastic deformation stage and under the premise of the same stress, the greater the elastic modulus, the smaller the deformability of the material or structure; the smaller the elastic modulus, the greater the deformability of the material or structure.

The heat exchange layer 400 may have one or more layers, and the compressible layer 500 may have one or more layers as well.

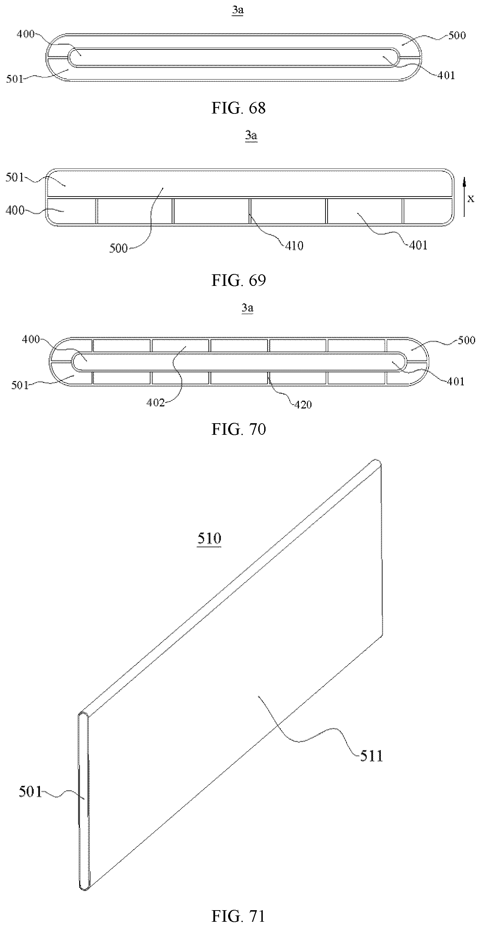

As an example, as shown in Fig. 66, the thermally conductive member 3a includes one heat exchange layer 400 and one compressible layer 500; as shown in Fig. 67, the thermally conductive member 3a includes two heat exchange layers 400 and one compressible layer 500, the compressible layer 500 is disposed between the two heat exchange layers 400; as shown in Fig. 68, the thermally conductive member 3a includes one heat exchange layer 400 and two compressible layers 500, and the heat exchange layer 400 is disposed between the two compressible layers 500.

In some embodiments, the compressible layer 500 includes a compressible cavity 501, and the compressible cavity 501 is a chamber whose volume becomes smaller after the compressible layer 500 is subjected to a force.

After receiving the expansion force released by the battery cell 20, the gas in the compressible cavity 501 is compressed, causing the compressible layer 500 to deform along the direction of the expansion force of the battery cell 20.

In some embodiments, the compressible cavity 501 is filled with a phase change material or elastic material.

Phase change materials refer to substances that change the state of matter and provide latent heat when the temperature remains unchanged. The process of changing physical properties is called a phase change process. At this time, the phase change material will absorb or release a large amount of latent heat.

Elastic materials refer to materials with low elastic modulus. Elastic materials may be greatly deformed under the expansion force of battery cells.

When the compressible cavity 501 is filled with a phase change material, the heat capacity of the battery can be increased, so that the thermally conductive member 3a can achieve the function of insulating the battery cell 20 or absorbing the heat of the battery cell 20. When the compressible cavity 501 is filled with an elastic material which has good elasticity, after being subjected to the expansion force released by the battery cell, the elastic material is compressed, causing the compressible layer 500 to deform along the direction of the expansion force of the battery cell 20, and spring back after the expansion force disappears. In addition, the elastic material can also increase the support strength of the compressible layer 500.

Optionally, the elastic material includes rubber materials.

In some embodiments, the heat exchange layer 400 includes a heat exchange cavity 401 (which may also be referred to as the hollow cavity 30a mentioned above) for containing a heat exchange medium. The heat exchange medium is a medium used to exchange heat with the battery cells. It is generally a liquid with a large specific heat capacity and can maintain fluidity at the battery operating temperature.

Optionally, the heat exchange cavity 401 may be sealed or open.

In some embodiments, as shown in Fig. 69, the heat exchange cavity 401 is provided with a first supporting member 410 (which may also be referred to as the reinforcing rib mentioned above). The first supporting member 410 is a structure supported on the heat exchange cavity 401 to prevent the heat exchange cavity 401 from being extruded and deformed. The first supporting member 410 can be used to increase the strength of the heat exchange layer 400, thereby avoiding large deformation of the heat exchange layer 400 after being subjected to the expansion force released by the battery cells.

Optionally, the elastic modulus of the first supporting member 410 is greater than the elastic modulus of the compressible layer 500.

Since the elastic modulus of the compressible layer 500 is smaller than the elastic modulus of the first supporting member 410, it is more likely to deform. After the thermally conductive member 3a is subjected to the expansion force released by the battery cell, the compressible layer 500 can undergo large deformation along the direction of the expansion force of the battery cell 20, but the heat exchange layer 400 will not deform substantially.

In some embodiments, the heat exchange layer 400 and the compressible layer 500 are arranged in a stacked manner along the first direction, and the first supporting member 410 is supported in the heat exchange cavity 401 along the first direction x.

When the thermally conductive member 3a is applied to the battery, the battery cell 20 is generally made to abut against the thermally conductive member 3a along the first direction x, and the subsequent expansion force released by the battery cell 20 is also basically along the first direction x. The first supporting member 410 supported in the heat exchange cavity 401 along the first direction x can greatly increase the elastic modulus of the heat exchange layer 400, so that after the thermally conductive member 3a is subjected to the expansion force released by the battery cell along the first direction x, the compressible layer 500 can undergo large deformation along the first direction x, while the heat exchange layer 400 will not deform substantially.

In some embodiments, referring to Fig. 67, the compressible layer 500 is disposed in the heat exchange cavity 401.

Both ends of the thermally conductive member 3a along the stacking direction are heat exchange cavities 401, which can effectively improve the heat exchange efficiency of the battery cells at both ends of the thermally conductive member 3a and keep the temperature of the entire battery at a low level.

In some embodiments, as shown in Fig. 70, the heat exchange cavity 401 is also provided with a first connecting structure 420 (which may also be referred to as the first reinforcing rib as described above) for fixing the compressible layer 500 in the heat exchange cavity 401.

The first connecting structure 420 is a structure whose two ends are connected to the inner wall of the heat exchange cavity 401 and the outer wall of the compressible layer 500 respectively. The first connecting structure 420 can fix the compressible layer 500 to prevent the position of the compressible layer 500 relative to the heat exchange cavity 401 from changing.

Optionally, at least a part of the first connecting structure 420 is disposed in the heat exchange cavity 401 along the stacking direction. On the one hand, the first connecting structure 420 can fix the compressible layer 500, and on the other hand, it can be used to increase the strength of the heat exchange layer 400, thereby avoiding large deformation of the heat exchange layer 400 after being subjected to the expansion force released by the battery cells.

In some embodiments, a heat exchange space is defined between the outer wall of the compressible layer 500 and the inner wall of the heat exchange cavity 401. The first connecting structure 420 is disposed in the heat exchange space and divides the heat exchange space into flow channels 402 (also called flow channel 30c).

The multiple flow channels 402 are beneficial to the circulation of the heat exchange medium in the heat exchange space and prevent local high temperature of the thermally conductive member 3a.

Optionally, multiple first connecting structures 420 are provided in the heat exchange cavity 401.

Optionally, the elastic modulus of the first connecting structure 420 is greater than the elastic modulus of the compressible layer 500.

In some embodiments, referring to Figs. 71-74, the compressible layer 500 includes a first compressible tube 510, the heat exchange layer 400 includes a first heat exchange tube 430, and the first compressible tube 510 is sleeved in the first heat exchange tube 430.

The first compressible tube 510 is a tubular structure having a compressible cavity 501 inside and can be extruded and deformed.

The first heat exchange tube 430 is a tubular structure with a heat exchange cavity 401 inside, and the heat exchange cavity 410 is provided with a tubular structure of at least one first connecting structure 420 inside. The end of the at least one first connecting structure 420 defines a first mounting cavity 431 for disposing the compressible tube 510.

The thermally conductive member 3a of the present application is composed of the first compressible tube 510 and the first heat exchange tube 430 sleeved together, which is beneficial to the assembly of the thermally conductive member 3a.

Optionally, after the first compressible tube 510 and the first heat exchange tube 430 are sleeved together, the end of at least one first connecting structure 420 in the first heat exchange tube 430 abuts against the outer wall of the first compressible tube 510.

Optionally, the thermally conductive member 3a has a third direction z corresponding to the height direction of the battery cell after mounted in the battery. Two first connecting structures 420 extending along the third direction z are provided in the first heat exchange tube 430, and the two first connecting structures 420 are respectively provided at either end of the first heat exchange tube 430 along the third direction z.

Optionally, the first heat exchange tube 430 has two opposite first abutting surfaces 432 for abutting against the large surface, that is, the first wall 201, of the battery cell. The first abutting surface 432 can increase the contact area between the first heat exchange tube 430 and the battery cell, thereby improving the heat exchange capability of the thermally conductive member 3a for the battery cell.

Optionally, the first compressible tube 510 has two opposite first fitting surfaces 511 for fitting with the large surface, that is, the first wall 201, of the battery cell. The expansion and deformation of the battery cell is generally along the direction perpendicular to the large surface. The first fitting surface 511 can deform under the action of the expansion force of the battery cell, thereby absorbing the expansion of the battery cell.

In some embodiments, optionally referring to Fig. 68, the heat exchange layer 400 is disposed in the compressible cavity 501.

Both ends of the thermally conductive member 3a along the stacking direction are heat exchange cavities 401, which can effectively improve the deformation capacity of the thermally conductive member 3a, so that after being subjected to the expansion force released by the battery cells at both ends along the stacking direction, the thermally conductive member 3a can well deform to absorb the expansion released by the battery cells.

In some embodiments, the compressible layer 500 includes a thermally conductive wall defining the compressible cavity 501.

The thermally conductive wall is a wall structure of the compressible layer 500 with good thermal conductivity.

As an example, the material of the thermally conductive wall can be thermally conductive silica gel, metal, etc.

The outer wall of the compressible layer 500 is a thermally conductive wall, thereby effectively conducting the heat of the battery cells to the internal heat exchange layer 400 for heat exchange.

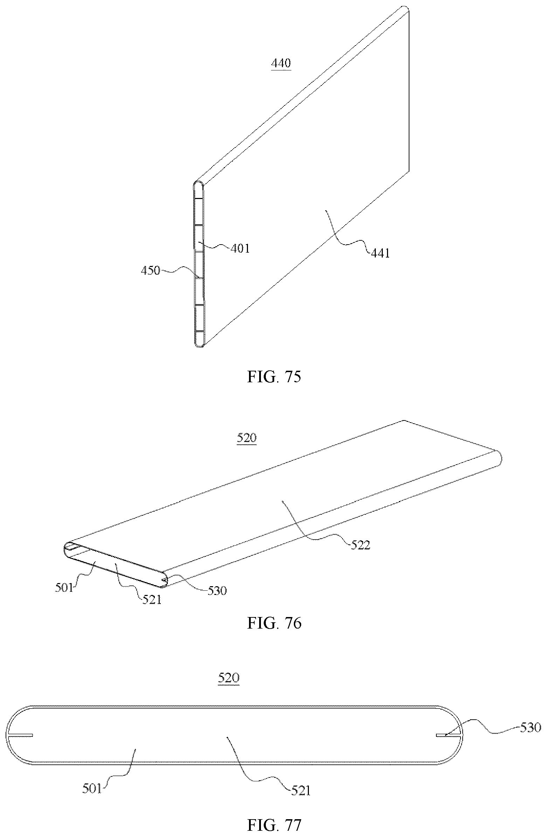

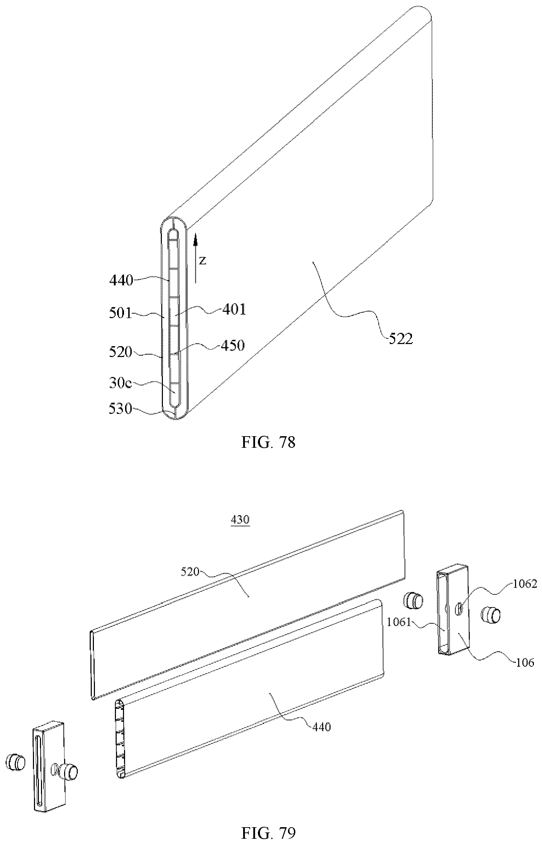

In some embodiments, referring to Figs. 75 to 78, Fig. 75 is a schematic structural diagram of the second heat exchange tube in some embodiments of the present application, Fig. 76 is a schematic structural diagram of the second compressible tube in some embodiments of the present application, Fig. 77 is a side view of the second compressible tube in some embodiments of the present application, and Fig. 78 is a schematic structural diagram of the second compressible tube and the second heat exchange tube after assembly in some embodiments of the present application. The compressible layer 500 includes a second compressible tube 520, the heat exchange layer 400 includes a second heat exchange tube 440, and the second heat exchange tube 440 is sleeved in the second compressible tube 520.

The second heat exchange tube 440 is a tubular structure having a heat exchange cavity 401 inside.

The second compressible tube 520 is a tubular structure having a compressible cavity 501 inside, and the compressible cavity 501 is provided with a tubular structure of at least one second connecting structure 530 inside, and the end of the at least one second connecting structure 530 defines a second mounting cavity 521 for disposing the second heat exchange tube 440.

The thermally conductive member 3a of the present application is composed of the second compressible tube 520 and the second heat exchange tube 440 sleeved together, which is beneficial to the assembly of the thermally conductive member 3a.

Optionally, after the second compressible tube 520 and the second heat exchange tube 440 are sleeved together, the end of at least one second connecting structure 530 in the second compressible tube 520 abuts against the outer wall of the second heat exchange tube 440.

Optionally, the thermally conductive member 3a has a third direction z corresponding to the height direction of the battery cell after being mounted in the battery. Two second connecting structures 530 extending along the third direction z are provided in the second compressible tube 520, and the two second connecting structures 530 are respectively provided at either end of the second compressible tube 520 along the third direction z.

Optionally, the second compressible tube 520 has two opposite second fitting surfaces 522 for abutting against the large surface, that is, the first wall 201, of the battery cell 20. The second fitting surface 522 can increase the contact area between the second compressible tube 520 and the battery cell 20, thereby improving the heat exchange capability of the thermally conductive member 3a to the battery cell 20. Also, the expansion and deformation of the battery cell 20 is generally along the direction perpendicular to the large surface. The second fitting surface 522 can deform under the action of the expansion force of the battery cell 20, thereby having the ability to absorb the expansion of the battery cell 20.

Optionally, the second heat exchange tube 440 has two opposite second fitting surfaces 441 for fitting with the large surface, that is, the first wall 201, of the battery cell 20. The two second abutting surfaces 441 correspond to the two second fitting surfaces 522 and absorb the heat conducted from the two second fitting surfaces 522.

Optionally, multiple second supporting members 450 are provided inside the second heat exchange tube 440.

The inner wall of the heat exchange cavity 401 defines a heat exchange space, and the multiple second supporting members 450 are disposed in the heat exchange space and divide the heat exchange space into multiple flow channels 402.

Optionally, the elastic modulus of the second supporting member 450 is greater than that of the compressible layer 500.

In some embodiments, referring to Figs. 65, 79 and 80, the thermally conductive member 3a further includes a manifold element 106. The manifold element 106 includes a liquid flow cavity 1061. The liquid flow cavity 1061 communicates with the heat exchange cavity 401. Both the liquid flow cavity 1061 and the heat exchange cavity 401 are hermetically isolated from the compressible cavity 501.

The manifold element 106 is a component that connects the heat exchange layer 400 and a heat exchange medium storage container.

The liquid flow cavity 1061 is a chamber in the manifold element 106 that communicates with the heat exchange cavity 401 and the heat exchange medium storage container.

The manifold element 106 can be used to communicate with the heat exchange medium storage container to circulate the heat exchange medium in the heat exchange cavity 401. The compressible cavity 501 and the heat exchange cavity 401 do not communicate, so that the heat exchange medium cannot enter the compressible cavity 501, preventing the compressible cavity 501 from deformation after being subjected to the expansion force released by the battery cell 20 and causing the heat exchange medium to overflow.

Optionally, the manifold element 106 further includes a liquid inlet and outlet 1062, and the liquid inlet and outlet 1062 communicates with the liquid flow cavity 1061.

Optionally, the thermally conductive member 3a includes a manifold element 106. The manifold element 106 is disposed at one end of the heat exchange layer 400. The heat exchange layer 400 is open at one end, and the liquid flow cavity 1061 communicates with the heat exchange cavity 401 through the open end.

Optionally, the thermally conductive member 3a includes two manifold elements 106. The two manifold elements 106 are disposed at either end of the heat exchange layer 400 respectively. The heat exchange layer 400 is open at both ends, and the two liquid flow cavities 1061 communicate with the heat exchange cavity 401 through the two open ends respectively.

Optionally, the thermally conductive member 3a further includes a connecting element, which is a hollow structure, and the connecting element with one open end is hermetically connected to the liquid inlet and outlet 1062.

Referring to Figs. 64 and 84, Fig. 81 is a schematic structural diagram of the assembled thermally conductive member 3a and battery cell 20 according to some embodiments of the present application. When the thermally conductive member 3a is applied to the battery 100, the thermally conductive member 3a can be disposed between two adjacent battery cells 20, and the two opposite surfaces of the thermally conductive member 3a respectively abut against the two adjacent large surfaces of the adjacent two battery cells 20; the thermally conductive member 3a can also be disposed between the box 10 and the battery cell 20 close to the box 10.

Each thermally conductive member 3a can be individually connected to the heat exchange medium storage container, or the liquid inlet and outlets 1062 of adjacent thermally conductive members 3a can be connected through a pipe 107.

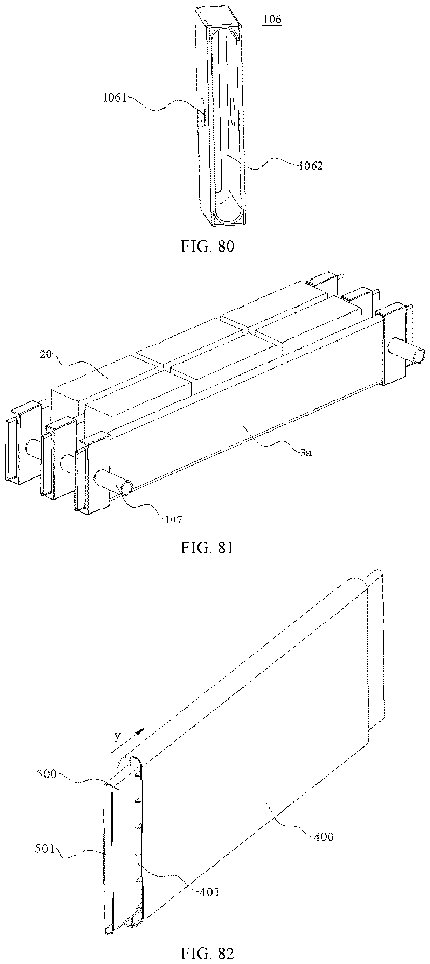

In some embodiments, referring to Figs. 65 and 82, the heat exchange layer 400 and the compressible layer 500 are arranged extending along a second direction 33, and at least one end of the compressible layer 500 protrudes from the heat exchange layer 400 along the second direction 33.

The compressible layer 500 protruding from the heat exchange layer 400 is conducive to hermetically isolating the liquid flow cavity 1061 of the manifold element 106 from the compressible cavity 501, so that the heat exchange medium cannot enter the compressible cavity 501, which avoids overflow of the heat exchange medium due to deformation of the compressible cavity 501 after being subjected to the expansion force released by the battery cell.

Optionally, the compressible layer 500 is disposed in the heat exchange cavity 401, the manifold element 106 includes a through hole running through along the second direction y, and the portion of the compressible layer 500 protruding from the heat exchange layer 400 passes through the through hole and is hermetically connected to one end of the through hole, and the other end of the through hole is hermetically connected to the outer wall of the heat exchange layer 400. A liquid flow cavity 1061 is defined between the outer wall of the part of the compressible layer 500 protruding from the heat exchange layer 400 and the inner wall of the manifold element 106.

In some embodiments, optionally, referring to Fig. 65, the compressible cavity 501 is provided with an air inlet 502 and an air outlet 503.

The compressible layer 500 can be air-cooled through the air inlet 502 and the air outlet 503, and together with the heat exchange layer 400, further improve the heat exchange efficiency of the thermally conductive member 3a for the battery.

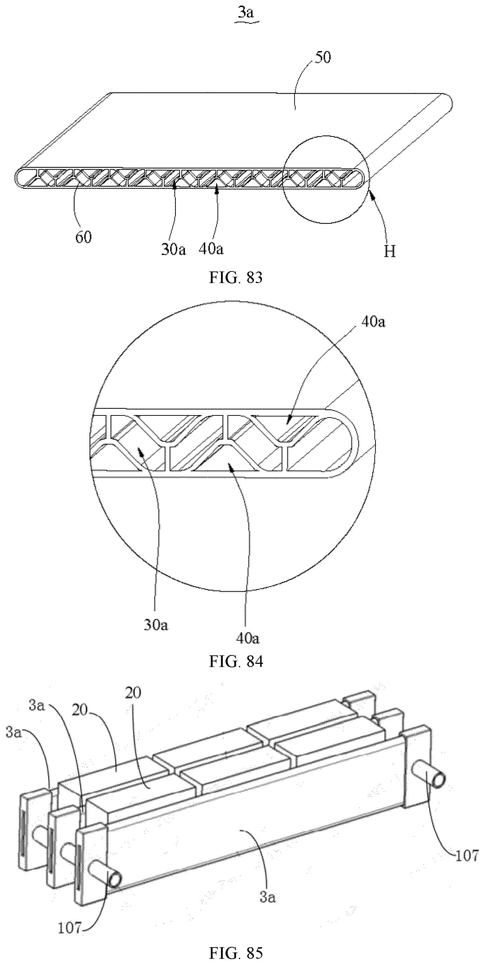

In some embodiments, as shown in Figs. 83 to 92, the thermally conductive member 3a includes a shell 50 and a supporting component 60. The supporting component 60 is accommodated in the shell 50 and is used for defining a hollow cavity 30a and a deformation cavity 40a which are arranged separately in the shell 50. The hollow cavity 30a is used for the heat exchange medium to flow, and the deformation cavity 40a is configured to deform when the shell 50 is pressurized.

Therefore, the battery cell 20 is heated or cooled by the heat exchange medium in the hollow cavity 30a. When the battery cell 20 inside the box 10 expands during use, since the shell 50 has the deformation cavity 40a inside, the shell 50 can deform when subjected to the force from the battery cells 20, preventing the shell 50 of the thermally conductive member 3a from having an excessive reaction on the battery cell 20, absorbing tolerances for assembling the battery cells 20, avoiding damage to the battery cell 20, reducing the decrease in the heat exchange area between the thermally conductive member 3a and the battery cell 20, and improving the cycling performance of the battery cell 20.

The thermally conductive member 3a can be disposed at the bottom or side of the box to be in full contact with the battery cells 20, or between two adjacent battery cells 20.

Both ends of the hollow cavity 30a are designed to be open for the heat exchange medium to flow. The heat exchange medium makes the hollow cavity 30a have a certain strength and generally will not be compressed to deform. Both ends of the deformation cavity 40a are designed to be sealed so that the heat exchange medium will not enter the deformation cavity 40a. The volume of the deformation cavity 40a accounts for 10%-90%, so it is prone to deformation. The shell 50 and the supporting component 60 can be made of the same material through an integrated molding process. The shell 50 can also be made of a material with greater elasticity than the supporting component 60, so that the deformation cavity 40a can deform when the shell 50 is subjected to the expansion force of the battery cell 20.

Optionally, the battery cell 20 is located between two adjacent thermally conductive members 3a, and multiple thermally conductive members 3a are connected through connecting pipes to achieve connection between the thermally conductive members 3a and circulation of the heat exchange medium.

In some embodiments, the supporting component 60 and the shell 50 enclose to form the hollow cavity 30a. The supporting component 60 can be connected to the shell 50 to form the hollow cavity 30a. The number of the hollow cavities 30a can be multiple. The multiple hollow cavities 30a are adjacent or spaced apart to fully exchange heat for the battery cell 20.

In the above solution, the shell 50 is configured to be in direct contact with the battery cells 20, and the hollow cavity 30a is formed by being enclosed by the supporting component 60 and the shell 50 together. The heat exchange medium can be in contact with the battery cell 20 through the shell 50, thereby improving the heat exchange efficiency of the battery cell 20.

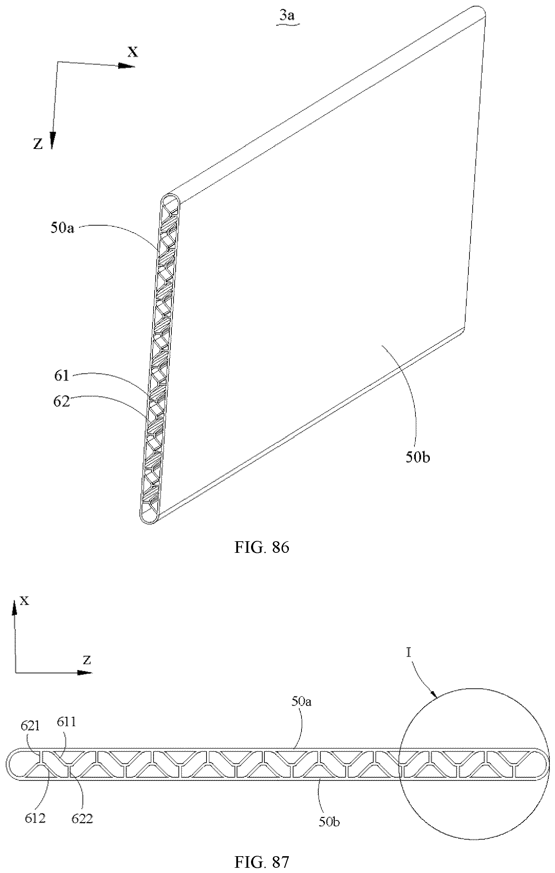

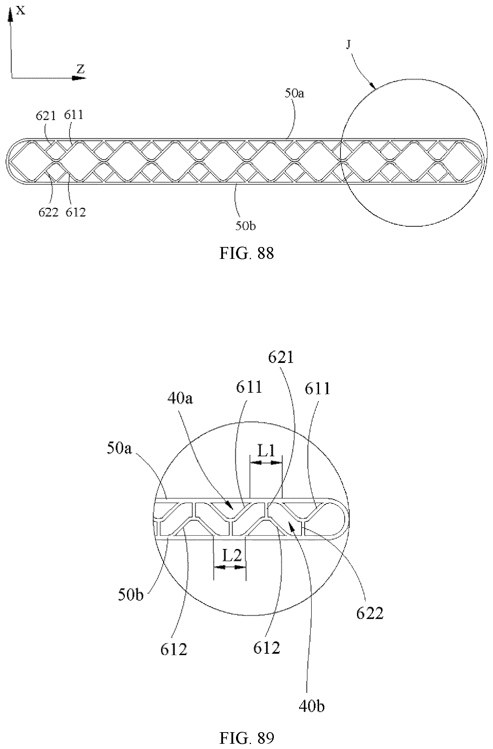

As shown in Figs. 86 and 88, the supporting component 60 includes a partition assembly 61 and a supporting assembly 62. The partition assembly 61 is used to define the hollow cavity 30a and the deformation cavity 40a arranged separately in the shell 50; the supporting assembly 62 is used to be provided in the hollow cavity 30a or define the hollow cavity 30a together with the partition assembly 61 to support the hollow cavity 30a.

The partition assembly 61 and the supporting assembly 62 are connected with each other and are each connected to the shell 50 to define the hollow cavity 30a and the deformation cavity 40a. The supporting assembly 62 can be disposed inside the hollow cavity 30a to support the hollow cavity 30a, or the supporting assembly 62 can be used as a side of the hollow cavity 30a, connected to the shell 50 and the partition assembly 61 to enclose to form the hollow cavity 30a, which can also realize support for the hollow cavity 30a.

In the above solution, the interior of the shell 50 is divided into the hollow cavity 30a and the deformation cavity 40a through the partition assembly 61, and the hollow cavity 30a is supported through the supporting assembly 62, thereby improving the strength of the hollow cavity 30a, so that when the thermally conductive member 3a absorbs expansion and tolerance, it avoids decrease in the volume inside the hollow cavity 30a and change in the flow rate of the heat exchange medium inside the hollow cavity 30a, preventing the heat exchange medium from overflowing; at the end of life cycle of the battery, the hollow cavity 30a will not be crushed and blocked.

The shell 50 includes a first side wall 50a (for example, also known as the first thermally conductive plate 3331 mentioned above) and a second side wall 50b (for example, also known as the second thermally conductive plate 3332 mentioned above), the second side wall 50b is arranged opposite to the first side wall 50a along the first direction x (which may be the thickness direction of the thermally conductive member 3a), and the partition assembly 61 is connected to the first side wall 50a and the second side wall 50b respectively.

The first side wall 50a and the second side wall 50b can be configured as the side walls with the largest area of the thermally conductive member 3a. The thermally conductive member 3a can be disposed at the bottom or side of the box 10. The first side wall 50a or the second side wall 50b is in contact with the battery cell 20 to fully exchange heat with the battery cells 20. The thermally conductive member 3a can also be disposed between two adjacent battery cells 20, and the first side wall 50a and the second side wall 50b are respectively in contact with the two adjacent battery cells 20 to exchange heat with different battery cells 20, thereby improving the heat exchange efficiency of the battery.

In the above solution, the connection strength of the first side wall 50a and the second side wall 50b can be enhanced by connecting the partition assembly 61 (for example, also known as the first reinforcing rib mentioned above) to the first side wall 50a and the second side wall 50b respectively, thereby improving the overall strength of the thermally conductive member 3a.

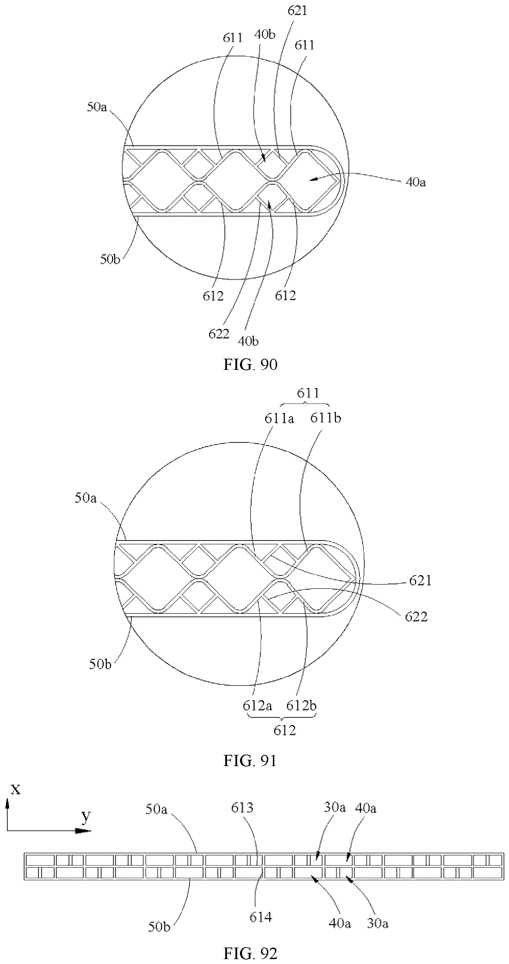

As shown in Figs. 89 and 90, the partition assembly 61 includes a first bending plate 611 and a second bending plate 612. The first bending plate 611 is connected to the first side wall 50a; the second bending plate 612 is connected to the second side walls 50b, and the first bending plate 611 and the second bending plate 612 define the deformation cavity 40a.

The first bending plate 611 is connected to the first side wall 50a and can define a deformation cavity 40a close to the first side wall 50a. The second bending plate 612 is connected to the second side wall 50b and can define a deformation cavity 40a close to the second side wall 50b; or the deformation cavity 40a is formed between the first bending plate 611 and the second bending plate 612.

In the above solution, the first bending plate 611 and the second bending plate 612 both have a bending shape, and the first bending plate 611 and the second bending plate 612 can define a deformation cavity 40a with a large space, ensuring the deformation space of the thermally conductive member 3a and improving the space utilization inside the shell 50.

In some embodiments, the supporting assembly 62 includes a first supporting rib 621 and a second supporting rib 622. The first supporting rib 621 is connected to the first bending plate 611 and the second side wall 50b respectively; the second supporting rib 622 is connected to the second bending plate 612 and the first side wall 50a respectively.

The first supporting rib 621 and the second supporting rib 622 can be respectively located in the hollow cavity 30a, or can be used as the sides of the hollow cavity 30a, both of which can support the hollow cavity 30a. The first supporting rib 621 improves the connection strength of the first bending plate 611 and the shell 50, the second supporting rib 622 improves the connection strength of the second bending plate 612 and the shell 50, and both the first supporting rib 621 and the second supporting rib 622 improve the strength of the hollow cavity 30a. When the thermally conductive member 3a is compressed by the expansion force of the battery cell 20, the first supporting rib 621 and the second supporting rib 622 can prevent the hollow cavity 30a from deformation, thereby ensuring that the internal volume of the hollow cavity 30a does not change and the heat exchange medium does not overflow. At the same time, at the end of the battery's life cycle, it can prevent blockage due to crushing of the hollow cavity 30a and thermal performance failure.

In the embodiments shown in Figs. 90 and 91, both ends of the first bending plate 611 are connected to the first side wall 50a, and both ends of the second bending plate 612 are connected to the second side wall 50b; in the first direction X, the first bending plate 611 and the second bending plate 612 are disposed in a staggered manner, and a hollow cavity 30a is formed between the first supporting rib 621 and the second supporting rib 622.

The first bending plate 611 is connected to the first side wall 50a to form a deformation cavity 40a close to the first side wall 50a, and the second bending plate 612 is connected to the second side wall 50b to form a deformation cavity 40a close to the second side wall 50b. The hollow cavity 30a is located between the two deformation cavities 40a. Multiple hollow cavities 30a are arranged adjacently, and the first supporting ribs 621 and the second supporting ribs 622 jointly support the hollow cavities 30a, thereby improving the strength of the hollow cavities 30a. The first side wall 50a and the second side wall 50b can be used to be in contact with two adjacent battery cells 20 respectively, so that the positions of the first side wall 50a and the second side wall 50b corresponding to the deformation cavity 40a can deform. The thermally conductive member 3a can absorb the expansion of the two battery cells 20 simultaneously. The first side wall 50a and the second side wall 50 b are the side walls with the largest area of the shell 50, and are respectively in contact with the side portions with the largest area of the battery cell 20 to improve the absorption of expansion of the battery cell 20.

In some embodiments, there are multiple first bending plates 611, two adjacent first bending plates 611 are arranged at intervals by a preset distance, the first side wall 50a includes a first interval L1 between two adjacent first bending plates 611. Through the first interval L1, the hollow cavity 30a can be in contact with the battery cell 20 abutting against the first side wall 50a, thereby increasing the contact area of the battery cell 20 abutting against the first side wall 50a and increasing heat transfer efficiency.

In some embodiments, there are multiple second bending plates 612, two adjacent second bending plates 612 are arranged at intervals by a preset distance, the second side wall 50b includes a second interval L2 between two adjacent second bending plates 612. Through the second interval L2, the hollow cavity 30a can be in contact with the battery cell 20 abutting against the second side wall 50b, thereby increasing the contact area of the battery cell 20 abutting against the second side wall 50b and increasing heat transfer efficiency.

In other embodiments, there are multiple first bending plates 611, and two adjacent first bending plates 611 are arranged at intervals by a preset distance, there are multiple second bending plates 612 and the two adjacent second bending plates 612 are arranged at intervals by a preset distance, which can simultaneously improve the heat exchange efficiency of the battery cell 20 abutting against the first side wall 50a and the battery cell 20 abutting against the second side wall 50b.

In the embodiment shown in Fig. 91, both ends of the first bending plate 611 are connected to the first side wall 50a to form a hollow cavity 30a close to the first side wall 50a; both ends of the second bending plate 612 are connected to the second side wall 50b to form a hollow cavity 30a close to the second side wall 50b.

The hollow cavity 30a close to the first side wall 50a and the hollow cavity 30a close to the second side wall 50b may be arranged oppositely along the first direction x, that is, there are two hollow cavities 30a in the first direction x. The first bending plate 611 and the second bending plate 612 enclose to form a diamond-shaped deformation cavity 40a. The hollow cavity 30a close to the first side wall 50a is used to be in contact with the battery cell 20 abutting against the first side wall 50a, and the hollow cavity 30a close to the second side wall 50b is used to be in contact with the battery cell 20 abutting against the second side wall 50b.

In the above solution, the two hollow cavities 30a can be in contact with two adjacent battery cells 20 respectively, thereby increasing the heat exchange area of the thermally conductive member 3a.

In some embodiments, in the first direction x, the first bending plate 611 and the second bending plate 612 are arranged oppositely; and the bend of the first bending plate 611 is connected to the bend of the second bending plate 612.

The first bending plate 611 and the second bending plate 612 can be in the shape of a triangle, and the space of the hollow cavity 30a is large. The bend of the first bending plate 611 is away from the first side wall 50a, the bend of the second bending plate 612 is away from the second side wall 50b, the two bends are connected, and the structure is stable. In other embodiments, the first bending plate 611 and the second bending plate 612 may also be L-shaped, arc-shaped, or in other shapes.

In the above solution, the bend of the first bending plate 611 and the bend of the second bending plate 612 are connected, which can enhance the strength of the partition assembly 61.

As shown in Fig. 91, the first bending plate 611 includes a first inclined section 611a and a second inclined section 611b that are connected to each other. The first supporting rib 621 is connected to the first inclined section 611a and the second inclined section 611b respectively. The bend of the first supporting rib 621 is connected to the first side wall 50a, and its two ends are connected to the first inclined section 611a and the second inclined section 611b respectively, which improves the connection strength between the first bending plate 611 and the first side wall 50a, and improves the strength of the hollow cavity 30a close to the first side wall 50a. The first supporting rib 621 can be triangular and has a stable structure. In other embodiments, the first supporting rib 621 can also be configured to be L-shaped or arc-shaped, or the first supporting rib 621 includes two separate sections, one section is connected to the first side wall 50a and the first inclined section 611a respectively, and the other section is connected to the second side wall 50b and the second inclined section 611b respectively.

In some embodiments, the second bending plate 612 includes a third inclined section 612a and a fourth inclined section 613b connected to each other, and the second supporting rib 622 is connected to the third inclined section 612a and the fourth inclined section 613b respectively. The bend of the second supporting rib 622 is connected to the second side wall 50b, and its two ends are connected to the third inclined section 612a and the fourth inclined section 613b respectively, which improves the connection strength between the second bending plate 612 and the second side wall 50b, and improves the strength of the hollow cavity 30a close to the second side wall 50b.

The second supporting rib 622 can be triangular and has a stable structure. In other embodiments, the second supporting rib 622 can also be configured to be L-shaped or arc-shaped, or the second supporting rib 622 includes two separate sections, one section is connected to the second side wall 50b and the third inclined section 612a respectively, and the other section is connected to the second side wall 50b and the fourth inclined section 613b respectively.

In other embodiments, the first bending plate 611 includes a first inclined section 15611a and a second inclined section 611b that are connected to each other, the first supporting rib 621 is connected to the first inclined section 611a and the second inclined section 611b respectively, and the second bending plate 612 includes a third inclined section 612a and a fourth inclined section 613b that are connected to each other, the second supporting rib 622 is connected to the third inclined section 612a and the fourth inclined section 613b respectively. The connection strength of the first bending plate 611 and the second bending plate 612 can be enhanced, and the strength of the hollow cavity 30a close to the first side wall 50a and the strength of the hollow cavity 30a close to the second side wall 50b can be improved.

Fig. 92 is a side view of a thermally conductive member 3a provided by still other embodiments of the present application. In the embodiment shown in Fig. 92, the partition assembly 61 includes a first isolation plate 613 and a second partition plate 614. The first isolation plate 613 extends along the second direction y, and the second partition plate 614 extends along the first direction x, the first direction x and the second direction y are arranged to intersect, and the second partition 614 is connected to the first side wall 50a and the second side wall 50b respectively, so as to define a hollow cavity 30a and a deformation cavity 40a arranged separately in the shell 50.

The first direction x and the second direction y may be arranged perpendicularly, so that the hollow cavity 30a and the deformation cavity 40a are rectangular. The second partition plate 614 can support the first side wall 50a and the second side wall 50b, thereby improving the structural strength of the thermally conductive member 3a.

In some embodiments, in the second direction y, the deformation cavities 40a and the hollow cavities 30a are alternately arranged. The deformation cavities 40a and hollow cavities 30a are alternately arranged, which can not only ensure the heat exchange efficiency of the battery cells 20, but also absorb the expansion of the battery cells 20 evenly.

In the first direction x, the deformation cavity 40a and the hollow cavity 30a are arranged adjacently, which improves the space utilization inside the shell 50. It is ensured that the hollow cavities 30a and deformation cavities 40a are evenly arranged alternately near the first side wall 50a to fully exchange heat for the battery cell 20 abutting against the first side wall 50a and to absorb the expansion force of the battery cell 20. It is ensured that the hollow cavities 30a and deformation cavities 40a are evenly arranged alternately near the second side wall 50b to fully exchange heat for the battery cell 20 abutting against the second side wall 50b and to absorb the expansion force of the battery cell 20.

In some embodiments, the first supporting rib 621 is connected to the first isolation plate 613 and the first side wall 50a respectively, and the second supporting rib 622 is connected to the first isolation plate 613 and the second side wall 50b respectively.

The first supporting rib 621 is located in the hollow cavity 30a close to the first side wall 50a, and the second supporting rib 622 is located in the hollow cavity 30a close to the second side wall 50b. The first supporting rib 621 and the second supporting rib 622 respectively extend along the first direction x. When the first side wall 50a and the second side wall 50b are extruded by the expansion of the battery cell 20, it can prevent the hollow cavity 30a from being compressed along the first direction x, prevent the volume of the hollow cavity 30a from changing, ensuring the heat exchange effect on the battery cells 20 close to the first side wall 50a and the battery cells 20 close to the second side wall 50b.

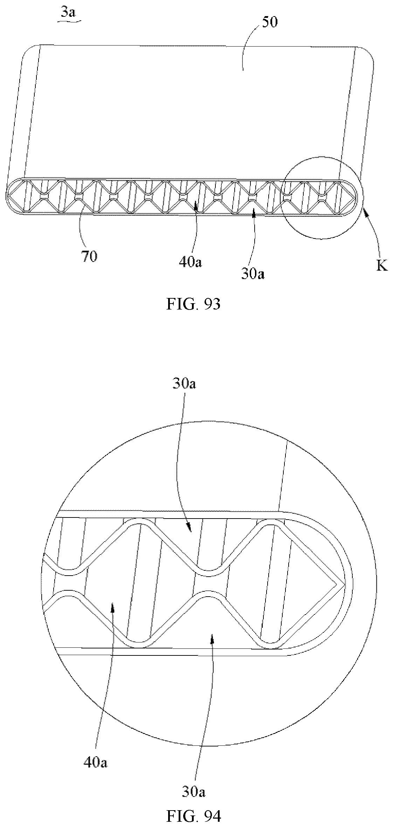

In some embodiments, as shown in Fig. 93-99, the thermally conductive member 3a includes a shell 50 and an isolation assembly 70. The isolation assembly 70 is accommodated in the shell 50 and connected to the shell 50 to form a hollow cavity 30a between the shell 50 and the isolation assembly 70. The hollow cavity 30a is used for the heat exchange medium to flow, and the isolation assembly 70 is configured to deform when the shell is pressurized.

Thus, the battery cell 20 is heated or cooled by the heat exchange medium in the hollow cavity 30a. When the battery cell 20 inside the box 10 expands during use, since the shell 50 has the isolation assembly 70 inside, the isolation assembly 70 can deform when subjected to the force from the battery cells 20, preventing the shell 50 of the thermally conductive member 3a from having an excessive reaction on the battery cell 20, absorbing tolerances for assembling the battery cells 20, avoiding damage to the battery cell 20, and enhancing the reliability of the battery 100; also, it reduces the decrease in the heat exchange area between the thermally conductive member 3a and the battery cell 20, and improves the cycling performance of the battery cell 20.

Optionally, the shell 50 and the isolation assembly 70 can be made of the same material through an integral molding process. The isolation assembly 70 can be made of a flexible material, so that when the shell 50 is extruded by the expansion of the battery cells 20, the isolation assembly 70 can deform. A flexible material may also be provided within the isolation assembly 70, or a deformation cavity 40a may be provided within the isolation assembly 70, so that the isolation assembly 70 can have a deformation space. The isolation assembly 70 deforms as the battery cell 20 expands without affecting the space of the hollow cavity 30a, thereby preventing overflow.

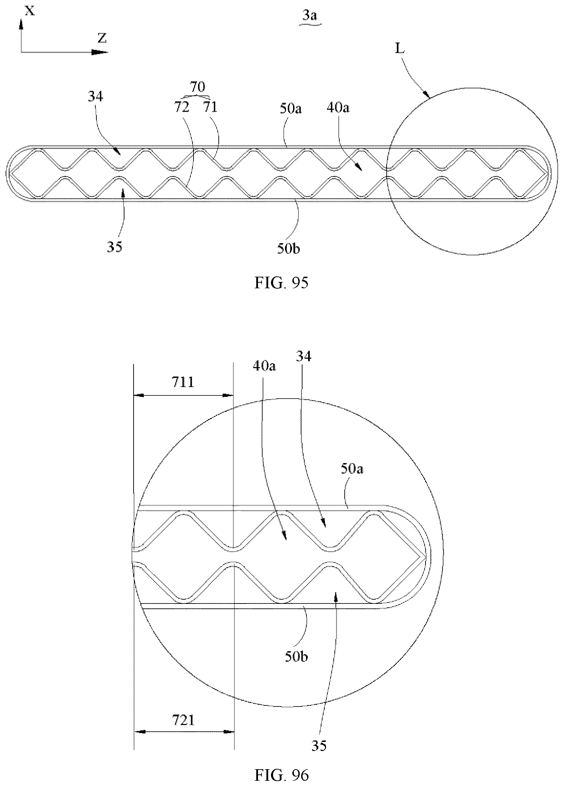

In some embodiments, as shown in Fig. 95, the shell 50 includes a first side wall 50a and a second side wall 50b. The second side wall 50b is disposed opposite to the first side wall 50a along the first direction x, the isolation assembly 70 is connected to the first side wall 50a to define a first flow channel 34, and the isolation assembly 70 is connected to the second side wall 50b to define a second flow channel 35.

The thermally conductive member 3a may be disposed between two adjacent battery cells 20 along the first direction x, and the first side wall 50a and the second side wall 50b are respectively in contact with the two adjacent battery cells 20. Multiple battery cells 20 may be disposed beside the first side wall 50a; multiple battery cells 20 may also be disposed beside the second side wall 50b, so as to dispose two rows of battery cells 20 on both sides of the thermally conductive member 3a along the first direction x to increase the capacity of the battery 100.

In the above solution, the first flow channel 34 can exchange heat for the battery cells 20 close to the first side wall 50a, and the second flow channel 35 can exchange heat for the battery cells 20 close to the second side wall 50b, thereby improving the heat exchange efficiency of the thermally conductive member 3a.

In some embodiments, the isolation assembly 70 includes a first isolation plate 71 and a second isolation plate 72. The first isolation plate 71 extends along the second direction y. The first direction x and the second direction y are intersecting. The first isolation plate 71 is connected to the first side wall 50a, the connection to the first isolation plate 71 defines the first flow channel 34; the second isolation plate 72 extends along the second direction y, and the connection to the second isolation plate 72 defines the second flow channel 35. The first direction x and the second direction y may be arranged perpendicular to each other.

The first isolation plate 71 and the second isolation plate 72 have a certain degree of flexibility. When the battery cells 20 close to the first side wall 50a expand and extrude the first side wall 50a, the first isolation plate 71 can deform accordingly, the volume of the first flow channel 34 will not be affected, and the first isolation plate 71 absorbs the expansion force, preventing the first side wall 50a from exerting an excessive reacting force on the battery cells 20 and damaging the battery cells 20. Similarly, when the battery cell 20 close to the second side wall 50b expands and extrudes the second side wall 50b, the second isolation plate 72 can deform accordingly, and the volume of the second flow channel 35 will not be affected, the second isolation plate 72 absorbs the expansion force and prevents the second side wall 50b from exerting an excessive reacting force on the battery cell 20 and damaging the battery cell 20.

In the above solution, the first isolation plate 71 is connected to the first side wall 50a and can absorb the expansion force of the battery cell 20 close to the first side wall 50a; the second isolation plate 72 is connected to the second side wall 50b and can absorb the expansion force of the battery cell 20 close to the second side wall 50b, which allows the isolation assembly 70 to deform with the expansion of different battery cells 20 simultaneously.

In some embodiments, a deformation cavity 40a that can deform when the shell 50 is pressurized is defined between the first isolation plate 71 and the second isolation plate 72.

Both ends of the first flow channel 34 and the second flow channel 35 are designed to be open for the inflow and outflow of the heat exchange medium to form a circulation. Both ends of the deformation cavity 40a are designed to be sealed to prevent the heat exchange medium from flowing in. The deformation cavity 40a is a compression deformation area. When the battery cells 20 close to the first side wall 50a extrude the first side wall 50a, the first isolation plate 71 can deform in the direction of the deformation cavity 40a, and the deformation cavity 40a is compressed; when the battery cells 20 close to the second side wall 50b extrude the second side wall 50b, the second isolation plate 72 can deform in the direction of the deformation cavity 40a, and the deformation cavity 40a is compressed. The deformation cavity 40a is located between the first flow channel 34 and the second flow channel 35. The first flow channel 34 and the second flow channel 35 can be in direct contact with the battery cell 20, which does not affect the heat exchange effect while ensuring that the thermally conductive member 3a can absorb the expansion force of the battery cell 20.

In the above solution, the deformation cavity 40a between the first isolation plate 71 and the second isolation plate 72 is compressible, the deformation cavity 40a is easy to form, the manufacturing process is simple, and the cost can be reduced. When the battery cell 20 expands, the deformation cavity 40a can absorb the expansion force, preventing the thermally conductive member 3a from exerting an excessive force on the battery cell 20 and damaging the battery cell 20; also, it reduces the decrease of heat exchange area between the thermally conductive member 3a and the battery cell 20 and improves the cycling performance of the battery cell 20.

In some embodiments, the first isolation plate 71 extends in a bent and folded shape along the third direction, which can increase the length of the first isolation plate 71 and make the first isolation plate 71 more susceptible to deformation. The first flow channel 34 is formed on the first side wall 50a, and the deformation cavity 40a is formed on the side away from the first flow channel 34, making full use of the space inside the shell 50.

In some embodiments, the second isolation plate 72 extends in a bent and folded shape along the third direction, which can increase the length of the second isolation plate 72 and make the second isolation plate 72 more susceptible to deformation. The second flow channel 35 is formed on the second side wall 50b, and the deformation cavity 40a is formed on the side away from the second flow channel 35, making full use of the space inside the shell 50.

In other embodiments, both the first isolation plate 71 and the second isolation plate 72 can be arranged to extend in a bent and folded shape along the third direction.

As shown in Fig. 96, the first isolation plate 71 includes multiple first bent sections 711 arranged in sequence along the third direction; the second isolation plate 72 includes multiple second bent sections 721 arranged in sequence along the third direction. The first bent section 711 and the second bent section 721 are arranged oppositely along the first direction x.

The first bent section 711 bulges toward the direction of the first side wall 50a, and the second bent section 721 bulges toward the direction of the second side wall 50b. The first bent section 711 and the second bent section 721 are arranged oppositely to define the deformation cavity 40a, which can increase the volume of the deformation cavity 40a. The deformation cavity 40a is composed of multiple diamond-shaped spaces, which increases the deformation space of the isolation assembly 70.

In some embodiments, two adjacent first bent sections 711 and the first side wall 50a enclose to form the first flow channel 34; two adjacent second bent sections 721 and the second side wall 50b enclose to form the second flow channel 35, the first flow channel 34 and the second flow channel 35 are arranged oppositely along the first direction X.

The first flow channel 34 and the second flow channel 35 are triangular, which can improve the heat exchange effect of the first flow channel 34 on the battery cells 20 close to the first side wall 50a, and improve the heat exchange effect of the second flow channel 35 on the battery cells 20 close to the second side wall 50b. The deformation cavity 40a is located between the first flow channel 34 and the second flow channel 35. Multiple first bent sections 711 and the first side wall 50a enclose to form multiple first flow channels 34. Multiple second bent sections 721 and the second side walls 50b enclose to form multiple second flow channels 35, which improves the space utilization inside the shell 50 and increases the heat exchange efficiency of the thermally conductive member 3a.

In some embodiments, the first bent section 711 is configured to be in an arc shape, which can increase the length of the first bent section 711, and the first isolation plate 71 is in a smooth wavy shape, making it easier for the first isolation plate 71 to deform.

In some embodiments, the second bent section 721 is configured to be in an arc shape, which can increase the length of the second bent section 721, and the second isolation plate 72 is in a smooth wavy shape, making it easier for the second isolation plate 72 to deform.

In other embodiments, both the first bent section 711 and the second bent section 721 can also be configured to be in an arc shape.

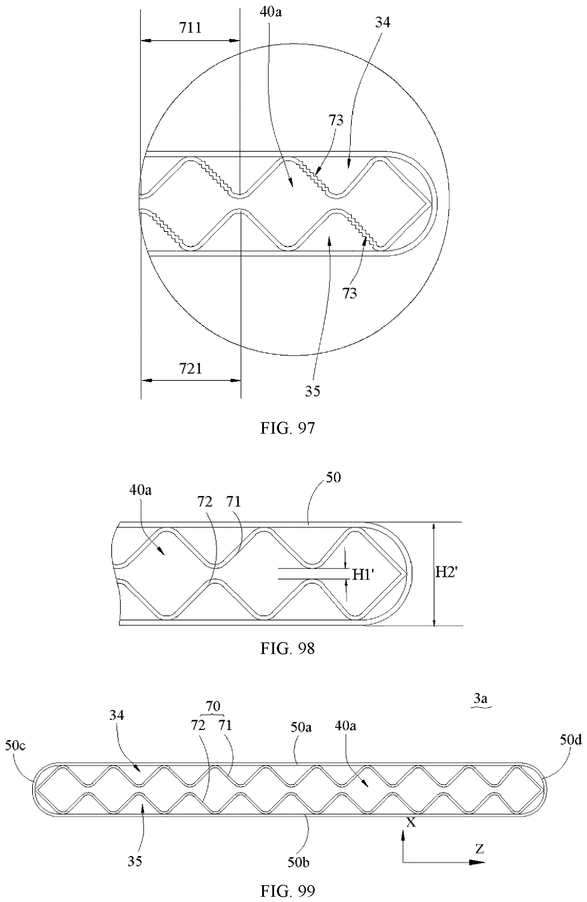

In some embodiments, as shown in Fig. 97, at least one first bent section 711 is provided with a folded region 73. The folded region 73 is in a wrinkled and bent shape. The folded region 73 increases the length of the first bent section 711, so that the deformation of this region can be larger, which is more conducive to the deformation of the first bent section 711.

In some embodiments, at least one second bent section 721 is provided with a folded region 73. The folded region 73 is in a wrinkled and bent shape. The folded region 73 increases the length of the second bent section 721, so that the deformation of this region can be larger, which is more conducive to the deformation of the first bent section 711 and/or the second bent section 721.

In other embodiments, at least one first bent section 711 and at least one second bent section 721 can also be provided with folded regions 73.

Fig. 98 is a partial structural schematic diagram of the thermally conductive member 3a provided in some embodiments of the present application; as shown in Fig. 98, the minimum spacing between the first isolation plate 71 and the second isolation plate 72 is H1', the thickness of the shell 50 along the first direction X is H2', and the minimum spacing satisfies the following formula: $0 < H1'/H2' \leq 0.5$. The ratio of the minimum gap between the first isolation plate 71 and the second isolation plate 72 to the thickness of the shell 50 is greater than 0 to ensure a sufficient deformation displacement region, and the ratio is less than or equal to 0.5 to avoid insufficient space in the hollow cavity 30a and ensure the heat exchange effect of the thermally conductive member 3a.

In some embodiments, along a plane perpendicular to the flow direction of the cooling medium, the cross-sectional areas of the hollow cavity 30a and the isolation assembly 70 are S7 and S8 respectively, and S7 and S8 satisfy the following formula: 0<S7/S8<1. The cross-sectional area of the isolation assembly 70 may specifically be the cross-sectional area of the deformation cavity 40a along a plane perpendicular to the direction of the hollow cavity 30a.

In the above solution, the cross-sectional area of the isolation assembly 70 is larger than the cross-sectional area of the hollow cavity 30a, which ensures that the thermally conductive member 3a has a large deformable region and can absorb enough expansion force of the battery cell 20.

Fig. 99 is a schematic structural diagram of the thermally conductive member 3a provided in some embodiments of the present application from another angle. As shown in Fig. 99, the shell 50 includes a third side wall 50c and a fourth side wall 50d. The fourth side wall 50d is arranged opposite to the third side wall 50c along the third direction. The two ends of the isolation assembly 70 are connected to the third side wall 50c and the fourth side wall 50d respectively. In the first direction x, the isolation assembly 70 is connected to the first side wall 50a and the second side wall 50b respectively; in the second direction y, the isolation assembly 70 is connected to the third side wall 50c and the fourth side wall 50d respectively. Moreover, the connection strength between the isolation assembly 70 and the shell 50 is enhanced, multiple hollow cavities 30a can be formed in the second direction y, and the volume of the deformation cavity 40a is also larger.

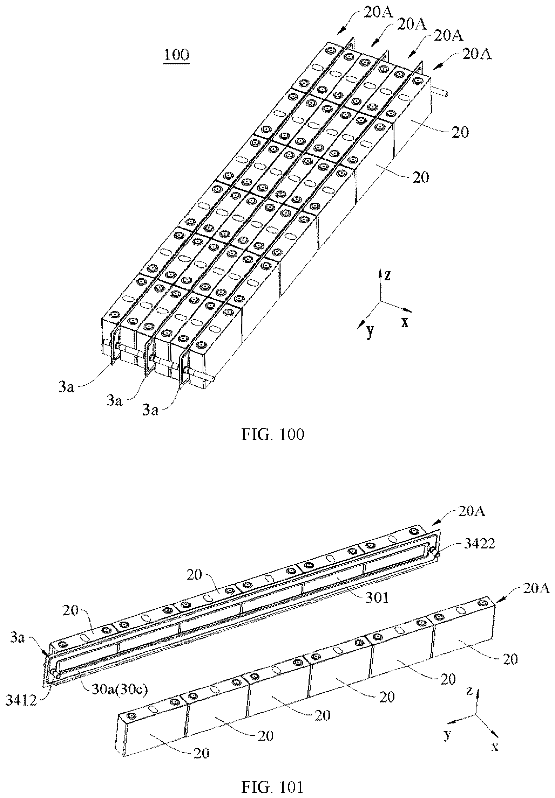

In some embodiments, as shown in Figs. 100 to 110, the thermally conductive member 3a is provided with an avoidance structure 301. The avoidance structure 301 is used to provide space for the expansion of the battery cells 20. That is, the avoidance structure 301 forms an avoidance space. When the battery cell 20 expands, at least a part of the expansion of the battery cell 20 can enter the avoidance space, thereby reducing the pressure between the battery cell 20 and the thermally conductive member 3a, reducing the risk of rupture of the thermally conductive member 3a, and improving the cycling performance of the battery cell 20.

The avoidance structure 301 can provide space for the expansion of one battery cell 20 or can provide space for the expansion of multiple battery cells 20 at the same time.

The avoidance structure 301 may be one or multiple, which is not limited in the embodiments of the present application.

For example, the avoidance structure 301 may include structures such as grooves, holes, and notches.

In some embodiments, at least a part of the avoidance structure 301 is located between two adjacent battery cells 20 and is used to provide space for the expansion of at least one battery cell 20.

Multiple battery cells 20 may be arranged in one row or in multiple rows. Two battery cells 20 being adjacent means that there is no other battery cell 20 between the two battery cells 20 in the arrangement direction of the two battery cells 20.

The avoidance structure 301 can only provide space for the expansion of one battery cell 20 or can provide space for the expansion of two battery cells 20 at the same time.

At least a part of the thermally conductive member 3a is located between two adjacent battery cells 20, so that the thermally conductive member 3a can exchange heat with the two battery cells 20 at the same time, thereby improving the heat exchange efficiency and improving the temperature consistency of the battery cells 20 on both sides of the thermally conductive member 3a. The avoidance structure 301 can provide space for the expansion of at least one battery cell 20, thereby reducing the pressure between the battery cell 20 and the thermally conductive member 3a, reducing the risk of rupture of the thermally conductive member 3a, improving the cycling performance of the battery cell 20, and improving safety.

In some embodiments, the avoidance structure 301 is used to provide space for the expansion of the battery cells 20 located on both sides of the thermally conductive member 3a and adjacent to the thermally conductive member 3a.

The thermally conductive member 3a being adjacent to the battery cell 20 means that there are no other thermally conductive members 3a and other battery cells 20 between the thermally conductive member 3a and the battery cell 20.

The avoidance structure 301 can provide space for the expansion of the battery cells 20 on both sides of the thermally conductive members 3a at the same time, thereby further reducing the pressure between the battery cell 20 and the thermally conductive member 3a, reducing the risk of rupture of the thermally conductive member 3a, improving the cycling performance of the battery cell 20, and improving safety.

Referring to Figs. 101 to 105, in some embodiments, the thermally conductive member 3a further includes two surfaces arranged oppositely along the first direction X, at least one of the two surfaces is connected with battery cells 20, so that the battery cell 20 exchanges heat with the corresponding surface of the thermally conductive member 3a.

The battery cell 20 may be directly connected to the aforementioned surface of the thermally conductive member 3a. For example, the battery cell 20 directly abuts against the surface of the thermally conductive member 3a. Alternatively, the battery cell 20 may be indirectly connected to the surface of the thermally conductive member 3a through other thermally conductive structures. For example, the battery cell 20 may be bonded to the surface of the thermally conductive member 3a through the thermally conductive adhesive.

There may be one or multiple battery cells 20 connected to the same surface of the thermally conductive member 3a.

Optionally, the surface of the thermally conductive member 3a that exchanges heat with the battery cell 20 may be a plane, and the plane is perpendicular to the first direction x.

In some embodiments, the thermally conductive member 3a further includes two surfaces arranged oppositely along the first direction x, which may be the first surface and the second surface respectively. The avoidance structure 301 includes a first concave portion 3011, the first concave portion 3011 is recessed from the first surface in a direction close to the second surface, and the first concave portion 3011 is used to provide space for the expansion of the battery cells 20 connected to the first surface.

There may be one or multiple first concave portions 3011.

The first concave portion 3011 may provide space for the expansion of one battery cell 20 connected to the first surface, or may provide space for the expansion of multiple battery cells 20 connected to the first surface.

In this embodiment, by providing the first concave portion 3011, the contact area between the first surface and the battery cell 20 can be reduced. When the battery cell 20 expands, the first concave portion 3011 can provide space for the expansion of the battery cell 20 and reduce the portion of the thermally conductive member 3a that is extruded by the battery cell 20, thereby reducing the pressure between the battery cell 20 and the thermally conductive member 3a, reducing the risk of rupture of the thermally conductive member 3a, improving the cycling performance of the battery cell 20, and improving safety.

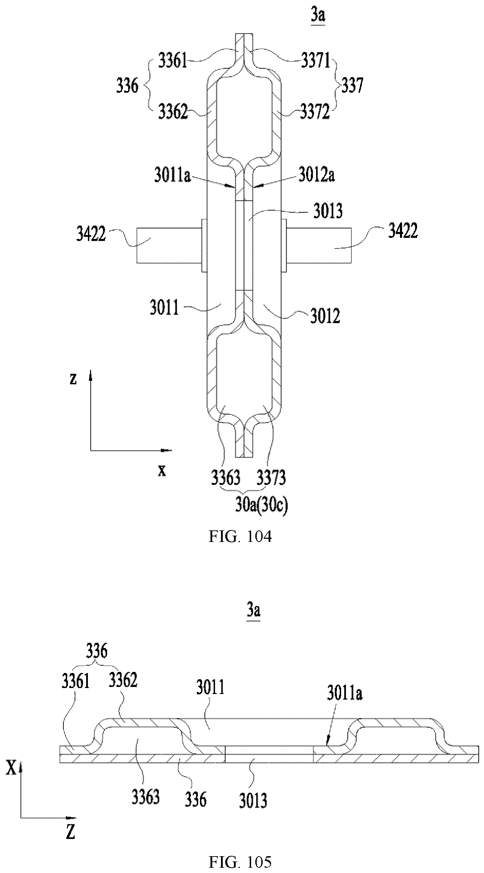

In some embodiments, as shown in Fig. 104, the thermally conductive member 3a includes a first plate body 336 (for example, also called the first thermally conductive plate 3331 mentioned above) and a second plate body 337 (for example, also called the second thermally conductive plate 3332 mentioned above) disposed along the first direction x. The first plate body 336 includes a first main body 3361 and a first convex portion 3362, the first convex portion 3362 protrudes from the surface of the first main body 3361 away from the second plate body 337, a second concave portion 3363 is provided on the side of the first plate body 336 facing the second plate body 337, the second concave portion 3363 is formed at a position on the first plate body 336 corresponding to the first convex portion 3362, and the second concave portion 3363 is used for the heat exchange medium to flow. The first surface includes the end surface of the first convex portion 3362 away from the first main body 3361, and the first convex portion 3362 and the first main body 3361 enclose to form the first concave portion 3011.

The first plate body 336 and the second plate body 337 are stacked and connected along the first direction x. For example, the first plate body 336 is welded to the second plate body 337. Optionally, the first main body 3361 is welded to the second plate body 337.

The first main body 3361 has an inner surface facing the second plate body 337 and an outer surface away from the second plate body 337. Optionally, the first main body 3361 is in a flat plate shape, and both the inner surface and the outer surface of the first main body 3361 are planes.

The second concave portion 3363 is recessed from the inner surface of the first main body 3361 in a direction away from the second plate body 337. The second plate body 337 is connected to the first main body 3361 and covers the second concave portion 3363.

In this embodiment, the heat exchange medium can flow in the second concave portion 3363 to exchange heat with the battery cell 20 through the first convex portion 3362. The first convex portion 3362 of the first plate body 336 can be formed by stamping. After stamping, the first plate body 336 forms a second concave portion 3363 on the side facing the second plate body 337, and a first concave portion 3011 is formed on one side of the first plate body 336 away from the second plate body 337. This embodiment can simplify the molding process of the thermally conductive member 3a.

In some embodiments, the first convex portion 3362 surrounds the outside of the first concave portion 3011.

In some embodiments, battery cells 20 are connected to the second surface. The avoidance structure 301 further includes a third concave portion 3012, the third concave portion 3012 is recessed from the second surface in a direction close to the first surface, and the third concave portion 3012 is used to provide space for the expansion of the battery cell 20 connected to the second surface.

The battery cells 20 connected to the second surface are located on the side of the second surface away from the first surface. The battery cells 20 connected to the second surface and the battery cells 20 connected to the first surface are different battery cells, and are respectively arranged on either side of the thermally conductive member 3a along the first direction X.

There may be one or multiple third concave portions 3012.

The third concave portion 3012 may provide space for the expansion of one battery cell 20 connected to the second surface, or may provide space for the expansion of multiple battery cells 20 connected to the second surface.

The first concave portion 3011 can provide space for the expansion of the battery cell 20 connected to the first surface, and the third concave portion 3012 can provide space for the expansion of the battery cell 20 connected to the second surface, thereby reducing the pressure between the battery cell 20 and the thermally conductive members 3a, reducing the risk of rupture of the thermally conductive members 3a, improving the cycling performance of the battery cells 20, and improving safety.

In some embodiments, the projection of the bottom surface 3011a of the first concave portion in the first direction X at least partially overlaps with the projection of the bottom surface 3012a of the third concave portion in the first direction X.

In some embodiments, the projection of the bottom surface 3011a of the first concave portion in the first direction X completely overlaps with the projection of the bottom surface 3012a of the third concave portion in the first direction X. In this embodiment, the first concave portion 3011 and the second concave portion 3363 are arranged oppositely along the first direction X, which can improve the consistency of the force on the battery cells 20 located on both sides of the thermally conductive member 3a.

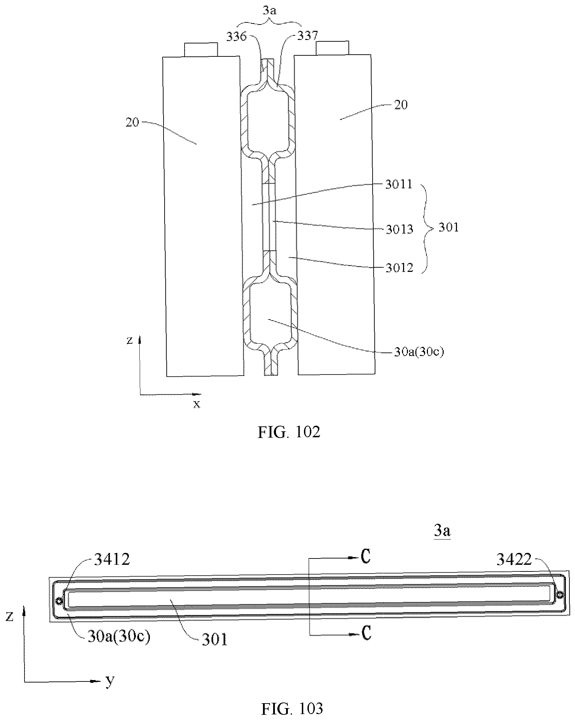

In some embodiments, as shown in Figs. 102 and 104, the second plate body 337 includes a second main body 3371 and a second convex portion 3372, the second convex portion 3372 protrudes from the surface of the second main body 3371 away from the first plate body 336, the second plate body 337 is provided with a fourth concave portion 3373 on the side facing the first plate body 336, and the fourth concave portion 3373 is formed at a position on the second plate body 337 corresponding to the second convex portion 3372. The second concave portion 3363 and the fourth concave portion 3373 are arranged opposite to each other and form a hollow cavity 30a for the heat exchange medium to flow. The second surface includes the end surface of the second convex portion 3372 away from the second main body 3371. The second convex portion 3372 and the second plate body 337 enclose to form the third concave portion 3012.

In some embodiments, as shown in Fig. 102, the avoidance structure 301 further includes a first through hole 3013. The first through hole 3013 extends from the bottom surface 3011a of the first concave portion to the bottom surface 3012a of the third concave portion to communicate with the first concave portion 3011 and third concave portion 3012.

There may be one or multiple first through holes 3013. The first through hole 3013 may be a circular hole, a square hole, a racetrack-shaped hole, or holes in other shapes.

In this embodiment, by providing the first through hole 3013, the avoidance space can be further increased and the difference in expansion of the battery cells 20 on both sides of the thermally conductive member 3a can be balanced. For example, if the expansion of a certain battery cell 20 connected to the first surface is too large, the expanded part of the battery cell 20 can enter the second concave portion 3363 through the first through hole 3013.

In some embodiments, the first through hole 3013 runs through the first main body 3361 and the second main body 3371.

In some embodiments, a hollow cavity 30a for the heat transfer medium to flow is provided in the thermally conductive member 3a, and the hollow cavity 30a surrounds the avoidance structure 301. The heat exchange medium can effectively exchange heat with the battery cells 20, thereby improving the heat exchange efficiency. Exemplarily, the hollow cavity 30a includes a second concave portion 3363 and a fourth concaved portion 3373.

In some embodiments, as shown in Fig. 105, the avoidance structure 301 further includes a first through hole 3013, and the first through hole 3013 extends from the bottom surface 3011a of the first concave portion to the second surface. In this embodiment, the second concave portion 3363 can be omitted.

When the battery cell 20 connected to the second surface expands, the expanded part of the battery cell 20 can enter the first concave portion 3011 through the first through hole 3013. In other words, the first concave portion 3011 may also provide space for the expansion of the battery cell 20 connected to the second surface to reduce the pressure between the battery cell 20 and the thermally conductive member 3a, reduce the risk of rupture of the thermally conductive member 3a, improve the cycling performance of the battery cell 20, and improve safety.

In some embodiments, the thermally conductive member 3a includes a first plate body 336 and a second plate body 337 disposed along the first direction x. The first plate body 336 includes a first main body 3361 and a first convex portion 3362, the first convex portion 3362 protrudes from the surface of the first main body 221 away from the second plate body 337, a second concave portion 3363 is provided on the side of the first plate body 336 facing the second plate body 337, the second concave portion 3363 is formed at a position on the first plate body 336 corresponding to the first convex portion 3362, and the second concave portion 23 is used for the heat exchange medium to flow. The first surface includes the end surface of the first convex portion 3362 away from the first main body 3361, and the first convex portion 3362 and the first plate body 336 enclose to form the first concave portion 3011. The second plate body 337 is in a flat plate shape.

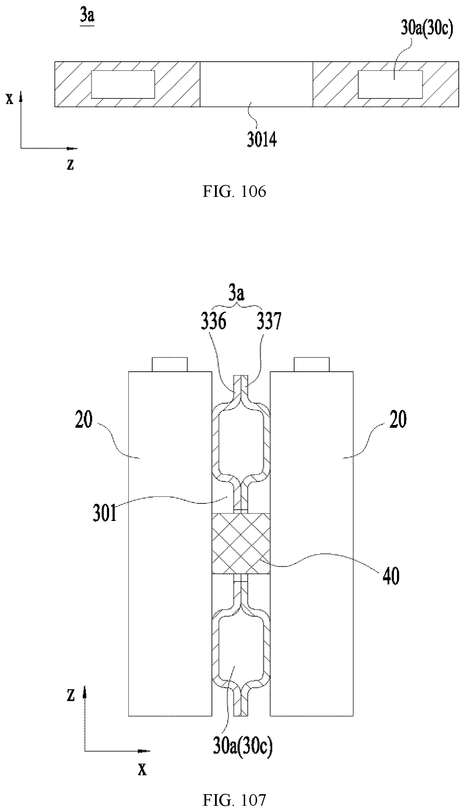

Fig. 106 is a cross-sectional schematic diagram of a thermally conductive member 3a of a battery provided by other embodiments of the present application.

As shown in Fig. 106, the avoidance structure 301 includes a second through hole 3014, and the second through hole 3014 extends 10 from the first surface to the second surface to run through the thermally conductive member 3a.

There may be one or multiple second through holes 3014.

The second concave portion 3014 can provide space for the expansion of the battery cell 20 connected to the first surface, and provide space for the expansion of the battery cell 20 connected to the second surface, thereby reducing the pressure between the battery cell 20 and the thermally conductive members 3a, reducing the risk of rupture of the thermally conductive members 3a, improving the cycling performance of the battery cells 20, and improving safety.

In some embodiments, the thermally conductive members 3a has an integrated structure.

Fig. 107 is a partial cross-sectional schematic diagram of a battery provided by other embodiments of the present application.

As shown in Fig. 107, in some embodiments, the battery 100 further includes a thermal insulation member 40, at least a part of the thermal insulation member 40 is accommodated in the avoidance structure 301, and the thermal conductivity of the thermal insulation member 40 is smaller than the thermal conductivity of the thermally conductive member 3a.

The thermal insulation member 40 can be wholly accommodated in the avoidance structure 301, or can be only partially accommodated in the avoidance structure 301.

The thermal insulation member 40 may be connected to the battery cell 20 or the thermally conductive member 3a.

When the battery cell 20 connected to the thermally conductive member 3a undergoes thermal runaway, the thermal insulation member 40 can provide heat insulation protection to prevent the rapid diffusion of heat to reduce safety risks.

In some embodiments, the Young's modulus of the thermal insulation member 40 is less than the Young's modulus of the thermally conductive member 3a.

Compared with the thermally conductive member 3a, the thermal insulation member 40 has better elasticity. When the battery cell 20 expands and extrudes the thermal insulation member 40, the thermal insulation member 40 can be compressed to provide space for the expansion of the battery cell 20, thereby reducing the force on the battery cell 20 and improving the cycling performance of the battery cell 20.

In some embodiments, the material of the thermal insulation member 40 includes at least one of aerogel, glass fiber, and ceramic fiber.

In some embodiments, the thermal insulation member 40 is fixed to the battery cells 20. Optionally, the thermal insulation member 40 is fixed to the battery cell 20 through bonding.

The battery cell 20 can fix the thermal insulation member 40 to reduce the shaking of the thermal insulation member 40 in the avoidance structure 301 and reduce the risk of the thermal insulation member 40 being dislocated.

In some embodiments, the thermal insulation member 40 is provided separately from the thermally conductive member 3a.

A gap is provided between the thermally conductive member 3a and the thermal insulation member 40 so that the thermal insulation member 40 and the thermally conductive member 3a do not come into contact.

The thermal insulation member 40 and the thermally conductive member 3a are provided separately to reduce heat transfer between the thermal insulation member 40 and the thermally conductive member 3a and reduce heat loss.

In some embodiments, the thermal insulation member 40 is located between adjacent battery cells 20.

The thermal insulation member 40 can reduce the transfer of heat between the battery cells 20 and reduce the influence of the battery cells 20 on each other. When a certain battery cell 20 is thermally runaway, the thermal insulation member 40 can reduce the heat transmitted to the normal battery cells 20 adjacent to the battery cell 20, thereby reducing the risk of thermal runaway of the normal battery cells 20.

As shown in Figs. 101, 108 and 109, in some embodiments, the thermally conductive member 3a includes a medium inlet 3412, a medium outlet 3422, and a hollow cavity 30a communicating the medium inlet 3412 and the medium outlet 3422. There may be one or multiple medium inlets 3412. There may be one or multiple medium outlets 3422.

In some embodiments, multiple thermally conductive members 3a are provided, and the multiple thermally conductive members 3a are provided along the first direction X. Battery cells 20 are provided between adjacent thermally conductive members 3a. The hollow cavities 30a of the multiple thermally conductive members 3a communicate.

One battery cell 20 or multiple battery cells 20 may be disposed between adjacent thermally conductive members 3a.

The hollow cavities 30a of the multiple thermally conductive members 3a may be connected in series, in parallel or in parallel-series. Parallel-series connection means that there are not only series connection but also parallel connection for the hollow cavities 30a of the multiple thermally conductive members 3a.

The multiple thermally conductive members 3a can exchange heat with multiple battery cells 20 to improve the temperature consistency of the multiple battery cells 20. The hollow cavities 30a of the multiple thermally conductive members 3a communicate, and the heat exchange medium can flow between the multiple thermally conductive members 3a.

In some embodiments, the medium inlets 3412 of the multiple thermally conductive members 3a communicate, and the medium outlets 3422 of the multiple thermally conductive members 3a communicate, so that the hollow cavities 30a of the multiple thermally conductive members 3a are connected in parallel.

The medium inlets 3412 of the multiple thermally conductive members 3a can communicate directly or communicate through pipelines. The medium outlets 3422 of the multiple thermally conductive members 3a can communicate directly or communicate through pipelines.

The hollow cavities 30a of the multiple thermally conductive members 3a are connected in parallel, which can reduce the temperature difference of the heat exchange medium in the hollow cavities 30a of the multiple thermally conductive members 3a and improve the temperature consistency of the multiple battery cells 20.

In some embodiments, the medium inlets 3412 of adjacent thermally conductive members 3a communicate through a pipe 107, and the medium outlets 3422 of adjacent thermally conductive members 3a communicate through a pipe 107.

In some embodiments, all medium inlets 3412, all medium outlets 3422, and all pipes 107 are substantially on the same plane (or, in other words, substantially at the same height in the third direction z), which can maximize space utilization and reduce the heat loss between the thermally conductive members 3a.

In some embodiments, at least one thermally conductive member 3a is provided with two medium inlets 3412 and two medium outlets 3422. The two medium inlets 3412 are respectively located on either side of the hollow cavity 30a along the first direction x, and the two medium outlets 3422 are respectively located on either side of the hollow cavity 30a along the first direction x.

The two medium inlets 3412 of a certain thermally conductive member 3a can communicate with the thermally conductive members 3a located on both sides of the thermally conductive member 3a respectively, and the two medium outlets 3422 of the thermally conductive member 3a can communicate with the thermally conductive members 3a located on both sides of the thermally conductive member 3a respectively. This embodiment can simplify the connecting structure between multiple thermally conductive members 3a.

In some embodiments, the two medium inlets 3412 of the thermally conductive member 3a are opposite along the first direction x, and the two medium outlets 3422 of the thermally conductive member 3a are opposite along the first direction x.

In some embodiments, each thermally conductive member 3a is provided with two medium inlets 3412 and two medium outlets 3422.

In some embodiments, the medium inlet 3412 and the medium outlet 3422 communicate with the two ends of the hollow cavity 30a along the second direction y respectively, and the second direction y is perpendicular to the first direction x.

This embodiment can shorten the flow path of the heat exchange medium in the hollow cavity 30a to reduce the temperature difference between the heat exchange medium at the medium inlet 3412 and the heat exchange medium at the medium outlet 3422, and improve the temperature consistency of the battery cells 20.

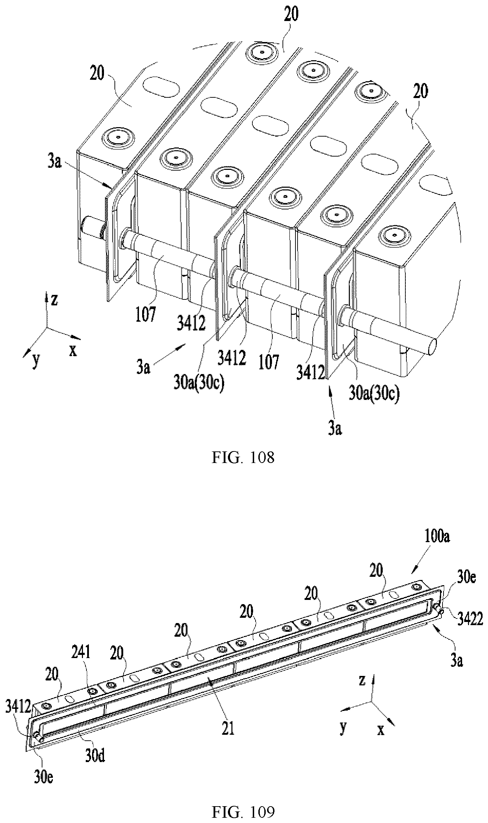

In some embodiments, as shown in Fig. 109, the hollow cavity 30a is annular and the hollow cavity 30a includes two heat exchange sections 30d and two confluence sections 30e, the two heat exchange sections 30d extend along the second direction y and the two confluence sections 30e are arranged along the second direction y. One confluence section 30e connects the ends of the two confluence sections 30e close to the medium inlet 3412 and communicates with the medium inlet 3412; the other confluence section 30e connects the ends of the two confluence sections 30e close to the medium outlet 3422 and communicates with the medium outlet 3422.

In some embodiments, the battery 100 includes multiple battery groups 10A arranged along the first direction x, and each battery group 10A includes multiple battery cells 20 arranged along the second direction y, and the second direction y is perpendicular to the first direction x. A thermally conductive member 3a is provided between at least two adjacent battery groups 10A.

In this embodiment, the thermally conductive member 3a simultaneously exchanges heat with the multiple battery cells 20 of the battery group 10A to increase the heat exchange efficiency, improve the temperature consistency of the multiple battery cells 20 of the battery group 10A, and reduce the number of thermally conductive members 3a, simplify the structure of the battery 100 and improve the energy density of the battery 100.

In some embodiments, the avoidance structure 301 is located between adjacent battery groups 10A and is used to provide space for the expansion of the multiple battery cells 20 of the battery 100.

There may be one avoidance structure 301, and one avoidance structure 301 simultaneously provides space for the expansion of the multiple battery cells 20 of the battery group 10A.

There may also be multiple avoidance structures 301. the multiple avoidance structures 301 are arranged at intervals along the first direction X and are used to provide space for the expansion of the multiple battery cells 20 of the battery group 10A. Optionally, the number of avoidance structures 301 is the same as the number of battery cells 20 of the battery group 10A, and the multiple avoidance structures 301 are arranged in one-to-one correspondence with the multiple battery cells 20 of the battery group 10A.

The avoidance structure 301 may only provide expansion space for the multiple battery cells 20 of the battery group 10A on one side of the thermally conductive member 3a, or may simultaneously provide expansion space for the multiple battery cells 20 of the battery group 10A on both sides of the thermally conductive member 3a.

The avoidance structure 301 can provide space for the expansion of the multiple battery cells 20 of the battery group 10A, thereby reducing the pressure between the multiple battery cells 20 and the thermally conductive member 3a, reducing the risk of rupture of the thermally conductive member 3a, reducing the difference in force on the multiple battery cells 20 of the battery group 10A, and improving the cycling performance of the battery cells 20.

In some embodiments, one avoidance structure 301 is provided to simplify the molding process of the thermally conductive member 3a.

Optionally, both the third surface 11 and the fourth surface 12 are planes.

In some embodiments, the heat exchange area between the thermally conductive member 3a and the first wall 201 is S, the area of the first wall 201 is S3, and S/S3≥0.2.

The first wall 201 has a first region 201a and a second region 201b. The first region 201a is used to connect with the thermally conductive member 3a to exchange heat with the thermally conductive member 3a. The second region 201b is configured to be opposite to the avoidance structure 301 and is not in contact with the thermally conductive member 3a.

There may be one or multiple first regions 201a. Exemplarily, the total area of the first region 201a may be the heat exchange area between the thermally conductive member 3a and the first wall 201.

Exemplarily, the first region 201a can directly abut against the thermally conductive member 3a, or can be bonded to the thermally conductive member 3a through thermally conductive adhesive.

The heat exchange area between the thermally conductive member 3a and the first wall 201 is S, and the area of the first wall 201 is S3. The smaller the value of S/S3, the lower the heat exchange efficiency between the thermally conductive member 3a and the battery cell 20. In the embodiments of the present application, S/S3≥0.2 is satisfied, so that the heat exchange efficiency between the thermally conductive member 3a and the battery cell 20 meets the requirements to improve the cycling performance of the battery cell 20. Optionally, it satisfies S/S3≥0.5.

In some embodiments, there are two first regions 201a, and the two first regions 201a are respectively located on either side of the second region 201b.

The second region 201b is located in the middle of the third surface 11, and its degree of expansion and deformation is greater than the degree of expansion and deformation of the first region 201a. In the embodiments of the present application, the second region 201b is opposite to the avoidance structure 301 to reduce the pressure between the thermally conductive member 3a and the battery cell 20.

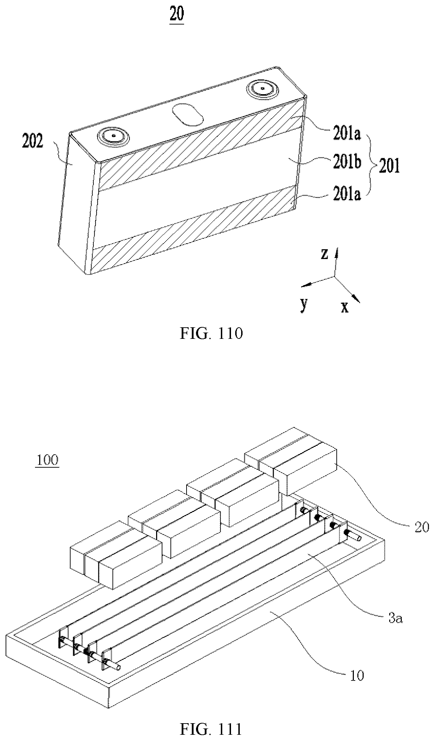

In some embodiments, as shown in Figs. 111 to 115, in the first direction x, the thermally conductive member 3a includes a thermally conductive plate 3331 and a second thermally conductive plate 3332 arranged oppositely, a hollow cavity 30a is arranged between the first thermally conductive plate and the second thermally conductive plate, and the hollow cavity 30a is used to accommodate the heat exchange medium to exchange heat with the battery cell 20. Along the first direction, at least one of the first thermally conductive plate 3331 and the second thermally conductive plate 3332 is recessed toward the other to form to an avoidance structure 301, and the first direction x is perpendicular to the first wall 201.

In the examples of Figs. 111 to 115, the thermally conductive member 3a includes a first cavity wall 30h (or called a first thermally conductive member plate 3331) and a second cavity wall 30i (or called a second thermally conductive member plate 3332) arranged oppositely, a hollow cavity 30a is formed between the first cavity wall 30h and the second cavity wall 30i; at least one of the first cavity wall 30h and the second cavity wall 30i faces the other groove in the first direction to form the avoidance structure 301.

As a result, a surplus space is formed that can absorb the expansion force of the battery cell 20. When the battery cell 20 expands and protrudes in the direction close to the thermally conductive member 3a during operation, the expanded part can be embedded in the recessed position to avoid affecting the hollow cavity 30a inside the thermally conductive member 3a, and at the same time, it can prevent the battery cell 20 from being damaged after expansion due to the incompressibility of the thermally conductive member 3a in the thickness direction.

It can be seen that the avoidance space provided by the avoidance structure 301 can absorb the expansion of the battery cells 20 to be cooled during use, and prevent the battery cells 20 from extruding the first thermally conductive plate 3331 or the second thermally conductive plate 3332 during expansion to compress the hollow cavity 30a inside the thermally conductive member 3a, thereby making the thermally conductive member 3a less susceptible to being extruded by the battery cells 20 and causing an increase in flow resistance, thereby ensuring parameters such as the flow rate of the heat exchange medium in the hollow cavity 30a. Also, when the battery cell 20 thermally expands and enters the avoidance structure 301 of the thermally conductive member 3a and comes into contact with the first thermally conductive plate 3331 or the second thermally conductive plate 3332, the battery cell 20 can directly exchange heat with the heat exchange medium in the hollow cavity 30a to ensure the heat exchange rate.

It can be understood that the avoidance structure 301 (which may be formed as a concave cavity, for example) may adopt different shapes according to different expansion degrees of the battery cells 20, so as to have more contact area with the surface of the battery cells 20 after expansion, thereby improving the heat exchange efficiency. For example, an experimental test can be first conducted on the expansion degree of the battery cell 20 arranged adjacent to the thermally conductive member 3a to collect relevant data on the corresponding relationship between the expansion degree and the position of the battery cell 20, and design the shape and position of the avoidance structure 301 accordingly to make the recess degree of the avoidance structure 301 be proportional to the degree of expansion of the battery cell 20 at the corresponding position, so that the thermally conductive member 3a and the battery cell 20 match well, can maintain a balanced and stable force state after absorbing the extrusion force caused by expansion, and can have a large contact area to provide good heat exchange effect. Exemplarily, the avoidance structure 301 can be a rectangular groove, an arc-shaped groove, a stepped groove, etc., and can be designed according to the use requirements and processing conditions, which is not specifically limited in the present application.

Optionally, the volume of the recessed avoidance space (for example, formed as a concave cavity) of the avoidance structure 301 may be less than or equal to the volume of the battery cell 20 that expands during the working process, that is, the battery cell 20 can abut against the bottom of the avoidance space, so that the contact area between the battery cell 20 and the thermally conductive member 3a exceeds a certain size, thereby ensuring the heat exchange effect between them. Correspondingly, when the battery cell 20 does not expand, its temperature is low, and the requirement for heat exchange efficiency is also low. At this time, there may be a certain gap between the battery cell 20 and the thermally conductive member 3a, and the battery cell 20 can work normally. After the battery cell 20 heats up and expands, the expansion volume is greater than or equal to the avoidance space volume, so the battery cell 20 can abut against the thermally conductive member 3a, thereby improving the heat exchange efficiency accordingly, so that the battery cell 20 still can maintain normal operation within a certain temperature range.

Optionally, when the first thermally conductive plate 3331 and the second thermally conductive plate 3332 both have avoidance structures 301, the first cavity wall 30h and the second cavity wall 30i both have avoidance structures 301, the shape and position of the avoidance space formed by them can be the same, and different designs can also be adopted according to the different expansion conditions of adjacent battery cells 20.

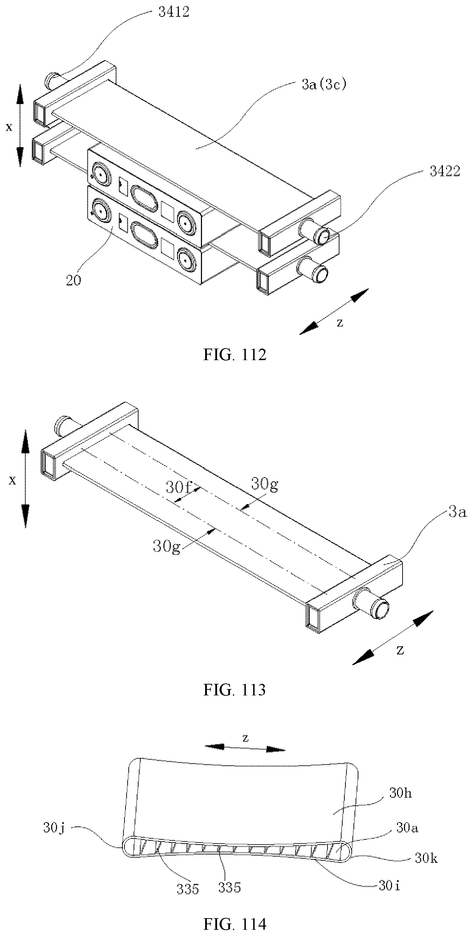

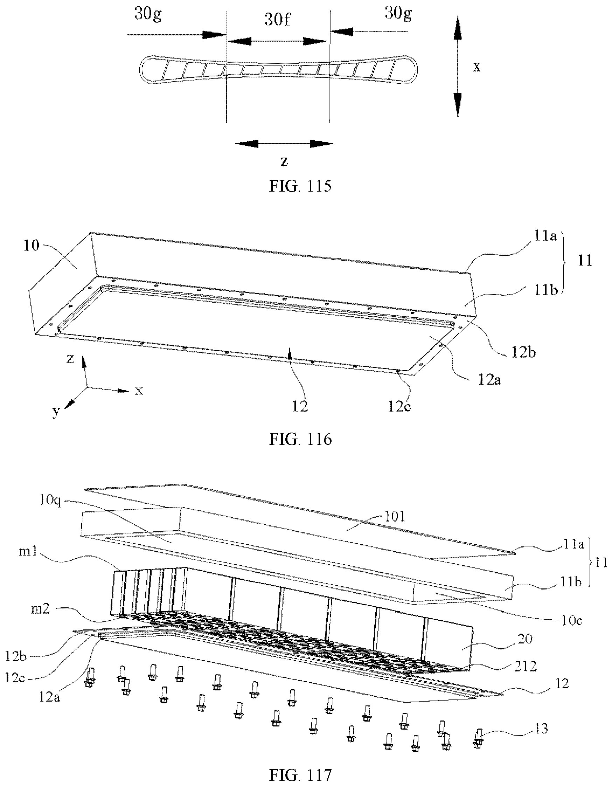

In some optional embodiments, along the first direction x, at least one of the first thermally conductive plate 3331 and the second thermally conductive plate 3332 is an arc-shaped plate that is recessed toward the other. In the examples of Figs. 114 and 115, at least one of the first cavity wall 30h and the second cavity wall 30i is an arc-shaped plate recessed toward the other.

In the embodiments of the present application, at least one of the first cavity wall 30h and the second cavity wall 30i in the thermally conductive member 3a is recessed in a direction close to each other to form an arc plate to define an avoidance structure 301. For example, the avoidance structure 301 may be a concave cavity with an arc-shaped bottom surface, that is, at least one of the first cavity wall 30h and the second cavity wall 30i (that is, at least one of the first thermally conductive plate 3331 and the second thermally conductive plate 3332) has an arc-shaped surface. The arc-shaped surface may occupy at least a part of area of the first cavity wall 30h or the second cavity wall 30i, that is, at least a part of region of the first cavity wall 30h or the second cavity wall 30i is an arc-shaped plate. When only a part of region is an arc-shaped plate, this part of region can extend in the same direction as the extension direction of the thermally conductive member 3a itself and be distributed in a rectangular shape, and can be symmetrically arranged with the central axis of the thermally conductive member 3a in the third direction as the symmetry axis, so as to form a structure with a relatively uniform carrying capacity in this direction. Adopting the form of an arc-shaped plate can make it easier for the thermally conductive member 3a to be in contact with the surface of the battery cell 20 to be cooled, thereby providing better heat exchange effect.

In some optional embodiments, along the thickness direction (i.e., the first direction x), the first cavity wall 30h and the second cavity wall 30i are respectively arc-shaped plates that are recessed toward the other.

As mentioned above, in the embodiments of the present application, the first cavity wall 30h and the second cavity wall 30i can be configured as arc-shaped plates to form a concave cavity that avoids the expansion of the battery cell 20. Configuring both the first cavity wall 30h and the second cavity wall 30i as arc-shaped plates enables the thermally conductive member 3a to absorb the expansion on both sides at the same time, thereby allowing disposing the thermally conductive member 3a between two adjacent battery cells 20 to provide heat exchange effect for the battery cells 20 on both sides at the same time, so that the final battery can be compact in structure and have good heat dissipation.

In some optional embodiments, along the thickness direction (i.e., the first direction x), the first cavity wall 30h and the second cavity wall 30i are arranged at intervals and symmetrically distributed.

In an embodiment in which the first cavity wall 30h and the second cavity wall 30i are both recessed toward each other, the first cavity wall 30h and the second cavity wall 30i may be arranged at intervals and symmetrically arranged in the thickness direction, in which case the hollow cavity 30a of the thermally conductive member 3a is a chamber that is symmetrical about the central axis in the thickness direction. Spacing the first cavity wall 30h and the second cavity wall 30i apart and arranging them symmetrically can make the entire thermally conductive member 3a uniformly stressed and facilitate processing.

In some optional embodiments, as shown in Figs. 113 to 115, in the third direction z, the thermally conductive member 3a has a first region 30f and a second region 30g, the distance between the first cavity wall 30h and the second cavity wall 30i along the thickness direction in the first region 30f is smaller than the distance along the thickness direction in the second region 30g, and the third direction z intersects with the thickness direction.

The thermally conductive member 3a in the embodiments of the present application has a first cavity wall 30h and a second cavity wall 30i that are oppositely arranged in the thickness direction. At least one of the two cavity walls is recessed towards the other. Therefore, the thermally conductive member 3a in the embodiments of the present application may have different extension sizes in the thickness direction everywhere, forming a hollow cavity 30a with different thicknesses everywhere. In this case, at least two regions with different thicknesses may be arranged in the third direction z, and the thinner region corresponds to the region of the battery cell 20 that expands more significantly. By adjusting the degree and position of the recess of the first cavity wall 30h and/or the second cavity wall 30i, the thickness at different positions can be adjusted accordingly to achieve the desired design effect.

In some optional embodiments, second regions 30g are provided on both sides of the first region 30f in the third direction respectively.

The thermally conductive member 3a in the embodiments of the present application may have multiple second regions 30g. The multiple second regions 30g may be respectively disposed on both sides of the first region 30f in the third direction. In this case, the first region 30f is disposed corresponding to the location where the battery cell 20 has a greater degree of expansion to avoid the expanded protrusion of the battery cell 20 through a deeper concave cavity. The second region 30g can have a larger thickness to accommodate more heat exchange media, providing better cooling effect.

Exemplarily, the thermally conductive member 3a in the embodiments of the present application may also have multiple first regions 30f, and these first regions 30f may be arranged at intervals in the third direction. When the thermally conductive member 3a extends to a certain size in the third direction, each thermally conductive member 3a may be provided with multiple battery cells 20 correspondingly in this direction. In this case, each battery cell 20 may be correspondingly provided with at least one first region 30f with a smaller thickness, and a second region 30g with a larger thickness between adjacent first regions 30f. Alternatively, each first region 30f can also correspond to multiple battery cells 20 at the same time, that is, the expansion space of multiple battery cells 20 is accommodated at the same time. The specific corresponding method for arranging the first region 30f and the battery cells 20 can be designed based on the extension size and expansion degree of the battery cells 20 in the third direction, which is not specifically limited in the present application.

In some optional embodiments, along the third direction, the distance between the first wall 30h and the second cavity wall 30i in the thickness direction first decreases and then increases. The thermally conductive member 3a in the embodiments of the present application may have a thinner first region 30f located in the middle in the third direction, and a thicker second region 30g disposed on both sides of the first region 30f, thereby enabling the distance between the first cavity wall 30h and the second cavity wall 30i along the thickness direction shows a trend of first decreasing and then increasing, so as to match the expansion of each battery cell 20 one to one, better absorb the expansion and conduct heat exchange.

In some optional embodiments, the thermally conductive member 3a further includes a third cavity wall 30j and a fourth cavity wall 30k that are oppositely arranged in the third direction. The third cavity wall 30j is respectively connected to the first cavity wall 30h and the second cavity wall 30i, and the fourth cavity wall 30k is connected to the first cavity wall 30h and the second cavity wall 30i respectively. Along the third direction, at least one of the third cavity wall 30j and the fourth cavity wall 30k is recessed in the direction away from the other.

In the embodiments of the present application, the hollow cavity 30a of the thermally conductive member 3a may be formed by the first cavity wall 30h, the third cavity wall 30j, the second cavity wall 30i, and the fourth cavity wall 30k that are connected end to end in sequence, in which the third cavity wall 30j and/or the fourth cavity wall 30k recessed in the direction away from the other can increase the cross-sectional area of the hollow cavity 30a, thereby improving the heat exchange efficiency.

It can be understood that, similar to the first cavity wall 30h and the second cavity wall 30i, the recesses of the third cavity wall 30j and the fourth cavity wall 30k can also be rectangular recesses, arc-shaped recesses, stepped recesses, etc., and the two side walls can respectively adopt recesses in different shapes.

In some optional embodiments, along the third direction z, the third cavity wall 30j and the fourth cavity wall 30k are respectively arc-shaped plates that are recessed away from each other.

Similar to the arrangement of the first cavity wall 30h and the second cavity wall 30i, the third cavity wall 30j and the fourth cavity wall 30k in the embodiments of the present application can both be configured as arc-shaped plates, and both of the two arc-shaped plates are recessed in the direction away from each other to form the arc-shaped side walls of the hollow cavity 30a. Configuring the third cavity wall 30j and the fourth cavity wall 30k as arc-shaped plates that are recessed in the direction away from each other can further expand the cross-sectional area of the hollow cavity 30a while maintaining the thickness of the thermally conductive member 3a unchanged, thereby improving the flow rate and capacity of the heat exchange medium, further improving the heat transfer effect.

In some optional embodiments, along the third direction, the thermally conductive member 3a is an axially symmetrical structural body.

The thermally conductive member 3a in the embodiments of the present application can be a symmetrical structural body, that is, the first cavity wall 30h and the second cavity wall 30i are symmetrically arranged, and the third cavity wall 30j and the fourth cavity wall 30k are symmetrically arranged, forming a uniform and symmetrical structural body. In this case, the thermally conductive member 3a can form a uniform force-bearing structure and is easy to process. Also, when the thermally conductive member 3a is an axially symmetrical structural body, an axially symmetrical hollow cavity 30a can be formed accordingly, so that the internal heat exchange medium flows more uniformly.

As shown in Fig. 114, in some optional embodiments, the thermally conductive member 3a further includes a partition member 335. The partition member 335 is provided in the hollow cavity 30a and used to support at least one of the first cavity wall 30h and the second cavity wall 30i.

In the embodiments of the present application, a partition member 335 (which may also be called a supporting component or a reinforcing rib) may be provided in the hollow cavity 30a of the thermally conductive member 3a. The partition member 335 may be connected to at least one of the first cavity wall 30h and the second cavity wall 30i and used to form a supporting structure between the first cavity wall 30h and the second cavity wall 30i. The partition member 335 in the embodiments of the present application can be in the form of multiple supporting posts or supporting plates arranged at intervals, as long as it can ensure that the heat exchange medium can flow smoothly inside the hollow cavity 30a. The partition member 335 in the embodiments of the present application can provide supporting force to maintain a certain distance between the first cavity wall 30h and the second cavity wall 30i to facilitate the circulation of the heat exchange medium.

In some optional embodiments, there are multiple partition members 335, the multiple partition members 335 are arranged at intervals and divide the hollow cavity 30a to form multiple flow channels 30c, and each partition member 335 is connected to at least one of the first cavity wall 30h and the second cavity walls 30i.

The partition member 335 in the embodiments of the present application can be a supporting plate. The partition member 335 divides the hollow cavity 30a into multiple parts and forms a flow channel 30c for passing the heat exchange medium between adjacent supporting plates. The supporting force provided by the partition member 335 can provide supporting force for the flow channel after the thermally conductive member 3a is subjected to extrusion stress in the thickness direction, thereby improving the problem of increased flow resistance after extrusion.

It can be understood that the channels formed between adjacent partition members 335 should be in the same direction as the flow of the heat exchange medium inside the hollow cavity 30a to form flow channels 30c for the heat exchange medium to pass, so that the inside of the thermally conductive member 3a has a lower flow resistance, thereby further improving the cooling efficiency.

In some optional embodiments, multiple partition members 335 are arranged at intervals in parallel.

The partition members 335 in the embodiments of the present application can be arranged in parallel to form smooth flow channel with a small flow resistance, which improves the fluidity of the heat exchange medium between the multiple partition members 335, thereby ensuring the good heat exchange effect of the thermally conductive member 3a. Also, the parallel-arranged partition members 335 can provide uniform supporting force between the first cavity wall 30h and the second cavity wall 30i, so that the thermally conductive member 3a has uniform and reliable carrying capacity in the thickness direction, and the parallel-arranged partition members 335 are easy to process. It can be understood that the multiple partition members 335 can all extend along the length direction of the thermally conductive member 3a itself. Also, the multiple partition members 335 can adopt various shapes such as linear extensions parallel to each other, wavy extensions, zigzag extensions, as long as it can ensure smooth passage of the heat exchange medium, which is not specifically limited in the present application.

In some optional embodiments, the partition member 335 is in the form of a plate-like structural body, and the included angle between at least one partition member 335 (for example, also called the first reinforcing rib mentioned above) and at least one of the first cavity wall 30h and the second cavity wall 30i is less than 90°.

The partition member 335 in the embodiments of the present application may be obliquely arranged, that is, it has an included angle of less than 90° relative to at least one of the first cavity wall 30h and the second cavity wall 30i, so that its supporting strength can be less than a certain threshold when the thermally conductive member 3a is subjected to extrusion stress in the thickness direction. That is, when the thermally conductive member 3a is subjected to the extrusion force exerted by the expansion of the battery cell 20 in the thickness direction, the partition member 335 can be compressed to deform, thereby reducing the thickness of the thermally conductive member 3a there, further avoiding the expansion of the battery cells 20, and preventing damage to the battery cells 20.

It can be understood that in an embodiment in which the first cavity wall 30h and/or the second cavity wall 30i are arc-shaped plates, the included angle may refer to the included angle between the plane where the two edges of the arc-shaped plate in the third direction are located and the partition member 335.

In some optional embodiments, the included angle between each partition member 335 and the first cavity wall 30h is in the range of 30°-60°; and/or the included angle between each partition member 335 and the second cavity wall 30i is in the range of 30°-60°.

As mentioned above, in an embodiment in which the included angle between the partition member 335 and the first cavity wall 30h and the second cavity wall 30i is less than 90°, that is, in an embodiment in which the partition member 335 is obliquely arranged, the included angle between each partition member 335 and the first cavity wall 30h and the second cavity wall 30i can be maintained between 30° and 60°, so that the partition member 335 maintains a certain extension distance in the thickness direction, and at the same time, it can shrink and deform when subjected to the force in this direction, absorbing the extrusion stress caused by expansion, and further avoiding the expansion region of the battery cell 20.

In some optional embodiments, among the multiple partition members 335, the distances between every two adjacent partition members 335 are equal.

The partition members 335 in the embodiments of the present application can be arranged at equal intervals to provide uniform and stable support for the first cavity wall 30h and the second cavity wall 30i with the avoidance structure 301, so that the thermally conductive member 3a has uniform and reliable overall carrying capacity when extruded by the expansion of the battery cells 20.

In some optional embodiments, the thermally conductive member 3a and the partition member 335 are an integrated structural body. The thermally conductive member 3a in the embodiments of the present application has a hollow cavity 30a. There is also a partition member 335 for providing support in the hollow cavity 30a. In an embodiment in which the partition member 335 is connected to the first cavity wall 30h and/or the second cavity wall 30i, the partition member 335 can be integrally molded with the thermally conductive member 3a, thereby improving the overall production efficiency of the thermally conductive member 3a and improving the overall strength of the thermally conductive member 3a.

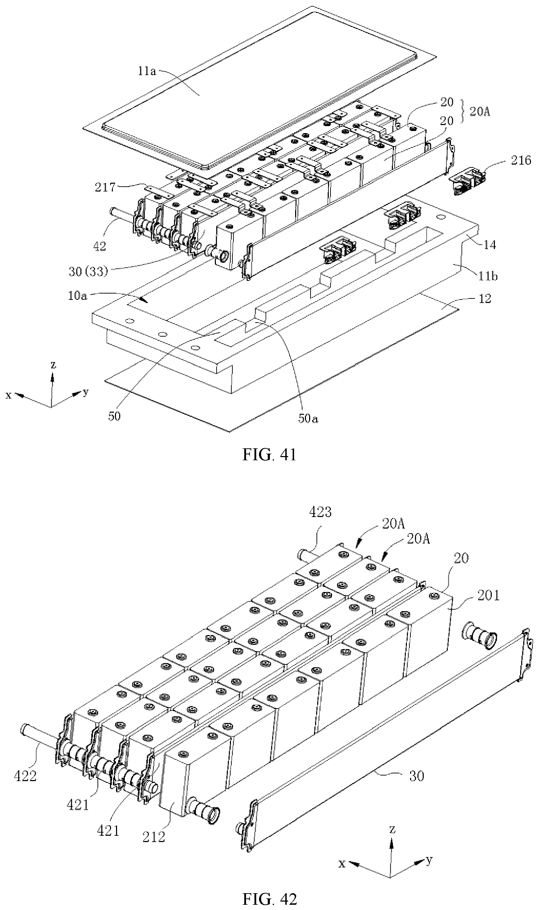

In some embodiments, as shown in Figs. 41 to 45, battery groups 20A are provided inside the box 10, and there are more than two battery groups 20A which are arranged along the first direction x. Each battery group 20A includes more than two battery cells 20 arranged along the second direction y, the second direction y is perpendicular to the first direction and the first direction x is perpendicular to the first wall 201. In this case, there are one or multiple thermally conductive members 3a.

Optionally, the first direction x is the length direction of the box 10, and the second direction y is the width direction of the box 10; or, the second direction y is the length direction of the box 10, and the first direction x is the width direction of the box 10.

Optionally, there are multiple thermally conductive members 3a, and the multiple thermally conductive members 3a are arranged sequentially along the first direction, and in the first direction, a battery group 20A is sandwiched between two adjacent thermally conductive members 3a to perform thermal management on the corresponding battery cells 20 by utilizing the two thermally conductive members 3a. Also, there is a large heat exchange area between the thermally conductive members 3a and the battery cells 20 to ensure the thermal management efficiency of the battery cells 20.

In addition, the structural strength function is integrated into the thermally conductive member 3a, and the thermally conductive members are arranged inside the box 10 and distributed at intervals, which can avoid the risk of liquid leakage resulting from damage of the thermally conductive member 3a due to vibration or collision and other operating conditions found when the thermally conductive member 3a is arranged only on the side inside the box 10, thereby ensuring the safety performance of the battery 100.

It can be understood that the number of thermally conductive members 3a is greater than the number of battery groups 20A to better improve thermal management efficiency, structural strength and prevent thermal runaway.

Optionally, in the third direction, the height of the thermally conductive member 3a is the same as the height of the battery cell 20 to increase the connection area between the thermally conductive member 3a and the first wall 201, so that the thermally conductive member 3a can better exchange heat with the battery cell 20, thereby improving the thermal management effect of the thermally conductive member 3a and improving the safety and reliability of the battery 100.

Optionally, in the third direction, the height of the thermally conductive member 3a is different from the height of the battery cell 20. For example, the extension length of the thermally conductive member 3a in the third direction exceeds the height of the battery cell 20. This arrangement can not only improve the thermal management effect, but also support the battery cell 20 by the thermally conductive member 3a to prevent external collision and vibration forces from directly acting on the battery cell 20, which can improve the protection for the battery cell 20 and enable the battery cell 20 and the thermally conductive member 3a to mutually strengthen their structural strength, thereby increasing the structural strength of the battery 100.

In some embodiments, the battery cell 20 further has a second wall 202, the second wall 202 intersects with the first wall 201, and the second walls 202 of two adjacent battery cells 20 are disposed oppositely along the second direction y. During molding, the second walls 202 of the battery cells 20 of the same battery group 20A can be arranged oppositely first to form more than two battery groups 20A; then, the thermally conductive member 3a is connected to the first walls 201 of adjacent battery cells 20, so that the thermally conductive member 3a and the battery group 20A are stacked to form an integrated unit and are then put into the box 10, and the box 10 is closed to complete the preparation of the battery 100. Through this molding method, it can improve the space utilization of the box 10 and achieve a lightweight design while meeting the requirements of thermal management and structural strength. It is also simple to prepare and facilitates molding.

Optionally, during the above molding process, the thermally conductive members 3a may be connected to the first wall 201 of each battery cell 20 in each battery group 20A, that is, the thermally conductive members 3a and the battery group 20A are stacked to form an integrated unit and are then put into the box 10. The battery group 20A is connected to the box 10 through the thermally conductive member 3a to better protect the safety of the battery cells 20.

Optionally, each battery cell 20 may have two first walls 201 arranged oppositely. For example, the battery cell 20 is formed into a square structure, and the two first walls 201 of each battery cell 20 are respectively in contact with the thermally conductive member 3a to better improve the thermal management efficiency and ensure the temperature stability of the battery cell 20.

In some embodiments, the thermally conductive member 3a is sandwiched between two adjacent battery groups 20A, so that the first walls 201 of each battery cell 20 of the adjacent two battery groups 20A are connected to the thermally conductive member 3a, which can better improve the thermal management efficiency of the battery cell 20 and the overall structural strength of the battery 100.

In some embodiments, as shown in Fig. 41, the battery 100 further includes a connecting pipe group 42, a hollow cavity 30a for accommodating the heat exchange medium is arranged in the thermally conductive member 3a, and the connecting pipe group 42 is used for communicating the hollow cavities 30a of two or more thermally conductive members 3a.

The connecting pipe group 42 is an assembly used to connect the hollow cavities 30a of the thermally conductive members 3a, and can be connected to an external device that provides the heat exchange medium. The heat exchange medium enters and exits the hollow cavities 30a of the thermally conductive members 3a through the connecting pipe group 42 to perform heat exchange management on the battery cells 20.

By arranging the connecting pipe group 42 and communicating the hollow cavities 30a of two or more thermally conductive members 3a through the connecting pipe group 42, there is no need for each thermally conductive member 3a to have a corresponding pipeline directly connected to the device that provides the heat exchange medium. On the basis of providing the heat exchange medium for each thermally conductive member 3a, so as to effectively manage the heat of each battery cell 20, the structure of the battery 100 can be simplified, and the space utilization of the box 10 can be improved.

Optionally, the connecting pipe group 42 can be disposed between the second wall 202 of the battery cell 20 and the box 10, and communicates all the hollow cavities 30a of the thermally conductive members 3a to achieve thermal management of the battery cell 20.

In some embodiments, as shown in Figs. 42 to 44, the connecting pipe group 42 includes a communication channel 421, an inlet pipe 422 and an outlet pipe 423. Along the first direction, the hollow cavities 30a of two adjacent thermally conductive members 3a are communicated through the communication channel 421, and the inlet pipe 422 and the outlet pipe 423 are communicated with the hollow cavity 30a of the same thermally conductive member 3a. The inlet pipe 422 can be communicated with the medium inlet 3412 mentioned above, and the outlet pipe 423 can be connected to the medium outlet 3422 mentioned above.

Optionally, the heat exchange medium can flow into the thermally conductive member 3a through the inlet pipe 422, and flow into the hollow cavity 30a of each thermally conductive member 3a through the communication channel 421. The heat exchange medium flows in the hollow cavity 30a to the communication channel 421 on the other side, flows to the outlet pipe 423 through the communication channel 421 to flow out of the thermally conductive member 3a. By arranging in this way, the thermal management of the battery cell 20 is completed, meeting the thermal management requirements and ensuring the safety performance of the battery cell 20.

By arranging in this way, the demand for heat exchange medium of the thermally conductive members 3a can be satisfied through only one inlet pipe 422 and one outlet pipe 423, reducing the space occupation of the connecting pipe group 42, and simplifying the structure of the connecting pipe group 42, which facilitates assembly and replacement, and is applicable to the supply of heat exchange media for different numbers of thermally conductive members 3a, thereby improving flexibility and versatility.

Optionally, the communication channel 421, the inlet pipe 422 and the outlet pipe 423 can be disposed on the same side of the thermally conductive member 3a extending along the second direction y. Of course, they can also be disposed on both sides of the thermally conductive member 3a extending along the second direction y.

Optionally, the extension direction of the inlet pipe 422 and the extension direction of the outlet pipe 423 may be the same or different.

Optionally, one thermally conductive member 3a is provided with communication channels 421 on both sides extending along the second direction y. The communication channels 421 on both sides of each heat exchange plate 41 are connected in sequence and are respectively connected to the inlet pipe 422 and the outlet pipe 423, which facilitates assembly and replacement and provides higher flexibility.

Moreover, the connecting pipe group 42 is configured to include the communication channel 421, the inlet pipe 422, and the outlet pipe 423, which can be arbitrarily matched to suit various numbers of thermally conductive members 3a and is beneficial to improving flexibility and versatility.

Optionally, connecting elements may be provided on both sides of the thermally conductive member 3a extending along the second direction y to connect with the communication channel 421 to improve the connection strength.

In some embodiments, the box 10 is provided with a through hole, and the inlet pipe 422 and the outlet pipe 423 respectively extend out of the box 10 through the through hole.

By arranging in this way, one end of the inlet pipe 422 and the outlet pipe 423 is extended to the outside of the box 10. The inlet pipe 422 can be connected to an external device that provides heat exchange media, which facilitates obtaining the heat exchange medium and transporting it to the hollow cavity 30a of the thermally conductive member 3a. The outlet pipe 423 can be connected to an external device for storing heat exchange media to discharge the heat exchange medium that exchanges heat with the battery cells 20, which facilitates the acquisition and discharge of the heat exchange medium, and can also reduce the risk of leakage of the heat exchange medium in the box 10, thereby ensuring the safety and reliability of the battery 100.

Optionally, the device for providing the heat exchange medium and the device for storing the heat exchange medium externally can be the same device, or of course, they can also be two separate devices.

Referring to Fig. 45, in some embodiments, the thermally conductive member 3a has a first thermally conductive plate 3331 and a second thermally conductive plate 3331 arranged oppositely along the first direction x, and a side wall 41d connected to the first thermally conductive plate 3331 and the second thermally conductive plate 3332. The first thermally conductive plate 3331, the second thermally conductive plate 3332 and the side wall 41d enclose to form a hollow cavity 30a. Under a predetermined pressure, the first thermally conductive plate 3331 and the second thermally conductive plate 3332 can move closer to each other at least partially along the first direction x to absorb the expansion force of the battery cell 20.

The first thermally conductive plate 3331, the second thermally conductive plate 3332 and the side wall 41d enclose to form a hollow cavity 30a, and the hollow cavity 30a and the connecting pipe group 42 communicate so that the connecting pipe group 42 can transfer the heat exchange medium to the hollow cavity 30a to exchange heat with the battery cells 20, the heat exchange medium after heat exchange is then transferred from the hollow cavity 30a to the connecting pipe group 42 and flows out to complete the thermal management of the battery cells 20.

Under a predetermined pressure, the first thermally conductive plate 3331 and the second thermally conductive plate 3332 can move in the direction close to each other at least partially along the first direction x. It can be understood that when the battery cell 20 expands during operation and its force acting on the heat conductor 3a exceeds the predetermined pressure, the thermally conductive member 3a can deform to absorb the expansion force of the battery cell 20, that is, the cross-sectional area of the thermally conductive member 3a in the first direction X becomes smaller to improve the safety performance of the battery 100. At the same time, the heat exchange plate 41 can always maintain a more compact connection with the battery cell 20, which improves the connection strength.

In some embodiments, as shown in Figs. 41 to 43, the battery 100 further includes a position-limiting member 80 disposed in the box 10 and fixedly connected to the box 10. The position-limiting member 80 is used to limit the deformation of the battery cell 20 in the first direction x.

By providing the position-limiting member 80, the battery group 20A and the thermally conductive member 3a can be positioned, which facilitates the battery group 20 and the thermally conductive member 3a to be mounted accurately and quickly at the preset position in the box 10, and avoids the inaccurate mounting of other components due to offset during mounting, which improves the mounting efficiency and mounting accuracy, thereby ensuring the good quality of the battery 100. In addition, the position-limiting member 80 is fixedly connected to the box 10 and can also be used as a structural member of the box 10 to meet the structural strength requirements with a high degree of integration.

Moreover, it can also limit the deformation of the battery cell 20 in the first direction x to protect the operation safety of the battery cell 20, thereby ensuring the safety performance of the battery 100.

Optionally, the position-limiting member 80 and the box 10 may have an integrated structure formed through processes such as bending and stamping. Of course, the position-limiting member 80 and the box 10 can also be provided separately, and then connected as one through welding, bonding, or other methods.

Optionally, the number of the position-limiting members 80 can be one, two, or, of course, multiple.

In some embodiments, the ratio of the height size of the position-limiting member 80 to the height size of the battery cell 20 is set between 2/3 and 11/10, including the two end values of 2/3 and 11/10. It can not only achieve the structural strength and deformation resistance effects, but also save space and improve space utilization.

In some embodiments, the position-limiting member 80 includes a position-limiting beam, the position-limiting beam extends along the second direction y, the position-limiting beam is connected to the box 10 at both ends in the second direction y, and the position-limiting beam presses against the thermally conductive member 3a and is connected to the thermally conductive member 3a.

Setting the position-limiting member 80 in the form of a position-limiting beam can help reduce the layout space of the position-limiting beam, enable the box 10 to accommodate more battery cells 20, and improve the utilization rate of the internal space of the box 10.

Exemplarily, all the parts of the position-limiting beam in the height direction z have the same cross-sectional area, which facilitates production and saves the internal space of the box 10.

The position-limiting beam presses against the thermally conductive member 3a and is connected to the thermally conductive member 3a to provide support. The position-limiting beam and the thermally conductive member 3a can jointly enhance the structural strength and resist the deformation of the battery cell 20.

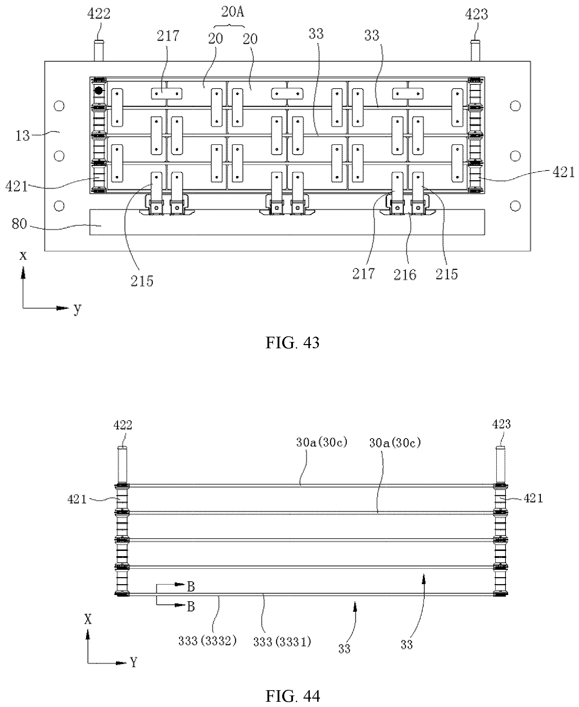

In some embodiments, as shown in Fig. 43, the battery cell 20 further includes a bus member 217 and two output members 215. The bus member 217 is used to electrically connect two adjacent battery cells 20 and the two output members 215 disposed on the same side in the first direction x. The battery group 21 located at the outermost side along the first direction x is provided with two output terminals, the two output terminals are distributed along the second direction y, and the two output members 215 are respectively electrically connected to the two output terminals, so as to form a power supply path together with the bus member 217.

Optionally, the number of bus members 217 can be set to one, two, or, of course, multiple.

Two adjacent battery cells 20 can be electrically connected through the bus member 217. Optionally, the bus member 217 can be connected to the electrode terminals 214 on adjacent battery cells 20 to realize the series, parallel, or parallel-series connection of multiple battery cells 20 in the same battery group 20A or two adjacent battery groups 20A.

The battery group 20A located at the outermost side along the first direction x is provided with two output terminals, namely two electrode terminals 214 that are not connected to the bus member 217.

The two output members 215 are electrically connected to the two output terminals respectively and are disposed on the same side in the first direction x to jointly form a power supply path with the bus member 217. By arranging in this way, it avoids using a large-sized output member 215 across the battery group 20A, which is conducive to improving the compactness and energy density of the battery 100.

Optionally, the output member 215 may be in a bent plate shape or other shapes, which is not limited in the present application.

In some embodiments, the two output terminals are respectively provided on the two battery cells 20 located at the end in the second direction y in the outermost battery group 20A.

By arranging in this way, it is beneficial to ensure that the two output members 215 are disposed on the same side in the first direction x, so that the two output members 215 and the two output terminals form an output interface for connection with external electrical apparatuses.

In some embodiments, the position-limiting member 80 is provided with an output member base 216. The output member base 216 is provided on the position-limiting member 80 and used to support the output member 215. Optionally, the output member base 216 includes an insulating material.

By arranging in this way, the mounting and fixation of the output member 215 is facilitated and contact short circuit can be avoided, thereby ensuring the safety performance of the battery 100.

In some embodiments, as shown in Figs. 41 and 43, the position-limiting member 80 is provided with an accommodating groove 80a, and the output member base 216 at least partially extends into the accommodating groove 80a.

Optionally, the number of the accommodating groove 80a can be one, two, or, of course, multiple. Optionally, the shape of the accommodating groove 80a can be configured to match the shape of the output member base 216, and the accommodating groove 80a can just fit into the output member base 216 to limit its position and prevent displacement.

The accommodating groove 80a can limit the position of the output member base 216 to prevent its displacement that causes safety problems for the battery 100. At the same time, it can also play a positioning role to facilitate the mounting of the output member base 216 and improve manufacturing efficiency.

Optionally, the number of the accommodating groove 80a and the number of the output member base 216 may be in a one-to-one relationship, or may be arranged in a multiple-to-one relationship, that is, multiple output member bases 216 may be disposed in the same accommodating groove 80a.

For example, the position-limiting member 80 is provided with two or more accommodating grooves 80a, and the two or more accommodating grooves 80a are arranged at intervals.

Optionally, the accommodating groove 80a can be molded by stamping, that is, the accommodating groove 80a can be quickly formed on the position-limiting member 80. The process is simple, and at the same time, materials can be saved, which is conducive to lightweight design.

Continuing to refer to Fig. 41, in some embodiments, the box 10 includes a top cover (such as a carrying member 11a described later), a bottom cover 12 and a frame 11b. The bottom cover 12 and the top cover are arranged oppositely at both ends of the frame 1 1b in the height direction Z of the box 10, and the position-limiting member 80 is connected to the frame 11b and at least one of the bottom cover 12 and the top cover respectively.

The top cover, the bottom cover 12 and the frame 11b together form the box 10 that accommodates the battery cells 20 to meet sealing requirements.

Optionally, the frame 11b may have an opening. Optionally, the frame 11b may be provided with an opening on one side. That is, the frame 1 1b may be integrally molded with one of the top cover and the bottom cover 12, and the other may close the opening and is connected to the frame 1 1b to enclose to form the box 10 to seal and protect the battery group 20A. Of course, the frame 11b can also be provided with openings on both sides, and the top cover and the bottom cover 12 are respectively used to close the two openings and connect with the frame 1 1b to enclose to form the box 10 to seal and protect the battery group 20A.

In order to improve the sealing performance after the frame 1 1b is connected to the top cover and the bottom cover 12, a sealing member, such as a sealant and a sealing ring can be provided between the frame 11b and the top cover or the bottom cover 12.

Optionally, the top cover, bottom cover 12 and frame 11b can be connected through bolts, FlowdrillScrews (FDS), bonding, welding, etc., which is not limited in the present application.

Optionally, the top cover or bottom cover 12 may be made of a material (e.g., an aluminum alloy) with high hardness and strength, so that they do not easily deform, have higher structural strength, thereby improving the safety performance.

For example, at least a part of the top cover can be recessed along the height direction Z to form a concave portion. The thermally conductive member 3a can be connected to the concave portion. There is a gap between the concave portion and the battery cell 20. When collision, vibration and other working conditions occur, the concave portion can better absorb the force exerted on the thermally conductive member 3a to improve safety and reliability.

Optionally, a protective layer may be provided in the gap between the concave portion and the battery cell 20. With the protective layer provided, the top cover can be prevented from being burned through when the battery cell 20 is thermally runaway.

Optionally, the bottom cover 12 and the frame 11b may have an integrated structure to form the box 10 through processes such as bending and stamping. Of course, the bottom cover 12 and the frame 11b can also be provided separately, and then connected as one through welding, bonding, or other methods.

For example, the bottom cover 12 and the frame 11b are detachably connected, which can reduce costs and facilitate the replacement of the bottom cover 12 or the frame 1 1b when problems such as damage occur.

Optionally, the bottom cover 12 and the frame 11b can be made of the same material, and of course, can also be made of different materials.

In some embodiments, the bottom cover 12 can be made of a material that is stronger than the material of the frame 11b, which can help absorb external collision force to achieve a buffering effect on the battery 100 and prevent the battery 100 from deformation and failure due to vibration, impact, etc., so as to improve the safety and reliability of the battery 100 and further improve the overall structural strength of the battery 100 to adapt to various operating conditions.

Optionally, the bottom cover 12 can also be provided with a reinforcing rib structure, which can better improve the structural strength of the battery 100.

Optionally, the position-limiting member 80 can be connected to the frame 11b and the bottom cover 12. Of course, it can also be connected to the frame 11b and the top cover. Of course, it can also be connected to the frame 11b, the top cover, and the bottom cover 12. By arranging in this way, the overall structure of the battery 100 can be configured according to different needs, thereby improving versatility.

In some embodiments, as shown in Fig. 41, the box 10 further includes a connecting base 14. The connecting base 14 protrudes from the frame 11 b along the second direction Y. The connecting base 14 is used to mount the battery 100 on an electrical apparatus.

The connecting base 14 is provided to facilitate the connection and fixation of the battery 100 as a whole in the electrical apparatus where it is used, such as fixation on the chassis of a vehicle, etc., thereby improving the connection stability and making the connection stronger. At the same time, it avoids the failure of connection that causes the safety risk problems of the battery 100, thereby ensuring the safety and reliability of the battery 100.

Optionally, the connecting base 14 protrudes from one side of the frame 11b along the second direction y. Of course, protruding connecting bases 14 can be provided on both sides of the frame 11b along the second direction y.

At present, from the perspective of the development of the market situation, batteries are more and more widely used. Batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With continuous expansion of the battery application fields, the market demand is also constantly expanding.

The applicant noticed that when water vapor from the outside enters the inside of the box, it will corrode the battery cells and other devices inside the box, reducing the safety and service life of the battery. In related technologies, in order to improve the sealing performance of the battery, an additional sealing structure (such as a sealing plate) is provided inside the box for sealing. However, the additional sealing structure increases the structural complexity of the battery and increases the cost.

In order to improve the safety and service life of the battery, the applicant has researched and found that the box itself can be designed as a closed structure to reduce the complexity of the battery structure and the cost of the battery.

In some embodiments, as shown in Figs. 116 and 117, the box 10 includes a main body 11 and a bottom cover 12 disposed at the bottom of the main body 11, and the bottom cover 12 and the main body 11 enclose together to form an accommodating cavity 10a.

The main body 11 may be an integrally molded structure, or may be assembled from multiple parts. The main body 11 may be a hollow case structure, which defines a first space by itself. The bottom of the first space is open, and the bottom cover 12 covers the opening of the first space. The bottom cover 12 may have a hollow structure with one side open, and may itself have a second space. The second space provided by the bottom cover 12 and the first space provided by the main body 11 integrally form an accommodating cavity 10a. The bottom cover 12 itself does not need to have a space to form the accommodating cavity 10a. When the bottom cover 12 covers the opening of the first space of the main body 11, the bottom cover 12 seals the first space of the main body 11 and the two enclose to form an accommodating cavity 10a which is equivalent to the first space. In this case, the bottom cover 12 may have a flat plate structure. Of course, the accommodating cavity 10a of the box 10 can also be formed by a part of the first space provided by the main body 11. In this case, the bottom cover 12 can cover the opening of the first space and be recessed towards the first space to occupy a part of space of the first space. The first space, excluding the part of space occupied by the bottom cover 12, forms the accommodating cavity 10a of the box 10.

It can be understood that in this case, the bottom cover 12 is located at the bottom of the box 10 and is used to define the accommodating cavity 10a together with the main body 11. Specifically, the bottom cover 12 may be, but is not limited to, a plate-shaped structure, a block-shaped structure, etc., and may be flat-plate-shaped, bent-plate-shaped, etc., and is not specifically limited.

When the battery cell 20 is located in the accommodating cavity 10a, the battery cell 20 may be disposed on the bottom cover 12 and/or the main body 11. When the main body 11 is assembled from multiple parts, the battery cell 20 may be provided on one of the parts or on all the parts. In an embodiment, the main body 11 may include a top cover, an enclosure plate and a supporting plate. The enclosure plate encloses to form a third space with openings at both ends in the vertical direction. The top cover and the bottom cover 12 hermetically cover both ends of the third space in the vertical direction respectively. The top cover (such as the carrying member 11a described later), the enclosure plate (such as the frame 11b described later) and the bottom cover 12 enclose together to form an accommodating cavity 10a. The supporting plate is located in the third space, and the battery cells 20 are supported on the supporting plate. In other embodiments, the main body 11 may include a carrying member 11a and a frame 11b described below. For details see below. In the present application, the carrying member 11a may also be called a supporting plate or a top plate, and the frame 11b may also be called a side plate.

The bottom cover 12 and the main body 11 can be fixed by welding, hot-melt connection, bonding, fastening connection, snap fit, etc. Among them, the fastening connection refers to the connection achieved through fasteners 13, and the fasteners 13 include bolts, pins, rivets, pins, screws and other members. Snap-fit refers to the fixation through an engagement structure. For example, the bottom cover 12 has a hook and the main body 11 has a bayonet. When the hook is engaged in the bayonet, the bottom cover 12 and the main body 11 can be engaged and fixed. Of course, the connection method between the bottom cover 12 and the main body 11 is not limited thereto, and will not be exhaustive in the present application.

In some embodiments, the bottom cover 12 is hermetically connected to the main body 11 and they together form a closed accommodating cavity 10a. In this case, the box 10 defines a sealed accommodating cavity 10a through enclosure by its bottom cover 12 and its main body 11, so as to ensure the airtightness of the battery 100 through the sealing property of the box 10 itself without resorting to other sealing structures, and no additional sealing structure is required in the box 10, so that the structure of the battery 100 can be simplified, the cost of the battery 100 can be reduced, and the safety and service life of the battery 100 can be ensured.

There are many ways of hermetical connection between the bottom cover 12 and the main body 11, which may include but are not limited to the following ways: a sealing member is provided between the bottom cover 12 and the main body 11, and the bottom cover 12 and the main body 11 are hermetically connected through the sealing member; the bottom cover 12 and the main body 11 are hermetically connected through sealant; the bottom cover 12 and the main body 11 are plugged into each other and hermetically connected by a blocking structure formed by the plugging surface.

In the description of the present application, the bottom cover 12 of the battery 100 is located at the bottom of the main body 11, that is, the bottom cover 12 is located at the bottom of the main body 11 in the up and down vertical orientation z as shown in Figs. 116 and 117. In actual use, the up and down orientation shown in Figs. 116 and 117 may be, but is not limited to, the vertical direction, depending on the actual mounting situation of the battery 100. It should be pointed out that in the following description of the present application, the vertical direction is used as a reference to describe the positional relationship, size, etc. of each structure of the battery 100. It is not a limitation on the use of the battery 100, but only for the purpose of explaining and explaining the solution more clearly.

In some embodiments, the bottom cover 12 is hermetically connected to the main body 11 via a sealing member.

Sealing members refer to components and parts that can prevent fluids or solid particles from leaking from between adjacent joint surfaces, and can prevent external impurities such as dust and moisture from intruding into the battery 100. The sealing member hermetically connecting the main body 11 and the bottom cover 12 means that the sealing member is connected between the two opposite surfaces of the main body 11 and the bottom cover 12 and has a ring-shaped contact interface with the two surfaces to prevent external moisture from entering the interior of the battery 100 through the contact interface between itself and the two surfaces, thereby achieving a sealing effect.

Optionally, the sealing members can be sealing rings and sealing gaskets. Specifically, the sealing member may be made of rubber, silicone or other materials. Specifically, the sealing members can be O-shaped sealing members, square sealing members, special-shaped sealing members, etc. The specific shape of the sealing member can be adapted to the shapes of the two opposite surfaces of the bottom cover 12 and the main body 11. For example, when the two opposite surfaces of the bottom cover 12 and the main body 11 are annular surfaces, the sealing member may be an O-shaped sealing member.

In this case, the bottom cover 12 is hermetically connected to the main body 11 through the sealing member, and the sealing is reliable, and the cost is low.

It should be noted that after the bottom cover 12 and the main body 11 are sealed through the sealing member, the bottom cover can also be fixedly connected to the main body 11 in other ways. The other ways include but are not limited to snap-fit, plug-in, threaded connection, riveting, welding, bonding, etc. Understandably, when the bottom cover 12 and the main body 11 are sealed through the sealant, according to the adhesiveness of the sealant, when the adhesive performance of the sealant is good and meets the requirements (that is, the bottom cover 12 and the main body 11 are fixed and not separated), it is also possible not to fixedly connect the two with other methods.

In some embodiments, as shown in Figs. 116 and 117, the bottom cover 12 is detachably connected to the bottom of the main body 11. In this case, the main body 11 can be directly mounted on the mounting body, and the bottom cover 12 and the main body 11 jointly form an accommodating cavity 10a. When the components (such as battery cells) in the accommodating cavity a need to be replaced or maintained, it just needs to remove the bottom cover 12 to expose the components within the battery 100 and maintain or replace these components without removing the entire battery 100 from the mounting body, which greatly improves the convenience of maintaining the battery 100.

The bottom cover 12 and the main body 11 being detachably connected means that when the bottom cover 12 is connected to the main body 11, the bottom cover 12 has a first state in which it is completely connected to the main body 11 and forms the accommodating cavity 10a relative to the main body 11, and a second state in which it is not completely connected to or separated from the main body 11 to expose the battery cell 20. Under external force, the bottom cover 12 can be switched from the first state to the second state and also can be switched from the second state to the first state without damaging any parts in this process.

When the bottom cover 12 is in the second state in which it is not completely connected to the main body 11 relative to the main body 11 and makes the accommodating cavity 10a open, the bottom cover 12 and the main body 11 can be mounted in the following manner: the bottom cover 12 and the main body 11 are rotatably connected and can be fixedly connected via fasteners 13 or engagement. When the bottom cover 12 rotates relative to the main body 11 to close the accommodating cavity 10a, the bottom cover 12 and the main body 11 can be fixedly connected to the main body 11 through fasteners 13 or engagement, and the battery cells 20 are accommodated in the accommodating cavity 10a without being visible. At this time, the bottom cover 12 is in the first state. When the fastener 13 is removed or the engagement connection is released, the bottom cover 12 can rotate relative to the main body 11 to a position where the accommodating cavity 10 a is opened and the battery cells 20 are exposed. At this time, the bottom cover 12 is in the second state. The rotatable connection between the bottom cover 12 and the main body 11 may be, but is not limited to, the bottom cover 12 and the main body 11 being rotatably connected through a rotating shaft.

When the bottom cover 12 is in the second state in which it is separated from the main body 11 relative to the main body 11 and makes the accommodating cavity 10a open, the bottom cover 12 and the main body 11 can be mounted in the following manner: the bottom cover 12 and the main body 11 are fixedly connected only via fasteners 13 or engagement. When the fasteners 13 are mounted on the bottom cover 12 and the main body 11 or the engagement structure of the bottom cover 12 and the main body 11 is engaged, the bottom cover 12 and the main body 11 are completely fixed and jointly form the accommodating cavity 10a, and the battery cell 20 is accommodated in the accommodating cavity 10a and is invisible. At this time, the bottom cover 12 is in the first state. When the fasteners 13 are removed or all engagement connections are released, the bottom cover 12 can be separated from the main body 11 to expose the battery cells 20. At this time, the bottom cover 12 is in the second state.

When the bottom cover 12 is in the first state, it forms an accommodating cavity 10a with the main body 11 to protect the battery cells 20. When the bottom cover 12 is in the second state, the battery 100 is exposed, which facilitates relevant personnel to maintain or replace the battery cells 20.

In some embodiments, referring to Fig. 117, the bottom cover 12 and the main body 11 are detachably connected via fasteners 13.

Fasteners 13 refer to members that can fasten two or more parts (or members) into a whole, which can be but are not limited to: screws, bolts, rivets, plug pins, hinge pins, welding nails, etc.

In this case, the bottom cover 12 and the main body 11 are detachably connected through the fasteners 13, which is not only convenient for disassembly and assembly, but also features a simple structure and is economical.

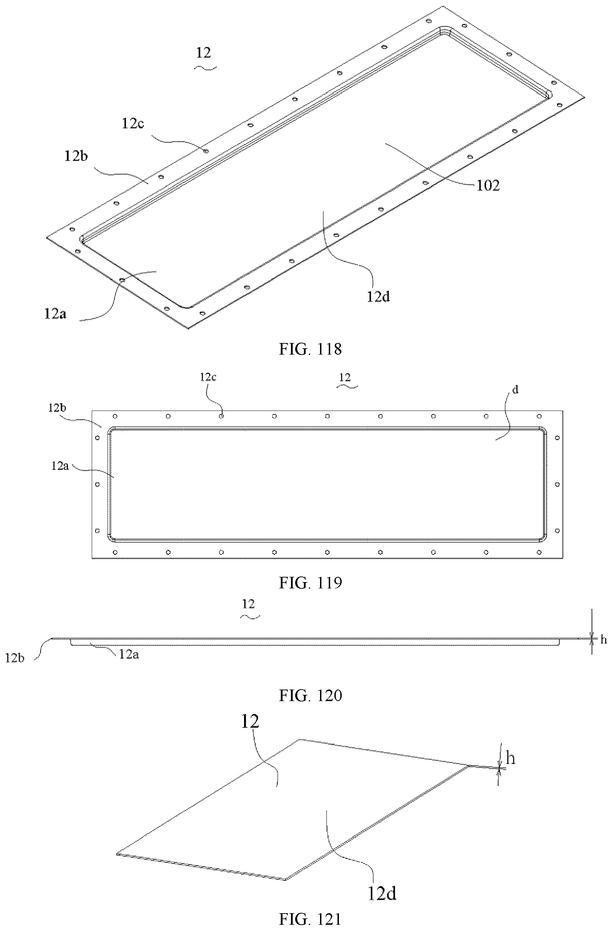

In some embodiments, as shown in Figs. 120 and 121, the minimum thickness h of the bottom cover 12 satisfies: 0.2mm < h < 20mm.

The thickness of the bottom cover 12 refers to the distance between the two vertical surfaces of the bottom cover 12 in a vertical cross section. The minimum thickness h of the bottom cover 12 is the shortest distance between the two side surfaces of the bottom cover 12 in the vertical direction. When the thickness of the bottom cover 12 is uniform everywhere, the bottom cover 12 can be in a flat plate shape (as shown in Fig. 121), and the minimum thickness of the bottom cover 12 is the equal thickness of the bottom cover 12 everywhere. When the thickness of the bottom cover 12 is uneven, the minimum thickness of the bottom cover 12 is the thickness of the thinnest part of the bottom cover 12.

Specifically, the minimum thickness h of the bottom cover 12 is optionally 0.3mm, 0.5mm, 0.8mm, 1mm, 1.5mm, 1.8mm, 2mm, 2.5mm, 2.8mm, 3mm, 3.5mm, 3.8mm, 4mm, 4.5mm, 4.7mm, 5mm, 5.5mm, 5.8mm, 6mm, 6.5mm, 7mm, 7.5mm, 8mm, 8.5mm, 9mm, 9.5mm, 10mm, 10.5mm, 11mm, 11.5mm, 12mm, 12.5mm, 13mm, 13.5mm, 14mm, 14.5mm, 15mm, 16mm, 16.5mm, 17mm, 17.5mm, 18mm, 18.5mm, 19mm, 19.5mm, etc. Preferably, it satisfies $0.5mm \leq h \leq 3mm$.

In this case, it has been proven that when the minimum thickness h of the bottom cover 12 satisfies 0.2mm < h < 20mm, the weight of the battery 100 can be effectively reduced, and the strength structure is reasonable.

It should be noted that in the description of the present application, with reference to the vertical direction, the "thickness" of a structure refers to the distance between the two side surfaces of the structure in the vertical direction on the cross-section in the vertical direction, and the "thickness" is not interpreted too much in the following description as it can be referred to here. Of course, it can be understood that the vertical direction is only for more convenient explanation of the solution of the present application, and does not limit the use mode of the battery 100.

In some embodiments, the weight M2 of the battery cell 20 and the minimum thickness h of the bottom cover 12 satisfy: $0.03mm/Kg \leq h/M2 \leq 100mm/Kg$.

The weight M2 of the battery cell 20 refers to the weight M2 of a single battery cell 20. When the battery 100 includes multiple battery cells 20, the weight of the battery cells 20 is the weight of all the battery cells 20.

Specifically, the ratio of the minimum thickness h of the bottom cover 12 to the weight M2 of the battery cell 20 is optionally 0.04mm/Kg, 0.05mm/Kg, 0.1mm/Kg, 0.4mm/Kg, 0.8mm/Kg, 1mm/Kg, 1.5mm/Kg, 2mm/Kg, 2.5mm/Kg, 3mm/Kg, 3.5mm/Kg, 4mm/Kg, 5mm/Kg, 6mm/Kg, 8mm/Kg, 10mm/Kg, 12mm/Kg, 13mm/Kg, 15mm/Kg, 16mm/Kg, 18mm/Kg, 20mm/Kg, 30mm/Kg, 35mm/Kg, 40mm/Kg, 45mm/Kg, 50mm/Kg, 55/Kg, 60mm/Kg, 65mm/Kg, 68mm/Kg, 70mm/Kg, 75mm/Kg, 80mm/Kg, 85mm/Kg, 90mm/Kg, 95mm/Kg, 98mm/Kg.

Table 1 The effect of the ratio of the minimum thickness h of the bottom cover 12 to the weight M2 of the battery cell 20 on the safety performance of the battery 100

| No. | h(mm) | M2(Kg) | h/M2(mm/Kg) | Test results |
| --- | --- | --- | --- | --- |
| 1 | 0.2 | 10 | 0.02 | Fire, explosion |
| 2 | 0.5 | 10 | 0.05 | No fire, no explosion |
| 3 | 1.2 | 3 | 0.4 | No fire, no explosion |
| 4 | 3 | 1 | 3 | No fire, no explosion |
| 5 | 5 | 1.5 | 3.33 | No fire, no explosion |
| 6 | 8 | 1.8 | 4.45 | No fire, no explosion |
| 7 | 10 | 2 | 5 | No fire, no explosion |
| 8 | 12 | 1.6 | 7.5 | No fire, no explosion |
| 9 | 15 | 1.7 | 8.82 | No fire, no explosion |
| 10 | 20 | 2 | 10 | No fire, no explosion |
| 11 | 20 | 1 | 20 | No fire, no explosion |
| 12 | 20 | 0.5 | 40 | No fire, no explosion |
| 13 | 20 | 0.32 | 62.5 | No fire, no explosion |
| 14 | 20 | 0.25 | 80 | No fire, no explosion |

(continued)

| No. | h(mm) | M2(Kg) | h/M2(mm/Kg) | Test results |
|---|---|---|---|---|
| 15 | 20 | 0.2 | 100 | No fire, no explosion |

Table 1 shows the test results of the effect of several sets of ratio of the minimum thickness h of the bottom cover 12 to the weight M2 of the battery cell 20 on the safety performance of the battery 100 when the test is carried out according to the standard of GB38031-2020 "Safety Requirements for Power Storage Batteries for Electric Vehicles". It can be seen from Table 1 that when h/M2 equals 0.02mm/Kg, the battery 100 is prone to fire and explosion. The reason is that the structural strength of the battery 100 cannot meet the requirements. When h/M2 is greater than 0.02mm/Kg, the structural strength of the bottom cover 12 is better, and the battery 100 is less likely to catch fire and explode. However, if h/m is too large, it will easily cause space waste and low energy density, so h/M2 is preferably not more than 100mm/Kg.

In this case, it has been proven that when the minimum thickness h of the bottom cover 12 and the weight m of the battery cell 20 satisfy $0.03mm/Kg \leq h/M2 \leq 100mm/Kg$, the battery 100 not only has good structural strength, but also has high energy density, and is not easy to catch fire and explode.

In some embodiments, referring to Figs. 116 to 118 together, the bottom cover 12 has a cover portion 12a and a mounting portion 12b. The mounting portion 12b encloses and is connected to the edge of the cover portion 12a, the cover portion 12a is used to define an accommodating cavity 10a, and the mounting portion 12b is connected to the main body 11.

The use of the cover portion 12a to define the accommodating cavity 10a means that the cover portion 12a and the main body 11 together enclose to form the accommodating cavity 10a, and the mounting portion 12b is connected to the main body 11 and does not participate in the definition of the accommodating cavity 10a. The cover portion 12a may be a plate-shaped or block-shaped member, and may be a flat plate-shaped or a bent plate-shaped member, which is not specifically limited. It can be seen from Figs. 116 to 118 that the mounting portion 12b encloses at the edge of the cover portion 12a, which means that the mounting portion 12b is continuously arranged along the edge of the cover portion 12a to form a closed structure connected from end to end. It can be understood that when projected in the vertical direction, the mounting portion 12b has a certain width, so that it can have an appropriate contact area with the main body 11, which not only facilitates the positioning and mounting between the mounting portion 12b and the main body 11, but also facilitates the arrangement of the sealing member. It also helps to improve the sealing performance between the mounting portion 12b and the main body 11.

The cover portion 12a and the mounting portion 12b may be integrally molded. When the bottom cover 12 is made of metal (such as aluminum, iron, stainless steel), the cover portion 12a and the mounting portion 12b can be integrally molded by die-casting, forging, hot pressing, cold pressing, etc. When the bottom cover 12 is made of a plastic material (such as PP, PE, ABS), the cover part 12a and the mounting portion 12b can be integrally molded by injection molding. The cover portion 12a and the mounting portion 12b may also be molded separately and then connected together. When the cover portion 12a and the mounting portion 12b are made of metal, the cover portion 12a and the mounting portion 12b can be welded or bonded together. When the cover portion 12a and the mounting portion 12b are made of a plastic material, the cover portion 12a and the mounting portion 12b can be bonded together. Of course, the cover portion 12a and the mounting portion 12b can also be fixedly connected together by snap fit, riveting or other methods.

The cover portion 12a and the mounting portion 12b may be located on the same plane. Specifically, optionally, the two surfaces of the cover portion 12a and the mounting portion 12b facing the main body 11 are in the same plane, and/or the two surfaces of the cover portion 12a and the mounting portion 12b away from the main body 11 are in the same plane. When the two surfaces of the cover portion 12a and the mounting portion 12b facing the main body 11 and the two surfaces away from the main body 11 are respectively on the same plane, the cover portion 12a and the mounting portion 12b can form a flat-plate bottom cover 12 (As shown in Fig. 121).

The cover portion 12a and the mounting portion 12b may also be located on different planes. Specifically, the cover portion 12a is recessed toward the main body 11 relative to the mounting portion 12b, or the cover portion 12a protrudes away from the main body 11 relative to the mounting portion 12b, which is not specifically limited. The thicknesses of the cover portion 12a and the mounting portion 12b may be equal or different, which is not specifically limited.

In this case, the bottom cover 12 defines the accommodating cavity 10a through the cover portion 12a, and is connected to the main body 11 through the mounting portion 12b, which is well structured and easy to mount.

It can be understood that when the bottom cover 12 is hermetically connected to the main body 11, the bottom cover 12 is hermetically connected to the main body 11 via the mounting portion 12b, that is, the mounting portion 12b is hermetically connected to the main body 11. The mounting portion 12b and the main body 11 can be hermetically connected by a sealing member, a sealant, etc., which will not be exhaustively illustrated. The sealing member may be the sealing member mentioned in the above description, the arrangement of the sealing member may refer to the above description, with the difference that the sealing member is disposed between the mounting portion 12b and the main body 11. When sealant is used to hermetically connect the mounting portion 12b and the main body 11, the sealant may be coated on all surfaces of the mounting portion 12b that are in contact with the main body 11.

It can be understood that when the bottom cover 12 is detachably connected to the main body 11, the bottom cover 12 is detachably connected to the main body 11 via the mounting portion 12b, that is, the mounting portion 12b is detachably connected to the main body 11. The way in which the mounting portion 12b is detachably connected to the main body 11 can refer to the detachable connection between the bottom cover 12 and the main body 11 described above. It is only necessary to set the part of the bottom cover 12 that is detachably connected to the main body 11 as the mounting portion 12b. Therefore, the detachable connection between the mounting portion 12b and the main body 11 will not be described again here.

In some embodiments, the mounting portion 12b is detachably connected to the main body 11.

Specifically, the bottom cover 12 further includes a fixing hole 12c provided on the mounting portion 12b. The fastener 13 passes through the fixing hole 12c on the mounting portion 12b and is fastened to the main body 11. The fixing hole 12c is a through hole that runs through the mounting portion 12b in the vertical direction. Specifically, the fixing hole 12c can be a smooth through hole (such as when the fastener 13 is a rivet) or a threaded through hole (such as when the fastener 13 is a screw), or other types of through holes (such as hexagonal holes, square holes, waist-shaped holes). The specific form of the fixing hole 12c depends on the specific form and specific configuration of the fastener 13, and will not be described again here.

In some embodiments, the cover portion 12a and the mounting portion 12b have the same thickness.

When the cover portion 12a and the mounting portion 12b are integrally molded, they can be integrally molded in the manner described above, such as die-casting integral molding, cold pressing integral molding, hot pressing integral molding, injection molding integral molding, which will not be described again here. Since the cover portion 12a and the mounting portion 12b have the same thickness, they can be quickly processed using the same metal plate through stamping, cutting, etc. during molding.

In this case, the cover portion 12a and the mounting portion 12b have the same thickness, and the stress is equal everywhere during molding, which can improve the molding rate of the integral molding. They can also be quickly processed by simple methods such as plate cutting. The structure of the bottom cover 12 is simpler and more convenient to process.

In some embodiments, referring to Figs. 118 and 120, the cover portion 12a protrudes in a direction away from the accommodating cavity 10a relative to the mounting portion 12b.

As can be seen from the above, the cover portion 12a defines the accommodating cavity 10a. The fact that the cover portion 12a protrudes away from the accommodating cavity 10a means that the cover portion 12a protrudes away from the main body 11. That is to say, the cover portion 12a and the mounting portion 12b are staggered in the vertical direction, and the cover portion 12a is at the lowest point of the bottom cover 12. When the cover portion 12a protrudes away from the accommodating cavity 10a relative to the mounting portion 12b, certain redundant space can be formed between the cover portion 12a and the mounting portion 12b. This redundant space can increase the distance between the cover portion 12a and the battery cell 20. When an external force acts on the cover portion 12a, the external force can be reduced through this redundant space, reducing or avoiding the external force acting on the battery cell 20 and causing damage to the battery cell 20. Especially when the battery 100 is mounted on the bottom of the vehicle 1000 and the bottom cover 12 is at the lowest point of the battery 100, as the vehicle 1000 is traveling, stones on the ground can easily fly to the bottom, that is, the bottom cover 12 of the battery 100, and hit the bottom cover 12. At this time, the redundant space can reduce the impact of external force on the battery cells 20. In this case, the cover portion 12a protrudes relative to the mounting portion 12b, and the cover portion 12a of the bottom cover 12 can serve as a reinforcing structure of the bottom cover 12 to improve the bending resistance of the bottom cover 12.

In some embodiments, the bottom cover 12 is located at the bottom of the box 10 and is used to define the accommodating cavity 10a, and the wall of the bottom cover 12 facing the battery cell 20 forms the bottom wall 102 of the accommodating cavity 10a.

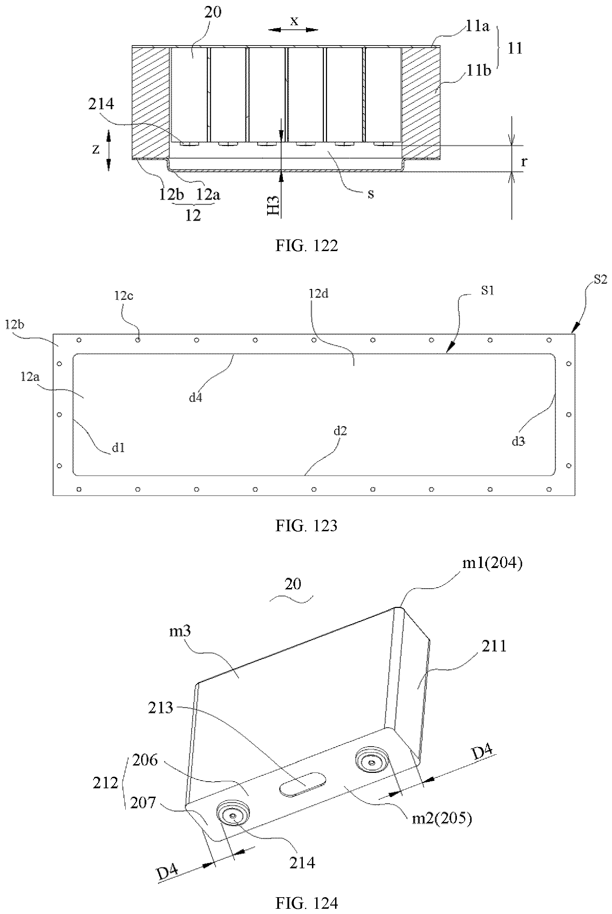

In some embodiments, referring to Fig. 122, the bottom cover 12 and the battery cell 20 are spaced apart.

The bottom cover 12 and the battery cell 20 being spaced apart means that a given distance r is maintained between the bottom cover 12 and the battery cells 20 in the vertical direction. With the given interval r, a buffer space is formed between the bottom cover 12 and the battery cell 20, which can prevent the external force acting on the bottom cover 12 from being transmitted to the battery cell 20 and damaging the battery cell 20. Especially when the battery 100 is mounted at the bottom of the vehicle 1000 and the bottom cover 12 is at the lowest point of the battery 100, as the vehicle 1000 is traveling, stones on the ground can easily fly to the bottom of the battery 100 and hit the bottom cover 12. At this time, the buffer space can interrupt the impact on the battery cell 20 as a result of the transmission of external force to the battery cell 20.

The bottom cover 12 and the battery cells 20 may be spaced apart as a result of the redundant space formed between the protruding cover portion 12a and the mounting portion 12b in the above embodiment. Alternatively, a given distance is maintained between one end of the battery cell 20 in the main body 11 and facing the bottom cover 12 and one end of the main body 11 facing the bottom cover 12. That is to say, the battery cell 20 is only located within a part of the accommodating cavity 10a defined by the main body 11, rather than located within the accommodating cavity 10a defined by the bottom cover 12, thereby ensuring that the given distance r is maintained between the battery cells 20 and the bottom cover 12 to form a buffer space.

It can be understood that when the battery 100 includes multiple battery cells 20, all the battery cells 20 are spaced apart from the bottom cover 12. Furthermore, in order to unify the size of the battery cells 20, the distances between the battery cells 20 and the bottom cover 12 are equal.

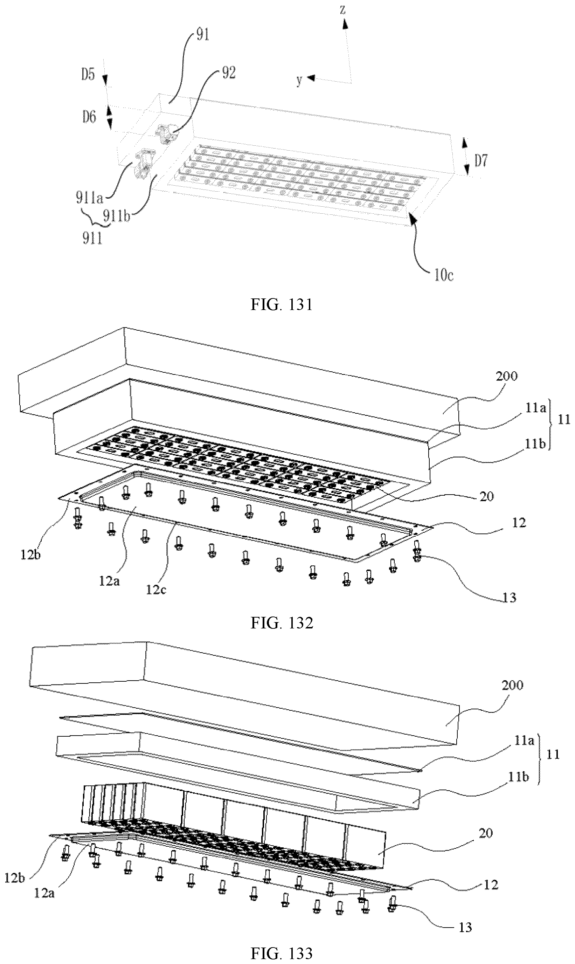

In some embodiments, referring to Figs. 132, 119 and 121, the bottom cover 12 has a feature surface 12d facing the accommodating cavity 10a, and the feature surface 12d is configured as a plane to reduce the occupation of the accommodating cavity 10a by the bottom cover 12 itself, leaving as much space as possible for mounting the battery cells 20 to improve the energy density and range of the battery.

The feature surface 12d faces the accommodating cavity 10a, indicating that the feature surface 12d is the inner surface of the bottom cover 12 capable of defining the accommodating cavity 10a. The feature surface 12d being configured as a plane means that in the arrangement direction of the main body 11 and the bottom cover 12, the feature surface 12d is a plane perpendicular to the arrangement direction. In practice, when the main body 11 and the bottom cover 12 are arranged in the vertical direction, the feature surface 12d of the bottom cover 12 is a plane parallel to the horizontal plane. When the main body 11 and the bottom cover 12 are arranged in the horizontal direction, the feature surface 12d of the bottom cover 12 is a plane parallel to the vertical plane.

When the feature surface 12d is a plane, a relatively equal distance (this distance may be zero) can be maintained between the feature surface 12d and each battery cell 20 accommodated in the accommodating cavity 10a. When the distance between the feature surface 12d and the battery cells 20 is kept relatively equal, the accommodating cavity 10a can accommodate more battery cells 20, that is, the space utilization of the accommodating cavity 10a is higher, the battery 100 can have higher energy density, and the range of the battery 100 is higher.

It can be understood that when the bottom cover 12 has the aforementioned cover portion 12a and the aforementioned mounting portion 12b, the feature surface 12d may be formed by the inner surface of the cover portion 12a facing the accommodating cavity 10a. It can further be understood that when the bottom cover 12 is spaced apart from the battery cells 20, the feature surface 12d and the battery cells 20 are spaced apart.

In some embodiments, the outer surface of the cover portion 12a away from the accommodating cavity 10a is parallel to the feature surface 12d.

The outer surface of the cover portion 12a away from the accommodating cavity 10a is arranged opposite to the feature surface 12d in the vertical direction. The outer surface of the cover portion 12a is used to be in contact with the atmospheric environment and withstand external force impact. When the outer surface of the cover portion 12a is a plane flush with the feature surface 12d, especially when the bottom cover 12 and the main body 11 are arranged vertically at the bottom of the vehicle 1000 and the bottom cover 12 is located at the lowest point of the battery 100, when the outer surface of the cover portion 12a is a plane, the windage resistance generated by the battery 100 can be greatly reduced, which helps to reduce the driving resistance of the vehicle 1000, reduce the driving energy consumption of the vehicle 1000, and improve the range of the battery 100.

Fig. 123 is a schematic diagram of the orthographic projection of the bottom cover 12 shown in Fig. 118 in the vertical direction. S1 represents the projected area of the feature surface 12d, and S2 represents the projected area of the bottom cover 12.

In some embodiments, in the vertical direction, the area S1 of the orthographic projection of the feature surface 12d and the area S2 of the orthographic projection of the bottom cover 12 satisfy: $S1/S2 \geq 0.2$. Further, it satisfies $S1/S2 \geq 0.5$.

In the embodiment shown in Fig. 123, in the orthographic projection in the vertical direction, the feature surface 12d is formed by the first feature side d1, the second feature side d2, the third feature side d3, and the fourth feature side d4 connected end to end, the area S1 of the orthographic projection of the feature surface 12d is the area of the region defined by the first feature side d1, the second feature side d2, the third feature side d3 and the fourth feature side d4. The area S2 of the orthographic projection of the bottom cover 12 is the area of the region defined by the edges of the bottom cover 12. Specifically, the ratio of the area S1 of the orthographic projection of the feature surface 12d to the area S2 of the orthogonal projection of the bottom cover 12 may be 0.3, 0.4, 0.5, 0.6, 0.7, 0.8, 0.9, or 1.

Table 2 The effect of the ratio of area S1 to area S2 on the range of the battery 100

| No. | S1/mm$^2$ | S2/mm$^2$ | S1/S2 | Test results |
|---|---|---|---|---|
| 1 | $0.3 \times 10^6$ | $2.6 \times 10^6$ | 0.115 | Poor |

(continued)

| No. | S1/mm² | S2/mm² | S1/S2 | Test results |
|-----|--------|--------|-------|--------------|
| 2 | $0.52\times10^6$ | $2.6\times10^6$ | 0.2 | Good |
| 3 | $0.94\times10^6$ | $2.6\times10^6$ | 0.362 | Good |
| 4 | $1.3\times10^6$ | $2.6\times10^6$ | 0.5 | Fair |
| 5 | $1.5\times10^6$ | $2.6\times10^6$ | 0.577 | Fair |
| 6 | $1.8\times10^6$ | $2.6\times10^6$ | 0.629 | Fair |
| 7 | $2.2\times10^6$ | $2.6\times10^6$ | 0.846 | Excellent |
| 8 | $2.4\times10^6$ | $2.6\times10^6$ | 0.923 | Excellent |
| 9 | $2.6\times10^6$ | $2.6\times10^6$ | 1 | Excellent |

Table 2 shows the effect of several sets of ratio of the area S1 of the orthographic projection of the feature surface 12d to the area S2 of the orthographic projection of the bottom cover 12 on the range of the battery 100 tested according to the NEDC (New European Driving Cycle) standard. When S 1/S2 is less than 0.2, the range of the battery 100 is poor. The reason is that when the feature surface 12d is small, the space utilization of the accommodating cavity 10a is low, the number of battery cells 20 accommodated in the battery 100 is small, the energy density of the battery 100 is low, resulting in a short range of the battery 100 and poor test results. When the ratio of S 1/S2 reaches 0.2 and above (especially when S 1/S2 reaches 0.5 and above), the larger the ratio, the better the range of the battery 100. The reason is that the larger the feature surface 12d, the higher the space utilization of the accommodating cavity 10a, the higher the energy density of the battery 100, so the range of the battery 100 is getting higher and higher, and the test results are getting better and better.

Since the feature surface 12d is a plane, the larger the area of the feature surface 12d occupying the bottom cover 12, the smaller the area of the inner surface of the bottom cover 12 that is concave or convex relative to the feature surface 12d. The inner surface that is recessed relative to the feature surface 12d will cause part of the space in the accommodating cavity 10a to be irregular, making it impossible to mount the battery cells 20, resulting in low space utilization of the accommodating cavity 10a. Part of the space of the accommodating cavity 10a formed by the inner surface protruding relative to the feature surface 12d is also irregular and cannot accommodate the battery cells 20, resulting in low space utilization of the accommodating cavity 10a. When the space utilization of the accommodating cavity 10a is low, the volume occupied by the battery cells 20 per unit space in the battery 100 is small, and the energy density of the battery 100 is low. Therefore, the larger the area of the bottom cover 12 occupied by the feature surface 12d, the greater the space utilization of the battery 100, the higher the energy density of the battery 100, and the better the range of the battery 100.

In some embodiments, referring to Fig. 123, in the vertical direction, the orthographic projection of the feature surface 12d is rectangular.

As shown in Fig. 123, the rectangular feature surface 12d is a region enclosed and defined by the first feature side d1, the second feature side d2, the third feature side d3 and the fourth feature side d4. In the battery 100, multiple battery cells 20 are mostly assembled to form a rectangular structure. The feature surface 12d is configured in a rectangular shape, which can be adapted to the overall structure of the battery cells 20 in the battery 100, and is helpful for arranging more battery cells 20 in the accommodating cavity 10a, increasing the energy density of the battery 100.

Of course, in other embodiments, in the vertical direction, the orthographic projection of the feature surface 12d may also be in other shapes, such as circle, polygon, ellipse and other special shapes.

In the embodiments of the present application, the main body 11 includes a carrying member 11a. The carrying member 11a may be a component of the main body 11 used to define the accommodating cavity 10a (for example, the carrying member 11a is the top cover or frame mentioned above), or it may be a component that is not used to define the accommodating cavity 10a but is located within the accommodating cavity 10a (for example, the carrying member 11a is the supporting plate mentioned above), which is not specifically limited. When the carrying member 11a is used to define the accommodating cavity 10a, the carrying member 11a can be a component of the main body 11 that is directly connected to the bottom cover 12 (such as the frame mentioned above), or it can be a component that is not connected to the bottom cover 12 (such as the top cover mentioned above).

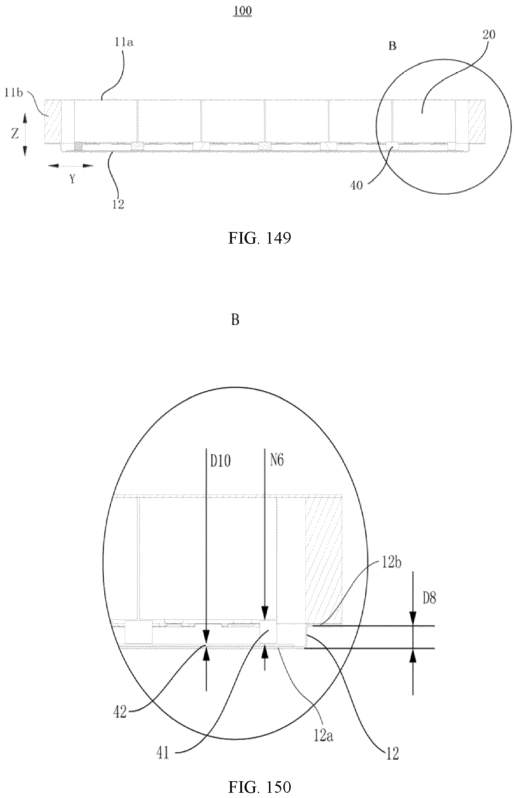

In some embodiments, as shown in Figs. 122 and 149, the fixing member 90 includes the carrying member 11a, the carrying member 11a is provided on the top of the box 10, and the battery cells 20 are provided on the surface of the carrying member 11a.

In this case, the carrying member 11a is a component capable of carrying the weight of the battery cell 20, and may be a carrying plate, a carrying rod, a carrying block, a carrying sheet, a carrying frame, a carrying rope, etc., which is not specifically limited. Specifically, the battery cell 20 may be supported on the carrying member 11a, and in this case, the battery cell 20 may be disposed above the carrying member 11a. Specifically, the battery cell 20 may also be hung on the carrying member 11a. In this case, the battery cell 20 may be hung on a wall surface of the carrying member 11a that is parallel to the gravity direction of the battery cell 20.

The battery cells 20 can be disposed above the carrying member 11a (for example, when the carrying member 11a is used as the supporting plate in the accommodating cavity 10a), or the battery cells 20 can be disposed below the carrying member 11a (for example, when the carrying member 11a is used as the top cover for defining the accommodating cavity 10a), and the battery cells 20 may also be disposed on the side of the carrying member 11a (for example, when the carrying member 11a is used as the frame for defining the accommodating cavity 10a).

In some embodiments, the battery cell 20 is bonded to the carrying member 11a. The bonding connection can reduce the size required in the vertical direction Z when connecting the battery cell 20 to the carrying member 11a, thereby reducing the overall thickness of the battery. Exemplarily, the carrying member 11a is used to define the accommodating cavity 10a, and the battery cells 20 are suspended from the carrying member 11a.

Specifically, the battery cell 20 and the carrying member 11a can be bonded with an adhesive such as epoxy resin glue, acrylate glue, which is not specifically limited. In this case, the battery cell 20 and the carrying member 11a are bonded, which not only facilitates connection, but also simplifies the structure of the battery 100.

In some embodiments, the wall of the carrying member 11a facing the battery cell 20 forms the top wall 101 of the accommodating cavity 10a. For example, the battery cell 20 may be disposed on the top wall 101 of the accommodating cavity 10a.

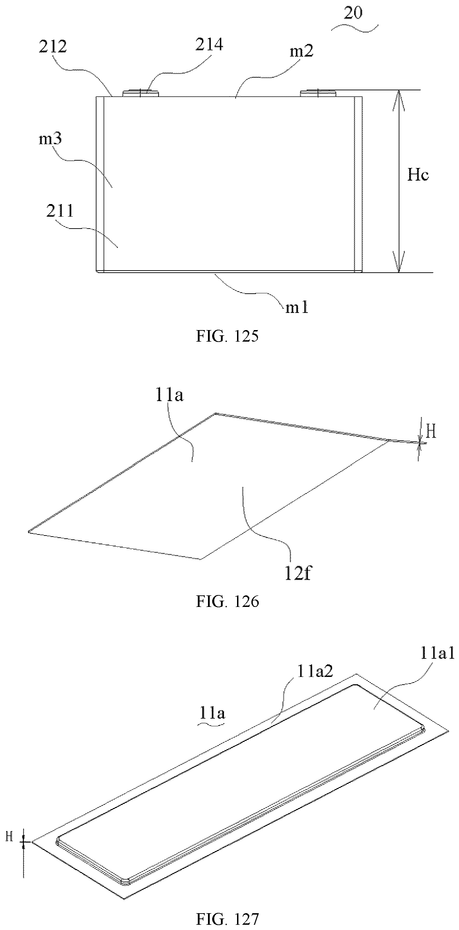

In some embodiments, as shown in Fig. 127, the battery cell 20 is disposed on the surface of the carrying member 11a, and the minimum thickness H of the carrying member 11a and the weight M1 of the battery 100 satisfy: 0.0002mm/kg<H/M1≤0.2mm/kg. In this case, the carrying member 11a can be used to bear the weight of the battery cell 20, and the battery 100 has good structural strength and will not have the problems of fire and explosion. At the same time, the energy density of the battery is higher, and the range of the battery is stronger.

The thickness of the carrying member 11a refers to the distance between the side surface of the carrying member 11a for placing the battery cells 20 and the other side surface opposite to it. When the battery cell 20 is disposed on the surface of the carrying member 11a in the vertical direction, the minimum thickness H of the carrying member 11a refers to the minimum distance between the two surfaces of the carrying member 11a in the vertical direction. When the battery cell 20 is on the surface of the carrying member 11a in the horizontal direction, the thickness of the carrying member 11a refers to the minimum distance between the two side surfaces of the carrying member 11a in the horizontal direction.

The weight of the battery 100 includes the entire weight of the main body 11, the bottom cover 12, the battery cells 20 and other components (such as wiring harness, thermal management system, power management system).

Specifically, the ratio of the minimum thickness H of the carrying member 11a to the weight M1 of the battery 100 can be designed as: 0.0003mm/kg, 0.0005mm/kg, 0.0008mm/kg, 0.001mm/kg, 0.003mm/kg, 0.005mm/kg, 0.008mm/kg, 0.01mm/kg, 0.03mm/kg, 0.05mm/kg, 0.06mm/kg, 0.08mm/kg, 0.1mm/kg, 0.12mm/kg, 0.15mm/kg, 0.16mm/kg, 0.19mm/kg, 0.02mm/kg.

Table 3 The Effect of the ratio of the minimum thickness H of the carrying member 11a to the weight M1 of the battery 100 on the safety performance of the battery 100

| No. | H(mm) | M1(Kg) | H/M(mm/Kg) | Test results |
|---|---|---|---|---|
| 1 | 0.1 | 1000 | 0.0001 | Fire, explosion |
| 2 | 0.2 | 1000 | 0.0002 | Fire, explosion |
| 3 | 0.6 | 600 | 0.001 | No fire, no explosion |
| 4 | 1.5 | 500 | 0.003 | No fire, no explosion |
| 5 | 2.5 | 500 | 0.005 | No fire, no explosion |
| 6 | 4 | 500 | 0.008 | No fire, no explosion |
| 7 | 3 | 300 | 0.01 | No fire, no explosion |
| 8 | 9 | 300 | 0.03 | No fire, no explosion |
| 9 | 10 | 200 | 0.05 | No fire, no explosion |
| 10 | 12 | 200 | 0.06 | No fire, no explosion |

(continued)

| No. | H(mm) | M1(Kg) | H/M(mm/Kg) | Test results |
|---|---|---|---|---|
| 11 | 16 | 200 | 0.08 | No fire, no explosion |
| 12 | 20 | 200 | 0.1 | No fire, no explosion |
| 13 | 30 | 200 | 0.15 | No fire, no explosion |
| 14 | 40 | 200 | 0.02 | No fire, no explosion |

Table 3 shows the results of the effect of several sets of ratio of the minimum thickness H of several groups of carrying members 11a to the weight M1 of the battery 100 on the safety performance of the battery 100 tested according to the standard of GB38031-2020 "Safety Requirements for Power Storage Batteries for Electric Vehicles". As can be seen from Table 3, when the H/M ratio does not exceed 0.0002mm/Kg, the battery 100 will catch fire and explode. The reason is that the structural strength of the battery 100 does not meet the requirements. When the H/M ratio exceeds 0.0002mm/Kg, the battery 100 will not catch fire or explode. However, when H/M is too large (for example, when it exceeds 0.1), due to the small weight of the battery 100 and the large thickness of the carrying plate, the proportion of the battery cells 20 of the battery 100 in the unit volume is low, the space utilization is low, the energy density of the battery 100 is too low, and the use cost of the battery 100 is high. Further, in the case of 0.0005mm/Kg≤H/M≤0.1mm/Kg, the structural strength of the battery 100 meets the requirements and the energy density of the battery 100 is high, the range of the battery 100 is stronger and is free of safety accidents such as fire or explosion.

In some embodiments, the minimum thickness H of the carrying member 11a satisfies: 0.2mm<H<20mm.

Specifically, the minimum thickness H of the carrying member 11a may be: 0.3mm, 0.5mm, 0.8mm, 0.9mm, 1.0mm, 1.2mm, 1.5mm, 2mm, 2.5mm, 3mm, 3.5mm, 4mm, 4.5mm, 5mm, 5.5mm, 6mm, 6.5mm, 7mm, 7.5mm, 8mm, 9mm, 10mm, 12mm, 15mm, 16mm, 18mm, 19mm. Furthermore, in the case of 0.5mm≤H≤10mm, the carrying member 11a has better structural strength, the overall strength of the battery 100 is better, and the battery 100 is less likely to catch fire and explode. At the same time, the carrying member 11a occupies a small volume of the whole battery 100, the battery 100 has high space utilization, and the battery 100 has a high energy density.

In some embodiments, referring to Figs. 117, 122 and 133, the battery cell 20 is suspended from the carrying member 11a. Exemplarily, the carrying member 11a is used to define the accommodating cavity 10a, and the battery cells 20 are suspended from the carrying member 11a.

The battery cells 20 being suspended from the carrying member 11a means that the battery cells 20 are arranged below the carrying member 11a in the vertical direction, and the carrying member 11a bears the weight of the battery cells 20. The battery cells 20 are suspended from the carrying member 11a in the following ways: the battery cells 20 are directly bonded to the lower surface of the carrying member 11a; the battery cells 20 are connected to the carrying member 11a through fasteners 13 and are located below the carrying member 11a; the battery cells 20 are hung on the carrying member 1 1a through hooks and the like and are located below the carrying member 11a.

In this case, the battery cells 20 are suspended below the carrying member 11a, and the bottom cover 12 is located at the bottom of the box 10. When repairing the interior of the battery 100, the battery cells 20 can be exposed by removing the bottom cover 12 without removing the carrying member 11a, so that the maintenance of the battery 100 is more convenient. Also, when repairing the battery 100, the battery cell 20 can be removed and mounted on the carrying member 11a from below. Especially when the carrying member 11a is stressed as at least a part of the chassis of the vehicle 1000, it only needs to remove and mount the battery cells 20 from below the carrying member 11a without removing the carrying member 11a, which facilitates the maintenance of the battery 100.

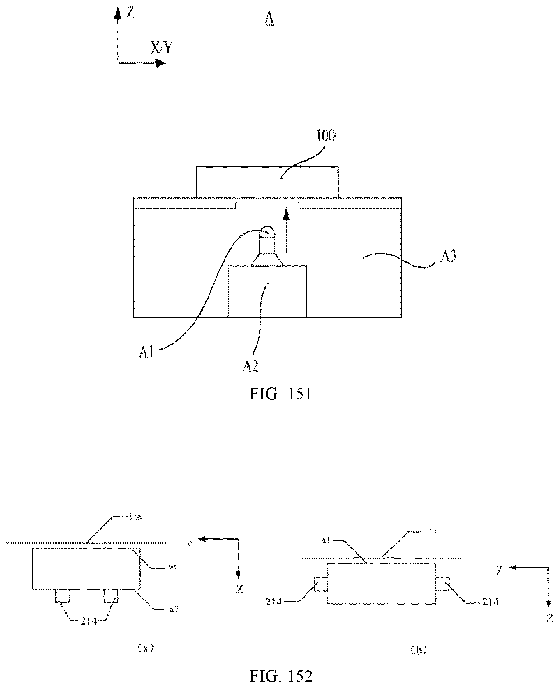

In some embodiments, referring to Figs. 124 and 152 together, the outer surface of the battery cell 20 facing the carrying member 11a is the first outer surface m1 (which can also be understood as the top wall 204 of the battery cell 20 described in the present application), the electrode terminal 214 is arranged on the outer surface of the battery cell 20 except the first outer surface m1.

As described above, the electrode terminal 214 is used for being electrically connected to the electrode assembly 23 inside the battery cell 20, and is a component for outputting or inputting electric energy of the battery cell 20. The electrode terminals 214 at least partially extend outside the battery cell 20 to be electrically connected to the outside. The series connection and parallel connection between the battery cells 20 are realized through the series connection and parallel connection between their respective electrode terminals 214. The electrode terminal 214 has electrical conductivity to achieve electrical transmission, and may be an aluminum electrode, a copper electrode, etc.

The electrode terminal 214 is arranged on the outer surface of the battery cell 20 except for the first outer surface m1. The first outer surface m1 faces the carrying member 11a and is usually a smooth surface without protruding or recessed structures such as electrode terminals 214 and liquid injection holes. When the battery cell 20 is suspended from the carrying member 11a, the first outer surface m1 is the upward outer surface of the battery cell 20. Specifically, in an embodiment, the battery cell 20 includes the aforementioned case 211 and the end cover 212. The case 211 and the end cover 212 form the internal environment of the battery cell 20 for accommodating the electrode assembly 23. The end cover 212 is located at one end of the case 211, and the electrode terminal 214 is arranged on the end cover 212. In this case, any outer surface of the case 211 can be used as the first outer surface m1 of the battery cell 20.

The electrode terminal 214 includes a positive electrode terminal and a negative electrode terminal, wherein the positive electrode terminal is configured for electrical connection with the positive electrode plate in the electrode assembly 23 and the negative electrode terminal is used for electrical connection with the negative electrode plate in the electrode assembly 23. It should be noted that the positive electrode terminal and the negative electrode terminal can be arranged on the same outer surface of the battery cell 20 (such as a square battery cell 20), or they can be respectively arranged on two different outer surfaces of the battery cell 20 (such as a cylindrical battery cell 20). When the positive electrode terminal and the negative electrode terminal are arranged on two different outer surfaces of the battery cell 20, the first outer surface m1 is a surface of the battery cell 20 that is different from the two outer surfaces.

In addition to the battery cells 20, the battery 100 is usually also provided with components such as a sampling wire harness and a high-voltage wire harness that electrically connect the battery cells 20, and a protective structure to protect the battery cells 20. In this case, the electrode terminals 214 are arranged at the surfaces of the battery cell 20 other than the first outer surface m1. When arranging components such as sampling wire harnesses, high-voltage wire harnesses, and protective structures on the electrode terminals 214, these components can be arranged through the spaces between the battery cell 20 and other structures of the main body 11 except the carrying member 11a (such as through the space between the battery cell and the bottom cover and/or the space between the battery cell and the inner side surface of the main body) without limitation from the carrying member 11a, which is more convenient for the arrangement of the components. Also, since the first outer surface m1 is a smooth surface, the first outer surface m1 can be attached to the carrying member 11a. In this way, the battery cell 20 and the carrying member 11a can be mounted closely without reserving a space between the battery cell 20 and the carrying member 11a, which helps to improve the space utilization of the battery 100.

In some embodiments, also referring to Fig. 124, the battery cell 20 has a second outer surface m2 (which can also be understood as the bottom wall 205 of the battery cell 20 described in the present application) disposed opposite to the first outer surface m1, and electrode terminals 214 are arranged on the second outer surface m2.

The second outer surface m2 is the outer surface of the battery cell 20 that is opposite to the first outer surface m1. When the battery cell 20 is suspended from the carrying member 11a, the second outer surface m2 is opposite to the bottom cover 12. As mentioned above, the battery cells 20 and the bottom cover 12 may be spaced apart. In this case, there is a buffer space between the second outer surface m2 and the bottom cover 12, and the portion of the electrode terminal 214 extending beyond the battery cell 20 is located in the buffer space. In this way, the wire harness and connecting sheet connected to the electrode terminal 214 can be arranged within the buffer space. Also, the buffer space also has the aforementioned ability to prevent the external force hitting the bottom cover 12 from acting on the battery cells 20 and damaging the battery cells 20. Therefore, the buffer space can not only interrupt the effect of external forces, but also enable the layout of wiring harnesses, etc. In addition, the space utilization of the buffer space and the battery 100 is also improved.

Of course, in other embodiments, referring to Fig. 152, the electrode terminal 214 may also be arranged on the third outer surface m3 intersecting with the first outer surface m1 in the battery cell 20.

In some embodiments, referring to Figs. 117 and 122, the carrying member 11a is located on the top of the box 10 and is used to define the accommodating cavity 10a. Since the bottom cover 12 is located at the bottom of the box 10, the carrying member 11a is arranged opposite to the bottom cover 12. The carrying member 11a serves as the structure on the top of the box 10, and the box 10 can be mounted on the mounting body via the carrying member 11a. In this case, the battery cells 20 arranged on the carrying member 11a can strengthen the strength of the carrying member 11a, thereby increasing the stiffness of the top of the battery 100. This can extend the application of the battery 100 to scenarios where the top is stressed, such as being used a part of the chassis of the battery 1000.

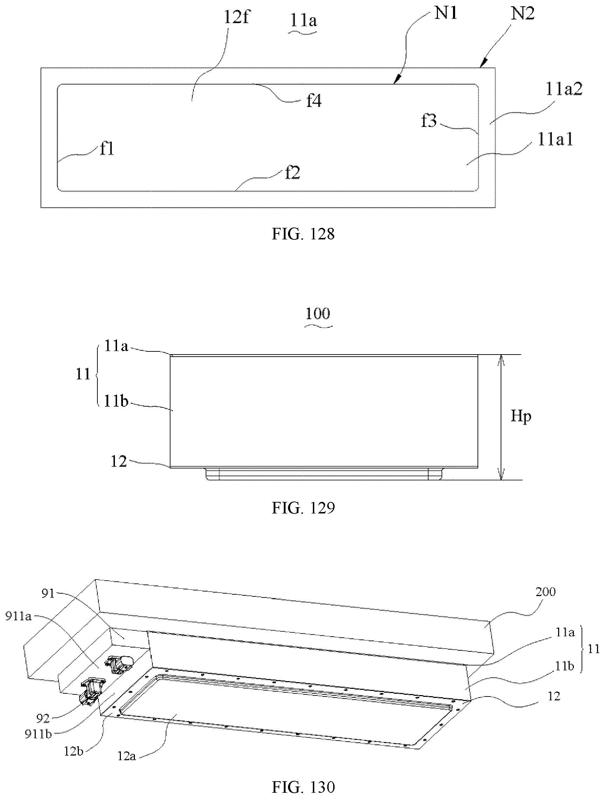

In some embodiments, as shown in Figs. 126 and 128, the carrying member 11a has a carrying surface 12f facing the accommodating cavity 10a, and the carrying surface 12f is configured as a plane.

The carrying surface 12f is the inner surface of the carrying member 11a facing the accommodating cavity 10a, and is used to define the accommodating cavity 10a. The carrying surface 12f being configured as a plane means that in the arrangement direction of the main body 11 and the bottom cover 12, the carrying surface 12f is a plane perpendicular to the arrangement direction. In practice, when the main body 11 and the bottom cover 12 are arranged in the vertical direction, the carrying member 11a and the bottom cover 12 are arranged oppositely in the vertical direction, and the carrying surface 12f of the carrying member 11a is a plane parallel to the horizontal plane. When the main body 11 and the bottom cover 12 are arranged in the horizontal direction, the carrying member 11a and the bottom cover 12 are arranged oppositely in the horizontal direction, and the carrying surface 12f of the carrying member 11a is a plane parallel to the vertical plane.

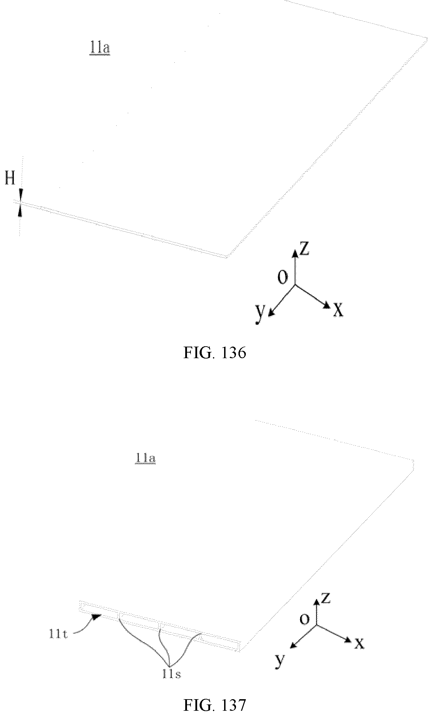

As shown in Figs. 126 and 136, the carrying member 11a may be the entire inner surface of the carrying member 11a facing the accommodating cavity 10a. In this case, the carrying member 11a may be in the shape of a flat plate. As shown in Figs. 127 and 128, the carrying member 11a can also be a part of the inner surface of the carrying member 11a facing the accommodating cavity 10a. In this case, the carrying surface 12f is only the portion of the inner surface of the carrying member 11a used to define the accommodating cavity 10a.

When the carrying surface 12f is a plane, a relatively equal distance (this distance may be zero) can be maintained between the carrying surface 12f and each battery cell 20 accommodated in the accommodating cavity 10a. When the distance between the carrying surface 12f and the battery cells 20 is kept relatively equal, the accommodating cavity 10a can accommodate more battery cells 20, that is to say, the space utilization of the accommodating cavity 10a is higher, the battery 100 can have higher energy density, and the range of the battery 100 is higher.

In some embodiments, the battery cell 20 is disposed on the carrying surface 12f. The battery cells 20 are mounted on the carrying member 11a via the carrying surface 12f. In this case, when assembling the battery, the carrying member can be mounted first and then the battery cells can be hoisted from bottom to top. Especially when the carrying member is at least a part of the vehicle chassis, the carrying member as a force-bearing structure can be mounted on the mounting body first, and then the battery cells are hoisted from bottom to top, which makes battery assembly more convenient. The battery cells suspended from the carrying member can strengthen the strength of the carrying member, thereby increasing the stiffness of the top of the battery. This can extend the application of the battery to scenarios where the top is stressed, such as being used a part of the chassis of the battery.

The battery cell 20 can be bonded to the carrying surface 12f, or can be fixedly connected to the carrying surface 12f via fasteners 13 or the like, or can be welded or snap fit to the carrying surface 12f, which is not specifically limited.

Since the carrying surface 12f is a plane, the carrying surface 12f can have a larger contact area with the battery cell 20 provided thereon, and the mounting of the battery cell 20 is more stable. Also, when the carrying surface 12f is planar, compared with an uneven surface such as a curved surface, the carrying surface 12f can be connected to a larger number of battery cells 20, which can increase the number of battery cells 20 mounted in the battery 100, thereby increasing the space utilization and energy density of the battery 100.

It can be understood that when the battery cell 20 is suspended from the carrying member 11a, the battery cell 20 is suspended from the carrying surface 12f.

In some embodiments, in the vertical direction, the area N1 of the orthographic projection of the carrying surface 12f and the area N2 of the orthographic projection of the carrying member 11a satisfy: $N1/N2 \geq 0.2$. Further, it satisfies $N1/N2 \geq 0.5$.

In the embodiment shown in Fig 128, in the orthographic projection in the vertical direction, the carrying surface 12f is formed by the first carrying edge f1, the second carrying edge f2, the third carrying edge f3 and the fourth carrying edge f4 connected end to end, and the area N1 of the orthographic projection of the carrying surface 12f is the area of the region defined by the first carrying edge f1, the second carrying edge f2, the third carrying edge f3 and the fourth carrying edge f4. The area N2 of the orthographic projection of the carrying member 11a is the area of the region defined by the edge of the carrying member 11a.

Specifically, the ratio of the area N1 of the orthographic projection of the carrying surface 12f to the area N2 of the orthogonal projection of the carrying member 11a may be 0.2, 0.3, 0.4, 0.5, 0.6, 0.7, 0.8, 0.9, or 1.

Table 4 The effect of the ratio of area N1 to area N2 on the range of the battery 100

| No. | $N1(mm^2)$ | $N2(mm^2)$ | N1/N2 | Test results |
|---|---|---|---|---|
| 1 | $1.8 \times 10^5$ | $2.16 \times 10^6$ | 0.083 | Poor |
| 2 | $2.16 \times 10^5$ | $2.16 \times 10^6$ | 0.1 | Poor |
| 3 | $4.32 \times 10^5$ | $2.16 \times 10^6$ | 0.2 | Good |
| 4 | $8 \times 10^5$ | $2.16 \times 10^6$ | 0.37 | Good |
| 5 | $1.2 \times 10^6$ | $2.16 \times 10^6$ | 0.56 | Fair |
| 6 | $1.7 \times 10^6$ | $2.16 \times 10^6$ | 0.787 | Excellent |
| 7 | $2.16 \times 10^6$ | $2.16 \times 10^6$ | 1 | Optimal |

Table 4 shows the effect of several sets of ratio of the area N1 of the orthographic projection of the carrying surface 12f to the area N2 of the orthographic projection of the carrying member 11a on the range of the battery 100 tested according to the NEDC (New European Driving Cycle) standard. When N1/N2 is less than 0.2, the range of the battery 100 is poor. The reason is that when the carrying surface 12f is small, the number of battery cells 20 carried on the carrying member 11a is small, the space utilization of the accommodating cavity 10a is low, the energy density of the battery 100 is low, resulting in a short range of the battery 100 and poor test results. When the ratio of N1/N2 reaches 0.2 and above (especially when N1/N2 reaches 0.5 and above), the larger the ratio, the better the range of the battery 100. The reason is that the larger the carrying surface 12f, the greater the number of battery cells 20 carried on the carrying member 11a, the higher the space utilization of the accommodating cavity 10a, the higher the energy density of the battery 100, so the range of the battery 100 is getting higher and higher, and the test structure is getting better and better. When the carrying member 11a has a flat plate structure as shown in Fig. 126, the orthographic projection area N1 of the carrying surface 12f is equal to the orthographic projection area N2 of the carrying member 11a, and the battery 100 has the best range effect.

In some embodiments, in the vertical direction, the orthographic projection of the carrying surface 12f is rectangular.

As shown in Fig. 128, the rectangular carrying surface 12f is an area enclosed and defined by the first carrying side f1, the second carrying side f2, the third carrying side f3 and the fourth carrying side f4. In the battery 100, multiple battery cells 20 are mostly assembled to form a rectangular structure. The carrying surface 12f is configured in a rectangular shape, which can be adapted to the overall structure formed in the battery, and is helpful for arranging more battery cells 20 in the accommodating cavity 10a, increasing the energy density of the battery 100.

Of course, in other embodiments, in the vertical direction, the orthographic projection of the carrying surface 12f may also be in other shapes, such as circle, polygon, ellipse and other special shapes.

In some embodiments, referring to Fig. 127. The carrying portion 11a has a carrying portion 11a1 and a connecting portion 11a2. The connecting portion 11a2 encloses and is connected to the edge of the carrying portion 11a1. The carrying portion 11a1 is used to define the accommodating cavity 10a. The connecting portion 11a2 is connected to parts of the box 10 except the carrying member 11a.

The carrying portion 11a1 is used to define the accommodating cavity 10a, and the connection part 11a2 is used to connect with the part of the box 10 except the carrying member 11a, but does not participate in the definition of the accommodating cavity 10a. The carrying portion 11a1 may be a plate-shaped or block-shaped member, and may be a flat plate-shaped or a bent plate-shaped member, which is not specifically limited. As can be seen from Fig. 127, the connecting portion 11a2 enclosing the edge of the carrying portion 11a1 means that the connecting portion 11a2 is a structure continuously connected end to end along the edge of the carrying portion 11a1. It can be understood that in the projection in the vertical direction, the connecting portion 11a2 has a certain width, so that it can have an appropriate contact area with other structures of the box 10 except the carrying member 11a, which more conveniently achieves the mounting and connection of the connecting portion 11a2 with other structures of the box 10 except the carrying member 11a.

The carrying portion 11a1 and the connecting portion 11a2 may be integrally molded. When the carrying member 11a is made of metal (such as aluminum, iron, stainless steel), the carrying portion 11a1 and the connecting portion 11a2 can be integrally molded by die-casting, forging, hot pressing, cold pressing, etc. When the carrying portion 11a is made of a plastic material (such as PP, PE, ABS), the carrying portion 11a1 and the connecting portion 11a2 can be integrally molded by injection molding. The carrying portion 11a1 and the connecting portion 11a2 may also be molded separately and then connected together. When the carrying portion 11a1 and the connecting portion 11a2 are made of metal, the carrying portion 11a1 and the connecting portion 11a2 can be welded or bonded together. When the carrying portion 11a1 and the connecting portion 11a2 are made of a plastic material, the cover portion 12a and the mounting portion 12b can be bonded together. Of course, the carrying portion 11a1 and the connecting portion 11a2 can also be fixedly connected together by snap fit, riveting or other methods.

Specifically, the connecting portion 11a2 is connected to the parts of the main body 11 except the carrying member 11a by either integral molding or fixed connection. When the connecting portion 11a2 is integrally molded with the parts of the main body 11 except the carrying member 11a, that is to say, the main body 11 is an integrally molded workpiece, which can be integrally molded by die-casting, forging, hot pressing, cold pressing, injection molding, etc. When the connecting portion 11a2 is fixedly connected to the parts of the main body 11 except the carrying member 11a, they can be fixedly connected through fasteners 13, snap-fit connection with an engagement structure, etc., which is not specifically limited.

The carrying portion 11a1 and the connecting portion 11a2 may be located on the same plane. Specifically and optionally, the two surfaces of the carrying portion 11a1 and the connecting portion 11a2 facing the bottom cover 12 are in the same plane, and/or the two surfaces of the carrying portion 11a1 and the connecting portion 11a2 away from the bottom cover 12 are in the same plane. When the two surfaces of the carrying portion 11a1 and the connecting portion 11a2 facing the bottom cover 12 and the two surfaces away from the bottom cover 12 are respectively on the same plane, the carrying portion 11a1 and the connecting portion 11a2 can form a flat plate shaped carrying member 11a (shown in Fig. 126).

The carrying portion 11a1 and the connecting portion 11a2 may also not be located on the same plane. Specifically, the carrying portion 11a1 protrudes away from the accommodating cavity 10a relative to the connecting portion 11a2, or the carrying portion 11a1 is recessed toward the accommodating cavity 10a relative to the connecting portion 11a2, which is not specifically limited. The thicknesses of the carrying portion 11a1 and the connecting portion 11a2 may be equal or unequal, which is not specifically limited.

In this case, the carrying portion 11a defines the accommodating cavity 10a through the carrying portion 11a1, and is connected to the structures of the main body 11 except the carrying portion 11a through the connecting portion 11a2, which is well structured.

It can be understood that when the carrying member 11a includes the aforementioned carrying portion 11a1 and the aforementioned connecting portion 11a2, the battery cell 20 is provided on the carrying portion 11a1.

It can be understood that when the carrying member 11a includes the aforementioned carrying portion 11a1 and the aforementioned connecting portion 11a2, the inner surface of the carrying portion 11a1 facing the accommodating cavity 10a is configured to form the carrying surface 12f.

In some embodiments, the carrying portion 11a1 protrudes in a direction away from the accommodating cavity 10a relative to the connecting portion 11a2.

As can be seen from the above, the carrying portion 11a1 defines the accommodating cavity 10a. Protrusion of the carrying portion 11a1 away from the accommodating cavity 10a means that the carrying portion 11a1 and the connecting portion 11a2 are staggered in the vertical direction. The carrying portion 11a1 is located at the highest point of the carrying member 11a. In this case, a space that is a part of the accommodating cavity 10a can be formed between the carrying portion 11a1 and the connecting portion 11a2, and this space can accommodate the battery cells 20.

When the carrying portion 11a1 protrudes away from the accommodating cavity 10a relative to the connecting portion 11a2, the carrying portion 11a1 can serve as a reinforcing structure of the carrying member 11a to improve the bending resistance of the carrying member 11a.

In some embodiments, the thickness of the carrying portion 11a1 and the connecting portion 11a2 are equal.

When the thicknesses of the carrying portion 11a1 and the connecting portion 11a2 are equal, the carrying portion 11a1 and the connecting portion 11a2 can be integrally molded by die casting, cold pressing, or hot pressing from the same plate, making the molding of the carrying portion 11a more convenient. At the same time, the thicknesses of the carrying portion 11a1 and the connecting portion 11a2 are equal, and the stress is equalized everywhere during molding, which can improve the molding rate of the carrying portion 11a.

In some embodiments, the outer surface of the carrying portion 11a1 away from the accommodating cavity 10a is parallel to the carrying surface 12f.

The outer surface of the carrying portion 11a1 away from the accommodating cavity 10a is arranged opposite to the carrying surface 12f in the vertical direction. The outer surface of the carrying portion 11a1 can be in contact with the atmospheric environment. When the battery 100 is mounted on the vehicle 1000, the carrying portion 11a1 with a planar outer surface can reduce the driving resistance of the vehicle 1000, reduce the driving energy consumption of the vehicle 1000, and improve the range of the battery 100.

In some embodiments, referring to Figs. 116 and 117, the main body 11 includes a frame 11b and a carrying member 11a. The frame 11b encloses to from an enclosed space 10q with two run-through ends in the vertical direction. The bottom cover 12 and the carrying member 11a respectively cover at the two opposite ends of the enclosed space 10q in the vertical direction. The bottom cover 12, the frame 11b and the carrying member 11a enclose together to form the accommodating cavity 10a.

The frame 1 1b encloses itself to form an enclosed space 10q with two run-through ends in the vertical direction. The carrying member 11a covers the top of the enclosed space 10q, and the bottom cover 12 covers the bottom of the enclosed space 10q. That is, the carrying member 11a is located at the top of the box 10 and is used to define the accommodating cavity 10a. The bottom cover 12 is located at the bottom of the box 10 and is used to define the accommodating cavity 10a. The frame 11b, the carrying member 11a and the bottom cover 12 enclose to form the accommodating cavity 10a. The frame 11b, the carrying member 11a and the bottom cover 12 can be made of the same material, such as aluminum alloy, copper alloy, steel, plastic. Of course, the frame 11b, the carrying member 11a and the bottom cover 12 can also be made of different materials, which is not specifically limited. In the orthographic projection in the vertical direction, the frame 11b can be in the shape of a rectangle, a circle, a polygon, etc., which is not specifically limited.

The frame 1 1b is parallel to the vertical direction, the frame 1 1b is arranged around the battery group 20, and the frame 11b connects the carrying member 11a and the bottom cover 12. When the carrying portion 11a includes the aforementioned carrying portion 11a1 and the connecting portion 1 1a2, the carrying portion 1 1a is connected to the frame 1 1b through the connecting portion 11a2. When the bottom cover 12 includes the aforementioned cover portion 12a and the aforementioned mounting portion 12b, the bottom cover 12 is connected to the frame 11b via the mounting portion 12b.

In this case, the accommodating cavity 10a of the battery 100 can be formed by taking the frame 11b as the basis and connecting the carrying member 11a and the bottom cover 12 to both ends of the frame 1 1b in the vertical direction. The structure of the box 10 is simple.

In some embodiments, the carrying member 11a and the frame 11b are fixedly connected (such as detachably connected) or integrally molded. The carrying member 11a and the frame 11b can be integrally molded by injection molding, die casting, forging, cold pressing, hot pressing, etc. The carrying member 11a and the frame 11b can be fixedly connected through fasteners 13, snap fit with engagement structures, welding, bonding, hot-melting, etc.

When the carrying member 11a and the frame 11b are integrally molded, and the main body 11 is integrally molded, the main body 11 only needs to be connected to the bottom cover 12 to assemble the box 10, and the box 10 is easy to assemble. When the carrying member 11a and the frame 11b are fixedly connected, the molding process of the carrying member 11a and the frame 11b is easier, which can reduce the process cost of the box 10.

It can be understood that when the carrying member 11a has the carrying portion 11a1 and the connecting portion 11a2, the connecting portion 11a2 is connected to the frame 11b. When the bottom cover 12 has the cover portion 12a and the mounting portion 12b, the mounting portion 12b is connected to the frame 11b.

Referring to Figs. 124 and 129, in some embodiments, in the vertical direction, the height Hc of the battery cell 20 and the height Hp of the battery 100 satisfy: $0.02 \leq Hc/Hp \leq 0.98$.

The height Hc of the battery cell 20 refers to the maximum length of the battery cell 20 in the vertical direction when the main body 11 and the bottom cover 12 are arranged in the vertical direction. Taking the battery cell 20 shown in Figs. 124 and 125 as an example, when the first outer surface m1 of the battery cell 20 is disposed away from the outer surface where the electrode terminal 214 is located, the maximum length of the battery cell 20 refers to the distance between the electrode terminal 214 and the first outer surface m1. Of course, when the first outer surface m1 of the battery cell 20 is adjacent to the outer surface where the electrode terminal 214 is located, the height Hc of the battery cell 20 refers to the distance between the first outer surface m1 of the battery cell 20 and the outer surface arranged opposite to it.

The height Hp of the battery 100 refers to the maximum length of the battery 100 in the vertical direction z when the main body 11 and the bottom cover 12 are arranged in the vertical direction z.

Specifically, the ratio of the height Hc of the battery cell 20 to the height Hp of the battery 100 may be 0.02, 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 0.98.

Table 5 The effect of the ratio of the height Hc of the battery cell 20 to the height Hp of the battery 100 on the safety of the battery 100

| No. | Hc/mm | Hp/mm | Hc/Hp | Test result |
|---|---|---|---|---|
| 1 | 248 | 252 | 0.984 | Fire, explosion |
| 2 | 138 | 150 | 0.92 | No fire, no explosion |
| 3 | 115 | 135 | 0.85 | No fire, no explosion |
| 4 | 90 | 120 | 0.75 | No fire, no explosion |
| 5 | 78 | 120 | 0.65 | No fire, no explosion |
| 6 | 110 | 200 | 0.55 | No fire, no explosion |
| 7 | 60 | 200 | 0.3 | No fire, no explosion |
| 8 | 60 | 600 | 0.1 | No fire, no explosion |
| 9 | 50 | 1000 | 0.05 | No fire, no explosion |

Table 5 shows the effect of several sets of ratio of the height Hc of battery cell 20 to the height Hp of battery 100 on the safety of battery 100 tested under the standard GB38031-2020 "Safety Requirements for Power Storage Batteries for Electric Vehicles". It can be seen from Table 5 that when Hc/Hp exceeds 0.98, the structure of the box 10 occupies a very small height of the battery 100, and the strength of the box 10 cannot meet the requirements, and safety accidents such as fire and explosion may occur. In the case of $0.02 \leq Hc/Hp$, the structural strength of the box 10 can meet the requirements, and fire and explosion will not occur. When Hc/Hp is less than 0.02, although the structural strength of the box 10 can meet the requirements, the space utilization of the battery 100 is low and the energy density is too low.

Furthermore, in the case of $0.5 \leq Hc/Hp < 0.94$, not only does the strength of the battery 100 meet the requirements and there will be no safety accidents such as fire and explosion, but the space utilization of the battery 100 is high and the energy density of the battery 100 is high.

In some embodiments, referring to Figs. 130 to 134, electrical apparatuses include a vehicle 1000, and the battery 100 is disposed at the bottom of the vehicle body 200; the vehicle body 200 may include a passenger compartment floor, and the battery 100 is disposed on the lower side of the passenger compartment. For an introduction to the vehicle 1000, refer to the above description and it will not be described again here.

The vehicle body 200 of the vehicle 1000 refers to the part of the vehicle 1000 used for carrying people and loading cargo, including the driver compartment, passenger compartment, engine compartment, luggage compartment, etc. The vehicle body 200 generally includes a vehicle body shell and doors, windows, decorative parts, seats, air conditioning devices, etc. located on the vehicle body shell. The vehicle body shell usually refers to the structure composed of the longitudinal beams, cross beams, chassis, pillars and other main carrying members of the vehicle 1000, as well as the sheet metal parts connected to them. In the embodiments of the present application, the battery 100 being disposed at the bottom of the vehicle body 200 mainly means that the battery 100 is disposed at the bottom of the vehicle body shell. In this case, arranging the battery 100 at the bottom of the vehicle body 200 does not occupy the space inside the vehicle body 200 and helps reduce the volume and weight of the vehicle body 200.

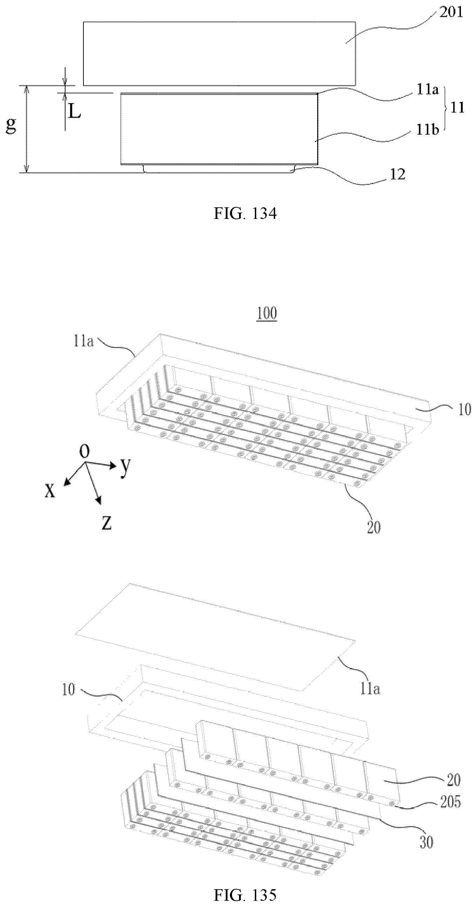

In some embodiments, referring to Fig. 134, the main body 11 includes the carrying member 11a located on the top of the box 10. The carrying member 11a is used to define the accommodating cavity 10a. In the vertical direction, the distance L between the carrying member 11a and the vehicle body 200 satisfies: L≥0.

Since the battery 100 is located at the bottom of the vehicle body 200 and the carrying member 11a is located at the top of the box 10, the carrying member 11a of the battery 100 is closest to the vehicle body 200. The distance L between the carrying member 11a and the vehicle body 200 refers to the distance between the highest point of the carrying member 11a and the vehicle body 200 located above it in the vertical direction. When the carrying portion 11a includes the aforementioned carrying portion 11a1 and the aforementioned connecting portion 11a2, the distance L between the carrying portion 11a and the vehicle body 200 is the distance between the outer surface of the carrying portion 11a1 away from the accommodating cavity 10a and the vehicle body 200 located above it.

When the distance L between the carrying member 11a and the vehicle body 200 is equal to 0, the carrying member 11a is in contact with the vehicle body 200. When the distance L between the carrying member 11a and the vehicle body 200 is greater than 0, the carrying member 11a is spaced apart from the vehicle body 200 and is not in contact with the vehicle body. It can be understood that in this case, the bottom cover 12 is at the bottom of the carrying member 11a, and the distance g between the bottom cover 12 and the vehicle body 200 is greater than 0.

When the battery 100 is mounted under the vehicle body 200, the range within the distance from the bottom of the battery 100 to the vehicle body 200 is the mounting space occupied by the battery 100. When the carrying member 11a is spaced apart from the vehicle body 200, there will be a certain amount of waste space between the battery 100 and the vehicle body 200. If the carrying member 11a is in contact with the vehicle body 200, the waste space existing between the battery 100 and the vehicle body 200 can be allocated to the space range of the battery 100. As such, with the same occupation space under the body 200, the battery 100 being in contact with the vehicle body 200 can increase the volume of the battery 100, thereby increasing the power and energy density of the battery 100.

In this case, when the distance L between the carrying member 11a and the vehicle body 200 is equal to zero, the battery 100 can have larger power and higher energy density, and the vehicle 1000 has a stronger range. When the distance L between the carrying member 11a and the vehicle body 200 is greater than zero, the mounting of the carrying member 11a is more flexible.

In some embodiments, referring to Figs. 130 to 134, the main body 11 includes the carrying member 11a located on the top of the box 10. The carrying member 11a is used to define the accommodating cavity 10a. The battery 100 is mounted on the vehicle body 200 via the carrying member 11a.

Since the battery 100 is located at the bottom of the vehicle body 200 and the carrying member 11a is located at the top of the box 10, the carrying member 11a of the battery 100 is closest to the vehicle body 200. The battery 100 is mounted on the vehicle body 200 through the carrying member 11a. Specifically, the carrying member 11a may be fixed to the vehicle body 200 through fasteners 13 (such as screws, bolts, rivets), welding or other methods.

When the battery cell 20 is disposed on the carrying member 11a, the structure formed by the battery cell 20 and the carrying member 11a is connected to the vehicle body 200, which can improve the strength of the top of the battery 100 and in turn improve the mounting strength of the battery 100.

In some embodiments, the carrying member 11a is configured to form at least a part of the chassis of the vehicle body 200.

As a part of the vehicle body 200, the chassis is a combination of four parts: the transmission system, the driving system, the steering system and the braking system. It is used to support and mount the engine of the vehicle 1000 and its components and assemblies, forming the overall profile of the vehicle 1000 and carrying engine power to ensure normal driving.

The chassis is located at the bottom of the vehicle body 200, and the carrying member 11a directly serves as at least a part of the chassis. That is, the carrying member 11a is used to form at least a part of the chassis of the vehicle body 200. In this way, the carrying member 11a is integrated with the chassis of the vehicle body 200, so that the space occupied by the gap between the traditional chassis and the battery 100 can be allocated into the battery 100 to increase the space of the battery 100, which helps to increase the energy of the battery 100, thereby improving the range of the vehicle 1000.

According to some embodiments of the present application, referring to Figs. 130 to 134, the electrical apparatus includes the vehicle 1000, and the battery 100 is provided at the bottom of the vehicle body 200 of the vehicle 1000. The battery 100 includes a box 10 and a battery cell 20. The box 10 includes a carrying member 11a at the top. The battery cell 20 is located in the box 10 and suspended from the carrying member 11a, the electrode terminals 214 of the battery cell 20 are located on the outer surface of the battery cell 20 away from the carrying member 11a, and the carrying member 11a forms at least a part of the chassis of the vehicle 1000.

In this case, the battery cell 20 is suspended from the carrying member 11a, which can increase the strength of the carrying member 11a and in turn increase the strength of the top of the battery cell 20, so that the carrying member 11a can meet certain force requirements when used as the chassis. At the same time, the electrode terminals 214 of the battery cell 20 are away from the carrying member 11a, and the battery cell 20 can be directly mounted on the carrying member 11a, so that the gap between the battery cell 20 and the carrying member 11a is eliminated, and the saved gap is used for increasing the mounting space of the battery cell 20, which can increase the energy of the battery 100 and in turn improve the range of the vehicle 1000.

In some embodiments, there are multiple battery cells 20, the multiple battery cells 20 are arranged in the second direction y, and the second direction is perpendicular to the vertical direction Z. the carrying member 11a is connected to the top wall 204 of the multiple battery cells 20, and the top wall 204 of the battery cell 20 is parallel to the second direction y, the vertical direction z is perpendicular to the top wall 204 of the battery cell 20, and the battery cell 20 is located below the carrying member 11a. As such, the carrying member 11a and the battery cells 20 are in direct surface contact, the carrying member 11a is directly connected to the top wall 204 of the battery cells 20, and there is no need to leave any space in the middle, which can improve the space utilization of the battery 100, thereby increasing the energy density of the battery 100. At the same time, the battery cell 20 and the carrying member 11a are connected into a whole, which can improve the structural strength of the battery 100.

It can be seen that the top wall 204 of the battery cell 20 is connected to the bottom surface of the carrying member 11a, the bottom surface of the carrying member 11a can be the surface close to the battery cell 20 in the vertical direction, and the top wall 204 of the battery cell 20 can be the surface of the battery cell 20 close to the carrying member 11a in the vertical direction.

The relationship between the size N of the carrying member 11a in the vertical direction z and the weight M2 of the battery cell 20 satisfies: $0.04mm/kg \leq N/M2 \leq 100mm/kg$, which can not only make the size N of the carrying member 11a in the vertical direction within a reasonable range to avoid wasting the internal space of the battery due to excessive N, but also make the connection between the battery cell 20 and the carrying member 11a stronger, enhance the structural strength of the battery, and improve the performance of the battery.

The size N of the carrying member 11a in the vertical direction may be the thickness of the carrying member 11a in the vertical direction. The carrying member 11a may be the upper cover of the box of the battery, or may be a part of the electrical apparatus, such as the chassis of a vehicle. When the carrying member 11a is the chassis of the vehicle, the battery cell 20 is connected to the carrying member 11a, that is, the battery cell 20 is connected to the chassis surface of the vehicle. The battery cells 20 are directly connected to the chassis of the vehicle, so that there is no need to provide the upper cover of the box of the battery, which saves the space occupied by the upper cover of the box of the battery, improves the space utilization of the battery, thereby improving the energy density of the battery.

In the case of $N/M2 > 100mm/kg$, the size N of the carrying member 11a in the vertical direction is relatively large. Although the cell has greater structural strength, the carrying member 11a also occupies a larger space, resulting in a reduction in the internal space utilization of the battery, which in turn leads to a reduction in the energy density of the battery.

In the case of $N/M2 < 0.04mm/kg$, the carrying member 11a cannot meet the structural strength requirements of the battery. During the use of the battery, the carrying member 11a may deform or even break in the direction of gravity, and the battery cells 20 may also be separated from the carrying member 11a, and safety accidents such as fire and explosion may occur.

The test results for carrying portions of different sizes and battery cells of different weights are shown in Table 6.

Table 6 The test results for carrying portions of different sizes and battery cells of different weights

| N/mm | M2/kg | N/M2 mm/kg | Test results |
|---|---|---|---|
| 0.2 | 10 | 0.02 | Fire, explosion |
| 0.4 | 8 | 0.05 | No fire, no explosion |
| 0.4 | 1 | 0.4 | No fire, no explosion |
| 1 | 3.5 | 0.286 | No fire, no explosion |
| 5.5 | 1.5 | 3.667 | No fire, no explosion |

(continued)

| N/mm | M2/kg | N/M2 mm/kg | Test results |
|------|-------|------------|--------------|
| 10 | 2 | 5 | No fire, no explosion |
| 18 | 2 | 9 | No fire, no explosion |

In some examples, the carrying member 11a may also be called a mounting wall.

Optionally, the top wall 204 of the battery cell 20 is the wall with the largest surface area of the battery cell 20. In this way, the contact area between the carrying member 11a and the battery cell 20 is large, which can ensure the connection strength between the carrying member 11a and the battery cell 20. In other embodiments, the carrying member 11a can also be connected to the wall of the battery cell 20 with a smaller surface area, which is not limited in the embodiments of the present application.

In some optional embodiments, the electrode terminal 214 is provided on the bottom wall 205 of the battery cell 20, and the bottom wall 205 and the top wall 204 are separated and arranged oppositely in the vertical direction; or, the electrode terminal 214 is provided on the side wall of the battery cell 20, the side wall is connected to the top wall 204 and is parallel to the vertical direction.

When the battery cell 20 is in use, the vertical direction may be parallel to the direction of gravity, and the electrode terminal 214 may face the ground along the direction of gravity. For example, the battery 100 includes a carrying member 11a and a box 10, the box 10 is located below the carrying member 11a, the top wall 204 of the battery cell 20 faces the carrying member 11a and is connected to the carrying member 11a, the bottom wall 205 of the battery cell 20 faces the bottom of the box 10, and the electrode terminals 214 also face the bottom of the box 10, that is, face the ground. In this way, the top wall 204 without the electrode terminals 214 can be directly connected to the carrying member 11a, and the battery cells 20 and the carrying member 11a are connected into a whole, which enhances the overall structural strength of the battery 100. At the same time, there is no need to leave a gap between the top wall 204 and the carrying member 11a, which improves the space utilization of the battery and thus increases the energy density of the battery.

Optionally, the electrode terminal 214 may also be disposed on one of the two walls of the battery cell 20 that are oppositely disposed along the second direction y, that is, the side wall on which the electrode terminal 214 is disposed is connected to the top wall 204, and the side wall on which the electrode terminals 214 are positioned is parallel to the vertical direction. For example, the electrode terminals 214 of the battery cells 20 in the same column arranged along the second direction are also arranged along the second direction.

Optionally, the size N of the carrying member 11a in the vertical direction is 0.2mm to 20mm. Optionally, the weight M2 of the battery cell 20 is 1kg to 10kg. In this way, the size of the carrying member 11a in the vertical direction can be flexibly selected according to the weight M2 of the battery cell 20 or the corresponding appropriate battery cell 20 can be selected according to the size of the carrying member 11a in the vertical direction.

Optionally, as shown in Fig. 126, the carrying member 11a may be a plate-shaped structure, such as a flat plate. In the plate-shaped structure, as long as the surface of the carrying member 1 1a in contact with the top wall 204 of the battery cell 20 can be made flat, there are no specific restrictions on other aspects.

Optionally, as shown in Fig. 137, a hollow cavity 11t is provided inside the carrying member 11a. On the one hand, the hollow cavity 11t can provide expansion space for the battery cell 20. On the other hand, the hollow cavity 11t can also serve as a flow channel to accommodate fluid to adjust the temperature of the battery cell 20.

Exemplarily, the hollow cavity 11t is used to accommodate the heat exchange medium to adjust the temperature of the battery cell 20. In this case, the carrying member 11a can also be called a thermal management component. Of course, in other examples, a heat exchange member may be provided between the battery cell 20 and the carrying member 11, and the heat exchange member may be a component with a channel to act as a thermal management component, or the heat exchange member may be made into any other component capable of regulating the temperature of the battery cells 20, which is not limited in the present application.

Optionally, a reinforcing plate 11s may be provided in the hollow cavity 11t, and the reinforcing plate 11s may extend along the first direction. On the one hand, the reinforcing plate 11s can enhance the structural strength of the carrying member 11a. On the other hand, the reinforcing plate 11s can form multiple flow channels inside the carrying member 11a for accommodating the heat exchange medium, wherein the multiple flow channels can communicate with each other or be independent of each other.

The heat exchange medium may be liquid or gas, and the temperature regulation refers to heating or cooling multiple battery cells 20. In the case of cooling the battery cells 20, the hollow cavity 11t can accommodate the cooling medium to adjust the temperature of multiple battery cells 20. In this case, the heat exchange medium can also be called a cooling medium or a cooling fluid, more specifically, a cooling liquid or a cooling gas. In addition, the heat exchange medium may also be used for heating, which is not limited in the embodiments of the present application. Optionally, the heat exchange medium may flow in a circulating manner to achieve a better temperature regulation effect. Optionally, the fluid may be water, a mixture of water and ethylene glycol, a refrigerant or air, etc.

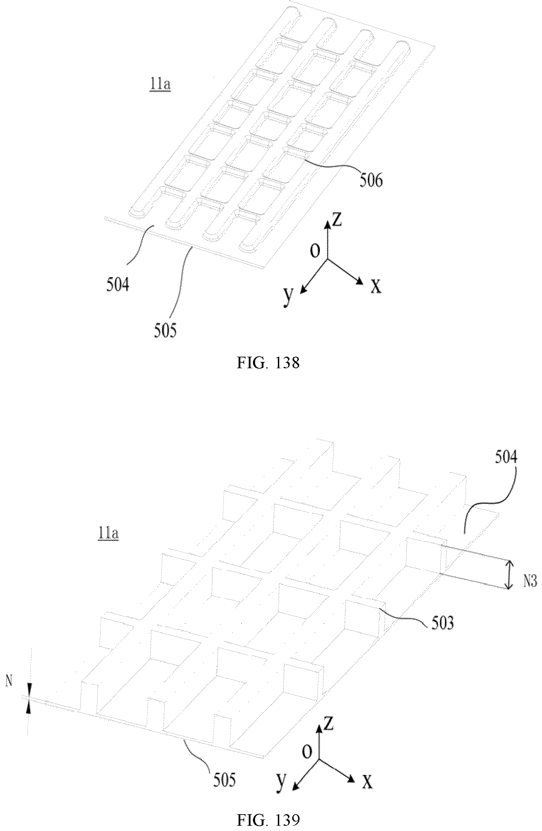

Optionally, as shown in Fig. 138, the carrying member 11a is provided with a reinforcing portion 506. The carrying member 11a may include a first surface 504 and a second surface 505. The second surface 505 is connected to the top wall 204 of the battery cell 20. The reinforcing portion 506 is provided on the first surface 504 and/or the second surface 505. The reinforcing portion 506 can enhance the structural strength of the carrying member 11a. Optionally, the reinforcing portion 506 may be a protrusion and/or a groove formed by stamping the carrying member 11a, which is not limited in the embodiments of the present application.

Optionally, as shown in Fig. 139, in the vertical direction, the surface of the carrying member 11a away from the battery cells 20 is provided with a reinforcing rib 503; in the example of Fig. 139, the surface of the carrying member 11a away from the battery cells 20 in the vertical direction may be the first surface 504, and the reinforcing rib 503 is provided above the first surface 504. The reinforcing rib 503 can enhance the structural strength of the carrying member 11a.

It is to be noted that the size of the reinforcing rib 503 in the vertical direction is N3, and in the case of (N+N3)/N>2, it can consider that the size of N and the weight M2 of the battery cell 20 satisfy $0.04mm/kg \leq N/M2 \leq 100mm/kg$. The reinforcing ribs 503 can belong to batteries or electrical apparatuses, such as vehicles. The reinforcing ribs 503 can be arranged according to the vehicle's structural strength requirements. When the size of the reinforcing ribs 503 in the vertical direction is large, the relationship between the size N3 of the reinforcing rib 503 and the weight M2 of the battery cell 20 is no longer considered. From another perspective, when the size N3 of the reinforcing rib 503 is smaller, for example, in the case of (N+N3)/N≤2, then the relationship between (N+N3) and M2 satisfies: $0.04mm/kg \leq (N+N3)/M2 < 100mm/kg$.

The number and shape of the reinforcing ribs 503 can be specifically arranged according to the needs of the electrical apparatus or the mounting mode of the battery, which is not specifically limited in the embodiments of the present application.

Optionally, the reinforcing rib 503 and the carrying member 11a have an integrally molded structure, which facilitates processing and helps save processes. In other embodiments, the reinforcing rib 503 can also be molded separately from the carrying member 11a, and then they are connected or assembled through splicing, welding, bonding, machining, stamping, etc., which is not specifically limited in the embodiments of the present application.

Optionally, the carrying member 11a can be a single-layer plate structure or a multi-layer plate structure. Compared with the single-layer plate structure, the carrying member 11a of the multi-layer plate structure has greater rigidity and strength.

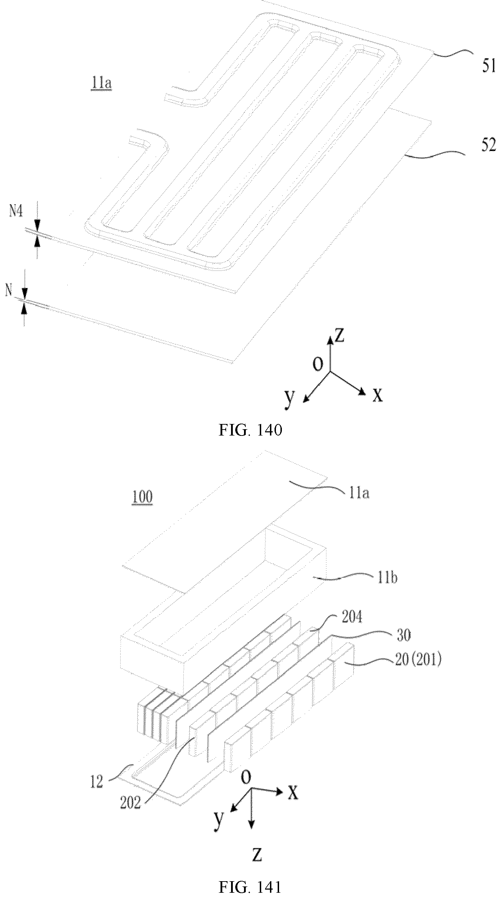

Optionally, as shown in Fig. 140, the carrying member 11a includes a first plate 51 and a second plate 52, the second plate 52 is connected to the top wall 204 of the battery cell 20, and the first plate 51 and the second plate 52 are arranged oppositely in the vertical direction. The second plate 52 may be a flat plate, and the first plate 51 may be a non-flat plate. The specific settings of the first plate 51, such as size, strength, etc., can be adjusted according to the specific needs of the electrical apparatus, which is not limited in the embodiments of the present application. The carrying member 11a may further include a third plate, a fourth plate, etc., and the embodiments of the present application do not limit the number of plates included in the carrying member 11a.

In the embodiment shown in Fig. 140, the size N of the carrying member 11a may be the size of the second plate 52 in the vertical direction, and the size of the first plate 51 in the vertical direction may be N4, and in the case of (N+N4)/N>2, for N and M2, only $0.04mm/kg \leq N/M2 \leq 100mm/kg$ is considered. In the case of (N+N4)/N≤2, the relationship between (N+N4) and M2 satisfies: $0.04mm/kg \leq (N+N4)/M2 \leq 100mm/kg$.

In some embodiments, the relationship between the size N of the carrying member 11a in the vertical direction and the weight M2 of the battery cell 20 also satisfies: $0.1mm/kg \leq N/M2 \leq 20mm/kg$. In this way, the battery will not catch fire or explode, and the safety of the battery can be better guaranteed while meeting the energy density of the battery 100.

Optionally, the battery cell 20 may further include two side walls oppositely arranged along the second direction y, and the side walls are adjacent to the top wall of the battery cell, the bottom wall of the battery cell, and the first wall 201, wherein the side walls of two adjacent battery cells 20 arranged in the second direction y are opposite to each other.

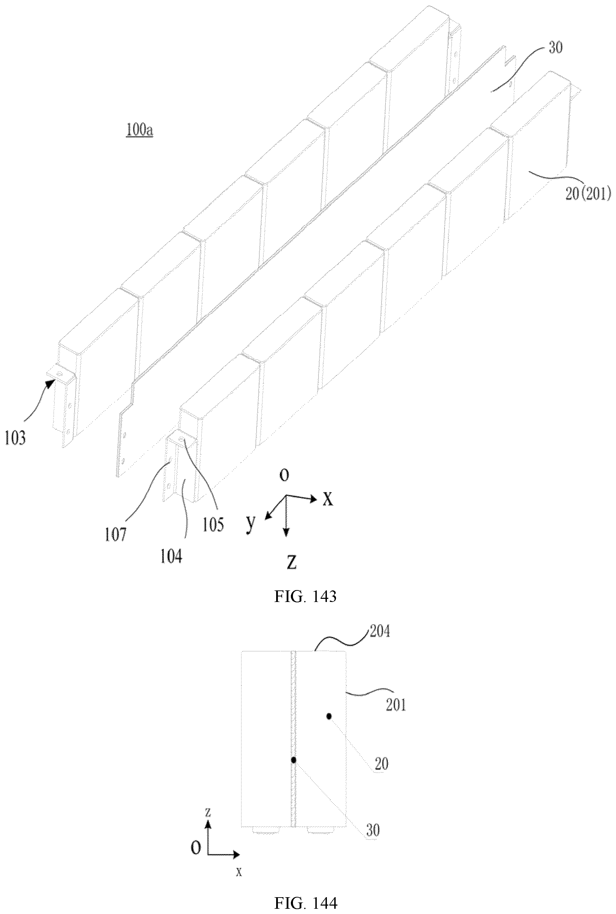

Optionally, as shown in Fig. 143, the end of the thermally conductive member 3a in the second direction y is provided with a fixing structure 103, and the thermally conductive member 3a is fixed to the carrying member 1 1a through the fixing structure 103. The fixing structure 103 can be directly connected to the carrying member 11a, or can be connected to the side wall of the box 10 and then connected to the carrying member 11a. In this way, each battery cell 20 is fixed to the carrying member 11a by the thermally conductive member 3a and the fixing structure 103. In this way, the fixed connection between the battery cell 20 and the carrying member 11a is strengthened, and the entire battery 10 is connected int a whole, and the structural strength of the battery 10 is improved.

Optionally, the fixing structure 103 may include a fixing component 104. The fixing component 104 is fixedly connected to the end of the thermally conductive member 3a, and is fixedly connected to the battery cell 20 located at the end of the thermally conductive member 3a. For example, for the rectangular battery cell 20, the fixing component 104 can be vertically connected to the thermally conductive member 3a, and the fixing component and the thermally conductive member 3a are connected to the two adjacent side walls of the rectangular battery cell 20 respectively, thereby further strengthening the fixing effect on the battery cell 20.

Optionally, the fixing component 104 may be made of the same material as the thermally conductive member 3a, such as metal, plastic or composite materials. The thickness of the fixing component 104 may also be the same as that of the thermally conductive member 3a. The material or thickness of the fixing component 104 may also be different from that of the thermally conductive member 3a. For example, the fixing component 104 may have a higher strength or thickness, which is not limited in the embodiments of the present application.

Optionally, the thermally conductive member 3a and the fixing component 104 can be connected by resistance welding, resistance riveting, SPR riveting, locking bolts or snap-fit or other connection methods.; the fixing component 104 can also be fixed on the carrying member 11a by resistance welding, resistance riveting, SPR riveting, locking bolts or snap-fit or other connection methods, which is not limited in the embodiments of the present application.

Optionally, the fixing component 104 and the battery cell 20 may be fixedly connected by bonding, for example, bonded by structural adhesive, which is not limited in the embodiments of the present application.

Optionally, the fixing component 104 includes a first connecting portion 105 extending away from the battery cell 20 in the first direction, and the first connecting portion 105 is used to connect the carrying member 11a. For example, taking the second surface 505 of the connecting carrying member 1 1a as an example, t the fixing component 104 can extend at a position close to the second surface 505 in a direction away from the battery cell 20, that is outward to form the first connecting portion 105, and it is connected to the second surface 505 through the connecting portion 105.

The first connecting portion 105 can be parallel to the second surface 505 of the carrying member 11a, and the area of the first connecting portion 105 can be set according to how it is fixed to the side wall of the connected box 10 to meet the required fixing effect.

Optionally, the first connecting portion 105 may be formed by bending the fixing component 104. For example, the first connecting portion 105 may be formed by bending the edge of the fixing component 104 close to the second surface 505 in a direction away from the battery cell 20. For example, the upper edge of the fixing component 104 can be bent outward to form the first connecting portion 105. In this way, the first connecting portion 105 and the main body of the fixing component 104 have an integrated structure, thereby enhancing the connection performance.

Optionally, the fixing component 104 further includes a second connecting portion 107 extending away from the battery cell 20 in the first direction. The second connecting portion 107 is used to connect the fixing component 104 and the thermally conductive member 3a. For example, at the position where the fixing component 104 is connected to the thermally conductive member 3a, the second connecting portion 107 can be formed by extending outward in the direction away from the battery cell 20. The fixing component 104 is fixedly connected to the thermally conductive member 3a through the second connecting portion 107.

Optionally, in addition to connecting the thermally conductive member 3a, the second connecting portion 107 can also realize the connection between the fixed components 104 at the same time. For example, one fixing component 104 is provided for each row of battery cells 20, and the thermally conductive member 3a and the two fixing components 104 corresponding to the two rows of battery cells 20 are fixed together through the second connecting portion 107.

The second connecting portion 107 may be parallel to the thermally conductive member 3a. The area of the second connecting portion 107 can be set according to the fixing mode to satisfy the required fixing effect.

In some embodiments, as shown in Figs. 117, 122, 132, 147, 149 and 150, the battery cells 20 are placed upside down in the box 10 with the end cover 212 facing the bottom wall 102 of the accommodating cavity 10a to enhance the overall rigidity of the battery and reduce the probability of damage in a collision; the end cover 212 is provided with a pressure relief mechanism 213 and an electrode terminal 214, and the pressure relief mechanism 213 and the electrode terminal 214 are both disposed toward the bottom wall 102 to improve the stability of the battery.

For example, the battery cell 20 is placed upside down in the box 10 with the end cover 212 facing the bottom wall 102 of the accommodating cavity 10a, which means that the battery cell 20 and the box 10 are arranged upside down relative to each other in the vertical direction.

Therefore, by placing the battery cell 20 and the box 10 upside down, the battery cell 20 can be disposed on the top of the battery 100, thereby increasing the rigidity of the top of the battery 100 and increasing the safety of the battery 100. In addition, the end cover 212 of the battery cell 20 faces the bottom of the battery 100, which can increase the energy density of the battery 100 and improve the availability of the battery 100. Arranging the electrode terminals 214 toward the bottom wall 102 can provide a large electrical connection space for the electrode terminals 214. The pressure relief mechanism 213 is arranged toward the bottom wall 102 so that the pressure relief direction of the pressure relief mechanism 213 is toward the bottom of the battery 100, thereby preventing the pressure relief mechanism 213 from discharging toward other external devices connected to the top of the battery 100, which can increase the safety of the battery 100.

Optionally, the electrode terminals 214 are disposed on both sides of the pressure relief mechanism 213; of course, the pressure relief mechanism 213 may also have other positional relationships with the electrode terminals 214.

In some embodiments of the present application, as shown in Figs. 117, 133, and 147, the box 10 includes a carrying member 11a and a frame 11b, the carrying member 11a is disposed on the top of the box 10, and the battery cell 20 and the carrying member 11a are fixedly connected.

The carrying member 11a is arranged on the top of the box 10 and is arranged with the frame 11b from top to bottom along the vertical direction Z. The carrying member 11a is a plate body extending in the horizontal direction and is used to increase the rigidity of the top of the battery 100. The frame 11b is a plate body extending in the vertical direction Z. The frame 11b surrounds the carrying member 11a, and an opening 10c is formed at the bottom of the box so that there is a space inside the box 10 to accommodate the battery cells 20. The battery cell 20 is fixedly connected to the carrying member 11a, which can increase the rigidity of the top of the battery 100 and reduce the possibility of the battery 100 being damaged in a collision.

Optionally, the battery cell 20 may be directly connected to the carrying member 11a by bonding, or they may be fixedly connected by other means.

Optionally, the frame 11b can be integrally molded with the carrying member 11a, or can be fixedly connected to the carrying member 11a through welding, bonding, fasteners or welding self-tapping processes, which is not limited in the present application.

For example, the electrode terminal 214 of the battery cell 20 is disposed toward the opening 10c of the bottom wall 102 of the accommodating cavity 10a, and the end surface of the battery cell 20 opposite to the electrode terminal 214 is fixed to the carrying member 11a. In actual application, the battery 100 is fixed through the top of the box 10 to an external device, such as inside the vehicle 1000. The battery cells 20 disposed on the top of the battery 100 can increase the rigidity of the top of the battery 100, reduce the possibility of damage to the battery 100 in a collision, and increase the safety of the battery 100. Moreover, the electrode terminals 214 of the battery cells 20 face the opening 10c, and the side of the battery cells 20 opposite to the electrode terminals 214 is fixedly connected to the top of the box 10, so that the battery 100 can reserve less space for placing the battery cells 20, increasing the energy density of the battery 100 and at the same time enabling better combination of the battery cells 20 with the box 10.

In an optional embodiment, a cooling channel is embedded inside the carrying member 11a. Since the battery cell 20 is disposed on the carrying member 11a, the top of the battery cell 2 is in contact with the carrying member 11a. Considering the performance of the battery 100, a channel is embedded inside the carrying member 11a, through which a gas or liquid as the heat exchange medium flows, which, for the battery 100, can have an effect of regulating the temperature of the battery 100 when the battery 100 is working, thereby increasing the service life and availability of the battery 100.

In another optional embodiment, the channel can also be provided as a thermal management component between the battery cell 20 and the carrying member 11a, or formed as any other component that can be configured to regulate the temperature of the battery 100, which is not limited in the embodiments of the present application.

In some embodiments of the present application, as shown in Figs. 117, 133 and 147, the box 10 further includes a bottom cover 12 provided at the opening 10c, the frames 11b are connected to each other to form a frame structure, and the bottom cover 12 and the frame 11b are fixedly connected.

The frames 1 1b are connected to each other to form a frame structure, that is, the frame 1 1b is arranged in the circumferential direction of the carrying member 11a and is combined with the carrying member 11a to form the box 10 to accommodate the battery cells 2. The bottom cover 12 is fixedly connected to the frame 11b, thereby covering the opening 10c, so that the box 10 has a relatively sealed structure.

The bottom cover 12 includes a cover portion 12a and a mounting portion 12b. The mounting portion 12b is provided in the circumferential direction of the cover portion 12a and matches the frame 11b. That is to say, the cover portion 12a covers the opening 10c formed by the frame 11b, and the mounting portion 12b is fixed to the frame 11b to fixedly connect the bottom cover 12 and the frame 11b. Optionally, the mounting portion 12b and the frame 11b can be connected by bolts, and the mounting portion 12b and the frame 11b can also be fixedly connected in other ways.

In the vertical direction Z, the cover portion 12a protrudes from the bottom 102 relative to the mounting portion 12b. This results in a relatively larger distance between the battery cell 20 disposed inside the box 10 and the bottom cover 12. It should be understood that the protruding distance of the cover portion 12a relative to the mounting portion 12b should be selected based on the energy density of the battery 100, and it should not be too large to increase the volume of the battery 100 and reduce the energy density of the battery 100.

Of course, the cover portion 12a can also be called the main body part, and the mounting portion 12b can also be called the fitting part.

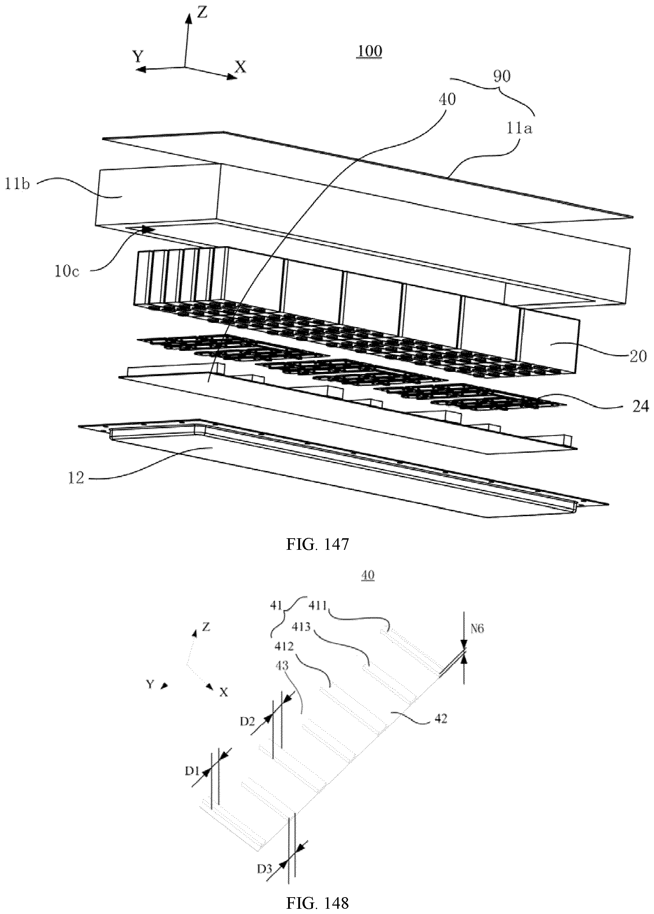

In some embodiments, as shown in Figs. 147 and 148, the fixing member 90 further includes a protective assembly 40. The protective assembly 40 is disposed between the battery cell 20 and the bottom wall 102 of the accommodating cavity 10a to support the battery cell 20. The battery cell 20, the protective assembly 40 and the bottom wall 102 are arranged in sequence from top to bottom along the vertical direction Z. The protective assembly 40 can directly or indirectly abut against the battery cell 20 for supporting, which can increase the structural strength of the battery 100, improve the force-bearing performance of the battery 100 and reduce the possibility of damage to the battery 100 in a collision.

Of course, in some examples, the protective assembly 40 may also be called a carrying assembly.

Exemplarily, the battery cell 20 is fixedly connected to the carrying member 11a, and the protective assembly 40 is fixedly connected to the battery cell 20, which can fix the structure of the battery 100 in many ways and improve the stability of the battery 100.

In some embodiments, as shown in Fig. 147, the battery cell 20 is placed upside down in the box 10 with the end cover 212 facing the bottom wall 102 of the accommodating cavity 10a. In this case, the protective assembly 40 directly or indirectly abut against the end cover 212 of the battery cell 20. Abutting against means that two parts are in direct contact with each other or abut through other parts, but are not fixed to each other.

Exemplarily, the end cover 212 is provided with a pressure relief mechanism 213 and an electrode terminal 214. Both the pressure relief mechanism 213 and the electrode terminal 214 are provided toward the bottom wall 102 of the accommodating cavity 10a. The protective assembly 40 supports the battery cell 20 to protect the pressure relief mechanism. 213 and the electrode terminal 214.

In some embodiments, as shown in Figs. 117 and 147, the box 10 includes a main body 11 and a bottom cover 12 disposed at the bottom of the main body 11. The bottom cover 12 and the main body 11 are hermetically connected and together form a closed accommodating cavity 10a. The wall of the bottom cover 12 facing the battery cell 20 forms the bottom wall 102 of the accommodating cavity 10a. In this case, the protective assembly 40 is disposed between the battery cell 20 and the bottom cover.

In some embodiments, as shown in Figs. 117 and 147, the battery cell 20 is placed upside down in the box 10 with the end cover 212 facing the bottom wall 102. The end cover 212 is provided with a pressure relief mechanism 213 and an electrode terminal 214. The wall of the bottom cover 12 facing the battery cell 20 forms the bottom wall 102 of the accommodating cavity 10a. The protective assembly 40 is disposed between the battery cell 20 and the bottom cover 12, that is, between the pressure relief mechanism 213, the electrode terminal 214 and the bottom cover 12 and is configured to support the battery cells 20 and the bottom cover 12, thereby providing protection for the pressure relief mechanism 213 and the electrode terminals 214 to protect them during a collision.

In some embodiments, as shown in Fig. 147, the battery 100 further includes a bus component 24, the bus component 24 is used for electrically connecting with the electrode terminals of at least two battery cells 20, the protective assembly 40 is disposed between the bottom wall 102 of the accommodating cavity 10a and the bus component 24, and the protective assembly 40 is also used to insulate the battery cell 20 from the bottom wall 102.

Therefore, the protective assembly 40 is disposed between the bottom wall 102 and the bus component 24 to support the battery cells 20. That is, the protective assembly 40 can abut against the partial region of the battery cells 20 that is not covered by the bus component 24 and the bottom wall 102 of the accommodating cavity 10a at the upper and lower sides respectively to provide supporting force for the battery cell 20 in the vertical direction Z. At the same time, the protective assembly 40 can ensure that there is a certain gap between the battery cells 20 and the bottom wall 102 of the accommodating cavity 10a and that they are not in contact with each other, so that the bus component connected to the battery cells 20 keeps a certain distance from the bottom wall 102 of the accommodating cavity 10a, which insulates the bus component and the battery cells 20 from the bottom wall 102 of the accommodating cavity 10a to prevent the exposed bottom wall 102 from being disturbed by the external environment and causing electrical interference to the battery cells 20 and bus component 24.

Further, the protective assembly 40 may have a flat surface extending perpendicular to the vertical direction Z, thereby providing another protective layer on the bottom of the box 10 to further reduce the effect to the battery cells 20 and the bus components 24 when the bottom wall 102 of the accommodating cavity 10a receives a collision.

In some examples, as shown in Fig. 147, the battery cell 20 is placed upside down in the box 10 with the end cover 212 facing the bottom wall 102 of the accommodating cavity 10a. The end cover 212 is provided with electrode terminals 214, and the electrode terminals 214 are electrically connected to the corresponding bus component 24. The flat bottom surface of the battery cell 20 opposite to the top surface where the electrode terminal 214 is provided is connected to the top of the box 10 so that the electrode terminal 214 is located on the side away from the top of the box 10, which can effectively improve the structural strength of the top of the battery 100. Also, by connecting the bottom of the battery cell 20 to the top of the box 10, it can improve the space utilization inside the box 10, thereby increasing the overall energy density of the battery.

The bus component 24 in the embodiments of the present application may be a CCS (Cells Contact System) assembly, that is, an integrated wire harness composed of a flexible circuit board, a plastic structural member, a busbar, etc., used to form all the connections between multiple battery cells 20. The battery cell 20 can be charged and discharged through the bus component. Optionally, the bus component in the embodiments of the present application may be welded to the electrode terminal of the battery cell 20, so that the connection between the bus component and the battery cell 20 is fixed.

Optionally, the bus component 24 may include multiple assemblies, each assembly is connected correspondingly to a battery module composed of the battery cells 20, and then these assemblies are electrically connected to form the required series/parallel/parallel-series connection. Alternatively, the bus component 24 may be provided as a whole and connected to each battery cell 20 through the same assembly.

Optionally, the box 10 includes a carrying member 11a, a frame 11b and a bottom cover 12. The frame 1 1b extends in the vertical direction Z by a distance longer than the extending distance of the battery cells 20, bus components and protective components 40 in the vertical direction Z. In this case, the bottom cover 12 can cover the lower end of the frame 11b.

In some embodiments, as shown in Fig. 148, the protective assembly 40 includes a protective strip 41, and the protective strip 41 abuts against the battery cell 20.

In some examples, the protective assembly 40 can also be a carrying assembly, and the protective strip 41 can also be called a protective member, or a carrying strip. For example, the protective assembly 40 includes a protective member, and the carrying assembly includes a carrying strip.

Optionally, the protective assembly 40 may include multiple protective strips 41, those protective strips 41 respectively abut against the multiple battery cells 20 to maintain a certain distance between the battery cells 20 and the bottom wall 102 of the accommodating cavity 10a, reducing the effect on the battery by the bottom wall 102 receiving a collision.

Optionally, the protective strip 41 can abut against the surface of the battery cell 20 on which the electrode terminal 214 is provided. Specifically, the protective strip 41 can abut against the partial region capable of bearing force of the surface of the battery cell 20 on which the electrode terminal is provided except where the electrode terminal is located. For example, the protective strip 41 abut against the "shoulders" located on both sides of the electrode terminal in the second direction Y on the surface. On this basis, the protective strips 41 need to be arranged at positions corresponding to the battery cells 20. There are multiple battery cells 20, and when the multiple battery cells 20 are arranged in an array, correspondingly, there are also multiple protective strips 41. The multiple protective strips 41 are arranged at intervals along the second direction, and each protective strip 41 extends along the first direction, so that the multiple protective strips 41 form a strip structure arranged at intervals in parallel. In addition to the protective strips 41 located at the edges, other protective strips 41 may be disposed at positions where adjacent battery cells 20 are connected. That is, each protective strip 41 may abut against two adjacent battery cells 20 in the second direction Y at the same time.

Optionally, the first direction X is perpendicular to the second direction Y, and the first direction and the second direction are perpendicular to the vertical direction respectively, forming a relatively regular structure that is easy to process.

In some optional embodiments, as shown in Figs. 149 and 150, the orthographic projection of the electrode terminal 30 on the bottom wall 102 of the accommodating cavity 10a is located between the orthogonal projections of adjacent protective strip 41 on the bottom wall 102 of the accommodating cavity 10a, and the protective strip 41 abuts against the battery cell 20. In this case, the protective strip 41 abuts against the shoulder of the battery cell 20, so that the connection between the electrode terminal and the bus component 24 is not hindered by the protective assembly 40, and after the battery cells 20 are lifted up by the protective components 40, allowing the electrode terminals to fall between adjacent protective strips 41 can disperse the force generated by collisions to multiple battery cells 20, thereby preventing the electrode terminals from being damaged by collisions.

In some embodiments, the protective strip 41 is fixedly connected to the battery cell 20 and/or the box 10, that is, the protective strip 41 is fixedly connected to at least one of the battery cell 20 and the box 10 to ensure the arrangement reliability of the protective strip 41.

For example, when the protective strip 41 is fixedly connected to the box 10, the protective strip 41 is fixedly connected to the bottom wall 102 of the accommodating cavity 10a; the box 10 includes a bottom cover 12, and the wall of the bottom cover 12 facing the battery cell 20 forms the bottom wall 102 of the accommodating cavity 10a, and the protective strip 41 is fixedly connected to the bottom cover 12.

Optionally, the protective strip 41 is bonded to the battery cell 20 and/or the box 10, that is, the protective strip 41 is bonded to at least one of the battery cell 20 and the box 10 to facilitate assembly.

For example, when the protective strip 41 is bonded to the box 10, the protective strip 41 is bonded to the bottom wall 102 of the accommodating cavity 10a; the box 10 includes a bottom cover 12, and the wall of the bottom cover 12 facing the battery cell 20 forms the bottom wall 102 of the accommodating cavity 10a, the protective strip 41 is bonded to the bottom cover 12.

In some optional embodiments, the multiple protective strips 41 include edge protective strips 411, first protective strips 412 and second protective strips 413. Along the second direction y, the edge protective strips 411 are provided at the edge of the assembly formed by the battery cells 20 arranged in an array, and the first protective strips 412 and the second protective strips 413 are alternately distributed between two edge protective strips 411.

The protective strips 41 in the embodiments of the present application may include three types of protective members respectively arranged at different positions, wherein the edge protective strips 411 are arranged at the edges of the battery cells 20, and the first protective strips 412 and the second protective strips 413 are alternately arranged between the edge protective strips 411. The first protective strip 412 and the second protective strip 413 may have different sizes to match a variety of different connecting elements in the bus component and provide required space for connection between adjacent battery cells 20.

Optionally, the protective strips 41 in the embodiments of the present application can include multiple different sizes, and the size of each protective strip 41 can be adjusted accordingly according to the length of the battery cell 20 and the positions of the electrode terminals 214 and the pressure relief mechanism 213 thereon. When each protective strip 41 abuts against multiple battery cells 20, each protective strip 41 may abut between two adjacent battery cells 20. In this case, the distance between the first protective strip 412 and the second protective strip 413 can be approximately the same as the length of the battery cell 20 itself. The alternately arranged first protective strips 412 and second protective strips 413 can match the arrangement of the bus component 24 to form a safe and reliable electrically connected loop.

In some embodiments, along the first direction X, the extension length of the first protective strip 412 is greater than the extension length of the second protective strip 413.

As mentioned above, the first protective strip 412 and the second protective strip 413 in the embodiments of the present application can have different lengths in their own extension directions, and can be arranged, through the gaps between adjacent second protective strips 413, on hard connecting elements such as a busbar for forming electrical connection between the battery cells 20 to electrically connect two adjacent battery cells 20 in the second direction y through the connecting element. That is, by adjusting the length of the second protective strip 413 and the spacing between adjacent second protective strips 413 in the second direction y, the hard connecting elements in the bus component 24 are avoided.

Optionally, according to the position of the connecting elements between the battery cells 20, the first protective strip 412 may have an extension length along the first direction X that is the same as the length of the inner cavity of the box 10 in this direction, that is, it extends integrally and completely inside the box 10, or the first protective strip 412 may be provided with a broken opening in the first direction X to arrange corresponding connecting elements at the broken opening. Arranging the connecting elements in the bus component 24 at the broken opening of the protective strip 41 can also maintain a certain distance between the connecting element and the bottom wall 102 of the accommodating cavity 10a to form protection against impact and maintain insulation.

In some optional embodiments, along the second direction Y, the widths of the first protective strip 412 and the second protective strip 413 are greater than the width of the edge protective strip 411; since the edge protective strip 411 is disposed at the edge of the array of battery cells 20, unlike the first protective strip 412 or the second protective strip 413, the edge protective strip 411 does not need to support two adjacent rows of battery cells 20 at the same time in the length direction, but only needs to support one row of battery cells 20. The width of the edge protective strip 411 can be smaller than the first protective strip 412 and the second protective strip 413 and can achieve a good supporting effect.

Optionally, the width of the first protective strip 412 is greater than the width of the second protective strip 413, and the width of the second protective strip 413 is greater than the width of the edge protective strip 411. The protective strips 41 in the embodiments of the present application may include the edge protective strips 411 arranged on the edge and the first protective strips 412 and second protective strips 413 alternately arranged between the edge protective strips 411, wherein the edge protective strips 411 only abut against one row of battery cells 20, so their widths may be smaller compared with the first protective strips 412 and the second protective strips 413, and the first protective strips 412 and the second protective strips 413 may be disposed at the junction of two adjacent rows of battery cells 20 and abut against multiple battery cells 20 at the same time. By making each first protective strip 412 abuts against two adjacent battery cells 20 at the same time, the number of required protective strips 41 can be reduced, thereby improving production efficiency.

Optionally, in the battery provided by the embodiments of the present application, the width and position of each protective strip 41 in the protective assembly 40 can be designed according to the position and size of the partial region of the battery cell 20 that cannot overlap with the protective assembly 40. Specifically, the width of the protective strip 41 can be selected based on the pressure that the battery cell 20 can bear and the expected magnitude of impact, and the location of the protective strip 41 can then be selected based on the positions of the electrode terminals 214 and the pressure relief mechanism.

In some optional embodiments, the extension length of the protective assembly 40 in the vertical direction Z is greater than 1.5 mm.

The protective assembly 40 in the embodiments of the present application needs to extend to a certain size in the vertical direction Z, that is, each protective strip 41 needs to have a certain thickness. The protective assembly 40 is used to provide the battery cell 20 with protection against collisions from the lower side, therefore the relationship between the thickness of the protective assembly 40 itself and the impact energy has a great impact on whether the battery will catch fire and explosion and other safety issues. On this basis, the protective assembly 40 needs to have a certain basic thickness to provide the corresponding protection strength. Exemplarily, the overall thickness of the protective assembly 40 in the embodiments of the present application may be greater than 1.5 mm.

In some embodiments, as shown in Figs. 147 to 150, the pressure relief mechanism 213 of the battery cell 20 is also disposed toward the bottom wall of the accommodating cavity; the protective assembly 40 includes multiple protective strips 41 distributed at intervals along the length direction of the box 10. There are multiple battery cells 20, and the pressure relief mechanism 213 and electrode terminal 214 of each battery cell 20 are located between two adjacent protective strips 41. For example, the protective strips 41 can be provided at the junction of adjacent battery cells 20 to avoid contact with the electrode terminals 214 and the like, and to support the battery cells 20.

For ease of description, in some embodiments, the length direction of the box 10 is the arrangement direction of the multiple battery cells 20, that is the second direction, also one of the horizontal directions. The length direction and the vertical direction Z are perpendicular to each other. When the included angle between the length direction and the vertical direction Z is between 85° and 90°, the length direction and the vertical direction Z can be regarded as perpendicular to each other. It should be understood that the length direction may also be other directions, and the length direction may not be perpendicular to the vertical direction Z, which will not be described in detail in the present application.

The multiple protective strips 41 are arranged at intervals along the length direction, that is, the protective components 40 are arranged along the length direction between the multiple battery cells 20 and the bottom cover 12. As an example, the protective strip 41 may be formed in a strip shape, protruding from the bottom cover 12 in the vertical direction Z and fixed to the battery cell 20, so that the pressure relief mechanism 213 and the electrode terminal 214 of the battery 100 are located between two adjacent protective strips 41 to protect the pressure relief mechanism 213 and the electrode terminal 214.

In some embodiments, as shown in Fig. 148, the multiple protective strips 41 include edge protective strips 411, first protective strips 412 and second protective strips 413. Along the length direction, the edge protective strips 411 are provided at both side edges of multiple battery cells 2 arranged in an array, and the first protective strips 412 and the second protective strips 413 are alternately distributed between two edge protective strips 411.

The edge protective strips 411 are provided at both side edges of the multiple battery cells 20 arranged in an array, that is, on the edge of the battery cell 20 located at the outermost side of the array, so as to support both the battery cells 20 at a position where the battery cells 20 are close to the box 10. The first protective strips 412 and the second protective strips 413 are alternately distributed between the two edge protective strips 411, which can make the protective strips 41 more adaptable to the array distribution of the battery cells 20, thus providing better support to the battery cells 20.

For convenience of description, in the embodiments of the present application, the width direction of the box 10 is taken as the first direction X, that is, the other horizontal direction. The length direction, the vertical direction Z and the width direction X are perpendicular to each other. When the included angles between the length direction, the vertical direction Z and the width direction X are between 85° and 90°, the three directions can be regarded as perpendicular to each other. It should be understood that the width direction X may also be other directions, and the width direction X may not be perpendicular to the length direction and the vertical direction Z, which will not be described in detail in the present application.

In some embodiments, as shown in Figs. 147 and 148, multiple battery cells 20 are electrically connected through bus components 24. The bus component 24 spans between the electrode terminals 214 of adjacent battery cells 20 to connect multiple battery cells 20 in series, parallel or parallel-series. Since in some embodiments of the present application, the bus component 24 spans between the electrode terminals 214 of adjacent battery cells 20 in the length direction, at least some protective strips 41 include a notch to avoid the bus component 24; the notch can be provided at one end of the corresponding protective strip 41, and the notch can also be provided at other positions, which depends on the arrangement of the bus component 24, and is not specifically limited. Therefore, in the width direction X, the extension length of the first protective strip 412 is larger than the extension length of the second protective strip 413, so that the second protective strip 413 avoids the bus component 24.

The lengths of the first protective strip 412 and the second guard strip 413 in the width direction X are different, so that the protective member can avoid the bus component 24, thus the protective assembly 40 is better adapted to the structure of the battery 100, and the battery cells 20 is convenient to be connected in series, in parallel and in parallel-series with each other.

Optionally, when the bus component 24 spans between the electrode terminals 214 in other directions, the first protective strip 412 and the second protective strip 413 may change in size according to specific circumstances.

Optionally, the extension length of the protective strips 41 may only indicate the sum of the lengths of the protective strips 41 in the width direction, so that he total length of the second protective strips 413 is smaller than that of the first protective strips 412, that is, the protective strip 413 can avoid the bus component 24 at any position. It can be at one end of the second protective strip 413 or in the middle of the second protective strip 413, depending on the arrangement of the bus component 24.

In some embodiments, as shown in Fig. 148, the protective assembly 40 further includes a main plate 42, the protective strip 41 is connected to the main plate 42, the main plate 42 is located between the protective strip 41 and the bottom wall 102 of the accommodating cavity 10a, then the protective strip 41 is provided on the surface of the main plate 42 facing the top of the box 10.

Of course, the main plate 42 can also be called a connecting plate.

Optionally, there are multiple protective strips 41, and the multiple protective strips 41 are all disposed on the surface of the main plate 42 facing the top of the box 10. The main plate 42 is disposed close to the bottom wall 102 of the accommodating cavity 10a. The main plate 42 can stabilize the relative positions between the multiple protective strips 41 to avoid dislocation after receiving a collision.

The main plate 42 can extend in the same direction as the bottom wall 102 and abut against the bottom wall 102 of the accommodating cavity 10a. It can also be further limited through grooves or the like provided on the bottom wall 102. The main plate 42 is arranged between the protective strip 41 and the bottom wall 102 and extends to cover a large area, thereby improving the insulation performance between the bus component 24 and the battery cell 20 and the bottom wall 102 of the accommodating cavity 10a.

Optionally, in order to provide the required protective strength, the thickness of the main plate 42 may be greater than 0.5 mm.

Optionally, the main plate 42 is fixedly connected to the bottom wall 102 of the accommodating cavity 10a to facilitate reliable placement of the main plate 42 and increase the structural solidity of the battery 100; for example, the main plate 42 and the bottom wall 102 are bonded and fixed to facilitate assembly.

Optionally, the main plate 42 can also abut against the bottom wall 102 of the accommodating cavity 10a, which is not limited in the embodiments of the present application.

In some embodiments, the main plate 42 and the protective strip 41 are integrally molded or detachably connected to facilitate the processing of the main plate 42 and the protective strip 41. When the protective strip 41 and the main plate 42 are integrally molded, the manufacturing of the protective assembly 40 can be facilitated. When the protective strip 41 is detachably connected to the main plate 42, the position of the protective strip 41 can be easily adjusted according to the arrangement of the battery cells 20, so that the protective assembly 40 can be used in a wider range of applications.

In some optional embodiments, the protective assembly 40 is bonded and fixed to the battery cell 20. In the embodiments of the present application, the protective assembly 40 abuts against the shoulder of the battery cell 20. In this case, the two can be bonded and fixed to further improve the overall strength and the stability of the connection, and avoid dislocation between the protective assembly 40 and the battery cell 20 as a result of impact. Optionally, each protective strip in the protective assembly 40 can be bonded to a corresponding position on the battery cell 20, or at least some of the protective strips can be bonded to the battery cell 20, which can include edge protective strips 411.

In some embodiments, as shown in Fig. 124, the end cover 212 includes a functional region 206 and shoulders 207. The functional region 206 is provided with electrode terminals. The shoulders 207 are located on both sides of the functional region 206 along the second direction y. The battery cells 20 abuts against the protective strip 41 through the shoulders 207, and the second direction y is perpendicular to the vertical direction.

Of course, the end cover 212 can also be called a top cover plate.

What the functional region 206 indicates is that the end cover 21 is provided with a region that enables the battery cell 20 to realize its own function, or a region where the battery cell 20 can interact with the outside, such as an electrode terminal that allows the battery cell 20 to be electrically connected to the outside. Since the functional region 206 is often provided with electrode terminals or other functional components, the functional region 206 should not be subjected to force during use of the battery 100. The shoulder 207 indicates the region of the end cover 21 that can bear force except the functional region 206.

The functional region 206 is arranged between the shoulders 207, so that the shoulders 207 can achieve a certain protective effect on the functional region 206. By making the battery cell 20 abuts against the protective strip 41 through the shoulder 207, the battery 100 can have a more compact structure, damage to the functional region 206 due to force is avoided, and the service life of the battery cell 20 is extended.

Optionally, the protective strip 41 is fixedly connected to the shoulder 207.

In some embodiments, the electrode terminal 214 is disposed between two adjacent protective strips 42, and the electrode terminal 214 and the bottom wall 102 (e.g., the bottom cover 12) of the accommodating cavity 10a are spaced apart.

Since the functional region 206 is located between two shoulders 207 and the shoulders 207 overlap the protective strips 41, the electrode terminals 214 of the functional region 206 are also located between the two adjacent protective strips 42. The electrode terminal 214 and the bottom wall 102 of the accommodating cavity 10a are spaced apart, that is, the electrode terminal 214 is not in contact with the bottom wall 102. The electrode terminal 214 can be regarded as being suspended between the two protective strips 42 to facilitate educing the electric energy of the battery cell 20 through the electrode terminal 214 to improve the availability of the battery cell 20.

Optionally, the pressure relief mechanism 213 and the electrode terminal 214 of the battery cell 20 are disposed on the same side of the battery cell 20, so that the pressure relief mechanism 213 is also disposed toward the bottom wall 102 of the accommodating cavity 10a. The functional region 206 is provided with a pressure relief mechanism 213 and electrode terminals 214. In the functional region 206, the electrode terminals 214 can be arranged on both sides of the pressure relief mechanism 213 to reduce the effect of the pressure relief mechanism 213 on the electrode terminals 214 during pressure relief.

In some embodiments, as shown in Fig. 150, in the vertical direction (e.g., the thickness direction of the main plate 42), the thickness of the protective strip 41 is greater than the extension height of the part of the electrode terminals 214 exposed to the battery cell 20, so that the electrode terminals 214 can be suspended between adjacent protective strips 41 to avoid coming into contact with other components and affecting functions.

In some embodiments of the present application, as shown in Figs. 149 and 150, the shoulders 207 of two adjacent battery cells 20 jointly overlap the same protective strip 41.

In the box 10, one battery cell 20 can be mounted, or multiple battery cells 20 can be mounted. When multiple battery cells 20 are mounted in the box 10, the multiple battery cells 20 are arranged adjacent to each other in the box 10. Since the protective strips 41 are arranged at intervals along the main plate 42 along the first direction x, the shoulders 207 are located on both sides of the functional region 206 in the first direction x, so that the shoulders 207 can be located at the junction of adjacent battery cells 20, which allows the shoulders 207 of two adjacent battery cells 20 to jointly overlap the same protective strip 41.

By allowing adjacent battery cells 20 in the first direction x to share the same protective strip 41, the number of protective strips 41 can be reduced as much as possible, which facilitates the manufacture of the protective assembly 40.

In some embodiments of the present application, as shown in Figs. 124 and 148, in the first direction x, the width D11 of the protective strip 41 (for example, the width D1 of the edge protective strip 4111, the width D2 of the first protective strip 412, the width D3 of the second protective strip 413 in the present application) and the extension width D4 of the shoulder 207 satisfy: $0.5D4 \leq D11 \leq 2D4$.

When the width D11 of the protective strip 41 is greater than or equal to 0.5 times the extension width D4 of the shoulder 207, sufficient supporting force can be provided for the battery cell 20. When the protective strip 41 supports two adjacent battery cells 20 at the same time, the width of the protective strip 41 in the second direction Y is less than or equal to 2 times the extension width of the shoulder 207, so that the protective strip 41 can only be in contact with the shoulders 207 of the two adjacent battery cells 20, thereby avoiding coming into contact with the functional region 206 and affecting the function of the battery cells 20.

Preferably, the relationship between the width D11 of the protective strip 41 and the extension width D4 of the shoulder 207 can satisfy $D4 \leq D11 \leq 2D4$. Since the protective strip 41 may be offset between adjacent battery cells 20, the width of the protective strip 41 in the length direction Y is greater than or equal to the extension width of the shoulder 207, so that the protective strip 41 can simultaneously support two adjacent battery cells 20 rather than only support one due to offset. The latter may result in poor structural stability of the battery 100 due to uneven force.

In some embodiments, the protective strip 41 abuts against the electrode terminal 214, or the protective strip 41 and the electrode terminal 214 are spaced apart. This facilitates flexible arrangement of the protective strip 41.

In some embodiments, as shown in Figs. 124, 149 and 150, the orthographic projection of the electrode terminal 214 on the bottom wall 102 of the accommodating cavity 10a is located between the orthogonal projections of the adjacent protective strips 41 on the bottom wall 102 of the accommodating cavity 10a.

The protective assembly 40 in the embodiments of the present application includes multiple protective strips 40 that abut against the battery cells 20, wherein the orthographic projection of the electrode terminals 30 in the battery cells 20 on the bottom wall can be located between adjacent protective strips. In this case, the protective strips 41 abut against the shoulders of the battery cells 20, so that the connection between the electrode terminals 214 and the bus component 24 is not hindered by the protective assembly 40. Also, after the battery cells 20 are supported by the protective assembly 40, the electrode terminals 30 fall between adjacent protective strips 41, which can disperse the force generated by collisions to multiple battery cells 20 and prevent the electrode terminals 30 from being damaged by collision.

In some embodiments, as shown in Figs. 147 and 148, the electrode terminals 214 of two adjacent battery cells 20 are electrically connected through the bus component 24, and in the second direction y, the extension length of one of two adjacent protective strips 41 is smaller than that of the other, so as to form an avoidance notch 43. The avoidance notch 43 is used for avoiding the bus component 24.

The bus component 24 is a component for electrically connecting multiple battery cells 20. The bus component 24 spans between the electrode terminals 214 of adjacent battery cells 20 to connect multiple battery cells 20 in series, parallel or parallel-series. Since the bus component 24 spans between the electrode terminals 214 of adjacent battery cells 20 in the second direction Y, at least some protective strips 41 extending along the first direction X need to avoid it to form an avoidance notch 43.

The extension length of one of two adjacent protective strips 41 is smaller than the extension length of the other, that is, the protective strip 41 with a longer extension length and the protective strip 41 with a shorter extension length are alternately distributed. Optionally, the length of the protective strip 41 can also be adjusted according to the arrangement of the bus component 24. Moreover, the extension length of the protective strips 41 in the first direction X only indicates the sum of the lengths of the protective strips 41 in the first direction X. That is to say, the avoidance notch 43 can be arranged at one end of the protective strip 41 or at the middle of the protective strip 41, which depends on the arrangement of the bus components 24, and is not specially limited in the embodiments of the present application.

Arranging the avoidance notch 43 in the protective strip 41 can make the protective assembly 40 better adapt to the structure of the battery 100 and facilitate the battery cells 20 to be connected in series, parallel and parallel-series with each other.

In some optional embodiments, as shown in Fig. 124, the battery cell 20 further includes a pressure relief mechanism 213. The pressure relief mechanism 213 is provided on the same side as the electrode terminal 214. The pressure relief mechanism 213 is also arranged at the lower side of the battery cell 20 to protect it together with the electrode terminal 214 to avoid collision with the box 10 and the like, thereby improving the overall safety and reliability of the battery 100.

Optionally, the pressure relief mechanism 213 and the bottom wall 102 of the accommodating cavity 10a are spaced apart. In the second direction y, the electrode terminals 214 are provided on both sides of the pressure relief mechanism 213, which can reduce the effect of the pressure relief mechanism 213 on the electrode terminals 214 during pressure relief. Moreover, the pressure relief mechanism 213 and the bottom wall 102 are spaced apart, that is, the pressure relief mechanism 213 is not in contact with the bottom wall 102, thereby providing a larger pressure relief space for the pressure relief mechanism 213, reducing the risk caused by the discharge of emissions and improving the safety of battery 100.

In some optional embodiments, as shown in Figs. 124, 149 and 150, the orthographic projection of the pressure relief mechanism 213 on the bottom wall 102 of the accommodating cavity 10a is located between the orthogonal projections of the adjacent protective strips 41 on the bottom wall 102 of the accommodating cavity 10a. When the battery cells 20 and the protective components 40 are matched, the pressure relief mechanism 213 can be disposed between the region where adjacent protective strips 41 and the battery cells 20 abut against each other. That is, the pressure relief mechanism 213 is disposed on the side close to the bottom wall 102 and does not come into contact with the protective assembly 40, so that in the case of an external impact, the impact force can be dispersed on the shoulders of the battery cell 20, preventing the pressure relief mechanism 213 from being damaged by the collision, thereby improving the safety of the battery 100.

In some embodiments, as shown in Fig. 148, along the length direction, the width D1 of the edge protective strip 411, the width D2 of the first protective strip 412, the width D3 of the second protective strip 413, and the width D4 of the shoulder 207 satisfy: $0.2D4 \leq D1 \leq D4$, $0.5D4 \leq D2 \leq 2D4$, $0.5D4 \leq D3 \leq 2D4$.

Since the edge protective strip 411 is disposed at the edge of the array of battery cells 20, the edge protective strip 411 is only in contact with one side shoulder 207 of the edge battery cell 20 in the length direction, so that the width D1 of the edge protective strip 411 is less than or equal to the width D4 of the shoulder 207, which can prevent the edge protective strip 411 from coming into contact with the functional region 206 and affecting the function of the battery cell 20. If the width D1 of the edge protective strip 411 is greater than or equal to 0.2 times the width D4 of the shoulder 207, the edge protective strip 411 can provides sufficient support for the battery cells 20.

Since the first protective strip 412 is disposed between adjacent battery cells 20, the width D2 of the first protective strip 412 is greater than or equal to 0.5 times the extension width D4 of the shoulder 207, which can provide sufficient supporting force for the battery cells 20. Preferably, when the width D2 of the first protective strip 412 is greater than or equal to the extension width D4 of the shoulder 207, the first protective strip 412 can support two adjacent battery cells 2 at the same time, without the problem that only one battery cell can be supported due to offset to result in poor structural stability of the battery 100 due to uneven force. The width D2 of the first protective strip 412 is less than or equal to 2 times the width D4 of the shoulder 207, so that the first protective strip 412 can only be in contact with the shoulders 207 of two adjacent battery cells 20 while supporting the two adjacent battery cells 20, thereby avoiding coming into contact with the functional region 206 and affecting the function of the battery cells 2.

Similar to the first protective strip 412, the width D3 of the second protective strip 413 may be greater than or equal to 0.5 times the extension width D4 of the shoulder 207 and less than or equal to 2 times the width D4 of the shoulder 207.

In some embodiments, as shown in Figs. 147 and 148, the protective assembly 40 further includes a main plate 42. The main plate 42 is disposed between the protective strip 41 and the bottom wall 102 of the accommodating cavity 10a to absorb and disperse external impact forces in the horizontal direction. The protective strip 41 protrudes from the main plate 42 in the vertical direction, and the protective strip 41 can form a bump. For example, the box 10 includes a bottom cover 12, and the wall of the bottom cover 12 facing the battery cell 20 forms the bottom wall 102, and the main plate 42 is disposed between the protective strip 41 and the bottom cover 12.

By providing the main plate 42, multiple protective strips 41 in the protective assembly 40 can be combined into a whole. Furthermore, by providing the main plate 42 extending along the length direction, the force on the protective assembly 40 can also be dispersed, so as to increase the structural strength of the battery 100.

In some examples, the protective assembly 40 can also be called a carrying assembly, and the protective strip 41 can also be called a carrying strip, and the carrying assembly includes the main plate and the carrying strip.

Optionally, in order to avoid affecting the electrical connection between the battery cells 20, the protective assembly 40 may be an insulating member. It can be understood that the insulating member indicates that the protective assembly 40 may be made entirely of insulating materials, or may be an object whose surface is covered with an insulating material (such as an insulating coating) to exhibit insulating properties as a whole. When the protective assembly 40 is an object whose surface is covered with an insulating material, the core material can be a metallic material, an insulating material, a composite material, etc., and the outer surface of the core material is covered with an insulating material. At the same time, the protective strip 41 and the main plate 42 should have a certain degree of hardness and elasticity, so as to support the battery cells 20 while producing a certain amount of deformation when being impacted to protect the battery cells 20.

Optionally, the protective strip 41 and the main plate 42 can be integrally molded to facilitate the manufacture of the protective assembly 40. The protective strip 41 and the main plate 42 can also be detachably connected to each other to facilitate adjusting the position of the protective assembly 40 according to the arrangement of the battery cells 20, so that the protective assembly 40 can be used in a wider range of applications.

In some embodiments, the main plate 42 is fixedly connected to the bottom cover 12 to increase the structural solidity of the battery 100. Optionally, the main plate 42 can also abut against the bottom wall 102 of the accommodating cavity 10a, for example, the main plate 42 abuts against the bottom cover 12, which is not limited in the embodiments of the present application.

In some embodiments, as shown in Fig. 122, in the vertical direction z, there is a first distance H3 between the end cover 212 of the battery cell 20 and the bottom wall 102 of the accommodating cavity 10a, and the first distance H3 satisfies 2mm<H3<30mm. When the wall of the bottom cover 12 facing the battery cell 20 forms the bottom wall 102, the distance between the end cover 212 of the battery cell 20 and the bottom cover 12 is also the first distance H3.

When the cover portion 12a of the bottom cover 12 protrudes from the bottom extension surface of the box 10 relative to the mounting portion 12b, the first distance H3 indicates the distance from the side of the battery cell 20 with electrode terminals and pressure relief mechanism to the cover portion 12a in the vertical direction Z. The first distance H3 satisfies 2mm<H3<30mm. Preferably, the first distance H3 satisfies 5mm≤H3≤20mm. Within this value range, it can ensure the battery 100 to have an appropriate volume, so that the battery 100 has good discharge performance.

In some embodiments, the ratio of the first distance H3 to the weight M2 of a single battery cell 20 satisfies 0.2mm/Kg<H3/M2<50mm/Kg.

The ratio H3/M2 of the first distance H3 to the weight M2 of a single battery cell 20 can indicate the energy density and structural strength of the battery 100. When the ratio of the first distance H3 to the weight M2 of a single battery cell 20 is too large, the energy density of the battery 100 will be too low. When the ratio of the first distance H3 to the weight M2 of a single battery cell 20 is too small, the structural strength of the battery 100 will be insufficient, which may lead to safety accidents in collisions. Therefore, H3/M2 satisfies 0.2mm/Kg<H3/M2<50mm/Kg. Preferably, H3/M2 satisfies 0.5mm/Kg≤H3/M2≤20mm/Kg. Within this value range, the battery 100 has good energy density and appropriate structural strength.

In order to verify that the battery 100 whose ratio H3/M2 of the first distance H3 to the weight M2 of a single battery cell 20 is within an appropriate range has good performance, exemplarily, the battery 100 is subjected to a collision test using the collision test apparatus A. As shown in Fig. 151, the collision test apparatus A includes an impact head A1, a launching device A2, and a rack A3. During the test, the battery 100 is placed on the rack A3, so that the impact head A1 is driven by the launching device A2 and collides with the battery 100 at a certain speed. The test conditions can be selected as follows: the collision direction is the vertical direction Z, the collision position is the weak point of the battery 100, and the collision energy is 90J.

Since the battery 100 is applied to an electrical apparatus such as the vehicle 1000, it is mounted on the vehicle 1000 through the top of the box 10, and the bottom of the battery 100 is impacted in the vertical direction Z to simulate the scene after mounting the battery 100 on the vehicle 1000. The weak point of the battery 100 refers to the position where the battery 100 is easily damaged. This point is often within a radius of 240mm from the geometric center of the battery 100. Collision on the weak point of the battery 100 can simulate the state of the battery 100 after the collision at a position with weak structural strength of the battery 100. The impact energy is 90J, which can be equivalent to the impact head A1 impacting the battery 100 at a speed of 4.2m/s. It is understandable that other impact energies can also be used to collide with the battery 100, for example, 120J (collision speed 4.9m/s) or 150J (collision speed 5.5m/s). During the actual experiment, one impact energy can be used to impact the battery 100 multiple times, or multiple impact energies can be used to impact the battery 100 multiple times.

After the battery 100 is impacted with the collision test apparatus A, it is observed at ambient temperature for 2 h to detect whether the battery 100 catches fire or explodes. Optionally, after the battery 100 is subjected to a collision test with the collision test apparatus A, the battery 100 can also be tested for the shell protection level, etc., which is not limited in the embodiments of the present application.

Table 7 shows the test results of the collision test performed on the battery 100 through the above method when the first distance H3, the weight M2 of a single battery cell 20, and the value of H3/M2 adopt different values.

Table 7

|  | H3(mm) | M2(mm) | H3/M2(mm/Kg) | Collision test |
|---|---|---|---|---|
| Embodiment 1 | 5 | 10 | 0.5 | No fire, no explosion |
| Embodiment 2 | 10 | 5 | 2 | No fire, no explosion |
| Embodiment 3 | 15 | 3 | 5 | No fire, no explosion |
| Embodiment 4 | 20 | 2 | 10 | No fire, no explosion |
| Embodiment 5 | 25 | 1 | 25 | No fire, no explosion |
| Comparative Embodiment 1 | 2 | 10 | 0.2 | Fire, explosion |
| Comparative Embodiment 2 | 30 | 1 | 30 | Fire, explosion |
| Comparative Embodiment 3 | 25 | 0.5 | 50 | Fire, explosion |

As shown in Table 7, when 2mm<H3<30mm is satisfied and H3/M2 satisfies 0.2mm/Kg<H3/M2<50mm/Kg, in a collision test of a certain intensity, the battery 100 will not catch fire or explode, and has good safety.

In some embodiments, as shown in Fig. 148, in the height direction Z (that is, the vertical direction) of the box 1, the extension height of the protective strip 41 is the second distance N6, and the second distance N6 satisfies $0.5mm \leq N6 \leq 30mm$.

The protective strip 41 has a certain size in the height direction Z so that it can protrude from the main plate 42 and support the battery cell 20. The second distance N6 is set so that a certain distance can be kept between the end cover 212 of the battery cell 20 and the bottom wall 102, thereby keeping the energy density of the battery 100 moderate.

The ratio N6/M2 of the second distance N6 to the weight M2 of a single battery cell 20 can indicate the energy density and structural strength of the battery 100. When the ratio of the second distance N6 to the weight M2 of a single battery cell 20 is too large, the energy density of the battery 100 will be too low. When the ratio of the second distance N6 to the weight M2 of a single battery cell 20 is too small, the structural strength of the battery 100 will be insufficient and a safety accident may occur in a collision. Therefore, the ratio N6/M2 of the second distance N6 to the weight M2 of a single battery cell 20 satisfies $0.05mm/Kg \leq N6/M2 \leq 50mm/Kg$. Within this value range, the battery 100 has good energy density and appropriate structural strength.

In order to verify that the battery 100 with the ratio N6/M2 of the second distance N6 to the weight M2 of a single battery cell 20 within a suitable range has good performance, the battery 100 may be subjected to a structural strength test. During the structural strength test of the battery 100, exemplarily, the structural strength of the battery 100 may be judged through multiple tests such as a shear strength test and a compressive strength test.

In the shear strength test, exemplarily, the battery 100 can be fixed between the clamps of the shear testing machine, then the detection head of the shear testing machine is used to drive the battery 100 to move along the length direction Y or the width direction X at a speed of 5 mm/min, and the tensile force F exerted by the detection head when the box 1 is damaged is recorded. Taking the projected area of the battery 100 in the height direction Z as the area A, the value of F/A is the shear strength that the battery 100 can withstand.

In the compressive strength test, for example, an extrusion head can be used to apply pressure to the battery 100 in the height direction Z and the length direction Y or the width direction X. The extrusion head moves toward the battery 100 at a speed of 2 m/s, stops moving when the extrusion force reaches 50KN or the deformation of the battery 100 reaches 30%, and is kept for 10 min. After the compressive strength test, the battery 100 is allowed to stand at ambient temperature for 2 h for observation.

Optionally, the structural strength of the battery 100 can also be tested through other structural strength tests, which are not limited in the embodiments of the present application.

Table 8-2 shows the results of the structural strength of the battery 100 tested by the above method when the battery cell 20 is fixed on the protective strip 41 and the second distance N6, the weight M2 of a single battery cell 20 and the value of N6/M2 adopt different values.

Table 8-2

|  | N6(mm) | M2(Kg) | N6/M2(mm/Kg) | Structural strength |
|---|---|---|---|---|
| Embodiment 6 | 0.5 | 10 | 0.05 | Good |
| Embodiment 7 | 5 | 5 | 1 | Good |
| Embodiment 8 | 10 | 4 | 2.5 | Fair |
| Embodiment 9 | 10 | 2 | 5 | Fair |
| Embodiment 10 | 20 | 1 | 20 | Excellent |
| Embodiment 11 | 30 | 0.6 | 50 | Excellent |
| Comparative Embodiment 4 | 0.5 | 5 | 0.04 | Poor |
| Comparative Embodiment 5 | 52 | 1 | 52 | Poor |

As shown in Table 8, when N6 satisfies 0.5mm≤N6≤30mm and N6/M2 satisfies 0.05mm/Kg≤H2/M≤50mm/Kg, the battery 100 has good structural strength in the strength structure test.

In some embodiments, as shown in Figs. 148 and 150, in the vertical direction, the thickness of the protective strip 41 is the second distance N6, because the cover portion 12a of the bottom cover 12 protrudes from the extension surface of the bottom wall 102 of the accommodating cavity 10a relative to the mounting portion 12b, the distance between the cover portion 12a and the mounting portion 12b in the vertical direction is the fourth size D8. The protective assembly 40 is disposed between the battery cell 20 and the bottom cover 12. The protective assembly 40 may have a shape matching the cover portion 12a, and the vertical size of the main plate 42 is the sixth size D10.

In order for the battery 100 to have appropriate energy density and structural strength, the sum of the second distance N6 and the sixth size D10 should be not less than the fourth size D8, that is, N6+D10≥D8 is satisfied. That is to say, in the first direction X, the overall size of the protective assembly 40 should be larger than the distance difference between the cover portion 12a and the mounting portion 12b. In this way, the protective assembly 40 is fixed to the battery cell 20 to keep the distance between the battery cell 20 and the cover portion 12a of the bottom cover 12, and sufficient ejection space is reserved for the pressure relief mechanism 213 when the pressure relief mechanism 213 and the electrode terminal 214 face the bottom cover 12 together.

In some other optional embodiments, the protective assembly 40 abuts against the battery cell 20, and in this case, the second distance N6 satisfies 5mm≤N6≤30mm, and the ratio N6/M2 of the second distance N6 to the weight M2 of a single battery cell 20 satisfies 0.5mm/Kg≤N6/M2≤50mm/Kg, preferably, 1mm/Kg≤N6/M2≤30mm/Kg. Within this value range, the battery has good energy density and appropriate structural strength.

Table 9 shows the results of the collision test performed on the battery 100 by the collision test method described above when the protective assembly 40 abuts against the battery cell 20 and the second distance N6, the weight M2 of a single battery cell 20 and the value of N6/M2 adopt different values.

Table 9

| No. | N6(mm) | M2(Kg) | N6/M2(mm/Kg) | Collision test |
|---|---|---|---|---|
| Embodiment 12 | 5 | 10 | 0.5 | No fire, no explosion |
| Embodiment 13 | 10 | 5 | 2 | No fire, no explosion |
| Embodiment 14 | 15 | 3 | 5 | No fire, no explosion |
| Embodiment 15 | 30 | 1 | 30 | No fire, no explosion |
| Embodiment 16 | 25 | 0.5 | 50 | No fire, no explosion |
| Comparative Embodiment 7 | 3 | 2 | 0.2 | Fire, explosion |
| Comparative Embodiment 8 | 52 | 1 | 52 | Fire, explosion |

As shown in Table 9, when N6 satisfies 5mm≤N6≤30mm and N6/M2 satisfies 0.5mm/Kg≤N6/M2≤50mm/Kg, in a collision test of a certain intensity, the battery 100 will not catch fire or explode, and has good safety.

In some embodiments, as shown in Figs. 130 and 131, the battery 100 further includes a connecting plate 91 and a connector 92. The connecting plate 91 is provided on one side of the box 10 and protrudes along the horizontal direction (for example, the second direction y). The connecting plate 91 and the bottom wall 102 of the accommodating cavity 10a form an accommodating portion 911 in the vertical direction. The connector 92 is disposed in the accommodating portion 911 and connected to the connecting plate 91. The connector 92 is electrically connected to the battery cell 20.

Of course, the connecting plate 91 can also be called an adapter board, and the connector 92 can also be called an adapter.

As shown in Figs. 130 and 131, the connecting plate 91 is a boss protruding from one side of the box 10 in the second direction y, and has a thickness difference from the bottom wall 102 of the accommodating cavity 10a in the vertical direction z. The accommodating portion 911 is a space formed due to the thickness difference and constituted by the connecting surface of the connecting plate 91 and the side of the box 10 connected with it for the connector 92 to be disposed therein. Providing the connector 92 in the accommodating portion 911 can protect the connector 92 and reduce the impact force received by the connector 92 in a collision.

The battery 100 is electrically connected to an external device through the connector 92. Therefore, the connector 92 needs to be electrically connected to the battery cell 20. This indicates that the connector 92 is electrically connected to the battery cell 20 through a current path provided inside the connecting plate 91, so as to obtain the electric energy of the battery cells 20 in the box 10 and supply power to external electrical apparatuses.

Intersection of the horizontal direction and the vertical direction means that the connecting plate 91 can form a certain included angle with the extension direction of the box 10, but cannot be parallel to the box 10, so that the connector 92 can be arranged in the accommodating portion 911 between the connecting plate 91 and the box 10. In the embodiments of the present application, for convenience of explanation, the horizontal direction and the vertical direction are perpendicular to each other as an example; optionally, the horizontal direction and the vertical direction may not be perpendicular to each other.

In some embodiments, the connector 92 does not extend beyond the bottom wall 102 in the vertical direction. As a result, the connector 92 is completely located within the accommodating portion 911, avoiding contact with external devices located in the circumferential direction of the battery 100, and reducing the effect on the connector 92 as it electrically connects the battery cell 20 to the external device.

In some embodiments, the bottom wall of the box 10 is formed with an opening 10c. The box 10 further includes a frame 1 1b distributed along the circumference of the opening 10c. The frames 1 1b are connected to each other to form a frame structure, and the connecting plate 91 is integrally molded with the frame 11b.

In the box 10, the frame 11b and the carrying member 11a are arranged in sequence from top to bottom along the vertical direction. The frame 11b is a plate body extending in the vertical direction and surrounding the carrying member 11a. The opening 10c is formed at the bottom of the box 10 so that there is a space inside the box 10 that can accommodate the battery cells 20. The connecting plate 91 extends from one side of the frame 11b and is integrally molded with the frame 1 1b, thereby increasing the force-bearing strength of the connecting plate 91.

Optionally, the connecting plate 91 may not be integrally molded with the frame 11b, but may be fixedly connected to the frame 1 1b through at least one of welding, bonding, fasteners, or hot-melt self-tapping process. Similarly, the connecting plate 91 and the carrying member 11a, and the frame 11b and the carrying member 11a may also be integrally molded, or may be fixedly connected in the above manner, which is not limited in the embodiments of the present application.

In some embodiments of the present application, as shown in Figs. 130 and 131, the surface of the connecting plate 91 facing the accommodating portion 911 is the first protective surface 911a, the surface of the frame 1 1b facing the accommodating portion 911 is the second protective surface 911b, the connector 92 is connected to the first protective surface 911a, and the connector 92 is spaced apart from the second protective surface 911b.

That is to say, the first protective surface 911a is the side surface of the connecting plate 91 away from the top of the box 10, and the second protective surface 911b is the side surface of the frame 11b of the box 10 close to the connecting plate 91. The first protective surface 911a and the second protective surface 911b are connected to form the accommodating portion 911. The connector 92 extends from the first protective surface 911a in the vertical direction to be overhung in the accommodating portion 911 and is not in contact with the second protective surface 911b, so as to reduce the impact that the connecting plate 91 may receive in a collision.

Optionally, the first protective surface 911a and the second protective surface 911b may be perpendicularly connected to each other, that is, the first protective surface 911a extends along the second direction (the arrangement direction of the multiple battery cells 20), and the second protective surface 911b extends in the vertical direction, so that the first protective surface 911a and the second protective surface 911b are perpendicular to each other, thereby increasing the mounting space of the connector 92 and maximizing the accommodating portion 911.

In some embodiments, as shown in Figs. 130 and 131, in the vertical direction z, the thickness of the connecting plate 91 is the first size D5, the extension height of the connector 92 is the second size D6, and the extension height of the frame 11b is the third size D7. The sum of the first size D5 and the second size D6 is not greater than the third size D7, that is, $D5+D6 \leq D7$, which enables the connector 92 to be completely located in the accommodating portion 911, thereby protecting the connector 92.

In some optional embodiments, the connector 92 may extend along the vertical direction Z and faces the extension surface where the bottom wall 102 of the box 10 is located. Adopting this structure can facilitate the electrical connection between the connector 92 and the external device, and compared with arranging the connector 92 in the horizontal direction, the connector 92 has better force-bearing performance.

In some embodiments, as shown in Figs. 117, 132 and 133, the box 10 further includes a bottom cover 12 disposed at the opening 10c, and the bottom cover 12 is connected to the frame 11b. The bottom cover 12 covers the opening 10c, so that the box 100 has a relatively sealed structure. The bottom cover 12 includes a cover portion 12a and a mounting portion 12b. The mounting portion 12b is provided in the circumferential direction of the cover portion 12a and matches the frame 11b. That is to say, the cover portion 12a covers the opening 10c formed by the frame 11b, and the mounting portion 12b is fixed to the frame 11b to connect the bottom cover 12 and the frame 11b.

In the vertical direction z, the cover portion 12a protrudes from the extension surface of the bottom wall 102 relative to the mounting portion 12b, so that there is a relatively larger distance between the battery cells 20 disposed inside the box 10 and the bottom cover 12, to give room to the bus component 24 or other components between the electrode terminals 214 of the battery cells 20 to prevent the bottom cover 12 from being too close to the electrode terminals 214 of the battery cells 20. It should be understood that the protruding distance of the cover portion 12a relative to the mounting portion 12b should be selected based on the energy density of the battery 100, and it should not be too large to increase the volume of the battery 100 and reduce the energy density of the battery 100.

In addition, when the pressure relief mechanism 213 is disposed toward the bottom wall of the accommodating cavity 10a, the pressure relief mechanism 213 can be disposed toward the opening 10c. When the battery cell 2 is thermally runaway, the pressure relief mechanism 213 erupts toward the bottom cover 12. In this case, the structure in which the cover portion 12a protrudes from the extension surface of the bottom 102 relative to the mounting portion 12b enables the pressure relief mechanism 213 to have a larger eruption space. Moreover, the pressure relief mechanism 213 erupts toward the bottom, that is, the eruption direction is toward the ground, which can increase the safety of the battery 100.

In some embodiments, the bottom cover 12 is detachably connected to the frame 11b to facilitate the assembly of the battery 100. Exemplarily, as shown in Figs. 132 and 133, the bottom cover 12 and the frame 11b are detachably connected through fasteners 13 such as bolts. The bottom cover 12 and the frame 11b can also be fixedly connected in other ways, which is not limited in the embodiments of the present application.

In some embodiments, the box 10 includes a carrying member 11a disposed on the top, and the battery cells 2 are connected to the carrying member 11a.

The carrying member 11a is a plate body extending in the second direction y on the top of the box 10. The carrying member 11 can increase the rigidity of the top of the battery 100 and reduce the possibility of the battery 100 being damaged in a collision. Connecting the battery cell 20 to the carrying member 11a, that is, disposing the battery cell 20 on the top of the battery 100, can increase the rigidity of the top of the battery 100, reduce the possibility of damage to the battery 100 in a collision, and increase the safety of the battery 100.

Optionally, the battery cell 20 can be directly bonded and fixed to the carrying member 11a, or can be fixed to the carrying member 11a in other ways, such as by bolted connection, which is not limited in the embodiments of the present application.

In some embodiments, as shown in Figs. 130 and 131, the side surface of the connecting plate 91 away from the accommodating portion 911 and the side surface of the carrying member 11a away from the opening 10 c are located on the same horizontal plane. That is to say, the side surfaces of the connecting plate 91 and the carrying member 11a at the top of the box 11 are located on the same plane. When the battery 100 is fixed to an external device, the connecting plate 91 and the carrying member 11a can be fixed to the same surface of the external device. Moreover, the side surfaces of the connecting plate 91 and the carrying member 11a being on the same horizontal plane can increase the force-bearing strength of both of them, so that the battery 100 has better force-bearing capacity.

The connecting plate 91 protrudes toward the extension surface of the bottom wall 102 along the vertical direction z, that is, the connecting plate 91 has a certain thickness in the vertical direction. In a collision, the side of the connecting plate 91 away from the box 10 may bear a certain impact force, so that the connecting plate 91 has a certain thickness, which can increase the stiffness of the connecting plate 91 and better protect the connector 92.

Optionally, the connecting plate can be integrally molded with the box 10, or the connecting plate can be positioned and connected to the box 10 through fixed connection methods such as welding connection, bonding connection or FDS connection, which is not specifically limited in the present application.

In some embodiments, as shown in Figs. 117 and 124, the battery 100 includes battery cells 20 and a thermally conductive member 3a. A carrying member 11a is provided on the top of the box 10, and multiple battery cells 20 are arranged along the second direction y, that is, the second direction y is the arrangement direction of a row of battery cells 20 in the battery 100.

The battery cell 20 includes a first wall 201 and a first outer surface m1. The first wall 201 is the wall with the largest surface area in the battery cell 20. The first outer surface m1 is connected to the first wall 201. The thermally conductive member 3a extends along the second direction y and is connected to the first wall 201 of each battery cell 20 in the multiple battery cells 20. In this way, the contact area between the thermally conductive member 3a and the battery cell 20 is larger, which can ensure the connection strength between the thermally conductive member 3a and the battery cell 20. That is to say, the first wall 201 of the battery cell 20 faces the thermally conductive member 3a, that is, the first wall 201 of the battery cell 20 is parallel to the second direction y.

The carrying member 11a is connected to the first outer surface m1 of each battery cell 20 in the multiple battery cells 20. When the battery cell 20 is mounted on an electrical apparatus, the battery cell 20 is located below the carrying member 11a, and the carrying portion 11a is used to hang the battery cell 20.

The carrying member 11a may be the upper cover of the box 10 of the battery 100, or may be a part of the electrical apparatus, such as the chassis of a vehicle 1000. When the carrying member 11a is the chassis of the vehicle 1000, the first outer surface m1 of the battery cell 20 is connected to the carrying member 11a, that is, the first outer surface m1 of the battery cell 20 is connected to the chassis surface of the vehicle 1000. The battery cells 20 are directly connected to the chassis of the vehicle, so that there is no need to provide the upper cover of the box of the battery 100, which saves the space occupied by the upper cover of the box of the battery 100, improves the space utilization of the battery 100, thereby improving the energy density of the battery 10.

In the embodiments of the present application, in the battery 100, the thermally conductive member 3a is connected to the first wall 201 with the largest surface area of each battery cell 20 in a row of multiple battery cells 20 arranged along the second direction y, and the multiple battery cells 20 are connected into a whole through the thermally conductive member 3a. In this case, the battery 100 does not need to be provided with side plates or structures such as beams, which can maximize the space utilization inside the battery 100 and improve the structural strength and energy density of the battery 100. In the battery 10, the carrying member 11a is also connected to the first outer surface m1 of each battery cell 20 of the multiple battery cells 20 arranged along the second direction y, and the first outer surface m1 is connected to the first wall 201. When the battery cell 20 is mounted on an electrical apparatus, the battery cell 20 is located below the carrying member 11a and is hung from the carrying member 11a. In this way, the first outer surface m1 of the battery cell 20 is directly connected to the carrying member 11a, and no space is required between the carrying member 11a and the battery cell 20, further improving the space utilization inside the battery 10 and increasing the energy density of the battery 100. Also, the battery cells 20 are hung from the carrying member 11a, which can improve the structural strength of the battery 100. Therefore, the technical solutions of the embodiments of the present application can improve the performance of the battery 100.

In this case, the electrode terminal 214 can be arranged on the outer surface of the battery cell 20 except the first outer surface m1, that is, the electrode terminal 214 is disposed on the wall that is not the carrying member 11a, so that there is no need to reserve space between the battery cell 20 and the carrying member 11a for the electrode terminals 214, thereby greatly improving the space utilization inside the battery 100 and increasing the energy density of the battery 100. In the examples of Figs. 116, 124 and 152 (a), the electrode terminal 214 is arranged on the second outer surface m2 of the battery cell 20 that is opposite to the first outer surface m1 along the vertical direction z. In the example of Fig. 152 (b), the electrode terminal 214 is arranged on the side wall of the battery cell 20 perpendicular to the second direction y.

In some embodiments, the size T1 of the thermally conductive member 3a in the first direction x and the size T2 of the battery cell 20 in the first direction x satisfy $0 < T1/T2 \leq 7$.

When T1/T2 is too large, the thermally conductive member 3a occupies a large space, which affects the energy density. In addition, the thermally conductive member 3a conducts heat for the battery cell 20 too quickly, which may also cause safety problems. For example, thermal runaway of one battery cell 20 may cause thermal runaway of other battery cells 20 connected to the same thermally conductive member 3a. In the case of $0 < T1/T2 \leq 7$, the energy density of the battery 100 and the safety performance of the battery 100 can be guaranteed.

Optionally, $0 < T1/T2 \leq 1$ is further satisfied in order to further improve the energy density of the battery 100 and guarantee the safety performance of the battery 100.

Optionally, the weight M3 of the thermally conductive member 3a and the weight M2 of the battery cell 20 satisfy $0 < M3/M2 \leq 20$. When M3/M2 is too large, the gravimetric energy density will be lost. In the case of $0 < M3/M2 \leq 20$, the gravimetric energy density of the battery 100 and the safety performance of the battery 100 can be guaranteed.

Further optionally, $0.1 \leq M3/M2 \leq 1$ is satisfied in order to further improve the energy density of the battery 100 and guarantee the safety performance of the battery 100.

In some embodiments, as shown in Fig. 147, the top of the box 10 is provided with a carrying member 11a, and the bottom of the box 10 is provided with a protective assembly 40. The carrying member 11a is fixedly connected to the battery cell 20, and the protective assembly 40 is fixedly connected to the battery cell 20, so as to fix the position of the battery cell 20 and enhance the structural stability of the battery 100.

In this case, both the carrying member 11a and the protective assembly 40 may also be called a supporting plate.

Optionally, the battery cell 20 can be directly bonded to the carrying member 11a and the protective assembly 40 through adhesive, or can be fixedly connected to the carrying member 11a and the protective assembly 40 in other ways.

For ordinary battery cells, the pressure relief mechanism is welded to the shell to fix the pressure relief mechanism to the shell, and when the battery cell is thermally runaway, the pressure relief mechanism is used to release the internal pressure of the battery cell to improve the safety of the battery cell. Taking the pressure relief mechanism as a rupture disc mounted on the end cover of the shell as an example, when the battery cell is thermally runaway, the rupture disc is destroyed to discharge the emissions inside the battery cell to achieve the purpose of releasing the internal pressure of the battery cell. Since the pressure relief mechanism is welded to the shell, cracks may appear at the welding position during long-term use of the battery cell, resulting in a reduction in the strength of the welding position, and it is easy to happen that the welding position is damaged when the pressure inside the battery cell does not reach the initiation pressure of the pressure relief mechanism, leading to failure of the pressure relief mechanism and low reliability of the pressure relief mechanism.

In order to improve the reliability of the pressure relief mechanism, the inventor found through research that the pressure relief mechanism and the battery casing of the battery cell can be an integrally molded structure, that is, a part of the battery casing is used as the pressure relief mechanism. For example, part of the end cover is weakened, so that the strength of that part of the end cover is reduced and a weak region is formed, thereby forming an integrated pressure relief mechanism. In this way, the reliability of the pressure relief mechanism can be effectively improved.

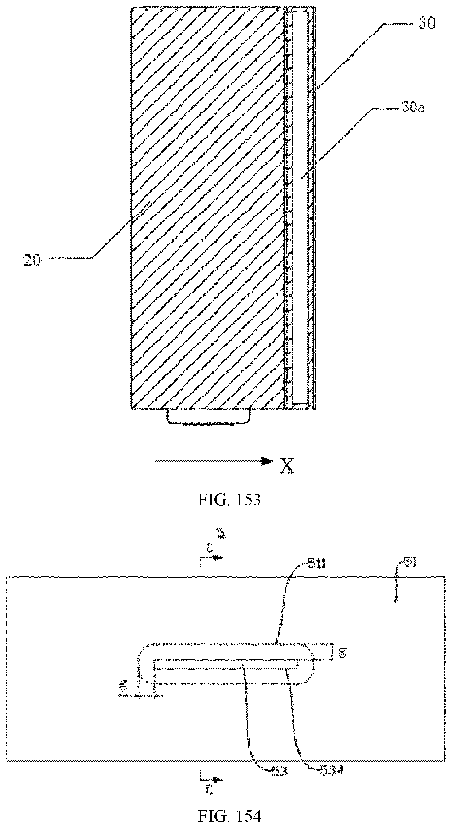

Therefore, in some embodiments, as shown in Figs. 154 to 189, the battery cell 20 further includes a battery casing 212. The battery casing 21 is provided with an electrode assembly 22 inside, and the electrode assembly 22 is electrically connected to the electrode terminal 214. The battery casing 21 is provided with a pressure relief mechanism 213, the pressure relief mechanism 213 is integrally molded with the battery casing 21 to improve the reliability of the pressure relief mechanism 213.

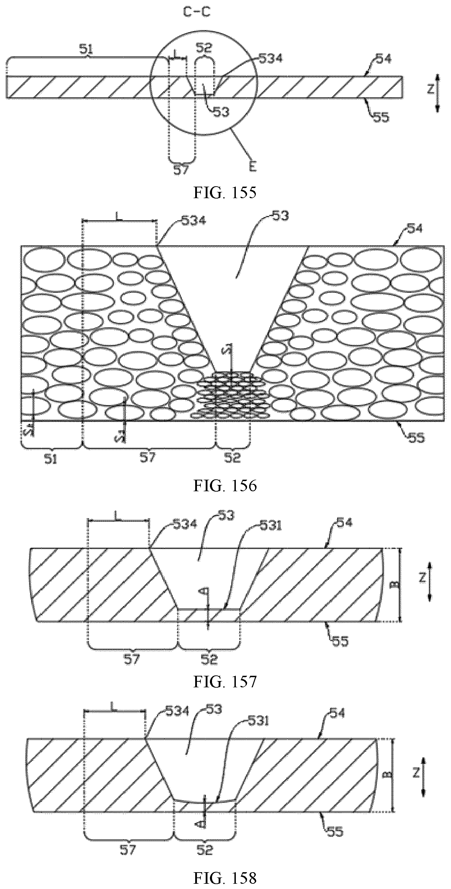

In some embodiments, as shown in Figs. 154 and 155, the battery casing 21 includes an integrally molded non-weak region 51 and a weak region 52. The battery casing 21 is provided with a grooved portion 53, the non-weak region 52 is formed around the grooved portion 53, the weak region 52 is formed at the bottom of the grooved portion 53, and the weak region 52 is configured to be destroyed when the battery cell 20 releases the internal pressure. The pressure relief mechanism 213 includes the weak region 52 to further ensure the reliable use of the pressure relief mechanism 213.

The battery casing 21 is a component that can accommodate the electrode assembly 22 together with other components. The battery casing 21 is a part of the shell 50 of the battery cell 20. The end cover (or called cover plate) of the shell 50 can be the battery casing 21, or the case 211 of the shell 50 can be the battery casing 21. The battery casing 21 may be made of metal, such as copper, iron, aluminum, steel, aluminum alloy, etc. The battery casing 21 may be made of aluminum plastic film.

The weak region 52 is a weaker part of the battery casing than other regions. When the internal pressure of the battery cell 20 reaches a threshold, the weak region 52 of the battery casing 21 can be destroyed to release the internal pressure of the battery cell 20. The weak region 52 can be damaged by rupture, detachment, etc. For example, when the internal pressure of the battery cell 20 reaches a threshold, the weak region 52 ruptures under the action of emissions (gas, electrolyte solution, etc.) inside the battery cell 20 so that the emissions inside the battery cell 20 can be discharged smoothly. The weak region 52 can be in various shapes, such as rectangle, circle, ellipse, ring, arc, U-shape, H-shape, etc. The thickness of the weak region 52 may be uniform or non-uniform.

The weak region 52 is formed at the bottom of the grooved portion 53, and the grooved portion 53 can be molded by stamping, so that the weak region 52 and the non-weak region 51 are integrally molded. After the grooved portion 53 is molded by stamping on the battery casing, the battery casing is thinned in the region where the grooved portion 53 is provided, and the weak region 52 is formed correspondingly. The grooved portion 53 may be one stage of grooves. Along the depth direction of the grooved portion 53, the groove side surface of the grooved portion 53 is continuous. For example, the grooved portion 53 is a groove whose internal space is in the shape of a cuboid, a cylinder, or the like. The grooved portion 53 may also be multiple stages of grooves. The multiple stages of grooves are arranged along the depth direction of the grooved portion 53. Among adjacent two stages of grooves, the inner (deeper position) stage of grooves are provided at the groove bottom surface of the outer (shallower position) stage of grooves. For example, the grooved portion 53 is a stepped groove. During molding, multiple stages of grooves can be formed by stamping step by step along the depth direction of the grooved portion 53, and the weak region 52 is formed at the bottom of the stage of grooves located at the deepest position (innermost) of the multiple stages of grooves.

The non-weak region 51 is formed around the grooved portion 53. The strength of the non-weak region 51 is greater than the strength of the weak region 52. The weak region 52 is more easily damaged than the non-weak region 51. When the grooved portion 53 is formed on the battery casing by stamping, the non-weak region 51 may be the unstamped part of the battery casing. The thickness of the non-weak region 51 may be uniform or non-uniform.

The measurement method of the average grain size can be found in the intercept point method in GB6394-2017, which will not be repeated here. When measuring the average grain size of the weak region 52, the measurement can be performed along the thickness direction of the weak region 52; when measuring the average grain size of the non-weak region 51, the measurement can be performed along the thickness direction of the non-weak region 51.

In Fig. 155, the thickness direction of the weak region 52 is consistent with the thickness direction of the non-weak region 51, both of which are the Z direction.

The inventor also noticed that after forming an integrated pressure relief mechanism on the battery casing, the weak region of the battery casing has poor mechanical properties. Under normal use conditions of the battery cells, the weak regions are prone to fatigue damage due to the long-term change of internal pressure of the battery cells, which affects the service life of the battery cells.

For this reason, in some embodiments, the average grain size of the weak region 52 is $S_1$, and the average grain size of the non-weak region 51 is $S_2$, which satisfies: $0.05 \leq S_1/S_2 \leq 0.9$.

In the embodiments of the present application, the weak region 52 and the non-weak region 51 are integrally molded, which has good reliability. Since it satisfies $S_1/S_2 \leq 0.9$, the average grain size of the weak region 52 is quite different from the average grain size of the non-weak region 51, the average grain size of the weak region 52 is reduced to refine the grains of the weak region 52, which improves the material mechanical properties of the weak region 52, improve the toughness and fatigue resistance of the weak region 52, reduce the risk of the weak region 52 being damaged under normal use conditions of the battery cell 20, and improve the service life of the battery cell 20.

In the case of $S_1/S_2 < 0.05$, the molding difficulty of the weak region 52 increases, and the strength of the weak region 52 is too large, it becomes more difficult for the weak region 52 to be destroyed when the battery cell 20 is thermally runaway, and it is easy to cause untimely pressure relief.

Therefore, in the case of $S_1/S_2 \geq 0.05$, it reduces the difficulty of forming the weak region 52 and improves the timeliness of pressure relief of the battery cell 20 when thermal runaway occurs.

For example, $S_1/S_2$ can be any one of 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, or a range value between any two of them.

In some embodiments, $0.1 \leq S_1/S_2 \leq 0.5$ makes the overall performance of the battery casing 21 better and ensures that the weak region 52 has sufficient strength under normal service conditions of the battery cell 20 while ensuring that the weak region 52 can be destroyed in time when the battery cell 20 is thermally runaway.

For example, $S_1/S_2$ can be any one of 0.1, 0.12, 0.15, 0.17, 0.2, 0.22, 0.25, 0.27, 0.3, 0.32, 0.35, 0.37, 0.4, 0.42, 0.45, 0.47, 0.5, or a range value between any two of them.

In some embodiments, it satisfies $0.4 \mu m \leq S_1 \leq 75 \mu m$.

Si can be any one of 0.4pm, 0.5μm, 1μm, 2μm, 3μm, 4μm, 5μm, 10μm, 15μm, 20μm, 25μm, 28μm, 30μm, 35μm, 36μm, 40μm, 45μm, 49μm, 50μm, 55μm, 60μm, 65μm, 70μm, 72μm, 75μm, or a range value between any two of them.

The inventor observes that in the case of Si > 75 μm, the toughness and the fatigue resistance of the weak region 52 are poor; in the case of Si < 0.4 μm, the forming difficulty of the weak region 52 is relatively large, and the strength of the weak region 52 is too large, it becomes more difficult for the weak region 52 to be destroyed when the battery cell 20 is thermally runaway, and it is easy to cause untimely pressure relief.

Therefore, in the case of $0.4 \mu m \leq S_1 \leq 75 \mu m$, on the one hand, it reduces the difficulty of forming the weak region 52 and improves the timeliness of pressure relief of the battery cell 20 when thermal runaway occurs; on the other hand, it improves the toughness and fatigue resistance of the weak region 52, reducing the risk of the weak region 52 being damaged under normal use of the battery cell 20.

In some embodiments, it satisfies $1 \mu m \leq S_1 \leq 10 \mu m$.

Si can be any one of 1μm, 1.5μm, 1.6μm, 2μm, 2.5μm, 2.6μm, 3μm, 3.5μm, 3.6μm, 4μm, 4.5μm, 4.6μm, 5μm, 5.5μm, 5.6μm, 6μm, 6.5μm, 6.6μm, 7μm, 7.5μm 7.6μm, 8μm, 8.5μm, 8.6μm, 9μm, 9.5μm, 9.6μm, 10μm, or a range value between any two of them.

In the embodiment, $1 \mu m \leq S_1 \leq 10 \mu m$ makes the overall performance of the battery casing 212 better and ensures that the weak region 52 has sufficient strength under normal service conditions of the battery cell 20 while ensuring that the weak region 52 can be destroyed in time when the battery cell 20 is thermally runaway.

In some embodiments, it satisfies $10 \mu m \leq S_2 \leq 150 \mu m$.

$S_2$ can be any one of 10μm, 15μm, 20μm, 25μm, 30μm, 35μm, 40μm, 45μm, 50μm, 55μm, 60μm, 65μm, 70μm, 75μm, 80μm, 85μm, 90μm, 95μm, 100μm, 105μm, 110μm, 115μm, 120μm, 125μm, 130μm, 135μm, 140μm, 145μm, 150μm, or a range value between any two of them.

Further, it satisfies $30 \mu m \leq S_2 \leq 100 \mu m$.

$S_2$ can be any one of 30μm, 32μm, 35μm, 37μm, 40μm, 42μm, 45μm, 47μm, 50μm, 52μm, 55μm, 57μm, 60μm, 62μm, 65μm, 67μm, 70μm, 72μm, 75μm, 77μm, 80μm, 82μm, 85μm, 87μm, 90μm, 92μm, 95μm, 97μm, 100μm, or a range value between any two of them.

In some embodiments, the minimum thickness of the weak region is $A_1$, which satisfies: $1 \leq A_1/S_1 \leq 100$.

$A_1/S_1$ can be any one of 1, 2, 4, 5, 10, 15, 20, 21, 22, 23, 25, 30, 33, 34, 35, 37, 38, 40, 45, 50, 55, 60, 65, 70, 75, 80, 85, 90, 93, 94, 95, 100, or a range value between any two of them.

In the case of $A_1/S_1 < 1$, in the thickness direction of the weak region 52, the number of grain layers of the weak region 52 is too small, the fatigue strength of the weak region 52 is too small; in the case of $A_1/S_1 > 100$, in the thickness direction of the weak region 52, the number of grain layers of the weak region 52 is too large, and the strength of the weak region 52 is too large, which easily leads to the risk that the weak region 52 cannot be damaged in time when the battery cell 20 is thermally runaway.

Therefore, in the case of $1 \leq A_1/S_1 \leq 100$, on the one hand, it makes the weak region 52 have more grain layers in the thickness direction, improves the fatigue resistance of the weak region 52, and reduces the risk of the weak region 52 being damaged under the normal use of the battery cell 20; on the other hand, it makes that the weak region 52 can be destroyed in a more timely manner when the battery cell 20 is thermally runaway, so as to achieve the purpose of timely pressure relief.

In some embodiments, it satisfies $5 \leq A_1/S_1 \leq 20$.

$A_1/S_1$ can be any one of 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, or a range value between any two of them.

In the embodiment, $5 \leq A_1/S_1 \leq 20$ makes the overall performance of the battery casing better and ensures that the weak region 52 can be destroyed in time when the battery cell 20 is thermally runaway, and ensures that the weak region 52 has sufficient fatigue resistance under normal service conditions of the battery cell 20, which increases the service life of the battery cell 20.

In some embodiments, the minimum thickness of the weak region is $A_1$, and the hardness of the weak region is Bi, which satisfies: $5HBW/mm \leq B_1/A_1 \leq 10000HBW/mm$.

Bi/Ai can be any one of 5HBW/mm, 6HBW/mm, 7HBW/mm, 20HBW/mm, 50HBW/mm, 61HBW/mm, 62HBW/mm, 63HBW/mm, 64HBW/mm, 75HBW/mm, 90HBW/mm, 100HBW/mm, 120HBW/mm, 150HBW/mm, 190HBW/mm, 500HBW/mm, 1000HBW/mm, 1200HBW/mm, 1750HBW/mm, 1800HBW/mm, 2100HBW/mm, 4000HBW/mm, 5000HBW/mm, 8000HBW/mm, 9000HBW/mm, 10000HBW/mm, or a range value between any two of them.

The hardness of the weak region 52 is Brinell hardness in HBW. The measurement method of Brinell hardness can be implemented by referring to the measurement principles in GB/T23.1-2018. During the actual measurement process, the hardness of the weak region 52 can be measured on the inner surface or the outer surface of the weak region 52 in the thickness direction. Taking the battery casing as the end cover 11 of the battery cell 20 as an example, the hardness of the weak region 52 can be measured on the outer surface of the weak region 52 away from the inside of the battery cell 20, and the hardness of the weak region 52 can also be measured on the inner surface of the weak region 52 facing the inside of the battery cell 20.

In the case of Bi/Ai>10000HBW/mm, the weak region 52 is thin and has a large hardness, which results in the weak region 52 being very thin and brittle, the weak region 52 being easily damaged under normal service conditions of the battery cell 20, and the service life of the battery cell 20 being short. In the case of Bi/Ai<5HBW/mm, the weak region 52 is thick and has low hardness, and when the battery cell 20 is thermally runaway, the weak region 52 will be stretched and extended and the timeliness of pressure relief will be poor.

In the embodiment, not only the influence of the thickness of the weak region 52 on the performance of the battery casing is taken into consideration, but also the influence of the hardness of the weak region 52 on the performance of the battery casing is taken into consideration. In the case of $5HBW/mm \leq B_1/A_1 \leq 10000HBW/mm$, the weak region 52 can have sufficient strength under the normal use conditions of the battery cell 20, the weak region 52 will not be easily damaged due to fatigue, and the service life of the battery cell 20 can be improved; it also enables timely pressure relief of the battery casing through the weak region 52 in case of thermal runaway of the battery cell 20, which reduces the risk of explosion of the battery cell 20 and improves the safety of the battery cell 20.

In some embodiments, it satisfies $190HBW/mm \leq B_1/A_1 \leq 4000HBW/mm$.

Bi/Ai can be any one of 190HBW/mm, 250HBW/mm, 280HBW/mm, 300HBW/mm, 350HBW/mm, 400HBW/mm, 450HBW/mm, 500HBW/mm, 600HBW/mm, 700HBW/mm, 875HBW/mm, 1000HBW/mm, 1200HBW/mm, 1500HBW/mm, 1750HBW/mm, 1800HBW/mm, 2000HBW/mm, 2100HBW/mm, 2500HBW/mm, 3000HBW/mm, 3500HBW/mm, 4000HBW/mm, or a range value between any two of them.

In the embodiment, $190HBW/mm \leq B_1/A_1 \leq 4000HBW/mm$ makes the overall performance of the battery casing better and ensures that the weak region 52 has sufficient strength under normal service conditions of the battery cell 20 while ensuring that the weak region 52 can be destroyed in time when the battery cell 20 is thermally runaway. On the premise of ensuring the safety of the battery cell 20, the service life of the battery cell 20 is increased.

In some embodiments, it satisfies $0.02mm \leq A_1 \leq 1.6mm$.

$A_1$ can be any one of 0.02mm, 0.04mm, 0.05mm, 0.06mm, 0.1mm, 0.15mm, 0.2mm, 0.25mm, 0.3mm, 0.35mm, 0.4mm, 0.45mm, 0.5mm, 0.55mm, 0.6mm, 0.7mm, 0.75mm, 0.8mm, 0.85mm, 0.9mm, 0.95mm, 1mm, 1.05mm, 1.1mm, 1.15mm, 1.2mm, 1.25mm, 1.3mm, 1.35mm, 1.4mm, 1.42mm, 1.43mm, 1.45mm, 1.47mm, 1.5mm, 1.55mm, 1.6mm, or a range value between any two of them.

In the case of $A_1 < 0.02mm$, the forming of the weak region 52 is difficult, and the weak region 52 is easy to be damaged in the forming process; when the weak region 52 is >1.6mm, it becomes more difficult for the weak region 52 to be destroyed when the battery cell 20 is thermally runaway, and it is easy to cause untimely pressure relief.

Therefore, in the case of $0.02mm \leq A_1 \leq 1.6mm$, it improves the timeliness of pressure relief of the battery cell 20 when thermal runaway occurs while reducing the difficulty of forming the pressure relief region 56 of the battery casing.

In some embodiments, it satisfies $0.06mm \leq A_1 \leq 0.4mm$.

$A_1$ can be any one of 0.06mm, 0.07mm, 0.08mm, 0.1mm, 0.15mm, 0.18mm, 0.2mm, 0.25mm, 0.3mm, 0.35mm, 0.4mm, or a range value between any two of them.

In the embodiment, in the case of $0.06mm \leq A_1 \leq 0.4mm$, it further reduces the difficulty of forming the weak region 52 and improves the timeliness of pressure relief of the battery cell 20 when thermal runaway occurs.

In some embodiments, the hardness of the weak region is Bi, and the hardness of the non-weak region is $B_2$, which satisfies: $1 < B_1/B_2 \leq 5$.

The hardness of the non-weak region 51 is Brinell hardness in HBW. During the actual measurement process, the hardness of the non-weak region 51 can be measured on the inner surface or the outer surface of the non-weak region 51 in the thickness direction. Taking the battery casing as the end cover 11 of the battery cell 20 as an example, the hardness of the non-weak region 51 can be measured on the outer surface of the non-weak region 51 away from the inside of the battery cell 20, and the hardness of the non-weak region 51 can also be measured on the inner surface of the non-weak region 51 facing the inside of the battery cell 20.

In the embodiment, $B_1 > B_2$ is satisfied, which is equivalent to increasing the hardness of the weak region 52, thereby increasing the strength of the weak region 52 and reducing the risk of the weak region 52 being destroyed under normal use conditions of the battery cell 20.

$B_1/B_2$ can be any one of 1.1, 1.5, 2, 2.5, 3, 3.5, 3.6, 4, 4.5, 5, or a range value between any two of them.

In the case of $B_1/B_2 > 5$, it may be possible to cause the hardness of the weak region 52 to be too high, and the weak region 52 may be difficult to be destroyed when the battery cell 20 is thermally runaway.

Therefore, $B_1/B_2 \leq 5$ reduces the risk that the weak region 52 cannot be destroyed in time when the battery cell 20 is thermally runaway, and improves the safety of the battery cell 20.

In some embodiments, it satisfies $B_1/B_2 \leq 2.5$.

$B_1/B_2$ can be any one of 1.1, 1.11, 1.12, 1.2, 1.25, 1.3, 1.4, 1.5, 1.6, 1.7, 1.71, 1.72, 1.8, 1.9, 2, 2.1, 2.2, 2.3, 2.4, 2.5 or a range value between any two of them.

In the embodiment, $B_1/B_2 \leq 2.5$ can further reduce the risk that the weak region 52 cannot be destroyed in time when the battery cell 20 is thermally runaway.

In some embodiments, it satisfies $5HBW \leq B_2 \leq 150HBW$.

$B_1$ can be any one of 5HBW, 8HBW, 9HBW, 9.5HBW, 10HBW, 15HBW, 16HBW, 19HBW, 20HBW, 30HBW, 40HBW, 50HBW, 52HBW, 52.5HBW, 53HBW, 60HBW, 70HBW, 90HBW, 100HBW, 110HBW, 120HBW, 130HBW, 140HBW, 150HBW, or a range value between any two of them.

In some embodiments, it satisfies $5HBW \leq B_1 \leq 200HBW$.

$B_2$ can be any one of 5HBW, 6HBW, 8HBW, 10HBW, 15HBW, 19HBW, 20HBW, 30HBW, 50HBW, 60HBW, 70HBW, 90HBW, 100HBW, 110HBW, 120HBW, 130HBW, 140HBW, 150HBW, 160HBW, 170HBW, 180HBW, 190HBW, 200HBW, or a range value between any two of them.

In some embodiments, referring to Figs. 157 and 158, Fig. 158 is a partial enlarged view of the battery casing 21 provided by other embodiments of the present application. The minimum thickness of the weak region 52 is $A_1$, and the minimum thickness of the non-weak region 51 is $A_2$, which satisfies: $0.05 \leq A_1/A_2 \leq 0.95$.

The minimum thickness of the weak region 52 is the thickness at the thinnest position of the weak region 52. The minimum thickness of the non-weak region 51 is the thickness at the thinnest position of the non-weak region 51.

As shown in Figs. 157 and 158, the battery casing 21 has a first side surface 54 and a second side surface 55 that are oppositely arranged. The grooved portion 53 is recessed from the first side surface 54 in the direction toward the second side surface 55, and the part of the battery casing that is located between the groove bottom surface 531 of the grooved portion 53 and the second side surface 55 is the weak region 52.

The first side surface 54 and the second side surface 55 can be arranged in parallel or at a small angle. If the first side surface 54 and the second side surface 55 are arranged at a small angle, for example, the angle between them is within 10 degrees, the minimum distance between the first side surface 54 and the second side surface 55 is the minimum thickness of the non-weak region 51; as shown in Figs 157 and 158, if the first side surface 54 and the second side surface 55 are parallel, the distance between the first side surface 54 and the second side 55 is the minimum thickness of the non-weak region 51.

The groove bottom surface 531 of the grooved portion 53 may be a plane or a curved surface. If the groove bottom surface 531 of the grooved portion 53 is a plane, the groove bottom surface 531 of the grooved portion 53 and the second side surface 55 may be parallel, or may be arranged at a small angle. If the groove bottom surface 531 of the grooved portion 53 and the second side surface 55 are arranged at a small angle, for example, the angle between them is within 10 degrees, the minimum distance between the groove bottom surface 531 of the grooved portion 53 and the second side surface 55 is the minimum thickness of the weak region 52; as shown in Fig. 157, if the groove bottom surface 531 of the grooved portion 53 is parallel to the second side surface 55, the distance between the groove bottom surface 531 of the grooved portion 53 and the second side surface 55 is the minimum thickness of the weak region 52. As shown in Fig. 158, if the groove bottom surface 531 of the grooved portion is a curved surface, for example, the groove bottom surface 531 of the grooved portion 53 is an arc surface, the minimum distance between the groove bottom surface 531 of the grooved portion 53 and the second side surface 55 is the minimum thickness of the weak region 52.

For example, $A_1/A_2$ can be any one of 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9, 0.95, or a range value between any two of them.

In the case of $A_1/A_2<0.05$, the strength of the weak region 52 may be insufficient. In the case of $A_1/A_2>0.95$, the weak region 52 may not be easily damaged when the battery cell 20 is thermally runaway, and pressure relief is not timely, causing the battery cell 20 to explode. Therefore, $0.05 \leq A_1/A_2 \leq 0.95$ can not only reduce the probability of the weak region 52 rupturing under normal use conditions of the battery cell 20, but also reduce the probability of the battery cell 20 exploding when thermal runaway occurs.

In some embodiments, it satisfies $0.12 \leq A_1/A_2 \leq 0.8$.

$A_1/A_2$ can be any one of 0.12, 0.13, 0.14, 0.15, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77, 0.8, or a range value between any two of them.

In the embodiment, $0.12 \leq A_1/A_2 \leq 0.8$ makes the overall performance of the external components better and ensures that the weak region 52 has sufficient strength under normal service conditions of the battery cell 20 while ensuring that the weak region 52 can be destroyed in time when the battery cell 20 is thermally runaway. When forming the grooved portion 53 by stamping, controlling $A_1/A_2$ between 0.12 and 0.8 can make it easier to satisfy $S_1/S_2 \leq 0.5$ to achieve the purpose of refining the grains of the weak region 52.

In some embodiments, it satisfies $0.2 \leq A_1/A_2 \leq 0.5$.

$A_1/A_2$ can be any one of 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a range value between any two of them.

In the embodiment, by controlling $A_1/A_2$ between 0.2 and 0.5, the strengthening effect of grain refinement on the weak region 52 will be better than the weakening effect of thickness reduction on the weak region 52, so that the weak region 52 has better anti-fatigue performance, which further reduces the risk of the weak region 52 being destroyed under normal use conditions of the battery cell 20, and ensures that the weak region 52 is destroyed in time when the battery cell 20 is thermally runaway, improving the timeliness of pressure relief.

In some embodiments, it satisfies $0.02mm \leq A_1 \leq 1.6mm$. Further, it satisfies $0.06mm \leq A_1 \leq 0.4mm$.

In some embodiments, it satisfies $1mm \leq A_2 \leq 5mm$. $A_2$ can be any one of 1mm, 2mm, 3mm, 4mm, 5mm, or a range value between any two of them.

In the case of $A_2>5mm$, the thickness of the non-weak region 51 is large, the battery casing uses more materials, the weight of the battery case is large, and the economy is poor. In the case of $A_2<1mm$, the thickness of the non-weak region 51 is small, and the battery casing has poor resistance to deformation. Therefore, $1_{mm} \leq A_2 \leq 5mm$ makes the battery casing more economical and has good resistance to deformation.

Further, it satisfies $1.2mm \leq A_2 \leq 3.5mm$.

$A_2$ can be any one of 1.2mm, 1.25mm, 1.3mm, 1.4mm, 1.5mm, 1.6mm, 1.7mm, 1.8mm, 1.9mm, 2mm, 2.1mm, 2.2mm, 2.3mm, 2.4mm, 2.5mm, 2.6mm, 2.7mm, 2.8mm, 2.9mm, 3mm, 3.1mm, 3.2mm, 3.3mm, 3.4mm, 3.5mm, or a range value between any two of them.

In the embodiment, it satisfies $1.2mm \leq A_2 \leq 3.5mm$, so that the battery casing has better economy and deformation resistance. Further, it satisfies $2mm \leq A_2 \leq 3mm$.

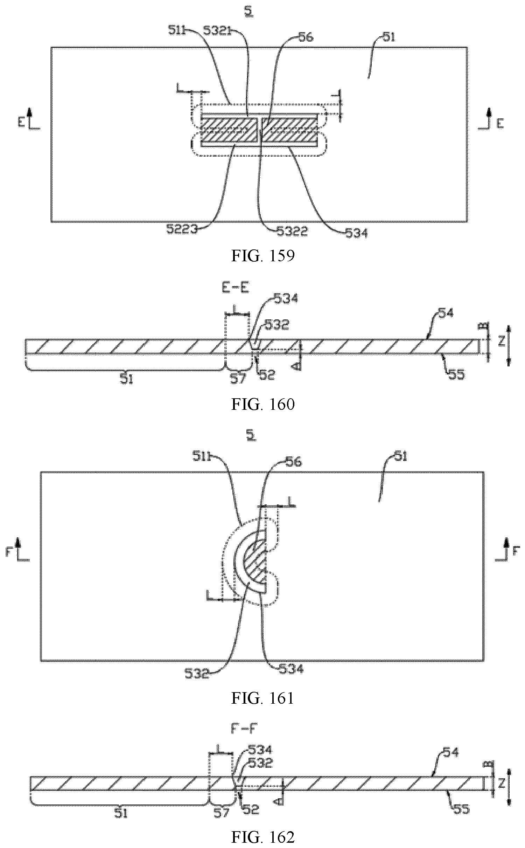

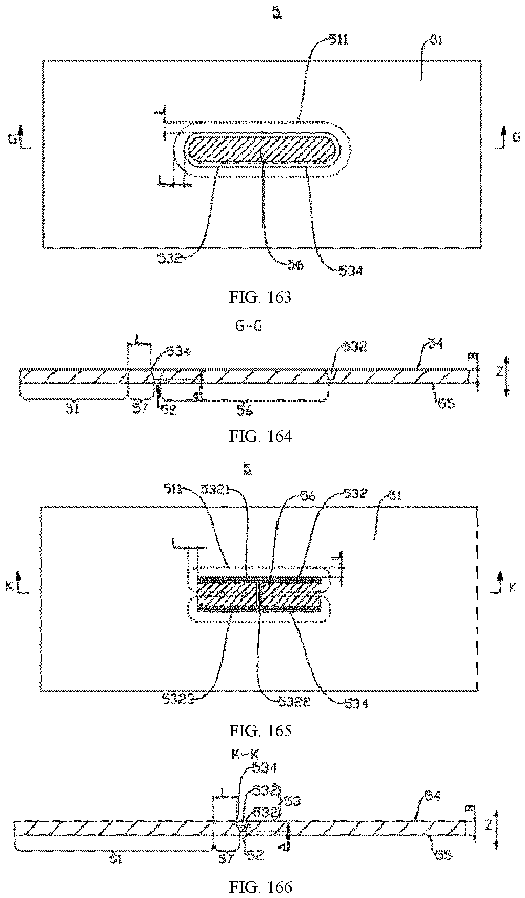

In some embodiments, referring to Fig. 159, Fig. 159 is a schematic structural diagram of the battery casing 21 provided in some embodiments of the present application (showing one stage of scored grooves 532); Fig. 160 is an E-E cross-sectional view of the battery casing 21 shown in Fig. 159; Fig. 161 is a schematic structural diagram of the battery casing 21 provided in some embodiments of the present application (showing one stage of scored grooves 532); Fig. 162 is an F-F cross-sectional view of the battery casing shown in Fig. 161; Fig. 159 is a schematic structural diagram of the battery casing provided in some other embodiments of the present application (showing one stage of scored grooves 532); Fig. 164 is a G-G cross-sectional view of the battery casing shown in Fig. 159. The battery casing 21 has a pressure relief region 56. The grooved portion 53 includes one stage of scored grooves 532. The scored grooves 532 are provided along the edge of the pressure relief region 56. The pressure relief region 56 is configured to be openable with the scored grooves 532 as a boundary, and the weak region 52 forms the bottom of the scored groove 532.

The pressure relief region 56 is a region where the battery casing can be opened after the weak region 52 is destroyed. For example, when the internal pressure of the battery cell 20 reaches a threshold, the weak region 52 cracks, and the pressure relief region 56 opens outward under the action of the emissions inside the battery cell 20. After the pressure relief region 56 is opened, a discharge port can be formed in the battery casing at a position corresponding to the pressure relief region 56, and the emissions inside the battery cell 20 can be discharged through the discharge port to release the pressure inside the battery cell 20.

The scored groove 532 can be formed on the battery casing by stamping. There are only one stage of scored grooves 532 in the grooved portion 53, and the one stage of scored grooves 532 can be formed by single stamping. The scored groove 532 can be a groove of various shapes, such as annular groove, arc groove, U-shaped groove, H-shaped groove. The weak region 52 is formed at the bottom of the scored groove 532, and the shape of the weak region 52 is the same as the shape of the scored groove 532. For example, the weak region 52 is a U-shaped groove, and the weak region 52 extends along a U-shaped track.

In the embodiment, the weak region 52 forms the bottom of the scored groove 532. When the weak region 52 is destroyed, the pressure relief region 56 can be opened with the weak region 52 as a boundary to achieve pressure relief, which increases the pressure relief region of the battery casing.

In some embodiments, continuing to refer to Figs. 160, 162 and 164, the battery casing 21 has a first side surface 54 and a second side surface 55 arranged oppositely, and the scored groove 532 is recessed from the first side surface 54 in the direction toward the second side surface 55.

The first side surface 54 can be the inner surface of the battery casing 21 facing the inside of the battery cell 20, and the second side surface 55 can be the outer surface of the battery casing away from the inside of the battery cell 20; or the first side surface 54 can be the outer surface of the battery casing away from the battery cell 20, and the second side surface 55 is the inner surface of the battery casing facing the interior of the battery cell 20. For example, the first side surface 54 is parallel to the second side surface 55, and the minimum thickness of the non-weak region 51 is the distance between the first side surface 54 and the second side surface 55.

The groove bottom surface of the scored groove 532 is the groove bottom surface 531 of the grooved portion. The part of the battery casing 21 between the groove bottom surface of the scored groove 532 and the second side surface 55 is the groove bottom wall of the scored groove 532, and the groove bottom wall of the scored groove 532 is the weak region 52.

In the embodiment, the grooved portion 53 only includes one stage of scored grooves 532, the scored grooves 532 constitute the grooved portion 53, the grooved portion 53 has one stage of grooves, and the structure is simple. During forming, the scored groove 532 can be formed on the first side surface 54, which makes the forming simple, improves production efficiency, and reduces production costs.

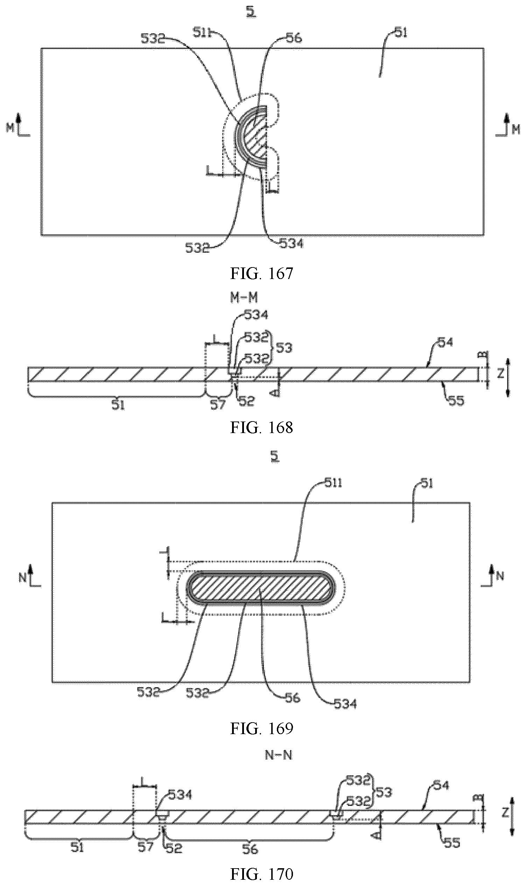

In some embodiments, referring to Figs. 165 to 170, Fig. 165 is a schematic structural diagram of the battery casing 21 provided in some embodiments of the present application (showing two stages of scored grooves 532); Fig. 166 is a K-K cross-sectional view of the battery casing 21 shown in Fig. 165; Fig. 167 is a schematic structural diagram of the battery casing provided in some further embodiments of the present application (showing two stages of scored grooves 532); Fig. 168 is an M-M cross-sectional view of the battery casing shown in Fig. 167; Fig. 169 is a schematic structural diagram of the battery casing provided in some other embodiments (showing two stages of scored grooves 532); Fig. 170 is an N-N cross-sectional view of the battery casing shown in Fig. 169. The battery casing 21 includes a first side surface 54 and a second side surface 55 that are oppositely arranged. The grooved portion 53 includes multiple stages of scored grooves 532. The multiple stages of scored grooves 532 are sequentially provided on the battery casing along the direction from the first side surface 54 to the second side surface 55, and the weak region 52 is formed at the bottom of the stage of scored grooves 532 farthest from the first side surface 54. The battery casing has a pressure relief region 56, and the scored grooves 532 are provided along the edge of the pressure relief region 56. The pressure relief region 56 is configured to be open with the stage of scored grooves 532 farthest from the first side surface 54 as a boundary.

The grooved portion 53 includes multiple stages of scored grooves 532. It can be understood that the grooved portion 53 has multiple stages of grooves. Each stage of scored grooves 532 are provided along the edge of the pressure relief region 56, and the multiple stages of scored grooves 532 have the same shape. There may be two, three, four or more stages of scored grooves 532 in the grooved portion 53. Each stage of scored grooves 532 can be formed on the battery casing by stamping. During forming, the scored grooves 532 of various stages can be formed by stamping sequentially along the direction from the first side surface 54 to the second side surface 55. When forming the multiple stages of scored grooves 532 by stamping, the multiple stages of scored grooves 532 can be formed correspondingly through multiple times of stamping, and one stage of scored grooves 532 are formed once every stamping. The scored groove 532 can be a groove of various shapes, such as annular groove, arc groove, U-shaped groove, H-shaped groove.

The weak region 52 is formed at the bottom of the stage of scored grooves 532 farthest from the first side surface 54, and the stage of scored grooves 532 farthest from the first side surface 54 are the deepest (innermost) stage of scored grooves 532. Among adjacent two stages of scored grooves 532, the stage of scored grooves 532 away from the first side surface 54 are disposed on the bottom surface of the stage of scored grooves 532 close to the first side surface 54. The part of the battery casing between the groove bottom surface of the stage of scored grooves 532 farthest from the first side surface 54 and the second side surface 55 is the groove bottom wall of the stage of scored grooves 532 farthest from the first side surface 54, and the groove bottom wall is the weak region 52. The groove bottom surface of the stage of scored grooves 532 farthest from the first side surface 54 is the groove bottom surface 531 of the grooved portion.

During forming, multiple stages of scored grooves 532 can be formed on the battery casing step by step, which can reduce the forming depth of each stage of scored grooves 532, thereby reducing the forming force that the battery casing receives when forming each stage of scored grooves 532, reducing the risk of cracks in the battery casing, so that the battery casing is less likely to fail due to cracks at the position where the scored groove 532 is provided, thereby increasing the service life of the battery casing.

In some embodiments, referring to Figs. 166, 168, and 170, the stage of scored grooves 532 farthest from the second side surface 55 are recessed from the first side surface 54 toward the second side surface 55.

Taking the case where there are two stages of scored grooves 532 in the grooved portion 53 as an example, the two stages of scored grooves 532 are the first-stage scored grooves and the second-stage scored grooves. The first-stage scored grooves are provided on the first side surface 54, that is, the first-stage scored grooves are recessed from the first side surface 54 toward the second side surface 55, and the second-stage scored grooves are provided on the groove bottom surface of the first-stage scored grooves; that is, the second-stage scored grooves are recessed from the groove bottom surface of the first-stage scored grooves toward the second side surface 55. The first-stage scored grooves are the outermost stage of scored grooves 532, and the second-stage scored grooves are the innermost stage of scored grooves 532.

The grooved portion 53 is composed of multiple stages of scored grooves 532. During forming, the multiple stages of scored grooves 532 can be gradually processed in the direction from the first side surface 54 to the second side surface 55 with high forming efficiency.

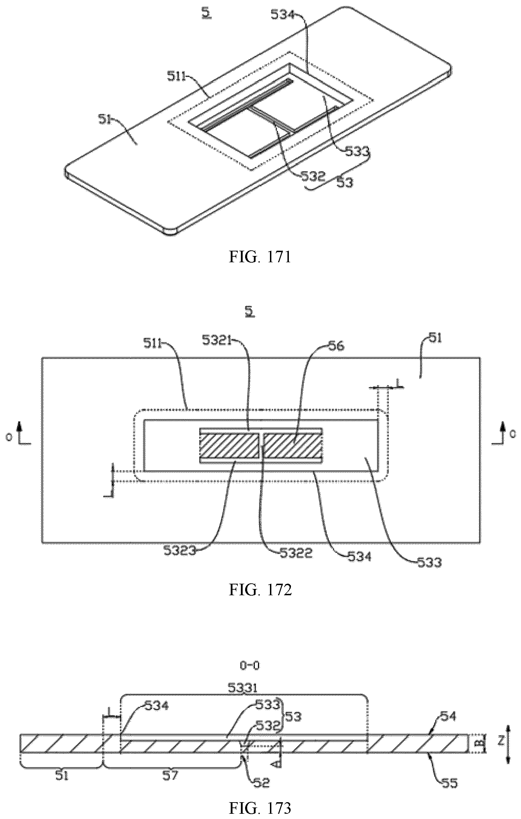

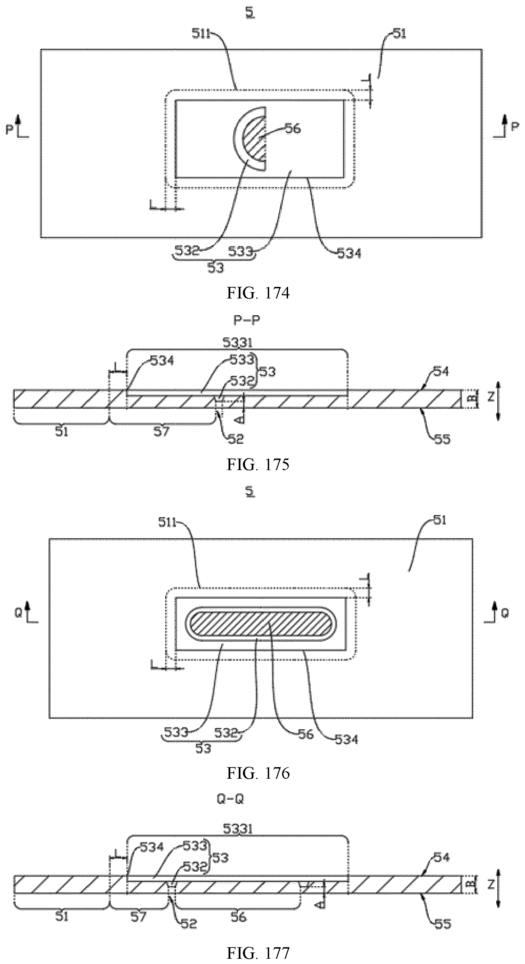

In some embodiments, referring to Figs. 171 to 177, Fig. 171 is an axonometric view of the battery casing provided in some embodiments of the present application; Fig. 172 is a schematic structural diagram of the battery casing shown in Fig. 171 (showing one stage of scored grooves 532 and one stage of sunk grooves 533); Fig. 173 is an O-O cross-sectional view of the battery casing shown in Fig. 172; Fig. 174 is a schematic structural diagram of the battery casing provided in some further embodiments of the present application (showing one stage of scored grooves 532 and one stage of sunk grooves 533); Fig. 175 is a P-P cross-sectional view of the battery casing shown in Fig. 174; Fig. 176 is a schematic structural diagram of the battery casing provided in some other embodiments of the present application (showing one stage of scored grooves 532 and one stage of sunk grooves 533); Fig. 177 is a Q-Q cross-sectional view of the battery casing shown in Fig. 176. The battery casing 21 includes a first side surface 54 and a second side surface 55 that are oppositely arranged. The grooved portion 53 further includes one stage of sunk grooves 533. The sunk grooves 533 are recessed from the first side surface 54 toward the second side surface 55, and the pressure relief region 56 is formed on the groove bottom wall 5331 of the sunk groove.

It should be noted that, regardless of whether there are one stage or multiple stages of scored grooves 532 in the grooved portion 53, the grooved portion 53 may include one stage of sunk grooves 533. It can be understood that the grooved portion 53 has both scored grooves 532 and sunk grooves 533, and the grooved portion 53 has multiple stages of grooves. The sunk grooves 533 and the scored grooves 532 are provided along the direction from the first side surface 54 to the second side surface 55. During forming, the sunk grooves 533 can be formed on the battery casing first, and then the scored grooves 532 can be formed on the groove bottom wall 5331 of the sunk grooves.

The groove bottom wall 5331 of the sunk groove is the part of the battery casing located below the groove bottom surface of the sunk groove 533. After the sunk groove 533 is formed on the first side surface 54, the remaining part of the battery casing in the region where the sunk groove 533 is provided is the groove bottom wall 5331 of the sunk groove. As shown in Figs. 173, 175, and 177, the part of the battery casing 21 located between the groove bottom surface of the sunk groove 533 and the second side surface 55 is the groove bottom wall 5331 of the sunk groove. The pressure relief region 56 may be a part of the groove bottom wall 5331 of the sunk groove.

The sunk groove 533 is provided to ensure that with a certain thickness of the final weak region 52, the depth of the scored groove 532 can be reduced, thereby reducing the forming force that the battery casing receives when the scored groove 532 is formed, and reducing the risk of cracks of the battery casing. In addition, the sunk groove 533 can provide an avoidance space for the pressure relief region 56 during the opening process. Even if the first side surface 54 is blocked by an obstacle, the pressure relief region 56 can still be opened to release pressure.

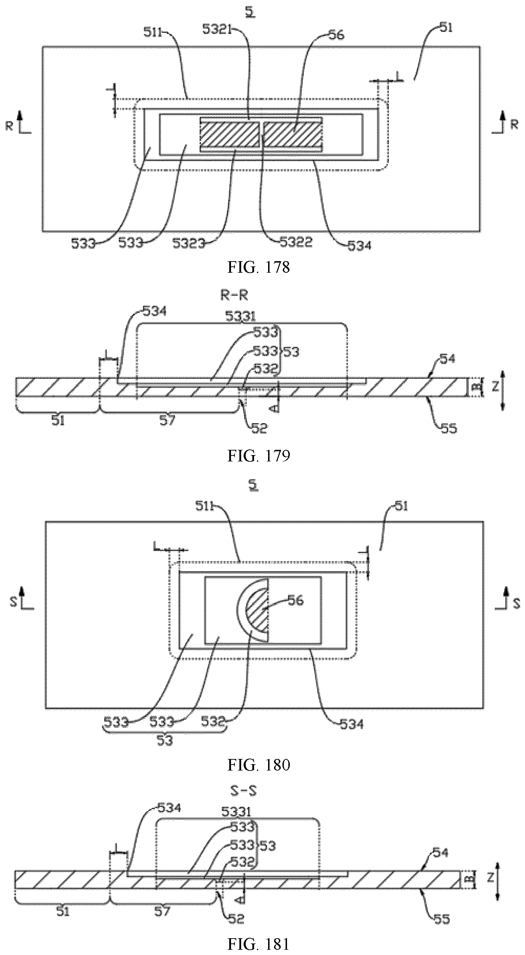

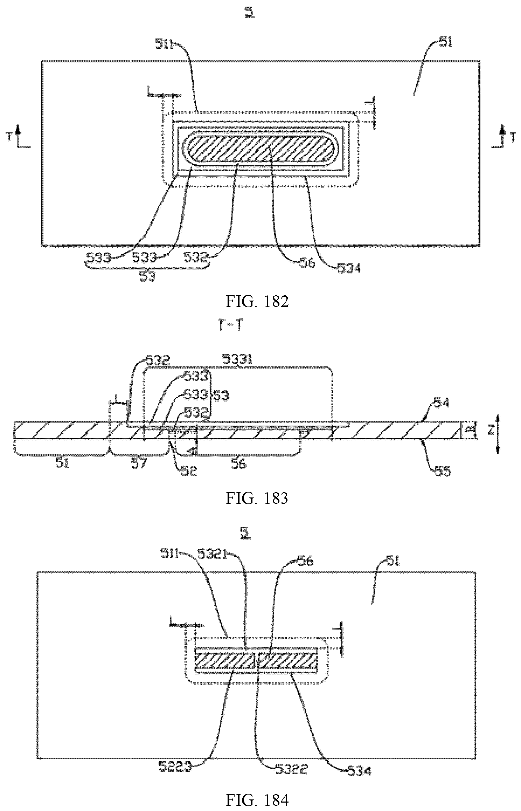

In some embodiments, referring to Fig. 178 to 183, Fig. 178 is a schematic structural diagram of the battery casing provided in some embodiments of the present application (showing one stage of scored grooves 532 and two stages of sunk grooves 533); Fig. 179 is an R-R cross-sectional view of the battery casing shown in Fig. 178; Fig. 180 is a schematic structural diagram of the battery casing provided in some further embodiments of the present application (showing one stage of scored grooves 532 and two stages of sunk grooves 533); Fig. 181 is an S-S cross-sectional view of the battery casing shown in Fig. 180; Fig. 182 is a schematic structural diagram of the battery casing provided in some other embodiments of the present application (showing one stage of scored grooves 532 and two stages of sunk grooves 533); Fig. 183 is a T-T cross-sectional view of the battery casing shown in Fig. 182. The battery casing includes a first side surface 54 and a second side surface 55 that are oppositely arranged. The grooved portion 53 further includes multiple stages of sunk grooves 533. The multiple stages of sunk grooves 533 are sequentially provided on the battery casing 21 along the direction from the first side surface 54 to the second side surface 55, the stage of sunk grooves 533 farthest from the second side surface 55 are recessed from the first side surface 54 toward the second side surface 55, and the pressure relief region 56 is formed on the groove bottom wall 5331 of the stage of sunk grooves farthest from the first side surface 54.

It should be noted that, regardless of whether there are one stage or multiple stages of scored grooves 532 in the grooved portion 53, the grooved portion 53 may include multiple stages of sunk grooves 533. It can be understood that the grooved portion 53 has both scored grooves 532 and sunk grooves 533, and the grooved portion 53 has multiple stages of grooves. The sunk grooves 533 and the scored grooves 532 are provided along the direction from the first side surface 54 to the second side surface 55. During forming, multiple stages of sunk grooves 533 can be formed on the battery casing first, and then the scored grooves 532 can be formed on the groove bottom wall 5331 of the stage of sunk grooves farthest from the first side surface 54.

The stage of sunk grooves 533 farthest from the second side surface 55 are the outermost stage of sunk grooves 533, and the stage of sunk grooves 533 farthest from the first side surface 54 are the innermost stage of sunk grooves 533. The outermost stage of sunk grooves 533 are provided on the first side surface 54, and the outermost stage of sunk grooves 533 are recessed from the first side surface 54 toward the second side surface 55.

The groove bottom wall 5331 of the stage of sunk grooves farthest from the first side surface 54 is the part of the battery casing located below the groove bottom surface of the stage of sunk grooves 533 farthest from the first side surface 54. After multiple stages of sunk grooves 533 are formed on the battery casing, the remaining part of the battery casing in the region of the stage of sunk grooves 533 farthest from the first side surface 54 is the groove bottom wall 5331 of the sunk grooves. As shown in Figs. 179, 181, and 183, the part of the battery casing between the groove bottom surface of the stage of sunk grooves 533 farthest from the first side surface 54 and the second side surface 55 is the groove bottom wall 5331 of the stage of sunk grooves farthest from the first side surface 54. The pressure relief region 56 may be a part of the groove bottom wall 5331 of the stage of sunk grooves farthest from the first side surface 54.

There may be two, three, four or more stages of sunk grooves 533 in the grooved portion 53. Among adjacent two stages of sunk grooves 533, the stage of sunk grooves 533 away from the first side surface 54 are disposed on the bottom surface of the stage of sunk grooves 533 close to the first side surface 54. Along the direction from the first side surface 54 to the second side surface 55, the profile of the groove bottom surface of the multiple stages of sunk groove 533 decreases stage by stage. Each stage of sunk grooves 533 can be formed on the battery casing by stamping. During forming, the sunk grooves 533 of various stages can be formed by stamping sequentially along the direction from the first side surface 54 to the second side surface 55, and then the scored grooves 532 are formed by stamping. Taking the case that there are two stages of sunk grooves 533 and one stage of scored grooves 532 in the grooved portion 53 as an example, during forming by stamping, two times of stamping can be performed first to form the two stages of sunk grooves 533 correspondingly, and then stamping can be performed once to form one stage of scored grooves 532 correspondingly. For example, in Figs. 178 to 183, there are two stages of sunk grooves 533 in the grooved portion 53.

When forming the multiple stages of sunk groove 533, the forming depth of each stage of sunk grooves 533 can be reduced, the forming force on the battery casing when forming each stage of sunk grooves 533 can be reduced, and the risk of cracks in the battery casing can be reduced. In addition, the multiple stages of sunk grooves 533 can provide an avoidance space for the pressure relief region 56 during the opening process. Even if the first side surface 54 is blocked by an obstacle, the pressure relief region 56 can still be opened to release pressure.

In some embodiments, the internal space of the sunk groove 533 is a cylinder, a prism, a truncated cone or a truncated pyramid.

The internal space of the sunk groove 533 is the space defined by the groove side surfaces and the groove bottom surface of the sunk groove 533. Among them, the prism may be a triangular prism, a quadrangular prism, a pentagonal prism, a hexagonal prism, etc.; the truncated pyramid may be a triangular truncated pyramid, a quadrangular truncated pyramid, a pentagonal truncated pyramid or a hexagonal truncated pyramid, etc. For example, in Figs. 171 to 183, the internal space of the grooved portion 53 is a quadrangular prism. Specifically, the internal space of the grooved portion 53 is a cuboid.

In the embodiment, the sunk groove 533 has a simple structure and is easy to form, and can provide more avoidance space for the pressure relief region 56 during the opening process.

In some embodiments, referring to Figs. 159, 165, 172, and 178, the scored groove 532 includes a first groove segment 5321, a second groove segment 5322, and a third groove segment 5323. The first groove segment 5321 and the third groove segment 5323 are arranged oppositely. The second groove segment 5322 connects the first groove segment 5321 and the third groove segment 5323. The first groove segment 5321, the second groove segment 5322 and the third groove segment 5323 are arranged along the edge of the pressure relief region 56.

The first groove segment 5321, the second groove segment 5322 and the third groove segment 5323 can all be linear grooves or non-linear grooves, such as arc-shaped grooves. In an embodiment in which the first groove segment 5321, the second groove segment 5322 and the third groove segment 5323 are all linear grooves, it can be understood that the first groove segment 5321, the second groove segment 5322 and the third groove segment 5323 all extend along a straight line, the first groove segment 5321 and the third groove segment 5323 can be arranged in parallel or at an included angle. The first groove segment 5321 and the third groove segment 5323 may both be perpendicular to the second groove segment 5322, or they may not be perpendicular to the second groove segment 5322.

The connection position between the second groove segment 5322 and the first groove segment 5321 can be located at one end of the first groove segment 5321, or can be located at a position offset from one end of the first groove segment 5321. For example, the connection position of the second groove segment 5322 and the first groove section 5321 is located at the midpoint of the first groove segment 5321 in the extension direction. The connection position of the second groove segment 5322 and the third groove segment 5323 can be located at one end of the third groove segment 5323, or can be located at a position offset from the third groove segment 5323. For example, the connection position between the second groove segment 5322 and the third groove segment 5323 is located at the midpoint of the third groove segment 5323 in the extension direction.

It should be noted that in an embodiment in which the grooved portion 53 includes multiple stages of scored grooves 532, it can be understood that among adjacent two stages of scored grooves 532, the first groove segment 5321 of the stage of scored grooves 532 far away from the first side surface 54 is disposed on the groove bottom surface of the first groove segment 5321 of the stage of scored grooves 532 close to the first side surface 54; the second groove segment 5322 of the stage of scored grooves 532 away from the first side surface 54 is disposed on the groove bottom surface of the second groove segment 5322 of the stage of scored grooves 532 close to the first side surface 54; the third groove segment 5323 of the stage of scored grooves 532 far away from the first side surface 54 is disposed on the groove bottom surface of the third groove segment 5323 of the stage of scored grooves 532 close to the first side surface 54.

In the embodiment, the pressure relief region 56 can be opened with the first groove segment 5321, the second groove segment 5322, and the third groove segment 5323 as boundaries, and when the battery cell 20 releases pressure, the pressure relief region 56 can be opened more easily, achieving large-area pressure relief of the battery casing.

In some embodiments, continuing to refer to Figs. 159, 165, 172 and 178, the first groove segment 5321, the second groove segment 5322 and the third groove segment 5323 define two pressure relief regions 56, and the two pressure relief regions 56 are respectively located on both sides of the second groove segment 5322.

Exemplarily, the first groove segment 5321, the second groove segment 5322 and the third groove segment 5323 form an H-shaped scored groove 532, the connection position of the second groove segment 5322 and the first groove segment 5321 is located at the midpoint position of the first groove segment 5321, and the connection position between the third groove segment 5323 and the second groove segment 5322 is located at the midpoint position of the third groove segment 5323. The two pressure relief regions 56 are symmetrically arranged on both sides of the second groove segment 5322.

The two pressure relief regions 56 are respectively located on both sides of the second groove segment 5322, so that the two pressure relief regions 56 are bounded by the second groove segment 5322. After the battery casing ruptures at the position of the second groove segment 5322, the two pressure relief regions 56 can be opened in folio form along the first groove segment 5321 and the third groove segment 5323 to achieve pressure relief, which can effectively improve the pressure relief efficiency of the battery casing.

In other embodiments, the first groove segment 5321, the second groove segment 5322 and the third groove segment 5323 are connected in sequence, and the first groove segment 5321, the second groove segment 5322 and the third groove segment 5323 define a pressure relief region 56.

The first groove segment 5321, the second groove segment 5322 and the third groove segment 5323 are connected in sequence to form a U-shaped scored groove 532.

In some embodiments, the scored groove 532 is a groove that extends along a non-closed trajectory.

A non-closed trajectory refers to a trajectory whose two ends in the extension direction are not connected. The non-closed trajectory can be an arc trajectory, a U-shaped trajectory, etc.

In the embodiment, the scored groove 532 is a groove along a non-closed track, and the pressure relief region 56 can be opened by flipping. After the pressure relief region 56 is opened, it is finally connected to other regions of the battery casing, which reduces the risk of splashing after the pressure relief region 56 is opened.

In some embodiments, referring to Figs. 161, 167, 174 and 180, the scored groove 532 is an arc-shaped groove.

The arc-shaped groove is a groove extending along an arc-shaped trajectory, and the arc-shaped trajectory is a non-closed trajectory. The central angle of the arc-shaped groove may be less than, equal to or greater than 180°.

The arc-shaped groove has a simple structure and is easy to form. During the pressure relief process, the pressure relief region 56 can quickly break along the arc-shaped groove, so that the pressure relief region 56 can be quickly opened.

In some embodiments, referring to Figs. 163, 169, 176, and 182, the scored groove 532 is a groove extending along a closed trajectory.

A closed trajectory refers to a trajectory that is connected at both ends. A closed trajectory can be a circular trajectory, a rectangular trajectory, etc.

During the pressure relief process, the battery casing 21 can rupture along the scored groove 532 so that the pressure relief region 56 can be opened in a detachable manner, thereby increasing the pressure relief area of the battery casing 21 and improving the pressure relief rate of the battery casing 21.

In some embodiments, the scored groove 532 is an annular groove.

The annular groove can be a rectangular annular groove or a circular annular groove.

The annular groove has a simple structure and is easy to form. During the pressure relief process, the battery casing 21 can quickly break along the annular groove, so that the pressure relief region 56 can be quickly opened.

In some embodiments, the area of the pressure relief region 56 is D, which satisfies: $90mm^2 \leq D \leq 1500mm^2$.

In Figs. 159, 161, 163, 165, 167, 169, 172, 174, 176, 178, 180 and 182, the area of the shaded portion is the area of the pressure relief region 56.

It should be noted that in an embodiment in which the grooved portion 53 includes multiple stages of scored grooves 532, the area of the pressure relief region 56 is the area of the region defined by the deepest (innermost) stage of scored grooves 532.

The area D of the pressure relief region 56 may be any one of $90mm^2$, $95mm^2$, $100mm^2$, $150mm^2$, $200mm^2$, $250mm^2$, $300mm^2$, $350mm^2$, $400mm^2$, $450mm^2$, $500mm^2$, $550mm^2$, $600mm^2$, $650mm^2$, $700mm^2$, $750mm^2$, $800mm^2$, $900mm^2$, $950mm^2$, $1000mm^2$, $1050mm^2$, $1100mm^2$, $1150mm^2$, $1200mm^2$, $1250mm^2$, $1300mm^2$, $1350mm^2$, $1400mm^2$, $1450mm^2$, $1500mm^2$, or a range value between any two of them.

When the area D of the pressure relief region 56 is $<90mm^2$, the pressure relief area of the battery casing is small, and the pressure relief timeliness when the battery cell 20 is thermally runaway is poor; in the case of $D > 1500mm^2$, the impact resistance of the pressure relief region 56 is poor, the deformation of the pressure relief region 56 is increased after receiving a force, the weak region 52 is easy to be damaged under the normal use condition of the battery cell 20, and the service life of the battery cell 20 is affected. Therefore, in the case of $90mm^2 \leq$ area D of the pressure relief region 56 $\leq 1500mm^2$, it can not only increase the service life of the battery cell 20, but also improve the safety of the battery cell 20.

Further, it satisfies $150mm^2 \leq$ area D of the pressure relief region 56 $\leq 1200mm^2$. As a result, the overall performance of the battery casing is better, and the battery casing has a large pressure relief area and good impact resistance.

Further, it satisfies $200mm^2 \leq$ area D of the pressure relief region 56 $\leq 1000mm^2$.

Further, it satisfies $250mm^2 \leq$ area D of the pressure relief region 56 $\leq 800mm^2$.

In some embodiments, referring to Figs. 154 to 183, the battery casing 21 has a first side surface 54 and a second side surface 55 arranged oppositely, the grooved portion 53 is recessed from the first side surface 54 toward the second side surface 55, the grooved portion 53 forms an outer edge 534 on the first side surface 54, the region outside the first distance between the battery casing and the outer edge 534 is the non-weak region 51, the first distance is L, L=5mm.

In the embodiment shown in Figs. 159 to 164, the grooved portion 53 only includes one stage of scored grooves 532, the scored grooves 532 are provided on the first side surface 54, and the groove side surface of the scored groove 532 intersects with the first side surface 54 to form the outer edge 534, and the groove surface sides of the scored grooves 532 surround the groove bottom surface of the scored grooves 532. It should be noted that, in the embodiments shown in Fig. 161, since the scored groove 532 is a groove extending along a closed trajectory, the groove side surface of the scored groove 532 intersects with the first side surface 54 to form an inner ring line and an outer ring line located outside the inner ring line, and the outer ring line is the outer edge 534.

In the embodiments shown in Figs. 165 to 170, the grooved portion 53 only includes multiple stages of scored grooves 532, the outermost scored grooves 532 are disposed on the first side surface 54, and the groove side surface of the outermost scored grooves 532 and the first side surface 54 intersect to form the outer edge 534. It should be noted that, in the embodiments shown in Fig. 169, since the scored groove 532 is a groove extending along a closed trajectory, the outermost groove side surface of the scored groove 532 intersects with the first side surface 54 to form an inner ring line and an outer ring line located outside the inner ring line, and the outer ring line is the outer edge 534.

In the embodiments shown in Figs. 172 to 177, the grooved portion 53 further includes one stage of sunk grooves 533, the sunk grooves 533 are provided on the first side surface 54, the groove side surface of the sunk groove 533 intersects with the first side surface 54 to form the outer edge 534, the groove side surfaces of the sunk grooves 533 surround the groove bottom surface of the sunk groove 533. In the embodiments shown in Figs. 178 to 183, the grooved portion 53 further includes multiple stages of sunk grooves 533. The outermost stage of sunk grooves 533 are arranged on the first side surface 54, and the side surface of the outermost stage of grooves and the first side surface 54 intersect to form the outer edge 534.

It can be understood that the distance between the outer edge 534 and the inner edge 511 of the non-weak region 51 is the first distance L, and the shape of the inner edge 511 of the non-weak region 51 can be substantially the same as the shape of the outer edge 534. The direction of the first distance L may be perpendicular to the thickness direction of the non-weak region 51, that is, the first distance may be measured along the thickness direction perpendicular to the non-weak region 51. When measuring the average grain size of the non-weak region 51, the measurement may be made in the region outside the outer edge 534.

In the embodiment, the non-weak region 51 is not easily affected in the process of forming the grooved portion 53, so that the grains of the non-weak region 51 are more uniform.

It should be noted that, as shown in Figs. 159 and 165, in the embodiment in which the first groove segment 5321 and the third groove segment 5323 of the scored groove 532 are arranged oppositely, taking the case where the first groove segment 5321 and the third groove segment 5323 are parallel as an example, when the spacing between the first groove segment 5321 and the third groove segment 5323 is greater than 2*L, the inner edge 511 of the non-weak region 51 is partially located in the pressure relief region 56, so that the pressure relief region 56 is partially located in the non-weak region 51. In other embodiments, referring to Fig. 184, Fig. 184 is a schematic structural diagram of a battery casing provided by other embodiments of the present application. When the spacing between the first groove segment 5321 and the third groove segment 5323 is less than or equal to 2*L, the inner edge 511 of the non-weak region 51 is not located in the pressure relief region 56, and the inner edge 511 of the non-weak region 51 is generally rectangular. Along the width direction of the first groove segment 5321, the spacing between the first groove segment 5321 and the inner edge 511 of the non-weak region 51 is L; along the length direction of the first groove segment 5321, the spacing between the first groove segment 5321 and the inner edge 511 of the non-weak region 51 is L; along the width direction of the third groove segment 5323, the spacing between the third groove segment 5323 and the inner edge 511 of the non-weak region 51 is L; along the length direction of the third groove segment 5323, the spacing between the third groove segment 5323 and the inner edge 511 of the non-weak region 51 is L.

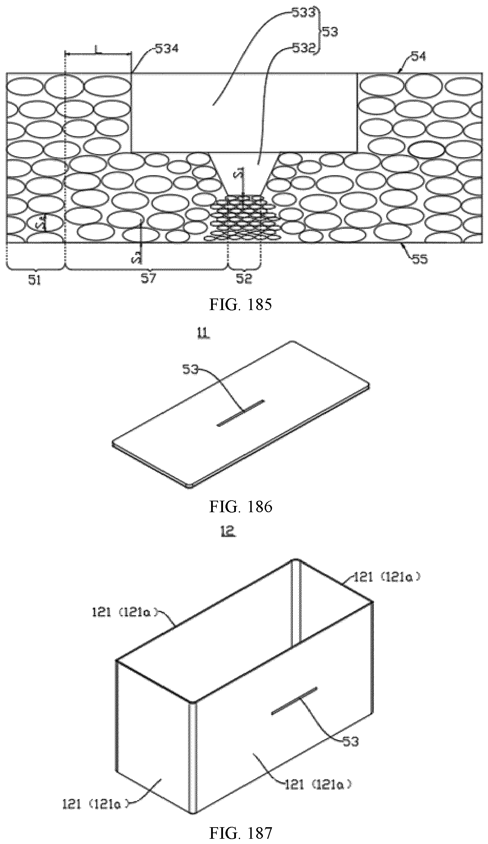

In some embodiments, referring to Fig. 185, Fig. 185 is a grain pattern (schematic diagram) of the battery casing provided by other embodiments of the present application. The battery casing 21 further includes a transition region 57, the transition region 57 connects the weak region 52 and the non-weak region 51, the average grain size of the transition region 57 is $S_3$, which satisfies: $S_3 \leq S_2$.

For example, it satisfies $S_3 > S_1$.

The transition region 57 is the part of the battery casing 21 that connects the weak region 52 and the non-weak region 51. The transition region 57 is arranged around the outer side of the weak region 52, the non-weak region 51 is around the outer side of the transition region 57, and the weak region 52, the transition region 57 and the non-weak region 51 are integrally molded.

The average grain size of the transition region 57 may gradually decrease from the non-weak region 51 to the weak region 52. For example, as shown in Fig. 185, taking the case where the grooved portion 53 includes one stage of sunk grooves 533 and one stage of scored grooves 532 as an example, the average grain size of the transition region 57 located at the outer side region of the sunk groove 533 can be larger than the average grain size of the transition region 57 located at the bottom region of the sunk groove 533, the average grain size of the transition region 57 located at the outer side region of the sunk groove 533 may be less than or equal to the average grain size $S_2$ of the non-weak region 51, and the average grain size of the transition region 57 located at the bottom region of the sunk groove 533 may be larger than the average grain size Si of the weak region 52.

In the embodiment, the transition region 57 plays a role in connecting the weak region 52 and the non-weak region 51, so that the weak region 52 and the non-weak region 51 are integrally molded.

In some embodiments, referring to Figs. 186 and 187, Fig. 186 is a structural schematic diagram of the end cover 11 provided by some embodiments of the present application. The battery casing 21 is an end cover 11, the end cover 11 is used to close the opening of the case 12, and the case 12 is used to accommodate the electrode assembly 22.

It can be understood that the end cover 11 is provided with a grooved portion 53 to form a weak region 52 and a non-weak region 51 correspondingly. The first side surface 54 and the second side surface 55 of the battery casing are respectively two opposite surfaces of the end cover 11 in the thickness direction, that is, one of the first side surface 54 and the second side surface 55 is the inner surface of the end cover 11 in the thickness direction, and the other is the outer surface of the end cover 11 in the thickness direction.

The end cover 11 can be a circular or rectangular plate structure.

Exemplarily, in the embodiment shown in Fig. 186, the end cover 11 is a rectangular plate structure.

In the embodiment, the end cover 11 has a pressure relief function to ensure the safety of the battery cells 20.

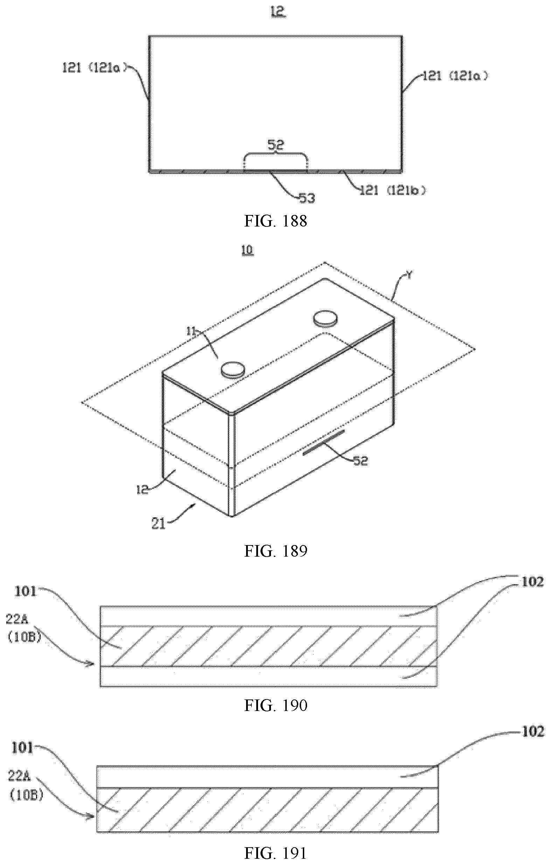

In some embodiments, referring to Figs. 187 and 188, Fig. 187 is a structural schematic diagram of the case 12 provided by some embodiments of the present application; Fig. 188 is a schematic structural view of the case 12 provided by other embodiments of the present application. The battery casing is a case 12, the case 12 has an opening, and the case 12 is used to accommodate the electrode assembly 2.

In the embodiment, the case 12 is a battery casing, and the end cover 11 is used to close the opening of the case 12. The case 12 may be a hollow structure with an opening at one end or openings at the opposite ends, and the case 12 and the end cover 11 may form the case 1 of the battery cell 20. The case 12 may be a cuboid, a cylinder, or the like.

In the embodiment, the battery casing 21 is the case 12, so that the case 12 has a pressure relief function to ensure the safety of the battery cells 20.

In some embodiments, the case 12 includes multiple integrally molded wall portions 121, the multiple wall portions 121 jointly define the internal space of the case 12, and at least one wall portion 121 is provided with the grooved portion 53.

In the case 12, the grooved portion 53 may be provided on one wall portion 121 to form the integrally molded weak region 52 and non-weak region 51 correspondingly on the wall portion 121, or the grooved portion 53 may be provided on multiple wall portions 121 to form the integrally molded weak region 52 and non-weak region 51 on each wall portion 121 of the grooved portion 53. For the wall portion 121 provided with the grooved portion 53, the first side surface 54 and the second side surface 55 of the battery casing are respectively two opposite surfaces of the wall portion 121 in the thickness direction, that is, one of the first side surface 54 and the second side surface 55 is the inner surface of the wall portion 121 in the thickness direction, and the other is the outer surface of the wall portion 121 in the thickness direction.

In the embodiment, multiple wall portions 121 are integrally molded, so that the wall portion 121 provided with the grooved portion 53 has better reliability.

In some embodiments, continuing to refer to Figs. 187 and 188, the multiple wall portions 121 include a bottom wall 121b and multiple side walls 121a surrounding the bottom wall 121b, the case 12 forms an opening at one end opposite to the bottom wall 121b. The bottom wall 121b is provided with the grooved portion 53; and/or at least one side wall 121a is provided with the grooved portion 53.

In the embodiment, the case 12 is a hollow structure with an opening formed at one end. The number of side walls 121a in the case 12 may be three, four, five, six or more. There may be one, two, three, four, five, six or more side walls 121a provided with the grooved portion 53.

For example, in Fig. 187, only one side wall 121a is provided with the grooved portion 53 to form the weak region 52 and non-weak region 51 correspondingly on the side wall 121a; in Fig. 188, only the second cavity wall 30i1b is provided with the grooved portion 53 to correspondingly form the weak regions 52 and non-weak regions 51 on the bottom wall 121b.

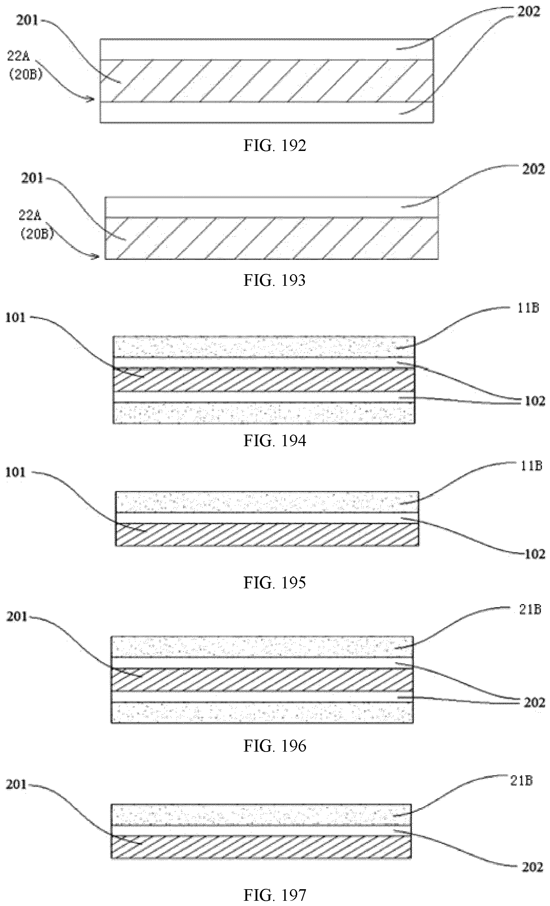

In some embodiments, continuing to refer to Figs. 187 and 197, the case 12 is a cuboid. It can be understood that the number of side walls 121a in the case 12 is four.

The cuboid case 12 is suitable for square battery cells and can meet the large capacity requirements of the battery cells 20.

In some embodiments, the battery casing 21 is made of aluminum alloy.

The aluminum alloy battery casing is light in weight, has good ductility, has good plastic deformation ability, and is easy to form. Since aluminum alloy has good ductility, when forming the grooved portion 53 on the battery casing by stamping, it is easier to control $S_1/S_2$ below 0.5 (including 0.5), and the forming yield is higher.

In some embodiments, the aluminum alloy includes the following components in mass percentage: aluminum $\geq 99.6\%$, copper $\leq 0.05\%$, iron $\leq 0.35\%$, magnesium $\leq 0.03\%$, manganese $\leq 0.03\%$, silicon $\leq 0.25\%$, titanium $\leq 0.03\%$, vanadium $\leq 0.05\%$, zinc $\leq 0.05\%$, other individual elements $\leq 0.03\%$. This aluminum alloy has lower hardness and better molding ability, which reduces the difficulty of molding the grooved portion 53, improves the molding accuracy of the grooved portion 53, and improves the pressure relief consistency of the battery casing.

In some embodiments, the aluminum alloy includes the following components in mass percentage: aluminum $\geq 96.7\%$, $0.05\% \leq$ copper $\leq 0.2\%$, iron $\leq 0.7\%$, manganese $\leq 1.5\%$, silicon $\leq 0.6\%$, zinc $\leq 0.1\%$, other individual elements $\leq 0.05\%$, and the total composition of other elements $\leq 0.15\%$. Battery casings made of this aluminum alloy are harder, stronger and have good resistance to damage.

In some embodiments, the battery cell 20 further includes a case 12, the case 12 has an opening, and the case 12 is used to accommodate the electrode assembly 22. The battery casing 21 is an end cover 11, and the end cover 11 closes the opening.

In some embodiments, the battery casing 21 is a case 12, the case 12 has an opening, and the case 12 is used to accommodate the electrode assembly 22. The battery cell 20 further includes an end cover 11, and the end cover 11 closes the opening.

In some embodiments, referring to Fig. 189, Fig. 189 is a structural schematic diagram of the battery cell 20 provided by some embodiments of the application, and the weak region 52 is located at the lower part of the battery cell 20.

In the battery cell 20, along the height direction of the battery casing 21 of the battery cell 20, the part of the battery cell 20 below the mid-plane Y of the battery casing 21 is the lower part of the battery cell 20, wherein the mid-plane Y is perpendicular to the height direction of the battery casing 21, the distances from the mid-plane Y to both end surfaces of the battery casing 21 in the height direction are equal. For example, the battery casing 21 includes a case 12 and an end cover 11, and the end cover 11 closes the opening of the case 12. The case 12 and the end cover 11 are arranged along the height direction of the battery casing 21. Along the height direction of the battery casing 21, the mid-plane Y is located in the middle between the outer surface of the end cover 11 away from the case 12 and the outer surface of the case 12 away from the end cover 11.

If the weak region 52 is located at the lower part of the battery cell 20, the grooved portion 53 is located at the lower part of the battery cell 20, and both the weak region 52 and the grooved portion 53 are located below the mid-plane Y. The weak region 52 can be located on the case 12, and the weak region 52 can also be located on the end cover 11. The weak region 52 may be located on the side wall 121a of the case 12 or on the second cavity wall 30i1b of the case 12. As shown in Fig. 177, taking the weak region 52 being located on the side wall 121a of the case 12 as an example, the second cavity wall 30i1b of the case 12 can be located below the end cover 11, and the weak region 52 is located below the mid-plane Y, making the distance between the weak region 52 and the second cavity wall 30i1b of the case 12 is greater than the distance between the weak region 52 and the end cover 11.

Since the weak region 52 is located at the lower part of the battery cell 20, during the use of the battery 100, under the gravity of the electrode assembly 2, electrolyte solution, etc. inside the battery cell 20, the weak region 52 will be subjected to a large force. The weak region 52 and the non-weak region 51 form an integrally molded structure, which has good structural strength, better reliability, thereby increases the service life of the battery cell 20.

In some embodiments, the battery cell 20 includes a case 12, the case 12 is used for accommodating the electrode assembly 2. The case 12 includes the integrally molded second cavity wall 30i1b and multiple side walls 121a surrounding the second cavity wall 30i1b. The second cavity wall 30i1b is integrally molded with the side walls 121a. The case 12 forms an opening at the end opposite to the second cavity wall 30i1b. The weak region 52 is located on the second cavity wall 30i1b.

It can be understood that the second cavity wall 30i1b is located below the mid-plane Y.

In the embodiment, the weak region 52 is located on the bottom wall 121b so that the weak region 52 is provided downward. When the battery cell 20 is thermally runaway, after the weak region 52 is destroyed, the emissions from the battery cell 20 will be ejected downward, which reduces the risk of safety accidents. For example, in the vehicle 1000, the battery 100 is generally mounted below the passenger compartment, with the weak region 52 facing downward, so that the emissions emitted by the battery cell 20 due to thermal runaway are ejected in a direction away from the passenger compartment, thereby reducing the impact of the emissions on the passenger compartment, reducing the risk of safety accidents.

In some embodiments, the battery cell 20 includes an end cover 11, the end cover 11 is used for closing the opening of the case 12, the case 12 is used for accommodating the electrode assembly 22, and the weak region 52 is located on the end cover 11.

It can be understood that the end cover 11 is located below the mid-plane Y.

In the embodiment, the weak region 52 is located on the end cover 11 so that the weak region 52 is provided downward. When the battery cell 20 is thermally runaway, after the weak region 52 is destroyed, the emissions from the battery cell 20 will be ejected downward, which reduces the risk of safety accidents.

In some embodiments, the embodiments of the present application provide an end cover 11 for the battery cell 20, and the end cover 11 includes the integrally molded non-weak region 51 and weak region 52. The end cover 11 is provided with a one-stage grooved portion 53, the non-weak region 51 is formed around the grooved portion 53, and the weak region 52 is formed at the bottom of the grooved portion 53. The weak region 52 is configured to be destroyed when the battery cell 20 releases the internal pressure. It has a first side surface 54 away from the interior of the battery cell 20. The grooved portion 53 forms an outer edge 534 on the first side surface 54. The region of the end cover 11 outside the outer edge 534 is the non-weak region 51. The average grain size of the weak region 52 is $S_1$, the average grain size of the non-weak region 51 is $S_2$, the minimum thickness of the weak region 52 is A, the minimum thickness of the non-weak region 51 is B, the hardness of the weak region 52 is $H_1$, and the hardness of the non-weak region 51 is $H_2$, satisfying: $0.1 \leq S_1/S_2 \leq 0.5$, $5 \leq A/S_1 \leq 20$, $190HBW/mm \leq H_1/A \leq 4000HBW/mm$, $1 < H_1/H_2 \leq 2.5$, $0.2 \leq A/B \leq 0.5$.

In some embodiments, the embodiments of the present application provide a case 12 for the battery cell 20, and the case 12 includes the integrally molded non-weak region 51 and weak region 52. The case 12 is provided with a one-stage grooved portion 53, the non-weak region 51 is formed around the grooved portion 53, and the weak region 52 is formed at the bottom of the grooved portion 53. The weak region 52 is configured to be destroyed when the battery cell 20 releases the internal pressure. It has a first side surface 54 away from the interior of the battery cell 20. The grooved portion 53 forms an outer edge 534 on the first side surface 54. The region of the end cover 11 outside the outer edge 534 is the non-weak region 51. The average grain size of the weak region 52 is $S_1$, the average grain size of the non-weak region 51 is $S_2$, the minimum thickness of the weak region 52 is A, the minimum thickness of the non-weak region 51 is B, the hardness of the weak region 52 is $H_1$, and the hardness of the non-weak region 51 is $H_2$, satisfying: $0.1 \leq S_1/S_2 \leq 0.5$, $5 \leq A/S_1 \leq 20$, $190HBW/mm \leq H_1/A \leq 4000HBW/mm$, $1 < H_1/H_2 \leq 2.5$, $0.2 \leq A/B \leq 0.5$.

The features and performance of the present application are described in further detail below in conjunction with the embodiments.

In each embodiment and comparative embodiment, the battery cell 20 is a square battery cell 20, the end cover 11 in the battery cell 20 serves as the battery casing, the capacity is 150Ah, and the chemical system is NCM.

I. Test methods:

(1) Test of average grain size of weak region 52 and non-weak region 51.

The average grain size of the weak region 52 and the non-weak region 51 was measured using the electron backscattered diffraction (EBSD) method. The battery casing was cut into 3 sections, and the cross section at both ends of the middle section had a weak region 52 and a non-weak region 51. The cutting direction was perpendicular to the length direction of the weak region 52, and the cutting equipment did not change the grain structure. The middle section was selected for sampling, with the sample thickness less than 5mm and length less than 10mm. Then, after the sample was electrolytically polished, the sample was fixed on a sample holder tilted at 70°, an appropriate magnification was selected, and a scanning electron microscope (SEM) equipped with an electron backscatter diffraction (EBSD) accessory was used for EBSD scanning. Based on the results, the average grain size (that is, the diameter of the equal circles of the complete grains in the inspection plane) was finally calculated.

(2) Test for minimum thickness of weak region 52 and non-weak region 51.

The battery casing was cut into 3 sections, the middle section was taken as the sample, and the cross section at both ends of the sample had a weak region 52 and a non-weak region 51. The cutting direction was perpendicular to the length direction of the weak region 52. After the middle section was polished to fully remove burrs, the sample was placed on a three-dimensional coordinate tester, and the thickness of the weak region 52 and the non-weak region 51 on the cross section was measured.

(3) Test for hardness of weak region 52 and non-weak region 51.

The battery casing was cut into 3 sections, the middle section was taken as the sample, and the cross section at both ends of the sample had a weak region 52 and a non-weak region 51. The cutting direction was perpendicular to the length direction of the weak region 52. After the test section was polished to fully remove burrs, the sample was placed horizontally (the sample's section direction was parallel to the extrusion direction of the hardness tester) and the hardness was measured on the Brinell hardness tester. If the width of the weak region 52 is <1mm or the indenter size of the Brinell hardness tester is much larger than the width of the weak region 52, a non-standard indenter should be processed for hardness measurement in accordance with the Brinell hardness measurement and conversion principle.

(4) The cracking rate of the weak region 52 under normal use conditions of the battery cell 20.

The battery 100 was placed under the conditions of $25 \pm 2°C$, and was charged and discharged cyclically in a charge and discharge interval of 5%-97% SOC. The internal gas pressure of the battery cell 20 was monitored at the same time, and 500 sets of tests were performed at the same time. The test cut-off condition: the service life of the battery cells 20 drops to 80% SOH or the weak region 52 of any group of battery cells 20 cracks during the cycle. The condition for determining cracking of the weak region 52s: the internal air pressure value of the battery cell 20 decreases, and the decrease value is >10% of the maximum air pressure. The cracking rate of the weak region 52 was statistically calculated, cracking rate = number of cracks/total number* 100%.

(5) The explosion rate of the battery cell 20 during thermal runaway.

A small heating film was built into the battery cell 20. The heating film was energized to heat the battery cell 20 until the battery cell 20 underwent thermal runaway. Whether the battery cell 20 explodes was observed. 500 sets of tests were repeatedly carried out, and the explosion rate of 20 battery cells was statistically calculated, explosion rate = number of explosions/total number*100%.

II. Test results

In the embodiments and comparative embodiments, the test results of the average grain size Si of the weak region 52, the average grain size $S_2$ of the non-weak region 51, the minimum thickness $A_1$ the weak region 52, the minimum thickness $A_2$ of the non-weak region 51, the hardness $B_1$ of the weak region 52 and the hardness $B_2$ of the non-weak region 51 are shown in Table 10; the cracking rate $Q_1$ of the weak region 52 under the normal use conditions of the battery cell 20 and the explosion rate $Q_2$ of the battery cell 20 when thermal runaway occurs are shown in Table 11.

Table 10

| | $S_1$ (mm) | $S_2$ (mm) | $Si/S_2$ | $A_1$ (mm) | $A_1/S_1$ | $B_1$ (HBW) | $B_1/A_1$ | $B_2$ (HBW) | $B_1/B_2$ | $A_2$ (mm) | $A_1/A_2$ |
|---|---|---|---|---|---|---|---|---|---|---|---|
| Embodimen t 1 | 0.036 | 0.04 | 0.9 | 0.15 | 4.167 | 90 | 600 | 52.5 | 1.714 | 1.5 | 0.1 |
| Embodimen t 2 | 0.028 | 0.04 | 0.7 | 0.15 | 5.357 | 90 | 600 | 52.5 | 1.714 | 1.5 | 0.1 |
| Embodimen t 3 | 0.02 | 0.04 | 0.5 | 0.15 | 7.5 | 90 | 600 | 52.5 | 1.714 | 1.5 | 0.1 |
| Embodimen t 4 | 0.01 | 0.04 | 0.25 | 0.15 | 15 | 90 | 600 | 52.5 | 1.714 | 1.5 | 0.1 |
| Embodimen t 5 | 0.004 | 0.04 | 0.1 | 0.15 | 37.5 | 90 | 600 | 52.5 | 1.714 | 1.5 | 0.1 |
| Embodimen t 6 | 0.002 | 0.04 | 0.05 | 0.15 | 75 | 90 | 600 | 52.5 | 1.714 | 1.5 | 0.1 |
| Embodimen t 7 | 0.0016 | 0.04 | 0.04 | 0.15 | 93.75 | 90 | 600 | 52.5 | 1.714 | 1.5 | 0.1 |
| Embodimen t 8 | 0.01 | 0.04 | 0.25 | 1.2 | 120 | 90 | 75 | 52.5 | 1.714 | 1.5 | 0.8 |
| Embodimen t 9 | 0.01 | 0.04 | 0.25 | 1 | 100 | 90 | 90 | 52.5 | 1.714 | 1.5 | 0.667 |
| Embodimen t 10 | 0.01 | 0.04 | 0.25 | 0.2 | 20 | 90 | 450 | 52.5 | 1.714 | 1.5 | 0.133 |
| Embodimen t 11 | 0.01 | 0.04 | 0.25 | 0.05 | 5 | 90 | 1800 | 52.5 | 1.714 | 1.5 | 0.033 |
| Embodimen t 12 | 0.01 | 0.04 | 0.25 | 0.01 | 1 | 90 | 9000 | 52.5 | 1.714 | 1.5 | 0.007 |
| Embodimen t 13 | 0.01 | 0.04 | 0.25 | 0.016 | 1.6 | 200 | 12500 | 100 | 2 | 1.5 | 0.011 |
| Embodimen t 14 | 0.01 | 0.04 | 0.25 | 0.02 | 2 | 200 | 10000 | 100 | 2 | 1.5 | 0.013 |
| Embodimen t 15 | 0.01 | 0.04 | 0.25 | 0.05 | 5 | 200 | 4000 | 100 | 2 | 1.5 | 0.033 |
| Embodimen t 16 | 0.01 | 0.04 | 0.25 | 0.1 | 10 | 19 | 190 | 9.5 | 2 | 1.5 | 0.067 |
| Embodimen t 17 | 0.01 | 0.04 | 0.25 | 1 | 100 | 6 | 6 | 3 | 2 | 1.5 | 0.667 |
| Embodimen t 18 | 0.01 | 0.04 | 0.25 | 1.2 | 120 | 4.8 | 4 | 2.4 | 2 | 1.5 | 0.8 |
| Embodimen t 19 | 0.01 | 0.04 | 0.25 | 0.15 | 15 | 315 | 2100 | 52.5 | 6 | 1.5 | 0.1 |
| Embodimen t 20 | 0.01 | 0.04 | 0.25 | 0.15 | 15 | 262.5 | 1750 | 52.5 | 5 | 1.5 | 0.1 |
| Embodimen t 21 | 0.01 | 0.04 | 0.25 | 0.15 | 15 | 131.25 | 875 | 52.5 | 2.5 | 1.5 | 0.1 |
| Embodimen t 22 | 0.01 | 0.04 | 0.25 | 0.15 | 15 | 52.5 | 350 | 52.5 | 1 | 1.5 | 0.1 |
| Embodimen t 23 | 0.01 | 0.04 | 0.25 | 0.15 | 15 | 42 | 280 | 52.5 | 0.8 | 1.5 | 0.1 |

(continued)

| | $S_1$ (mm) | $S_2$ (mm) | Si/S$_2$ | $A_1$ (mm) | $A_1$/$S_1$ | $B_1$ (HBW) | $B_1$/$A_1$ | $B_2$ (HBW) | $B_1$/$B_2$ | $A_2$ (mm) | $A_1$/$A_2$ |
|---|---|---|---|---|---|---|---|---|---|---|---|
| Embodimen t 24 | 0.01 | 0.04 | 0.25 | 1.47 | 147 | 90 | 61.224 | 52.5 | 1.714 | 1.5 | 0.98 |
| Embodimen t 25 | 0.01 | 0.04 | 0.25 | 1.425 | 143 | 90 | 63.158 | 52.5 | 1.714 | 1.5 | 0.95 |
| Embodimen t 26 | 0.01 | 0.04 | 0.25 | 1.2 | 120 | 90 | 75 | 52.5 | 1.714 | 1.5 | 0.8 |
| Embodimen t 27 | 0.01 | 0.04 | 0.25 | 0.75 | 75 | 90 | 120 | 52.5 | 1.714 | 1.5 | 0.5 |
| Embodimen t 28 | 0.01 | 0.04 | 0.25 | 0.3 | 30 | 90 | 300 | 52.5 | 1.714 | 1.5 | 0.2 |
| Embodimen t 29 | 0.01 | 0.04 | 0.25 | 0.18 | 18 | 90 | 500 | 52.5 | 1.714 | 1.5 | 0.12 |
| Embodimen t 30 | 0.01 | 0.04 | 0.25 | 0.075 | 7.5 | 90 | 1200 | 52.5 | 1.714 | 1.5 | 0.05 |
| Embodimen t 31 | 0.01 | 0.04 | 0.25 | 0.06 | 6 | 90 | 1500 | 52.5 | 1.714 | 1.5 | 0.04 |
| Comparativ e Embodimen t 1 | 0.038 | 0.04 | 0.95 | 0.15 | 3.947 | 90 | 600 | 52.5 | 1.714 | 1.5 | 0.1 |
| Comparativ e Embodimen t 2 | 0.04 | 0.04 | 1 | 0.15 | 3.75 | 90 | 600 | 52.5 | 1.714 | 1.5 | 0.1 |
| Comparativ e Embodimen t 3 | 0.048 | 0.04 | 1.2 | 0.15 | 3.125 | 90 | 600 | 52.5 | 1.714 | 1.5 | 0.1 |

Table 11

| | $Q_1$ | $Q_2$ |
|---|---|---|
| Embodiment 1 | 8% | 0.6% |
| Embodiment 2 | 6.8% | 0.8% |
| Embodiment 3 | 6.2% | 1.4% |
| Embodiment 4 | 5% | 1.6% |
| Embodiment 5 | 2.8% | 1.8% |
| Embodiment 6 | 0.8% | 2.2% |
| Embodiment 7 | 0.6% | 6.4% |
| Embodiment 8 | 0.4% | 8% |
| Embodiment 9 | 1.2% | 4% |
| Embodiment 10 | 2.6% | 1.8% |
| Embodiment 11 | 3.2% | 1.4% |
| Embodiment 12 | 6% | 1% |
| Embodiment 13 | 10.2% | 0.6% |
| Embodiment 14 | 6.2% | 1.8% |

(continued)

|  | $Q_1$ | $Q_2$ |
|---|---|---|
| Embodiment 15 | 3.8% | 3.8% |
| Embodiment 16 | 2.4% | 6.6% |
| Embodiment 17 | 1% | 8.8% |
| Embodiment 18 | 0.8% | 12% |
| Embodiment 19 | 1.2% | 10% |
| Embodiment 20 | 1.8% | 4.4% |
| Embodiment 21 | 2.4% | 2.2% |
| Embodiment 22 | 6% | 1.4% |
| Embodiment 23 | 8% | 1% |
| Embodiment 24 | 1% | 14.2% |
| Embodiment 25 | 1.4% | 9.2% |
| Embodiment 26 | 2.2% | 8% |
| Embodiment 27 | 3% | 3.6% |
| Embodiment 28 | 3.6% | 1.6% |
| Embodiment 29 | 5% | 1% |
| Embodiment 30 | 7.4% | 0.4% |
| Embodiment 31 | 10.4% | 0.4% |
| Comparative Embodiment 1 | 20.2% | 0.6% |
| Comparative Embodiment 2 | 22.4% | 0.4% |
| Comparative Embodiment 3 | 26.4% | 0.4% |

According to Table 10 and Table 11, it can be seen from Embodiments 1 to 7 that in the case of $S_1/S_2 \leq 0.9$, the cracking rate of the weak region 52 is low under normal use conditions of the battery cell 20. In Comparative Embodiment 1 where it satisfies $0.9 < S_1/S_2 < 1$, the cracking rate of the weak region 52 increases significantly under normal use conditions of the battery cell 20; in Comparative Embodiment 2 where it satisfies $S_1/S_2 = 1$, the weak region 52 has a significantly increased cracking rate under the normal use conditions of the battery cell 20; in Comparative Embodiment 3 where it satisfies $S_1/S_2 > 1$, the cracking rate of the weak region 52 also increases significantly under the normal use conditions of the battery cell 20. Comparing Embodiments 1 to 7 and Comparative Embodiments 1 to 3, it can be seen that controlling $S_1/S_2$ to not exceed 0.9 can effectively reduce the risk of the weak region 52 being damaged under normal use conditions of the battery cell 20, thereby improving the service life of the battery cell 20.

According to Embodiment 7, it can be seen that in the case of $S_1/S_2 < 0.5$, it is more difficult for the weak region 52 to be destroyed when the battery cell 20 is thermally runaway. If the pressure is not released in time, the risk of the battery cell 20 exploding is significantly increased. It can be seen from Embodiments 3 to 5 that in the case of $0.1 \leq S_1/S_2 \leq 0.5$, the cracking rate of the weak region 52 under the normal use conditions of the battery cell 20 and the explosion rate of the battery cell 20 when thermal runaway occurs are both low, which ensures that the weak region 52 has sufficient strength under normal service conditions of the battery cell 20 while ensuring that the weak region 52 can be destroyed in time when the battery cell 20 is thermally runaway.

From the comparison of Embodiments 9 to 12 with Embodiment 8, it can be seen that in the case of $1 \leq A_1/S_1 \leq 100$, the battery cell 20 can release pressure in time when thermal runaway occurs, and the explosion rate of the battery cell 20 is low. In the case of $5 \leq A_1/S_1 \leq 20$, the comprehensive performance of the battery cell 20 is better, and the cracking rate of the weak region 52 under the normal use conditions of the battery cell 20 and the explosion rate of the battery cell 20 when thermal runaway occurs are both low.

From the comparison of Embodiments 14 to 17 with Embodiment 13, it can be seen that the cracking rate of the weak region 52 is higher under the normal use condition of the battery cell 20 in the case of Bi/Ai>10000HBW/mm. By comparing Embodiments 14 to 17 with Embodiment 18, it can be seen that in the case of Bi/Ai<5HBW/mm, the explosion rate of the battery cell 20 is higher when thermal runaway occurs. In the case of $5HBW/mm \leq B_1/A_1 \leq 10000HBW/mm$, it can not only reduce the risk of rupture of the weak region 52 under the normal use conditions of the battery cell 20, but also can timely achieve pressure relief through the weak region 52 when the battery cell 20 is thermally runaway, reducing the risk of battery cell 20 exploding. As can be seen from Embodiments 15 to 16, in the case of $190HBW/mm \leq B_1/A_1 \leq 4000HBW/mm$, the comprehensive performance of the battery cell 20 is better, and the cracking rate of the weak region 52 under the normal use conditions of the battery cell 20 and the explosion rate of the battery cell 20 when thermal runaway occurs are both low.

From the comparison of Embodiments 19 to 21 with Embodiments 22 to 23, it can be seen that in the case of $B_1/B_2 \leq 1$, the cracking rate of the weak region 52 under the normal use conditions of the battery cell 20 is relatively high. $B_1B_2 > 1$ can effectively reduce the cracking rate of the weak region 52 under normal use conditions of the battery cell 20. A comparison of Embodiments 20 to 21 with Embodiment 19 shows that in the case of $B_1B_2 >_5$, the battery cell 20 has a higher explosion rate when thermal runaway occurs. And $H_1/H_2 \leq 5$ can reduce the risk of explosion of the battery cell 20.

From the comparison of Embodiments 25 to 30 with Embodiment 24, it can be seen that in the case of A/B>0.95, the battery cell 20 has a higher explosion rate when thermal runaway occurs. Comparing Embodiments 25 to 30 with Embodiment 31, it can be seen that in the case of A/B<0.05, the cracking rate of the weak region 52 under normal use conditions of the battery cell 20 is relatively high. In the case of $0.05 \leq A/B \leq 0.95$, it can not only reduce the risk of rupture of the weak region 52 under the normal use conditions of the battery cell 20, but also can timely achieve pressure relief through the weak region 52 when the battery cell 20 is thermally runaway, reducing the risk of battery cell 20 exploding. As can be seen from Embodiments 26 to 29, in the case of $0.12 \leq A/B \leq 0.8$, the comprehensive performance of the battery cell 20 is better, and the cracking rate of the weak region 52 under the normal use conditions of the battery cell 20 and the explosion rate of the battery cell 20 when thermal runaway occurs are both low, and $0.2 \leq A/B \leq 0.5$ provides better effect.

In some embodiments, as shown in Figs. 4 and 190 to 200, the battery cell 20 includes an electrode assembly 22, the electrode assembly 22 is electrically connected to electrode terminals 214. The electrode assembly 22 includes a positive electrode plate 1B and a negative electrode plate 2B. The positive electrode plate 1B and/or negative electrode plate 2B include a current collector 22A and an active material layer 22B. The current collector 22A includes a supporting layer 22A1 and a conductive layer 22A2. The supporting layer 22A1 is used to support the conductive layer 22A2. The supporting layer 22A1 has appropriate rigidity to support and protect the conductive layer 22A2, ensuring the overall strength of the current collector 22A, and has appropriate flexibility so that the current collector 22A and the electrode plate can be rolled during processing; the conductive layer 22A2 is used to support the active material layer 22B and provide electrons to the active material layer 22B, that is, it plays the role of conducting electricity and collecting current.

Since the density of the supporting layer 22A1 is lower than that of the conductive layer 22A2, the weight of the current collector 22A of the present application is significantly lighter than that of the traditional current collector. Therefore, the current collector 22A of the present application can significantly increase the gravimetric energy density of the electrochemical device.

Optionally, the supporting layer 22A1 is an insulating layer.

In some embodiments, as shown in Figs. 190 to 200, along the thickness direction of the supporting layer 22A1, the conductive layer 22A2 is disposed on at least one side of the supporting layer 22A1, the conductive layer 22A2 can be disposed on the two opposite surfaces of the supporting layer 22A1, and the structural diagram thereof is shown in Figs. 190 and 192; or, the conductive layer 22A2 can be disposed on only one side of the supporting layer 22A1, and the structural diagram thereof is shown in Figs. 191 and 193. This facilitates flexible arrangement of the conductive layer 22A2.

In some embodiments, the room temperature film resistance Rs of the conductive layer 22A2 satisfies: $0.016\Omega/\square \leq Rs \leq 420\Omega/\square$.

Film resistance is measured in ohm/square ($\Omega/\square$), which can be applied to a two-dimensional system in which the conductor is considered as a two-dimensional entity, which is equivalent to the concept of resistivity used in a three-dimensional system. When using the concept of film resistance, current is theoretically assumed to flow along the plane of the film.

For conventional three-dimensional conductors, the calculation formula of resistance is:

$$R = \rho \frac{L}{A}$$

wherein, $\rho$ represents resistivity, A represents cross-sectional area, and L represents length. The cross-sectional area can be decomposed into the width W and the film thickness t, that is, the resistance can be written as:

$$R = \frac{\rho}{t}\frac{L}{W} = R_s \frac{L}{W}$$

wherein, Rs is the film resistance. When the diaphragm is square in shape, L=W, the measured resistance R is the film resistance Rs of the diaphragm, and Rs has nothing to do with the size of L or W, Rs is the resistance value of the unit square, so the unit of Rs can be expressed as ohms per square ($\Omega/\square$).

The room temperature film resistance in the present application refers to the resistance value measured using the four-probe method on the conductive layer under normal temperature.

In existing lithium-ion battery cells, when a short circuit occurs within the battery cell under abnormal circumstances, a large current is generated instantaneously, accompanied by a large amount of short-circuit heat. This heat usually also causes thermit reaction at the positive electrode aluminum foil current collector, causing the battery cells to catch fire, explode, etc.

In the present application, the above technical problem is solved by increasing the room temperature film resistance Rs of the current collector.

The internal resistance of a battery cell usually includes the battery ohmic internal resistance and the battery polarization internal resistance, wherein the active material resistance, current collector resistance, interface resistance, electrolyte solution composition, etc. will all have a significant impact on the battery cell internal resistance.

When a short circuit occurs under abnormal circumstances, the internal resistance of the battery cell will reduce greatly due to the internal short circuit. Therefore, increasing the resistance of the current collector can increase the internal resistance of the battery cell after a short circuit, thereby improving the safety performance of the battery cell. In the present application, when the battery cell can limit the influence of the short-circuit damage on the battery cell to the "point" range, the influence of the short-circuit damage on the battery cell can be limited to the damage point and position, and the short-circuit current is greatly reduced due to the high resistance of the current collector, the temperature rise of the battery cell due to the short-circuit heat generation is not obvious, and the normal use of the battery cell in a short period of time is not affected, which is called "point break".

When the room temperature film resistance Rs of the conductive layer is not less than $0.016\Omega/\square$, the short-circuit current can be greatly reduced when the battery cell is internally short-circuited, thereby greatly reducing the short-circuit heat generation and greatly improving the safety performance of the battery cell. In addition, the short-circuit heat generation can be controlled in the range that the battery cell can completely absorb it, therefore, the heat generated at the position where the internal short-circuit occurs can be completely absorbed by the battery cell, and the resulting temperature rise of the battery cell is also very small, so that the influence of the short-circuit damage to the battery cell can be limited to the range of "point", and only "point break" is formed, without affecting the normal operation of the battery cell in a short time.

However, when the room temperature film resistance Rs of the conductive layer is too large, it will affect the conduction and current collection functions of the conductive layer, and electrons cannot be effectively conducted between the current collector, the electrode active material layer, and the interface between the two. That is, it will increase the polarization of the electrode active material layer on the surface of the conductive layer and affect the electrochemical performance of the battery cells. Therefore, the room temperature film resistance Rs of the conductive layer is not more than $420\Omega/\square$.

In the present application, the upper limit of the room temperature film resistance Rs can be $420\Omega/\square$, $400\Omega/\square$, $350\Omega/\square$, $300\Omega/\square$, $250\Omega/\square$, $200\Omega/\square$, $150\Omega/\square$, $100\Omega/\square$, $80\Omega/\square$, $60\Omega/\square$, $40\Omega/\square$, $25\Omega/\square$, $20\Omega/\square$, $18\Omega/\square$, $16\Omega/\square$, $14\Omega/\square$, $12\Omega/\square$, $10\Omega/\square$, $8\Omega/\square$, $6\Omega/\square$, $4\Omega/\square$, $2\Omega/\square$, $1.8\Omega/\square$, the lower limit of room temperature film resistance Rs can be $0.016\Omega/\square$, $0.032\Omega/\square$, $0.048\Omega/\square$, $0.064\Omega/\square$, $0.08\Omega/\square$, $0.09\Omega/\square$, $0.1\Omega/\square$, $0.2\Omega/\square$, $0.4\Omega/\square$, $0.6\Omega/\square$, $0.8\Omega/\square$, $1\Omega/\square$, $1.2\Omega/\square$, $1.4\Omega/\square$, $1.6\Omega/\square$; the range of room temperature film resistance Rs can be composed of any value of the upper limits or the lower limits.

In some embodiments, the room temperature film resistance of the conductive layer 22A2 satisfies: $0.032\Omega/\square \leq Rs \leq 21\Omega/\square$, more preferably $0.080\Omega/\square \leq Rs \leq 8.4\Omega/\square$.

In some embodiments, the thickness d2 of the conductive layer 22A2 satisfies: $1\,nm \leq d2 \leq 1\mu m$.

In the present application, the upper limit of the thickness d2 of the conductive layer 22A2 may be $1\mu m$, 900nm, 800nm, 700nm, 600nm, 500nm, 450nm, 400nm, 350nm, 300, 250nm, 200nm, 150nm, 120nm, 100nm, 80nm, 60nm, the lower limit of the thickness d2 of the conductive layer can be 1nm, 5nm, 10nm, 15nm, 20nm, 25nm, 30nm, 35nm, 40nm, 45nm, 50nm, 55nm; the range of the thickness d2 of the conductive layer can be composed of any value of the upper limits or the lower limits.

In some embodiments, the thickness d2 of the conductive layer 22A2 satisfies: $20nm \leq d2 \leq 500nm$, more preferably $50nm \leq d2 \leq 200nm$.

If the conductive layer 22A2 is too thin, although it is beneficial to increasing the room temperature film resistance Rs of the current collector 22A, it will easily be damaged during the electrode plate processing process. If the conductive layer 22A2 is too thick, it will affect the gravimetric energy density of the battery cell and is not conducive to increasing the room temperature film resistance Rs of the conductive layer.

In some embodiments, the thickness of the supporting layer 22A2 is d1, and d1 satisfies $1\mu m \leq d1 \leq 50\mu m$.

In the present application, the upper limit of the thickness d1 of the supporting layer 22A1 may be $50\mu m$, $45\mu m$, $40\mu m$, $35\mu m$, $30\mu m$, $25\mu m$, $20\mu m$, $15\mu m$, $12\mu m$, $10\mu m$, $8\mu m$, and the lower limit of the thickness d1 of the supporting layer may be $1\mu m$, $1.5\mu m$, $2\mu m$, $3\mu m$, $4\mu m$, $5\mu m$, $6\mu m$, $7\mu m$; the range of the thickness d1 of the supporting layer can be composed of any value of the upper limits or the lower limits.

In some embodiments, d1 satisfies: $2\mu m \leq d1 \leq 30\mu m$; more preferably, $5\mu m \leq d1 \leq 20\mu m$.

The supporting layer 22A1 mainly plays the role of supporting and protecting the conductive layer. If the supporting layer 22A1 is too thin, it will easily break during the electrode plate processing and other processes; if it is too thick, the volumetric energy density of the battery cell using the current collector will be reduced.

In some embodiments, the material of the conductive layer 22A2 is selected from at least one of metal conductive materials and carbon-based conductive materials.

The metal conductive material is preferably at least one of aluminum, copper, nickel, titanium, silver, a nickel-copper alloy, and an aluminum-zirconium alloy; and the carbon-based conductive material is preferably at least one of graphite, acetylene black, graphene, and a carbon nanotube.

In some embodiments, the material of the supporting layer 22A1 comprises one or more of polymer materials and polymer-based composite material.

The aforementioned polymer materials include, for example, one or more of polyamide-based polymers, polyimide-based polymers, polyester-based polymers, polyolefin-based polymers, polyalkyne-based polymers, silicone polymers, polyethers, polyols, polysulfone, polysaccharide polymers, amino acid polymers, polysulfur nitride polymer materials, aromatic ring polymers, aromatic heterocyclic polymers, polyphenylene sulfide, polysulfones, epoxy resins, phenolic resins, derivatives thereof, cross-linked products thereof and copolymers thereof.

As an example, the polyamide-based polymer can be one or more of polyamide (PA for short, commonly known as nylon) and polyparaphenylene terephthalamide (PPTA, commonly known as aramid); the polyimide-based polymer can be polyimide (PI); the polyester-based polymer can be one or more of polyethylene terephthalate (PET), polybutylene terephthalate (PBT), polyethylene naphthalate (PEN) and polycarbonate (PC); the polyolefin-based polymer can be one or more of polyethylene (PE), polypropylene (PP) and polyphenylene ether (PPE); the derivatives of polyolefin-based polymers can be polyvinyl alcohol (PVA), polystyrene (PS), polyvinyl chloride (PVC), polyvinylidene fluoride (PVDF), polytetrafluoroethylene (PTEE) and sodium polystyrene sulfonate (PSS); the polyacetylene-based polymer can be polyacetylene (PA); the siloxane polymer can be silicone rubber; the polyether can be, for example, one or more of polyoxymethylene (POM), poly(phenylene oxide) (PPO) and polyphenylene sulfide (PPS); the polyol can be polyethylene glycol (PEG); the polysaccharide polymer can be, for example, one or more of cellulose and starch; the amino acid polymer can be protein; the aromatic ring polymer can be one or more of polyphenylene and polyparaphenylene; the aromatic heterocyclic polymer can be one or more of polypyrrole (Ppy), polyaniline (PAN), polythiophene (PT) and polypyridine (PPY); the copolymer of polyolefin-based polymers and their derivatives can be acrylonitrile-butadiene-styrene copolymer (ABS).

In addition, the aforementioned polymer materials can also be doped by means of redox, ionization or electrochemistry.

The aforementioned polymer-based composite material comprises the aforementioned polymer material and an additive, wherein the additive may be at least one or more of metallic materials and inorganic non-metallic materials.

As an example, the metallic material can be one or more of aluminum, aluminum alloy, copper, copper alloy, nickel, nickel alloy, titanium, titanium alloy, iron, iron alloy, silver and silver alloy; the inorganic non-metallic material can be one or more of carbon-based materials, alumina, silicon dioxide, silicon nitride, silicon carbide, boron nitride, silicate and titanium oxide, such as one or more of glass materials, ceramic materials and ceramic composite materials. The aforementioned carbon-based material may be one or more of graphite, superconducting carbon, acetylene black, carbon black, Ketjen black, carbon dot, carbon nanotube, graphene, and carbon nanofiber.

The aforementioned additive may be a carbon-based material coated with a metallic material, such as one or more of nickel-coated graphite powder and nickel-coated carbon fiber.

In some preferred embodiments, the supporting layer includes one or more of polyethylene terephthalate (PET), polybutylene terephthalate (PBT), polyethylene naphthalate (PEN), and polyimide (PI).

It can be understood that the supporting layer can be a single-layer structure or a composite layer structure formed by more than two layers of sub-supporting layers, such as two layers, three layers, four layers, etc. When the supporting layer is a composite layer structure formed by two or more sub-supporting layers, the materials of the individual layers may be the same or different.

In some embodiments, the material of the supporting layer is selected from one of organic polymer insulating materials, inorganic insulating materials, and composite materials. Further preferably, the composite material is composed of organic polymer insulating materials and inorganic insulating materials.

In some embodiments, the organic polymer insulating material is selected from at least one of polyamide (PA for short), polyethylene terephthalate (PET for short), polyimide (PI for short), polyethylene (PE for short), polypropylene (PP for short), polystyrene (PS for short), polyvinyl chloride (PVC for short), acrylonitrile butadiene styrene copolymers (ABS for short), polybutylene terephthalate (PBT for short), poly-p-phenylene terephthamide (PPA for short), epoxy resin, polyphenylene ether (PPE for short), polyformaldehyde (POM for short), phenol-formaldehyde resin, polytetrafluoroethylene (PTFE for short), silicone rubber, polyvinylidenefluoride (PVDF for short) and polycarbonate (PC for short).

The inorganic insulating material is preferably at least one of alumina (Al2O3), silicon carbide (SiC), and silicon dioxide (SiO2); the composite is preferably at least one of epoxy resin glass fiber reinforced composite materials or polyester resin glass fiber reinforced composite materials.

Since the density of the supporting layer is generally smaller than that of the metal, the embodiments of the present application can increase the gravimetric energy density of the battery cell while improving the safety performance of the battery cell. Moreover, since the insulating layer can play a good role in supporting and protecting the conductive layer located on its surfaces, breakage of the electrode plate is not likely to occur, which is common in traditional current collectors.

In some embodiments, the conductive layer may be formed on the insulating layer by at least one of mechanical rolling, bonding, vapor deposition, and electroless plating. The vapor deposition is preferably physical vapor deposition (PVD). The physical vapor deposition is preferably at least one of evaporating and sputtering method. The evaporating is preferably at least one of vacuum evaporating, thermal evaporation deposition, and electron beam evaporation method (EBEM). The sputtering is preferably magnetron sputtering.

In some embodiments, in order to facilitate the penetration of the electrolyte solution into the electrode active material layer and reduce the polarization of the battery cells, the structure of the current collector can be further improved. For example, holes of 10 $\mu$m $\leq$ hole diameter $\leq$ 100 $\mu$m can be provided in the conductive layer, the hole area can account for 5% to 50% of the total area of the conductive layer; or through holes 10 $\mu$m $\leq$ through hole diameter $\leq$ 100 $\mu$m running through the supporting layer and the conductive layer are provided in the current collector with a porosity of 5% to 50%.

Specifically, for example, electroless plating can be used to form holes in the conductive layer, and mechanical drilling can be used to form through holes that run through the supporting layer and the conductive layer in the current collector.

In some embodiments, the positive electrode plate 1B includes a current collector (or positive electrode current collector 10B) and an active material layer (or positive electrode active material layer 11B) formed on the surface of the current collector. The positive electrode current collector 10 includes a positive electrode supporting layer 101 and a positive electrode conductive layer 102. The structural schematic diagram of the positive electrode current collector 10B is shown in Figs. 190 and 191, and the structural schematic diagram of the positive electrode plate 1B is shown in Figs. 194 and 195.

In some embodiments, the negative electrode plate 2B includes a current collector (or negative electrode current collector 20B) and an active material layer (or negative electrode active material layer 21B) formed on the surface of the current collector, the negative electrode current collector 20B includes a negative electrode supporting layer 201B and a negative electrode conductive layer 202B. The structural schematic diagram of the negative electrode current collector 20B is shown in Figs. 192 and 193, and the structural schematic diagram of the negative electrode plate 2B is shown in Figs. 196 and 197.

In some embodiments, as shown in Figs. 190 and 192, when both sides of the supporting layer are provided with conductive layers, and the current collector is coated with the active material on both sides, the prepared electrode plate is as shown in Figs. 194 and 195, and can be directly applied to battery cells. As shown in Figs. 191 and 193, when one side of the insulating layer is provided with a conductive layer, one side of the current collector is coated with the active material, the prepared electrode plate is shown in Figs. 195 and 197, which can be folded and used in battery cells.

Preferably, the positive electrode plate of the battery cell of the present application adopts the above arrangement including the current collector and the active material layer. The aluminum content in conventional positive electrode current collectors is high, when a battery cell is short-circuited under abnormal conditions, the heat generated at the short-circuit point can trigger a violent thermit reaction, thereby generating a large amount of heat and causing accidents such as explosion of the battery cell, so that when the positive electrode plate of the battery cell adopts the above structure, since the amount of aluminum in the positive electrode current collector is only nanometer-thick, the amount of aluminum in the positive electrode current collector is greatly reduced. As a result, the thermit reaction can be avoided, thereby significantly improve the safety performance of battery cells.

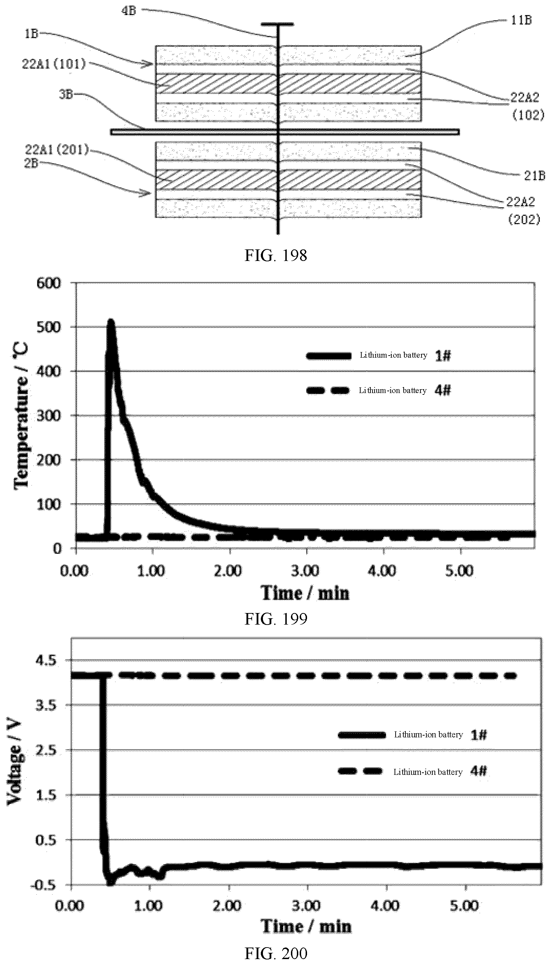

The nail penetration experiment is used below to simulate the abnormal situation of the battery cell and the changes of the battery cell after the nail penetration is observed. Fig. 198 is a schematic diagram of a nail penetration experiment in the present application. For the sake of simplicity, the figure only shows that nail 4B penetrates a layer of positive electrode plate 1B, a layer of separator 3B and a layer of negative electrode plate 2B of the battery cell. It should be noted that in the actual nail penetration experiment, nail 4B penetrates the entire battery cell, usually includes multiple layers of positive electrode plates 1B, multiple layers of separators 3B and multiple layers of negative electrode plates 2B.

In addition, through a large number of experiments, it has been found that the greater the capacity of the battery cell, the smaller the internal resistance of the battery cell, and the worse the safety performance of the battery cell, that is, the battery cell capacity (Cap) and the battery cell internal resistance [®] is inversely related:

$$r=A/Cap$$

In the formula, r represents the internal resistance of the battery cell, Cap represents the capacity of the battery cell, and A is the coefficient.

The battery cell capacity Cap is the theoretical capacity of the battery cell, usually the theoretical capacity of the positive electrode of the battery cell.

R can be obtained by testing by an internal resistance meter.

For conventional lithium-ion battery cells composed of conventional positive electrode plates and conventional negative electrode plates, when an internal short circuit occurs under abnormal circumstances, basically all conventional lithium-ion battery cells will produce varying degrees of smoke, fire, explosion etc.

As for the battery cell using an electrode plate including a current collector and an active material layer in the embodiments of the present application, since it has a relatively large internal resistance of the battery cell when the battery cell capacity is the same, it can have a larger A value.

For the battery cell using an electrode plate including a current collector and an active material layer in the embodiments of the present application, when the coefficient A satisfies 40Ah·mQ<A<2000Ah·mQ, the battery cell can have good electrochemical performance and good safety performance.

When the A value is too large, the electrochemical performance of the battery cell will be degraded due to excessive internal resistance, so it is not practical.

When the A value is too small, the temperature of the battery cell will rise too high when an internal short circuit occurs, and the safety performance of the battery cell will be reduced.

Further preferably, the coefficient A satisfies 40Ah·mΩ≤A≤1000Ah·mΩ; more preferably, the coefficient A satisfies 60Ah·mΩ≤A≤600Ah·mΩ.

The battery cell using an electrode plate including a current collector and an active material layer in the embodiments of the present application also relates to the use of the current collector in preparing a battery cell that only forms a point break to protect itself when subjected to abnormal conditions that cause short circuits. In the embodiments of the present application, the battery cell can limit the influence of short circuit damage on the battery cell to the" point" range, the normal use of the battery cell in a short time is not affected, which is called" point break".

In another aspect, the embodiments of the present application further relate to the use of the current collector as a current collector for a battery cell that only forms a point break when subjected to an abnormal situation that causes a short circuit.

Preferably, the abnormal conditions that cause short circuit include collision, extrusion, foreign matter piercing, etc. Since the short circuit caused during these damage processes is caused by electrically connecting the positive and negative electrodes with materials with certain conductivity, in the embodiments of the present application, these abnormal conditions are collectively referred to as nail penetration. In the detailed description of the present application, a nail penetration experiment is used to simulate the abnormal situation of the battery cell.

Embodiments

1. Preparation of current collector

A supporting layer such as an insulating layer of a certain thickness was selected, a conductive layer of a certain thickness was formed on its surface by vacuum evaporation, mechanical rolling or bonding, and the room temperature film resistance of the conductive layer was measured.

Among others,

(1) The forming conditions of the vacuum evaporation method were as follows: a surface-cleaned insulating layer was placed in the vacuum plating chamber, the high-purity metal wire in the metal evaporation chamber was melted and evaporated at a high temperature of 1600°C to 2000°C; after passing through the cooling system in the vacuum plating chamber, the evaporated metal was finally deposited on the surface of the insulating layer to form a conductive layer.

(2) The forming conditions of the mechanical rolling method were as follows: the foil of the conductive layer material was placed in the mechanical roller, rolled to a predetermined thickness by applying a pressure of 20t to 40t, then placed on the surface of the insulating layer with cleaned surfaces, and finally the two were placed in a mechanical roller to combine them tightly by applying a pressure of 30t to 50t.

(3) The forming conditions of the bonding method were as follows: The foil of the conductive layer material was placed in a mechanical roller, and rolled to a predetermined thickness by applying a pressure of 20t to 40t; then, on the surface of the insulating layer that has been cleaned, a mixed solution of PVDF and NMP was coated; finally, the aforementioned conductive layer with a predetermined thickness was bonded to the surface of the insulating layer and dried at 100°C.

(4) The method for measuring film resistance at normal temperature was as follows:
An RTS-9 double electric four-probe tester was used, and the test environment was as follows: normal temperature 23±2°C, relative humidity <_65%.

When testing, the surface of the material to be tested was cleaned, then it was placed horizontally on the test board, the four probes were put down so that the probes had good contact with the surface of the material to be tested, and then the automatic test mode was adjusted to calibrate the current range of the material, the film rectangular resistance was measured under an appropriate certain current range, and 8 to 10 data points of the same sample were collected for data measurement accuracy and error analysis.

The specific parameters of the current collectors and their electrode plates in the embodiments of the present application are shown in Table 13, and the specific parameters of the current collectors and their electrode plates in the comparative embodiments are shown in Table 14.

2. Preparation of electrode plate

Through the conventional battery cell coating process, the positive electrode slurry or negative electrode slurry was coated on the surface of the current collector, and the positive electrode plate or negative electrode plate was obtained after drying at 100°C.

Conventional positive electrode plate: the current collector was an Al foil with a thickness of 12 $\mu$m, and the electrode active material layer was a ternary (NCM) material layer of a certain thickness.

Conventional negative electrode plate: the current collector was Cu foil with a thickness of 8 $\mu$m, and the electrode active material layer was a graphite material layer of a certain thickness.

The specific parameters of the current collectors and their electrode plates in the embodiments of the present application are shown in Table 13, and the specific parameters of the current collectors and their electrode plates in the comparative embodiments are shown in Table 14.

3. Preparation of battery cells:

Through the conventional battery cell manufacturing process, the positive electrode plate (compacted density: 3.4g/cm3), PP/PE/PP separator and negative electrode plate (compacted density: 1.6g/cm3) were wound together into a bare battery cell. Then it was placed in the battery cell case, injected with an electrolyte solution (EC:EMC in a volume ratio of 3:7, 1mol/L LiPF6), and then subjected to processes such as sealing and formation to finally obtain the lithium-ion battery cell.

The specific composition of the lithium-ion battery cells produced in the embodiments of the present application and the lithium-ion battery cells of the comparative embodiments are shown in Table 15.

Table 13

| Electrode plate No. | Supporting layer | | Conductive layer | | Formation method | Rs(Ω/□) | Electrode active material layer | |
|---|---|---|---|---|---|---|---|---|
| | Materia l | d1 | Mate rial | d2 | | | Materia l | Thicknes s |
| Electrode plate 1# | PI | 1$\mu$m | Ti | 1nm | Vacuum evaporation | 420 | LCO | 55$\mu$m |
| Electrode plate 2# | PET | 5$\mu$m | Al | 30nm | Vacuum evaporation | 0.94 | LCO | 55$\mu$m |

(continued)

| Electrode plate No. | Supporting layer | | Conductive layer | | Formation method | Rs(Ω/□) | Electrode active material layer | |
|---|---|---|---|---|---|---|---|---|
| | Material | d1 | Material | d2 | | | Material | Thickness s |
| Electrode plate 3# | PI | 9μm | Al | 200nm | Vacuum evaporation | 0.14 | NCM | 55μm |
| Electrode plate 4# | PI | 30μm | Ag | 1000nm | Mechanical rolling | 0.016 | NCM | 55μm |
| Electrode plate 5# | PI | 2μm | Cu | 5nm | Vacuum evaporation | 3.36 | Graphite | 70μm |
| Electrode plate 6# | PI | 5μm | Cu | 20nm | Vacuum evaporation | 0.84 | Graphite | 70μm |
| Electrode plate 7# | PET | 8μm | Ni | 160nm | Vacuum evaporation | 0.44 | Graphite | 70μm |
| Electrode plate 8# | PET | 20μm | Al | 500nm | Vacuum evaporation | 0.034 | NCM | 55μm |

Table 14

| Electrode plate No. | Supporting layer | | Conductive layer | | Formation method | Rs (Ω/□) | Electrode active material layer | |
|---|---|---|---|---|---|---|---|---|
| | Material | d1 | Material | d2 | | | Material | Thickness s |
| Electrode plate of Comparative Embodiment 1# | PI | 9μ m | Al | 2000nm | Bonding | 0.014 | LCO | 55μm |
| Electrode plate of Comparative Embodiment 2# | PET | 20 μm | Cu | 1200nm | Mechanical rolling | 0.014 | Graphite | 70μm |

Table 15

| Lithium-ion battery cell No. | Composition of electrode plate | | Cap (Ah) |
|---|---|---|---|
| Lithium-ion battery cell 1 # | Conventional positive electrode plate | Conventional negative electrode plate | 3.2 |
| Lithium-ion battery cell 2 # | Electrode plate 1# | Conventional negative electrode plate | 3.2 |
| Lithium-ion battery cell 3 # | Electrode plate 2# | Conventional negative electrode plate | 3.2 |
| Lithium-ion battery cell 4 # | Electrode plate 3# | Conventional negative electrode plate | 3.2 |
| Lithium-ion battery cell 5 # | Electrode plate 4# | Conventional negative electrode plate | 3.2 |

(continued)

| Lithium-ion battery cell No. | Composition of electrode plate | | Cap (Ah) |
|---|---|---|---|
| Lithium-ion battery cell 6 # | Electrode plate of Comparative Embodiment 1# | Conventional negative electrode plate | 3.2 |
| Lithium-ion battery cell 7 # | Conventional positive electrode plate | Electrode plate 5# | 3.2 |
| Lithium-ion battery cell 8 # | Conventional positive electrode plate | Electrode plate 6# | 3.2 |
| Lithium-ion battery cell 9 # | Conventional positive electrode plate | Electrode plate 7# | 3.2 |
| Lithium-ion battery cell 10 # | Electrode plate 8# | Conventional negative electrode plate | 3.2 |
| Lithium-ion battery cell 11 # | Conventional positive electrode plate | Electrode plate of Comparative Embodiment 2# | 3.2 |
| Lithium-ion battery cell 12 # | Electrode plate 2# | Electrode plate 7# | 3.2 |
| Lithium-ion battery cell 13 # | Electrode plate 3# | Electrode plate 6# | 3.2 |
| Lithium-ion battery cell 14 # | Electrode plate 3# | Conventional negative electrode plate | 10.5 |
| Lithium-ion battery cell 15 # | Electrode plate 3# | Conventional negative electrode plate | 48 |

Among them, by further increasing the number of winding layers of the battery cell, lithium-ion battery cell 14# and lithium-ion battery cell 15# with further increased capacity were prepared.

Experimental Embodiments

1. Battery cell testing method:

The cycle life of lithium-ion battery cells was tested. The specific test method is as follows: The lithium-ion battery cell 1# and lithium-ion battery cell 4# were charged and discharged at two temperatures of 25°C and 45°C respectively, that is, first charged with a current of 1C to 4.2V, and then discharged with a current of 1C to 2.8V, the discharge capacity of the first cycle was recorded; then a 1C/1C charge and discharge cycle was performed on the battery cell for 1000 cycles, and the discharge capacity of the battery cell of the 1000th cycle was recorded; the discharge capacity of the 1000th cycle was divided by the discharge capacity of the first cycle to obtain the capacity retention rate of the 1000th cycle.

The experimental results are as shown in Table 16.

2. Testing of battery cell internal resistance

The test was conducted using an internal resistance meter (model HIOKI-BT3562). The test environment was: normal temperature $23 \pm 2°C$. Before the test, the positive and negative ends of the internal resistance meter was short-circuited to calibrate the resistance to zero; during the test, the positive and negative electrode tabs of the lithium-ion battery cell to be tested were cleaned, and then the positive and negative electrode test ends of the internal resistance meter were connected to the positive and negative electrode tabs of the lithium-ion battery cell respectively for testing and recording. The coefficient A was calculated according to the formula r=A/Cap.

3. Experimental methods and test methods for one-time nail penetration experiment and six-time consecutive nail penetration experiment:

(1) One-time nail penetration experiment: After the battery cell was fully charged, it was fixed, the battery cell was penetrated with a steel needle with a diameter of 8mm at a speed of 25mm/s at room temperature, the steel needle was kept in the battery cell, and after nail penetration was completed, the battery cell was observed and tested.

(2) Six-time nail penetration experiment: After the battery cell was fully charged, it was fixed, six steel needles with a diameter of 8mm were quickly penetrated through the battery cell in sequence at a speed of 25mm/s at room temperature, the steel needles were kept in the battery cell, and after nail penetration was completed, the battery cell was observed and tested.

(3) Test of the battery cell temperature: Using multi-channel thermometer, temperature sensing wires were attached to the geometric center of the needling surface and back of the battery cell to be penetrated by nails. After the nail penetration was completed, the battery cell temperature was tracked and tested for five minutes, and then the battery cell temperature in the five minutes was recorded.

(4) Test of the battery cell voltage: The positive and negative electrodes of the battery cell to be penetrated by nails were connected to the measuring ends of the internal resistance meter. After the nail penetration was completed, the battery cell voltage was tracked and tested for five minutes, and then the battery cell voltage in the five minutes was recorded.

The recorded battery cell temperature and voltage data are shown in Table 17.

Table 16

| Lithium-ion battery cell No. | Capacity retention rate | |
| --- | --- | --- |
| | 25°C | 45°C |
| Lithium-ion battery cell 1 # | 89.2% | 86.5% |
| Lithium-ion battery cell 2 # | 88.0% | 86.2% |

Table 17

| Lithium-ion battery cell No. | One-time nail penetration experiment | | Six-time consecutive nail penetration experiment | |
| --- | --- | --- | --- | --- |
| | Battery cell temperature rise (°C) | Battery cell voltage (V) | Battery cell temperature rise (°C) | Battery cell voltage (V) |
| Lithium-ion battery cell 1 # | 500 | 0 | N/A | N/A |
| Lithium-ion battery cell 2 # | 2.1 | 4.25 | 3.7 | 4.25 |
| Lithium-ion battery cell 3 # | 3.4 | 4.35 | 3.2 | 4.32 |
| Lithium-ion battery cell 4 # | 3.5 | 4.15 | 4.1 | 4.14 |
| Lithium-ion battery cell 5 # | 8.7 | 4.05 | 10.2 | 3.96 |
| Lithium-ion battery cell 6 # | 270 | 0 | N/A | N/A |
| Lithium-ion battery cell 7 # | 2.5 | 4.15 | 2.3 | 4.13 |

(continued)

| Lithium-ion battery cell No. | One-time nail penetration experiment | | Six-time consecutive nail penetration experiment | |
|---|---|---|---|---|
| | Battery cell temperature rise (°C) | Battery cell voltage (V) | Battery cell temperature rise (°C) | Battery cell voltage (V) |
| Lithium-ion battery cell 8 # | 2.3 | 4.16 | 4.0 | 4.06 |
| Lithium-ion battery cell 9 # | 2.1 | 4.15 | 2.3 | 4.11 |
| Lithium-ion battery cell 10 # | 8.0 | 4.03 | 11.2 | 3.95 |
| Lithium-ion battery cell 11 # | 540 | 0 | N/A | N/A |
| Lithium-ion battery cell 12 # | 2.7 | 4.30 | 3.5 | 4.29 |
| Lithium-ion battery cell 13 # | 3.1 | 4.13 | 4.8 | 4.10 |
| Note: "N/A" means that if a steel needle penetrates the battery cell, thermal runaway and destruction will occur instantly. | | | | |

Table 18

| Lithium-ion battery cell No. | Cap (Ah) | r (mΩ) | Coefficient A | One-time nail penetration experiment |
|---|---|---|---|---|
| | | | | Battery temperature rise (°C) |
| Lithium-ion battery cell 4 # | 3.2 | 40 | 128 | 3.5 |
| Lithium-ion battery cell 5 # | 3.2 | 13 | 42 | 8.7 |
| Lithium-ion battery cell 14 # | 10.5 | 12 | 126 | 3.8 |
| Lithium-ion battery cell 15 # | 48 | 8 | 384 | 2.6 |
| Lithium-ion battery cell 6 # | 3.2 | 10 | 32 | 270 |
| Lithium-ion battery cell 11 # | 3.2 | 8.5 | 27 | 540 |

The battery cell temperature v.s. time curves of the lithium-ion battery cell 1# and lithium-ion battery cell 4# are shown in Fig. 199, and the voltage v.s. time curves are shown in Fig. 200.

According to the results in Table 16, compared with the lithium-ion battery cell 1# using conventional positive electrode plates and conventional negative electrode plates, the lithium-ion battery cell 4# using the current collector of the embodiments of the present application has good cycle life, which is equivalent to the cycling performance of conventional battery cells. This shows that the current collector in the embodiments of the present application does not have any obvious adverse effects on the produced electrode plates and battery cells.

In addition, the current collectors of the embodiments of the present application can greatly improve the safety performance of lithium-ion battery cells. Judging from the results in Table 17 and Figs. 199 and 200, for the lithium-ion battery cells 1#, 6#, and 11# that did not use the current collectors of the embodiments of the present application, at the moment of nail penetration, the temperature of the battery cells increased sharply by several hundred degrees and the voltage plummeted to zero. This shows that at the moment of nail penetration, the battery cell was internally short-circuited, generating a large amount of heat, the battery cell instantly suffered thermal runaway and damage, and could not continue to work. Also, because the battery cell was thermally runaway and destroyed at the moment after the first steel needle penetrated into the battery cell, it was impossible to carry out the experiment of six steel needles penetrating the battery cell consecutively.

As for the lithium-ion battery cells 2# to 5#, 7# to 10#, 12# and 13# using the current collectors in the embodiments of the present application, no matter whether one nail penetration test or six-time consecutive nail penetration experiments were performed on them, the temperature rise of the battery cell could basically be controlled at around 10°C or below 10°C, the voltage remained basically stable, and the battery core could work normally.

The data in Table 18 shows that the coefficient A of the lithium-ion battery cell 6# and the lithium-ion battery cell 11 # that did not use the current collector of the embodiments of the present application was small. The coefficient A of the lithium-ion battery cells 4#, 5#, 14#to 15⁴ using the current collector in the embodiments of the present application was larger. It is confirmed that the larger the coefficient A is, the smaller the temperature rise will be when an internal short circuit occurs in the battery cell under abnormal circumstances, and the better the safety performance of the battery cell will be.

Therefore, in the case of an internal short circuit of a battery cell, the current collector of the embodiments of the present application can greatly reduce the heat generation due to the short circuit, thereby improving the safety performance of the battery cell; in addition, the influence of the short circuit damage on the battery cell can be limited to the "point" range, only forming a "point break", without affecting the normal operation of the battery cell in a short period of time.

Further, the light transmittance k of the supporting layer satisfies: 0%≤k≤98%.

In some embodiments, for the current collector including a supporting layer and a conductive layer, the current collector has a high absorption rate of laser energy, so that the current collector, and the electrode plate and electrochemical device using the current collector can be processed during laser cutting with high processability and processing efficiency. In particular, it has high processability and processing efficiency during low-power laser cutting processing. The laser power during the aforementioned laser cutting process is, for example, 100W or less.

Preferably, the light transmittance k of the supporting layer satisfies 0≤k≤95%, which can better improve the processability and processing efficiency of the current collector and the electrode plate and electrochemical device using the current collector during laser cutting processing, especially improve the processability and processing efficiency during low-power laser cutting. More preferably, the light transmittance k of the supporting layer satisfies 15%≤k≤90%.

In some embodiments, the supporting layer contains colorants. By adding a colorant to the supporting layer and adjusting the content of the colorant, the light transmittance of the supporting layer can be adjusted.

The colorant can cause the supporting layer to display a certain degree of black, blue or red, but is not limited thereto. For example, it can also cause the supporting layer to display a certain degree of yellow, green or purple.

The colorant may be one or more of inorganic pigments and organic pigments.

Inorganic pigments are, for example, one or more of carbon black, cobalt blue, ultramarine blue, iron oxide, cadmium red, chrome orange, molybdenum orange, cadmium yellow, chrome yellow, nickel titanium yellow, titanium white, zinc barium white and zinc white.

The organic pigment may be one or more of phthalocyanine pigments, azo pigments, anthraquinone pigments, indigo pigments and metal complex pigments. As an example, the organic pigment may be one or more of plastic red GR, plastic violet RL, lightfast yellow G, permanent yellow, rubber scarlet LC, phthalocyanine blue and phthalocyanine green.

In some embodiments, the thickness d1 of the supporting layer is preferably 1μm≤d1≤30 μm, which is beneficial to improving the processability and processing efficiency of the current collector during laser cutting, and in particular improving the processability and processing efficiency of the current collector during low-power laser cutting. At the same time, the mechanical strength of the supporting layer is ensured, preventing the supporting layer from breaking during the processing of current collectors, electrode plates and electrochemical devices, and ensuring that the electrochemical device has a high gravimetric energy density.

Among them, the upper limit of the thickness d1 of the supporting layer can be 30μm, 25μm, 20μm, 15μm, 12μm, 10μm, 8μm, and the lower limit can be 1μm, 1.5μm, 2μm, 3μm, 4μm, 5μm, 6μm, 7μm; the thickness d1 of the supporting layer can be composed of any value of the upper limits or the lower limits. Preferably, the thickness d1 of the supporting layer is 1μm≤d1≤20μm; further preferably 2μm≤d1≤15μm; and more preferably 3μm≤d1≤12μm.

In some embodiments, the thickness d1 of the supporting layer and the light transmittance k of the supporting layer satisfy:

in the case of 12μm≤d1≤30μm, it satisfies 30%≤k≤80%; and/or,
in the case of 8μm≤d1<12μm, it satisfies 40%≤k≤90%; and/or,
in the case of 1μm≤d1<8μm, it satisfies 50%≤k≤98%

The thickness and light transmittance of the supporting layer satisfy the above relationship, so that when the laser irradiates the supporting layer, the supporting layer can absorb as much laser energy as possible, so that the current collector has high processability and processing efficiency during laser cutting processing, especially, the current collector has higher processability and processing efficiency during low-power laser cutting processing, avoiding adhesion. The thickness and light transmittance of the supporting layer satisfy the above relationship, which is also conducive to making the supporting layer have appropriate mechanical strength and preventing the supporting layer from breaking during the processing of current collectors, electrode plates and electrochemical devices.

Preferably, the tensile strength of the supporting layer in the MD direction (Mechanical Direction) is greater than or equal to 100Mpa, and further preferably is 100Mpa to 400Mpa.

The tensile strength of the supporting layer in the MD direction can be tested using equipment and methods known in the art. For example, the maximum tensile stress of the supporting layer when it breaks in MD direction is tested using a tensile strength tester, preferably with a Japanese ALGOL tensile test head, according to the DIN53455-6-5 measurement standard, and the ratio of the maximum tensile stress experienced when the supporting layer breaks in the MD direction to the cross-sectional area of the supporting layer is the tensile strength of the supporting layer in the MD direction.

The supporting layer can have the aforementioned tensile strength by adjusting the chemical composition, molecular weight and distribution, chain structure and chain construction, aggregation structure, phase structure, etc. of the polymer material.

In some embodiments, the conductive material of the conductive layer may be one or more of metallic materials, carbon-based conductive materials, and conductive polymer materials.

As an example, the aforementioned metallic material can be one or more of aluminum, aluminum alloy, copper, copper alloy, nickel, nickel alloy, iron, iron alloy, titanium, titanium alloy, silver and silver alloy, preferably one or more of aluminum, copper, nickel, iron, titanium, silver, nickel-copper alloy and aluminum-zirconium alloy.

When the conductive layer is made of metallic materials, the conductive layer may be formed on the supporting layer by at least one of mechanical rolling, bonding, vapor deposition, and electroless plating, wherein the vapor deposition is preferably physical vapor deposition (PVD); the physical vapor deposition is preferably at least one of evaporating and sputtering method; the evaporating is preferably at least one of vacuum evaporating, thermal evaporation deposition, and electron beam evaporation method (EBEM), and the sputtering is preferably magnetron sputtering.

Preferably, the conductive layer made of metallic materials can be formed on the supporting layer by at least one of vapor deposition and electroless plating, so as to make the connection between the supporting layer and the conductive layer stronger.

As an example, the conditions for forming the conductive layer by mechanical rolling described above are as follows: the metallic foil is placed in the mechanical roller, rolled to a predetermined thickness by applying a pressure of 20t to 40t, placed on the surface of the supporting layer with cleaned surfaces, and then the two are placed in a mechanical roller to combine them tightly by applying a pressure of 30t to 50t.

As another example, the conditions for forming a conductive layer through bonding described above are as follows: the metallic foil is placed in a mechanical roller, and rolled to a predetermined thickness by applying a pressure of 20t to 40t; then, on the surface of the supporting layer that has been cleaned, a mixed solution of polyvinylidene fluoride (PVDF) and N- methyl pyrrolidone (NMP) is coated; finally, the aforementioned conductive layer with a predetermined thickness is bonded to the surface of the supporting layer and dried at 100°C.

As yet another example, the conditions for forming the conductive layer by vacuum evaporation described above are as follows: the surface-cleaned supporting layer is placed in the vacuum plating chamber, the high-purity metal wire in the metal evaporation chamber is melted and evaporated at a high temperature of 1300°C to 2000°C; after passing through the cooling system in the vacuum plating chamber, the evaporated metal was finally deposited on the surface of the supporting layer to form a conductive layer.

The aforementioned carbon-based conductive material may be, for example, one or more of graphite, superconducting carbon, acetylene black, carbon black, Ketjen black, carbon dot, carbon nanotube, graphene, and carbon nanofiber.

When the conductive layer uses a carbon-based conductive material, it can be formed on the supporting layer by at least one of mechanical rolling, bonding, vapor deposition, in-situ formation, and coating.

The aforementioned conductive polymer material is, for example, one or more of polysulfur nitrides, aliphatic conjugated polymers, aromatic ring conjugated polymers and aromatic heterocyclic conjugated polymers. The aliphatic conjugated polymer is, for example, polyacetylene; the aromatic ring conjugated polymer is, for example, one or more of polyparaphenylene, polyphenylene, and polynaphthalene; the aromatic heterocyclic conjugated polymer is, for example, one or more of polypyrrole, polyacetylene, polyaniline, polythiophene and polypyridine. Doping can also be used to increase electron delocalization and improve conductivity, which is beneficial to further improving the rate performance of electrochemical devices.

When the conductive layer uses a conductive polymer material, it can be formed on the supporting layer by at least one of mechanical rolling, bonding, in-situ formation, and coating.

The conductive layer is preferably made of metallic materials, such as metal foil, carbon-coated metal foil or porous metal plate.

The provision of the supporting layer can significantly reduce the thickness of the conductive layer in the current collector of the present application compared with traditional metal current collectors. The thickness d2 of the conductive layer is preferably $30nm \leq D2 \leq 3\mu m$. Reducing the thickness of the conductive layer can reduce the weight of the current collector, electrode plates and electrochemical devices, and increase the gravimetric energy density of the electrochemical device. Also, due to the reduced thickness of the conductive layer, under abnormal conditions such as the battery cell being punctured by a sharp object, the metal burrs produced by the current collector are smaller, thereby better improving the safety performance of the electrochemical device. Using a conductive layer with a thickness of $30nm \leq d2 \leq 3\mu m$, the current collector has good conductivity and current collection properties, which is beneficial to reducing the internal resistance of the battery cell and reducing the polarization phenomenon, thus improving the rate performance and cycling performance of the electrochemical device.

The upper limit of the thickness d2 of the conductive layer can be $3\mu m$, $2.5\mu m$, $2\mu m$, $1.8\mu m$, $1.5\mu m$, $1.2\mu m$, $1\mu m$, 900nm, the lower limit of the thickness d2 of the conductive layer can be 800nm, 700nm, 600nm, 500nm, 450nm, 400nm, 350nm, 300nm, 100nm, 50nm, 30nm, and the range of the thickness D2 of the conductive layer can be composed of any of the upper limits and lower limits. Preferably, the thickness d2 of the conductive layer is $300nm \leq d2 \leq 2\mu m$.

As an example, conductive layers are provided on both surfaces of the supporting layer in the thickness direction, with thicknesses of d21 and d22 respectively, where it satisfies $30nm \leq d21 \leq 3\mu m$, preferably $300nm \leq d21 \leq 2\mu m$; $30nm \leq d22 \leq 3\mu m$, preferably $300nm \leq d22 \leq 2\mu m$.

As another example, the conductive layer is provided on only one of the two surfaces of the supporting layer itself in the thickness direction, with a thickness of d23, where it satisfies $30nm \leq d23 \leq 3\mu m$, preferably $300nm \leq d23 \leq 2\mu m$.

The current collector of the present application can be used as one or both of the positive electrode current collector and the negative electrode current collector.

When the current collector of the present application is used in a positive electrode plate, for example, as a positive electrode current collector, the conductive layer of the current collector can be a metal foil, a carbon-coated metal foil, or a porous metal plate, such as aluminum foil.

When the current collector of the present application is used in a negative electrode plate, for example, as a negative electrode current collector, the conductive layer of the current collector can be a metal foil, a carbon-coated metal foil, or a porous metal plate, such as copper foil.

When the electrode plate of the present application is used as a positive electrode plate, the active material layer can use a positive electrode active material known in the art, which can reversibly intercalate/deintercalate ions.

Taking lithium-ion secondary battery cells as an example, the positive electrode active material uses compounds that can reversibly intercalate/deintercalate lithium ions, such as lithium-containing transition metal oxides, where the transition metals can be one or more of Mn, Fe, Ni, Co, Cr, Ti, Zn, V, Al, Zr, Ce and Mg. As an example, the lithium-containing transition metal oxide may be one or more of $LiMn_2O_4$, $LiNiO_2$, $LiCoO_2$, $LiNi_{1-y}Co_yO_2$ ($0 < y < 1$), $LiNi_aCo_bAl_{1-a-b}O_2$ ($0 < a < 1$, $0 < b < 1$, $0 < a+b < 1$), $LiMn_{1-m-n}Ni_mCo_nO_2$ ($0 < m < 1$, $0 < n < 1$, $0 < m+n < 1$), $LiMPO_4$ (M can be one or more of Fe, Mn, and Co) and $Li_3V_2(PO_4)_3$.

Lithium-containing transition metal oxides can also be doped or surface-coated to give the compounds a more stable structure and better electrochemical properties.

The active material layer of the positive electrode plate can further include a binder and a conductive agent. The binder and the conductive agent are not particularly limited in the present application, and can be selected according to actual needs.

As an example, the above binder may be one or more of styrene butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), and polyvinyl alcohol (PVA).

As an example, the above conductive agent may be one or more selected from graphite, superconducting carbon, acetylene black, carbon black, Ketjen black, carbon dot, carbon nanotube, graphene, and carbon nanofiber.

The positive electrode plate can be prepared in accordance with the conventional method in the art. Generally, the positive electrode active material, and the optional conductive agent and binder can be dispersed in a solvent (such as N-methyl pyrrolidone, NMP for short) to form a uniform positive electrode slurry, the positive electrode slurry is coated on the positive electrode current collector, and after drying, cold pressing and other processes, a positive electrode plate is obtained.

When the electrode plate of the present application is used as a negative electrode plate, the active material layer can use a negative electrode active material known in the art, which can reversibly intercalate/deintercalate ions.

Taking the same lithium-ion secondary battery cell as an example, the negative electrode active material uses a substance that can reversibly intercalate/deintercalate lithium ions, such as one or more of metallic lithium, natural graphite, artificial graphite, mesocarbon microbeads (abbreviated as MCMB), hard carbon, soft carbon, silicon, silicon-carbon composite, SiO, Li-Sn alloy, Li-Sn-O alloy, Sn, SnO, $SnO_2$, spinel structure lithium titanate $Li_4Ti_5O_{12}$ and Li-Al alloys.

The active material layer of the negative electrode plate can further include a binder and a conductive agent. The binder and the conductive agent are not particularly limited in the present application, and can be selected according to actual needs.

As an example, the binder may be one or more of styrene butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), and polyvinyl alcohol (PVA).

As an example, the above conductive agent may be one or more selected from graphite, superconducting carbon, acetylene black, carbon black, Ketjen black, carbon dot, carbon nanotube, graphene, and carbon nanofiber.

Thickeners such as carboxymethylcellulose (CMC) may also be included in the negative electrode plate.

The negative electrode plate can be prepared in accordance with the conventional method in the art. Generally, the negative electrode active material, and the optional conductive agent, binder band thickener can be dispersed in a solvent which may be deionized water or NMP, to form a uniform negative electrode slurry, the negative electrode slurry is coated on the negative electrode current collector, and after drying, cold pressing and other processes, a negative electrode plate is obtained.

In some embodiments, the positive electrode plate, the separator and the negative electrode plate of the battery cell are stacked sequentially, so that the separator is positioned between the positive electrode plate and the negative electrode plate to separate them to obtain an electrode assembly, or they can be wound to obtain an electrode assembly; the electrode assembly is put into a package shell, then injected with an electrolyte solution and sealed, thereby preparing a battery cell.

It takes a lithium-ion secondary battery cell as an example to illustrate the battery cell:

Embodiment 1

Preparation of supporting layer

The supporting material was PET. A certain content of colorant carbon black was added to the PET and mixed evenly. The supporting layer was obtained after extrusion casting, cold roll rolling and bidirectional stretching of the PET in a hot-melt state.

Preparation of current collector

The supporting layer was placed in the vacuum plating chamber, and the high-purity aluminum wire in the metal evaporation chamber was melted and evaporated at a high temperature of 1300°C to 2000°C. The evaporated metal passed through the cooling system in the vacuum plating chamber and was finally deposited on both surfaces of the supporting layer, forming a conductive layer. Thee thickness D2 of the conductive layer on both surfaces was equal.

Embodiments 2 to 10

Different from Embodiment 1, the relevant parameters during the preparation process were adjusted, and the specific parameters are shown in Table 19 below.

Comparative Embodiment 1

Different from Embodiment 4, no colorant was added to the supporting layer.

Tests

(1) Test of light transmittance of supporting layer:
Using the LS 1 17 light transmittance meter, the light transmittance of the supporting layer was tested in accordance with the GB2410-80 standard, including: first, the instrument was powered on and self-calibrated. The interface displays T = 100%, which means the calibration is OK. Then, the supporting layer sample was clamped between the probe and the receiver. The interface automatically displayed the light transmittance value of the supporting layer.
(2) Test of tensile strength of the supporting layer in the MD direction:
Using a tensile strength tester, the tensile strength of the supporting layer in the MD direction was tested according to the DIN53455-6-5 standard. The Japanese ALGOL (1kg) tensile test head was used, and the supporting layer sample was mounted between the two test heads to test the maximum tensile stress when the supporting layer broke in the MD direction. The ratio of the maximum tensile stress experienced when the supporting layer breaks in the MD direction to the cross-sectional area of the supporting layer sample is the tensile strength of the supporting layer in the MD direction.
(3) Current collector cutting performance test:

IPG company's model YLP-V2-1-100-100-100 optical fiber laser was used, the power was set to 100W and the frequency to 150kHz. The current collector was mounted on the cutting component of the laser for cutting, and the maximum cut-off speed of the current collector was tested. The maximum cut-off speed of the current collector refers to the maximum cutting speed that can be achieved when laser cuts the current collector without adhesion.

The test results of Embodiments 1 to 10 and Comparative Embodiment 1 are shown in Table 19 below.

Table 19

|  | Conductive layer | | Supporting layer | | | | | Maximu m cut-off speed m/min |
|---|---|---|---|---|---|---|---|---|
|  | Material | d2 μm | Material | d1 μ m | Colorant | Transmittance % | Tensile strengt h Mpa |  |
| Embodime nt 1 | Al | 0.0 3 | PET | 1 | Carbon black | 98 | 50 | 30 |
| Embodime nt 2 | Al | 0.3 | PET | 6 | Carbon black | 92 | 149 | 36 |
| Embodime nt 3 | Al | 1 | PET | 6 | Carbon black | 87 | 137 | 50 |
| Embodime nt 4 | Al | 1 | PET | 10 | Carbon black | 96 | 237 | 20 |
| Embodime nt 5 | Al | 1 | PET | 10 | Cadmiu m red | 55 | 185 | 80 |
| Embodime nt 6 | Al | 1.5 | PET | 15 | Cobalt blue | 80 | 298 | 30 |
| Embodime nt 7 | Al | 2 | PET | 15 | Carbon black | 54 | 246 | 60 |
| Embodime nt 8 | Al | 2 | PET | 20 | Carbon black | 45 | 300 | 55 |
| Embodime nt 9 | Al | 3 | PET | 30 | Carbon black | 40 | 323 | 50 |
| Embodime nt 10 | Al | 0.0 3 | PET | 30 | Carbon black | 40 | 323 | 55 |
| Comparativ e Embodime nt 1 | Al | 1 | PET | 10 | / | 100 | 247 | 15 |

Comparative analysis of Embodiments 4 and 5 and Comparative Embodiment 1 shows that by reducing the light transmittance of the supporting layer, the cutting speed of the current collector is significantly increased under low-power laser cutting without adhesion.

Through the test results of Embodiments 1 to 10, it can be concluded that by reducing the light transmittance of the supporting layer, the cutting performance and cutting speed of the current collector during laser cutting are significantly improved in the present application. In particular, the cutting performance and cutting rate of the current collector are significantly improved during low-power laser cutting.

Hereinafter, the positive electrode active material of the present application is specifically disclosed in detail with appropriate reference to the drawings.

In some embodiments, a battery cell 20 includes an electrode assembly 22, the electrode assembly 22 is electrically connected to electrode terminals 214, the electrode assembly 22 includes a positive electrode plate 1B, the positive electrode plate 1B includes a positive electrode current collector 10B and a positive electrode active material layer 11b coated on the surface of the positive electrode current collector 10B, and the positive electrode active material layer 11B includes a positive electrode active material.

The positive electrode active material has an inner core and a shell covering the inner core. The inner core includes at least one of ternary materials, $dLi_2MnO_3 \cdot (1-d)LiMO_2$ and $LiMPO_4$, $0<d<1$, M includes one or more selected from Fe, Ni, Co, and Mn, the shell contains crystalline inorganic substances. The full width at half maximum of the main peak of the crystalline inorganic substances measured using X-ray diffraction is 0-3°. The crystalline inorganic substances include one or more selected from metal oxides and inorganic salts. The crystalline material has a stable lattice structure and has a better interception effect on active metal ions such as Mn that are easily eluted.

The inventor of the present application found that in order to improve the performance of the battery cells, such as increasing capacity, improving rate performance, cycling performance, etc., the positive electrode active materials currently used for lithium ion secondary battery cells often incorporate doping elements in ternary positive electrode active materials, or $LiMPO_4$ that may be used in high-voltage systems, such as $LiMnPO_4$, $LiNiPO_4$, $LiCoPO_4$, or Li-rich manganese-based positive electrode active materials. The aforementioned doping elements can replace sites such as active transition metals in the aforementioned materials, thereby improving the battery cell performance of the materials. On the other hand, Mn element may be added to materials such as lithium iron phosphate, but the addition or doping of the aforementioned active transition metals and other elements can easily lead to the dissolution of active metals such as Mn ions of the material during the deep charge and discharge process. On the one hand, the dissolved active metal elements will further migrate to the electrolyte solution, causing a catalyst-like effect after the negative electrode is reduced, causing the SEI film (solid electrolyte interphase) on the negative electrode surface to dissolve. On the other hand, the dissolution of the aforementioned metal elements will also cause the loss of the capacity of the positive electrode active material, and the crystal lattice of the positive electrode active material will have defects after dissolution, leading to problems such as poor cycling performance. Therefore, it is necessary to make improvements based on the aforementioned positive electrode materials containing active metal elements to alleviate or even solve the above problems. The inventor found that the crystalline inorganic substance whose main peak measured by X-ray diffraction has the aforementioned full width at half maximum has good ability to intercept the dissolved active metal ions, and the crystalline inorganic substance and the aforementioned inner core material can be well bound and have stable binding force. As a result, it is not easy to peel off during use, and a coating layer with appropriate area and good uniformity can be achieved through a relatively simple method.

Specifically, taking lithium manganese phosphate positive electrode active material as an example, the inventors of the present application have found in practical work that manganese ion dissolution is relatively serious in the deep charge-discharge process of the existing lithium manganese phosphate positive electrode active material. Although there are attempts in the prior art to coat lithium manganese phosphate with lithium iron phosphate to reduce interfacial side reactions, this coating cannot prevent the dissolved manganese ions from further migration into the electrolyte solution. The dissolved manganese ion is reduced to metallic manganese after migration to the negative electrode. The metal manganese produced in this way is equivalent to a "catalyst", which can catalyze the decomposition of the SEI film (solid electrolyte interphase) on the surface of the negative electrode to produce by-products; part of the by-products is gas, thus causing the secondary battery cells to expand, affecting the safety performance of the secondary battery cell; in addition, another part of the by-product is deposited on the surface of the negative electrode, which will hinder the passage of lithium ions in and out of the negative electrode, causing the impedance of the secondary battery cell to increase, thereby affecting the dynamic performance of secondary battery cells. In addition, in order to replenish the lost SEI film, active lithium in the electrolyte solution and inside the battery cell are continuously consumed, irreversibly affecting the capacity retention rate of the secondary battery cell. A new positive electrode active material with a core-shell structure can be obtained by modifying lithium manganese phosphate and multi-layer coating of lithium manganese phosphate. The positive electrode active material attains significantly reduced manganese ion dissolution and reduced lattice change rate and is useful in a secondary battery cell to improve the cycling performance, rate performance, and safety performance of the battery cell and increase the capacity of the battery cell.

In some embodiments, the battery cell 20 includes an electrode assembly 22, the electrode assembly 22 is electrically connected to electrode terminals 214, the electrode assembly 22 includes a positive electrode plate 1B, the positive electrode plate 1B includes a positive electrode current collector 10B and a positive electrode active material layer 11B coated on the surface of the positive electrode current collector 10B, and the positive electrode active material layer 11B includes a positive electrode active material; the positive electrode active material has $LiMPO_4$, where M includes Mn and non-Mn elements, and the non-Mn elements meet at least one of the following conditions: the ion radius of the non-Mn elements is a, the ion radius of the manganese elements is b, and $|a-b|/b$ is not more than 10%; the valence variable voltage of the non-Mn element is U, $2V<U<5.5V$; the chemical activity of the chemical bond formed by the non-Mn element and O is not less than that of P-O bond; the highest valence of the non-Mn element is not greater than 6.

As the positive electrode active material of lithium-ion secondary battery cells, compounds such as lithium manganese phosphate, lithium iron phosphate or lithium nickel phosphate that can be used in high-voltage systems in the future have low costs and good application prospects. However, taking lithium manganese phosphate as an example, its disadvantage compared with other positive electrode active materials is poor rate performance. Currently, this problem is usually solved through coating or doping. However, it is still hoped that the rate performance, cycling performance, high temperature stability, etc. of lithium manganese phosphate positive electrode active materials can be further improved.

The inventor of the present application has repeatedly studied the effects of doping various elements at the Li site, Mn site, P site and O site of lithium manganese phosphate, and found that the gram capacity, rate performance and cycling performance of the positive electrode active material can be improved by controlling the doping sites and specific elements, and doping content.

Specifically, selecting the appropriate Mn-site doping element can improve the lattice change rate of lithium manganese phosphate during the lithium deintercalation process of the material, improve the structural stability of the positive electrode material, greatly reduce the dissolution of manganese, and reduce the oxygen activity on the particle surface, thereby increasing the gram capacity of the material and reducing the interfacial side reactions between the material and the electrolyte solution during use, thus improving the material's cycling performance. More specifically, by selecting an element with an ionic radius similar to that of the Mn element as the Mn-site doping element, or selecting an element whose valence range is within the range of Mn for doping, the bond length between the doping element and O and the bond length of the Mn-O bond can be controlled, which is beneficial to stabilizing the lattice structure of the doped positive electrode material. In addition, a vacancy element that plays a role in supporting the crystal lattice can also be introduced into Mn, for example, the valence of this element is greater than or equal to the sum of the valences of Li and Mn, which is equivalent to introducing a vacancy site which cannot be combined with Li is into the active and easily dissolved Mn site, thereby supporting the crystal lattice.

For another example, selecting appropriate P-site doping elements can help change the difficulty of changing the Mn-O bond length, thereby improving electronic conductivity and lowering the lithium ion migration potential barrier, promoting lithium ion migration, and improving the rate performance of secondary battery cells. Specifically, the tetrahedral structure of the PO bond itself is relatively stable, making it difficult to change the Mn-O bond length, resulting in a high overall lithium ion migration potential barrier in the material. Appropriate P-site doping elements can improve the solidity of the PO bond tetrahedron, thereby promoting the improvement of the rate performance of the material. Specifically, elements whose chemical activity of the chemical bond formed with O is no less than that of the PO bond can be selected to be doped at the P site, thereby improving the ease with which the Mn-O bond length changes. In the present application," the chemical activity of the chemical bond formed with O is not less than the chemical activity of the P-O bond," without special indication, may be determine by means of a test method known to those skilled in the art for determining the activity of the chemical bond. For example, it can be determined by detecting the bond energy, or by referring to the electrochemical potential of the oxidation and reduction reagents used to break the chemical bond. Alternatively, it can select an element whose valence is not significantly higher than P, for example, an element lower than 6 for doping at the P site, thereby contributing to a reduction of the repulsive interaction between the Mn and P elements, and also improving the gram capacity, rate performance, etc. of the material.

Similarly, proper element doping at the Li site can also improve the material's lattice change rate and maintain the material's battery cell capacity.

O-site doping elements can help improve the interface side reactions between the material and the electrolyte solution, reduce the interface activity, and thus help improve the cycling performance of the positive electrode active material. In addition, doping at the O site can also improve the material's resistance to acid corrosion such as HF, which will help improve the cycling performance and life of the material.

In some embodiments of the present application, the inner core includes $LiMPO_4$, and M includes Mn and non-Mn elements, the non-Mn elements meet at least one of the following conditions: the ion radius of the non-Mn elements is a, the ion radius of the manganese elements is b, and |a-b|/b is not more than 10%; the valence variable voltage of the non-Mn element is U, 2V<U<5.5V; the chemical activity of the chemical bond formed by the non-Mn element and O is not less than that of P-O bond; the highest valence of the non-Mn element is not greater than 6.

In some embodiments, the non-Mn elements doped at the sites described above may include one or two of a first doping element and a second doping element, wherein the first doping element is doped at manganese site and the second doping element is doped at phosphorus site. The first doping element satisfies at least one of the following conditions: the ion radius of the first doping element is a, the ion radius of the manganese element is b, and |a-b|/b is not more than 10%; the valence variable voltage of the first doping element is U, 2V<U<5.5V. The second doping element satisfies at least one of the following conditions: the chemical activity of the chemical bond formed by the non-Mn element and O is not less than that of P-O bond; the highest valence of the non-Mn element is not greater than 6. In some embodiments, the positive electrode active material may also contain two first doping elements at the same time.

In some embodiments, the Mn site and P site in the above sites can be doped simultaneously. This not only can effectively reduce manganese dissolution, thereby reducing manganese ions migrating to the negative electrode, reducing electrolyte solution consumption due to SEI film decomposition, improving the cycling performance and safety performance of secondary battery cells, but also can promote Mn-O bond adjustment, lower the lithium ion migration potential barrier, promote lithium ion migration, and improve the rate performance of the secondary battery cell.

In other embodiments of the present application, significantly improved rate performance, improved cycling performance and/or high temperature stability can be obtained by simultaneously doping specific elements in specific amounts at the four positions mentioned above, thereby achieving improved lithium manganese phosphate positive electrode active material.

For example, the positive electrode active materials of the present application can be used in lithium-ion secondary battery cells.

The first doping element includes one or more elements selected from Zn, Al, Na, K, Mg, Mo, W, Ti, V, Zr, Fe, Ni, Co, Ga, Sn, Sb, Nb and Ge. The first doping element includes at least two selected from Fe, Ti, V, Ni, Co and Mg. The second doping element includes one or more elements selected from B (boron), S, Si and N.

The aforementioned dope elements should keep that system electrically neutral, and ensure as few defects and impurities in the positive electrode active material as possible. If there is an excess of transition metals (such as manganese) in the positive electrode active material, due to the relatively stable structure of the material system, the excessive transition metals are likely to be precipitated in the form of elemental substances, or form impurity phases inside the lattice. Remaining electrically neutral can minimize such impurity phases. In addition, ensuring the electrical neutrality of the system can also generate lithium vacancies in the material in some cases, so that the dynamic performance of the material become much better.

Taking the lithium manganese phosphate material as an example, the specific parameters of the positive electrode active material proposed in the present application and the principle by which the above beneficial effects can be obtained are described in detail below:

The inventors of the present application have found in practical work that manganese dissolution is relatively serious in the deep charge-discharge process of the existing lithium manganese phosphate positive electrode active material. Although there are attempts in the prior art to coat lithium manganese phosphate with lithium iron phosphate to reduce interfacial side reactions, this coating cannot prevent the dissolved manganese from further migration into the electrolyte solution. The dissolved manganese is reduced to metallic manganese after migration to the negative electrode. The metal manganese produced in this way is equivalent to a "catalyst", which can catalyze the decomposition of the SEI film (solid electrolyte interphase) on the surface of the negative electrode to produce by-products; part of the by-products is gas, thus causing the secondary battery cells to expand, affecting the safety performance of the secondary battery cell; in addition, another part of the by-product is deposited on the surface of the negative electrode, which will hinder the passage of lithium ions in and out of the negative electrode, causing the impedance of the secondary battery cell to increase, thereby affecting the dynamic performance of secondary battery cells. In addition, in order to replenish the lost SEI film, active lithium in the electrolyte solution and inside the battery cell are continuously consumed, irreversibly affecting the capacity retention rate of the secondary battery cell.

After extensive research, the inventors found that a new positive electrode active material can be obtained by modifying lithium manganese phosphate. The positive electrode active material attains significantly reduced manganese dissolution and reduced lattice change rate and is useful in a secondary battery cell to improve the cycling performance, rate performance, and safety performance of the battery cell and increase the capacity of the battery cell.

In some embodiments, the aforementioned positive electrode active material may have a compound with the chemical formula of $Li_{1+x}Mn_{1-y}A_yP_{1-z}R_zO_4$, where x is any value in the range of -0.100-0.100, y is any value in the range of 0.001-0.500, z is any value in the range of 0.001-0.100, A includes one or more elements selected from Zn, Al, Na, K, Mg, Mo, W, Ti, V, Zr, Fe, Ni, Co, Ga, Sn, Sb, Nb and Ge, and R includes one or more elements selected from B (boron), S, Si and N. Among them, the values of x, y and z satisfy such conditions that the whole compound remains electrically neutral.

In other embodiments, the aforementioned positive electrode active material may have a compound with a chemical formula of $Li_{1+x}C_mMn_{1-y}A_yP_{1-z}R_zO_{4-n}D_n$, wherein the C includes one or more elements selected from Zn, Al, Na, K, Mg, Nb, Mo and W, the A includes one or more elements selected from Zn, Al, Na, K, Mg, Mo, W, Ti, V, Zr, Fe, Ni, Mg, Co, Ga, Sn, Sb, Nb and Ge, the R includes one or more elements selected from B (boron), S, Si and N, the D includes one or more elements selected from S, F, Cl and Br, x is any value in the range of 0.100-0.100, y is any value in the range of 0.001-0.500, z is any value in the range of 0.001-0.100, n is any value in the range of 0.001-0.1, and m is any value in the range of 0.9-1.1. Similarly, the values of x, y, z and m described above satisfy such conditions that the whole compound remains electrically neutral.

Unless otherwise specified, in the chemical formula of the inner core, when a doping site has two or more elements, the definition for the numerical range of x, y, z or m is not only a definition for the stoichiometric number of each element at that site, but also a definition for the sum of the stoichiometric numbers of various elements at that site. For example, when there is a compound with a chemical formula $Li_{1+x}Mn_{1-y}A_yP_{1-z}R_zO_4$, when A is two or more elements A1, A2...An, the stoichiometric numbers y1, y2...yn of A1, A2...An must fall within the numerical range defined by the present application for y, and the sum of y1, y2...yn must also fall within this numerical range. Similarly, for the case where R is two or more elements, the limitation on the numerical range of the stoichiometric numbers of R in the present application also has the above meaning.

In an optional embodiment, when A is one, two, three or four elements selected from Zn, Al, Na, K, Mg, Mo, W, Ti, V, Zr, Fe, Ni, Co, Ga, Sn, Sb, Nb and Ge, $A_y$ is $G_{n1}D_{n2}E_{n3}K_{n4}$, where n1+n2+n3+n4=y, and n1, n2, n3, and n4 are all positive numbers and not zero at the same time, G, D, E, and K are independently one selected from Zn, Al, Na, K, Mg, Mo, W, Ti, V, Zr, Fe, Ni, Co, Ga, Sn, Sb, Nb and Ge, and optionally, at least one of G, D, E and K is Fe. Optionally, one of n1, n2, n3, and n4 is zero, and the rest are not zero; more optionally, two of n1, n2, n3, and n4 are zero, and the rest are not zero; and optionally, three of n1, n2, n3, and n4 are zero, and the rest are not zero. In $Li_{1+x}Mn_{1-y}A_yP_{1-z}R_zO_4$, it is advantageous to dope one, two, three or four of the aforementioned elements A at the site of manganese. Optionally, one, two or three of the aforementioned elements A are doped. In addition, it is advantageous to dope one or two of elements R at the site of phosphorus, which is beneficial to the uniform distribution of the doping elements.

Specifically, for example, the Mn site can have both Fe and V doping.

In some embodiments, in $Li_{1+x}Mn_{1-y}A_yP_{1-z}R_zO_4$, the ratio of y to 1-y is 1:10 to 1:1, and optionally 1:4 to 1:1. Here, y represents the sum of the stoichiometric numbers of element A doped at Mn site. When the above conditions are satisfied, the energy density and cycling performance of a secondary battery cell using the positive electrode active material can be further improved. In some embodiments, the ratio of z to 1- z is 1:9 to 1:999, and optionally 1:499 to 1:249. Here, z represents the sum of the stoichiometric numbers of element R doped at P site. When the above conditions are satisfied, the energy density and cycling performance of a secondary battery cell using the positive electrode active material can be further improved.

In other embodiments of the present application, the positive electrode active material may contain $Li_{1+x}C_mMn_{1-y}A_yP_{1-z}R_zO_{4-n}D_n$. The magnitude of x is affected by the magnitude of the valence of A and R and the magnitude of y and z, so as to ensure that the entire system remains electrically neutral. If the value of x is too small, the lithium content of the entire inner core system is reduced, affecting the gram capacity of the material. The value of y will limit the total amount of all doping elements. If y is too small, that is, the doping amount is too small, the doping elements are ineffective. If y exceeds 0.5, the content of Mn in the system will be reduced, affecting the voltage plateau of the material. The R element is doped at the P site. Since the P-O tetrahedron is relatively stable and an excessive z value will affect the stability of the material, the z value is limited to 0.001-0.100. More specifically, x is any value in the range of 0.100-0.100, y is any value in the range of 0.001-0.500, z is any value in the range of 0.001-0.100, n is any value in the range of 0.001 to 0.1, and m is any value in the range of 0.9 to 1.1. For example, the 1+x is selected from the range of 0.9 to 1.1, such as 0.97, 0.977, 0.984, 0.988, 0.99, 0.991, 0.992, 0.993, 0.994, 0.995, 0.996, 0.997, 0.998, 1.01, the x is selected from the range of 0.001 to 0.1, such as 0.001 and 0.005, the y is selected from the range of 0.001 to 0.5, such as 0.001, 0.005, 0.02, 0.05, 0.1, 0.15, 0.2, 0.25, 0.3, 0.34, 0.345, 0.349, 0.35, 0.4, the z is selected from the range of 0.001 to 0.1, such as 0.001, 0.005, 0.08, 0.1, the n is selected from the range of 0.001 to 0.1, such as 0.001, 0.005, 0.08, 0.1, and the positive electrode activity material is electrically neutral.

As mentioned above, the positive electrode active material of the present application is obtained by element doping in the compound $LiMnPO_4$ and the like. Without wishing to be limited by theory, it is now believed that the performance improvement of lithium manganese phosphate is related to the reduction of the lattice change rate of lithium manganese phosphate in the process of deintercalation of lithium and reduced surface activity. Reducing the lattice change rate can reduce the lattice constant difference between the two phases at the grain boundary, reduce the interface stress, and enhance the transport capability of $Li^+$ at the interface, thereby improving the rate performance of the positive electrode active material. High surface activity can easily lead to serious interface side reactions, aggravating gas production, electrolyte consumption and destroying the interface, thus affecting the cycling performance of battery cells. In the present application, the lattice change rate is reduced by Li and Mn site doping. Mn-site doping also effectively reduces surface activity, thereby inhibiting Mn dissolution and interface side reactions between the positive electrode active material and the electrolyte solution. P-site doping makes the Mn-O bond length change faster and reduces the material's small polaron migration potential barrier, thereby benefiting the electronic conductivity. O-site doping has a good effect on reducing interface side reactions. The doping of P-site and O-site also affects the Mn dissolution and kinetic properties of anti-site defects. Therefore, doping reduces the concentration of anti-site defects in the material, improves the dynamic properties and gram capacity of the material, and can also change the morphology of the particles, thereby increasing the compacted density. The applicant unexpectedly discovered that by simultaneously doping specific elements in specific amounts at the Li site, Mn site, P site and O site of the compound $LiMnPO_4$, significantly improved rate performance can be obtained while significantly reducing the dissolution of Mn and doping elements at Mn sites, significantly improved cycling performance and/or high temperature stability are obtained, and the gram capacity and compacted density of the material can also be increased.

By selecting the Li site doping elements within the above range, the lattice change rate during the delithiation process can be further reduced, thereby further improving the rate performance of the battery cell. By selecting the Mn doping element within the above range, the electronic conductivity can be further improved, and the lattice change rate can be further reduced, thereby improving the rate performance and gram capacity of the battery cell. By selecting the P-site doping element within the above range, the rate performance of the battery cell can be further improved. By selecting the O-site doping elements within the above range, the side reactions at the interface can be further reduced and the high-temperature performance of the battery cells can be improved.

In some embodiments, the x is selected from the range of 0.001 to 0.005; and/or the y is selected from the range of 0.01 to 0.5, optionally selected from the range of 0.25 to 0.5; and/or the z is selected from the range of 0.001 to 0.005; and/or, the n is selected from the range of 0.001 to 0.005. By selecting the y value within the above range, the gram capacity and rate performance of the material can be further improved. By selecting the x value within the above range, the dynamic performance of the material can be further improved. By selecting the z value within the above range, the rate performance of the secondary battery cell can be further improved. By selecting the n value within the above range, the high temperature performance of the secondary battery cell can be further improved.

In some embodiments, the positive electrode active material having 4 sites doped with non-Mn elements satisfies: (1-y): y is in the range of 1 to 4, optionally in the range of 1.5 to 3, and (1+x):m is in the range of 9 to 1100, optionally in the range of 190-998. Here, y represents the sum of the stoichiometric numbers of elements doped at Mn site. When the above conditions are satisfied, the energy density and cycling performance of the positive electrode active material can be further improved.

In some embodiments, the positive electrode active material may have at least one of $Li_{1+x}Mn_{1-y}A_yP_{1-z}R_zO_4$ and $Li_{1+x}C_mMn_{1-y}A_yP_{1-z}R_zO_{4-n}D_n$. The ratio of y to 1-y is 1:10 to 1:1, and optionally 1:4 to 1:1. The ratio of z to 1-z is 1:9 to 1:999, and optionally 1:499 to 1:249. C, R and D are each independently any element within the above respective ranges, and the A is at least two elements within its range; optionally, the C is any one element selected from Mg and Nb, and/or, the A is at least two elements selected from Fe, Ti, V, Co and Mg, optionally Fe and one or more elements selected from Ti, V, Co and Mg, and/or, the R is S, and/or, the D is F. The x is selected from the range of 0.001 to 0.005; and/or the y is selected from the range of 0.01 to 0.5, optionally selected from the range of 0.25 to 0.5; and/or the z is selected from the range of 0.001 to 0.005; and/or, the n is selected from the range of 0.001 to 0.005. The above parameters can be freely combined without special instructions, and their combinations will not be listed one by one here.

In some embodiments, the lattice change rate of the positive electrode active material is below 8%, and optionally, the lattice change rate is below 4%. By reducing the lattice change rate, Li ion transport can be made easier, that is, Li ions have a stronger migration ability in the material, which is beneficial to improving the rate performance of the secondary battery cell. The lattice change rate can be measured by methods known in the art, such as X-ray diffraction spectroscopy (XRD). The lithium de-intercalation process of $LiMnPO_4$ is a two-phase reaction. The interface stress of the two phases is determined by the lattice change rate. The smaller the lattice change rate, the smaller the interface stress and the easier $Li^+$ transport. Therefore, reducing the lattice change rate of doped $LiMnPO_4$ facilitates the increase of the Li+ transport capability, thereby improving the rate performance of the secondary battery cell.

In some embodiments, optionally, the button battery average discharge voltage of the positive electrode active material is 3.5V or more, and the discharge gram capacity is 140mAh/g or more; optionally, the average discharge voltage is 3.6V or more, and the discharge gram capacity is more than 145mAh /g or more.

Although the average discharge voltage of undoped $LiMnPO_4$ is 4.0V or more, its discharge gram capacity is low, usually less than 120mAh/g. Therefore, the energy density is low; adjusting the lattice change rate by doping can make its discharge gram capacity increase greatly, and the overall energy density is significantly increased while the average discharge voltage drops slightly.

In some embodiments, the Li/Mn antisite defect concentration of the positive electrode active material is 2% or less, and optionally, the Li/Mn antisite defect concentration is 0.5% or less. The Li/Mn antisite defect refers to the exchange of the positions of $Li^+$ and $Mn^{2+}$ in the lattice of LiMnPO4. The concentration of Li/Mn antisite defect refers to the percentage of $Li^+$ that exchanges with $Mn^{2+}$ relative to the total amount of $Li^+$ in the positive electrode active material. The $Mn^{2+}$ of antisite defects will hinder the transmission of $Li^+$. By reducing the concentration of antisite defects of Li/Mn, it helps to improve the gram capacity and rate performance of positive electrode active materials. Li/Mn antisite defect concentration can be measured by methods known in the art, such as XRD.

In some embodiments, the surface oxygen valence of the positive electrode active material is -1.82 or less, and optionally -1.89 to -1.98. By reducing the surface oxygen valence, the interfacial side reaction between the positive electrode active material and the electrolyte solution can be reduced, thus improving the cycling performance and high temperature stability of secondary battery cells. The surface oxygen valence can be measured by methods known in the art, such as by electron energy loss spectroscopy (EELS).

In some embodiments, the compacted density of the positive electrode active material at 3T (tons) is 2.0g/cm3 or more, optionally 2.2g/cm3 or more. The higher the compacted density is, the greater the weight of the active material per unit volume will be. Therefore, increasing the compacted density is beneficial to the improvement of the volumetric energy density of the battery cell. The compacted density can be measured according to GB/T24533-2009.

In some embodiments, the positive electrode active material has a core-shell structure, the core-shell structure includes an inner core and a shell covering the inner core, and the inner core has the $LiMPO_4$. The positive electrode active material with a core-shell structure can further enhance the performance of the positive electrode material through a coating shell.

For example, in some embodiments of the present application, the surface of the inner core is coated with carbon. Thereby, the conductivity of the positive electrode active material can be improved. The carbon in the coating layer is a mixture of SP2 hybridized carbon and SP3 hybridized carbon. Optionally, the molar ratio of the SP2 hybridized carbon to SP3 hybridized carbon is any value in the range of 0. 1-10, and optionally any value in the range of 2.0-3.0.

In some embodiments, the molar ratio of SP2 hybridized carbon to SP3 hybridized carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or within any range defined by any value above.

In the present application, "about" before a numerical value indicates a range, indicating a range of $\pm 10\%$ of the numerical value.

By selecting the state of carbon in the carbon coating layer, the overall electrical performance of the secondary battery cell can be improved. Specifically, by using a mixed form of SP2 hybridized carbon and SP3 hybridized carbon and limiting the ratio of SP2 hybridized carbon to SP3 hybridized carbon within a certain range, the following situation can be avoided: if the carbon in the coating layer is all amorphous SP3 hybridized carbon, the conductivity is poor; if they are all graphitized SP2 hybridized carbon, although the conductivity is good, there are few lithium ion paths, which is not conducive to the deintercalation of lithium. In addition, defining the molar ratio of SP2 hybridized carbon to SP3 hybridized carbon within the above range can not only achieve good electrical conductivity, but also ensure the channels of lithium ions, so it is beneficial to the realization of the function of the secondary battery cell and its cycling performance.

The mixing ratio of the SP2 hybridized and SP3 hybridized carbon in the coating layer can be controlled by sintering conditions such as sintering temperature and sintering time. For example, in the case of using sucrose as a carbon source to prepare the third coating layer, after sucrose is cracked at high temperature, it is deposited on the second coating layer at a high temperature, to form a coating layer of SP3 and SP2 hybridized carbon. The ratio of SP2 hybridized carbon and SP3 hybridized carbon can be adjusted by selecting high-temperature cracking conditions and sintering conditions.

The structure and characteristics of the carbon in the coating layer can be determined by Raman spectroscopy. The specific test method comprises: splitting the spectrum of the Raman test, to obtain Id/Ig (wherein Id is the peak intensity of SP3 hybridized carbon, and Ig is the peak intensity of SP2 hybridized carbon), thereby confirming the molar ratio of the two.

In some embodiments of the present application, the shell includes an inorganic coating layer and a carbon coating layer, the inorganic coating layer being disposed close to the inner core. Specifically, the inorganic coating layer contains at least one of phosphate and pyrophosphate. The positive electrode active material with a core-shell structure can further reduce manganese dissolution and reduce lattice change rate, and when used in a secondary battery, it can improve the cycling performance, rate performance, and safety performance of the battery cell and increase the capacity of the battery cell. By further coating with a crystalline phosphate and pyrophosphate coating layer with excellent lithium ion conductivity, the interfacial side reactions on the surface of the positive electrode active material can be effectively reduced, thereby improving the high-temperature cycling and storage performance of the secondary battery cell; by further coating the carbon layer, the safety performance and dynamic performance of the secondary battery cell can be further improved.

In the present application, the pyrophosphate may include $QP_2O_7$, specifically the crystalline pyrophosphate$Li_aQP_2O_7$ and/or $Q_b(P_2O_7)_c$, where $0 \leq a \leq 2$, $1 \leq b \leq 4$, $1 \leq c \leq 6$, the values of a, b and c satisfy the following conditions: the crystalline pyrophosphate $Li_aQP_2O_7$ or $Q_b(P_2O_7)_c$ maintains electrically neutral, Q in the crystalline pyrophosphate $Li_aQP_2O_7$ and $Q_b(P_2O_7)_c$ is each independently selected from one or more elements of Fe, Ni, Mg, Co, Cu, Zn, Ti, Ag, Zr, Nb or Al.

The crystalline phosphate may include $XPO_4$, where the X is one or more elements selected from Li, Fe, Ni, Mg, Co, Cu, Zn, Ti, Ag, Zr, Nb or Al.

The crystallization conditions of crystalline pyrophosphate and crystalline phosphate are not particularly limited. In some embodiments of the present application, crystalline pyrophosphate and/or phosphate can be single crystal, polycrystalline or partially crystalline. The inventor found that crystalline phosphates and pyrophosphates have better surface selectivity and can better match the crystalline state of the inner core, thereby having better binding force and interface state, and are less likely to fall off during use. Also, the crystalline inorganic salt coating layer can better improve the ability of the positive electrode active material to conduct lithium ions, and can also better reduce interfacial side reactions on the surface of the active material.

Specifically, the interplanar spacing of the crystalline pyrophosphate is in the range of 0.293-0.470nm, and the included angle between the crystal directions (111) is in the range of 18.00°-32.00°. The interplanar spacing of crystalline phosphate is in the range of 0.244-0.425nm, and the included angle between the crystal directions (111) is in the range of 20.00°-37.00°.

In the present application, crystalline means that the degree of crystallinity is 50% or higher, that is, 50%-100%. A crystallinity of less than 50% is called glassy state. The crystalline pyrophosphate and crystalline phosphate described herein have a crystallinity of 50% to 100%. Pyrophosphates and phosphates with a certain degree of crystallinity not only promote the full exertion of the ability of the pyrophosphate coating layer to hinder manganese dissolution and the excellent lithium ion-conducting ability of the phosphate coating layer to reduce the interfacial side reactions, but also allow for better lattice matching between the pyrophosphate coating layer and the phosphate coating layer, to enable tight bonding between the coating layers.

In the present application, the crystallinity of crystalline pyrophosphate and crystalline phosphate in the positive electrode active material can be tested by conventional technical means in the art, for example, by density method, infrared spectroscopy, differential scanning calorimetry, and nuclear magnetic resonance spectroscopy, or by, for example, X-ray diffraction method. A specific X-ray diffraction method for testing the crystallinity of the coating layer of crystalline pyrophosphate and crystalline phosphate in the positive electrode active material may include the following steps:

A certain amount of positive electrode active material powder is taken, and its total scattering intensity is measured by X ray. The total scattering intensity is the sum of the scattering intensity of the whole space material, which is only related to the intensity of primary rays, the chemical structure of the positive electrode active material powder, and the total number of electrons participating in diffraction, that is, the mass, but has nothing to do with the order of the sample; then the crystalline scattering and amorphous scattering are separated in the diffraction pattern. The crystallinity is the ratio of the scattering of the crystalline part to the total scattering intensity.

It should be noted that in the present application, the crystallinity of pyrophosphate and phosphate in the coating layer can be adjusted, for example, by adjusting the process conditions in the sintering process, such as sintering temperature, sintering time, and the like.

In the present application, since metal ions are difficult to migrate in pyrophosphate, pyrophosphate can be used as the first coating layer to effectively isolate the doped metal ions from the electrolyte solution. Since the structure of crystalline pyrophosphate is stable, the coating of crystalline pyrophosphate can effectively inhibit the dissolution of transition metals and improve the cycling performance.

The bond between the coating layer and the core is similar to a heterojunction, and the firmness of the bond depends on the degree of lattice matching. When the lattice mismatch is less than 5%, the lattice matching is better, and the two are easy to bond closely. The tight bonding can ensure that the coating layer will not fall off in the subsequent cycle process, which is beneficial to ensuring the long-term stability of the material. The degree of bonding between the coating layer and the core is mainly measured by calculating the mismatch degree of each lattice constant between the core and the coating layer. In the present application, after the inner core is doped with elements, especially doped with elements at Mn site and P site, compared with the case without element doping, the matching degree between the inner core and the coating layer is improved, and the inner core and the crystalline inorganic salt coating layer can be more closely bonded.

In the present application, there are no special restrictions on whether the phosphate and the pyrophosphate are located in the same coating layer, and which of the two is located closer to the inner core. Those skilled in the art can choose according to the actual situation. For example, the phosphate and the pyrophosphate can form an inorganic salt coating layer, and the outside of the inorganic salt coating layer can further have a carbon layer. Alternatively, the pyrophosphate and the pyrophosphate form separate coating layers, one of which is provided close to the inner core, the other covers the crystalline inorganic salt coating layer provided close to the inner core, and a carbon layer is provided on the outermost side. Further alternatively, the core-shell structure may only contain an inorganic salt coating layer composed of phosphate or pyrophosphate, with a carbon layer on the outside.

More specifically, the shell includes a first coating layer covering the inner core, and a second coating layer covering the first coating layer, wherein the first coating layer includes pyrophosphate $QP_2O_7$ and phosphate $XPO_4$, where the Q and X are each independently selected from one or more of Li, Fe, Ni, Mg, Co, Cu, Zn, Ti, Ag, Zr, Nb or Al; the second coating layer contains carbon. In this case, the structure of the positive electrode active material may be as shown in Fig. 4, which has an inner core 11, a first coating layer 12 and a second coating layer 13.

In some embodiments, the interplanar spacing of the phosphate in the first coating layer 12 is 0.345-0.358nm, and the included angle between the crystal directions (111) is 24.25°-26.45°; and the interplanar spacing of the pyrophosphate in the first coating layer 12 is 0.293-0.326nm, and the included angle between the crystal directions (111) is 26.41°-32.57°. When the interplanar spacing and the included angle between the crystal directions (111) of phosphate and pyrophosphate and in the first coating layer is within the above range, the impurity phase in the coating layer can be effectively avoided, thereby improving the gram capacity, cycling performance and rate performance of the material.

In some embodiments, optionally, the coating amount of the first coating layer is greater than 0wt% and less than or equal to 7wt%, optionally 4-5.6wt%, based on the weight of the inner core.

When the coating amount of the first coating layer is within the above range, manganese dissolution can be further suppressed, and the transport of lithium ions can be further promoted. Also, the following situations can be effectively avoided: if the coating amount of the first coating layer is too small, the inhibitory effect of pyrophosphate on manganese dissolution may be insufficient, and the improvement of lithium ion transport performance is also not significant; if the coating amount of the first coating layer is too large, it may cause the coating layer to be too thick, increase the impedance of the battery cell, and affect the dynamic performance of the battery cell.

In some embodiments, optionally, the weight ratio of pyrophosphate to phosphate in the first coating layer is 1:3 to 3:1, optionally 1:3 to 1:1.

The appropriate ratio of pyrophosphate to phosphate is conducive to giving full play to the synergistic effect of the two. It can also effectively avoid the following cases: too much pyrophosphate and too little pyrophosphate may result in an increase of the battery cell impedance, and if there are too much phosphate and too little pyrophosphate, the effect of inhibiting manganese dissolution is not significant.

In some embodiments, optionally, the pyrophosphate and phosphate have crystallinity of 10% to 100%, and optionally 50% to 100%, independently.

In the first coating layer of the lithium manganese phosphate positive electrode active material of the present application, pyrophosphate and phosphate with a certain degree of crystallinity are beneficial to maintaining the structural stability of the first coating layer and reducing lattice defects. On the one hand, this is conducive to giving full play to the role of pyrophosphate in hindering manganese dissolution. On the other hand, it also helps the phosphate to reduce the surface miscellaneous lithium content and reduce the surface oxygen valence, thereby reducing the interfacial side reactions between the positive electrode material and the electrolyte solution, reducing the consumption of the electrolyte solution, and improving the cycling performance and safety performance of battery cells.

In some embodiments, optionally, the coating amount of the second coating layer is greater than 0wt% and less than or equal to 6wt%, optionally 3-5wt%, based on the weight of the inner core.

On one hand, the carbon-containing layer as the second coating layer can play a "barrier" function to prevent the positive electrode active material from directly contacting with the electrolyte solution, thereby reducing the corrosion of the electrolyte solution to the active material, and improving the safety performance of the battery cell at high temperature. On the other hand, it has strong electrical conductivity, which can reduce the internal resistance of the battery cell, thereby improving the dynamic performance of the battery cell. However, since the carbon material has a low gram capacity, when the amount of the second coating layer is too large, the overall gram capacity of the positive electrode active material may be reduced. Therefore, when the coating amounts of the second coating layer is within the above ranges, the dynamic performance and safety performance of the battery cell can be further improved without compromising the gram capacity of the positive electrode activity material.

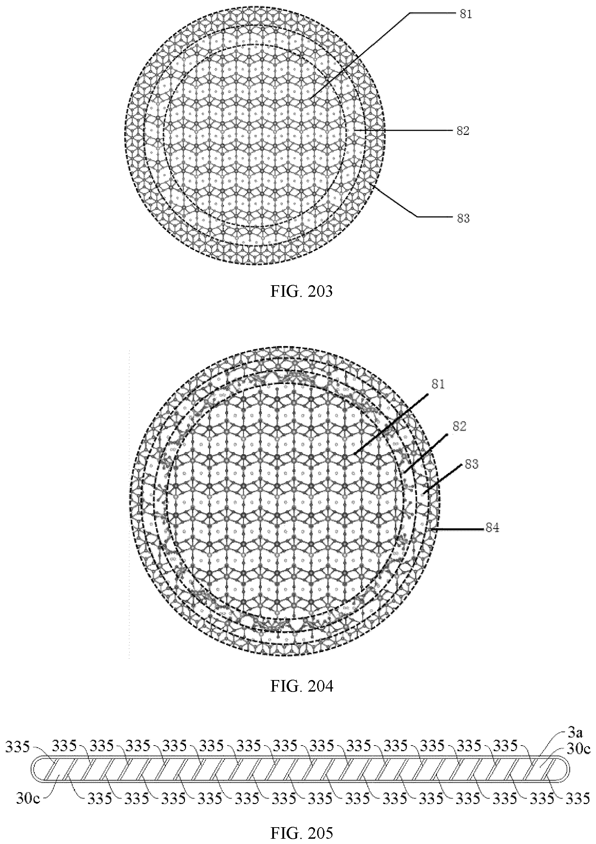

In other embodiments, the positive electrode active material includes a first coating layer covering the inner core, a second coating layer covering the first coating layer, and a third coating layer covering the second coating layer, wherein the first coating layer includes crystalline pyrophosphate $Li_aQP_2O_7$ and/or $Q_b(P_2O_7)_c$, where $0\leq a\leq 2$, $1\leq b \leq 4$, $1\leq c\leq 6$, the values of a, b and c satisfy the following conditions: the crystalline pyrophosphate $Li_aQP_2O_7$ or $Q_b(P_2O_7)_c$ maintains electrically neutral, Q in the crystalline pyrophosphate $Li_aQP_2O_7$ and $Q_b(P_2O_7)_c$ is each independently selected from one or more elements of Fe, Ni, Mg, Co, Cu, Zn, Ti, Ag, Zr, Nb or Al; the second coating layer includes crystalline phosphate $XPO_4$, where the X is selected from one or more elements of Li, Fe, Ni, Mg, Co, Cu, Zn, Ti, Ag, Zr, Nb or Al; the third coating layer is carbon. Referring to Fig. 204, the structure of the positive electrode active material may be generally as shown in the figure, and may have an inner core 11, a first coating layer 12, a second coating layer 13 and a third coating layer 14. Fig. 204 is a schematic diagram of a desirable positive electrode active material with a three-layer coating structure. As shown in Fig. 204, the innermost circle schematically represents the inner core, followed by the first coating layer, the second coating layer, and the third coating layer from the inside to the outside. This figure shows an ideal state where each layer coats the interior completely. In practice, each coating layer may completely or partially coat the interior.

In the aforementioned embodiment, crystalline phosphate is chosen as the second coating layer. Because crystalline phosphate has higher lattice match (only 3% mismatch) with the first layer coating material crystalline pyrophosphate; and the stability of phosphate itself is better than that of pyrophosphate, and coating pyrophosphate therewith facilitate the improvement of the stability of the material. The crystalline phosphate is very stable in structure, and has excellent ability to conduct lithium ions. Therefore, the use of crystalline phosphate for coating can effectively reduce the interfacial side reactions on the surface of the positive electrode active material, thereby improving the high-temperature cycling performance and storage performance of the secondary battery cell. The lattice matching between the second coating layer and the first coating layer is similar to the aforementioned combination between the first coating layer and the core. When the lattice mismatch is less than 5%, the lattice matching is good, and the two are easily combined closely. The main reason for using carbon as the third coating layer is the good electronic conductivity of the carbon layer. Since the electrochemical reaction that occurs in secondary battery cells requires the participation of electrons, in order to increase the electron transmission between particles and the electron transmission at different positions on the particles, the positive electrode active material can be coated with carbon with excellent conductivity. Carbon coating can effectively improve the electrical conductivity performance and desolvation ability of the positive electrode active materials.

In some embodiments, the average particle size of the primary particles of the positive electrode active material with three coating layers is in the range of 50-500nm, and the volume median particle size Dv50 is in the range of 200-300nm. Since the particles will agglomerate, the practically measured secondary particle size after agglomeration may be 500-40000nm. The size of the positive electrode active material particles affects the processing of the material and the compacted density performance of the electrode plate. By selecting primary particles having an average particle size within the above range, the following situations can be avoided: if the average particle size of the primary particles of the positive electrode active material is too small, agglomeration of the particles and difficulty in dispersion may be caused, and more binder is needed, causing poor brittleness of the electrode plate; and if the average particle size of the primary particles of the positive electrode active material is too large, the gap between the particles is caused to be larger and the compacted density is reduced. Through the above solution, the lattice change rate of lithium manganese phosphate and the dissolution of Mn in the process of lithium deintercalation can be effectively suppressed, thereby improving the high-temperature cycling stability and high-temperature storage performance of the secondary battery cell.

In the aforementioned embodiment, the interplanar spacing of the crystalline pyrophosphate in the first coating layer is in the range of 0.293-0.470nm, and the included angle between the crystal directions (111) is in the range of 18.00°-32.00°; and the interplanar spacing of the crystalline phosphate in the secondary coating layer is in the range of 0.244-0.425nm, and the included angle between the crystal directions (111) is in the range of 20.00°-37.00°.

The first coating layer and the second coating layer in the positive electrode active material described in the present application are both formed of a crystalline substance. The crystalline pyrophosphate and crystalline phosphate in the coating layers can be characterized by conventional technical means in the art, or characterized by, for example, transmission electron microscopy (TEM). Under TEM, the inner core and coating layers can be distinguished by testing the interplanar spacing.

The specific test method of interplanar spacing and included angle of crystalline pyrophosphate and crystalline phosphate in the coating layer can include the following steps: A certain amount of the coated positive electrode active material sample powder is charged in a test tube, and a solvent such as alcohol is injected into the test tube, and then stirred fully to disperse the powder. Then an appropriate amount of the solution is taken by a clean disposable plastic pipette and dropped on a 300-mesh copper screen. At this time, some of the powder will remain on the copper screen. The copper screen with the sample is transferred to a TEM sample cavity and tested, to obtain an original TEM image which is saved. The original image obtained by the above TEM test is opened in the diffractometer software, and subjected to Fourier transform to obtain the diffraction pattern. The distance from the diffraction spot to the center position in the diffraction pattern is measured to obtain the interplanar spacing. The included angle is calculated according to the Bragg equation.

A difference exists between the interplanar spacing ranges of crystalline pyrophosphate and crystalline phosphate, which can be directly determined from the values of the interplanar spacing. Crystalline pyrophosphate and crystalline phosphate within the aforementioned ranges of interplanar spacing and included angle can more effectively inhibit the lattice change rate and Mn dissolution of lithium manganese phosphate during the process of lithium deintercalation, thereby improving the high-temperature cycling performance, cycling stability and high-temperature storage performance of the secondary battery cell.

In some embodiments, the coating amount of the first coating layer is greater than 0 and less than or equal to 6wt%, optionally greater than 0 and less than or equal to 5.5wt%, and more optionally greater than 0 and less than or equal to 2wt%, based on the weight of the inner core; and/or the coating amount of the second coating layer is greater than 0 and less than or equal to 6wt%, optionally greater than 0 and less than or equal to 5.5wt%, more optionally 2-4wt%, based on the weight of the inner core; and/or the coating amount of the third coating layer is greater than 0 and less than or equal to 6wt%, optionally greater than 0 and less than or equal to 5.5wt%, more optionally greater than 0 and less than or equal to 2wt%, based on the weight of the inner core. In the present application, the coating amount of each layer is not zero. In the positive electrode active material having a core-shell structure described in the present application, the coating amounts of the three coating layers are preferably within the above ranges, so that the inner core can be sufficiently coated, and the dynamic performance and safety performance of the secondary battery cell can be further improved without compromising the gram capacity of the positive electrode activity material.

For the first coating layer, if the coating amount is within the above range, the following situations can be avoided: if the coating amount is too small, the thickness of the coating layer is thin, so the migration of transition metals may be not effectively hindered; and if the amount is too large, the coating layer is too thick, so the migration of Li+ is affected, thereby affecting the rate performance of the material. For the second coating layer, by keeping the coating amount within the above range, the following situations can be avoided: too much coating amount may affect the overall platform voltage of the material; too little coating amount may not achieve sufficient coating effect. For the third coating layer, the carbon coating mainly serves to enhance the electron transport between particles. However, since the structure also contains a large amount of amorphous carbon, the density of carbon is low. Therefore, if the coating amount is too high, the compacted density of the electrode plate is affected.

In the aforementioned embodiments, the thickness of the first coating layer is 1-10nm; and/or the thickness of the second coating layer is 2-15nm; and/or the thickness of the third coating layer is 2-25nm.

In some embodiments, the thickness of the first coating layer may be about 2nm, about 3nm, about 4nm, about 5nm, about 6nm, about 7nm, about 8nm, about 9nm, or about 10nm, or within any range defined by any value above. In some embodiments, the thickness of the second coating layer may be about 2nm, about 3nm, about 4nm, about 5nm, about 6nm, about 7nm, about 8nm, about 9nm, about 10nm, about 11nm, about 12nm, about 13nm, about 14nm, about 15nm, or within any range defined by any value above. In some embodiments, the thickness of the third coating layer may be about 2 nm, about 3nm, about 4nm, about 5nm, about 6nm, about 7nm, about 8nm, about 9nm, about 10nm, about 11nm, about 12nm, about 13nm, about 14nm, about 15nm, about 16nm, about 17nm, about 18nm, about 19nm, about 20nm, about 21nm, about 22nm, about 23nm, about 24nm, about 25nm, or within any range defined by any value above.

When the thickness of the first coating layer is in the range of 1-10nm, the possible adverse effects on the dynamic performance of the material caused when the thickness is too large, and the inability to effectively hinder the migration of transition metal ions caused when the thickness is too small can be avoided.

When the thickness of the second coating layer is in the range of 2-15nm, the surface structure of the second coating layer is stable, and the side reaction with the electrolyte solution is less, so the interfacial side reactions can be effectively reduced, thereby improving the high-temperature performance of secondary battery cells.

When the thickness of the third coating layer is in the range of 2-25nm, the electrical conductivity performance of the material can be improved, and the compacted density performance of the battery cell electrode plate prepared with the positive electrode active material can be improved.

The thickness of the coating layer is mainly tested by FIB. The specific method may include the following steps: randomly selecting a single particle from the positive electrode active material powder to be tested, cutting a thin slice with a thickness of about 100nm from a middle position of or near the middle position of the selected particle, testing the slice by TEM, determining the thickness of the coating layer, and averaging the measurements of 3-5 positions.

In some embodiments, when the positive electrode active material has three coating layers, based on the weight of the positive electrode active material, the content of element manganese is in the range of 10 wt%-35 wt%, optionally in the range of 15 wt%-30 wt%, and more optionally in the range of 17 wt% to 20 wt%; the content of element phosphorus is in the range of 12 wt% to 25 wt%, and optionally in the range of 15 wt% to 20 wt%; and the weight ratio of element manganese to element phosphorus is in the range of 0.90-1.25, and optionally 0.95-1.20.

In the present application, in the case where manganese is contained only in the inner core of the positive electrode active material, the content of manganese may correspond to the content in the inner core. In the present application, when the content of the element manganese is defined in the above range, the deterioration of the structure stability, the decrease in density of the material, and other problems that may be caused if the content of element manganese is too large can be avoided to improve the cycling performance, storage performance, compacted density and other performances of the secondary battery cell; and the problem such as low voltage plateau that may be caused if the content of manganese is too small can be avoided, thereby improving the energy density of the secondary battery cell. In the present application, when the content of the element phosphorus is defined in the above range, the following situations can be effectively avoided: if the content of the element phosphorus is too large, a potential too strong covalent nature of P-O affects the electrical conduction of small polarons, thereby affecting the electrical conductivity of the material; and if the content of the element phosphorus is too small, the stability of the lattice structure of the core, the pyrophosphate in the first coating layer and/or the phosphate in the second coating layer may be caused to decrease, thereby affecting the overall stability of the material. The weight ratio of manganese to phosphorus has the following effects on the performance of the secondary battery cell: if the weight ratio is too large, it means that more manganese element exists, and the manganese dissolution increases, affecting the stability and gram capacity of the positive electrode active material, and thus affecting the cycling performance and storage performance of the secondary battery cell; and if the weight ratio is too small, it means that more phosphorus element exists, and impurity phases tend to be formed, which will reduce the discharge voltage plateau of the material, thereby reducing the energy density of the secondary battery cell. The measurement of elements manganese and phosphorus can be carried out by conventional technical means in the art. In particular, the contents of manganese and phosphorus are determined as follows. The material is dissolved in dilute hydrochloric acid (with a concentration of 10-30%), the contents of various elements in the solution are tested by ICP, and then the content of manganese is measured and calculated, to get its weight ratio.

A second aspect of the present application relates to a method of preparing the positive electrode active material of the first aspect of the present application. Specifically, the method includes an operation of forming a $LiMPO_4$ compound, wherein the $LiMPO_4$ compound can have all the characteristics and advantages of the aforementioned $LiMPO_4$ compound, which will not be described here again. In brief, the M includes Mn and non-Mn elements, the non-Mn elements meet at least one of the following conditions: the ion radius of the non-Mn elements is a, the ion radius of the manganese elements is b, and |a-b|/b is not more than 10%; the valence variable voltage of the non-Mn element is U, 2V<U<5.5V; the chemical activity of the chemical bond formed by the non-Mn element and O is not less than that of P-O bond; the highest valence of the non-Mn element is not greater than 6.

In some embodiments, the non-Mn element includes first and second doping elements, and the method comprises: mixing a manganese source, a dopant of the manganese site element and an acid to obtain manganese salt particles with the first doping element; mixing the manganese salt particles with the first doping element, a lithium source, a phosphorus source and a dopant of the second doping element in a solvent to obtain a slurry, and sintering the slurry under the protection of an inert gas atmosphere to obtain the $LiMPO_4$ compound. The types of the first doping element and the second doping element have been described in detail before and will not be described again here. In some embodiments, the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

In some embodiments, the $LiMPO_4$ compound is formed according to the chemical formula $Li_{1+x}Mn_{1-y}A_yP_{1-z}R_zO_4$, and in other embodiments, the $LiMPO_4$ compound is formed according to the chemical formula $Li_{1+x}C_mMn_{1-y}A_yP_{1-z}R_zO_{4-n}D_n$. The elements at the substitution sites and their selection principles, beneficial effects, and atomic ratio ranges have been described in detail before and will not be repeated here. The source of element C is selected from at least one of the elementary substance, oxides, phosphates, oxalates, carbonates and sulfates of element C, and the source of element A is selected from at least one of the elementary substance, oxides, phosphates, oxalates, carbonates, sulfates, chlorides, nitrates, organic acid salts, hydroxides, and halides of element A, the source of element R is selected from at least one of the sulfates, borates, nitrates and silicates, organic acids, halides, organic acid salts, oxides, and hydroxides of element R, and the source of element D is selected from at least one of the elementary substance and ammonium salts of element D.

In some embodiments, the acid is selected from one or more of hydrochloric acid, sulfuric acid, nitric acid, phosphoric acid, organic acids such as oxalic acid, and the like, and can be oxalic acid, for example. In some embodiments, the acid is a dilute acid with a concentration of 60 wt% or less. In some embodiments, the manganese source can be a manganese-containing substance known in the art that can be used to prepare lithium manganese phosphate. For example, the manganese source can be selected from one of elemental manganese, manganese dioxide, manganese phosphate, manganese oxalate, and manganese carbonate, or a combination thereof. In some embodiments, the lithium source can be a lithium-containing substance known in the art that can be used to prepare lithium manganese phosphate. For example, the lithium source can be selected from one of lithium carbonate, lithium hydroxide, lithium phosphate, and lithium dihydrogen phosphate, or a combination thereof. In some embodiments, the phosphorus source can be a phosphorus-containing substance known in the art that can be used to prepare lithium manganese phosphate. For example, the phosphorus source can be selected from one of diammonium hydrogen phosphate, ammonium dihydrogen phosphate, ammonium phosphate, and phosphoric acid, or a combination thereof. The amounts of the doping elements at the individual sites depend on the target doping amounts, and the ratio of the amounts of the lithium source, the manganese source, and the phosphorus source conforms to the stoichiometric ratio.

In some embodiments, the obtained manganese salt particles with the first doping element satisfy at least one of the following conditions: at a temperature of 20-120°C, optionally 40-120°C, optionally 60-120°C, or more optionally 25-80°C, the manganese source, the manganese site element and the acid are mixed; and/or the mixing is carried out with stirring, the stirring being at 200-800 rpm, optionally at 400-700 rpm, more optionally 500-700rpm for 1-9h, optionally 3-7h, more optionally 2-6h.

In some embodiments, the positive electrode active material may have a first doping element and a second doping element. This method can be carried out by grinding and mixing the manganese salt particles with the first doping element, the lithium source, the phosphorus source and the dopant of the second doping element in a solvent for 8-15 h. For example, the manganese salt particles with the first doping element, the lithium source, the phosphorus source and the dopant of the second doping element are mixed in a solvent at a temperature of 20-120°C, optionally 40-120°C for 1-10h.

Specifically, this method can form a $LiMPO_4$ compound according to the chemical formula $Li_{1+x}C_xMn_{1-y}A_yP_{1-z}R_zO_{4-n}D_n$. More specifically, this method can be carried out by grinding and mixing the manganese salt particles with the first doping element, the lithium source, the phosphorus source and the dopant of the second doping element in a solvent for 8-15 h. For example, the manganese source, the source of element A and the acid can be dissolved in a solvent to form a suspension of a manganese salt doped with element A, and the suspension is filtered and oven dried to obtain a manganese salt doped with element A; the lithium source, the phosphorus source, the source of element C, the source of element R and the source of element D, the solvent and the manganese salt doped with element A are mixed with the solvent to obtain a slurry; the slurry is spray dried and granulated to obtain particles; and the particles are sintered to obtain the positive electrode active material. Sintering can be carried out at a temperature range of 600-900°C for 6-14 h.

By controlling the reaction temperature, stirring rate and mixing time during doping, the doping elements can be evenly distributed and the crystallinity of the material after sintering is higher, thereby improving the gram capacity and rate performance of the material.

In some specific embodiments, the method may include the following steps: (1) dissolving the manganese source, the source of element B and the acid in a solvent and stirring to generate a suspension of manganese salt doped with element B, and filtering the suspension and oven drying the filter cake to obtain the manganese salt doped with element B; (2) putting the lithium source, the phosphorus source, the source of element A, the source of element C and the source of element D, the solvent and the manganese salt doped with element B obtained from step (1) into the reaction vessel, grinding and mixing to obtain a slurry; (3) transferring the slurry obtained in step (2) to a spray drying device for spray drying and granulation to obtain particles; (4) sintering the particles obtained in step (3) to obtain the positive electrode active material.

In some embodiments, the solvents described in step (1) and step (2) can each independently be a solvent commonly used by those skilled in the art in the preparation of manganese salts and lithium manganese phosphates. For example, they can each be independently selected at least one of ethanol, water (such as deionized water), etc.

In some embodiments, the stirring of step (1) is carried out at a temperature in the range of 60-120°C. In some embodiments, the stirring of step (1) is performed at a stirring rate of 200-800rpm, or 300-800rpm, or 400-800rpm. In some embodiments, the stirring of step (1) is performed for 6-12 h. In some embodiments, the grinding and mixing of step (2) is performed for 8-15 h.

By controlling the reaction temperature, stirring rate and mixing time during doping, the doping elements can be evenly distributed and the crystallinity of the material after sintering is higher, thereby improving the gram capacity and rate performance of the material.

In some embodiments, the filter cake may be washed before oven drying the filter cake in step (1). In some embodiments, the oven drying in step (1) can be performed by methods and conditions known to those skilled in the art. For example, the oven drying temperature can be in the range of 120-300°C. Optionally, the filter cake can be ground into particles after oven drying, for example, until the median diameter Dv50 of the particles is in the range of 50-200nm. The median particle size Dv50 refers to a corresponding particle size when the cumulative volume distribution percentage of the positive electrode active material reaches 50%. In the present application, the median particle diameter Dv50 of the positive electrode active material can be measured using laser diffraction particle size analysis. For example, it is determined by using a laser particle size analyzer (such as Malvern Master Size 3000) with reference to the standard GB/T19077-2016.

In some embodiments, in step (2), a carbon source is also added to the reaction vessel for grinding and mixing. Thus, the method can obtain a positive electrode active material whose surface is coated with carbon. Optionally, the carbon source includes one of starch, sucrose, glucose, polyvinyl alcohol, polyethylene glycol, and citric acid, or a combination thereof. The amount of the carbon source relative to the amount of the lithium source is usually in the range of a molar ratio of 0.1%-5%. The grinding can be performed by suitable grinding methods known in the art, for example, by sand grinding.

The temperature and time of spray drying in step (3) can be conventional temperature and time used in spray drying in the art, for example, at 100-300°C for 1-6 h.

In some embodiments, the sintering is performed at a temperature in the range of 600-900°C for 6-14 h. By controlling the sintering temperature and time, the crystallinity of the material can be controlled, and the dissolution of Mn and Mn-site doping elements after cycling of the positive electrode active material can be reduced, thereby improving the high-temperature stability and cycling performance of the battery cell. In some embodiments, the sintering is performed under a protective atmosphere, which may be nitrogen, inert gas, hydrogen or a mixture thereof.

In other embodiments, the positive electrode active material may only have Mn and P-site doping elements. The step of providing a positive electrode active material may include: step (1): mixing and stirring a manganese source, a dopant of element A and an acid in a container to obtain manganese salt particles doped with element A; step (2) : mixing the manganese salt particles doped with element A, a lithium source, a phosphorus source and a dopant of element R in a solvent to obtain a slurry, and then sintering the slurry under the protection of an inert gas atmosphere to obtain the inner core doped with element A and element R. In some optional embodiments, after the manganese source, the dopant of element A and the acid are reacted in a solvent to obtain a suspension of a manganese salt doped with element A, the suspension is filtered, oven dried and sanded to obtain element A doped manganese salt particles with a particle size of 50-200nm. In some optional embodiments, the slurry in step (2) is dried to obtain a powder, and then the powder is sintered to obtain the positive electrode active material doped with element A and element R.

In some embodiments, the mixing in step (1) is carried out at a temperature of 20-120°C, and optionally 40-120°C; and/or the stirring in step (1) is carried out at 400-700rpm for 1-9h, optionally 3-7h. Optionally, the reaction temperature in step (1) can be about 30°C, about 50°C, about 60°C, about 70°C, about 80°C, about 90°C, about 100°C, about 110°C or about 120°C. In step (1), the stirring is continued for about 2 h, about 3 h, about 4 h, about 5 h, about 6 h, about 7 h, about 8 h or about 9 h. Optionally, the reaction temperature and stirring time in step (1) can be within any range defined by the aforementioned arbitrary values.

In some embodiments, the mixing in step (2) is carried out at a temperature of 20-120°C and optionally 40-120°C for 1-12 h. Optionally, the reaction temperature in step (2) can be about 30°C, about 50°C, about 60°C, about 70°C, about 80°C, about 90°C, about 100°C, about 110°C or about 120°C. In step (2), the mixing is continued for about 2 h, about 3 h, about 4 h, about 5 h, about 6 h, about 7 h, about 8 h, about 9 h, about 10 h, about 11 h or about 12 h. Optionally, the reaction temperature and mixing time in step (2) can be within any range defined by the aforementioned arbitrary values.

When the temperature and time during the preparation of the positive electrode active particles are within the aforementioned ranges, the prepared positive electrode active material has fewer lattice defects, which is beneficial to inhibiting the dissolution of manganese and reducing the side reactions at the interface between the positive electrode active material and the electrolyte solution, thereby improving the cycling performance and safety performance of the secondary battery cell.

In some embodiments, optionally, in the process of preparing the dilute acid manganese salt particles doped with element A and element R, the pH of the solution is controlled to 3.5-6, optionally the pH of the solution is controlled to 4-6, and more optionally, the pH of the solution is controlled to 4-5. It should be noted that in the present application, the pH of the obtained mixture can be adjusted by methods commonly used in the art, for example, by adding an acid or a base. In some embodiments, optionally, in step (2), the molar ratio of the manganese salt particles to the lithium source and the phosphorus source is 1:0.5-2.1:0.5-2.1, and more optionally, the molar ratio of the manganese salt particles doped with element A to the lithium source and the phosphorus source is about 1:1:1.

In some embodiments, optionally, the sintering in the process of preparing the lithium manganese phosphate doped with element A and element R comprises: sintering at 600-950°C for 4-10 h under an inert gas atmosphere or a mixed atmosphere of an inert gas and hydrogen. Optionally, the sintering may be sintering at about 650°C, about 700°C, about 750°C, about 800°C, about 850°C, or about 900°C for about 2 h, about 3 h, about 4 h, about 5 h, about 6 h, about 7 h, about 8 h, about 9 h or about 10 h. Optionally, the sintering temperature and sintering time can be within any range defined by any of the aforementioned values. In the process of preparing lithium manganese phosphate doped with elements A and R, when the sintering temperature is too low and the sintering time is too short, the crystallinity of the core of the material will be low, which will affect the overall performance. When the sintering temperature is too high, impurities are prone to appear in the inner core of the material, which affects the overall performance. When the sintering time is too long, the inner core particles of the material become larger, which affects the gram capacity, compacted density and rate performance. In some optional embodiments, optionally, the protective atmosphere is a mixed gas of 70-90 vol% nitrogen and 10-30 vol% hydrogen.

In some embodiments, the particles having the chemical composition described above can serve as the inner core, and the method further includes the step of forming a shell coating the inner core.

Specifically, the step of coating may include the step of forming a carbon coating layer. Specifically, during the step of forming particles with the second doping element, a carbon source may be added and subjected to grinding and mixing or other processes. Optionally, the carbon source includes one of starch, sucrose, glucose, polyvinyl alcohol, polyethylene glycol, and citric acid, or a combination thereof. The amount of the carbon source relative to the amount of the lithium source is usually in the range of a molar ratio of 0. 1%-5%. The grinding can be performed by suitable grinding methods known in the art, for example, by sand grinding.

Alternatively, the method further includes the step of forming the aforementioned inorganic coating layer. The composition, number of layers, etc. of the inorganic coating layers have been described in detail before and will not be described again here.

For example, when the coating layer includes a first coating layer and a second coating layer covering the first coating layer, the first coating layer contains pyrophosphate $QP_2O_7$ and phosphate $XPO_4$, and the second coating layer contains carbon, the method includes: providing $QP_2O_7$ powder and an $XPO_4$ suspension containing a source of carbon, and adding the lithium manganese phosphate oxide and $QP_2O_7$ powder to the $XPO_4$ suspension containing carbon and mixing, and sintering to obtain the positive electrode active material.

The $QP_2O_7$ powder is a commercially available product, or optionally the providing the $QP_2O_7$ powder comprises: adding a source of element Q and a source of phosphorus to a solvent to obtain a mixture, adjusting the pH of the mixture to 4-6, stirring and fully reacting, then drying and sintering to obtain the powder, and the providing the $QP_2O_7$ powder meets at least one of the following conditions: the drying is drying at 100-300°C, optionally at 150-200°C for 4-8h; the sintering is sintering at 500-800°C, optionally at 650-800°C, in an inert gas atmosphere for 4-10h. For example, specifically, the sintering temperature to form the coating layer is 500-800°C, and the sintering time is 4-10h.

In some embodiments, optionally, the $XPO_4$ suspension comprising a source of carbon is commercially available, or optionally, is prepared by the following method: a source of lithium, a source of X, a source of phosphorus and a source of carbon are mixed evenly in a solvent, and then the reaction mixture is heated to 60-120°C and maintained for 2-8 h to obtain an $XPO_4$ suspension containing the source of carbon. Optionally, during the preparation of the $XPO_4$ suspension containing the source of carbon, the pH of the mixture is adjusted to 4-6.

In some embodiments, optionally, the median particle diameter Dv50 of the primary particles of the double-layer-coated lithium manganese phosphate positive electrode active material of the present application is 50-2000nm.

In other embodiments, the coating layer includes a first coating layer covering the $LiMPO_4$ compound, a second coating layer covering the first coating layer, and a third coating layer covering the second coating layer, wherein the first coating layer includes crystalline pyrophosphate $Li_aQP_2O_7$ and/or $Q_b(P_2O_7)_c$, where $0 \leq a \leq 2$, $1 \leq b \leq 4$, $1 \leq c \leq 6$, the values of a, b and c satisfy the following conditions: the crystalline pyrophosphate $Li_aQP_2O_7$ or $Q_b(P_2O_7)_c$ maintains electrically neutral, Q in the crystalline pyrophosphate $Li_aQP_2O_7$ and $Q_b(P_2O_7)_c$ is each independently selected from one or more elements of Fe, Ni, Mg, Co, Cu, Zn, Ti, Ag, Zr, Nb or Al; the second coating layer includes crystalline phosphate $XPO_4$, where the X is selected from one or more elements of Li, Fe, Ni, Mg, Co, Cu, Zn, Ti, Ag, Zr, Nb or Al;

the third coating layer is carbon.

Specifically, in the first coating step, the solution in which the source of element Q, the phosphorus source and the acid and optionally the lithium source are dissolved is controlled to have a pH of 3.5-6.5, then stirred and reacted for 1-5 h; and then the solution is heated to 50-120°C and maintained at this temperature for 2-10h, and/or, the sintering is carried out at 650-800°C for 2-6 h. Optionally, in the first coating step, the reaction proceeds sufficiently. Optionally, in the first coating step, the reaction is carried out for about 1.5 h, about 2 h, about 3 h, about 4 h, about 4.5 h or about 5 h. Optionally, in the first coating step, the reaction time of the reaction may be within any range defined any of the aforementioned values. Optionally, in the first coating step, the pH of the solution is controlled to 4-6. Optionally, in the first coating step, the solution is heated to about 55°C, about 60°C, about 70°C, about 80°C, about 90°C, about 100°C, about 110°C, or about 120°C, and maintained at this temperature for about 2 h, about 3 h, about 4 h, about 5 h, about 6 h, about 7 h, about 8 h, about 9 h, or about 10 h. Optionally, in the first coating step, the elevated temperature and holding time of the temperature can be within any range defined by any of the aforementioned values. Optionally, in the first coating step, the sintering may be sintering at about 650°C, about 700°C, about 750°C, or about 800°C for about 2 h, about 3 h, about 4 h, about 5 h or about 6 h. Optionally, the sintering temperature and sintering time can be within any range defined by any of the aforementioned values.

In the first coating step, by controlling the sintering temperature and time within the above ranges, the following situations can be avoided: when the sintering temperature in the first coating step is too low and the sintering time is too short, the crystallinity of the first coating layer is caused to be low and there are many amorphous substances, which will reduce the effect of inhibiting metal dissolution, thereby affecting the cycling performance and high-temperature storage performance of the secondary battery cell; and when the sintering temperature is too high, impurity phases are caused to appear in the first coating layer, which will also affect the effect of inhibiting metal dissolution, thereby affecting the cycling performance and high-temperature storage performance of the secondary battery cell; and if the sintering time is too long, the thickness of the first coating layer will increase, affecting the migration of Li+, and thus affecting the gram capacity and rate performance of the material.

In some embodiments, in the second coating step, the source of element X, the phosphorus source and the acid are dissolved in a solvent, stirred and reacted for 1-10h, and then the solution is heated to 60-150°C, and maintained at this temperature for 2-10h, and/or, sintered at 500-700°C for 6-10 h. Optionally, in the second coating step, the reaction proceeds sufficiently. Optionally, in the second coating step, the reaction is carried out for about 1.5 h, about 2 h, about 3 h, about 4 h, about 4.5 h, about 5 h, about 6 h, about 7 h, about 8 h, about 9 h or about 10 h. Optionally, in the second coating step, the reaction time of the reaction may be within any range defined any of the aforementioned values. Optionally, in the second coating step, the solution is heated to about 65°C, about 70°C, about 80°C, about 90°C, about 100°C, about 110°C, about 120°C, about 130°C, about 140°C, or about 150°C, and maintained at this temperature for about 2 h, about 3 h, about 4 h, about 5 h, about 6 h, about 7 h, about 8 h, about 9 h, or about 10 h. Optionally, in the second coating step, the elevated temperature and holding time of the temperature can be within any range defined by any of the aforementioned values.

In the step of providing the inner core material and the first coating step and the second coating step, before sintering, that is, in the preparation of the chemically reacted inner core material and in the preparation of the first coating layer suspension and the second coating layer suspension, by selecting the appropriate reaction temperature and reaction time as described above, the following situations can be avoided: when the reaction temperature is too low, the reaction fails or the reaction rate is slow; when the temperature is too high, the product is decomposed or forms a heterophase; when the reaction time is too long, the particle size of the product is larger, which may increase the time and difficulty of the subsequent process; and when the reaction time is too short, the reaction is incomplete, and few product is obtained.

Optionally, in the second coating step, the sintering may be sintering at about 550°C, about 600°C, or about 700°C for about 6 h, about 7 h, about 8 h, about 9 h or about 10 h. Optionally, the sintering temperature and sintering time can be within any range defined by any of the aforementioned values. In the second coating step, by controlling the sintering temperature and time within the above ranges, the following situations can be avoided: when the sintering temperature in the second coating step is too low and the sintering time is too short, the crystallinity of the second coating layer is caused to be low and there are many amorphous substances, which will reduce its performance to decrease the surface reactivity of the material, thereby affecting the cycling and high-temperature storage performance of the secondary battery cell; and when the sintering temperature is too high, impurity phases are caused to appear in the second coating layer, which will also affect its effect of reducing the surface reactivity of the material, thereby affecting the cycling performance and high-temperature storage performance of the secondary battery cell; and if the sintering time is too long, the thickness of the second coating layer will increase, affecting the voltage platform of the material, thus reducing the energy density of the material.

In some embodiments, the sintering in the third coating step is performed at 700-800°C for 6-10 h. Optionally, in the third coating step, the sintering may be sintering at about 700°C, about 750°C, or about 800°C for about 6 h, about 7 h, about 8 h, about 9 h or about 10 h. Optionally, the sintering temperature and sintering time can be within any range defined by any of the aforementioned values. In the third coating step, by controlling the sintering temperature and time within the above ranges, the following situations can be avoided: when the sintering temperature in the third coating step is too low, the third coating layer may be caused to have a low degree of graphitization, affecting the electrical conductivity, and thus affecting the gram capacity of the material; when the sintering temperature is too high, the third coating layer may be caused to have a too high degree of graphitization, affecting the transport of Li+ and thus affecting the gram capacity of the material; when the sintering time is too short, the coating layer is caused to be too thin, affecting the electrical conductivity, and thus affecting the gram capacity of the material; and when the sintering time is too long, the coating layer is caused to be too thick, affecting the compacted density of the material, etc.

In the first coating step, second coating step, and third coating step, the drying is performed at a drying temperature of 100°C to 200°C, optionally 110°C to 190°C, and more optionally 120°C to 180°C, even more optionally at 120°C to 170°C, and most optionally 120°C to 160°C, and the drying time is 3-9h, optionally 4-8h, more optionally 5-7h, and most optionally about 6h.

A third aspect of the present application provides a positive electrode plate, which includes a positive electrode current collector and a positive electrode film layer disposed on at least one surface of the positive electrode current collector. The positive electrode film layer comprises the positive electrode active material according to the first aspect of the present application or a positive electrode active material prepared by the method according to the second aspect of the present application. The content of the positive electrode active material in the positive electrode film layer is 10 wt% or more, based on the total weight of the positive electrode film layer.

In some embodiments, the content of the positive electrode active material in the positive electrode film layer is 95-99.5wt%, based on the total weight of the positive electrode film layer.

A fourth aspect of the present application provides a secondary battery cell, comprising a positive electrode active material according to the first aspect of the present application, or a positive electrode active material prepared by the method according to the second aspect of the present application, or a positive electrode plate according to the third aspect of the present invention.

In general, the secondary battery cell comprises a positive electrode plate, a negative electrode plate, an electrolyte, and a separator. During charging and discharging of the battery cell, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

The secondary battery cell, the battery cell module, the battery cell, and the electrical apparatus in the present application are described below with reference to the drawings as appropriate.

[Positive electrode plate]

The positive electrode plate comprises a positive electrode current collector and a positive electrode film layer arranged on at least one surface of the positive electrode current collector, and the positive electrode film layer comprises the positive electrode active material in the first aspect of the present application.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metallic material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

[Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a polymer material substrate layer and a metal layer formed on at least one surface of the polymer material substrate. The composite current collector can be formed by forming a metallic material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery cell well known in the art can be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be at least one selected from elemental tin, a tin-oxygen compound, and a tin alloy. However, the present application is not limited to these materials, and other conventional materials useful as negative electrode active materials for battery cells can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may comprise a negative electrode film-forming additive and a positive electrode film-forming additive, and may further include an additive that can improve certain performances of the battery cell, such as an additive that improves the overcharge performance of the battery cell, or an additive that improves the high temperature or low-temperature performance of the battery cell.

[Separator]

In some embodiments, the secondary battery cell further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery cell may comprise an outer package. The outer package may be used to encapsulate the above electrode assembly and the above electrolyte.

In some embodiments, the outer package of the secondary battery cell may be a hard shell, such as a hard plastic shell, an aluminum shell, and a steel shell. The outer package of the secondary battery cell may also be a soft pack, such as a bag-type soft pack. The material of the soft bag may be a plastic, and examples of the plastic may include polypropylene, polybutylene terephthalate, polybutylene succinate, and the like.

The shape of the secondary battery cell is not particularly limited in the present application, and may be a cylinder shape, a square shape, or any other shape.

In some embodiments, the battery cell box may comprise a case and a cover plate. The case may comprise a bottom plate and a side plate connected to the bottom plate, which enclose to form an accommodating cavity. The case has an opening in communication with the accommodating cavity, and the cover plate can cover the opening to close the accommodating cavity. The positive electrode plate, the negative electrode plate, and the separator may be formed into an electrode assembly by a winding process or a lamination process. The electrode assembly is encapsulated within the accommodating cavity. The electrolyte solution impregnates the electrode assembly. The number of electrode assemblies comprised in the secondary battery cell may be one or multiple, and may be selected by those skilled in the art according to specific actual requirements.

In some embodiments, the secondary battery cells may be assembled into a battery cell module, the number of secondary battery cells comprised in the battery cell module may be one or multiple, and the specific number may be selected by those skilled in the art according to the application and capacity of the battery cell module.

In the battery cells, multiple secondary battery cells can be sequentially arranged along the length direction of the battery cells. Of course, any other arrangement is also possible. The plurality of secondary battery cells may further be fixed by fasteners.

In some embodiments, the aforementioned battery cell modules may be assembled into a battery cell, the number of battery cell modules comprised in the battery cell may be one or multiple, and the specific number may be selected by those skilled in the art according to the application and capacity of the battery cell.

Embodiments of the present application will be described below. The examples described below are illustrative, are merely used to explain the present application, and should not be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

I. Testing methods for properties of positive electrode active materials and battery cell performance

1. Measurement method for lattice change rate

In a constant temperature environment of 25°C, a positive electrode active material sample was placed in an XRD (model Bruker D8 Discover), and the sample was tested at 1°/min. The test data was analyzed. With reference to a standard PDF card, the lattice constants $a_0$, $b_0$, $c_0$, and $v_0$ at the time were calculated ($a_0$, $b_0$, and $c_0$ represent the lengths in all aspects of the unit cell, and $v_0$ represents the unit cell volume, which can be obtained directly from the XRD refined results).

The positive electrode active material sample was prepared into a button battery by using the method for preparing a button battery in the above embodiments. The button battery was charged at a small rate of 0.05C until the current was reduced to 0.01C. Then the positive electrode plate was taken out from the button battery and soaked in DMC for 8 h. Then it was dried, powder was scraped, and particles with a particle size less than 500nm were screened out. A sample was taken and calculated for its lattice constant v1 in the same way as the aforementioned test of fresh samples, and (v0-v1)/v0×100% is shown in the table as the lattice change rate before and after complete deintercalation of lithium.

2. Measurement method for Li/Mn antisite defect concentration

The Li/Mn antisite defect concentration was obtained by comparing the XRD results tested in the "Lattice Change Rate Measurement Method" with the PDF (Powder Diffraction File) card of a standard crystal. Specifically, the XRD results tested in the "Lattice Change Rate Measurement Method" were imported into the General Structural Analysis System (GSAS) software, and the refined results were automatically obtained, which included the occupancy of different atoms. and the Li/Mn antisite defect concentration was obtained by reading the refined results.

3. Surface oxygen valence measurement method

5g of the positive electrode active material sample was taken and a button battery was prepared according to the button battery preparation method described in the aforementioned embodiment. The button battery was charged with a small rate of 0.05C until the current was reduced to 0.01C. Then the positive electrode plate was taken out from the button battery and soaked in DMC for 8 h. Then it was dried, powder was scraped, and particles with a particle size less than 500nm were screened out. The obtained particles were measured with electron energy loss spectroscopy (EELS, the instrument model used was Talos F200S), and the energy loss near-edge structure (ELNES) was obtained, which reflects the density of states and energy level distribution of the element. According to the density of states and energy level distribution, the number of occupied electrons was calculated by integrating the valence band density data, thereby deducing the valence of the charged surface oxygen.

4. Measurement method for compacted density

5g of powder was taken and placed in a special compaction mold (American CARVER mold, model 13mm), and then the mold was placed on the compacted density instrument. A pressure of 3T was applied, the thickness of the powder under pressure (thickness after pressure relief) was read on the equipment, and the compacted density was calculated through $\rho$=m/v. The area value used is the standard small picture area of 1540.25mm$^2$.

5. Measurement method for dissolution of Mn (and Fe doped at Mn site) after cycling

The full battery cells that were cycled at 45°C until their capacity decayed to 80% were discharged to a cut-off voltage of 2.0V using a 0.1C rate. Then the battery cell was disassembled, the negative electrode plate was taken out, randomly 30 discs of unit area (1540.25mm$^2$) was taken from the negative electrode plate, and the inductively coupled plasma emission spectrum (ICP) was tested using Agilent ICP-OES730. The amounts of Fe (if the Mn site of the positive electrode active material is doped with Fe) and Mn were calculated based on the ICP results, and then the dissolution amount of Mn (and Fe doped at Mn site) after cycles was calculated. The test standard is based on EPA-6010D-2014.

6. Measurement method for initial gram capacity of button battery cell

At 2.5-4.3 V, the button battery cells were charged to 4.3V at 0.1C, and then charged at a constant voltage of 4.3V until the current was less than or equal to 0.05 mA, left to stand for 5min, and then discharged at 0.1 C to 2.0V. The discharge capacity at this time was the initial gram capacity, recorded as D0.

7. Measurement method for 3C charge constant current rate

In a constant-temperature environment of 25°C, the fresh full battery cells were allowed to stand for 5min, and discharged to 2.5V at 1/3C. The battery cell was allowed to stand for 5 min, charge to 4.3V at 1/3C, and then charged at a constant voltage of 4.3V until the current was less than or equal to 0.05 mA. After standing for 5 min, the charging capacity at this time was recorded as C0. The battery cell was discharged to 2.5V according to 1/3C, allowed to stand for 5 min, then charged to 4.3V at 3C, allowed to stand for 5 min, and the charging capacity at this time was recorded as C1. The 3C charge constant current rate is C1/C0×100%. The higher the 3C charge constant current rate, the better the rate performance of the battery cell.

8. Full battery cell cycling performance test at 45°C

In a constant-temperature environment of 45°C, at 2.5-4.3V, the full battery cell was charged to 4.3V at 1C, then charged at a constant voltage of 4.3V until the current was less than or equal to 0.05mA. After standing for 5 min, the battery cell was discharged to 2.5V at 1C, the charging capacity at this time was recorded as D0. The aforementioned charge and discharge cycle was repeated until the discharge capacity was reduced to 80% of D0. The number of cycles the battery cell had gone through at this time was recorded.

9. Full battery cell expansion test at 60°C

Full battery cells at 100% state of charge (SOC) were stored at 60°C. The open circuit voltage (OCV) and AC internal resistance (IMP) of the battery cells were measured before, after and during storage to monitor SOC, and the battery cell volume was measured. The full battery cells were taken out after every 48 h of storage, and the open circuit voltage (OCV) and internal resistance (IMP) were tested after standing for 1 h. After cooling to room temperature, the battery cell volume was measured using the water displacement method. The water displacement method involves first separately measuring the gravity $F_1$ of a battery cell using a balance that automatically performs unit conversion based on the dial data, then immersing the battery cell in deionized water (with density known to be 1g/cm$^3$), and measuring the buoyancy $F_2$ of the battery cell at this time; the buoyancy $F_{buoyancy}$ on the battery cell is $F_1$-$F_2$, and then according to Archimedes' principle $F_{buoyancy}= \rho \times g \times V_{water\ displaced}$, it is calculated to obtain the battery cell volume $V=(F_1-F_2)/(\rho \times g)$.

Judging from the OCV and IMP test results, during this experiment until the end of storage, the battery cells of the embodiment always maintained an SOC of more than 99%.

After 30 days of storage, the battery cell volume was measured and the percentage increase in the battery cell volume after storage relative to the battery cell volume before storage was calculated.

In addition, the residual capacity of the battery was measured. At 2.5-4.3V, the full battery cell was charged to 4.3V at 1C, then charged at a constant voltage of 4.3V until the current was less than or equal to 0.05mA. After standing for 5 min, the charging capacity at this time was recorded as the residual capacity of the battery cell.

10. Measurement of manganese and phosphorus elements in positive electrode active materials

5g of the positive electrode active material prepared above was dissolved in 100ml of aqua regia (concentrated hydrochloric acid: concentrated nitric acid = 1:3) (concentrated hydrochloric acid concentration was about 37%, concentrated nitric acid concentration was about 65%), the content of each element in the solution was detected using ICP, and then the content of manganese element or phosphorus element was measured and converted (amount of manganese element or phosphorus element/amount of positive electrode active material * 100%) to obtain their weight percentages.

11. Interplanar spacing and included angle test

1 g of the positive electrode active material sample powder prepared above was taken and placed in a 50mL test tube, and 10 mL of alcohol (75% by mass) was injected into the test tube, and then stirred fully to disperse the powder for 30 min. Then an appropriate amount of the solution was taken by a clean disposable plastic pipette and dropped on a 300-mesh copper screen. At this time, some of the powder will remain on the copper screen. The copper screen with the sample was transferred to a TEM (Talos F200s G2) sample cavity and tested, to obtain an original TEM image, and the original image format (xx.dm3) was saved. The original image obtained by the above TEM test was opened in the DigitalMicrograph software, and subjected to Fourier transform (automatically completed by the software after clicking the operation) to obtain the diffraction pattern. The distance from the diffraction spot to the center position in the diffraction pattern was measured to obtain the interplanar spacing. The included angle was calculated according to the Bragg equation. By comparing the obtained interplanar spacing and corresponding angle data with their standard values, different substances in the coating layer can be identified.

12. Coating layer thickness test

The thickness test of the coating layer mainly involved using FIB to cut a slice with a thickness of about 100nm from the middle of a single particle of the positive electrode active material prepared above, and then performing a TEM test on the slice to obtain the original TEM test picture and save the original picture format (xx.dm3).

The original image obtained from the above TEM test was opened in the DigitalMicrograph software, the coating layer was identified according to the lattice spacing and angle information, and the thickness of the coating layer was measured.

Thicknesses at three locations were measured on the selected particles and averaged.

13. Determination of molar ratio of SP2 hybridized carbon to SP3 hybridized carbon in the third coating layer

This test was performed by Raman spectroscopy. The spectrum of the Raman test was split to obtain Id/Ig where Id is the peak intensity of SP3 hybridized carbon, and Ig is the peak intensity of SP2 hybridized carbon, thereby confirming the molar ratio of the two.

II. Preparation of positive electrode materials and secondary battery cells

The raw material sources involved in the embodiments of the present application are as follows:

| Name | Chemical formula | Manufacturer | Specification |
|---|---|---|---|
| Manganese carbonate | $MnCO_3$ | Shandong West Asia Chemical Industry Co, Ltd. | 1Kg |
| Lithium carbonate | $Li_2CO_3$ | Shandong West Asia Chemical Industry Co, Ltd. | 1Kg |
| Magnesium carbonate | $MgCO_3$ | Shandong West Asia Chemical Industry Co, Ltd. | 1Kg |
| Zinc carbonate | $ZnCO_3$ | Wuhan Xinru Chemical Co, Ltd. | 25Kg |
| Ferrous carbonate | $FeCO_3$ | Xi'an Lanzhiguang Fine Materials Co, Ltd. | 1Kg |
| Nickel sulfate | $NiCO_3$ | Shandong West Asia Chemical Industry Co, Ltd. | 1Kg |

| | | | |
|---|---|---|---|
| Titanium sulfate | $Ti(SO_4)_2$ | Shandong West Asia Chemical Industry Co, Ltd. | 1Kg |
| Cobalt sulfate | $CoSO_4$ | Xiamen Zhixin Chemical Co, Ltd. | 500g |
| Vanadium dichloride | $VCl_2$ | Shanghai Jinjinle Industrial Co, Ltd. | 1Kg |
| Oxalic acid dihydrate | $C_2H_2O_4 \cdot 2H_2O$ | Shanghai Jinjinle Industrial Co, Ltd. | 1Kg |
| Ammonium dihydrogen phosphate | $NH_4H_2PO_4$ | Shanghai Chengshao Biotechnology Co, Ltd. | 500g |
| Sucrose | $C_{12}H_{22}O_{11}$ | Shanghai Yuanye Biotechnology Co, Ltd. | 100g |
| Sulfuric acid | $H_2SO_4$ | Shenzhen Hisian Biotechnology Co, Ltd. | Mass fraction 60% |
| Nitric acid | $HNO_3$ | Anhui Lingtian Fine Chemical Co, Ltd. | Mass fraction 60% |
| Silicic acid | $H_2SiO_3$ | Shanghai Yuanye Biotechnology Co, Ltd. | 100g |
| Boric acid | $H_3BO_3$ | Changzhou Qidi Chemical Co, Ltd. | 1Kg |

Embodiment 1

1) Preparation of positive electrode active material

Preparation of doped manganese oxalate: 1.3mol of $MnSO_4 \cdot H_2O$, 0.7mol of $FeSO_4 \cdot H_2O$ were mixed thoroughly in the mixer for 6 h. The mixture was transferred to the reactor, and 10 L of deionized water and 2 mol of oxalic acid dihydrate (based on oxalic acid) were added. The reactor was heated to 80°C and stirred at 600 rpm for 6 h. The reaction was terminated (no bubbles were generated) to obtain an Fe-doped manganese oxalate suspension. Then the suspension was filtered, the filter cake was oven dried at 120°C, and then ground to obtain Fe doped manganese oxalate particles with a median particle size $Dv_{50}$ of about 100 nm.

Preparation of doped lithium manganese phosphate: 1 mol of the above manganese oxalate particles, 0.497

164

mol of lithium carbonate, 0.001 mol of $Mo(SO_4)_3$, an 85% phosphoric acid aqueous solution containing 0.999 mol of phosphoric acid, 0.001 mol of $H_4SiO_4$, 0.0005 mol of $NH_4HF_2$ and 0.005 mol of sucrose were taken and added to 20L of deionized water. The mixture was transferred to a sand mill and thoroughly ground and stirred for 10 h to obtain a slurry. The slurry was transferred to a spray drying device for spray drying and granulation, and dried at a set temperature of 250°C for 4 h to obtain particles. In a protective atmosphere of nitrogen (90 vol%) + hydrogen (10 vol%), the above powder was sintered at 700°C for 10 h to obtain carbon-coated $Li_{0.994}Mo_{0.001}Mn_{0.65}Fe_{0.35}P_{0.999}Si_{0.001}O_{3.999}F_{0.001}$. The element content of the positive electrode active material can be detected by inductively coupled plasma emission spectroscopy (ICP).

2) Preparation of button battery cell

The above positive electrode active material, polyvinylidene fluoride (PVDF), and acetylene black in a weight ratio of 90:5:5 were added to N-methyl pyrrolidone (NMP), and stirred in a drying shed to form a slurry. The above slurry was coated on an aluminum foil, dried and cold pressed to form a positive electrode plate. The coating amount was 0.2 $g/cm^2$ and the compacted density was 2.0 $g/cm^3$.

A lithium sheet was used as the negative electrode, and a solution of 1 mol/L $LiPF_6$ in ethylene carbonate (EC), diethyl carbonate (DEC) and dimethyl carbonate (DMC) in a volume ratio of 1:1:1 was used as the electrolyte solution. They were assembled, together with the above-prepared positive electrode plate, assembled into a button battery cell in a button battery casing (also referred to as "button-battery" below).

3) Preparation of full battery cells:

The aforementioned positive electrode active material, conductive agent acetylene black and binder polyvinylidene fluoride (PVDF) in a weight ratio of 92:2.5:5.5 were evenly mixed in the N-methyl pyrrolidone solvent system, then coated on an aluminum foil, oven dried and cold pressed to obtain the positive electrode plate. The coating amount was 0.4 $g/cm^2$ and the compacted density was 2.4 $g/cm^3$.

The negative electrode active material artificial graphite, hard carbon, the conductive agent acetylene black, the binder styrene butadiene rubber (SBR), and the thickener sodium carboxymethyl cellulose (CMC) in a weight ratio of 90:5:2:2:1 were well mixed in deionized water, and then coated on a copper foil, oven dried and cold pressed to obtain the negative electrode plate. The coating amount was 0.2 $g/cm^2$ and the compacted density was 1.7 $g/cm^3$.

With a polyethylene (PE) porous polymer film as the separator, the positive electrode plate, separator and negative electrode plate were stacked in sequence, so that the separator was located between the positive electrode plate and the negative electrode plate for separation, and a bare battery cell was obtained by winding. The bare battery cell was placed in an outer package, the same electrolyte solution as that used in the preparation of the button battery was injected, they were packaged to obtain a full battery cell (hereinafter also referred to as the "full battery").

Embodiment 2

This embodiment was the same as Embodiment 1 except that in "1) Preparation of positive electrode active material", the amount of high purity $Li_2CO_3$ was changed to 0.4885 mol, $Mo(SO_4)_3$ was replaced with $MgSO_4$, and the amount of $FeSO_4 \cdot H_2O$ was changed to 0.68 mol, respectively, and in the preparation of doped manganese oxalate, 0.02 mol of $Ti(SO_4)_2$ was added, and $H_4SiO_4$ was replaced with $HNO_3$.

Embodiment 3

This embodiment was the same as Embodiment 1 except that in "1) Preparation of positive electrode active material", the amount of high purity $Li_2CO_3$ was changed to 0.496 mol, $Mo(SO_4)_3$ was replaced with $W(SO_4)_3$, and $H_4SiO_4$ was replaced with $H_2SO_4$.

Embodiment 4

This embodiment was the same as Embodiment 1 except that in "1) Preparation of positive electrode active material", the amount of high purity $Li_2CO_3$ was changed to 0.4985 mol, 0.001 mol of $Mo(SO_4)_3$ was replaced with 0.0005 mol of $Al_2(SO_4)_3$, and $NH_4HF_2$ was replaced with $NH_4HCl_2$.

Embodiment 5

This embodiment was the same as Embodiment 1 except that in "1) Preparation of positive electrode active material", 0.7 mol of $FeSO_4 \cdot H_2O$ was changed to 0.69 mol, and in the preparation of doped manganese oxalate, 0.01 mol of $VCl_2$ was added, the amount of $Li_2CO_3$ was changed to 0.4965 mol, 0.001 mol of $Mo(SO_4)_3$ was replaced with 0.0005 mol of $Nb_2(SO_4)_5$ and $H_4SiO_4$ was replaced with $H_2SO_4$.

Embodiment 6

This embodiment was the same as Embodiment 1 except that in "1) Preparation of positive electrode active material", the amount of $FeSO_4 \cdot H_2O$ was changed to 0.68 mol, and in the preparation of doped manganese oxalate, 0.01 mol of $VCl_2$ and 0.01 mol of $MgSO_4$ were added, the amount of $Li_2CO_3$ was changed to 0.4965 mol, 0.001 mol of $Mo(SO_4)_3$ was replaced with 0.0005 mol of $Nb_2(SO_4)_5$ and $H_4SiO_4$ was replaced with $H_2SO_4$.

Embodiment 7

This embodiment was the same as Embodiment 6 except that in "1) Preparation of positive electrode active material", $MgSO_4$ was replaced with $CoSO_4$.

Embodiment 8

This embodiment was the same as Embodiment 6 except that in "1) Preparation of positive electrode active material", $MgSO_4$ was replaced with $NiSO_4$.

Embodiment 9

This embodiment was the same as Embodiment 1 except that in "1) Preparation of positive electrode active material", the amount of $FeSO_4 \cdot H_2O$ was changed to 0.698 mol, and in the preparation of doped manganese oxalate, 0.002 mol of $Ti(SO_4)_2$ was added, the amount of $Li_2CO_3$ was changed to 0.4955 mol, 0.001 mol of $Mo(SO_4)_3$ was replaced with 0.0005 mol of $Nb_2(SO_4)_5$, $H_4SiO_4$ was replaced with $H_2SO_4$, and $NH_4HF_2$ was replaced with $NH_4HCl_2$.

Embodiment 10

This embodiment was the same as Embodiment 1 except that in "1) Preparation of positive electrode active material", the amount of $FeSO_4 \cdot H_2O$ was changed to 0.68 mol, and in the preparation of doped manganese oxalate, 0.01 mol of $VCl_2$ and 0.01 mol of $MgSO_4$ were added, the amount of $Li_2CO_3$ was changed to 0.4975 mol, 0.001 mol of $Mo(SO_4)_3$ was replaced with 0.0005 mol of $Nb_2(SO_4)_5$ and $NH_4HF_2$ was replaced with $NH_4HBr_2$.

Embodiment 11

This embodiment was the same as Embodiment 1 except that in "1) Preparation of positive electrode active material", the amount of $FeSO_4 \cdot H_2O$ was changed to 0.69 mol, and in the preparation of doped manganese oxalate, 0.01 mol of $VCl_2$ was added, the amount of $Li_2CO_3$ was changed to 0.499 mol, $Mo(SO_4)_3$ was replaced with $MgSO_4$ and $NH_4HF_2$ was replaced with $NH_4HBr_2$.

Embodiment 12

This embodiment was the same as Embodiment 1 except that in "1) Preparation of positive electrode active material", the amount of $MnSO_4 \cdot H_2O$ was changed to 1.36 mol, the amount of $FeSO_4 \cdot H_2O$ was changed to 0.6 mol, and in the preparation of doped manganese oxalate, 0.04 mol of $VCl_2$ was added, the amount of $Li_2CO_3$ was changed to 0.4985 mol, $Mo(SO_4)_3$ was replaced with $MgSO_4$ and $H_4SiO_4$ was replaced with $HNO_3$.

Embodiment 13

This embodiment was the same as Embodiment 12 except that in "1) Preparation of positive electrode active material", the amount of $MnSO_4 \cdot H_2O$ was changed to 1.16 mol, and the amount of $FeSO_4 \cdot H_2O$ was changed to 0.8 mol.

Embodiment 14

This embodiment was the same as Embodiment 12 except that in "1) Preparation of positive electrode active material", the amount of $MnSO_4 \cdot H_2O$ was changed to 1.3 mol, and the amount of $VCl_2$ was changed to 0.1 mol.

Embodiment 15

This embodiment was the same as Embodiment 1 except that in "1) Preparation of positive electrode active material", the amount of $MnSO_4 \cdot H_2O$ was changed to 1.2 mol, and in the preparation of doped manganese oxalate, 0.1 mol of $VCl_2$ was added, the amount of $Li_2CO_3$ was changed to 0.494 mol, 0.001 mol of $Mo(SO_4)_3$ was replaced with 0.005 mol of $MgSO_4$ and $H_4SiO_4$ was replaced with $H_2SO_4$.

Embodiment 16

This embodiment was the same as Embodiment 1 except that in "1) Preparation of positive electrode active material", the amount of $MnSO_4 \cdot H_2O$ was changed to 1.2 mol, and in the preparation of doped manganese oxalate, 0.1 mol of $VCl_2$ was added, the amount of $Li_2CO_3$ was changed to 0.467 mol, 0.001 mol of $Mo(SO_4)_3$ was replaced with 0.005 mol of $MgSO_4$, 0.001 mol of $H_4SiO_4$ was replaced with 0.005 mol of $H_2SO_4$, and 1.175 mol of 85% phosphoric acid was replaced by 1.171 mol of 85% phosphoric acid.

Embodiment 17

This embodiment was the same as Embodiment 1 except that in "1) Preparation of positive electrode active material", the amount of $MnSO_4 \cdot H_2O$ was changed to 1.2 mol, and in the preparation of doped manganese oxalate, 0.1 mol of $VCl_2$ was added, the amount of $Li_2CO_3$ was changed to 0.492 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol.

Embodiment 18

This embodiment was the same as Embodiment 1 except that in "1) Preparation of positive electrode active material", the amount of $FeSO_4 \cdot H_2O$ was changed to 0.5 mol, and in the preparation of doped manganese oxalate, 0.1 mol of $VCl_2$ and 0.1 mol of $CoSO_4$ were added, the amount of $Li_2CO_3$ was changed to 0.492 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol.

Embodiment 19

This embodiment was the same as Embodiment 18 except that in "1) Preparation of positive electrode active material", the mount of $FeSO_4 \cdot H_2O$ was changed to 0.4 mol, and 0.1 mol of $CoSO_4$ was changed to 0.2 mol.

Embodiment 20

This embodiment was the same as Embodiment 18 except that in "1) Preparation of positive electrode active material", the amount of $MnSO_4 \cdot H_2O$ was changed to 1.5 mol, the amount of $FeSO_4 \cdot H_2O$ was changed to 0.1 mol, and the amount of $CoSO_4$ was changed to 0.3 mol.

Embodiment 21

This embodiment was the same as Embodiment 18 except that in "1) Preparation of positive electrode active material", 0.1 mol of $CoSO_4$ was replaced with 0.1 mol of $NiSO_4$.

Embodiment 22

This embodiment was the same as Embodiment 18 except that in "1) Preparation of positive electrode active material", the amount of $MnSO_4 \cdot H_2O$ was changed to 1.5 mol, the amount of $FeSO_4 \cdot H_2O$ was changed to 0.2 mol, and 0.1 mol of $CoSO_4$ was replaced with 0.2 mol of $NiSO_4$.

Embodiment 23

This embodiment was the same as Embodiment 18 except that in "1) Preparation of positive electrode active material", the amount of $MnSO_4 \cdot H_2O$ was changed to 1.4 mol, the amount of $FeSO_4 \cdot H_2O$ was changed to 0.3 mol, and the amount of $CoSO_4$ was changed to 0.2 mol.

Embodiment 24

This embodiment was the same as Embodiment 1 except that in "1) Preparation of positive electrode active material", 1.3 mol of $MnSO_4 \cdot H_2O$ was changed to 1.2 mol, 0.7 mol of $FeSO_4 \cdot H_2O$ was changed to 0.5 mol, and in the preparation of doped manganese oxalate, 0.1 mol of $VCl_2$ and 0.2 mol of $CoSO_4$ were added, the amount of $Li_2CO_3$ was changed to 0.497 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol.

Embodiment 25

This embodiment was the same as Embodiment 18 except that in "1) Preparation of positive electrode active material", the amount of $MnSO_4 \cdot H_2O$ was changed to 1.0 mol, the amount of $FeSO_4 \cdot H_2O$ was changed to 0.7 mol, and the amount of $CoSO_4$ was changed to 0.2 mol.

Embodiment 26

This embodiment was the same as Embodiment 1 except that in "1) Preparation of positive electrode active material", the amount of $MnSO_4 \cdot H_2O$ was changed to 1.4 mol, the amount of $FeSO_4 \cdot H_2O$ was changed to 0.3 mol, and in the preparation of doped manganese oxalate, 0.1 mol of $VCl_2$ and 0.2 mol of $CoSO_4$ were added, the amount of $Li_2CO_3$ was changed to 0.4825 mol, 0.001 mol of $Mo(SO_4)_3$ was replaced with 0.005 mol of $MgSO_4$, the amount of $H_4SiO_4$ was changed to 0.1 mol, the amount of phosphoric acid was changed to 0.9 mol, and the amount of $NH_4HF_2$ was changed to 0.04 mol.

Embodiment 27

This embodiment was the same as Embodiment 1 except that in "1) Preparation of positive electrode active material", the amount of $MnSO_4 \cdot H_2O$ was changed to 1.4 mol, the amount of $FeSO_4 \cdot H_2O$ was changed to 0.3 mol, and in the preparation of doped manganese oxalate, 0.1 mol of $VCl_2$ and 0.2 mol of $CoSO_4$ were added, the amount of $Li_2CO_3$ was changed to 0.485 mol, 0.001 mol of $Mo(SO_4)_3$ was replaced with 0.005 mol of $MgSO_4$, the amount of $H_4SiO_4$ was changed to 0.08 mol, the amount of phosphoric acid was changed to 0.92 mol, and the amount of $NH_4HF_2$ was changed to 0.05 mol.

Comparative Embodiment 1

Preparation of manganese oxalate: 1 mol of $MnSO_4 \cdot H_2O$ was added to the reactor, and 10 L of deionized water and 1 mol of oxalic acid dihydrate (based on oxalic acid) were added. The reactor was heated to 80°C and stirred at 600 rpm for 6 h. The reaction was terminated (no bubbles were generated) to obtain a manganese oxalate suspension. Then the suspension was filtered, oven dried at 120°C, and then sanded to obtain manganese oxalate particles with a median particle size $Dv_{50}$ of 50-200nm.
Preparation of lithium manganese phosphate: 1 mol of the above manganese oxalate particles, 0.5 mol of lithium carbonate, an 85% phosphoric acid aqueous solution containing 1 mol of phosphoric acid, and 0.005 mol of sucrose were taken and added to 20L of deionized water. The mixture was transferred to a sand mill and thoroughly ground and stirred for 10 h to obtain a slurry. The slurry was transferred to a spray drying device for spray drying and granulation, and dried at a set temperature of 250°C for 4 h to obtain particles. In a protective atmosphere of nitrogen (90 vol%) + hydrogen (10 vol%), the above powder was sintered at 700°C for 10 h to obtain carbon-coated $LiMnPO_4$.

Embodiment 55

This embodiment was the same as Comparative Embodiment 1 except that in Comparative Embodiment 1, 1 mol of $MnSO_4 \cdot H_2O$ was replaced with 0.85 mol $MnSO_4 \cdot H_2O$ and 0.15 mol of $FeSO_4 \cdot H_2O$ which were added to the mixer and mixed thoroughly for 6 h before being added to the reactor.

Embodiment 56

This embodiment was the same as Embodiment 1 except that in "1) Preparation of positive electrode active material", the amount of $MnSO_4 \cdot H_2O$ was changed to 1.9 mol, 0.7 mol of $FeSO_4 \cdot H_2O$ was replaced with 0.1 mol of $ZnSO_4$, the amount of $Li_2CO_3$ was changed to 0.495 mol, 0.001 mol of $Mo(SO_4)_3$ was replaced with 0.005 mol of $MgSO_4$, the amount of phosphoric acid was changed to 1 mol, and $H_4SiO_4$ and $NH_4HF_2$ were not added.

Embodiment 57

This embodiment was the same as Embodiment 1 except that in "1) Preparation of positive electrode active material", the amount of $MnSO_4 \cdot H_2O$ was changed to 1.2 mol, the amount of $FeSO_4 \cdot H_2O$ was changed to 0.8 mol, the amount of $Li_2CO_3$ was changed to 0.45 mol, 0.001 mol of $Mo(SO_4)_3$ was replaced with 0.005 mol of $Nb_2(SO_4)_5$, 0.999 mol of phosphoric acid was changed to 1 mol, 0.0005 mol of $NH_4HF_2$ was changed to 0.025 mol and $H_4SiO_4$ was not added.

Embodiment 58

This embodiment was the same as Embodiment 1 except that in "1) Preparation of positive electrode active material", the amount of $MnSO_4 \cdot H_2O$ was changed to 1.4 mol, the amount of $FeSO_4 \cdot H_2O$ was changed to 0.6 mol, the amount of $Li_2CO_3$ was changed to 0.38 mol, and 0.001 mol of $Mo(SO_4)_3$ was replaced with 0.12 mol of $MgSO_4$.

Embodiment 59

This embodiment was the same as Embodiment 1 except that in "1) Preparation of positive electrode active material", the amount of $MnSO_4 \cdot H_2O$ was changed to 0.8 mol, 0.7 mol of $FeSO_4 \cdot H_2O$ was changed to 1.2 mol of $ZnSO_4$, the amount of $Li_2CO_3$ was changed to 0.499 mol, and 0.001 mol of $Mo(SO_4)_3$ was changed to 0.001 mol of $MgSO_4$.

Embodiment 60

This embodiment was the same as Embodiment 1 except that in "1) Preparation of positive electrode active material", the amount of $MnSO_4 \cdot H_2O$ was changed to 1.4 mol, the amount of $FeSO_4 \cdot H_2O$ was changed to 0.6 mol, the amount of $Li_2CO_3$ was changed to 0.534 mol, 0.001 mol of $Mo(SO_4)_3$ was replaced with 0.001 mol of $MgSO_4$, the amount of phosphoric acid was changed to 0.88 mol, the amount of $H_4SiO_4$ was changed to 0.12 mol, and the amount of $NH_4HF_2$ was changed to 0.025 mol.

Embodiment 61

This embodiment was the same as Embodiment 1 except that in "1) Preparation of positive electrode active material", the amount of $MnSO_4 \cdot H_2O$ was changed to 1.2 mol, the amount of $FeSO_4 \cdot H_2O$ was changed to 0.8 mol, the amount of $Li_2CO_3$ was changed to 0.474 mol, 0.001 mol of $Mo(SO_4)_3$ was replaced with 0.001 mol of $MgSO_4$, the amount of phosphoric acid was changed to 0.93 mol, the amount of $H_4SiO_4$ was changed to 0.07 mol, and the amount of $NH_4HF_2$ was changed to 0.06 mol.

Table 20 shows the composition of positive electrode active materials of Embodiments 1-11, 55-61 and Comparative Embodiment 1.

Table 21 shows the performance data of the positive electrode active materials or button batteries or full batteries of Embodiments 1-11, 55-61 and Comparative Embodiment 1 as measured according to the aforementioned performance test method. Table 22 shows the composition of positive electrode active material of Embodiments 12-27. Table 23 shows the performance data of the positive electrode active materials or button batteries or full batteries of Embodiments 12-27 as measured according to the aforementioned performance test method.

Table 20 The composition of positive electrode active materials of Embodiments 1-11, 55-61 and Comparative Embodiment 1

|  | Positive electrode active material |
|---|---|
| Comparative Embodiment 1 | $LiMnPO_4$ |
| Embodiment 55 | $LiMn_{0.85}Fe_{0.15}PO_4$ |
| Embodiment 56 | $Li_{0.990}Mg_{0.005}Mn_{0.95}Zn_{0.05}PO_4$ |
| Embodiment 57 | $Li_{0.90}Nb_{0.01}Mn_{0.6}Fe_{0.4}PO_{3.95}F_{0.05}$ |
| Embodiment 58 | $Li_{0.76}Mg_{0.12}Mn_{0.7}Fe_{0.3}P_{0.999}Si_{0.001}O_{3.999}F_{0.001}$ |
| Embodiment 59 | $Li_{0.998}Mg_{0.001}Mn_{0.4}Zn_{0.6}P_{0.999}Si_{0.001}O_{3.999}F_{0.001}$ |
| Embodiment 60 | $Li_{1.068}Mg_{0.001}Mn_{0.7}Fe_{0.3}P_{0.88}Si_{0.12}O_{3.95}F_{0.05}$ |

(continued)

|  | Positive electrode active material |
|---|---|
| Embodiment 61 | $Li_{0.948}Mg_{0.001}Mn_{0.6}Fe_{0.4}P_{0.93}Si_{0.07}O_{3.88}F_{0.12}$ |
| Embodiment 1 | $Li_{0.994}Mo_{0.001}Mn_{0.65}Fe_{0.35}P_{0.999}Si_{0.001}O_{3.999}F_{0.001}$ |
| Embodiment 2 | $Li_{0.977}Mg_{0.001}Mn_{0.65}Fe_{0.34}Ti_{0.01}P_{0.999}N_{0.001}O_{3.999}F_{0.001}$ |
| Embodiment 3 | $Li_{0.992}W_{0.001}Mn_{0.65}Fe_{0.35}P_{0.999}S_{0.001}O_{3.999}F_{0.001}$ |
| Embodiment 4 | $Li_{0.997}Al_{0.001}Mn_{0.65}Fe_{0.35}P_{0.999}Si_{0.001}O_{3.999}Cl_{0.001}$ |
| Embodiment 5 | $Li_{0.993}Nb_{0.001}Mn_{0.65}Fe_{0.345}V_{0.005}P_{0.999}S_{0.001}O_{3.999}F_{0.001}$ |
| Embodiment 6 | $Li_{0.993}Nb_{0.001}Mn_{0.65}Fe_{0.34}V_{0.005}Mg_{0.005}P_{0.999}S_{0.001}O_{3.999}F_{0.001}$ |
| Embodiment 7 | $Li_{0.993}Nb_{0.001}Mn_{0.65}Fe_{0.34}V_{0.005}Co_{0.005}P_{0.999}S_{0.001}O_{3.999}F_{0.001}$ |
| Embodiment 8 | $Li_{0.993}Nb_{0.001}Mn_{0.65}Fe_{0.34}V_{0.005}Ni_{0.005}P_{0.999}S_{0.001}O_{3.999}F_{0.001}$ |
| Embodiment 9 | $Li_{0.991}Nb_{0.001}Mn_{0.65}Fe_{0.349}Ti_{0.001}P_{0.999}S_{0.001}O_{3.999}Cl_{0.001}$ |
| Embodiment 10 | $Li_{0.995}Nb_{0.001}Mn_{0.65}Fe_{0.34}V_{0.005}Mg_{0.005}P_{0.999}Si_{0.001}O_{3.999}Br_{0.001}$ |
| Embodiment 11 | $Li_{0.998}Mg_{0.001}Mn_{0.65}Fe_{0.345}V_{0.005}P_{0.999}Si_{0.001}O_{3.999}Br_{0.001}$ |

Table 21 The performance data of the positive electrode active materials or button batteries or full batteries of Embodiments 1-11, 55-61 and Comparative Embodiment 1 as measured according to the aforementioned performance test method

|  | Lattice change rate (%) | Li/Mn anti site defect concentration (%) | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Comparative Embodiment 1 | 11.4 | 5.2 | - 1.55 | 1.7 | 2060 | 125.6 | 50.1 | 121 | 48.6 |
| Embodiment 55 | 10.6 | 4.3 | - 1.51 | 1.87 | 1510 | 126.4 | 50.4 | 129 | 37.3 |
| Embodiment 56 | 10.8 | 3.6 | 1.64 | 1.88 | 1028 | 134.7 | 51.7 | 134 | 31.9 |
| Embodiment 57 | 9.7 | 2.4 | - 1.71 | 1.93 | 980 | 141.3 | 62.3 | 148 | 30.8 |
| Embodiment 58 | 5.6 | 1.8 | - 1.81 | 1.98 | 873 | 110.8 | 50.2 | 387 | 21.4 |
| Embodiment 59 | 3.7 | 1.5 | - 1.80 | 2.01 | 574 | 74.3 | 65.8 | 469 | 15.8 |
| Embodiment 60 | 7.8 | 1.5 | - 1.75 | 2.05 | 447 | 139.4 | 64.3 | 396 | 18.3 |
| Embodiment 61 | 8.4 | 1.4 | - 1.79 | 2.16 | 263 | 141.7 | 63.9 | 407 | 22.7 |
| Embodiment 1 | 6.3 | 1.2 | - 1.82 | 2.21 | 192 | 156.2 | 68.1 | 552 | 8.4 |

(continued)

| | Lattice change rate (%) | Li/Mn anti site defect concentration (%) | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 2 | 6.8 | 1.1 | -1.85 | 2.25 | 161 | 153.4 | 75.1 | 583 | 7.5 |
| Embodiment 3 | 6.4 | 0.9 | -1.86 | 2.31 | 144 | 154.6 | 76.7 | 646 | 8.6 |
| Embodiment 4 | 5.5 | 0.9 | -1.89 | 2.38 | 125 | 153.6 | 78.4 | 638 | 8.3 |
| Embodiment 5 | 5.3 | 0.7 | -1.98 | 2.45 | 102 | 153.8 | 84.5 | 769 | 7.8 |
| Embodiment 6 | 2.4 | 0.7 | -1.95 | 2.47 | 88 | 157.5 | 92.5 | 747 | 6.4 |
| Embodiment 7 | 2.2 | 0.6 | -1.96 | 2.49 | 85 | 158.5 | 94.8 | 858 | 6.3 |
| Embodiment 8 | 3.4 | 0.5 | -1.98 | 2.51 | 79 | 157.6 | 93.8 | 726 | 6.2 |
| Embodiment 9 | 3.8 | 0.5 | -1.96 | 2.45 | 86 | 146.8 | 90.3 | 686 | 6.8 |
| Embodiment 10 | 4.0 | 0.6 | -1.97 | 2.46 | 103 | 155.7 | 91.2 | 638 | 6.5 |
| Embodiment 11 | 3.6 | 0.7 | -1.95 | 2.46 | 112 | 155.8 | 92.6 | 587 | 6.4 |

Table 22 The composition of positive electrode active material of Embodiments 12-27

| | Positive electrode active material | (1-y):y | a:x |
|---|---|---|---|
| Embodiment 12 | $Li_{0.997}Mg_{0.001}Mn_{0.68}Fe_{0.3}V_{0.02}P_{0.999}N_{0.001}O_{3.999}F_{0.001}$ | 2.26 | 997 |
| Embodiment 13 | $Li_{0.997}Mg_{0.001}Mn_{0.58}Fe_{0.4}V_{0.02}P_{0.999}N_{0.001}O_{3.999}F_{0.001}$ | 1.45 | 997 |
| Embodiment 14 | $Li_{0.997}Mg_{0.001}Mn_{0.65}Fe_{0.3}V_{0.05}P_{0.999}N_{0.001}O_{3.999}F_{0.001}$ | 2.17 | 997 |
| Embodiment 15 | $Li_{0.988}Mg_{0.005}Mn_{0.6}Fe_{0.35}V_{0.05}P_{0.999}S_{0.001}O_{3.999}F_{0.001}$ | 1.71 | 197.6 |
| Embodiment 16 | $Li_{0.984}Mg_{0.005}Mn_{0.6}Fe_{0.35}V_{0.05}P_{0.995}S_{0.005}O_{3.999}F_{0.001}$ | 1.71 | 196.8 |
| Embodiment 17 | $Li_{0.984}Mg_{0.005}Mn_{0.6}Fe_{0.35}V_{0.05}P_{0.999}S_{0.001}O_{3.995}F_{0.005}$ | 1.71 | 196.8 |
| Embodiment 18 | $Li_{0.984}Mg_{0.005}Mn_{0.65}Fe_{0.25}V_{0.05}Co_{0.05}P_{0.999}S_{0.001}O_{3.995}F_{0.005}$ | 2.60 | 196.8 |
| Embodiment 19 | $Li_{0.984}Mg_{0.005}Mn_{0.65}Fe_{0.20}V_{0.05}Co_{0.10}P_{0.999}S_{0.001}O_{3.995}F_{0.005}$ | 3.25 | 196.8 |
| Embodiment 20 | $Li_{0.984}Mg_{0.005}Mn_{0.75}Fe_{0.05}V_{0.05}Co_{0.15}P_{0.999}S_{0.001}O_{3.995}F_{0.005}$ | 15.0 | 196.8 |
| Embodiment 21 | $Li_{0.984}Mg_{0.005}Mn_{0.65}Fe_{0.25}V_{0.05}Ni_{0.05}P_{0.999}S_{0.001}O_{3.995}F_{0.005}$ | 2.60 | 196.8 |
| Embodiment 22 | $Li_{0.984}Mg_{0.005}Mn_{0.75}Fe_{0.10}V_{0.05}Ni_{0.10}P_{0.999}S_{0.001}O_{3.995}F_{0.005}$ | 7.50 | 196.8 |
| Embodiment 23 | $Li_{0.984}Mg_{0.005}Mn_{0.7}Fe_{0.15}V_{0.05}Co_{0.10}P_{0.999}S_{0.001}O_{3.995}F_{0.005}$ | 4.67 | 196.8 |
| Embodiment 24 | $Li_{0.984}Mg_{0.005}Mn_{0.6}Fe_{0.25}V_{0.05}Co_{0.10}P_{0.999}S_{0.001}O_{3.995}F_{0.005}$ | 2.40 | 196.8 |

(continued)

| | Positive electrode active material | (1-y):y | a:x |
|---|---|---|---|
| Embodiment 25 | $Li_{0.984}Mg_{0.005}Mn_{0.5}Fe_{0.35}V_{0.05}Co_{0.10}P_{0.999}S_{0.001}O_{3.995}F_{0.005}$ | 1.43 | 196.8 |
| Embodiment 26 | $Li_{1.01}Mg_{0.005}Mn_{0.7}Fe_{0.15}V_{0.05}Co_{0.10}P_{0.9}Si_{0.1}O_{3.92}F_{0.08}$ | 4.67 | 202 |
| Embodiment 27 | $Li_{0.97}Mg_{0.005}Mn_{0.7}Fe_{0.15}V_{0.05}Co_{0.10}P_{0.92}Si_{0.08}O_{3.9}F_{0.1}$ | 4.67 | 194 |

Table 23 The performance data of the positive electrode active materials or button batteries or full batteries of Embodiments 12-27 as measured according to the aforementioned performance test method

| | Lattice change rate (%) | Li/Mn anti site defect concentration (%) | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 12 | 7.4 | 0.5 | - 1.96 | 2.45 | 92 | 153.3 | 97.2 | 948 | 6.7 |
| Embodiment 13 | 7.6 | 0.4 | - 1.98 | 2.48 | 83 | 157.1 | 85.1 | 953 | 7.8 |
| Embodiment 14 | 7.8 | 0.6 | - 1.95 | 2.47 | 87 | 155.4 | 85.2 | 1067 | 6.9 |
| Embodiment 15 | 6.4 | 0.5 | - 1.97 | 2.49 | 86 | 156.4 | 82.1 | 938 | 7.5 |
| Embodiment 16 | 5.4 | 0.7 | - 1.94 | 2.44 | 86 | 156.1 | 87.3 | 927 | 8.4 |
| Embodiment 17 | 4.2 | 0.6 | - 1.98 | 2.42 | 88 | 156.5 | 92.1 | 919 | 7.5 |
| Embodiment 18 | 2.5 | 0.4 | - 1.96 | 2.46 | 84 | 157.4 | 94.0 | 1057 | 6.4 |
| Embodiment 19 | 2.4 | 0.4 | - 1.97 | 2.47 | 84 | 156.8 | 94.4 | 1064 | 6.7 |
| Embodiment 20 | 2.6 | 0.4 | - 1.95 | 2.45 | 86 | 154.8 | 93.7 | 975 | 7.3 |
| Embodiment 21 | 3.3 | 0.5 | - 1.93 | 2.46 | 82 | 155.7 | 91.5 | 989 | 6.3 |
| Embodiment 22 | 3.1 | 0.5 | - 1.95 | 2.46 | 75 | 157.3 | 91.6 | 964 | 6.3 |
| Embodiment 23 | 2.8 | 0.6 | - 1.96 | 2.44 | 67 | 151.8 | 84.4 | 864 | 5.9 |
| Embodiment 24 | 2.5 | 0.5 | - 1.97 | 2.45 | 65 | 152.3 | 90.2 | 976 | 5.6 |
| Embodiment 25 | 2.2 | 0.4 | - 1.98 | 2.46 | 58 | 153.3 | 92.2 | 986 | 5.2 |
| Embodiment 26 | 3.4 | 0.6 | - 1.95 | 2.25 | 45 | 147.3 | 92.5 | 978 | 9.3 |

(continued)

|  | Latti ce chan ge rate (%) | Li/Mn anti site defect concentr ation (%) | Surf ace oxyg en vale nce | Compa cted density (g/cm$^3$) | Dissolu tion of Mn and Fe after cycling (ppm) | Initial gram capaci ty of button batter y (mAh/ g) | 3C charge consta nt current rate (%) | Number of cycles for 80% of capacity retention rate at 45°C | Battery cell expans ion rate after storage at 60°C (%) |
|---|---|---|---|---|---|---|---|---|---|
| Embodi ment 27 | 2.7 | 0.5 | - 1.98 | 2.28 | 42 | 145.8 | 91.8 | 937 | 10.5 |

Embodiments 28-41

The positive electrode active materials, button batteries and full batteries were prepared in the same manner as in Embodiment 1, but the stirring speed, temperature, grinding and stirring time in the sand mill, sintering temperature and sintering time when preparing doped manganese oxalate were changed. The details are shown in Table 24 below.

Also, the performance data of the positive electrode active materials or button batteries or full batteries of Embodiments 28-41 were measured according to the aforementioned performance test method, as shown in Table 25.

Table 24 Stirring speed, temperature, grinding and stirring time in the sand mill, sintering temperature and sintering time when preparing doped manganese oxalate in Embodiments 28-41

|  | Stirring speed (rpm) | Stirring temperature (°C) | Grinding time (h) | Sintering temperature (°C) | Sintering time (h) |
|---|---|---|---|---|---|
| Embodiment 28 | 200 | 50 | 12 | 700 | 10 |
| Embodiment 29 | 300 | 50 | 12 | 700 | 10 |
| Embodiment 30 | 400 | 50 | 12 | 700 | 10 |
| Embodiment 31 | 500 | 50 | 12 | 700 | 10 |
| Embodiment 32 | 600 | 50 | 10 | 700 | 10 |
| Embodiment 33 | 700 | 50 | 11 | 700 | 10 |
| Embodiment 34 | 800 | 50 | 12 | 700 | 10 |
| Embodiment 35 | 600 | 60 | 12 | 700 | 10 |
| Embodiment 36 | 600 | 70 | 12 | 700 | 10 |
| Embodiment 37 | 600 | 80 | 12 | 700 | 10 |
| Embodiment 38 | 600 | 90 | 12 | 600 | 10 |
| Embodiment 39 | 600 | 100 | 12 | 800 | 10 |
| Embodiment 40 | 600 | 110 | 12 | 700 | 8 |

(continued)

|  | Stirring speed (rpm) | Stirring temperature (°C) | Grinding time (h) | Sintering temperature (°C) | Sintering time (h) |
|---|---|---|---|---|---|
| Embodiment 41 | 600 | 120 | 12 | 700 | 12 |

Table 25 The performance data of the positive electrode active materials or button batteries or full batteries of Embodiments 28-41 as measured according to the aforementioned performance test method

|  | Lattice change rate (%) | Li/Mn anti site defect concentration | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 28 | 7.8 | 5.6 | - 1.59 | 1.89 | 341 | 138.1 | 53.1 | 594 | 24.1 |
| Embodiment 29 | 7.4 | 4.8 | - 1.62 | 1.94 | 279 | 140.3 | 55.6 | 628 | 22.4 |
| Embodiment 30 | 7.2 | 4.5 | - 1.66 | 1.98 | 248 | 141.5 | 56.8 | 689 | 21.6 |
| Embodiment 31 | 7.1 | 4.1 | - 1.68 | 2.01 | 216 | 142.3 | 57.5 | 721 | 18.7 |
| Embodiment 32 | 6.8 | 3.8 | - 1.71 | 2.04 | 184 | 143.8 | 59.3 | 749 | 15.6 |
| Embodiment 33 | 6.7 | 3.4 | - 1.75 | 2.06 | 176 | 144.2 | 61.4 | 756 | 11.3 |
| Embodiment 34 | 6.6 | 3.1 | 1.76 | 2.08 | 139 | 148.2 | 62.6 | 787 | 10.8 |
| Embodiment 35 | 6.4 | 2.7 | - 1.76 | 2.13 | 126 | 149.8 | 63.8 | 816 | 9.6 |
| Embodiment 36 | 6.4 | 1.9 | - 1.77 | 2.15 | 103 | 152.3 | 65.4 | 937 | 8.9 |
| Embodiment 37 | 6.4 | 1.4 | 1.84 | 2.27 | 89 | 157.2 | 69.1 | 982 | 8.2 |
| Embodiment 38 | 6.5 | 1.8 | - 1.78 | 2.16 | 113 | 153.9 | 66.3 | 921 | 9.1 |
| Embodiment 39 | 6.8 | 2.7 | - 1.76 | 2.12 | 134 | 152.1 | 64.5 | 998 | 9.8 |
| Embodiment 40 | 7.1 | 3.4 | - 1.74 | 2.08 | 161 | 150.2 | 63.4 | 926 | 10.5 |
| Embodiment 41 | 7.8 | 4.5 | - 1.70 | 2.03 | 189 | 148.1 | 61.3 | 837 | 11.8 |

Embodiments 42-54

The positive electrode active materials, button batteries and full batteries were prepared in the same manner as in Embodiment 1, but the lithium source, manganese source, phosphorus source and sources of Li site, Mn site, P site and O site doping elements were changed, as shown in the following table 26. All the prepared positive electrode active materials have the same composition as Embodiment 1, that is, $Li_{0.994}Mo_{0.001}Mn_{0.65}Fe_{0.35}P_{0.999}Si_{0.001}O_{3.999}F_{0.001}$.

Also, the performance data of the positive electrode active materials or button batteries or full batteries of Embodiments 42-54 were measured according to the aforementioned performance test method, as shown in Table 27.

Table 26 Lithium source, manganese source, phosphorus source and sources of doping elements C, A, Rand D in Embodiments 42-54

| | Lithium source | Manganese source | Phosphorus source | C source | A source | R source | D source |
|---|---|---|---|---|---|---|---|
| Embodiment 42 | LiOH | $MnCO_3$ | $NH_4H_2PO_4$ | $Mo(NO_3)_6$ | FeO | $H_4SiO_4$ | $NH_4F$ |
| Embodiment 43 | LiOH | MnO | $NH_4H_2PO_4$ | $Mo(NO_3)_6$ | FeO | $H_4SiO_4$ | $NH_4F$ |
| Embodiment 44 | LiOH | $Mn_3O_4$ | $NH_4H_2PO_4$ | $Mo(NO_3)_6$ | FeO | $H_4SiO_4$ | $NH_4F$ |
| Embodiment 45 | LiOH | $Mn(NO_3)_2$ | $NH_4H_2PO_4$ | $Mo(NO_3)_6$ | FeO | $H_4SiO_4$ | $NH_4F$ |
| Embodiment 46 | LiOH | MnO | $NH_4H_2PO_4$ | $Mo(NO_3)_6$ | $FeCO_3$ | $H_4SiO_4$ | $NH_4F$ |
| Embodiment 47 | LiOH | MnO | $NH_4H_2PO_4$ | $Mo(NO_3)_6$ | $Fe(NO_3)_2$ | $H_4SiO_4$ | $NH_4F$ |
| Embodiment 48 | LiOH | MnO | $NH_4H_2PO_4$ | $Mo(NO_3)_6$ | $Fe_3O_4$ | $H_4SiO_4$ | $NH_4F$ |
| Embodiment 49 | LiOH | MnO | $NH_4H_2PO_4$ | $Mo(NO_3)_6$ | $FeC_2O_4$ | $H_4SiO_4$ | $NH_4F$ |
| Embodiment 50 | LiOH | MnO | $NH_4H_2PO_4$ | $Mo(NO_3)_6$ | Fe | $H_4SiO_4$ | $NH_4F$ |
| Embodiment 51 | LiOH | MnO | $NH_4H_2PO_4$ | $Mo(PO_4)_2$ | FeO | $H_4SiO_4$ | $NH_4F$ |
| Embodiment 52 | LiOH | MnO | $NH_4H_2PO_4$ | $Mo(C_2O_4)_3$ | FeO | $H_4SiO_4$ | $NH_4F$ |
| Embodiment 53 | LiOH | MnO | $NH_4H_2PO_4$ | $MoO_3$ | FeO | $H_4SiO_4$ | $NH_4F$ |
| Embodiment 54 | LiOH | MnO | $NH_4H_2PO_4$ | Mo | FeO | $H_4SiO_4$ | $NH_4F$ |

Table 27 The performance data of the positive electrode active materials or button batteries or full batteries of Embodiments 42-54 as measured according to the aforementioned performance test method

| | Lattice change rate (%) | Li/Mn anti site defect concentration | Surface oxygen valence | Compacted density (g/cm$^3$) | Dissolution of Mn and Fe after cycling (ppm) | Initial gram capacity of button battery (mAh /g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 42 | 6.5 | 2.8 | -1.80 | 2.19 | 95 | 155.7 | 67.3 | 519 | 10.3 |
| Embodiment 43 | 6.7 | 2.6 | -1.81 | 2.18 | 88 | 156.1 | 67.6 | 525 | 9.8 |
| Embodiment 44 | 6.8 | 2.7 | -1.83 | 2.20 | 91 | 155.5 | 67.5 | 522 | 10.1 |
| Embodiment 45 | 6.7 | 2.6 | -1.82 | 2.17 | 85 | 155.9 | 67.4 | 517 | 9.5 |
| Embodiment 46 | 6.4 | 2.5 | -1.83 | 2.18 | 134 | 150.9 | 61.4 | 501 | 11.6 |
| Embodiment 47 | 6.1 | 2.1 | -1.81 | 2.21 | 114 | 152.8 | 63.7 | 518 | 10.8 |

(continued)

| | Lattice change rate (%) | Li/Mn anti site defect concentration | Surface oxygen valence | Compacted density (g/cm$^3$) | Dissolution of Mn and Fe after cycling (ppm) | Initial gram capacity of button battery (mAh/g) | 3C charge constant current rate (%) | Number of cycles for 80% of capacity retention rate at 45°C | Battery cell expansion rate after storage at 60°C (%) |
|---|---|---|---|---|---|---|---|---|---|
| Embodiment 48 | 6.6 | 1.8 | -1.79 | 2.23 | 105 | 154.3 | 65.4 | 538 | 9.2 |
| Embodiment 49 | 6.4 | 1.4 | -1.85 | 2.22 | 95 | 156.6 | 68.4 | 572 | 8.7 |
| Embodiment 50 | 7.5 | 3.4 | -1.75 | 2.08 | 115 | 149.5 | 58.3 | 426 | 9.6 |
| Embodiment 51 | 6.5 | 1.5 | -1.83 | 2.21 | 95 | 155.8 | 67.5 | 531 | 8.8 |
| Embodiment 52 | 6.8 | 1.7 | -1.81 | 2.23 | 101 | 154.6 | 66.9 | 518 | 7.4 |
| Embodiment 53 | 6.6 | 1.6 | -1.82 | 2.24 | 118 | 155.3 | 67.2 | 508 | 7.9 |
| Embodiment 54 | 8.7 | 2.4 | -1.79 | 2.17 | 129 | 152.3 | 65.4 | 483 | 11.2 |

It can be seen from the above Tables 21, 23, 25, and 27 that all the positive electrode active materials in the embodiments of the present application achieve better effects than the comparative embodiment in one or even all of cycling performance, high temperature stability, gram capacity, and compacted density.

From the comparison between Embodiments 18-20 and 23-25, it can be seen that when other elements are the same, when (1-y):y is in the range of 1 to 4, it can further improve the energy density and cycling performance of the secondary battery cell.

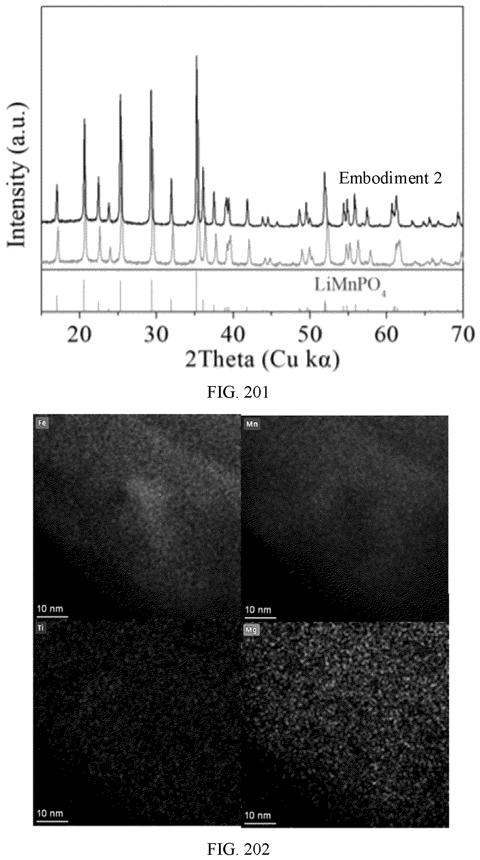

Fig. 201 shows the XRD patterns of undoped $LiMnPO_4$ and the positive electrode active material prepared in Embodiment 2. It can be seen from the figure that the positions of the main characteristic peaks in the XRD pattern of the positive active material of Embodiment 2 are consistent with those of undoped $LiMnPO_4$, indicating that no impurity phases are introduced in the doping process, and the improvement of performance is mainly attributed to elemental doping, instead of impurity phases.

Fig. 202 shows the EDS spectrum of the positive electrode active material prepared in Embodiment 2. The dots distributed in the figure are doping elements. It can be seen from the figure that the elements in the positive electrode active material of Embodiment 2 are uniformly doped.

The following provides embodiments and comparative embodiments of positive electrode active materials with a structure having an inner core of $Li_{1+x}Mn_{1-y}A_yP_{1-z}R_zO_4$ and three coating layers including a pyrophosphate layer, a phosphate layer and a carbon layer, and performance test analysis thereof:

Embodiment 62

Step 1: Preparation of positive electrode active material

Step S1: Preparation of Fe, Co, V and S co-doped manganese oxalate

689.6 g of manganese carbonate, 455.27 g of ferrous carbonate, 4.65 g of cobalt sulfate, and 4.87 g of vanadium dichloride were added to a mixer and mixed thoroughly for 6 h. Then, the obtained mixture was transferred into a reactor, 5 L of deionized water and 1260.6 g of oxalic acid dihydrate were added, heated to 80°C, fully stirred at 500 rpm for 6 h, and mixed evenly until the reaction was terminated and no bubbles were generated, to obtain a Fe, Co, and V co-doped manganese oxalate suspension. Then the suspension was filtered, oven dried at 120°C, and then sanded to obtain manganese oxalate particles with a particle size of 100 nm.

Step S2: Preparation of inner core $Li_{0.997}Mn_{0.60}Fe_{0.393}V_{0.004}Co_{0.003}P_{0.997}S_{0.003}O_4$

1793.1 g of manganese oxalate prepared in (1), 368.3 g of lithium carbonate, 1146.6 g of ammonium dihydrogen phosphate and 4.9 g of dilute sulfuric acid were added to 20 L of deionized water, stirred well, and uniformly mixed and reacted at 80°C for 10 h, to obtain a slurry. The slurry was transferred to a spray drying device for spray drying and granulation, and dried at a temperature of 250°C. to obtain a powder. Under a protective atmosphere (90% nitrogen and 10% hydrogen), the powder was sintered in a roller kiln at 700°C for 4 h to obtain the inner core material.

Step S3: Preparation of first coating layer suspension

To prepare a $Li_2FeP_2O_7$ solution, 7.4g of lithium carbonate, 11.6g of ferrous carbonate, 23.0g of ammonium dihydrogen phosphate and 12.6g of oxalic acid dihydrate were dissolved in 500mL of deionized water, the pH was controlled to be 5, then the mixture was stirred and allowed to react at room temperature for 2 h to obtain the solution. Then the temperature of the solution was raised to 80°C and the solution was maintained at this temperature for 4 h to obtain a first coating layer suspension.

Step S4: Coating of the first coating layer

1571.9 g of the doped lithium manganese phosphate inner core material obtained in Step S2 was added to the first coating layer suspension obtained in Step S3 (the content of the coating substance was 15.7g), and fully stirred and mixed for 6 h. After mixing evenly, it was transferred to and dried in an oven at 120°C for 6 h, and then sintered at 650°C for 6 h to obtain a material coated with pyrophosphate.

Step S5: Preparation of second coating layer suspension

3.7g of lithium carbonate, 11.6g of ferrous carbonate, 11.5g of ammonium dihydrogen phosphate and 12.6g of oxalic acid dihydrate were dissolved in 1500mL of deionized water, stirred and allowed to react for 6 h to obtain a solution. Then the temperature of the solution was raised to 120°C and the solution was maintained at this temperature for 6 h to obtain a second coating layer suspension.

Step S6: Coating of the second coating layer

1586.8 g of the pyrophosphate-coated material obtained in Step S4 was added to the second coating layer suspension obtained in Step S5 (the content of the coating substance was 47.1g), fully stirred and mixed for 6 h. After mixing well, it was transferred to and dried in an oven at 120°C for 6 h, and then sintered at 700°C for 8 h to obtain a double-layer coated material.

Step S7: Preparation of third coating layer aqueous solution

37.3 g of sucrose was dissolved in 500 g of deionized water, and then stirred and fully dissolved to obtain an aqueous solution of sucrose.

Step S8: Coating of the third coating layer

1633.9 g of the double-layer coated material obtained in Step S6 was added to the sucrose solution obtained in Step S7, stirred and mixed together for 6 h. After mixing uniformly, it was transferred to and dried in an oven at 150°C for 6 h, and then sintered at 700°C for 10 h to obtain a three-layer coated material.

Step 2: Preparation of positive electrode plate

The prepared three-layer coated positive electrode active material, a conductive acetylene black and a binder polyvinylidene fluoride (PVDF) in a weight ratio of 97.0:1.2:1.8 were added to N-methyl pyrrolidone (NMP), and stirred and mixed evenly to obtain a positive electrode slurry. Then, the positive electrode slurry was evenly coated on an aluminum foil at $0.280g/1540.25mm^2$, and then subjected to oven drying, cold pressing and slitting to obtain a positive electrode plate.

Step 3: Preparation of negative electrode plate

The negative electrode active material artificial graphite, hard carbon a conductive agent acetylene black, a binder styrene butadiene rubber (SBR), and a thickener sodium carboxymethylcellulose (CMC) in a weight ratio of 90:5:2:2:1 were dissolved in a solvent deionized water, which was uniformly stirred and mixed to prepare a negative electrode slurry. The negative electrode slurry was uniformly coated on a negative electrode current collector copper foil at 0.117g/1540.25mm$^2$, then subjected to oven drying, cold pressing, and slitting, to provide the negative electrode plate.

Step 4: Preparation of electrolyte solution

In a glove box under an argon atmosphere ($H_2O$<0.1 ppm, $O_2$<0.1 ppm), the organic solvents ethylene carbonate (EC)/ethyl methyl carbonate (EMC) were mixed uniformly in a volume ratio of 3/7, 12.5 wt % (based on the weight of ethylene carbonate/ethyl methyl carbonate) of $LiPF_6$ was dissolved in the organic solvent and stirred uniformly to obtain an electrolyte solution.

Step 5: Preparation of separator

A commercially available PP-PE copolymer microporous film with a thickness of 20 $\mu$m and an average pore size of 80 nm (from Zoco Electronic Technology Co, Ltd, model 20) was used.

Step 6: Preparation of full battery cells

The aforementioned positive electrode plate, separator and negative electrode plate were stacked in sequence, so that the separator was located between the positive electrode plate and the negative electrode plate for separation, and a bare battery cell was obtained by winding. The bare battery cell was placed in an outer package, the aforementioned electrolyte solution was injected, they were packaged to obtain a full battery cell (hereinafter also referred to as the "full battery").

[Preparation of button battery cells]

All parameters are the same as those of Embodiment 1 and will not be repeated here.

Embodiments 63-90, 91-105 and Comparative Embodiments 2, 3

The positive electrode active materials and battery cells in Embodiments 63 to 90, 91-105 and Comparative Embodiments 2 and 39 were prepared in a manner similar to that of Embodiment 62. The differences in the preparation of the positive electrode active materials are shown in Tables 28-33. In Comparative Embodiment 2, Embodiment 91, Embodiments 93-99 and Embodiment 101, the first coating layer was not present, so steps S3, S4 were omitted; and in the Comparative Embodiment 2 and Embodiments 91-100, the second coating layer was not preset, so steps S5-S6 were omitted. In all the examples and comparative embodiments of the present application, the first coating layer material and/or the second coating layer material used are crystalline, unless otherwise indicated.

Table 28: Number of raw materials for preparation of inner core

| No. | Inner core | Raw materials used in step S1 | Raw materials used in step S2 |
|---|---|---|---|
| Comparative Embodiment 2 and Comparative Embodiment 3 | $LiMnPO_4$ | Manganese carbonate, 1149.3 g; water, 5 L; oxalic acid dihydrate, 1260.6 g; | Manganese oxalate dihydrate obtained in step S1 (based on $C_2O_4Mn \cdot 2H_2O$), 1789.6 g; lithium carbonate, 369.4 g; ammonium dihydrogen phosphate, 1150.1 g; water, 20 L |
| Embodiment 91 | $LiMn_{0.60}Fe_{0.40}PO_4$ | Manganese carbonate, 689.6 g; ferrous carbonate, 463.4g; water, 5 L; oxalic acid dihydrate, 1260.6 g; | Ferromanganese oxalate dihydrate obtained in step S1 (based on $C_2O_4Mn_{0.60}Fe_{0.40} \cdot 2H_2O$), 1793.2g; lithium carbonate, 369.4 g; ammonium dihydrogen phosphate, 1150.1 g; water, 20 L |

(continued)

| No. | Inner core | Raw materials used in step S1 | Raw materials used in step S2 |
|---|---|---|---|
| Embodiment 92 | $LiMn_{0.80}Fe_{0.20}PO_4$ | Manganese carbonate, 919.4 g; ferrous carbonate, 231.7 g; water, 5 L; oxalic acid dihydrate, 1260.6 g | Ferromanganese oxalate dihydrate obtained in step S1 (based on $C_2O_4Mn_{0.80}Fe_{0.20} \cdot 2H_2O$), 1791.4; lithium carbonate, 369.4 g; ammonium dihydrogen phosphate, 1150.1 g; water, 20 L |
| Embodiment 93 | $LiMn_{0.70}Fe_{0.295}V_{0.005}PO4$ | Manganese carbonate, 804.5 g; ferrous carbonate, 341.8 g; vanadium dichloride, 6.1 g; water, 5 L; oxalic acid dihydrate, 1260.6 g; | Ferromanganese vanadium oxalate dihydrate obtained in step S1 (based on $C_2O_4Mn_{0.70}Fe_{0.295}V_{0.005} \cdot 2H_2O$), 1792.0 g; lithium carbonate, 369.4 g; ammonium dihydrogen phosphate, 1150.1 g; water, 20 L |
| Embodiment 94 and Embodiment 103 | $LiMn_{0.60}Fe_{0.395}Mg_{0.005}PO_4$ | Manganese carbonate, 689.6 g; ferrous carbonate, 457.6 g; magnesium carbonate, 4.2 g; water, 5 L; oxalic acid dihydrate, 1260.6 g; | Ferromanganese magnesium oxalate dihydrate obtained in step S1 (based on $C_2O_4Mn_{0.60}Fe_{0.395}Mg_{0.005} \cdot 2H_2O$), 1791.6 g; lithium carbonate, 369.4 g; ammonium dihydrogen phosphate, 1150.1 g; water, 20 L |
| Embodiment 95 | $LiMn_{0.60}Fe_{0.35}Ni_{0.05}PO_4$ | Manganese carbonate, 689.6 g; ferrous carbonate, 405.4 g; nickel carbonate, 59.3 g; water, 5 L; oxalic acid dihydrate, 1260.6 g; | Ferromanganese nickel oxalate dihydrate obtained in step S1 (based on $C_2O_4Mn_{0.60}Fe_{0.35}Ni_{0.05} \cdot 2H_2O$), 1794.6g; lithium carbonate, 369.4 g; ammonium dihydrogen phosphate, 1150.1 g; water, 20 L |
| Embodiment 96 and Embodiment 98 | $LiMn_{0.60}Fe_{0.395}V_{0.002}Ni_{0.003}PO_4$ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g | Ferromanganese vanadium nickel oxalate dihydrate obtained in step S1 (based on $C_2O_4Mn_{0.60}Fe_{0.395}V_{0.002}Ni_{0.003} \cdot 2H_2O$), 1793.2g; lithium carbonate, 369.4 g; ammonium dihydrogen phosphate, 1150.1 g; water, 20 L |
| Embodiment 97 | $LiMn_{0.60}Fe_{0.395}V_{0.002}Mg_{0.003}PO_4$ | Manganese carbonate, 689.6g; ferrous carbonate, 457.6g; vanadium dichloride, 2.4g; magnesium carbonate, 2.53g; water, 5L; oxalic acid dihydrate, 1260.6g | Ferromanganese vanadium magnesium oxalate dihydrate obtained in step S1 (based on $C_2O_4Mn_{0.60}Fe_{0.395}V_{0.002}Mg_{0.003} \cdot 2H_2O$), 1792.1g; lithium carbonate, 369.4 g; ammonium dihydrogen phosphate, 1150.1 g; water, 20 L |
| Embodiments 99-101, Embodiments 104-105 and Embodiments 62-71 | $Li_{0.997}Mn_{0.60}Fe_{0.393}V_{0.004}Co_{0.003}P_{0.997}S_{0.003}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 368.3g; ammonium dihydrogen phosphate, 1146.6g; dilute sulfuric acid, 4.9g; water, 20L |

(continued)

| No. | Inner core | Raw materials used in step S1 | Raw materials used in step S2 |
|---|---|---|---|
| Embodiment 102 | $Li_{1.2}MnP_{0.8}Si_{0.2}O_4$ | Manganese carbonate, 1149.3 g; water, 5 L; oxalic acid dihydrate, 1260.6 g; | Manganese oxalate dihydrate obtained in step S1 (based on $C_2O_4Mn \cdot 2H_2O$), 1789.6g; lithium carbonate, 443.3g; ammonium dihydrogen phosphate, 920.1g; silicic acid, 156.2g; water, 20L |
| Embodiment 72 | $Li_{1.001}Mn_{0.60}Fe_{0.393}V_{0.004}Co_{0.003}P_{0.999}Si_{0.001}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.8g; ammonium dihydrogen phosphate, 1148.9g; silicic acid, 0.8g; water, 20L |
| Embodiment 73 | $LiMn_{0.60}Fe_{0.393}V_{0.004}Co_{0.003}P_{0.998}N_{0.002}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.4g; ammonium dihydrogen phosphate, 1147.8g; dilute nitric acid, 2.7g; water, 20L |
| Embodiment 74 | $Li_{0.995}Mn_{0.65}Fe_{0.341}V_{0.004}Co_{0.005}P_{0.995}S_{0.005}O_4$ | Manganese carbonate, 747.1g; ferrous carbonate, 395.1g; cobalt sulfate, 7.8g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.65}Fe_{0.341}V_{0.004}Co_{0.005} \cdot 2H_2O$), 1792.7g; lithium carbonate, 367.6g; ammonium dihydrogen phosphate, 1144.3g; dilute sulfuric acid, 8.2g; water, 20L |
| Embodiment 75 | $Li_{1.002}Mn_{0.70}Fe_{0.293}V_{0.004}Co_{0.003}P_{0.998}Si_{0.002}O_4$ | Manganese carbonate, 804.6g; ferrous carbonate, 339.5g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.70}Fe_{0.293}V_{0.004}Co_{0.003} \cdot 2H_2O$), 1792.2g; lithium carbonate, 370.2g; 1147.8; silicic acid, 1.6g; water, 20L |
| Embodiments 76, 78 | $LiMn_{0.60}Fe_{0.393}V_{0.004}Co_{0.003}P_{0.999}N_{0.001}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 369.4g; ammonium dihydrogen phosphate, 1148.9g; dilute nitric acid, 1.4g; water, 20L |
| Embodiment 77 | $Li_{0.997}Mn_{0.60}Fe_{0.393}V_{0.004}Co_{0.003}P_{0.997}S_{0.003}O_4$ | Manganese carbonate, 689.6g; ferrous carbonate, 455.3g; cobalt sulfate, 4.7g; vanadium dichloride, 4.9g; water, 5L; oxalic acid dihydrate, 1260.6g; | Ferromanganese vanadium cobalt oxalate dihydrate obtained in step S1 (based on $C_2O_4Mn_{0.60}Fe_{0.393}V_{0.004}Co_{0.003} \cdot 2H_2O$), 1793.1g; lithium carbonate, 368.7g; ammonium dihydrogen phosphate, 1146.6g; dilute sulfuric acid, 4.9g; water, 20L |

(continued)

| No. | Inner core | Raw materials used in step S1 | Raw materials used in step S2 |
|---|---|---|---|
| Embodiment 79 | $LiMn_{0.60}Fe_{0.393}V_{0.004}Mg_{0.003}P_{0.995}N_{0.005}O_4$ | Manganese carbonate, 689.6g; ferrous carbonate, 455.3g; magnesium carbonate, 2.5g; vanadium dichloride, 4.9g; water, 5L; oxalic acid dihydrate, 1260.6g; | Ferromanganese vanadium magnesium oxalate dihydrate obtained in step S1 (based on $C_2O_4Mn_{0.60}Fe_{0.393}V_{0.004}Mg_{0.003} \cdot 2H_2O$), 1791.1g; lithium carbonate, 369.4g; ammonium dihydrogen phosphate, 1144.3g; dilute nitric acid, 7.0g; water, 20L |
| Embodiment 80 | $Li_{0.999}Mn_{0.60}Fe_{0.393}V_{0.004}Mg_{0.003}P_{0.999}S_{0.001}O_4$ | Manganese carbonate, 689.6g; ferrous carbonate, 455.3g; magnesium carbonate, 2.5g; vanadium dichloride, 4.9g; water, 5L; oxalic acid dihydrate, 1260.6g; | Ferromanganese vanadium magnesium oxalate dihydrate obtained in step S1 (based on $C_2O_4Mn_{0.60}Fe_{0.393}V_{0.004}Mg_{0.003} \cdot 2H_2O$), 1791.1g; lithium carbonate, 369.0g; ammonium dihydrogen phosphate, 1148.9g; dilute sulfuric acid, 1.6g; water, 20L |
| Embodiment 81 | $Li_{0.998}Mn_{0.60}Fe_{0.393}V_{0.004}Ni_{0.003}P_{0.998}S_{0.002}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1792.2g; lithium carbonate, 368.7g; ammonium dihydrogen phosphate, 1147.8g; dilute sulfuric acid, 3.2g; water, 20L |
| Embodiments 82-85 | $Li_{1.001}Mn_{0.60}Fe_{0.393}V_{0.004}Ni_{0.003}P_{0.999}Si_{0.001}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1793.1g; lithium carbonate, 369.8g; ammonium dihydrogen phosphate, 1148.9g; silicic acid, 0.8g; water, 20L |
| Embodiment 86 | $Li_{1.001}Mn_{0.50}Fe_{0.493}V_{0.004}Ni_{0.003}P_{0.999}Si_{0.001}O_4$ | Manganese carbonate, 574.7g; ferrous carbonate, 571.2g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.50}Fe_{0.493}V_{0.004}Ni_{0.003} \cdot 2H_2O$), 1794.0g; lithium carbonate, 369.8g; ammonium dihydrogen phosphate, 1148.9g; silicic acid, 0.8g; water, 20L |
| Embodiment 87 | $Li_{1.001}Mn_{0.999}Fe_{0.001}P_{0.999}Si_{0.001}O_4$ | Manganese carbonate, 1148.2g; ferrous carbonate, 1.2g; water, 5L; oxalic acid dihydrate, 1260.6 g | Ferromanganese oxalate dihydrate obtained in step S1 (based on $C_2O_4Mn_{0.999}Fe_{0.001} \cdot 2H_2O$), 1789.6g; lithium carbonate, 369.8g; ammonium dihydrogen phosphate, 1148.9g; silicic acid, 0.8g; water, 20L |
| Embodiment 88 | $LiMn_{0.60}Fe_{0.393}V_{0.004}Ni_{0.003}P_{0.9}N_{0.100}O_4$ | Manganese carbonate, 689.6g; ferrous carbonate, 455.3g; nickel carbonate, 3.6g; vanadium dichloride, 4.9g; water, 5L; oxalic acid dihydrate, 1260.6g; | Ferromanganese vanadium nickel oxalate dihydrate obtained in step S1 (based on $C_2O_4Mn_{0.60}Fe_{0.393}V_{0.004}Ni_{0.003} \cdot 2H_2O$), 1793.1g; lithium carbonate, 369.4g; ammonium dihydrogen phosphate, 1035.1g; dilute nitric acid, 140.0g; water, 20L |

(continued)

| No. | Inner core | Raw materials used in step S1 | Raw materials used in step S2 |
|---|---|---|---|
| Embodiment 89 | $Li_{1.001}Mn_{0.40}Fe_{0.593}V_{0.004}Ni_{0.003}P_{0.999}Si_{0.001}O_4$ | Manganese carbonate, 459.7g; ferrous carbonate, 686.9g; vanadium dichloride, 4.8g; nickel carbonate, 3.6 g; water, 5 L; oxalic acid dihydrate, 1260.6 g | Ferromanganese vanadium nickel oxalate dihydrate obtained in step S1 (based on $C_2O_4Mn_{0.40}Fe_{0.593}V_{0.004}Ni_{0.003} \cdot 2H_2O$), 1794.9g; lithium carbonate, 369.8g; ammonium dihydrogen phosphate, 1148.9g; silicic acid, 0.8g; water, 20L |
| Embodiment 90 | $Li_{1.001}Mn_{0.40}Fe_{0.393}V_{0.204}Ni_{0.003}P_{0.999}Si_{0.001}O_4$ | Manganese carbonate, 459.7g; ferrous carbonate, 455.2g; vanadium dichloride, 248.6g; nickel carbonate, 3.6 g; water, 5 L; oxalic acid dihydrate, 1260.6 g | Ferromanganese vanadium nickel oxalate dihydrate obtained in step S1 (based on $C_2O_4Mn_{0.40}Fe_{0.393}V_{0.204}Ni_{0.003} \cdot 2H_2O$), 1785.1g; lithium carbonate, 369.8g; ammonium dihydrogen phosphate, 1148.9g; silicic acid, 0.8g; water, 20L |

Table 29: Preparation of first coating layer suspension (step S3)

| Embodiment No. | Coating material of first coating layer | Preparation of first coating layer suspension |
|---|---|---|
| Embodiments 92, 77 | Amorphous $Li_2FeP_2O_7$ | 7.4g lithium carbonate; 11.6g ferrous carbonate; 23.0g ammonium dihydrogen phosphate; 12.6g oxalic acid dihydrate; pH controlled to 5 |
| Embodiment 100, Comparative Embodiment 3, Embodiments 103, 105, Embodiments 62-75, 80, 82-90 | Crystalline $Li_2FeP_2O_7$ | 7.4 g lithium carbonate; 11.6 g ferrous carbonate; 23.0 g ammonium dihydrogen phosphate; 12.6 g oxalic acid dihydrate; pH controlled to 5 |
| Embodiments 76, 77 | Crystalline $Al_4(P_2O_7)_3$ | 53.3g aluminum chloride; 34.5g ammonium dihydrogen phosphate; 18.9g oxalic acid dihydrate; pH controlled to 4 |
| Embodiments 78, 79 | Crystalline $Li_2NiP_2O_7$ | 7.4 g lithium carbonate; 11.9 g nickel carbonate; 23.0 g ammonium dihydrogen phosphate; 12.6 g oxalic acid dihydrate; pH controlled to 5 |

Table 30: Coating of the first coating layer (step S4)

| No. | | Step S4: Coating of the first coating layer | | | | | |
|---|---|---|---|---|---|---|---|
| | First coating layer coating material and its amount (based on inner core weight) | The amount of inner core added in step S4 | Amount of correspon ding coating material in the first coating layer suspensio n | Mixin g time (h) | Oven drying temperat ure (°C) | Sintering temperat ure (°C) | Sinterin g time (h) |
| Embodiment 92 | 2% amorphous $Li_2FeP_2O_7$ | 1570.4g | 31.4g | 6 | 120 | 500 | 4 |
| Embodiment 100 | 1% crystalline $Li_2FeP_2O_7$ | 1571.1g | 15.7g | 6 | 120 | 650 | δ |

(continued)

| No. | First coating layer coating material and its amount (based on inner core weight) | The amount of inner core added in step S4 | Amount of correspon ding coating material in the first coating layer suspensio n | Mixin g time (h) | Oven drying temperat ure (°C) | Sintering temperat ure (°C) | Sinterin g time (h) |
|---|---|---|---|---|---|---|---|
| | | | Step S4: Coating of the first coating layer | | | | |
| Comparative Embodiment 3 | 2% crystalline $Li_2FeP_2O_7$ | 1568.5g | 31.4g | 6 | 120 | 650 | 6 |
| Embodiment 102 | 2% crystalline $Li_2FeP_2O_7$ | 1562.8g | 31.2g | 6 | 120 | 650 | 6 |
| Embodiment 103 | 2% crystalline $Li_2FeP_2O_7$ | 1570.6g | 31.4g | 6 | 120 | 650 | 6 |
| Embodiment 104 | 2% amorphous $Li_2FeP_2O_7$ | 1571.1g | 31.4g | 6 | 120 | 500 | 4 |
| Embodiment 105 | 2% crystalline $Li_2FeP_2O_7$ | 1571.1g | 31.4g | 6 | 120 | 650 | 6 |
| Embodiments 62-65, 69-71 | 1% $Li_2FeP_2O_7$ | 1571.9g | 15.7g | 6 | 120 | 650 | 6 |
| Embodiment 66 | 2% $Li_2FeP_2O_7$ | 1571.9g | 31.4g | 6 | 120 | 650 | 6 |
| Embodiment 67 | 3% $Li_2FeP_2O_7$ | 1571.1g | 47.1g | 6 | 120 | 650 | 6 |
| Embodiment 68 | 5% $Li_2FeP_2O_7$ | 1571.9g | 78.6g | 6 | 120 | 650 | 6 |
| Embodiment 72 | 1% $Li_2FeP_2O_7$ | 1572.1g | 15.7g | 6 | 120 | 650 | 6 |
| Embodiment 73 | 1% $Li_2FeP_2O_7$ | 1571.7g | 15.7g | 6 | 120 | 650 | 6 |
| Embodiment 74 | 2% $Li_2FeP_2O_7$ | 1571.4g | 31.4g | 6 | 120 | 650 | 6 |
| Embodiment 75 | 2.5% $Li_2FeP_2O_7$ | 1571.9g | 39.3g | 6 | 120 | 650 | 6 |
| Embodiment 76 | 2% $Al_4(P_2O_7)_3$ | 1571.9g | 31.4g | 6 | 120 | 680 | 8 |
| Embodiment 77 | 3% $Al_4(P_2O_7)_3$ | 1571.9g | 47.2g | 6 | 120 | 680 | 8 |
| Embodiment 78 | 1.5% $Li_2NiP_2O_7$ | 1571.9g | 23.6g | 6 | 120 | 630 | 6 |
| Embodiment 79 | 1% $Li_2NiP_2O_7$ | 1570.1g | 15.7g | 6 | 120 | 630 | 6 |
| Embodiment 80 | 2% $Li_2FeP_2O_7$ | 1571.0g | 31.4g | 6 | 120 | 650 | 6 |
| Embodiment 81 | 1% $Li_2NiP_2O_7$ | 1571.9g | 15.7g | 6 | 120 | 630 | 6 |

(continued)

| No. | | | Step S4: Coating of the first coating layer | | | | | |
|---|---|---|---|---|---|---|---|---|
| | First coating layer coating material and its amount (based on inner core weight) | The amount of inner core added in step S4 | Amount of correspon ding coating material in the first coating layer suspensio n | Mixin g time (h) | Oven drying temperat ure (°C) | Sintering temperat ure (°C) | Sinterin g time (h) |
| Embodiments 82, 84, 85 | 2% $Li_2FeP_2O_7$ | 1572.1g | 31.4g | 6 | 120 | 650 | 6 |
| Embodiment 83 | 5.50% $Li_2FeP_2O_7$ | 1572.1g | 86.5g | 6 | 120 | 650 | 6 |
| Embodiment 86 | 1% $Li_2FeP_2O_7$ | 1573.0g | 15.7g | 6 | 120 | 650 | 6 |
| Embodiment 87 | 1% $Li_2FeP_2O_7$ | 1568.6g | 15.7g | 6 | 120 | 650 | 6 |
| Embodiment 88 | 1% $Li_2FeP_2O_7$ | 1569.2g | 15.7g | 6 | 120 | 650 | 6 |
| Embodiment 89 | 2% crystalline $Li_2FeP_2O_7$ | 1573.9g | 31.4g | 6 | 120 | 650 | 6 |
| Embodiment 90 | 2% crystalline $Li_2FeP_2O_7$ | 1564.1g | 31.2g | 6 | 120 | 650 | 6 |

Table 31: Preparation of second coating layer suspension (step S5)

| Embodiment No. | Second coating layer material | Step S5: Preparation of second coating layer suspension |
|---|---|---|
| Embodiment 101, Embodiments 62-65, 79-80, 86-88 | Crystalline $LiFePO_4$ | 3.7 g lithium carbonate; 11.6 g ferrous carbonate; 11.5 g ammonium dihydrogen phosphate; 12.6 g oxalic acid dihydrate |
| Comparative Embodiment 3, Embodiments 102-104, Embodiments 76, 78-81, 89, 90 | Crystalline $LiCoPO_4$ | 3.7 g lithium carbonate; 15.5 g cobalt sulfate; 11.5 g ammonium dihydrogen phosphate; 12.6 g oxalic acid dihydrate |
| Embodiment 105 | Amorphous $LiCoPO_4$ | 3.7 g lithium carbonate; 15.5 g cobalt sulfate; 11.5 g ammonium dihydrogen phosphate; 12.6 g oxalic acid dihydrate |
| Embodiment 104 | Crystalline $LiNiPO_4$ | 3.7 g lithium carbonate; 11.9 g nickel carbonate; 11.5 g ammonium dihydrogen phosphate; 12.6 g oxalic acid dihydrate |

Table 32: Coating of the second coating layer (Step S6)

| No. | Second coating layer material and its amount (based on inner core weight) | The amount of pyrophosp hate-coated material added in Step S6 (the amount of the inner core added in Embodime nt 101) (g) | Step S6: Coating of the first coating layer | | | | |
|---|---|---|---|---|---|---|---|
| | | | Amount of correspond ing coating material in the second coating layer suspension (g) | Mixin g time (h) | Oven drying temperat ure (°C) | Sintering temperat ure (°C) | Sinterin g time (h) |
| Embodime nt 101 | 3% LiFePO$_4$ | 1571.1 | 47.1 | 6 | 120 | 700 | 8 |
| Comparativ e Embodime nt 3 | 4%LiCoPO$_4$ | 1599.9 | 62.7 | 6 | 120 | 750 | 8 |
| Embodime nt 102 | 4%LiCoPO$_4$ | 1594.0 | 62.5 | 6 | 120 | 750 | 8 |
| Embodime nt 103 | 4%LiCoPO$_4$ | 1602.0 | 62.8 | 6 | 120 | 750 | 8 |
| Embodime nt 104 | 4%LiCoPO$_4$ | 1602.5 | 62.8 | 6 | 120 | 750 | 8 |
| Embodime nt 105 | 4% amorphous LiCoPO$_4$ | 1602.5 | 62.8 | 6 | 120 | 650 | 8 |
| Embodime nts 62-65 | 3% LiFePO$_4$ | 1586.8 | 47.1 | 6 | 120 | 700 | 8 |
| Embodime nt 66 | 3% LiFePO$_4$ | 1602.5 | 47.1 | 6 | 120 | 700 | 8 |
| Embodime nt 67 | 3% LiFePO$_4$ | 1618.2 | 47.1 | 6 | 120 | 700 | 8 |
| Embodime nt 68 | 3% LiFePO$_4$ | 1649.6 | 47.1 | 6 | 120 | 700 | 8 |
| Embodime nt 69 | 1%LiFePO$_4$ | 1586.8 | 15.7 | 6 | 120 | 700 | 8 |
| Embodime nt 70 | 4%LiFePO$_4$ | 1586.8 | 62.8 | 6 | 120 | 700 | 8 |
| Embodime nt 71 | 5%LiFePO$_4$ | 1586.8 | 78.6 | 6 | 120 | 700 | 8 |
| Embodime nt 72 | 2.50% LiFePO$_4$ | 1587.8 | 39.3 | 6 | 120 | 700 | 8 |
| Embodime nt 73 | 3% LiFePO$_4$ | 1587.4 | 47.2 | 6 | 120 | 700 | 8 |
| Embodime nt 74 | 2%LiFePO$_4$ | 1602.8 | 31.4 | 6 | 120 | 700 | 8 |
| Embodime nt 75 | 3.50% LiFePO$_4$ | 1610.5 | 55.0 | 6 | 120 | 700 | 8 |

(continued)

| No. | Second coating layer material and its amount (based on inner core weight) | The amount of pyrophosp hate-coated material added in Step S6 (the amount of the inner core added in Embodime nt 101) (g) | Step S6: Coating of the first coating layer | | | | |
|---|---|---|---|---|---|---|---|
| | | | Amount of correspond ing coating material in the second coating layer suspension (g) | Mixin g time (h) | Oven drying temperat ure (°C) | Sintering temperat ure (°C) | Sinterin g time (h) |
| Embodime nt 76 | 2.5%LiCoP$O_4$ | 1603.3 | 39.3 | 6 | 120 | 750 | 8 |
| Embodime nt 77 | 3%LiNiP$O_4$ | 1619.0 | 47.2 | 6 | 120 | 680 | 8 |
| Embodime nt 78 | 2.5%LiCoP $O_4$ | 1595.5 | 39.3 | 6 | 120 | 750 | 8 |
| Embodime nt 79 | 3% LiFeP$O_4$ | 1585.9 | 47.1 | 6 | 120 | 700 | 8 |
| Embodime nt 80 | 4%LiFeP$O_4$ | 1602.4 | 62.8 | 6 | 120 | 700 | 8 |
| Embodime nt 81 | 3%LiCoP$O_4$ | 1587.7 | 47.2 | 6 | 120 | 750 | 8 |
| Embodime nt 82 | 4%LiCoP$O_4$ | 1603.5 | 62.9 | 6 | 120 | 750 | 8 |
| Embodime nt 83 | 4%LiCoP$O_4$ | 1658.6 | 62.9 | 6 | 120 | 750 | 8 |
| Embodime nt 84 | 5.50% LiCoP$O_4$ | 1603.5 | 86.5 | 6 | 120 | 750 | 8 |
| Embodime nt 85 | 4%LiCoP$O_4$ | 1603.5 | 62.9 | 6 | 120 | 750 | 8 |
| Embodime nt 86 | 3% LiFeP$O_4$ | 1588.7 | 47.2 | 6 | 120 | 700 | 8 |
| Embodime nt 87 | 3% LiFeP$O_4$ | 1584.3 | 47.1 | 6 | 120 | 700 | 8 |
| Embodime nt 88 | 3% LiFeP$O_4$ | 1584.9 | 47.1 | 6 | 120 | 700 | 8 |
| Embodime nt 89 | 4%LiCoP$O_4$ | 1605.4 | 63.0 | 6 | 120 | 750 | 8 |
| Embodime nt 90 | 4%LiCoP$O_4$ | 1605.4 | 63.0 | 6 | 120 | 750 | 8 |

Table 33: Coating of the third coating layer (step S8)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
| --- | --- | --- | --- | --- | --- | --- | --- | --- |
| | | | | Amount of sucrose (g) | Mixing time (h) | Oven drying temperature (°C) | Sintering temperature (°C) | Sintering time (h) |
| Comparative Embodiment 2 | 1% carbon | 2.5 | 1568.5 | 37.3 | 6 | 150 | 650 | 8 |
| Embodiment 91 | 2% carbon | 2.8 | 1572.2 | 74.7 | 6 | 150 | 680 | 8 |
| Embodiment 92 | 2% carbon | 2.7 | 1601.8 | 74.6 | 6 | 150 | 680 | 7 |
| Embodiment 93 | 1% carbon | 2.4 | 1571.0 | 37.3 | 6 | 150 | 630 | 8 |
| Embodiment 94 | 1.5% carbon | 2.6 | 1570.6 | 56.0 | 6 | 150 | 650 | 7 |
| Embodiment 95 | 2.5% carbon | 2.8 | 1573.6 | 93.4 | 6 | 150 | 680 | 8 |
| Embodiment 96 | 1% carbon | 2.7 | 1572.2 | 37.3 | 6 | 150 | 680 | 7 |
| Embodiment 97 | 1.5% carbon | 2.9 | 1571.1 | 56.0 | 6 | 150 | 680 | 10 |
| Embodiment 98 | 1% carbon | 2.2 | 1572.2 | 37.3 | 6 | 150 | 600 | 8 |
| Embodiment 99 | 1% carbon | 2.4 | 1571.1 | 37.3 | 6 | 150 | 630 | 8 |
| Embodiment 100 | 1% carbon | 2.3 | 1586.8 | 37.3 | 6 | 150 | 620 | 8 |
| Embodiment 101 | 1% carbon | 2.1 | 1618.2 | 37.3 | 6 | 150 | 600 | 6 |
| Comparative Embodiment 3 | 1% carbon | 2 | 1662.6 | 37.3 | 6 | 120 | 600 | 6 |
| Embodiment 102 | 1% carbon | 1.8 | 1656.5 | 37.1 | 6 | 120 | 600 | 6 |
| Embodiment 103 | 1% carbon | 1.7 | 1664.8 | 37.3 | 6 | 100 | 600 | 6 |
| Embodiment 104 | 1% carbon | 3.1 | 1665.4 | 37.3 | 6 | 150 | 700 | 10 |

(continued)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
|---|---|---|---|---|---|---|---|---|
| | | | | Amount of sucrose (g) | Mixing time (h) | Oven drying temperature (°C) | Sintering temperature (°C) | Sintering time (h) |
| Embodiment 105 | 1% carbon | 3.5 | 1665.4 | 37.3 | 6 | 150 | 750 | 10 |
| Embodiment 62 | 1% carbon | 2.2 | 1633.9 | 37.3 | 6 | 150 | 700 | 10 |
| Embodiment 63 | 3% carbon | 2.3 | 1633.9 | 111.9 | 6 | 150 | 600 | 9 |
| Embodiment 64 | 4% carbon | 2.1 | 1633.9 | 149.2 | 6 | 150 | 600 | 6 |
| Embodiment 65 | 5% carbon | 2.4 | 1633.9 | 186.5 | 6 | 150 | 630 | 8 |
| Embodiment 66 | 1% carbon | 2.5 | 1649.6 | 37.3 | 6 | 150 | 650 | 8 |
| Embodiment 67 | 1% carbon | 2.5 | 1665.3 | 37.3 | 6 | 150 | 650 | 8 |
| Embodiment 68 | 1% carbon | 2.4 | 1696.7 | 37.3 | 6 | 150 | 630 | 8 |
| Embodiment 69 | 1% carbon | 2.3 | 1602.5 | 37.3 | 6 | 150 | 600 | 9 |
| Embodiment 70 | 1% carbon | 2.2 | 1649.6 | 37.3 | 6 | 150 | 600 | 8 |
| Embodiment 71 | 1% carbon | 2.2 | 1665.3 | 37.3 | 6 | 150 | 600 | 9 |
| Embodiment 72 | 1.5% carbon | 2.3 | 1629.0 | 56.1 | 6 | 150 | 600 | 9 |
| Embodiment 73 | 2% carbon | 2.4 | 1634.6 | 74.7 | 6 | 150 | 630 | 8 |
| Embodiment 74 | 2% carbon | 2.5 | 1634.2 | 74.6 | 6 | 150 | 650 | 8 |
| Embodiment 75 | 2.5% carbon | 2.7 | 1665.5 | 93.3 | 6 | 150 | 680 | 7 |
| Embodiment 76 | 2% carbon | 2.8 | 1642.6 | 74.7 | 6 | 150 | 680 | 8 |
| Embodiment 77 | 1% carbon | 2.7 | 1666.2 | 37.3 | 6 | 150 | 680 | 7 |
| Embodiment 78 | 1.5% carbon | 2.3 | 1634.8 | 56.0 | 6 | 150 | 600 | 9 |

(continued)

| | Third coating layer | Molar ratio of SP2 to SP3 | The amount of the double-layer coated material added in Step S8 (for those without two coating layers, it is the amount of the inner core with the first coating layer or the amount of the inner core) (g) | Step S8: Coating of the third coating layer | | | | |
|---|---|---|---|---|---|---|---|---|
| | | | | Amount of sucrose (g) | Mixing time (h) | Oven drying temperature (°C) | Sintering temperature (°C) | Sintering time (h) |
| Embodiment 79 | 1% carbon | 2.6 | 1633.0 | 37.3 | 6 | 150 | 650 | 7 |
| Embodiment 80 | 1.5% carbon | 2.4 | 1665.2 | 56.0 | 6 | 150 | 630 | 8 |
| Embodiment 81 | 1.5% carbon | 2.2 | 1634.8 | 56.0 | 6 | 150 | 600 | 9 |
| Embodiment 82 | 1% carbon | 2.2 | 1666.4 | 37.3 | 6 | 150 | 600 | 9 |
| Embodiment 83 | 1% carbon | 2.3 | 1721.4 | 37.3 | 6 | 150 | 600 | 9 |
| Embodiment 84 | 1% carbon | 2.4 | 1690.0 | 37.3 | 6 | 150 | 630 | 8 |
| Embodiment 85 | 5.5% carbon | 2.6 | 1666.4 | 205.4 | 6 | 150 | 650 | 7 |
| Embodiment 86 | 1% carbon | 2.4 | 1635.9 | 37.4 | 6 | 150 | 630 | 8 |
| Embodiment 87 | 1% carbon | 2.3 | 1631.3 | 37.3 | 6 | 150 | 600 | 9 |
| Embodiment 88 | 1.5% carbon | 2.1 | 1631.9 | 55.9 | 6 | 150 | 600 | 6 |
| Embodiment 89 | 1% carbon | 0.07 | 1668.3 | 37.4 | 6 | 80 | 600 | 6 |
| Embodiment 90 | 1% carbon | 13 | 1668.3 | 37.4 | 6 | 150 | 850 | 10 |

Embodiments 89-116: Investigation of other coating layer materials

Embodiments 89-116 were performed in a manner similar to that in Embodiment 62, with the differences shown in Tables 34 and 35 below.

Table 34: Investigation of the first coating layer material

| No. | Coating material of first coating layer | Preparation of first coating layer suspension |
|---|---|---|
| Embodiment 89 | $Li_2MgP_2O_7$ | 7.4 g lithium carbonate; 8.4 g magnesium carbonate, 23.0 g ammonium dihydrogen phosphate, 12.6 g oxalic acid dihydrate |

(continued)

| No. | Coating material of first coating layer | Preparation of first coating layer suspension |
|---|---|---|
| Embodiment 90 | $Li_2CoP_2O_7$ | 7.4 g lithium carbonate, 15.5 g cobalt sulfate; 23.0 g ammonium dihydrogen phosphate; 12.6 g oxalic acid dihydrate |
| Embodiment 106 | $Li_2CuP_2O_7$ | 7.4 g lithium carbonate, 16.0 g copper sulfate, 23.0 g ammonium dihydrogen phosphate, 12.6 g oxalic acid dihydrate |
| Embodiment 107 | $Li_2ZnP_2O_7$ | 7.4 g lithium carbonate, 12.5 g zinc carbonate, 23.0 g ammonium dihydrogen phosphate, 12.6 g oxalic acid dihydrate |
| Embodiment 108 | $TiP_2O_7$ | 24.0 g titanium sulfate, 23.0 g ammonium dihydrogen phosphate, 12.6 g oxalic acid dihydrate |
| Embodiment 109 | $Ag_4P_2O_7$ | 67.9 g silver nitrate, 23.0 g ammonium dihydrogen phosphate and 25.2 g oxalic acid dihydrate |
| Embodiment 110 | $ZrP_2O_7$ | 56.6 g zirconium sulfate, 23.0 g ammonium dihydrogen phosphate and 25.2 g oxalic acid dihydrate |

Table 35: Investigation of the second coating layer material

| No. | Second coating layer material | Preparation of second coating layer suspension |
|---|---|---|
| Embodiment 111 | $Cu_3(PO_4)_2$ | 48.0 g copper sulfate, 23.0 g ammonium dihydrogen phosphate, 37.8 g oxalic acid dihydrate |
| Embodiment 112 | $Zn_3(PO_4)_2$ | 37.6 g zinc carbonate, 23.0 g ammonium dihydrogen phosphate, 37.8 g oxalic acid dihydrate |
| Embodiment 113 | $Ti_3(PO_4)_4$ | 72.0 g titanium sulfate, 46.0 g ammonium dihydrogen phosphate, 75.6 g oxalic acid dihydrate |
| Embodiment 114 | $Ag_3PO_4$ | 50.9 g silver nitrate; 11.5 g ammonium dihydrogen phosphate, 18.9 g oxalic acid dihydrate |
| Embodiment 115 | $Zr_3(PO_4)_4$ | 85.0 g zirconium sulfate, 46.0 g ammonium dihydrogen phosphate, 37.8 g oxalic acid dihydrate |
| Embodiment 116 | $AlPO_4$ | 13.3 g aluminum chloride, 11.5 g ammonium dihydrogen phosphate, 18.9 g oxalic acid dihydrate |

For the performance test results of the aforementioned embodiments and comparative embodiments of positive electrode active materials with a structure having an inner core of $Li_{1+x}Mn_{1-y}A_yP_{1-z}R_zO_4$ and three coating layers including a pyrophosphate layer, a phosphate layer and a carbon layer, refer to the table below.

Table 36: Powder performance of positive electrode active materials in Embodiments 62-105 and Comparative Embodiments 2, 3 and battery cell performance of the prepared battery cells

| Embodiment No. | Performance of positive electrode active material powder | | | | | | Battery cell performance | | |
|---|---|---|---|---|---|---|---|---|---|
| | Lattice change rate (%) | Li/Mn anti site defect concentration (%) | Compacted density (g/cm$^3$) | Surface oxygen valence | 3C charge constant current rate (%) | Dissolution of Mn and Fe after cycling (ppm) | Capacity of button battery at 0.1C (mAh/g) | Battery cell expansion rate after storage at 60°C for 30 d (%) | Number of cycles for 80% of capacity retention rate at 45°C |
| Comparative Embodiment 2 | 11.4 | 5.2 | 1.5 | -1.55 | 50.1 | 2060 | 125.6 | 48.6 | 185 |
| Embodiment 91 | 10.6 | 3.3 | 1.67 | -1.51 | 54.9 | 1810 | 126.4 | 47.3 | 243 |
| Embodiment 92 | 10.8 | 3.4 | 1.64 | -1.64 | 52.1 | 1728 | 144.7 | 41.9 | 378 |
| Embodiment 93 | 4.3 | 2.8 | 1.69 | -1.82 | 56.3 | 1096 | 151.2 | 8.4 | 551 |
| Embodiment 94 | 2.8 | 2.5 | 1.65 | -1.85 | 58.2 | 31 | 148.4 | 7.5 | 668 |
| Embodiment 95 | 3.4 | 2.4 | 1.61 | -1.86 | 58.4 | 64 | 149.6 | 8.6 | 673 |
| Embodiment 96 | 4.5 | 2.4 | 1.73 | -1.83 | 59.2 | 85 | 148.6 | 8.3 | 669 |
| Embodiment 97 | 2.3 | 2.4 | 1.68 | -1.89 | 59.3 | 30 | 152.3 | 7.3 | 653 |
| Embodiment 98 | 2.3 | 2.4 | 1.75 | -1.89 | 59.8 | 30 | 152.3 | 7.3 | 672 |
| Embodiment 99 | 2.3 | 2.2 | 1.81 | -1.9 | 64.1 | 28 | 154.2 | 7.2 | 685 |
| Embodiment 100 | 2.3 | 2.2 | 1.92 | -1.92 | 65.4 | 12 | 154.3 | 5.4 | 985 |
| Embodiment 101 | 2.3 | 2.1 | 1.95 | -1.95 | 65.5 | 18 | 154.6 | 4.2 | 795 |

| Embodiment No. | Performance of positive electrode active material powder | | | | | | Battery cell performance | | |
|---|---|---|---|---|---|---|---|---|---|
| | Lattice change rate (%) | Li/Mn anti site defect concentration (%) | Compacted density (g/cm$^3$) | Surface oxygen valence | 3C charge constant current rate (%) | Dissolution of Mn and Fe after cycling (ppm) | Capacity of button battery at 0.1C (mAh/g) | Battery cell expansion rate after storage at 60°C for 30 d (%) | Number of cycles for 80% of capacity retention rate at 45°C |
| Comparative Embodiment 3 | 11.4 | 5.2 | 1.63 | -1.96 | 52.4 | 56 | 130.2 | 5.4 | 562 |
| Embodiment 102 | 8.1 | 3.8 | 1.76 | -1.96 | 58.3 | 41 | 135.1 | 5.1 | 631 |
| Embodiment 103 | 2 | 1.8 | 2.13 | -1.96 | 61.3 | 8 | 154.3 | 3.7 | 1126 |
| Embodiment 104 | 2 | 1.9 | 1.95 | -1.96 | 60.5 | 18 | 152.7 | 4.5 | 1019 |
| Embodiment 105 | 2 | 1.9 | 1.9 | -1.89 | 60.4 | 24 | 152.4 | 5.1 | 897 |
| Embodiment 62 | 2.5 | 1.8 | 2.35 | -1.93 | 70.3 | 7 | 157.2 | 4.2 | 1128 |
| Embodiment 63 | 2.5 | 1.8 | 2.24 | -1.94 | 70.2 | 6 | 156.3 | 3.7 | 1253 |
| Embodiment 64 | 2.5 | 1.8 | 2.22 | -1.94 | 70.1 | 5 | 155.4 | 3.4 | 1374 |
| Embodiment 65 | 2.5 | 1.8 | 2.21 | -1.95 | 70.2 | 3 | 153.7 | 2.9 | 1406 |
| Embodiment 66 | 2.5 | 1.8 | 2.33 | -1.93 | 70.1 | 5 | 156.7 | 3.1 | 1501 |
| Embodiment 67 | 2.5 | 1.8 | 2.31 | -1.93 | 69.7 | 4 | 156.2 | 2.8 | 1576 |
| Embodiment 68 | 2.5 | 1.8 | 2.28 | -1.93 | 68.4 | 3 | 155.8 | 2.5 | 1647 |

| Embodiment No. | Performance of positive electrode active material powder | | | | | | Battery cell performance | | |
|---|---|---|---|---|---|---|---|---|---|
| | Lattice change rate (%) | Li/Mn anti site defect concentration (%) | Compacted density (g/cm$^3$) | Surface oxygen valence | 3C charge constant current rate (%) | Dissolution of Mn and Fe after cycling (ppm) | Capacity of button battery at 0.1C (mAh/g) | Battery cell expansion rate after storage at 60°C for 30 d (%) | Number of cycles for 80% of capacity retention rate at 45°C |
| Embodiment 69 | 2.5 | 1.8 | 2.29 | -1.93 | 69.1 | 9 | 156.4 | 3.4 | 1058 |
| Embodiment 70 | 2.5 | 1.8 | 2.46 | -1.98 | 73.4 | 6 | 157.6 | 2.9 | 1286 |
| Embodiment 71 | 2.5 | 1.8 | 2.49 | -1.98 | 75.4 | 5 | 157.8 | 2.5 | 1486 |
| Embodiment 72 | 2.6 | 1.9 | 2.38 | -1.97 | 72.4 | 6 | 157.3 | 3.5 | 1026 |
| Embodiment 73 | 2.4 | 1.8 | 2.41 | -1.97 | 74.5 | 4 | 156.3 | 2.5 | 1136 |
| Embodiment 74 | 2.7 | 1.9 | 2.42 | -1.97 | 75.3 | 5 | 156.6 | 3.5 | 1207 |
| Embodiment 75 | 2.8 | 1.9 | 2.45 | -1.97 | 76.5 | 3 | 153.8 | 3.7 | 1308 |
| Embodiment 76 | 2.2 | 1.9 | 2.46 | -1.97 | 74.3 | 3 | 153.8 | 3.7 | 1109 |
| Embodiment 77 | 2.1 | 1.9 | 2.47 | -1.98 | 73.1 | 5 | 154.2 | 3.8 | 1132 |
| Embodiment 78 | 2.5 | 1.7 | 2.41 | -1.98 | 75.3 | 4 | 155.4 | 4.5 | 1258 |
| Embodiment 79 | 2.3 | 1.6 | 2.42 | -1.97 | 76.1 | 4 | 154.3 | 4.7 | 1378 |
| Embodiment 80 | 2.2 | 1.7 | 2.43 | -1.97 | 76.8 | 4 | 154.3 | 4.7 | 1328 |
| Embodiment 81 | 2.6 | 1.8 | 2.42 | -1.94 | 75.4 | 4 | 153.9 | 3.3 | 1458 |

(continued)

| Embodiment No. | Performance of positive electrode active material powder | | | | | | Battery cell performance | | |
|---|---|---|---|---|---|---|---|---|---|
| | Lattice change rate (%) | Li/Mn anti site defect concentration (%) | Compacted density (g/cm³) | Surface oxygen valence | 3C charge constant current rate (%) | Dissolution of Mn and Fe after cycling (ppm) | Capacity of button battery at 0.1C (mAh/g) | Battery cell expansion rate after storage at 60°C for 30 d (%) | Number of cycles for 80% of capacity retention rate at 45°C |
| Embodiment 82 | 2.4 | 1.7 | 2.41 | -1.97 | 76.1 | 4 | 154.5 | 3.5 | 1327 |
| Embodiment 83 | 2.4 | 1.8 | 2.32 | -1.95 | 72.1 | 2 | 152.1 | 2.7 | 1556 |
| Embodiment 84 | 2.3 | 1.7 | 2.46 | -1.96 | 76.4 | 3 | 151.4 | 2.4 | 1645 |
| Embodiment 85 | 2.2 | 1.8 | 2.47 | -1.95 | 76.3 | 3 | 152.1 | 2.5 | 1548 |
| Embodiment 86 | 2.1 | 1.7 | 2.49 | -1.98 | 78.4 | 3 | 158.6 | 2.9 | 1538 |
| Embodiment 87 | 3.6 | 2.5 | 2.21 | -1.97 | 56.4 | 8 | 152.3 | 4.8 | 1017 |
| Embodiment 88 | 2.8 | 2.1 | 2.24 | -1.98 | 74.3 | 6 | 155.4 | 3.8 | 1126 |
| Embodiment 89 | 2.5 | 1.9 | 1.95 | -1.94 | 54.7 | 9 | 154.9 | 6.4 | 986 |
| Embodiment 90 | 2.4 | 1.8 | 1.98 | -1.95 | 68.4 | 7 | 155.6 | 4.5 | 1047 |

It can be seen from Table 36 that compared with the comparative embodiments, a smaller lattice change rate, a smaller Li/Mn antisite defect concentration, a larger compacted density, and a surface oxygen valence closer to -2, less Mn and Fe dissolution after cycling, and better battery cell performance, such as better high-temperature storage performance and high-temperature cycling performance are achieved in the examples.

Table 37: Thickness of the layers of positive electrode active materials, and weight ratio of element manganese to element phosphorus

| No. | Inner core | First coating layer | Second coating layer | Third coating layer | First coating layer thickness (nm) | Second coating layer thickness (nm) | Third coating layer thickness (nm) | Content of element Mn (wt%) | Weight ratio of Mn element to P element |
|---|---|---|---|---|---|---|---|---|---|
| Embodiment 92 | $LiMn_{0.80}Fe_{0.20}PO_4$ | 2% amorphous $Li_2FeP_2O_7$ | - | 2% carbon | 4 | - | 10 | 26.1 | 1.383 |
| Embodiment 93 | $LiMn_{0.70}Fe_{0.295}V_{0.005}PO_4$ | - | - | 1% carbon | - | - | 5 | 24.3 | 1.241 |
| Embodiment 101 | $Li_{0.999}Mn_{0.60}Fe_{0.393}V_{0.004}Co_{0.003}P_{0.999}S_{0.001}O_4$ | - | 3% crystalline $LiFePO_4$ | 1% carbon | - | 7.5 | 5 | 19.6 | 1.034 |
| Embodiment 62 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 1% carbon | 2 | 7.5 | 5 | 19.0 | 1.023 |
| Embodiment 63 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 3% carbon | 2 | 7.5 | 15 | 18.3 | 1.023 |
| Embodiment 64 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 4% carbon | 2 | 7.5 | 20 | 18.0 | 1.023 |
| Embodiment 65 | $Li_{0.997}Mn_{0.60}Fe_{0.393}V_{0.004}Co_{0.003}P_{0.997}S_{0.003}O_4$ | 1% $Li_2FeP_2O_7$ | 3% $LiFePO_4$ | 5% carbon | 2 | 7.5 | 25 | 17.9 | 1.023 |
| Embodiment 66 | $Li_{0.997}Mn_{0.60}Fe_{0.393}V_{0.004}Co_{0.003}P_{0.997}S_{0.003}O_4$ | 2% $Li_2FeP_2O_7$ | 3% $LiFePO_4$ | 1% carbon | 4 | 7.5 | 5 | 18.7 | 1.011 |

(continued)

| No. | Inner core | First coating layer | Second coating layer | Third coating layer | First coating layer thickness (nm) | Second coating layer thickness (nm) | Third coating layer thickness (nm) | Content of element Mn (wt%) | Weight ratio of Mn element to P element |
|---|---|---|---|---|---|---|---|---|---|
| Embodiment 67 | $Li_{0.997}Mn_{0.60}Fe_{0.393}V_{0.004}Co_{0.003}P_{0.997}S_{0.003}O_4$ | $3\%Li_2FeP_2O_7$ | $3\%$ $LiFePO_4$ | $1\%$ carbon | 6 | 7.5 | 5 | 18.3 | 0.999 |
| Embodiment 68 | $Li_{0.997}Mn_{0.60}Fe_{0.393}V_{0.004}Co_{0.003}P_{0.997}S_{0.003}O_4$ | $5\%Li_2FeP_2O_7$ | $3\%$ $LiFePO_4$ | $1\%$ carbon | 10 | 7.5 | 5 | 17.6 | 0.975 |
| Embodiment 69 | $Li_{0.997}Mn_{0.60}Fe_{0.393}V_{0.004}Co_{0.003}P_{0.997}S_{0.003}O_4$ | $1\%$ $Li_2FeP_2O_7$ | $1\%LiFePO_4$ | $1\%$ carbon | 2 | 2.5 | 5 | 19.8 | 1.043 |
| Embodiment 70 | $Li_{0.997}Mn_{0.60}Fe_{0.393}V_{0.004}Co_{0.003}P_{0.997}S_{0.003}O_4$ | $1\%$ $Li_2FeP_2O_7$ | $4\%LiFePO_4$ | $1\%$ carbon | 2 | 10 | 5 | 18.7 | 1.014 |
| Embodiment 71 | $Li_{0.997}Mn_{0.60}Fe_{0.393}V_{0.004}Co_{0.003}P_{0.997}S_{0.003}O_4$ | $1\%$ $Li_2FeP_2O_7$ | $5\%LiFePO_4$ | $1\%$ carbon | 2 | 12.5 | 5 | 18.4 | 1.004 |
| Embodiment 72 | $Li_{1.001}Mn_{0.60}Fe_{0.393}V_{0.004}Co_{0.003}P_{0.999}Si_{0.001}O_4$ | $1\%$ $Li_2FeP_2O_7$ | $2.50\%$ $LiFePO_4$ | $1.5\%$ carbon | 2 | 6.3 | 7.5 | 19.0 | 1.026 |
| Embodiment 74 | $Li_{0.995}Mn_{0.65}Fe_{0.341}V_{0.004}Co_{0.005}P_{0.995}S_{0.005}O_4$ | $2\%$ $Li_2FeP_2O_7$ | $2\%$ $LiFePO_4$ | $2\%$ carbon | 4 | 5 | 10 | 18.7 | 1.108 |
| Embodiment 75 | $Li_{1.002}Mn_{0.70}Fe_{0.293}V_{0.004}Co_{0.003}P_{0.998}Si_{0.002}O_4$ | $2.5\%$ $Li_2FeP_2O_7$ | $3.50\%$ $LiFePO_4$ | $2.5\%$ carbon | 5 | 8.8 | 12.5 | 17.8 | 1.166 |

It can be seen from Table 37 that by doping at the positions of manganese and phosphorus and three-layer coating of lithium manganese iron phosphate (containing 35% of manganese and about 20% of phosphorus), the content of element manganese in the positive electrode active material and the weight ratio of elements manganese and phosphorus in the positive electrode active material are obviously reduced. In addition, by comparing Embodiments 62-75 with Embodiment 92, Embodiment 93, and Embodiment 101, it can be seen from table 38 that the reduction in the ratio of elements manganese and phosphorus in the positive electrode active material will lead to a decrease in the dissolution of manganese and iron and an improvement in the battery cell performance of the prepared secondary battery cell.

Table 38: Powder performance of positive electrode active materials and battery cell performance of the prepared battery cells

| Embodiment No. | Performance of positive electrode active material powder | | | | | | Battery cell performance | | |
|---|---|---|---|---|---|---|---|---|---|
| | Lattice change rate (%) | Li/Mn anti site defect concentration (%) | Compacted density (g/cm³) | Surface oxygen valence | 3C charge constant current rate (%) | Dissolution of Mn and Fe after cycling (ppm) | Capacity of button battery at 0.1C | Battery cell expansion rate after storage at 60°C for 30 d (%) | Number of cycles for 80% of capacity retention rate at 45°C |
| Embodiment 62 | 2.5 | 1.8 | 2.35 | - 1.93 | 70.3 | 7 | 157.2 | 4.2 | 1128 |
| Embodiment 89 | 2.4 | 1.9 | 2.36 | 1.97 | 68.7 | 15 | 156.2 | 4.8 | 1018 |
| Embodiment 90 | 2.5 | 1.7 | 2.36 | - 1.96 | 70.1 | 12 | 155.6 | 4.6 | 1087 |
| Embodiment 106 | 2.5 | 1.7 | 2.38 | -1.97 | 69.1 | 14 | 155.9 | 4.3 | 1054 |
| Embodiment 107 | 2.6 | 1.8 | 2.39 | -1.98 | 69.4 | 23 | 156.2 | 5.3 | 997 |
| Embodiment 108 | 2.6 | 1.9 | 2.34 | -1.96 | 71.3 | 16 | 156.4 | 4.6 | 1004 |
| Embodiment 109 | 2.4 | 1.7 | 2.36 | -1.94 | 70.9 | 11 | 157.5 | 5.1 | 1102 |
| Embodiment 110 | 2.5 | 1.9 | 2.33 | -1.92 | 71.6 | 14 | 155.8 | 5.4 | 1024 |
| Embodiment 111 | 2.5 | 1.7 | 2.34 | -1.92 | 68.4 | 18 | 156.1 | 4.9 | 1054 |
| Embodiment 112 | 2.4 | 1.9 | 2.33 | -1.95 | 67.5 | 27 | 154.7 | 5.9 | 954 |
| Embodiment 113 | 2.2 | 1.8 | 2.36 | -1.94 | 69.4 | 24 | 156.4 | 5.7 | 1017 |
| Embodiment 114 | 2.4 | 1.9 | 2.37 | -1.91 | 71.6 | 31 | 155.8 | 5.3 | 991 |
| Embodiment 115 | 2.6 | 1.9 | 2.38 | -1.94 | 70.8 | 27 | 154.8 | 5.1 | 975 |
| Embodiment 116 | 2.4 | 1.9 | 2.36 | -1.92 | 71.5 | 15 | 156.8 | 4.2 | 1154 |

As can be seen from Table 38, by using a first coating layer and a second coating layer containing other elements within the scope of the present application, a positive electrode active material with good performance is also obtained and good battery cell performance is achieved.

Table 39: Interplanar spacing and included angle of the first coating layer material and the second coating layer material

| No. | Interplanar spacing of the first coating layer material | Included angle between crystal directions (111) of the first coating layer material | Interplanar spacing of the second coating layer material | Included angle between crystal directions (111) of the second coating layer material |
|---|---|---|---|---|
| Embodiment 62 | 0.303 | 29.496 | 0.348 | 25.562 |
| Embodiment 117 | 0.451 | 19.668 | 0.348 | 25.562 |
| Embodiment 118 | 0.297 | 30.846 | 0.348 | 25.562 |
| Embodiment 119 | 0.457 | 19.456 | 0.348 | 25.562 |
| Embodiment 120 | 0.437 | 20.257 | 0.348 | 25.562 |
| Embodiment 121 | 0.462 | 19.211 | 0.348 | 25.562 |
| Embodiment 122 | 0.450 | 19.735 | 0.348 | 25.562 |
| Embodiment 123 | 0.372 | 23.893 | 0.348 | 25.562 |
| Embodiment 124 | 0.303 | 29.496 | 0.374 | 23.789 |
| Embodiment 125 | 0.303 | 29.496 | 0.360 | 24.710 |
| Embodiment 126 | 0.303 | 29.496 | 0.350 | 25.428 |
| Embodiment 127 | 0.303 | 29.496 | 0.425 | 20.885 |
| Embodiment 128 | 0.303 | 29.496 | 0.356 | 24.993 |
| Embodiment 129 | 0.303 | 29.496 | 0.244 | 36.808 |

It can be seen from Table 39 that the interplanar spacing and angle of the first coating layer and the second coating layer of the present application are both within the ranges described in the present application.

III. Investigation of influence of sintering method for the coating layer on the performance of the positive electrode active materials and the performance of the secondary battery cells

The battery cells in the embodiments and comparative embodiments in the table below were prepared similarly to that in Embodiment 62, except that the process parameters in a table below were used. The results are shown in Table 40 below.

Table 40: The effect of sintering temperature and sintering time on secondary battery cells in steps S4, S6 and S8

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30d (%) | Number of cycles for 80% of capacity retention rate at 45°C |
|---|---|---|---|---|---|---|---|---|---|---|---|---|---|---|---|
| Embodiment 62 | 650 | 6 | 700 | 8 | 700 | 10 | 2.5 | 1.8 | 2.35 | 70.3 | 7 | -1.93 | 157.2 | 4.2 | 1128 |
| Embodiment II-1 | 750 | 4 | 600 | 6 | 700 | 6 | 3.0 | 2.4 | 2.24 | 64.2 | 12 | -1.95 | 154.2 | 6.4 | 894 |
| Embodiment II-2 | 800 | 4 | 600 | 6 | 700 | 6 | 3.1 | 2.4 | 2.21 | 67.3 | 12 | -1.95 | 153.2 | 6.2 | 904 |
| Embodiment II-3 | 700 | 2 | 600 | 6 | 700 | 6 | 2.9 | 2.3 | 2.20 | 62.3 | 15 | -1.96 | 151.1 | 5.8 | 846 |
| Embodiment II-4 | 700 | 3 | 600 | 6 | 700 | 6 | 2.7 | 2.1 | 2.23 | 64.3 | 14 | -1.96 | 152.8 | 5.4 | 908 |
| Embodiment II-5 | 700 | 4 | 500 | 6 | 700 | 6 | 2.5 | 1.8 | 2.31 | 62.4 | 28 | -1.95 | 153.1 | 4.7 | 798 |
| Embodiment II-6 | 700 | 4 | 700 | 6 | 700 | 6 | 2.5 | 1.8 | 2.34 | 63.5 | 14 | -1.96 | 154.3 | 5.1 | 867 |
| Embodiment II-7 | 700 | 4 | 600 | 8 | 700 | 6 | 2.5 | 1.8 | 2.31 | 67.3 | 11 | -1.95 | 156.8 | 4.7 | 959 |
| Embodiment II-8 | 700 | 4 | 600 | 10 | 700 | 6 | 2.5 | 1.8 | 2.34 | 68.5 | 10 | -1.96 | 156.2 | 4.5 | 1045 |
| Embodiment II-9 | 700 | 4 | 600 | 6 | 750 | 6 | 2.5 | 1.8 | 2.35 | 70.3 | 7 | -1.93 | 157.2 | 4.2 | 1128 |
| Embodiment II-10 | 700 | 4 | 600 | 6 | 800 | 6 | 2.5 | 1.8 | 2.35 | 70.1 | 7 | -1.93 | 156.3 | 4.4 | 1097 |
| Embodiment II-11 | 700 | 4 | 600 | 6 | 700 | 8 | 2.5 | 1.8 | 2.35 | 68.4 | 8 | -1.91 | 155.4 | 4.7 | 964 |

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button battery at 0.1 C (mAh/g) | Battery cell expansion rate after storage at 60°C for 30 d (%) | Number of cycles for 80% of capacity retention rate at 45°C |
|---|---|---|---|---|---|---|---|---|---|---|---|---|---|---|---|
| Embodiment II-12 | 700 | 4 | 600 | 6 | 700 | 10 | 2.5 | 1.8 | 2.35 | 66.7 | 10 | -1.95 | 154.7 | 5 | 897 |
| Comparative Embodiment II-1 | 600 | 3 | 600 | 8 | 750 | 8 | 4.8 | 5.3 | 2.28 | 54.1 | 86 | -1.90 | 140.7 | 10.6 | 615 |
| Comparative Embodiment II-2 | 850 | 3 | 600 | 8 | 750 | 8 | 5.3 | 4.7 | 2.38 | 57.2 | 84 | -1.91 | 145.3 | 9.0 | 684 |
| Comparative Embodiment II-3 | 750 | 1.5 | 600 | 8 | 750 | 8 | 4.7 | 4.5 | 2.25 | 53.1 | 87 | -1.91 | 141.9 | 8.8 | 691 |
| Comparative Embodiment II-4 | 750 | 4.5 | 600 | 8 | 750 | 8 | 4.1 | 4.0 | 2.31 | 58.1 | 79 | -1.92 | 140.1 | 8.1 | 711 |
| Comparative Embodiment II-5 | 750 | 3 | 450 | 8 | 750 | 8 | 4.8 | 4.6 | 2.28 | 52.1 | 78 | -1.90 | 141.2 | 8.7 | 601 |
| Comparative Embodiment II-6 | 750 | 3 | 750 | 8 | 750 | 8 | 3.9 | 4.8 | 2.35 | 49.7 | 78 | -1.95 | 142.4 | 8.8 | 604 |

(continued)

| No. | Sintering temperature in S4 (°C) | Sintering time in S4 (h) | Sintering temperature in S6 (°C) | Sintering time in S6 (h) | Sintering temperature in S8 (°C) | Sintering time in S8 (h) | Lattice change rate (%) | Li/Mn antisite defect concentration | Compacted density | 3C charge constant current rate (%) | Dissolution of Mn and Fe after cycling (ppm) | Surface oxygen valence | Capacity of button cell at 0.1C (mAh/g) | Battery cell expansion rate after storage at 60°C for 30d (%) | Number of cycles for 80% of capacity retention rate at 45°C |
|---|---|---|---|---|---|---|---|---|---|---|---|---|---|---|---|
| Comparative Embodiment II-7 | 750 | 3 | 600 | 5.5 | 750 | 8 | 4.4 | 4.2 | 2.24 | 45.4 | 81 | -1.93 | 142.9 | 8.8 | 614 |
| Comparative Embodiment II-8 | 750 | 3 | 600 | 10.5 | 750 | 8 | 4.1 | 3.9 | 2.34 | 49.1 | 79 | -1.92 | 141.1 | 7.9 | 684 |
| Comparative Embodiment II-9 | 750 | 3 | 600 | 8 | 650 | 8 | 5.2 | 4.1 | 2.31 | 48.4 | 81 | -1.93 | 141.8 | 10.2 | 567 |
| Comparative Embodiment II-10 | 750 | 3 | 600 | 8 | 850 | 8 | 5.0 | 4.0 | 2.34 | 49.1 | 78 | -1.95 | 141.2 | 8.7 | 678 |
| Comparative Embodiment II-11 | 750 | 3 | 600 | 8 | 750 | 5.5 | 4.3 | 4.2 | 2.27 | 47.8 | 84 | -1.91 | 142.9 | 9.4 | 521 |
| Comparative Embodiment II-12 | 750 | 3 | 600 | 8 | 750 | 10.5 | 50 | 4.9 | 2.35 | 49.8 | 78 | -1.94 | 141.7 | 9.5 | 655 |

IV. Investigation of the influence of reaction temperature and reaction time in inner core preparation on the performance of positive electrode active materials and performance of battery cells

The positive electrode active materials and battery cells of Embodiments III-1 to III-17 in the following table are prepared in a manner similar to Embodiment 62, and the differences in the preparation of the positive electrode active materials are shown by the process parameters in the following table. The results are also shown in the table below.

Table 41: Influence of reaction temperature and reaction time in inner core preparation on the performance of positive electrode active materials and performance of secondary battery cells

| No. | Step S1 | | Step S2 | | Lattice change rate (%) | Li/Mn antisite defect concentration (%) | Compacted density (g/cm³) | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30 d (%) | Number of cycles for 80% of capacity retention rate at 45°C |
|---|---|---|---|---|---|---|---|---|---|---|---|---|---|
| | Reaction temperature (°C) | Reaction time (h) | Reaction temperature (°C) | Reaction time (h) | | | | | | | | | |
| Embodiment 62 | 80 | 6 | 80 | 10 | 2.5 | 1.8 | 2.35 | 70.3 | 7 | -1.93 | 157.2 | 4.2 | 1128 |
| Embodiment III-1 | 70 | 6 | 80 | 10 | 2.8 | 3.4 | 2.30 | 60.1 | 34 | -1.93 | 155.4 | 5.8 | 876 |
| Embodiment III-2 | 60 | 6 | 80 | 10 | 3.1 | 3.1 | 2.33 | 64.2 | 18 | -1.92 | 156.2 | 5.1 | 997 |
| Embodiment III-4 | 100 | 6 | 80 | 10 | 2.3 | 2.4 | 2.37 | 71.3 | 7 | -1.94 | 156.8 | 4.1 | 1137 |
| Embodiment III-5 | 120 | 6 | 80 | 10 | 2.1 | 2.2 | 2.38 | 72.1 | 5 | -1.92 | 155.4 | 4.0 | 1158 |
| Embodiment III-6 | 80 | 2 | 80 | 10 | 2.8 | 3.2 | 2.27 | 68.4 | 24 | -1.90 | 154.9 | 5.1 | 895 |
| Embodiment III-7 | 80 | 3 | 80 | 10 | 2.6 | 2.7 | 2.29 | 69.7 | 17 | -1.92 | 156.1 | 4.7 | 967 |
| Embodiment III-8 | 80 | 5 | 80 | 10 | 2.4 | 1.9 | 2.34 | 70.6 | 8 | -1.94 | 156.8 | 4.3 | 1137 |

| No. | Step S1 | | Step S2 | | Lattice change rate (%) | Li/Mn antisite defect concentration (%) | Compacted density (g/cm³) | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30 d (%) | Number of cycles for 80% of capacity retention rate at 45°C |
|---|---|---|---|---|---|---|---|---|---|---|---|---|---|
| | Reaction temperature (°C) | Reaction time (h) | Reaction temperature (°C) | Reaction time (h) | | | | | | | | | |
| Embodiment III-9 | 8 | 7 | 80 | 10 | 2.5 | 1.8 | 2.35 | 68.3 | 11 | -1.94 | 156.4 | 4.8 | 987 |
| Embodiment III-10 | 80 | 9 | 80 | 10 | 2.6 | 1.8 | 2.36 | 67.2 | 15 | -1.93 | 155.9 | 5.2 | 921 |
| Embodiment III-11 | 80 | 6 | 40 | 10 | 3.2 | 3.4 | 2.28 | 67.8 | 35 | -1.94 | 156.8 | 5.4 | 894 |
| Embodiment III-12 | 80 | 6 | 60 | 10 | 2.8 | 2.9 | 2.31 | 68.7 | 18 | -1.95 | 157.0 | 4.9 | 927 |
| Embodiment III-13 | 80 | 6 | 80 | 10 | 2.5 | 2.7 | 2.35 | 70.3 | 7 | -1.93 | 157.2 | 4.2 | 1128 |
| Embodiment III-14 | 80 | 6 | 100 | 10 | 2.7 | 2.8 | 2.33 | 69.4 | 15 | -1.93 | 156.7 | 4.6 | 957 |
| Embodiment III-15 | 80 | 6 | 120 | 10 | 2.8 | 3.1 | 2.32 | 68.1 | 24 | -1.94 | 156.2 | 4.8 | 914 |
| Embodiment III-16 | 80 | 6 | 90 | 1 | 3.7 | 3.8 | 2.26 | 67.9 | 38 | -1.93 | 155.8 | 5.2 | 885 |
| Embodiment III-17 | 80 | 6 | 90 | 3 | 3.4 | 3.4 | 2.31 | 68.2 | 32 | -1.94 | 156.1 | 4.8 | 915 |

(continued)

| No. | Step S1 | | Step S2 | | Lattice change rate (%) | Li/Mn antisite defect concentration (%) | Compacted density (g/cm³) | 3C charge constant current rate (%) | Dissolution of Mn and Fe after cycling (ppm) | Surface oxygen valence | Capacity of button battery at 0.1C (mAh/g) | Battery cell expansion rate after storage at 60°C for 30 d (%) | Number of cycles for 80% of capacity retention rate at 45°C |
|---|---|---|---|---|---|---|---|---|---|---|---|---|---|
| | Reaction temperature (°C) | Reaction time (h) | Reaction temperature (°C) | Reaction time (h) | | | | | | | | | |
| Embodiment III-18 | 80 | 6 | 90 | 5 | 3.1 | 3.1 | 2.33 | 69.1 | 27 | -1.92 | 156.4 | 4.6 | 934 |
| Embodiment III-19 | 80 | 6 | 90 | 7 | 2.8 | 2.9 | 2.34 | 69.4 | 15 | -1.93 | 156.8 | 4.5 | 971 |
| Embodiment III-20 | 80 | 6 | 90 | 9 | 2.5 | 2.7 | 2.35 | 70.3 | 7 | -1.93 | 157.2 | 4.2 | 1128 |

As can be seen from Table 41, when the reaction temperature in Step S 1 is in the range of 60-120°C and the reaction time is 2-9 h, and the reaction temperature in Step S2 is in the range of 40-120°C and the reaction time is 1-10 h, the performance (lattice change rate, Li/Mn antisite defect concentration, surface oxygen valence, and compacted density) of the positive electrode active material powder and the performance (electric capacity, high-temperature cycling performance, high-temperature storage performance) of the prepared battery cells are all excellent.

The preparation and performance testing of the positive electrode active materials whose coating layer includes a first coating layer (pyrophosphate and phosphate) and a second coating layer of carbon are described in detail below:

Embodiment 1-1

[Preparation of double-layer coated lithium manganese phosphate positive electrode active material]

(1) Preparation of co-doped lithium manganese phosphate inner core

Preparation of Fe, Co and V co-doped manganese oxalate: 689.5g of manganese carbonate (based on $MnCO_3$, the same below), 455.2g of ferrous carbonate (based on $FeCO_3$, the same below), 4.6g of cobalt sulfate (based on $CoSO_4$, the same below) and 4.9g of vanadium dichloride (based on $VCl_2$, the same below) were thoroughly mixed in a mixer for 6 h. The mixture was transferred to the reactor and 5 liters of deionized water and 1260.6g of oxalic acid dihydrate (based on $C_2H_2O_4 \cdot 2H_2O$, the same below) were added. The reactor was heated to 80°C and stirred at 600 rpm for 6 h until the reaction was terminated (no bubbles were generated) to obtain an Fe, Co, V and S co-doped manganese oxalate suspension. Then the suspension was filtered, the filter cake was oven dried at 120°C, and then ground to obtain Fe, Co and V co-doped manganese oxalate particles with a median particle size Dv50 of 100 nm.

Preparation of Fe, Co, V and S co-doped lithium manganese phosphate: the manganese oxalate dihydrate particles obtained in the previous step (1793.4g), 369.0g of lithium carbonate (based on $Li_2CO_3$, the same below), 1.6g of dilute sulfuric acid with a concentration of 60% (based on 60% $H_2SO_4$, the same below) and 1148.9g of ammonium dihydrogen phosphate (based on $NH_4H_2PO_4$, the same below) were added to 20 liters of deionized water, and the mixture was stirred for 10 h to mix evenly and obtain a slurry. The slurry was transferred to a spray drying device for spray drying and granulation, and dried at a set temperature of 250°C for 4 h to obtain a powder. In a protective atmosphere of nitrogen (90 vol%) + hydrogen (10 vol%), the above powder was sintered at 700°C for 4 h to obtain 1572.1g of lithium manganese phosphate co-doped with Fe, Co, V and S.

(2) Preparation of lithium iron pyrophosphate and lithium iron phosphate

Preparation of lithium iron pyrophosphate powder: 4.77g of lithium carbonate, 7.47g of ferrous carbonate, 14.84g of ammonium dihydrogen phosphate and 1.3g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 650°C in a nitrogen atmosphere for 8 h, and then naturally cooled to room temperature and then ground to obtain $Li_2FeP_2O_7$ powder.

Preparation of lithium iron phosphate suspension: 11.1g of lithium carbonate, 34.8g of ferrous carbonate, 34.5g of ammonium dihydrogen phosphate, 1.3g of oxalic acid dihydrate and 74.6g of sucrose (based on $C_{12}H_{22}O_{11}$, the same below) were dissolved in 150 ml of deionized water to obtain a mixture, and then stirred for 6 h to allow the above mixture to fully react. The reacted solution was then heated to 120°C and maintained at this temperature for 6 h to obtain a suspension containing $LiFePO_4$.

(3) Coating

1572.1g of the above Fe, Co, V and S co-doped lithium manganese phosphate and 15.72g of the above lithium iron pyrophosphate ($Li_2FeP_2O_7$) powder were added to the lithium iron phosphate ($LiFePO_4$) suspension prepared in the previous step. The mixture was stirred and mixed evenly, then transferred to a vacuum oven to dry at 150°C for 6 h. The resulting product was then dispersed by a sand mill. After dispersion, the obtained product was sintered at 700°C for 6 h in a nitrogen atmosphere to obtain the target product of double-layer coated lithium manganese phosphate.

[Preparation of positive electrode plate]

The prepared double-layer coated lithium manganese phosphate positive electrode active material, a conductive acetylene black and a binder polyvinylidene fluoride (PVDF) in a weight ratio of 92:2.5:5.5 were added to N-methyl pyrrolidone (NMP), and stirred and mixed evenly to obtain a positive electrode slurry. Then, the positive electrode slurry was evenly coated on an aluminum foil at 0.280g/1540.25mm², and then subjected to oven drying, cold pressing and slitting to obtain a positive electrode plate.

[Preparation of negative electrode plate]

The negative electrode active material artificial graphite, hard carbon a conductive agent acetylene black, a binder styrene butadiene rubber (SBR), and a thickener sodium carboxymethylcellulose (CMC-NA) in a weight ratio of 90:5:2:2:1 were dissolved in a solvent deionized water, which was uniformly stirred and mixed to prepare a negative electrode slurry. The negative electrode slurry was uniformly coated on a negative electrode current collector copper foil at 0.117g/1540.25mm², then subjected to oven drying, cold pressing, and slitting, to provide the negative electrode plate.

[Preparation of electrolyte solution]

In a glove box under an argon atmosphere ($H_2O$<0.1 ppm, $O_2$<0.1 ppm), ethylene carbonate (EC)/ethyl methyl carbonate (EMC) as the organic solvent were mixed uniformly in a volume ratio of 3/7, 12.5 wt % (based on the weight of the organic solvent) of $LiPF_6$ was dissolved in the organic solvent and stirred uniformly to obtain an electrolyte solution.

[Separator]

A commercially available PP-PE copolymer microporous film with a thickness of 20 $\mu$m and an average pore size of 80 nm (from Zoco Electronic Technology Co, Ltd, model 20) was used.

[Preparation of full battery cells]

The aforementioned positive electrode plate, separator and negative electrode plate were stacked in sequence, so that the separator was located between the positive electrode plate and the negative electrode plate for separation, and a bare battery cell was obtained by winding. The bare battery cell was placed in an outer package, the aforementioned electrolyte solution was injected, they were packaged to obtain a full battery cell (hereinafter also referred to as the "full battery").

[Preparation of button battery cells]

All parameters are the same as those of Embodiment 1 and will not be repeated here.

Embodiments 1-2 to 1-6

The preparation conditions of the lithium manganese phosphate inner core in Embodiments 1-2 to 1-6 were the same as those of Embodiment 1-1 except that in the preparation process of the co-doped lithium manganese phosphate inner core, vanadium dichloride and cobalt sulfate were not used, 463.4g of ferrous carbonate, 1.6g of 60% dilute sulfuric acid, 1148.9g of ammonium dihydrogen phosphate and 369.0g of lithium carbonate were used.

In addition, in the preparation process of lithium iron pyrophosphate and lithium iron phosphate and the process of applying the first coating layer and the second coating layer, except that the raw materials used were adjusted according to the ratio of the coating amounts shown in Table 20 to the corresponding coating amounts in Embodiment 1-1 so that the amounts of $Li_2FeP_2O_7$/$LiFePO_4$ in Embodiments 1-2 to 1-6 were 12.6g/37.7g, 15.7g/47.1g, and 18.8. g/56.5g, 22.0g/66.0g and 25.1g/75.4g respectively, and the amount of sucrose used in Embodiments 1-2 to 1-6 was 37.3g, the other conditions were the same as those of Embodiment 1-1.

Embodiments 1-7 to 1-10

The conditions of Embodiments 1-7 to 1-10 were the same as those of Embodiment 1-3 except that the amounts of sucrose were 74.6g, 149.1g, 186.4g and 223.7g respectively so that the corresponding coating amounts of the carbon layer as the second coating layer were 31.4g, 62.9g, 78.6g and 94.3g respectively.

Embodiments 1-11 to 1-14

The conditions of Embodiments 1-11 to 1-14 were the same as those of Embodiment 1-7 except that in the preparation process of lithium iron pyrophosphate and lithium iron phosphate, the amounts of various raw materials were adjusted accordingly according to the coating amounts shown in Table 20 so that the amounts of $Li_2FeP_2O_7$/$LiFePO_4$ were 23.6g/39.3g, 31.4g/31.4g, 39.3g/23.6g and 47.2g/15.7g respectively.

Embodiment 1-15

The conditions of Embodiment 1-15 were the same as those of Embodiment 1-14 except that 492.80g of $ZnCO_3$ was used instead of ferrous carbonate in the preparation process of the co-doped lithium manganese phosphate inner core.

Embodiments 1-16 to 1-18

The conditions of Embodiments 1-17 to 1-19 were the same as those of Embodiment 1-7 except that 466.4g of $NiCO_3$, 5.0g of zinc carbonate and 7.2g of titanium sulfate instead of ferrous carbonate were used in the preparation process of the co-doped lithium manganese phosphate inner core in Embodiment 1-16, 455.2g of ferrous carbonate and 8.5g of vanadium dichloride were used in the preparation process of the co-doped lithium manganese phosphate inner core in Embodiment 1-17, and 455.2g of ferrous carbonate, 4.9g of vanadium dichloride and 2.5g of magnesium carbonate were used in the preparation process of the co-doped lithium manganese phosphate inner core in Embodiment 1-18.

Embodiments 1-19 to 1-20

The conditions of Embodiments 1-19 to 1-20 were the same as those of Embodiment 1-18 except that 369.4g of lithium carbonate was used and 1.05g of 60% dilute nitric acid was used instead of dilute sulfuric acid in the preparation process of the co-doped lithium manganese phosphate inner core in Embodiment 1-19, and 369.7g of lithium carbonate was used and 0.78g of silicic acid was used instead of dilute sulfuric acid in the preparation process of the co-doped lithium manganese phosphate inner core in Embodiment 1-20.

Embodiments 1-21 to 1-22

The conditions of Embodiments 1-21 to 1-22 were the same as those of Embodiment 1-20 except that in Embodiment 1-21, 632.0g of manganese carbonate, 463.30g of ferrous carbonate, 30.5g of vanadium dichloride, 21.0g of magnesium carbonate and 0.78g of silicic acid were used in the preparation process of the co-doped lithium manganese phosphate inner core; and in Embodiment 1-22, 746.9g of manganese carbonate, 289.6g of ferrous carbonate, 60.9g of vanadium dichloride, 42.1g of magnesium carbonate and 0.78g of silicic acid were used in the preparation process of the co-doped lithium manganese phosphate inner core.

Embodiments 1-23 to 1-24

The conditions of Embodiments 1-23 to 1-24 were the same as those of Embodiment 1-22 except that in Embodiment 1-23, in the preparation process of the co-doped lithium manganese phosphate inner core, 804.6g of manganese carbonate, 231.7g of ferrous carbonate, 1156.2g of ammonium dihydrogen phosphate, 1.2g of boric acid (mass fraction 99.5%) and 370.8 g of lithium carbonate were used; and in Embodiment 1-24, 862.1g of manganese carbonate, 173.8g of ferrous carbonate, 1155.1g of ammonium dihydrogen phosphate, 1.86g of boric acid (mass fraction 99.5%) and 371.6 g of lithium carbonate were used in the preparation process of the co-doped lithium manganese phosphate inner core.

Embodiment 1-25

The conditions of Embodiment 1-25 were the same as those of Embodiment 1-20 except that in Embodiment 1-25, 370.1g of lithium carbonate, 1.56g of silicic acid and 1147.7g of ammonium dihydrogen phosphate were used in the preparation process of the co-doped lithium manganese phosphate inner core.

Embodiment 1-26

The conditions of Embodiment 1-26 were the same as those of Embodiment 1-20 except that in Embodiment 1-26, 368.3g of lithium carbonate, 4.9g of dilute sulfuric acid with a mass fraction of 60%, 919.6g of manganese carbonate, 224.8g of ferrous carbonate, 3.7g of vanadium dichloride, 2.5g of magnesium carbonate and 1146.8g of ammonium dihydrogen phosphate were used in the preparation process of the co-doped lithium manganese phosphate inner core.

Embodiment 1-27

The conditions of Embodiment 1-27 were the same as those of Embodiment 1-20 except that in Embodiment 1-27, 367.9g of lithium carbonate, 6.5g of 60% dilute sulfuric acid and 1145.4g of ammonium dihydrogen phosphate were used in the preparation process of the co-doped lithium manganese phosphate inner core.

Embodiments 1-28 to 1-33

The conditions of Embodiments 1-28 to 1-33 were the same as those of Embodiment 1-20, except that in Embodiments 1-28 to 1-33, in the preparation process of the co-doped lithium manganese phosphate inner core, 1034.5g of manganese carbonate, 108.9g of ferrous carbonate, 3.7g of vanadium dichloride and 2.5g of magnesium carbonate were used, the amount of lithium carbonate was: 367.6g, 367.2g, 366.8g, 366.4g, 366.0g and 332.4g respectively, the amount of ammonium dihydrogen phosphate was: 1144.5g, 1143.4g, 1142.2g, 1141.1g, 1139.9g and 1138.8g respectively, the amount of 60% dilute sulfuric acid was: 8.2g, 9.8g, 11.4g, 13.1g, 14.7g and 16.3g respectively.

Embodiments 2-1 to 2-4

Embodiment 2-1

Except that in the preparation process of lithium iron pyrophosphate ($Li_2FeP_2O_7$), the sintering temperature was 550°C and the sintering time was 1h in the powder sintering step to control the crystallinity of $Li_2FeP_2O_7$ to 30%, and in the preparation process of lithium iron phosphate ($LiFePO_4$), the sintering temperature was 650°C and the sintering time was 2h in the coating and sintering step to control the crystallinity of $LiFePO_4$ to 30% in the coating sintering step, other conditions were the same as those of Embodiment 1-1.

Embodiment 2-2

Except that in the preparation process of lithium iron pyrophosphate ($Li_2FeP_2O_7$), the sintering temperature was 550°C and the sintering time was 2h in the powder sintering step to control the crystallinity of $Li_2FeP_2O_7$ to 50%, and in the preparation process of lithium iron phosphate ($LiFePO_4$), the sintering temperature was 650°C and the sintering time was 3h in the coating and sintering step to control the crystallinity of $LiFePO_4$ to 50% in the coating sintering step, other conditions were the same as those of Embodiment 1-1.

Embodiment 2-3

Except that in the preparation process of lithium iron pyrophosphate ($Li_2FeP_2O_7$), the sintering temperature was 600°C and the sintering time was 3h in the powder sintering step to control the crystallinity of $Li_2FeP_2O_7$ to 70%, and in the preparation process of lithium iron phosphate ($LiFePO_4$), the sintering temperature was 650°C and the sintering time was 4h in the coating and sintering step to control the crystallinity of $LiFePO_4$ to 70% in the coating sintering step, other conditions were the same as those of Embodiment 1-1.

Embodiment 2-4

Except that in the preparation process of lithium iron pyrophosphate ($Li_2FeP_2O_7$), the sintering temperature was 650°C and the sintering time was 4h in the powder sintering step to control the crystallinity of $Li_2FeP_2O_7$ to 100%, and in the preparation process of lithium iron phosphate ($LiFePO_4$), the sintering temperature was 700°C and the sintering time was 6h in the coating and sintering step to control the crystallinity of $LiFePO_4$ to 100% in the coating sintering step, other conditions were the same as those of Embodiment 1-1.

Embodiments 3-1 to 3-12

Except that in the process of preparing Fe, Co and V co-doped manganese oxalate particles, the heating temperature/stirring time in the reactor of Embodiment 3-1 were 60°C/120 min respectively; the heating temperature/stirring time in the reactor of Embodiment 3-2 were 70°C/120 min respectively; the heating temperature/stirring time in the reactor of Embodiment 3-3 were 80°C/120 min respectively; the heating temperature/stirring time in the reactor of Embodiment 3-4 were respectively 90°C/120 min; the heating temperature/stirring time in the reactor of Embodiment 3-5 were 100°C/120 min respectively; the heating temperature/stirring time in the reactor of Embodiment 3-6 were 110°C/120 min respectively; the heating temperature/stirring time in the reactor of Embodiment 3-7 were 120°C/120 min respectively; the heating temperature/stirring time in the reactor of Embodiment 3-8 were 130°C/120 min respectively; the heating temperature/stirring time in the reactor of Embodiment 3-9 were 100°C/60 min respectively; the heating temperature/stirring time in the reactor of Embodiment 3-10 were 100°C/90 min respectively; the heating temperature/stirring time in the reactor of Embodiment 3-11 were 100°C/150 min respectively; the heating temperature/stirring time in the reactor of Embodiment 3-12 were 100°C/180 min respectively, other conditions of Embodiments 3-1 to 3-12 were the same as those of Embodiment 1-1.

Embodiments 4-1 to 4-7

Embodiments 4-1 to 4-4: Except that in the preparation process of lithium iron pyrophosphate ($Li_2FeP_2O_7$), the drying temperature/drying time in the drying step were 100°C/4h, 150°C/6h, 200°C/6h and 200°C/6h respectively; in the preparation process of lithium iron pyrophosphate ($Li_2FeP_2O_7$), the sintering temperature and sintering time in the sintering step were 700°C/6h, 700°C/6h, 700°C/6h and 600°C/6h respectively, other conditions were the same as those of Embodiment 1-7.

Embodiments 4-5 to 4-7: Except that the drying temperature/drying time in the drying step during the coating process were 150°C/6h, 150°C/6h and 150°C/6h respectively; in the sintering step during the coating process, the sintering temperature and sintering time were 600°C/4h, 600°C/6h and 800°C/8h respectively, other conditions were the same as those of Embodiment 1-12.

Comparative Embodiment 1-1

Preparation of manganese oxalate: 1149.3g manganese carbonate was added to the reactor, and 5 liters of deionized water and 1260.6g of oxalic acid dihydrate (based on $C_2H_2O_4 \cdot 2H_2O$, the same below). The reactor was heated to 80°C and the reaction mixture was stirred at 600 rpm for 6 h until the reaction was terminated (no bubbles were generated) to obtain a manganese oxalate suspension, then the suspension was filtered, the filter cake was oven-dried at 120°C, and then ground to obtain manganese oxalate dihydrate particles with a median particle size Dv50 of 100 nm.

Preparation of carbon-coated lithium manganese phosphate: 1789.6g of the manganese oxalate dihydrate particles obtained above, 369.4g of lithium carbonate (based on $Li_2CO_3$, the same below), 1150.1g of ammonium dihydrogen phosphate (based on $NH_4H_2PO_4$, the same below) and 31g of sucrose (based on $C_{12}H_{22}O_{11}$, the same below) were taken and added to 20 liters of deionized water, and the mixture was stirred for 10 h to mix evenly to obtain a slurry. The slurry was transferred to a spray drying device for spray drying and granulation, and dried at a set temperature of 250°C for 4 h to obtain a powder. In a protective atmosphere of nitrogen (90 vol%) + hydrogen (10 vol%), the above powder was sintered at 700°C for 4 h to obtain carbon-coated lithium manganese phosphate.

Embodiment 1-34

Except for using 689.5g of manganese carbonate and adding additional 463.3g of ferrous carbonate, other conditions were the same as those of Comparative Embodiment 1-1.

Embodiment 1-35

Other conditions were the same as those of Comparative Embodiment 1-1 except that 1148.9g of ammonium dihydrogen phosphate and 369.0g of lithium carbonate were used, and additional 1.6g of 60% dilute sulfuric acid was added.

Embodiment 1-36

Other conditions were the same as those of Comparative Embodiment 1-1 except that 689.5g of manganese carbonate, 1148.9g of ammonium dihydrogen phosphate and 369.0g of lithium carbonate were used, and additional 463.3g of ferrous carbonate and 1.6g of 60% dilute sulfuric acid were added.

Embodiment 1-37

The following additional steps were added: Preparation of lithium iron pyrophosphate powder: 9.52g of lithium carbonate, 29.9g of ferrous carbonate, 29.6g of ammonium dihydrogen phosphate and 32.5g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 500°C in a nitrogen atmosphere for 4 h, and was naturally cooled to room temperature before grinding. The crystallinity of $Li_2FeP_2O_7$ was controlled to 5%. When preparing carbon-coated materials, the amount of $Li_2FeP_2O_7$ was 62.8 g. Except the above, other conditions were the same as those of Embodiment 1-36.

Embodiment 1-38

The following additional steps were added: Preparation of lithium iron phosphate suspension: 14.7g of lithium carbonate, 46.1g of ferrous carbonate, 45.8g of ammonium dihydrogen phosphate and 50.2g of oxalic acid dihydrate were dissolved in 500ml of deionized water, and then stirred for 6 h to make the mixture to react fully. The reacted solution was then heated to 120°C and maintained at this temperature for 6 h to obtain a suspension containing $LiFePO_4$. The sintering temperature was 600°C and the sintering time was 4h in the coating and sintering step during the preparation of lithium iron phosphate ($LiFePO_4$) to control the crystallinity of $LiFePO_4$ to 8%, and when preparing carbon-coated materials, the amount of $LiFePO_4$ was 62.8g. Except the above, other conditions were the same as those of Embodiment 1-36.

Embodiment 1-39

Preparation of lithium iron pyrophosphate powder: 2.38g of lithium carbonate, 7.5g of ferrous carbonate, 7.4g of ammonium dihydrogen phosphate and 8.1g of oxalic acid dihydrate were dissolved in 50ml of deionized water. The pH of the mixture was 5, and the reaction mixture was stirred for 2 h to fully react. The reacted solution was then heated to 80°C and maintained at this temperature for 4 h to obtain a suspension containing $Li_2FeP_2O_7$. The suspension was filtered, washed with deionized water, and dried at 120°C for 4 h to obtain a powder. The powder was sintered at 500°C in a nitrogen atmosphere for 4 h, and then naturally cooled to room temperature and then ground to control the crystallinity of $Li_2FeP_2O_7$ to 5%.

Preparation of lithium iron phosphate suspension: 11.1g of lithium carbonate, 34.7g of ferrous carbonate, 34.4g of ammonium dihydrogen phosphate, 37.7g of oxalic acid dihydrate and 37.3g of sucrose (based on $C_{12}H_{22}O_{11}$, the same below) were dissolved in 1500 ml of deionized water and then stirred for 6 h to allow the mixture to fully react. The reacted solution was then heated to 120°C and maintained at this temperature for 6 h to obtain a suspension containing $LiFePO_4$.

15.7g of the obtained lithium iron pyrophosphate powder was added to the aforementioned lithium iron phosphate ($LiFePO_4$) and sucrose suspension. During the preparation process, the sintering temperature was 600°C and the sintering time was 4h in the coating and sintering step to control the crystallinity of $LiFePO_4$ to 8%. Except the above, other conditions of Comparative Embodiment 7 were the same as those of Comparative Embodiment 4, and a positive electrode active material coated with amorphous lithium iron pyrophosphate, amorphous lithium iron phosphate, and carbon was obtained.

Embodiments (1-40) - (1-43)

Except that in the preparation process of lithium iron pyrophosphate ($Li_2FeP_2O_7$), the drying temperature/drying time in the drying step were 80°C/3h, 80°C/3h and 80°C/3h in Embodiments 1-40 to 1-42 respectively; in the preparation process of lithium iron pyrophosphate ($Li_2FeP_2O_7$), the sintering temperature and sintering time in the sintering step were 400°C/3h, 400°C/3h, 350°C/2h in Embodiments 1-40 to 1-42 respectively; the drying temperature/drying time in the drying step during the preparation of lithium iron phosphate ($LiFePO_4$) in Embodiment 1-43 were 80°C/3h; and in Embodiment 1-40 to 1-42, the dosages of $Li_2FeP_2O_7$/$LiFePO_4$ were 47.2g/15.7g, 15.7g/47.2g, 62.8g/0g, and 0g/62.8g respectively, other conditions were the same as those of Embodiment 1-7.

[Preparation of positive electrode plates], [Preparation of negative electrode plates], [Preparation of electrolyte solution], [Separator] and [Preparation of battery cells] in the above embodiments and comparative embodiments were all the same as those of Embodiment 1-1.

Table 42: Performance test results of Embodiments 1-1 to 1-33 and Comparative Embodiment 1-7

| Embo diment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mA h/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embo diment 1-1 | $Li_{0.999}Mn_{0.60}Fe_{0.393}V_{0.004}Co_{0.003}P_{0.999}S_{0.001}O_4$ | 1% $Li_2FeP_2O_7$/3% $LiFePO_4$ | 2% carb on | 2.4 | 0.4 | 8 | -1.98 | 158. 2 | 3.78 | 1.9 | 1328 |
| Embo diment 1-2 | $Li_{0.999}Mn_{0.60}Fe_{0.40}P_{0.999}S_{0.001}O_4$ | 0.8% $Li_2FeP_2O_7$/2.4 % $LiFePO_4$ | 1% carb on | 6.6 | 1.2 | 63 | -1.97 | 148. 9 | 3.75 | 6.4 | 804 |
| Embo diment 1-3 | $Li_{0.999}Mn_{0.60}Fe_{0.40}P_{0.999}S_{0.001}O_4$ | 1% $Li_2FeP_2O_7$/3% $LiFePO_4$ | 1% carb on | 6.5 | 1.1 | 48 | -1.97 | 148. 5 | 3.74 | 5.3 | 918 |
| Embo diment 1-4 | $Li_{0.999}Mn_{0.60}Fe_{0.40}P_{0.999}S_{0.001}O_4$ | 1.2% $Li_2FeP_2O_7$/3.6 % $LiFePO_4$ | 1% carb on | 6.5 | 0.8 | 32 | -1.97 | 147. 3 | 3.73 | 4.8 | 968 |
| Embo diment 1-5 | $Li_{0.999}Mn_{0.60}Fe_{0.40}P_{0.999}S_{0.001}O_4$ | 1.4% $Li_2FeP_2O_7$/4.2 % $LiFePO_4$ | 1% carb on | 6.5 | 0.7 | 20 | -1.98 | 146. 8 | 3.73 | 3.6 | 1064 |

| Embo diment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mA h/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embo dimen t 1-6 | $Li_{0.999}Mn_{0.60}Fe_{0.40}P_{0.999}S_{0.001}O_4$ | 1.6% $Li_2FeP_2O_7$/4.8% $LiFePO_4$ | 1% carb on | 6.6 | 0.6 | 15 | -1.98 | 145. 9 | 3.72 | 2.8 | 1189 |
| Embo dimen t 1-7 | $Li_{0.999}Mn_{0.60}Fe_{0.40}P_{0.999}S_{0.001}O_4$ | 1% $Li_2FeP_2O_7$/3% $LiFePO_4$ | 2% carb on | 6.5 | 1.0 | 42 | -1.97 | 147. 5 | 3.73 | 4.8 | 968 |
| Embo dimen t 1-8 | $Li_{0.999}Mn_{0.60}Fe_{0.40}P_{0.999}S_{0.001}O_4$ | 1% $Li_2FeP_2O_7$/3% $LiFePO_4$ | 4% carb on | 6.5 | 1.0 | 38 | -1.97 | 146. 4 | 3.73 | 4.3 | 1012 |
| Embo dimen t 1-9 | $Li_{0.999}Mn_{0.60}Fe_{0.40}P_{0.999}S_{0.001}O_4$ | 1% $Li_2FeP_2O_7$/3% $LiFePO_4$ | 5% carb on | 6.4 | 1.1 | 29 | -1.98 | 144. 3 | 3.73 | 3.7 | 1108 |
| Embo dimen t 1-10 | $Li_{0.999}Mn_{0.60}Fe_{0.40}P_{0.999}S_{0.001}O_4$ | 1% $Li_2FeP_2O_7$/3% $LiFePO_4$ | 6% carb on | 6.4 | 1.1 | 18 | -1.98 | 142. 1 | 3.73 | 2.8 | 1219 |
| Embo dimen t 1-11 | $Li_{0.999}Mn_{0.60}Fe_{0.40}P_{0.999}S_{0.001}O_4$ | 1.5% $Li_2FeP_2O_7$/2.5% $LiFePO_4$ | 2% carb on | 6.5 | 1.1 | 34 | -1.97 | 147. 8 | 3.74 | 5.2 | 927 |

| Embodiment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mA h/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-12 | $Li_{0.999}Mn_{0.60}Fe_{0.40}P_{0.999}S_{0.001}O_4$ | 2% $Li_2FeP_2O_7$/2% $LiFePO_4$ | 2% carbon | 6.6 | 1.0 | 22 | -1.96 | 147.6 | 3.74 | 6.1 | 897 |
| Embodiment 1-13 | $Li_{0.999}Mn_{0.60}Fe_{0.40}P_{0.999}S_{0.001}O_4$ | 2.5% $Li_2FeP_2O_7$/1.5% $LiFePO_4$ | 2% carbon | 6.7 | 1.2 | 18 | -1.96 | 147.2 | 3.74 | 6.9 | 816 |
| Embodiment 1-14 | $Li_{0.999}Mn_{0.60}Fe_{0.40}P_{0.999}S_{0.001}O_4$ | 3% $Li_2FeP_2O_7$/1% $LiFePO_4$ | 2% carbon | 6.7 | 1.1 | 9 | -1.97 | 147.0 | 3.75 | 7.5 | 764 |
| Embodiment 1-15 | $Li_{0.999}Mn_{0.60}Zn_{0.40}P_{0.999}S_{0.001}O_4$ | 3% $Li_2FeP_2O_7$/1% $LiFePO_4$ | 2% carbon | 7.5 | 2.5 | 18 | -1.97 | 138.7 | 3.86 | 8.4 | 857 |
| Embodiment 1-16 | $Li_{0.993}Mn_{0.6}Ni_{0.393}Zn_{0.004}Ti_{0.003}P_{0.999}S_{0.001}O_4$ | 1% $Li_2FeP_2O_7$/3% $LiFePO_4$ | 2% carbon | 5.4 | 0.8 | 14 | -1.97 | 139.4 | 3.86 | 4.5 | 974 |
| Embodiment 1-17 | $Li_{0.999}Mn_{0.60}Fe_{0.393}V_{0.007}P_{0.999}S_{0.001}O_4$ | 1% $Li_2FeP_2O_7$/3% $LiFePO_4$ | 2% carbon | 4.2 | 0.6 | 13 | -1.97 | 153.2 | 3.78 | 3.2 | 1241 |

| Embo diment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mA h/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-18 | $Li_{0.999}Mn_{0.60}Fe_{0.393}V_{0.004}Mg_{0.003}P_{0.999}S_{0.001}O_4$ | 1% $Li_2FeP_2O_7$/3% $LiFePO_4$ | 2% carbon | 2.6 | 0.5 | 10 | -1.97 | 155.6 | 3.80 | 2.7 | 1245 |
| Embodiment 1-19 | $LiMn_{0.60}Fe_{0.393}V_{0.004}Mg_{0.003}P_{0.999}N_{0.001}O_4$ | 1% $Li_2FeP_2O_7$/3% $LiFePO_4$ | 2% carbon | 2.3 | 0.5 | 9 | -1.98 | 157.6 | 3.80 | 2.1 | 1349 |
| Embodiment 1-20 | $Li_{1.001}Mn_{0.60}Fe_{0.393}V_{0.004}Mg_{0.003}P_{0.999}Si_{0.001}O_4$ | 1% $Li_2FeP_2O_7$/3% $LiFePO_4$ | 2% carbon | 2.4 | 0.7 | 11 | -1.98 | 157.4 | 3.80 | 2.4 | 1368 |
| Embodiment 1-21 | $Li_{1.001}Mn_{0.55}Fe_{0.40}V_{0.025}Mg_{0.025}P_{0.999}Si_{0.001}O_4$ | 1% $Li_2FeP_2O_7$/3% $LiFePO_4$ | 2% carbon | 2.2 | 0.5 | 8 | -1.98 | 158.4 | 3.72 | 2.0 | 1459 |
| Embodiment 1-22 | $Li_{1.001}Mn_{0.65}Fe_{0.25}V_{0.05}Mg_{0.05}P_{0.999}Si_{0.001}O_4$ | 1% $Li_2FeP_2O_7$/3% $LiFePO_4$ | 2% carbon | 2.5 | 0.8 | 12 | -1.98 | 156.9 | 3.83 | 2.8 | 1283 |
| Embodiment 1-23 | $Li_{1.004}Mn_{0.7}Fe_{0.2}V_{0.05}Mg_{0.05}P_{0.998}B_{0.002}O_4$ | 1% $Li_2FeP_2O_7$/3% $LiFePO_4$ | 2% carbon | 2.6 | 0.8 | 11 | -1.98 | 157.1 | 3.83 | 2.5 | 1268 |

(continued)

| Embodiment No. | Inner core | First coating layer | Second coating layer | Lattice change rate (%) | Li/Mn antisite defect concentration n/% | Dissolution of Fe and Mn after cycling (ppm) | Surface oxygen valence | Gram capacity of button battery at 0.1C (mAh/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embodiment 1-24 | $Li_{1.006}Mn_{0.75}Fe_{0.15}V_{0.05}Mg_{0.05}P_{0.997}B_{0.003}O_4$ | 1% $Li_2FeP_2O_7$/3% $LiFePO_4$ | 2% carbon | 2.6 | 0.8 | 10 | -1.98 | 157.4 | 3.83 | 2.6 | 1329 |
| Embodiment 1-25 | $Li_{1.002}Mn_{0.60}Fe_{0.393}V_{0.004}Mg_{0.003}P_{0.998}Si_{0.002}O_4$ | 1% $Li_2FeP_2O_7$/3% $LiFePO_4$ | 2% carbon | 2.3 | 0.7 | 10 | -1.98 | 157.3 | 3.78 | 2.4 | 1369 |
| Embodiment 1-26 | $Li_{0.997}Mn_{0.80}Fe_{0.194}V_{0.003}Mg_{0.003}P_{0.997}S_{0.003}O_4$ | 1% $Li_2FeP_2O_7$/3% $LiFePO_4$ | 2% carbon | 2.8 | 0.9 | 12 | -1.98 | 156.1 | 3.85 | 2.9 | 1128 |
| Embodiment 1-27 | $Li_{0.996}Mn_{0.60}Fe_{0.393}V_{0.004}Mg_{0.003}P_{0.996}S_{0.004}O_4$ | 1% $Li_2FeP_2O_7$/3% $LiFePO_4$ | 2% carbon | 2.2 | 0.6 | 11 | -1.98 | 157.5 | 3.78 | 2.4 | 1394 |
| Embodiment 1-28 | $Li_{0.995}Mn_{0.9}Fe_{0.094}V_{0.003}Mg_{0.003}P_{0.995}S_{0.005}O_4$ | 1% $Li_2FeP_2O_7$/3% $LiFePO_4$ | 2% carbon | 3.2 | 1.1 | 13 | -1.96 | 156.8 | 3.89 | 3.2 | 1089 |
| Embodiment 1-29 | $Li_{0.994}Mn_{0.90}Fe_{0.094}V_{0.003}Mg_{0.003}P_{0.994}S_{0.006}O_4$ | 1% $Li_2FeP_2O_7$/3% $LiFePO_4$ | 2% carbon | 3.0 | 1.2 | 14 | -1.95 | 156.1 | 3.89 | 3.2 | 1038 |

| Embo diment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mA h/g) | Average discharge voltage of button battery (V) | Battery cell expansion rate after storage at 60°C for 30 d (%) | Number of cycles corresponding to 80% of capacity retention rate at 45°C |
|---|---|---|---|---|---|---|---|---|---|---|---|
| Embo dimen t 1-30 | $Li_{0.993}Mn_{0.90}Fe_{0.094}V_{0.003}Mg_{0.003}P_{0.993}S_{0.007}O_4$ | 1% $Li_2FeP_2O_7$/3% $LiFePO_4$ | 2% carb on | 2.8 | 1.4 | 16 | -1.95 | 155. 8 | 3.89 | 3.1 | 948 |
| Embo dimen t 1-31 | $Li_{0.992}Mn_{0.90}Fe_{0.094}V_{0.003}Mg_{0.003}P_{0.992}S_{0.008}O_4$ | 1% $Li_2FeP_2O_7$/3% $LiFePO_4$ | 2% carb on | 2.6 | 1.4 | 17 | -1.94 | 155. 4 | 3.89 | 3.0 | 917 |
| Embo dimen t 1-32 | $Li_{0.991}Mn_{0.90}Fe_{0.094}V_{0.003}Mg_{0.003}P_{0.991}S_{0.009}O_4$ | 1% $Li_2FeP_2O_7$/3% $LiFePO_4$ | 2% carb on | 2.4 | 1.2 | 18 | -1.94 | 154. 8 | 3.89 | 2.8 | 897 |
| Embo dimen t 1-33 | $Li_{0.9}Mn_{0.90}Fe_{0.094}V_{0.003}Mg_{0.003}P_{0.9}S_{0.1}O_4$ | 1% $Li_2FeP_2O_7$/3% $LiFePO_4$ | 2% carb on | 2.1 | 0.9 | 20 | -1.94 | 154. 5 | 3.89 | 2.7 | 879 |
| Comp arativ e Embo dimen t 1-1 | $LiMnPO_4$ | - | 1% carb on | 11.4 | 3.2 | 2060 | - 1.55 | 125. 6 | 4.02 | 48.6 | 185 |
| Embo dimen t 1-34 | $LiMn_{0.60}Fe_{0.40}PO_4$ | - | 1% carb on | 8.7 | 2.8 | 1597 | -1.76 | 134. 8 | 3.76 | 42.5 | 358 |

| Embodiment No. | Inner core | First coating layer | Second coating layer | Lattice change rate (%) | Li/Mn antisite defect concentration/% | Dissolution of Fe and Mn after cycling (ppm) | Surface oxygen valence | Gram capacity of button battery at 0.1C (mAh/g) | Average discharge voltage of button battery (V) | Battery cell expansion rate after storage at 60°C for 30d (%) | Number of cycles corresponding to 80% of capacity retention rate at 45°C |
|---|---|---|---|---|---|---|---|---|---|---|---|
| Embodiment 1-35 | $Li_{0.999}MnP_{0.999}S_{0.001}O_4$ | - | 1% carbon | 9.8 | 2.5 | 1895 | -1.66 | 128.6 | 4.05 | 45.5 | 267 |
| Embodiment 1-36 | $Li_{0.999}Mn_{0.60}Fe_{0.40}P_{0.999}S_{0.001}O_4$ | - | 1% carbon | 6.7 | 1.8 | 1279 | -1.83 | 140.5 | 3.78 | 38.5 | 417 |
| Embodiment 1-37 | $Li_{0.999}Mn_{0.60}Fe_{0.40}P_{0.999}S_{0.001}O_4$ | 4% amorphous $Li_2FeP_2O_7$ | 1% carbon | 6.5 | 1.8 | 208 | -1.90 | 140.3 | 3.73 | 12.5 | 519 |
| Embodiment 1-38 | $Li_{0.999}Mn_{0.60}Fe_{0.40}P_{0.999}S_{0.001}O_4$ | 4% amorphous $LiFePO_4$ | 1% carbon | 6.6 | 1.8 | 318 | -1.91 | 140.2 | 3.74 | 11.5 | 528 |
| Embodiment 1-39 | $Li_{0.999}Mn_{0.60}Fe_{0.40}P_{0.999}S_{0.001}O_4$ | 1% amorphous $Li_2FeP_2O_7$ +3% amorphous $LiFePO_4$ | 1% carbon | 6.6 | 1.8 | 174 | -1.90 | 140.1 | 3.75 | 8.6 | 682 |
| | Remarks: 1) In Embodiments 1-1 to 1-33, $Li_2FeP_2O_7$ and $LiFePO_4$ both had crystallinity of 100%; 2) in the embodiments, the crystallinity of $Li_2FeP_2O_7$ was 5%, and the crystallinity of $LiFePO_4$ was 8%. | | | | | | | | | | |

218

EP 4 459 749 A1

Based on the above embodiments and comparative embodiments, it can be seen that the existence of the first coating layer is conducive to reducing the Li/Mn anti-site defect concentration of the obtained material and the dissolution of Fe and Mn after cycling, increasing the button battery gram capacity of the battery cell, and improving the safety performance and cycling performance of the battery cell. When other elements are doped at the Mn site and phosphorus site respectively, the lattice change rate, anti-site defect concentration and Fe and Mn dissolution of the resulting material can be significantly reduced, the gram capacity of the battery cell can be increased, and the safety performance and cycling performance of the battery cell can be improved.

Based on Embodiments 1-1 to 1-6, it can be seen that as the amount of the first coating layer increases from 3.2% to 6.4%, the Li/Mn anti-site defect concentration of the obtained material gradually decreases, and the dissolution amounts of Fe and Mn gradually decrease after cycling. The safety performance of the corresponding battery cells and the cycling performance at 45°C are also improved, but the discharge capacity per gram is slightly reduced. Optionally, when the total amount of the first coating layer is 4-5.6wt%, the corresponding battery cell has the best overall performance.

According to Embodiment 1-3 and Embodiments 1-7 to 1-10, it can be seen that as the amount of the second coating layer increases from 1% to 6%, the Li/Mn anti-site defect concentration of the resulting material gradually decreases, the dissolution of Fe and Mn gradually decreases after cycling, the safety performance and the cycling performance at 45°C of the corresponding battery cell are also improved, but the button battery gram capacity is slightly reduced. Optionally, when the total amount of the second coating layer is 3-5wt%, the corresponding battery cell has the best overall performance.

Based on Embodiments 1-11 to 1-15 and Embodiments 1-37 and 1-38, it can be seen that when $Li_2FeP_2O_7$ and $LiFePO_4$ coexist in the first coating layer, especially when the weight ratio of $Li_2FeP_2O_7$ to $LiFePO_4$ is 1:3 to 3:1, and especially 1:3 to 1:1, the improvement in battery cell performance is more obvious.

Table 43 Performance test results of Embodiments 2-1 to 2-4

| Embodiment No. | First coating layer | Pyrophosphate and phosphate crystallinity[1] | Lattice change rate (%) | Li/Mn anti site defect concentration/ % | Dissolution of Fe and Mn after cycling (ppm) | Surface oxygen valence | Capacity of button battery at 0.1C (mAh/g) | Average discharge voltage of button battery (V) | Battery cell expansion rate after storage at 60°C for 30 d (%) | Cycling capacity retention rate at 45°C |
|---|---|---|---|---|---|---|---|---|---|---|
| Embodiment 2-1 | 1% $Li_2FeP_2O_7$/3% $LiFePO_4$ | 30% | 6.3 | 1.9 | 147 | -1.88 | 145.2 | 3.72 | 5.6 | 698 |
| Embodiment 2-2 | 1% $Li_2FeP_2O_7$/3% $LiFePO_4$ | 50% | 4.7 | 1.2 | 97 | -1.89 | 149.2 | 3.74 | 4.7 | 869 |
| Embodiment 2-3 | 1% $Li_2FeP_2O_7$/3% $LiFePO_4$ | 70% | 3.5 | 0.8 | 29 | -1.91 | 151.3 | 3.75 | 3.8 | 1027 |
| Embodiment 2-4 | 1% $Li_2FeP_2O_7$/3% $LiFePO_4$ | 100% | 2.4 | 0.4 | 8 | -1.98 | 158.2 | 3.79 | 1.9 | 1328 |
| | [1]: refers the crystallinity of $Li_2FeP_2O_7$ and $LiFePO_4$ being 30%, 50%, 70% and 100% respectively. | | | | | | | | | |

It can be seen from Table 43 that as the crystallinity of pyrophosphate and phosphate in the first coating layer gradually increases, the lattice change rate, Li/Mn anti-site defect concentration and Fe and Mn dissolution of the corresponding material gradually decrease, the button battery capacity of the battery cells gradually increases, and the safety performance and cycling performance also gradually improve.

Table 44 Performance test results of Embodiments 3-1 to 3-12

| Embodiment No. | Types and amounts of doping elements | Reaction temperature/ °C | Stirring time /min | Lattice change rate (%) | Li/Mn antisite defect concentration/ % | Dissolution of Fe and Mn after cycling (ppm) | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|
| Embodiment 3-1 | $Li_{0.999}Mn_{0.60}Fe_{0.393}V_{0.004}Co_{0.003}P_{0.999}S_{0.001}O_4$ | 60 | 120 | 5.6 | 2.4 | 49 | -1.98 | 155.2 | 3.67 | 5.6 | 1102 |
| Embodiment 3-2 | $Li_{0.999}Mn_{0.60}Fe_{0.393}V_{0.004}Co_{0.003}P_{0.999}S_{0.001}O_4$ | 70 | 120 | 4.8 | 1.9 | 37 | -1.98 | 155.7 | 3.69 | 4.7 | 1203 |
| Embodiment 3-3 | $Li_{0.999}Mn_{0.60}Fe_{0.393}V_{0.004}Co_{0.003}P_{0.999}S_{0.001}O_4$ | 80 | 120 | 3.7 | 1.3 | 28 | -1.98 | 156.4 | 3.72 | 3.8 | 1275 |
| Embodiment 3-4 | $Li_{0.999}Mn_{0.60}Fe_{0.393}V_{0.004}Co_{0.003}P_{0.999}S_{0.001}O_4$ | 90 | 120 | 2.9 | 1.1 | 17 | -1.98 | 157.8 | 3.75 | 3.1 | 1305 |
| Embodiment 3-5 | $Li_{0.999}Mn_{0.60}Fe_{0.393}V_{0.004}Co_{0.003}P_{0.999}S_{0.001}O_4$ | 100 | 120 | 2.5 | 0.5 | 9 | -1.98 | 158.5 | 3.78 | 2.4 | 1327 |
| Embodiment 3-6 | $Li_{0.999}Mn_{0.60}Fe_{0.393}V_{0.004}Co_{0.003}P_{0.999}S_{0.001}O_4$ | 110 | 120 | 2.8 | 1.2 | 19 | -1.98 | 156.7 | 3.73 | 3.6 | 1257 |
| Embodiment 3-7 | $Li_{0.999}Mn_{0.60}Fe_{0.393}V_{0.004}Co_{0.003}P_{0.999}S_{0.001}O_4$ | 120 | 120 | 3.7 | 2.1 | 38 | -1.98 | 154.8 | 3.69 | 4.8 | 1179 |
| Embodiment 3-8 | $Li_{0.999}Mn_{0.60}Fe_{0.393}V_{0.004}Co_{0.003}P_{0.999}S_{0.001}O_4$ | 130 | 120 | 4.5 | 3.4 | 46 | -1.98 | 153.7 | 3.64 | 6.3 | 986 |

| Embodiment No. | Types and amounts of doping elements | Reaction temperature/°C | Stirring time /min | Lattice change rate (%) | Li/Mn antisite defect concentration/ % | Dissolution of Fe and Mn after cycling (ppm) | Surface oxygen valence | Capacity of button battery at 0.1C (mAh/ g) | Average discharge voltage of button battery (V) | Battery cell expansion rate after storage at 60° C for 30 d (%) | Number of cycles for 80% of capacity retention rate at 45°C |
|---|---|---|---|---|---|---|---|---|---|---|---|
| Embodiment 3-9 | $Li_{0.999}Mn_{0.60}Fe_{0.393}V_{0.004}Co_{0.003}P_{0.999}S_{0.001}O_4$ | 100 | 60 | 4.9 | 3.1 | 38 | -1.98 | 155.4 | 3.76 | 4.9 | 1021 |
| Embodiment 3-10 | $Li_{0.999}Mn_{0.60}Fe_{0.393}V_{0.004}Co_{0.003}P_{0.999}S_{0.001}O_4$ | 100 | 90 | 4.1 | 2.5 | 27 | -1.98 | 156.3 | 3.77 | 4.2 | 1097 |
| Embodiment 3-11 | $Li_{0.999}Mn_{0.60}Fe_{0.393}V_{0.004}Co_{0.003}P_{0.999}S_{0.001}O_4$ | 100 | 150 | 3.5 | 1.1 | 15 | -1.98 | 157.8 | 3.79 | 3.1 | 1184 |
| Embodiment 3-12 | $Li_{0.999}Mn_{0.60}Fe_{0.393}V_{0.004}Co_{0.003}P_{0.999}S_{0.001}O_4$ | 100 | 180 | 2.5 | 0.5 | 11 | -1.98 | 158.1 | 3.79 | 2.4 | 1297 |
| Note | 1. The temperature and stirring time in the reactor are parameters during the preparation of doped manganese oxalate (i.e., step (1)). | | | | | | | | | | |

It can be seen from Table 44 that by adjusting the reaction temperature and reaction time in the reactor during the preparation of manganese oxalate particles, various properties of the positive electrode material described in the present application can be further improved. For example, as the reaction temperature gradually increases from 60°C to 130°C, the lattice change rate and Li/Mn anti-site defect concentration first decrease and then increase, and the corresponding metal dissolution and safety performance after cycles also show similar rules, while the button battery capacity and cycling performance first increase and then decrease as the temperature increases. By controlling the reaction temperature unchanged and adjusting the reaction time, a similar pattern can also be presented.

Table 45 Performance test results of Embodiments 4-1 to 4-7 and Embodiments 1-40 to 1-43

| Embodiment No. | $Li_2FeP_2O_7$:$LiFePO_4$ (weight ratio) | Drying temperature (°C) | Drying time (h) | Sintering temperature (°C) | Sintering time (h) | Lattice spacing of the first coating layer pyrophosphate (nm) | Included angle of the first coating layer pyrophosphate (°) | Lattice spacing of the first coating layer phosphate (nm) | Included angle of the first coating layer phosphate (°) | Lattice change rate (%) | Li/Mn anti site defect concentration/% | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|---|---|---|---|---|
| Embodiment 4-1 | 1:3 | 100 | 4 | 700 | 6 | 0.303 | 29.49 6 | 0.348 | 25.562 | 2.9 | 0.6 | -1.97 | 155.4 | 3.71 | 3.4 | 1183 |
| Embodiment 4-2 | 1:3 | 150 | 6 | 700 | 6 | 0.303 | 29.49 6 | 0.348 | 25.562 | 2.6 | 0.6 | -1.98 | 157.8 | 3.78 | 2.4 | 1347 |
| Embodiment 4-3 | 1:3 | 200 | 6 | 700 | 6 | 0.303 | 29.49 6 | 0.348 | 25.562 | 2.7 | 0.6 | -1.98 | 156.5 | 3.73 | 3.1 | 1277 |
| Embodiment 4-4 | 1:3 | 200 | 6 | 600 | 6 | 0.303 | 29.49 6 | 0.348 | 25.562 | 2.9 | 1.1 | -1.95 | 153.8 | 3.69 | 3.9 | 984 |
| Embodiment 4-5 | 1:1 | 150 | 6 | 600 | 4 | 0.303 | 29.49 6 | 0.348 | 25.562 | 2.8 | 1.2 | -1.94 | 155.5 | 3.71 | 3.5 | 895 |
| Embodiment 4-6 | 1:1 | 150 | 6 | 600 | 6 | 0.303 | 29.49 6 | 0.348 | 25.562 | 2.6 | 0.8 | -1.95 | 156.3 | 3.72 | 3.1 | 963 |
| Embodiment 4-7 | 1:1 | 150 | 6 | 800 | 8 | 0.303 | 29.49 6 | 0.348 | 25.562 | 2.5 | 0.4 | -1.97 | 156.9 | 3.74 | 2.7 | 1043 |

224

EP 4 459 749 A1

| Embodiment No. | $Li_2FeP_2O_7$:$LiFePO_4$ (weight ratio) | Drying temperature (°C) | Drying time (h) | Sintering temperature (°C) | Sintering time (h) | Lattice spacing of the first coating layer pyrophosphate (nm) | Included angle of the first coating layer pyrophosphate (°) | Lattice spacing of the first coating layer phosphate (nm) | Included angle of the first coating layer phosphate (°) | Lattice change rate (%) | Li/Mn anti site defect concentration/% | Surface oxygen valence | Capacity of button battery at 0.1C (mAh/g) | Average discharge voltage of button battery (V) | Battery cell expansion rate after storage at 60°C for 30 d (%) | Number of cycles for 80% of capacity retention rate at 45°C |
|---|---|---|---|---|---|---|---|---|---|---|---|---|---|---|---|---|
| Embodiment 1-40 | 1:3 | 80 | 3 | 400 | 3 | - | - | - | - | 3.9 | 1.8 | -1.91 | 148.0 | 3.67 | 9.4 | 779 |
| Embodiment 1-41 | 1:1 | 80 | 3 | 400 | 3 | - | - | - | - | 3.6 | 1.6 | -1.93 | 149.4 | 3.70 | 6.8 | 683 |
| Embodiment 1-42 | $Li_2FeP_2O_7$ alone | 80 | 3 | 350 | 2 | - | - | - | - | 3.7 | 1.7 | -1.86 | 147.5 | 3.68 | 11.5 | 385 |
| Embodiment 1-43 | $LiFePO_4$ alone | 80 | 3 | - | - | - | - | - | - | 3.4 | 1.4 | -1.93 | 150.3 | 3.72 | 4.7 | 526 |

As can be seen from Table 45, when preparing lithium iron pyrophosphate by the method of the present application, by adjusting the drying temperature/time and sintering temperature/time during the preparation process, the properties of the obtained material can be improved, thereby improving the performance of the battery cell. It can be seen from Embodiments 1-40 to 1-43 that when the drying temperature during the preparation of lithium iron pyrophosphate is lower than 100°C or the temperature of the sintering step is lower than 400°C, the desired $Li_2FeP_2O_7$ of the present application will not be obtained, thereby failing to improve the performance of the material and the performance of battery cells containing the resulting material.

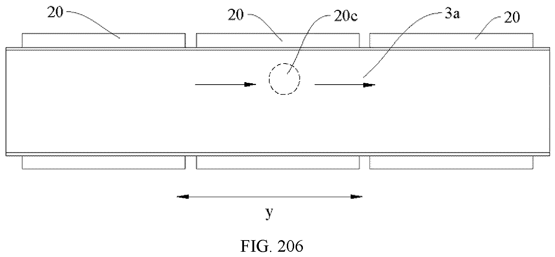

In some embodiments, as shown in Figs. 205 and 206, a hollow cavity 30a is provided inside a thermally conductive member 3a, a partition member 335 is provided in the hollow cavity 30a, the partition member 335 is used to separate the hollow cavity 30a into at least two flow channels 30c; when the number and cross-sectional size of the flow channels 30c are appropriate, it is convenient to form multiple microchannels inside the thermally conductive member 3a. When the battery cell 20 undergoes thermal runaway at position 20c, the heat exchange medium close to the thermally runaway battery cell 20 is rapidly vaporized by high temperature and takes away heat along the flow direction indicated by the arrow. At the same time, the cooling medium at the low temperature (the cooling medium on the left side of the thermally conductive member 3a in Fig. 206) is quickly filled to the thermal runaway position 20c through capillary action to achieve cooling, which can effectively control the temperature of the battery cell 20.

It should be noted that, without conflict, embodiments in the present application and features in the embodiments may be combined together.

The above descriptions are only used to illustrate the technical solutions of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:

   a box having an accommodating cavity;
   a battery cell accommodated in the accommodating cavity, the battery cell comprising a first wall and a second wall, there being an included angle between the first wall and the second wall, and an area of the first wall being greater than that of the second wall;
   a thermally conductive member arranged in the accommodating cavity, the thermally conductive member being arranged opposite and thermally conductively connected to the first wall to perform heat exchange with the battery cell; and
   a fixing member connected to the second wall and the box so as to fix the battery cell in the accommodating cavity.

2. The battery according to claim 1, wherein the first wall is a wall with the largest area of the battery cell.

3. The battery according to claim 1 or 2, wherein an electrode terminal of the battery cell is provided on the second wall.

4. The battery according to claim 3, wherein the battery cell comprises two first walls arranged opposite to each other and two second walls arranged opposite to each other, and at least two electrode terminals are provided; and the at least two electrode terminals are provided on the same second wall; or each second wall is provided with at least one electrode terminal.

5. The battery according to claim 1 or 2, wherein an electrode terminal of the battery cell is provided on the first wall.

6. The battery according to claim 5, wherein there are a plurality of battery cells, which are arranged in a first direction, each battery cell is provided with a first surface arranged opposite to the first wall in the first direction, the first surface is provided with an avoidance groove, and the avoidance groove of one of two adjacent battery cells is configured to accommodate the electrode terminal of the other battery cell, the first direction being perpendicular to the first wall.

7. The battery according to claim 1 or 2, wherein the first wall is formed in a cylindrical shape.

8. The battery according to claim 7, wherein second walls are provided at two axial ends of the first wall, and at least one of the second walls is provided with an electrode terminal of the battery cell.

9. The battery according to claim 8, wherein one of the second walls is provided with an electrode terminal that is exposed, an electrode assembly of the battery cell comprises a positive electrode plate and a negative electrode plate, one of the positive electrode plate and the negative electrode plate is electrically connected to the electrode terminal, and the other of the positive electrode plate and the negative electrode plate is electrically connected to the first wall or the other second wall.

10. The battery according to claim 1 or 2, wherein the battery cell further comprises a third wall connected to the first wall and/or the second wall, and an electrode terminal of the battery cell is provided on the third wall.

11. The battery according to claim 10, wherein the battery cell comprises two third walls arranged opposite to each other, and at least two electrode terminals are provided; and
the at least two electrode terminals are provided on the same third wall; or each third wall is provided with at least one electrode terminal.

12. The battery according to claim 10 or 11, wherein an area of the third wall is less than or equal to that of the first wall, and/or the area of the third wall is less than or equal to that of the second wall.

13. The battery according to claim 1, wherein at least one battery cell is a pouch battery cell.

14. The battery according to any one of claims 1 to 13, wherein the battery cell further comprises a pressure relief mechanism, and the pressure relief mechanism and the electrode terminal of the battery cell are arranged on the same wall of the battery cell.

15. The battery according to any one of claims 1 to 13, wherein the battery cell further comprises a pressure relief mechanism, and the pressure relief mechanism and the electrode terminal of the battery cell are arranged on respective ones of two walls of the battery cell.

16. The battery according to any one of claims 1 to 15, wherein the thermally conductive member is bonded to the first wall via a first adhesive layer.

17. The battery according to claim 16, wherein a bottom of the thermally conductive member is bonded to a bottom wall of the accommodating cavity via a second adhesive layer; and/or
the fixing member comprises a third adhesive layer, and the second wall of the battery cell is bonded to the box via the third adhesive layer.

18. The battery according to claim 17, wherein thickness of the first adhesive layer is less than or equal to that of the second adhesive layer; and/or
the thickness of the first adhesive layer is less than or equal to that of the third adhesive layer.

19. The battery according to claim 17 or 18, wherein thermal conductivity of the first adhesive layer is greater than or equal to that of the second adhesive layer; and/or
the thermal conductivity of the first adhesive layer is greater than or equal to that of the third adhesive layer.

20. The battery according to any one of claims 17 to 19, wherein a ratio of the thickness of the first adhesive layer to the thermal conductivity of the first adhesive layer is defined as a first ratio, a ratio of the thickness of the second adhesive layer to the thermal conductivity of the second adhesive layer is defined as a second ratio, and a ratio of the thickness of the third adhesive layer to the thermal conductivity of the third adhesive layer is defined as a third ratio;

wherein the first ratio is less than or equal to the second ratio; and/or
the first ratio is less than or equal to the third ratio.

21. The battery according to any one of claims 1 to 20, wherein the thermally conductive member comprises a metallic material and/or a non-metallic material.

22. The battery according to claim 21, wherein the thermally conductive member comprises a metal plate, and an insulating layer arranged on a surface of the metal plate; or
the thermally conductive member is a plate of non-metallic material.

23. The battery according to any one of claims 1 to 22, wherein there are a plurality of battery cells, which are arranged in a second direction; and
the thermally conductive member comprises a partition plate extending in the second direction and connected to the first wall of each of the plurality of battery cells, the second direction being parallel to the first wall.

24. The battery according to claim 23, wherein the thermally conductive member further comprises an insulating layer configured to insulate and isolate the first wall of the battery cell from the partition plate.

25. The battery according to claim 24, wherein thermal conductivity of the insulating layer is greater than or equal to 0.1 W/(m · K).

26. The battery according to any one of claims 23 to 25, wherein a dimension T1 of the partition plate in a first direction is less than 0.5 mm, the first direction being perpendicular to the first wall.

27. The battery according to any one of claims 23 to 25, wherein a dimension T1 of the partition plate in a first direction is greater than 5 mm, the first direction being perpendicular to the first wall.

28. The battery according to claim 23, wherein a surface of the thermally conductive member that is connected to the first wall is an insulating surface; and
wherein a dimension of the thermally conductive member in a first direction is 0.1-100 mm, the first direction being perpendicular to the first wall.

29. The battery according to any one of claims 23 to 28, wherein in a third direction, a dimension H1 of the partition plate and a dimension H2 of the first wall satisfy: $0.1 \leq H1/H2 \leq 2$, the third direction being perpendicular to the second direction and parallel to the first wall.

30. The battery according to any one of claims 23 to 29, wherein the partition plate is internally provided with a hollow cavity.

31. The battery according to claim 30, wherein the hollow cavity is configured to accommodate a heat exchange medium to adjust the temperature of the battery cell.

32. The battery according to claim 30 or 31, wherein in a first direction, a dimension of the hollow cavity is W, and a capacity Q of the battery cell and the dimension W of the hollow cavity satisfy: $1.0\ Ah/mm \leq Q/W \leq 400\ Ah/mm$, the first direction being perpendicular to the first wall.

33. The battery according to claim 31 or 32, wherein the partition plate further comprises a pair of thermally conductive plates arranged opposite to each other in a first direction, and the hollow cavity is provided between the pair of thermally conductive plates, the first direction being perpendicular to the first wall.

34. The battery according to claim 33, wherein the partition plate further comprises a reinforcing rib arranged between the pair of thermally conductive plates.

35. The battery according to claim 34, wherein the reinforcing rib is connected to at least one of the pair of thermally conductive plates.

36. The battery according to claim 35, wherein the reinforcing rib comprises a first reinforcing rib, two ends of the first reinforcing rib are respectively connected to the pair of thermally conductive plates, and the first reinforcing rib is arranged to be inclined relative to the first direction.

37. The battery according to claim 36, wherein an included angle between the first reinforcing rib and the first direction ranges from 30° to 60°.

38. The battery according to claim 36 or 37, wherein the reinforcing rib further comprises a second reinforcing rib, one end of the second reinforcing rib is connected to one of the pair of thermally conductive plates, and the other end of the second reinforcing rib is arranged spaced apart from the other of the pair of thermally conductive plates.

39. The battery according to claim 38, wherein the second reinforcing rib extends in the first direction and protrudes from one of the pair of thermally conductive plates.

40. The battery according to claim 38 or 39, wherein the first reinforcing rib is arranged spaced apart from the second reinforcing rib.

41. The battery according to any one of claims 33 to 40, wherein in the first direction, thickness D of the thermally conductive plate and the dimension W of the hollow cavity satisfy: $0.01 \leq D/W \leq 25$.

42. The battery according to any one of claims 31 to 41, wherein the partition plate is provided with a medium inlet and a medium outlet, the hollow cavity is in communication with the medium inlet and the medium outlet, and the partition plate is internally provided with a chamber disconnected from both the medium inlet and the medium outlet.

43. The battery according to any one of claims 31 to 42, wherein a partition member is provided in the hollow cavity, and is configured to divide the hollow cavity into at least two flow channels.

44. The battery according to claim 43, wherein the thermally conductive member comprises a first thermally conductive plate, a second thermally conductive plate and the partition member which are arranged in a stacked manner, the partition member is arranged between the first thermally conductive plate and the second thermally conductive plate, the first thermally conductive plate and the partition member jointly define a first flow channel, and the second thermally conductive plate and the partition member jointly define a second flow channel.

45. The battery of any one of claims 1 to 44, wherein at least a part of the thermally conductive member is configured to be deformable when compressed.

46. The battery according to claim 45, wherein the thermally conductive member comprises:

a heat exchange layer and a compressible layer arranged in a stacked manner; and
an elastic modulus of the compressible layer is less than an elastic modulus of the heat exchange layer.

47. The battery according to claim 46, wherein the compressible layer comprises a compressible cavity filled with a phase change material or an elastic material.

48. The battery according to claim 45, wherein the thermally conductive member comprises a shell and a supporting component, the supporting component is accommodated in the shell and configured to define a hollow cavity and a deformable cavity spaced apart from each other in the shell, the hollow cavity is configured for the flow of a heat exchange medium, and the deformable cavity is configured to be deformable when the shell is compressed.

49. The battery according to claim 46, wherein the thermally conductive member comprises a shell and an isolation assembly, the isolation assembly is accommodated in the shell and connected to the shell so as to form a hollow cavity between the shell and the isolation assembly, the hollow cavity is configured for the flow of a heat exchange medium, and the isolation assembly is configured to be deformable when the shell is compressed.

50. The battery according to any one of claims 1 to 44, wherein the thermally conductive member is provided with an avoidance structure configured to provide a space for expansion of the battery cell.

51. The battery according to claim 50, wherein a plurality of battery cells are provided, and at least a part of the avoidance structure is located between two adjacent battery cells and is configured to provide a space for expansion of at least one of the battery cells.

52. The battery according to claim 50 or 51, wherein in a first direction, the thermally conductive member comprises a first thermally conductive plate and a second thermally conductive plate arranged opposite to each other, a hollow cavity is provided between the first thermally conductive plate and the second thermally conductive plate and is configured to accommodate a heat exchange medium, and at least one of the first thermally conductive plate and the second thermally conductive plate is recessed toward the other in the first direction to form the avoidance structure, the first direction being perpendicular to the first wall.

53. The battery according to any one of claims 1 to 52, wherein two or more battery groups are provided in the box, and are arranged in a first direction, each of the battery groups comprises two or more battery cells arranged in a second direction, the second direction is perpendicular to the first direction, and the first direction is perpendicular to the first wall.

54. The battery according to claim 53, wherein the thermally conductive member is sandwiched between two adjacent battery groups.

55. The battery according to claim 54, further comprising a connecting pipe group, wherein a hollow cavity for accommodating a heat exchange medium is provided in the thermally conductive member, and the connecting pipe group is configured to communicate the hollow cavities of two or more thermally conductive members with each other.

56. The battery according to claim 55, wherein the connecting pipe group comprises a communication channel, an inlet pipe and an outlet pipe, the hollow cavities of two adjacent thermally conductive members in the first direction are in communication with each other through the communication channel, and the inlet pipe and the outlet pipe are in communication with the hollow cavity of the same thermally conductive member.

57. The battery according to any one of claims 1 to 56, wherein the box comprises a main body and a bottom cover arranged at a bottom of the main body, and the bottom cover and the main body are connected to each other in a sealing manner and together form the closed accommodating cavity.

58. The battery according to claim 57, wherein the bottom cover is detachably connected to the bottom of the main body.

59. The battery according to claim 57 or 58, wherein the bottom cover has a feature surface facing the accommodating cavity, the feature surface being configured as a plane.

60. The battery according to any one of claims 1 to 59, wherein the fixing member comprises a carrying member, the carrying member is arranged on a top of the box, and the battery cell is arranged on a surface of the carrying member.

61. The battery according to claim 60, wherein the minimum thickness H of the carrying member and the weight M1 of the battery satisfy: 0.0002 mm/kg < H/M1 ≤ 0.2 mm/kg.

62. The battery according to claim 60 or 61, wherein the carrying member is configured to define the accommodating cavity, and the battery cell is suspended from the carrying member.

63. The battery according to claim 62, wherein the battery cell is bonded to the carrying member.

64. The battery according to any one of claims 60 to 63, wherein there are a plurality of battery cells, which are arranged in a second direction, the second direction being perpendicular to a vertical direction; and
the carrying member is connected to top walls of the plurality of battery cells, the battery cells are located below the carrying member, and the relationship between a dimension N of the carrying member in the vertical direction and the weight M2 of the battery cell satisfies: 0.04 mm/kg ≤ N/M2 ≤ 100 mm/kg.

65. The battery according to claim 64, wherein the carrying member is internally provided with a hollow cavity.

66. The battery according to claim 65, wherein the hollow cavity is configured to accommodate a heat exchange medium to adjust the temperature of the battery cell.

67. The battery according to any one of claims 60 to 66, wherein in a vertical direction, a surface of the carrying member away from the battery cell is provided with a reinforcing rib.

68. The battery according to any one of claims 60 to 66, wherein the carrying member has a carrying surface facing the accommodating cavity, the carrying surface being configured as a plane.

69. The battery according to claim 68, wherein the carrying member has a carrying portion and a connecting portion, the connecting portion encloses and is connected to an edge of the carrying portion, the carrying portion is configured to define the accommodating cavity, and the connecting portion is connected to a part of the box other than the carrying member;
wherein an inner surface of the carrying portion facing the accommodating cavity is configured to form the carrying surface.

70. The battery according to claim 69, wherein the carrying portion protrudes relative to the connecting portion in a direction facing away from the accommodating cavity.

71. The battery according to any one of claims 60 to 70, wherein the box comprises a bottom cover and a frame, the frame encloses an enclosed space configured to be open at two ends in the vertical direction, the bottom cover and the carrying member cover respective ones of the two ends of the enclosed space that are opposite to each other in the vertical direction, and the bottom cover, the frame and the carrying member together enclose the accommodating cavity.

72. The battery according to any one of claims 1 to 71, wherein the battery cell is placed upside down in the box with an end cover facing a bottom wall of the accommodating cavity, and the end cover is provided with a pressure relief mechanism and the electrode terminal, and the pressure relief mechanism and the electrode terminal are both arranged to face the bottom wall.

73. The battery according to any one of claims 1 to 72, further comprising a connecting plate and a connector, wherein the connecting plate is arranged to protrude in a horizontal direction on one side of the box, the connecting plate and a bottom wall of the accommodating cavity form an accommodating portion in the vertical direction, the connector is arranged in the accommodating portion and is connected to the connecting plate, and the connector is electrically connected to the battery cell.

74. The battery according to any one of claims 1 to 73, wherein the fixing member comprises a protective assembly arranged between the battery cell and a bottom wall of the accommodating cavity to support and carry the battery cell.

75. The battery according to claim 74, further comprising a bus component configured to be electrically connected to the electrode terminals of at least two battery cells, wherein the protective assembly is arranged between the bottom wall and the bus component, and the protective assembly is configured to insulate the battery cells from the bottom wall.

76. The battery according to claim 74 or 75, wherein the protective assembly comprises a protective strip abutting against the battery cells.

77. The battery according to claim 76, wherein the protective strip is fixedly connected to the battery cells and/or the box.

78. The battery according to claim 77, wherein the protective strip is bonded to the battery cells and/or the box.

79. The battery according to any one of claims 76 to 78, wherein a plurality of protective strips are provided, which are arranged spaced apart from each other in a second direction and extend in a first direction, and the first direction, the second direction and the vertical direction are perpendicular to one another.

80. The battery according to any one of claims 76 to 79, wherein the protective assembly further comprises a main plate, the protective strip is connected to the main plate, and the main plate is located between the protective strip and the bottom wall.

81. The battery according to claim 80, wherein the main plate abuts the bottom wall.

82. The battery according to claim 81, wherein the main plate is fixedly connected to the bottom wall.

83. The battery according to any one of claims 80 to 82, wherein the main plate is integrally formed with or detachably connected to the protective strip.

84. The battery according to any one of claims 76 to 83, wherein an end cover of the battery cell comprises a functional region and shoulders, the functional region is provided with the electrode terminal, the shoulders are located on two sides of the functional region in a second direction, and the battery cell abuts against the protective strip by means of the shoulders, the second direction being perpendicular to a vertical direction.

85. The battery according to any one of claims 76 to 84, wherein in a vertical direction, thickness of the protective strip is greater than an extension height of a part of the electrode terminal that is exposed to the battery cell.

**86.** The battery according to any one of claims 76 to 85, wherein the protective strip abuts against the electrode terminal, or the protective strip is arranged spaced apart from the electrode terminal.

**87.** The battery according to any one of claims 79 to 86, wherein an orthographic projection of the electrode terminal on the bottom wall is located between orthographic projections of adjacent protective strips on the bottom wall.

**88.** The battery according to any one of claims 79 to 87, wherein the electrode terminals of two adjacent battery cells are electrically connected to each other via a bus component, and an extension length of one of two adjacent protective strips is less than that of the other in the first direction, to form an avoidance notch, the avoidance notch being configured to avoid the bus component.

**89.** The battery according to any one of claims 79 to 88, wherein the battery cell further comprises a pressure relief mechanism arranged on the same side as the electrode terminal, and an orthographic projection of the pressure relief mechanism on the bottom wall is located between orthographic projections of adjacent protective strips on the bottom wall.

**90.** The battery according to any one of claims 72 to 89, wherein there is a first distance H3 between the end cover of the battery cell and the bottom wall in a vertical direction, and the first distance H3 satisfies 2 mm < H3 < 30 mm.

**91.** The battery according to claim 90, wherein a ratio H3/M2 of the first distance H3 to the weight M2 of a single battery cell satisfies 0.2 mm/Kg < H3/M2 < 50 mm/Kg.

**92.** The battery according to any one of claims 1 to 91, wherein the battery cell further comprises a battery casing in which an electrode assembly is provided, the battery casing is provided with a pressure relief mechanism, and the pressure relief mechanism is integrally formed with the battery casing.

**93.** The battery according to claim 92, wherein the battery casing comprises an integrally formed non-weak region and weak region, the battery casing is provided with a grooved portion, the non-weak region is formed around the grooved portion, the weak region is formed at the bottom of the grooved portion, the weak region is configured to be damaged when an internal pressure of the battery cell is released, and the pressure relief mechanism comprises the weak region.

**94.** The battery according to claim 93, wherein an average grain size of the weak region is defined as $S_1$ and an average grain size of the non-weak region is defined as $S_2$, satisfying: $0.05 \leq S_1/S_2 \leq 0.9$.

**95.** The battery according to claim 94, wherein the minimum thickness of the weak region is defined as $A_1$ and satisfies: $1 \leq A_1/S_1 \leq 100$.

**96.** The battery according to any one of claims 93 to 95, wherein the minimum thickness of the weak region is defined as $A_1$ and hardness of the weak region is defined as Bi, satisfying: $5 \text{ HBW/mm} \leq Bi/Ai \leq 10000 \text{ HBW/mm}$.

**97.** The battery according to any one of claims 93 to 96, wherein the hardness of the weak region is defined as Bi and the hardness of the non-weak region is defined as $B_2$, satisfying: $1 < B_1/B_2 \leq 5$.

**98.** The battery according to either of claims 96 or 97, wherein the minimum thickness of the weak region is defined as $A_1$ and the minimum thickness of the non-weak region is defined as $A_2$, satisfying: $0.05 \leq A_1/A_2 \leq 0.95$.

**99.** The battery according to any one of claims 1 to 98, wherein the battery cell comprises an electrode assembly comprising a positive electrode plate and a negative electrode plate, the positive electrode plate and/or the negative electrode plate comprises a current collector and an active material layer, and the current collector comprises a supporting layer and a conductive layer, the supporting layer is configured to carry the conductive layer, and the conductive layer is configured to carry the active material layer.

**100.** The battery according to claim 99, wherein the conductive layer is arranged on at least one side of the supporting layer in a thickness direction of the supporting layer.

**101.** The battery according to claim 99 or 100, wherein a room temperature film resistance Rs of the conductive layer satisfies: $0.016 \ \Omega/\square \leq Rs \leq 420 \ \Omega/\square$.

102. The battery according to any one of claims 99 to 101, wherein the conductive layer is made of at least one material selected from aluminum, copper, titanium, silver, a nickel-copper alloy, and an aluminum-zirconium alloy.

103. The battery according to any one of claims 99 to 103, wherein a material of the supporting layer comprises one or more of a polymer material and a polymer-based composite material.

104. The battery according to any one of claims 99 to 103, wherein thickness d1 of the supporting layer and light transmittance k of the supporting layer satisfy:

when 12 $\mu$m $\leq$ d1 < 30 $\mu$m, 30% $\leq$ k $\leq$ 80%; or,
when 8 $\mu$m $\leq$ d1 < 12 $\mu$m, 40% $\leq$ k $\leq$ 90%; or,
when 1 $\mu$m $\leq$ d1 < 8 $\mu$m, 50% $\leq$ k $\leq$ 98%.

105. The battery according to any one of claims 1 to 104, wherein the battery cell comprises an electrode assembly comprising a positive electrode plate, the positive electrode plate comprises a positive electrode current collector and a positive electrode active material layer coated on a surface of the positive electrode current collector, the positive electrode active material layer comprises a positive electrode active material, and the positive electrode active material has an inner core and a shell coating the inner core, wherein the inner core comprises at least one of a ternary material, dLi$_2$MnO$_3$·(1-d)LiMO$_2$ and LiMPO$_4$, where 0 < d < 1, and the M comprises one or more selected from Fe, Ni, Co, and Mn; and
the shell contains a crystalline inorganic substance, the full width at half maximum of a main peak measured by X-ray diffraction of the crystalline inorganic substance is 0-3°, and the crystalline inorganic substance comprises one or more selected from a metal oxide and an inorganic salt.

106. The battery according to claim 105, wherein the shell comprises at least one of the metal oxide and the inorganic salt, and carbon.

107. The battery according to any one of claims 1 to 106, wherein the battery cell comprises an electrode assembly comprising a positive electrode plate, the positive electrode plate comprises a positive electrode current collector and a positive electrode active material layer coated on a surface of the positive electrode current collector, the positive electrode active material layer comprises a positive electrode active material, and the positive electrode active material has LiMPO$_4$, where the M comprises Mn, and a non-Mn element, and the non-Mn element satisfies at least one of the following conditions:

an ionic radius of the non-Mn element is defined as a, an ionic radius of the manganese element is defined as b, and |a-b|/b is not greater than 10%;
a valence change voltage of the non-Mn element is defined as U, where 2 V < U < 5.5 V;
the chemical activity of a chemical bond formed by the non-Mn element and O is not less than the chemical activity of a P-O bond; and
the highest valence of the non-Mn element is not greater than 6.

108. The battery according to claim 107, wherein the non-Mn element comprises one or both of a first doping element and a second doping element, the first doping element is doped at manganese site, and the second doping element is doped at a phosphorus site.

109. The battery according to claim 108, wherein the first doping element satisfies at least one of the following conditions:

an ionic radius of the first doping element is defined as a, an ionic radius of the manganese element is defined as b, and |a-b|/b is not greater than 10%; and
a valence change voltage of the first doping element is defined as U, where 2 V < U < 5.5 V.

110. The battery according to claim 109, wherein the second doping element satisfies at least one of the following conditions:

the chemical activity of a chemical bond formed by the second doping element and O is not less than the chemical activity of a P-O bond; and
the highest valence of the second doping element is not greater than 6.

111. The battery according to any one of claims 107 to 110, wherein the positive electrode active material further has a coating layer.

112. The battery according to claim 111, wherein the coating layer comprises carbon.

113. The battery according to claim 112, wherein the carbon in the coating layer is a mixture of SP2-form carbon and SP3-form carbon.

114. The battery according to claim 113, wherein a molar ratio of the SP2-form carbon to the SP3-form carbon is any value within a range of 0.1-10.

115. An electrical apparatus, comprising the battery according to any one of claims 1 to 114, the battery being configured to supply electric energy.

1000

FIG. 1

100

FIG. 2

100

102

10

101

20 20

3a

10a

FIG. 3

20

214

214b

214a

212

21

213

23

23

221a

222a

22

211

z
x
y o

FIG. 4

FIG. 5

FIG. 6

FIG. 7

FIG. 8

FIG. 9

FIG. 10

3a

32

31

32

FIG. 11

3a

20

30a

FIG. 12

FIG. 13

FIG. 14

FIG. 15

FIG. 16

FIG. 17

100

33

33

20

20

z

y

x

FIG. 18

20

103

104

20

z

x

y

FIG. 19

100

332(341)

343

3b

3b

20

20

331(32)

332(342)

344

x

y    z

FIG. 20

3b

332(341)

343

331

3332(342)

344

x

y    z

FIG. 21

B

A

C

x

y

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

G

30a

334

3332

3331

20(201)

z
o → x

FIG. 38

FIG. 39

FIG. 40

FIG. 41

FIG. 42

FIG. 43

FIG. 44

B-B

FIG. 45

FIG. 46

3a

FIG. 47

FIG. 48

FIG. 49

<u>331</u>

30a(30c)　30b

z

30a(30c)　30b

y

FIG. 50

<u>331</u>

30a(30c)　30b

318　3151

318

z

318

318　3151

318　318

30b　30a(30c)　315

y

FIG. 51

FIG. 52

FIG. 53

100

3a

3331 335 3332

20(21)

20(22)

34 35

Z

X

FIG. 54

335

3352 3351 3351 3351

3355 3353 3355

X

Z

FIG. 55

3a

3331 34 3352 3355 34 3355 34 3355

3351 35 3353 3351 35 3351
3332

X

Z

FIG. 56

335

FIG. 57

3a

FIG. 58

335

FIG. 59

3a

FIG. 60

100

FIG. 61

3a

FIG. 62

3a

FIG. 63

<u>100</u>

FIG. 64

<u>3a</u>

FIG. 65

<u>3a</u>

FIG. 66

<u>3a</u>

FIG. 67

3a

FIG. 68

3a

FIG. 69

3a

FIG. 70

FIG. 71

FIG. 72

FIG. 73

FIG. 74

440

401

450

441

FIG. 75

520

501

521

530

522

FIG. 76

520

530

501

521

FIG. 77

FIG. 78

FIG. 79

FIG. 80

FIG. 81

FIG. 82

3a

FIG. 83

FIG. 84

FIG. 85

FIG. 86

FIG. 87

FIG. 88

FIG. 89

FIG. 90

FIG. 91

FIG. 92

FIG. 93

FIG. 94

FIG. 95

FIG. 96

FIG. 97

FIG. 98

FIG. 99

FIG. 100

FIG. 101

3a

336  337

20

20

3011
3013  301
3012

30a(30c)

z
x

FIG. 102

3a

3412

C

3422

z

30a(30c)  301

C

y

FIG. 103

3a

3361    3371
336 {            } 337
3362    3372

3011a    3012a

3013

3422    3422

3011    3012

Z

X

3363    3373

30a(30c)

FIG. 104

3a

336
3361    3362    3011    3011a

X

Z

3363    336    3013

FIG. 105

FIG. 106

FIG. 107

FIG. 108

FIG. 109

<u>20</u>

202

201a
201b } 201
201a

z
y   x

FIG. 110

<u>100</u>

20

3a

10

FIG. 111

FIG. 112

FIG. 113

FIG. 114

FIG. 115

FIG. 116

FIG. 117

FIG. 118

FIG. 119

FIG. 120

FIG. 121

FIG. 122

FIG. 123

FIG. 124

FIG. 125

FIG. 126

FIG. 127

FIG. 128

FIG. 129

FIG. 130

FIG. 131

FIG. 132

FIG. 133

FIG. 134

FIG. 135

11a

H

Z

o

y x

FIG. 136

11a

11t

11s

Z

o

y x

FIG. 137

11a

506

504

505

z

o

y x

FIG. 138

11a

504

N3

503

N

505

z

o

y x

FIG. 139

FIG. 140

FIG. 141

FIG. 142

FIG. 143

FIG. 144

FIG. 145

FIG. 146

FIG. 147

FIG. 148

100

FIG. 149

B

FIG. 150

Z

X/Y

A

100

A3

A1

A2

FIG. 151

11a

y

z

m1

214

m2

(a)

m1

11a

y

z

214

214

(b)

FIG. 152

FIG. 153

FIG. 154

C-C

FIG. 155

FIG. 156

FIG. 157

FIG. 158

FIG. 159

FIG. 160

FIG. 161

FIG. 162

5

511    51

532    56    534

FIG. 163

G-G

534    532    54    B

51    57    52    56    55

FIG. 164

5

511    5321    56    532    51

5323    5322    534

FIG. 165

K-K

534

532    53
532

51    57    52    54    55

FIG. 166

FIG. 167

M-M

FIG. 168

FIG. 169

N-N

FIG. 170

FIG. 171

FIG. 172

FIG. 173

FIG. 174

FIG. 175

FIG. 176

FIG. 177

FIG. 178

FIG. 179

FIG. 180

FIG. 181

FIG. 182

FIG. 183

FIG. 184

FIG. 185

FIG. 186

FIG. 187

FIG. 188

FIG. 189

FIG. 190

FIG. 191

201

202

22A
(20B)

FIG. 192

201

202

22A
(20B)

FIG. 193

101

11B

102

FIG. 194

101

11B

102

FIG. 195

201

21B

202

FIG. 196

201

21B

202

FIG. 197

FIG. 198

FIG. 199

FIG. 200

FIG. 201

FIG. 202

FIG. 203

FIG. 204

FIG. 205

FIG. 206

## INTERNATIONAL SEARCH REPORT

| International application No. |
|---|
| **PCT/CN2023/070125** |

**A. CLASSIFICATION OF SUBJECT MATTER**

H01M10/6557(2014.01)i;H01M10/6555(2014.01)n

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 温度, 控制, 冷, 热, 固定, 胶, 承载, 弹性, 变形, 包覆, 壳, battery, temperature, control, cold, heat, fix+, glue, load+, elasticity, deformat+, coat+, shell

**C. DOCUMENTS CONSIDERED TO BE RELEVANT**

| Category* | Citation of document, with indication, where appropriate, of the relevant passages | Relevant to claim No. |
|---|---|---|
| X | CN 111009629 A (BYD CO., LTD.) 14 April 2020 (2020-04-14) description, paragraphs 53-157, and figures 1-15 | 1-22, 53-59, 115 |
| Y | CN 111009629 A (BYD CO., LTD.) 14 April 2020 (2020-04-14) description, paragraphs 53-157, and figures 1-15 | 23-52, 60-114 |
| Y | CN 112103420 A (NINGDE CONTEMPORARY AMPEREX TECHNOLOGY CO., LTD.) 18 December 2020 (2020-12-18) description, paragraphs 47-73, and figures 1-8 | 23-52 |
| Y | CN 114006124 A (BEIJING SHENGNENG ENERGY TECHNOLOGY CO., LTD.) 01 February 2022 (2022-02-01) description, paragraphs 33-44, and figures 1-3 | 60-98 |
| Y | CN 109873166 A (NINGDE CONTEMPORARY AMPEREX TECHNOLOGY CO., LTD.) 11 June 2019 (2019-06-11) description, paragraphs 53-170, and figures 1-20 | 99-104 |
| Y | CN 108390022 A (SOUND GROUP CO., LTD. et al.) 10 August 2018 (2018-08-10) description, paragraphs 21-41 | 105-114 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
|---|
| **PCT/CN2023/070125** |

**C.      DOCUMENTS CONSIDERED TO BE RELEVANT**

| Category* | Citation of document, with indication, where appropriate, of the relevant passages | Relevant to claim No. |
|---|---|---|
| Y | CN 105609892 A (LG CHEMICAL LTD.) 25 May 2016 (2016-05-25)<br>  description, paragraphs 40-168, and figures 1-5 | 1-115 |
| Y | CN 107757327 A (BENTELER AUTOMOBILTECHNIK GMBH) 06 March 2018 (2018-03-06)<br>  description, paragraph 18 | 1-115 |

Form PCT/ISA/210 (second sheet) (July 2022)

**INTERNATIONAL SEARCH REPORT**
Information on patent family members

International application No.

**PCT/CN2023/070125**

| Patent document cited in search report | | | Publication date (day/month/year) | Patent family member(s) | | | Publication date (day/month/year) |
|---|---|---|---|---|---|---|---|
| CN | 111009629 | A | 14 April 2020 | KR | 20220083762 | A | 20 June 2022 |
| | | | | EP | 4053980 | A1 | 07 September 2022 |
| | | | | US | 2022416343 | A1 | 29 December 2022 |
| | | | | WO | 2021098440 | A1 | 27 May 2021 |
| | | | | CN | 209896153 | U | 03 January 2020 |
| CN | 112103420 | A | 18 December 2020 | CN | 112103418 | A | 18 December 2020 |
| | | | | CN | 112103419 | A | 18 December 2020 |
| | | | | WO | 2020253684 | A1 | 24 December 2020 |
| | | | | EP | 3780147 | A4 | 13 October 2021 |
| | | | | EP | 3780147 | A1 | 17 February 2021 |
| | | | | KR | 20210139466 | A | 22 November 2021 |
| | | | | JP | 2022536884 | W | 22 August 2022 |
| CN | 114006124 | A | 01 February 2022 | CN | 217114681 | U | 02 August 2022 |
| CN | 109873166 | A | 11 June 2019 | EP | 3522274 | A1 | 07 August 2019 |
| | | | | EP | 3522274 | A4 | 27 May 2020 |
| | | | | WO | 2019109928 | A1 | 13 June 2019 |
| | | | | US | 2020295377 | A1 | 17 September 2020 |
| | | | | US | 11177479 | B2 | 16 November 2021 |
| | | | | JP | 2020503639 | A | 30 January 2020 |
| | | | | JP | 7169269 | B2 | 10 November 2022 |
| CN | 108390022 | A | 10 August 2018 | | None | | |
| CN | 105609892 | A | 25 May 2016 | WO | 2016080696 | A1 | 26 May 2016 |
| | | | | KR | 20160058684 | A | 25 May 2016 |
| | | | | CN | 205595422 | U | 21 September 2016 |
| | | | | US | 2017222283 | A1 | 03 August 2017 |
| | | | | EP | 3223357 | A1 | 27 September 2017 |
| | | | | EP | 3223357 | A4 | 08 November 2017 |
| | | | | JP | 2017534143 | W | 16 November 2017 |
| CN | 107757327 | A | 06 March 2018 | DE | 102016115647 | B3 | 14 December 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022077152 W
- CN 2022077153 W
- CN 2022077151 W
- CN 2022077147 W
- CN 2022077149 W
- CN 2022077150 W
- CN 2022098447 W
- CN 2022098727 W
- CN 2022099229 W
- CN 2022100488 W
- CN 2022100486 W
- CN 2022111347 W
- CN 2022099786 W
- CN 2022101392 W
- CN 2022101395 W
- CN 2022098355 W
- CN 2022077998 W
- CN 2022098380 W
- CN 2022098343 W
- CN 2022098348 W
- CN 2022098373 W
- CN 2022098370 W
- CN 2022077993 W
- CN 2022101440 W
- CN 2022101406 W
- CN 2022101414 W
- CN 2022101517 W
- CN 2022101393 W